(19)

Europäisches
Patentamt
European
Patent Office
Office européen
des brevets

(11) **EP 1 742 215 A1**

(12) **EUROPEAN PATENT APPLICATION**

(43) Date of publication:
**10.01.2007 Bulletin 2007/02**

(51) Int Cl.:
**G11B 20/18** (2006.01)   **G11B 27/32** (2006.01)
**G11B 27/10** (2006.01)

(21) Application number: **06115756.6**

(22) Date of filing: **20.06.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **05.07.2005 JP 2005196752**

(71) Applicant: **KABUSHIKI KAISHA TOSHIBA**
**Tokyo 105-8001 (JP)**

(72) Inventors:
• **Maruyama, Sumitaka**
  **Toshiba Corporation**
  **Minato-ku**
  **Tokyo 105-8001 (JP)**

• **Noda, Chosaku**
  **Toshiba Corporation**
  **Minato-ku**
  **Tokyo 105-8001 (JP)**
• **Ando, Hideo**
  **Toshiba Corporation**
  **Minato-ku**
  **Tokyo 105-8001 (JP)**
• **Ogawa, Akihito**
  **Toshiba Corporation**
  **Minato-ku**
  **Tokyo 105-8001 (JP)**

(74) Representative: **Henkel, Feiler & Hänzel**
  **Patentanwälte**
  **Maximiliansplatz 21**
  **80333 München (DE)**

(54) **Information storage medium, information recording method and apparatus, and information reproducing method and apparatus**

(57) The embodiment includes a data replacing area secured in preparation for a defect in a data area, a current DMA set (DM1&2, DM3&4) for recording defect management information of a replacement process using the data replacing area, a plurality of unused DMA set (DM1&2, DM3&4) areas for replacing a current DMA set, a current DMA manager (Man1, Man2) set area for the current DMA manager set which manages the replacement process using the plurality of unused DMA set, and a plurality of unused DMA manager set (Man1, Man2) areas for replacing the current DMA manager set area. In the unused DMA manager set, there are provided a manager data area describing FFh for showing it is unused, and an identifier area describing 0010h for showing an available manager set.

FIG. 179

EP 1 742 215 A1

**Description**

One embodiment of the invention relates to an information storage medium (or information storage medium), an information recording method and apparatus using the same, and an information reproducing method and apparatus, and provides an effective technique for defect management.

Such an information storage medium includes an optical disk known as DVD (digital versatile disk). The existing DVD standards include the read-only DVD-ROM standard, recordable DVD-R standard, (about 1000 times) rewritable DVD-RW standard, (more than 10000 times) rewritable DVD-RAM standard.

An ECC block in an existing DVD has a single product code structure (refer to patent document 1).

In recent years, various methods of achieving a higher recording density on such an optical disk have been proposed. Since an increase in the recording density increases the linear density, use of the ECC block structure in the existing DVD standards without any modification makes the burst length of an allowable error shorter than that in the existing DVD. This causes the problem of making optical disks less immune to dirt and flaws.

In the recordable DVD standards, intermediate data (recording management data) during the interruption of recording is recorded in the lead-in area. Each time recording interruption takes place, intermediate data must be additionally recorded. As the recording density is increased and the amount of recorded data becomes much larger, the number of interruptions of recording increases and therefore the amount of intermediate data also increases. Since the recording data and intermediate data are stored in separate special areas, taking into account the convenience of editing the recorded data, even if there is an available space in the data recording area, recording cannot be done, because an increase in the frequency of occurrences of recording interruption causes the recording place of intermediate data located medial to the lead-in area to get saturated and therefore the recording place of intermediate data disappears. As a result, the existing DVD standards limit the maximum number of interruptions of recording permitted to a single optical disk (information storage medium), which causes the problem of impairing the convenience of the user.

Furthermore, an information storage medium, such as an optical disk, includes a user area for storing user data and has a mechanism for compensating for defects occurred in the user area. Such a mechanism is called a replacing process. An area for managing information on the replacing process, or defect management data, is called DMA (Defect Management Area). Of the information recording mediums, DVD-RAMs enable more than a hundred thousand overwrites. Even when data is overwritten into the DMA of a medium which has very high resistance to such overwrites, the reliability of the DMA remains unchanged. For example, the technique for improving the reliability of the DMA by providing a plurality of DMAs on an optical disk has been known.

The references related to this type of optical disk include Jpn. Pat. No. 3071828, Jpn. Pat. No. 2621459, Jpn. Pat. Appln. KOKAI Publication No. 9-213011, and U.S. Pat. No. 6,496,455.

Since an ECC block in a conventional information storage medium has a single product code structure, making the recording density higher shortens the burst length of a permissible error, which causes the problem of making the storage medium less immune to dirt and flaws.

Furthermore, in a recordable information storage medium, the maximum number of interruptions of recording is limited, which causes the problem of decreasing the user's convenience.

Of the information recording mediums, the one whose allowable number of overwrites is relatively small (several tens to several thousands) has the problem of overwriting the DMA of the medium. That is, as a result of overwriting, the DMA of such a medium is liable to be damaged.

This problem still arises even when a plurality of DMAs are provided. Since the individual DMAs are overwritten simultaneously, when one DMA is damaged as a result of overwriting, the remaining DMAs are also damaged.

In the DMAs, the aforementioned defect management data has been stored. If the DMAs are damaged, the defect management data cannot be read from the DMAs. Consequently, the medium itself cannot be used. Therefore, an improvement in the resistance of the DMAs to overwriting is desired.

According to one embodiment of the invention, it is to provide a following medium.

A recording medium includes a data area for recording user data, a data replacing area secured in preparation for a defect occurring in the data area, a current defect management area (DMA) set for recording defect management information showing that a replacing process using the data replacing area has been performed as well as a plurality of unused DMA set area for replacing the current DMA set in preparation for an occurrence of a defect, a current DMA manager set area for recording a current DMA manager set showing that a replacing process using the plural unused DMA manager set area has been performed as well as a plurality of unused DMA manager set areas for replacing the current DMA manager set area in preparation for an occurrence of a defect, a manager data area describing first specific information (for example FFh) for showing it is unused, among said plurality of unused DMA manager sets, and an identifier area describing second specific information (for example, 0010h) for showing an available manager set, among the DMA manager sets.

According to the present embodiment, it is possible to manage defect information and defect management information in a stable and precise manner, and accordingly, it is possible to improve the product reliability in aspects

## EP 1 742 215 A1

of both the apparatus and the storage medium.

This summary of the invention does not necessarily describe all necessary features so that the invention may also be a sub-combination of these described features.

The invention can be more fully understood from the following detailed description when taken in conjunction with the accompanying drawings, in which:

FIG. 1 is an exemplary diagram of the configuration of an embodiment of an information recording and reproducing apparatus according to one embodiment of the invention;

FIG. 2 shows a detailed configuration of the peripheral part including the sync code position extracting section 145 of FIG. 1;

FIG. 3 shows a signal processing circuit using a slice level detecting method;

FIG. 4 shows a detailed configuration of the slicer 310 of FIG. 3;

FIG. 5 shows a signal processing circuit using a PRML detecting method;

FIG. 6 shows the configuration of the Viterbi decoder 156 of FIG. 1 or 5;

FIG. 7 shows state transition in PR (1, 2, 2, 2, 1) class;

FIG. 8 is a flowchart to help explain a method of creating a "next border marker NBM" in an overwriting process;

FIG. 9 shows the configuration and dimensions of an information storage medium in the embodiment;

FIG. 10 shows a method of setting physical sector numbers in a recordable information storage medium or a reproduce-only information storage medium with a one-layer structure;

FIG. 11 shows a method of setting physical sector numbers in a reproduce-only information storage medium with a two-layer structure;

FIGS. 12A and 12B show a method of setting physical sector numbers in a rewritable information storage medium;

FIG. 13 shows the values of general parameters in a reproduce-only information storage medium;

FIG. 14 shows the values of general parameters in a recordable information storage medium;

FIG. 15 shows the values of general parameters in a rewrite-only information storage medium;

FIG. 16 is a diagram showing a comparison of a detailed data structure in the system lead-in area SYLDI and the data lead-in area DTLDI between various information storage mediums;

FIGS. 17A and 17B show a data structure in the RMD duplication zone RDZ and the recording management zone RMZ in a recordable information storage medium;

FIGS. 18A and 18B are a diagram showing a comparison of a data structure in the data area DTA and the data lead-out area DTLDO between various information storage mediums;

FIG. 19 shows a waveform (write strategy) of recording pulses used to perform trial writing into a drive test zone;

FIG. 20 is a diagram illustrating the definition of a recording pulse shape;

FIGS. 21A and 21B are an exemplary diagram of the structure of the border area in the recordable information storage medium;

FIGS. 22A and 22B show a data structure in the control data zone CDZ and the R physical information zone RIZ;

FIGS. 23A and 23B show concretely the contents of information in the physical format information PFI and the R physical format information R_PFI;

FIG. 24 is a diagram showing a comparison between the contents of detailed information recorded in the location information on data area DTA;

FIG. 25 shows a detailed data structure of recording management data RMD;

FIG. 26 shows a detailed data structure of recording management data RMD;

FIG. 27 shows a detailed data structure of recording management data RMD;

FIG. 28 shows a detailed data structure of recording management data RMD;

FIG. 29 shows a detailed data structure of recording management data RMD;

FIG. 30 shows a detailed data structure of recording management data RMD;

FIG. 31 schematically shows the conversion procedure for configuring a physical sector structure;

FIG. 32 shows the structure of a data frame;

FIG. 33 shows initial values given to the shift register when a scrambled frame is created and a circuit configuration of the feedback shift register;

FIG. 34 is an exemplary diagram of an ECC block structure;

FIG. 35 is a diagram to help explain a frame arrangement after scrambling;

FIG. 36 is a diagram to help explain a PO interleaving method;

FIG. 37 is a diagram to help explain the structure of a physical sector;

FIG. 38 is a diagram to help explain the contents of a sync code pattern;

FIG. 39 shows the configuration of a modulation block;

FIG. 40 is a diagram to help explain a concatenation rule for code words;

FIG. 41 shows a concatenation of a code word and a sync code;

EP 1 742 215 A1

FIG. 42 is a diagram to help explain a separation rule for reproducing a code word;

FIG. 43 shows a conversion table in the modulation method;

FIG. 44 shows a conversion table in the modulation method;

FIG. 45 shows a conversion table in the modulation method;

FIG. 46 shows a conversion table in the modulation method;

FIG. 47 shows a conversion table in the modulation method;

FIG. 48 shows a conversion table in the modulation method;

FIG. 49 shows a demodulation table;

FIG. 50 shows a demodulation table;

FIG. 51 shows a demodulation table;

FIG. 52 shows a demodulation table;

FIG. 53 shows a demodulation table;

FIG. 54 shows a demodulation table;

FIG. 55 shows a demodulation table;

FIG. 56 shows a demodulation table;

FIG. 57 shows a demodulation table;

FIG. 58 shows a demodulation table;

FIG. 59 is a diagram to help explain a reference code pattern;

FIG. 60 is a diagram to help explain a data unit of recording data on an information storage medium;

FIG. 61 shows a comparison between the data recording formats of various information storage mediums;

FIG. 62 is a diagram to help explain a comparison between the data structure of each type of information storage mediums and that of a conventional equivalent;

FIG. 63 is a diagram to help explain a comparison between the data structure of each type of information storage mediums and that of a conventional equivalent;

FIG. 64 is a diagram to help explain 180˚ phase modulation and NRZ techniques in wobble modulation;

FIG. 65 is a diagram to help explain the relationship between a wobble shape and address bits in the address bit area;

FIG. 66 is a diagram illustrating a comparison between a wobble arrangement and recording locations in a recordable information storage medium and those in a rewritable information storage medium;

FIG. 67 is a diagram to help explain a comparison between a wobble arrangement and recording locations in a recordable information storage medium and those in a rewritable information storage medium;

FIG. 68 is a diagram to help explain an address definition method in each of a recordable information storage medium and a rewritable information storage medium;

FIG. 69 is a diagram to help explain the recording format of address information in wobble modulation on a rewritable information storage medium;

FIG. 70 shows the Gray code;

FIG. 71 shows an algorithm that realizes the Gray code conversion concretely;

FIG. 72 is a diagram to help explain an example of forming an indefinite bit area in a groove area;

FIG. 73 shows the locations of modulated areas on a recordable information storage medium;

FIG. 74 shows an arrangement in a wobble data unit related to a primary position and a secondary position in a modulated area;

FIG. 75 is a diagram to help explain a comparison between a wobble sync pattern and the positional relationship in a wobble data unit;

FIG. 76 shows a modulated area location in a physical segment on a recordable information storage medium;

FIG. 77 is a diagram illustrating a comparison between the data structure in wobble address information on a rewritable information storage medium and that on a recordable information storage medium;

FIG. 78 shows the relationship between a method of combining a wobble sync pattern and type identifying information on physical segments and a layout pattern of modulated areas;

FIG. 79 shows the layout of a recording cluster;

FIG. 80 shows a data recording method for rewritable data recorded on a rewritable information storage medium;

FIG. 81 is a diagram to help explain a data random shift of rewritable data recorded on a rewritable information storage medium;

FIG. 82 is a diagram to help explain a recording method for additional recording onto a recordable information storage medium;

FIG. 83 shows a reflectivity range of each of a High-to-Low (H→L) recording film and a Low-to-High (L→H) recording film;

FIG. 84 shows a detailed structure of an ECC block after PO interleaving of FIG. 36;

FIGS. 85A and 85B show a data structure of recording management data RMD;

FIGS. 86A and 86B show another embodiment different from FIGS. 21A are 21B related to the structure of the border area in a recordable information storage medium;

FIG. 87 is a diagram illustrating a comparison between the present embodiment and an existing DVD-R;

FIG. 88 is a diagram to help explain physical format information;

FIG. 89 is a diagram to help explain the basic concept of recording management data RMD;

FIG. 90 is a flowchart for the processing procedure immediately after an information storage medium is installed in an information reproducing apparatus or an information recording and reproducing apparatus;

FIG. 91 is a flowchart to help explain a method of recording additional information onto a recordable information storage medium in an information recording and reproducing apparatus;

FIG. 92 is a diagram to help explain the concept of a method of setting an extendable recording management zone RMZ;

FIG. 93 is a detailed diagram of FIG. 92;

FIG. 94 is a diagram to help explain a border zone;

FIG. 95 is a diagram to help explain the process of closing a second and later bordered areas in the information recording and reproducing apparatus;

FIG. 96 is a diagram to help explain a processing method when a finalizing process is carried out after the bordered area are closed temporarily in the information recording and reproducing apparatus;

FIG. 97 is a diagram to help explain the principle of an extended recording management zone EX.RMZ recorded in a border-in;

FIG. 98 is a diagram to help explain an R zone;

FIG. 99 is a diagram to help explain the concept of a method of recording additional information in a plurality of places simultaneously using R zones;

FIG. 100 shows the relationship between a method of setting R zones and recording management data RMD in the information recording and reproducing apparatus;

FIG. 101 shows a correlation between an R zone and recording management data RMD when the first bordered area is closed;

FIG. 102 is a diagram to help explain the procedure for a finalizing process in the information recording and reproducing apparatus;

FIG. 103 is a diagram to help explain the principle of setting an extended recording management zone EX.RMZ using R zones;

FIG. 104 shows the relationship between a new setting of an extended recording management zone using R zones and recording management data RMD;

FIG. 105 is a diagram to help explain the concept of a processing method when the present recording management zone RMZ has become full in the same bordered area;

FIG. 106 is a diagram to help explain the concept of the extension of a test zone;

FIG. 107 is a diagram to help explain the concept of the extension of a test zone;

FIG. 108 is a diagram to help explain a method of searching for the recording location of the latest recording management data RMD using RMD duplication zone RDZ in the information reproducing apparatus or the information recording and reproducing apparatus;

FIG. 109 shows a detailed configuration of the wobble signal detecting section 135 in the information recording and reproducing apparatus;

FIG. 110 is a signal waveform diagram to help explain the operation of the wobble signal detecting section 135 in the information recording and reproducing apparatus;

FIG. 111 is a signal waveform diagram to help explain the principle of the operation of the phase locked loop circuit 356;

FIG. 112 is a circuit diagram to help explain the principle of the operation a beat canceller included in the phase detector 358;

FIG. 113 shows recording condition parameters expressed as a function of mark length/preceding space length;

FIG. 114 is a diagram to help explain the reflectivity in an unrecorded position and that in a recorded position in each type of recording film;

FIG. 115 is a diagram illustrating a comparison of the reflectivity in each area between various recording films;

FIG. 116 shows the size of a border zone BRDZ;

FIG. 117 shows the size of a terminator;

FIG. 118 shows a data structure of data ID;

FIG. 119 is a diagram to help explain a method of setting various data lead-out areas after a finalizing process;

FIG. 120 is a diagram to help explain a method of setting various data lead-out areas after a finalizing process;

FIG. 121 is a diagram to help explain another embodiment of a data structure of recording management data RMD;

FIGS. 122A and 122B are a diagram to help explain another embodiment of a data structure of recording management data RMD;

FIGS. 123A and 123B show another data structure of RMD field 1;

FIG. 124 is a diagram to help explain another embodiment of a data structure of wobble address information in a recordable information storage medium;

FIG. 125 is a table listing points and effects related to the present embodiment;

FIGS. 126A and 126B are a table listing points and effects related to the present embodiment;

FIG. 127 is a table listing points and effects related to the present embodiment;

FIGS. 128A and 128B are a table listing points and effects related to the present embodiment;

FIGS. 129A and 129B are a table listing points and effects related to the present embodiment;

FIGS. 130A and 130B are a table listing points and effects related to the present embodiment;

FIGS. 131A and 131B are a table listing points and effects related to the present embodiment;

FIGS. 132A and 132B are a table listing points and effects related to the present embodiment;

FIGS. 133A and 133B are a table listing points and effects related to the present embodiment;

FIG. 134 is a table listing points and effects related to the present embodiment;

FIG. 135 is a table listing points and effects related to the present embodiment;

FIG. 136 is a diagram to help explain a group structure in a data area in a rewritable information storage medium according to the present embodiment;

FIG. 137 is an exemplary diagram following FIG. 136;

FIG. 138 is an exemplary diagram of another embodiment showing a modulated area layout concerning a primary position and a secondary position in a modulated area in a wobble data unit;

FIG. 139 is an exemplary diagram of another embodiment related to a recording method for additional recording on a recordable information storage medium;

FIG. 140 is an exemplary diagram of another embodiment related to the data structure of a control data zone;

FIGS. 141A and 141B are an exemplary diagram of another embodiment related to physical format information and R physical format information;

FIG. 142 schematically shows a data structure of an information storage medium (optical disk) according to an embodiment of the present invention;

FIG. 143 is a flowchart to help explain a replacing process;

FIG. 144 schematically shows a data structure of DMA provided in the information storage medium;

FIG. 145 shows an example of the contents written in the begin sector of a DDS/PDL block included in DMA;

FIG. 146 shows an example of the contents written in an SDL block included in DMA;

FIG. 147 shows an example of the data structure of one of a plurality of SDL entries included in SDL;

FIG. 148 is a state transition diagram to help explain a method of using DMA series;

FIG. 149 shows part 1 of the relationship between the states of the individual counters provided in DMAs and the transition of DMAs;

FIG. 150 shows part 2 of the relationship between the states of the individual counters provided in DMAs and the transition of DMAs;

FIG. 151 is a flowchart to help explain the procedure for searching for a DMA now in use;

FIG. 152 is a flowchart to help explain the process of registering and updating DMAs;

FIG. 153 is a state transition diagram to help explain a method of using a plurality of DMA series

FIG. 154 is a diagram to help explain an lead-in area and an lead-out area in which a plurality of DMA series are arranged;

FIG. 155 is a flowchart for the process of reproducing data from a medium in which a plurality of DMA series are arranged;

FIG. 156 schematically shows the configuration of an information recording and reproducing apparatus according to an embodiment of the present invention;

FIG. 157 is a pictorial diagram to help explain DMA management by a DMA manager;

FIG. 158 shows the arrangement of DMAs and manager storage areas on an information storage medium and the data structure of a manager storage area;

FIG. 159 shows the data structure of a DMA manager stored in a manager reserved area in the manager storage area;

FIG. 160 shows the arrangement of DMA reserved areas included in DMA1 to DMA4;

FIG. 161 shows the relationship between DMAs and ECC blocks;

FIG. 162 shows the arrangement of DMA managers and DMAs;

FIG. 163 shows the transition of DMAs;

FIG. 164 shows the transition of DMA managers;

FIG. 165 shows the conditions of DMAs;

FIG. 166 shows the conditions of DMA reserved areas;

FIG. 167 is a diagram to help explain an example of erroneous decision on a DMA reserved area in the abnormal state;

FIG. 168 shows the arrangement of DMAs and manager storage areas on the medium and the arrangement of DMA reserved areas included in the DMAs;

FIG. 169 shows a physical layout of manager storage areas and DMAs in the lead-in area and lead-out area;

FIG. 170 shows areas required to be rewritten as a result of a replacing process;

FIG. 171 shows the contents of PDL;

FIG. 172 shows the contents of SDL;

FIG. 173 is a flowchart to give an outline of the process of updating DMAs;

FIG. 174 is a flowchart to give an outline of the process of updating DMA managers;

FIG. 175 is a flowchart to give an outline of a reproducing process on the basis of DMAs;

FIG. 176 is a diagram to help explain a byte allocation configuration in DDS;

FIG. 177 is a diagram to help explain a format of a burst cutting area of an HD-DVD;

FIG. 178 is a diagram to help explain an entire image of a defect management zone;

FIG. 179 is a diagram to help explain a detailed arrangement of DMA managers especially in the data lead-in area;

FIG. 180 is a diagram to help explain a process example concerning the DMA manager set, an example of case 1 and an example of case 2 when a disc is initialized;

FIG. 181 is a diagram to help explain a process example concerning the DMA set when a disc is initialized;

FIG. 182A shows a position of a defect management zone in the data lead-out area, and FIG. 182B shows an example of a disc identification zone in the data lead-in area;

FIG. 183 is a flowchart showing an example of the process of search the current DMA manager set;

FIG. 184 is a flowchart showing an example of the process of searching the current DMA set;

FIG. 185 is a flowchart showing an example of procedures of updating the DMA manager set;

FIG. 186 shows the contents to be performed in a drive section including a control section, and is a flowchart showing an example of procedures of updating the current DMA set;

FIGS. 187A and 187B are flowcharts showing examples of the calculation of a first LSN to be used in a zone, and procedures of calculating the physical sector number of LSN = 0;

FIG. 188 is a diagram to help explain a part of a correlation between the binary number and the gray code;

FIG. 189 is a diagram to help explain changed bit positions of a land track and a groove track;

FIGS. 190A, 190B and 190C are diagrams to help explain how the groove width changes at a changed bit (indefinite bit) position to obtain a physical address on a disc; and

FIGS. 191A and 191B show an example of an embodiment concerning physical format information and an RW physical format.

Various embodiments according to the invention will be described hereinafter with reference to the accompanying drawings.

Now, embodiments of an information storage medium, an information recording and reproducing apparatus using the same, an information reproducing apparatus, an information recording method, and an information reproducing method according to the present invention will be explained in more details with reference to the accompanying drawings.

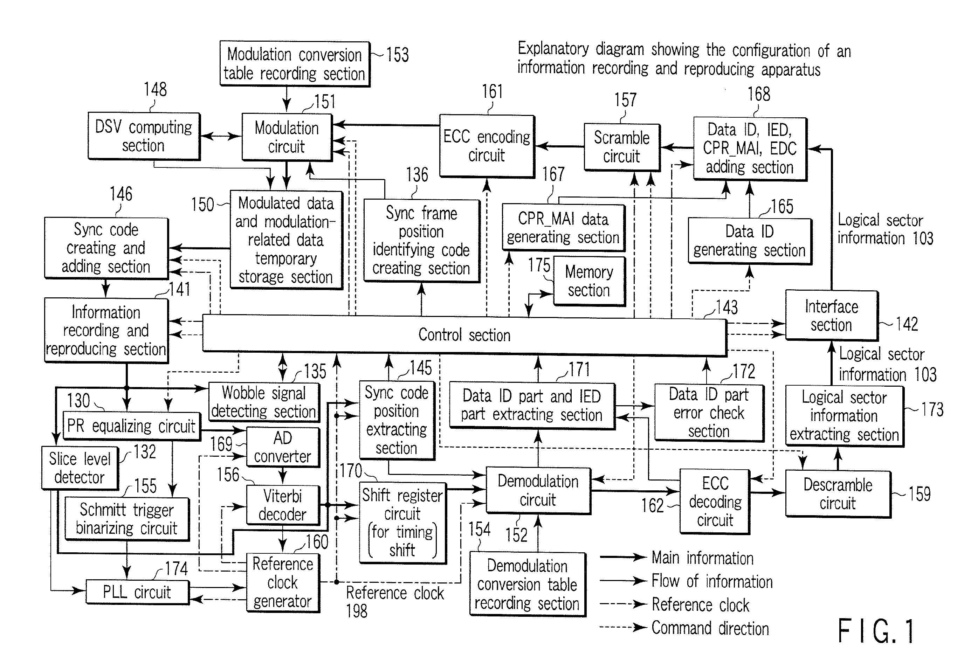

FIG. 1 is an exemplary diagram of the configuration of an embodiment of an information recording and reproducing apparatus. In FIG. 1, the portion above a control section 143 shows an information recording control system mainly to an information storage medium. The configuration of an embodiment of an information reproducing apparatus corresponds to the portion excluding the information recording control system in FIG. 1. In FIG. 1, bold solid line arrows show a flow of main information meaning reproducing signals or recording signals, thin solid line arrows show a flow of information, chain line arrows show standard clock lines, and thin broken line arrows mean command instruction directions.

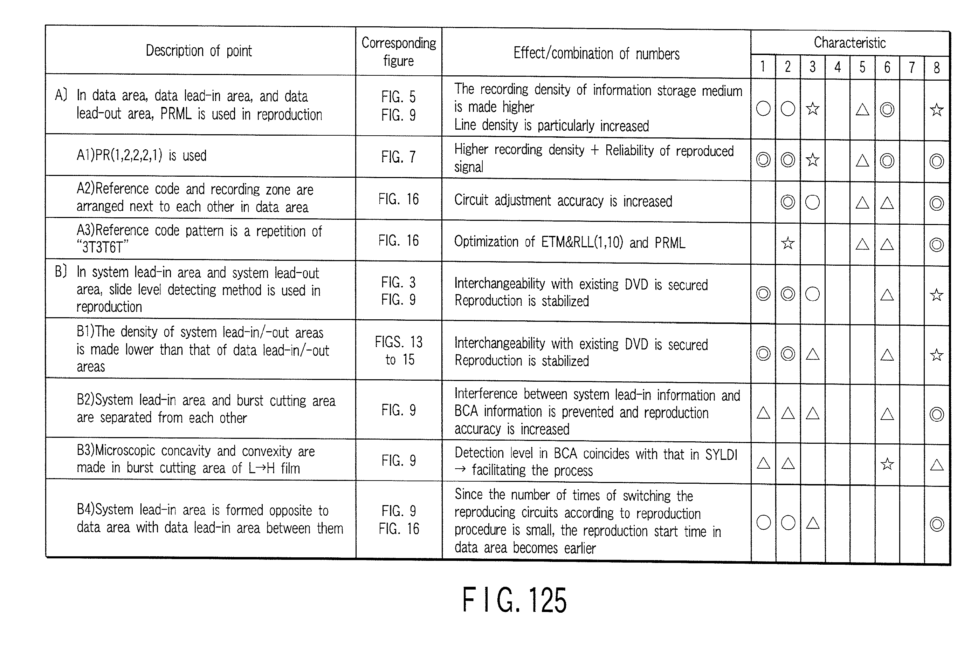

In FIG. 1, an optical head (not shown) is provided in an information recording and reproducing section 141. In the embodiment, information is reproduced using PRML (Partial Response Maximum Likelihood) techniques, thereby achieving a higher recording density of an information storage medium (point <A> in FIG. 125). Since the results of various experiments have shown that use of PR (1, 2, 2, 2, 1) as a PR class enables not only the linear density to be increased but also the reliability of the reproduced signal (e.g., the reliability of demodulation when a servo correction error, such as blurring or track shift, occurs) to be improved, PR (1, 2, 2, 2, 1) is used in the embodiment (point (A1) in FIG. 125). In the embodiment, the modulated channel bit train is recorded onto an information storage medium according to the (d, k; m, n) modulation rule (meaning RLL (d, k) in the m/n modulation in the above-described writing method). Specifically, ETM (Eight to Twelve Modulation) that converts 8-bit data into 12-channel bits (where m = 8 and n = 12) is used as a modulation method. As run length limited (RLL) restrictions placed on the length of consecutive "0s" in the modulated channel bit train, RLL (1, 10) conditions with the minimum value of the number of consecutive "0s" being d = 1 and the maximum value being k = 10 are applied. In the embodiment, the channel bit interval is shortened close to its limit, aiming at making the recording density of the information storage medium higher. As a result, for example, when the pattern "101010101010101010101010", the repetition of a pattern with d = 1, is recorded onto an information storage medium and the data is reproduced at the information recording and reproducing section 141, the amplitude of the reproduced raw signal is almost buried in noise, since the signal has got close to the cut-off frequency of the MTF characteristic of the reproducing optical system. Therefore, PRML (Partial Response Maximum Likelihood) techniques are used as a method of reproducing recording marks or pits whose density has been squeezed close to the limit (cut-off frequency) of the MTF characteristic.

Specifically, the signal reproduced at the information recording and reproducing section 141 is subjected to reproduced waveform correction at a PR equalizing circuit 130. With the timing of a reference clock 198 sent from a reference clock generator 160, an AD converter 169 samples the signal passed through the PR equalizing circuit 130 and converts the signal into digital amount. Then, the resulting signal is subjected to a Viterbi decoding process at a Viterbi decoder 156. The data after the Viterbi decoding process is treated as identical data with that binarized at a conventional slice level. When PRML techniques are used, a shift in the sampling timing at the AD converter 169 increases the error rate of data after Viterbi decoding. Thus, to increase the accuracy of sampling timing, the information reproducing apparatus or the information recording and reproducing apparatus particularly has a separate sampling timing extracting circuit (a combination of a Schmitt trigger binarizing circuit 155 and a PLL circuit 174).

The Schmitt trigger binarizing circuit 155 has a specific range of slice reference level for binarization (actually the voltage value in the forward direction of the diode). Only when the specific range is exceeded, the binarizing circuit 155 binarizes the signal. Therefore, for example, if the pattern "101010101010101010101010" has been input as described above, the signal amplitude is so small that binarization is not performed. If a rougher pattern, for example, "1001001001001001001001" has been input, since the amplitude of the reproduced raw signal becomes larger, the switching between the polarities of a binarized signal is performed with the "1" timing at the Schmitt trigger binarizing circuit 155. In the embodiment, NRZI (Non-Return to Zero Invert) techniques are used and the position of "1" in the pattern coincides with the recording mark or the edge part (boundary part) of the pit.

The PLL circuit 174 detects the difference in frequency and phase between the binarized signal output from the Schmitt trigger binarizing circuit 155 and the reference clock 198 signal sent from the reference clock generator 160 and changes the frequency and phase of the output clock of the PLL circuit 174. Using the output signal of the PLL circuit 174 and decoding characteristic information from the Viterbi decoder 156 (although not shown concretely, information on the convergence length (the distance to convergence) in the path metric memory in the Viterbi decoder 156), the reference clock generator 160 applies feedback to (the frequency and phase of) the reference clock 198 so that the error rate after Viterbi decoding may be decreased. The reference clock 198 generated at the reference clock generator 160 is used as reference timing in processing the reproduced signal.

A sync code position extracting section 145 detects the positions of sync codes mixed in the output data string of the Viterbi decoder 156 and extracts the starting position of the output data. With the starting position as a reference, a demodulation circuit 152 demodulates the data temporarily stored in a shift register circuit 170. In the embodiment, the original bit train is restored by referring to a conversion table recorded in a demodulation conversion table recording section 154 for every 12 channel bits. Thereafter, an ECC decoding circuit 162 carries out an error correction process. Then, a descramble circuit 159 performs descrambling. In a recording-type (rewritable or recordable) information storage medium of the embodiment, address information has been recorded by wobble modulation. A wobble signal detecting section 135 reproduces the address information (that is, determines the contents of the wobble signal) and supplies information necessary to access a desired location to the control section 143.

The information recording control system above the control section 143 will be explained. A data ID generating section 165 creates data ID information according to the recording location on the information storage medium. When a CPR_MAI data generating section 167 creates copy control information, a data ID, IED, CPR_MAI, EDC adding section 168 adds various pieces of information, including data ID, IED, CPR_MAI, and EDC to the information to be recorded. Thereafter, a descramble circuit 157 performs descrambling. Then, after an ECC encoding circuit 161 constructs an ECC block and a modulation circuit 151 converts the ECC block into a channel bit train, a sync code creating and adding section 146 adds a sync code to the bit train, and the information recording and reproducing section 141 records the data onto the information storage medium. In modulation, a DSV (Digital Sum Value) computing section 148 calculates DSVs after modulation one after another. The DSVs are fed back to code conversion in modulation.

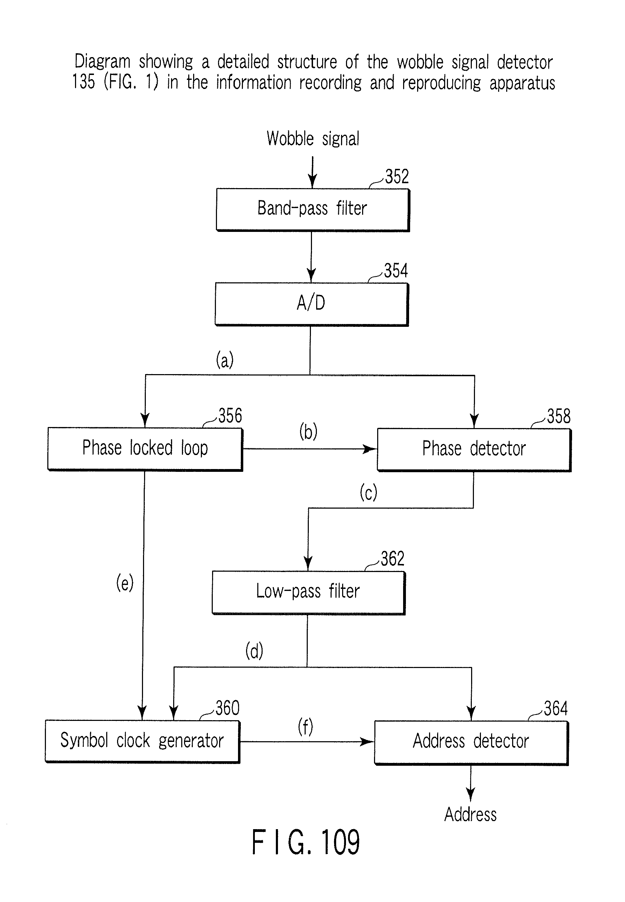

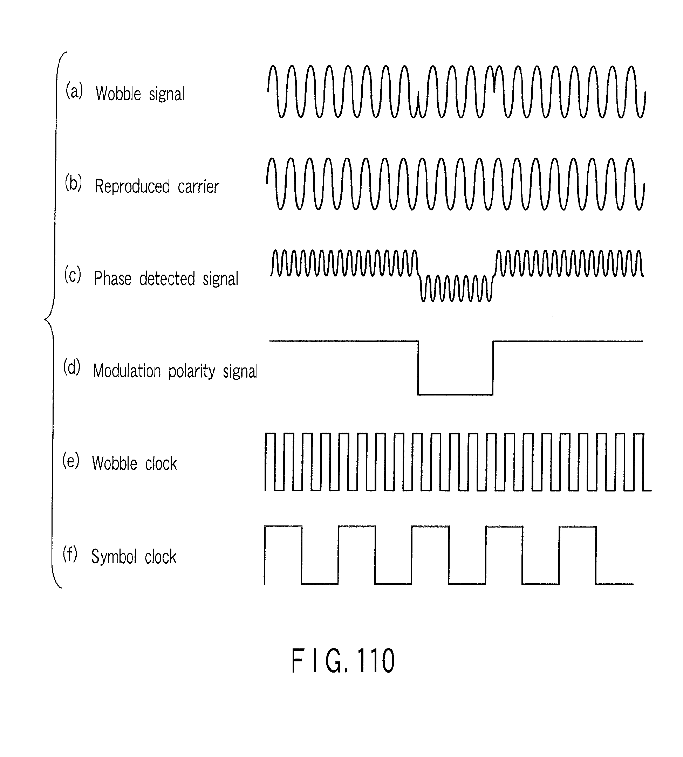

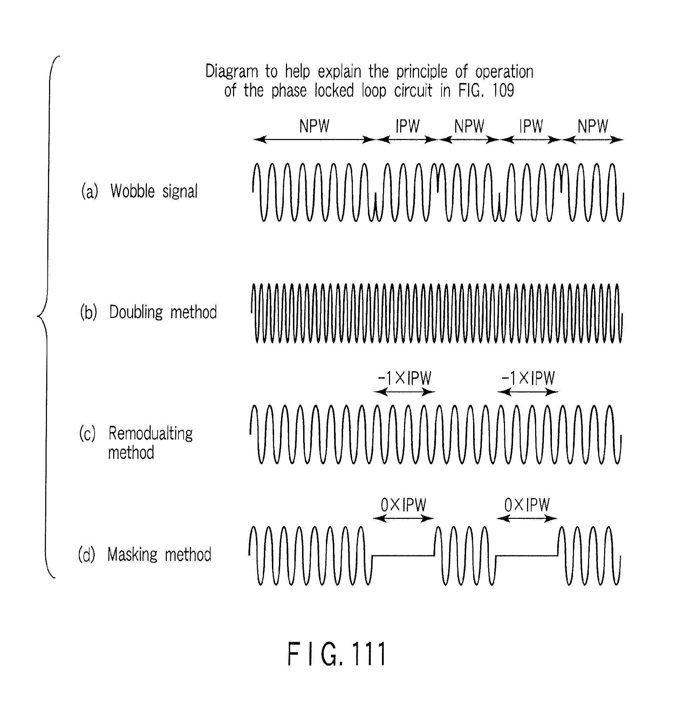

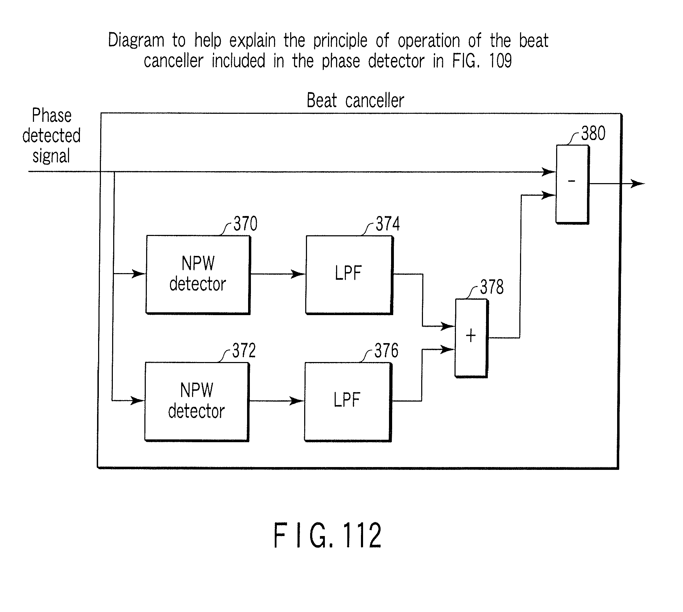

FIG. 109 and FIG. 110 are diagrams to help explain a detailed configuration of the wobble signal detecting section 135 (FIG. 1) in the information recording and reproducing apparatus of the embodiment.

A wobble signal is input to a band-pass filter 352. The output of the band-pass filter 352 is input to an A/D converter 354. The A/D converter 354 inputs a digital wobble signal ((a) in FIG. 110) to a phase locked loop circuit 356 and a phase detector 358. The phase locked loop circuit 356 locks the phase of the input signal and extracts and supplies a reproduced carrier signal ((b) in FIG. 110) to the phase detector 358. On the basis of the reproduced carrier signal, the phase detector 358 detects the phase of the wobble signal and supplies a phase detection signal ((c) in FIG. 110) to a low-pass filter 362. The phase locked loop circuit 356 locks the phase of the input signal and extracts the wobble signal ((e) in FIG. 110) and supplies the wobble signal to a symbol clock generator 360. The low-pass filter 362 also supplies a modulation polarity signal ((d) in FIG. 110) to the symbol clock generator 360, which generates a symbol clock ((f) in FIG. 110) and supplies the symbol clock to an address detector 364. The address detector 364 detects an address on the basis of the modulation polarity signal ((d) in FIG. 110) output from the low-pass filter 362 and the symbol clock ((f) in FIG. 110) generated at the symbol clock generator 360.

FIG. 111 is a diagram to help explain the principle of the operation of the phase locked loop circuit 356 of FIG. 109. The embodiment uses a wobble PLL method which phase-synchronizes a wobble signal (NPW). However, since the input wobble signal is phase-modulated including a normal phase wobble (NPW) and an inverted phase wobble (IPW) as shown in (a) in FIG. 111, the removal of the modulation components is needed. The modulation components are removed in the following three ways:

1) Wobble squaring method: Squaring the wobble enables the modulation components to be removed as shown in FIG. (b) in FIG. 111. PLL synchronizes with a squared wobble.

2) Remodulating method: The modulation components can be removed by modulating again a wobble modulation region into that in opposite phase as shown in (c) in FIG. 111.

3) Masking method: The modulation components can be removed by stopping phase control (or fixing the phase error to zero) in a wobble modulation region.

FIG. 112 is a diagram to help explain the principle of the operation of a beat canceller (not shown) included in the phase detector 358 of FIG. 109. The phase detection signal detected at the phase detector 358 is supplied to a normal phase wobble (NPW) detector 370 and an inverted phase wobble (IPW) detector 372, thereby detecting the detection amplitude of the normal phase wobble (NPW) and that of the inverted phase wobble (IPW). The outputs of the normal phase wobble (NPW) detector 370 and the inverted phase wobble (IPW) detector 372 pass through low-pass filters 374, 376, and are supplied to an adder 378, which detects an offset component. The phase detection signal and the output of the adder 378 are supplied to a subtracter 380, which cancels the wobble beat components from the phase detection signal. The output of the subtracter 380 is supplied as the phase detection signal to the low-pass filter 362 of FIG. 109.

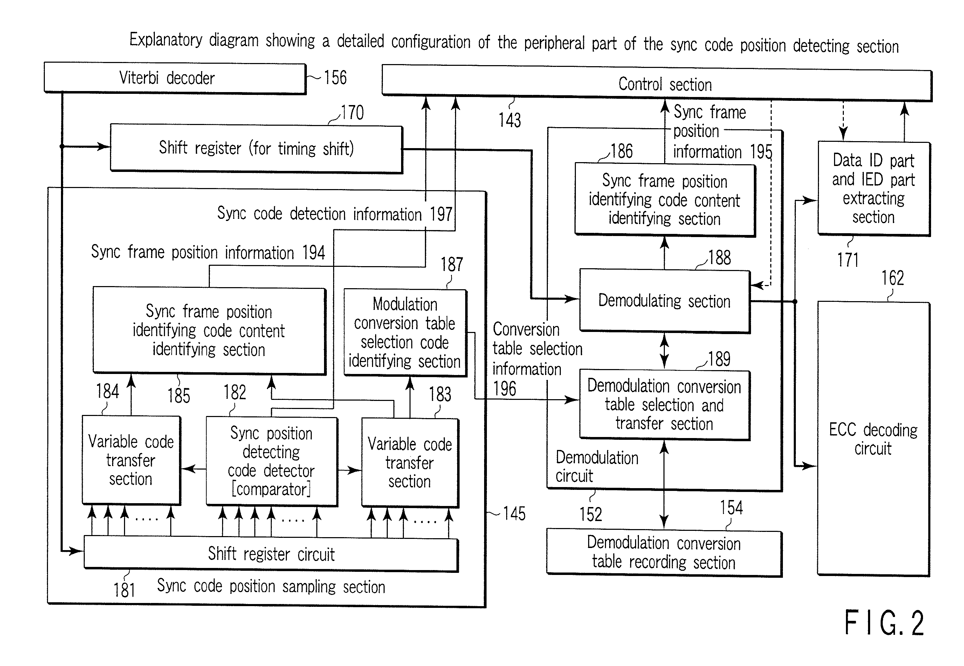

FIG. 2 shows a detailed configuration of the peripheral part including the sync code position extracting section 145. A sync code is made up of a synchronizing position detecting code part with a fixed pattern and a variable code part. A synchronizing position detecting code detecting section 182 detects the position of the synchronizing position detecting code part with the fixed pattern from the channel bit train output from the Viterbi decoder 156. Variable code transfer sections 183, 184 extract data about the variable codes existing before and after the code part. A sync frame position identifying code content identifying section 185 determines in which sync frame of the sector explained later the detected sync code lies. User information recorded on the information storage medium is transferred to the shift register circuit 170, a demodulating section 188 in the demodulation circuit 152, and the ECC decoding circuit 162 one after another in that order.

In the embodiment, as shown in point <A> of FIG. 125, reproducing is done by PRML techniques in the data area, data lead-in area, and data lead-out area, thereby achieving a higher recording density of the information storage medium (particularly an improvement in the linear density), whereas as shown in point <B> of FIG. 125, reproducing is done by slice level detecting techniques in the system lead-in area and system lead-out area, thereby securing not only the interchangeability with existing DVDs but also the stabilization of reproduction.

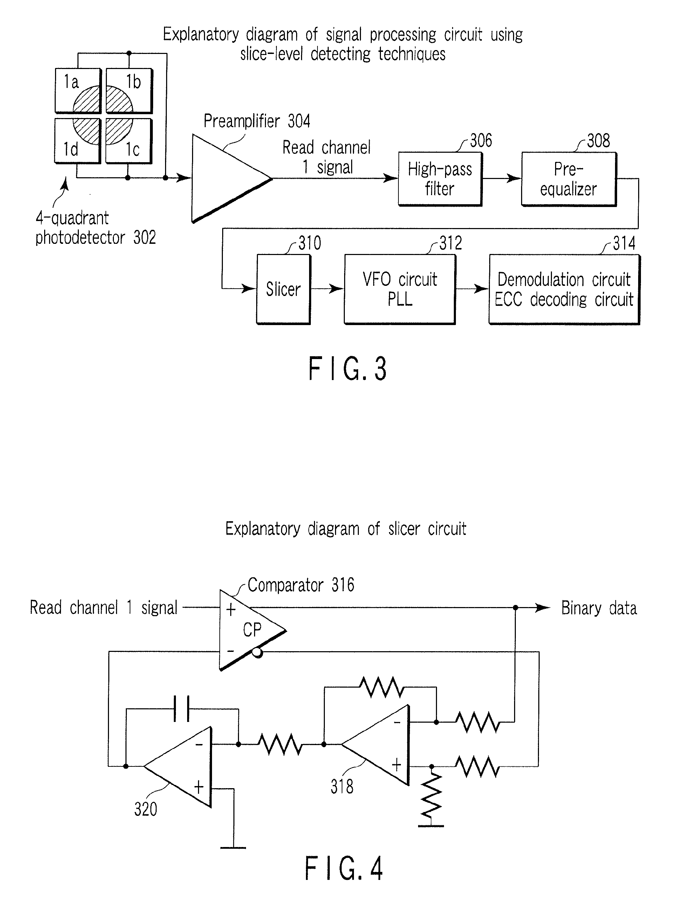

FIG. 3 shows an embodiment of a signal processing circuit using the slice level detecting method used in reproduction in the system lead-in area and system lead-out area. A 4-quadrant photodetector 302 of FIG. 3 is fixed to an optical head existing in the information recording and reproducing section 141 of FIG. 1. A signal obtained by summing the sense signals from the respective light-detecting cells of the 4-quadrant photodetector 302 is called a read channel 1 signal. A preamplifier 304 to a slicer 310 in FIG. 3 show a detailed configuration of a slice level detecting circuit 132 of FIG. 1. The reproduced signal obtained from the information storage medium passes through a high-pass filter 306 that cuts off the frequency components lower than the frequency band of the reproduced signal and then is subjected to a waveform equalizing process at a pre-equalizer 308. Experiments have shown that use of a 7-tap equalizer as the pre-equalizer 308 minimizes the circuit size and enables the reproduced signal to be detected with high accuracy. Thus, in the embodiment, a 7-tap equalizer is used. A VFO circuit PLL part 312 of FIG. 3 corresponds to the PLL circuit 174 of FIG. 1. A modulation circuit ECC decoding circuit 314 of FIG. 3 corresponds to the demodulation circuit 152 and EEC decoding circuit 162 of FIG. 1.

FIG. 4 shows a detailed configuration of the slicer 310 of FIG. 3. The slicer 310 uses a comparator 316 to slice the read channel 1 signal, thereby generating a binary signal (binary data). In the embodiment, using a duty feedback method, the output signals of low-pass filters 318, 320 are set to the slice level in binarization with respect to the inverted signal of binary data after binarization. In the embodiment, the cut-off frequency of the low-pass filters 318, 320 is set at 5 KHz. When the cut-off frequency is high, the slice level fluctuates fast, which makes the output signals more liable to be affected by noise. Conversely, when the cut-off frequency is low, the slice level responds slow, which makes the output signals more liable to be affected by dirt on or flaws in the information storage medium. Taking into account the relationship between RLL (1, 10) and the reference frequency of the channel bit, the cut-off frequency is set at 5 KHz.

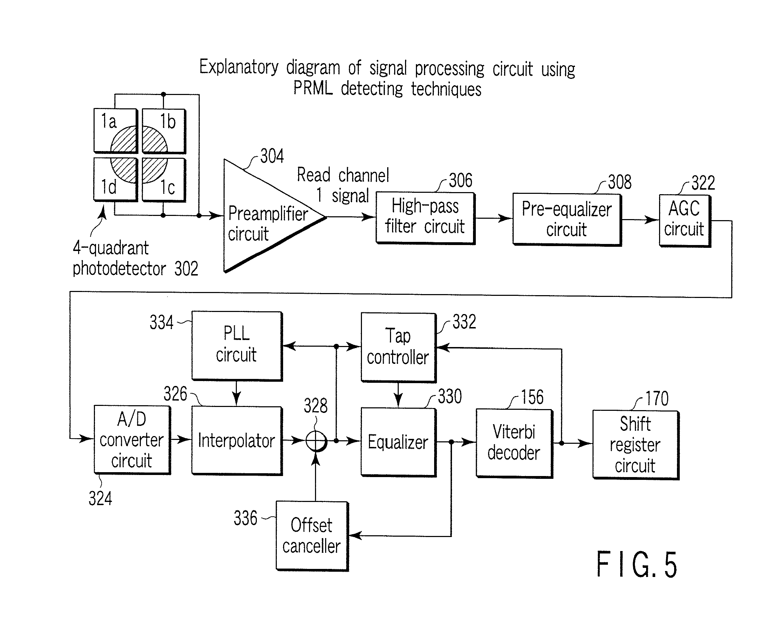

FIG. 5 shows a signal processing circuit which reproduces a signal in the data area, data lead-in area, and data lead-out area by using the PRML detecting method. The 4-quadrant photodetector 302 of FIG. 5 is fixed to the optical head existing in the information recording and reproducing section 141 of FIG. 1. A signal obtained by summing the sense signals from the respective light-detecting cells of the 4-quadrant photodetector 302 is called a read channel 1 signal. A detailed configuration of the PR equalizing circuit 130 of FIG. 1 is composed of various circuits, including a preamplifier circuit 304 to a tap controller 332, an equalizer 330, and an offset canceller 336. A PLL circuit 334 of FIG. 5 is a part of the PR equalizing circuit 130 of FIG. 1 and differs from the Schmitt trigger binarizing circuit 155 of FIG. 1. A primary cut-off frequency of the high-pass filter circuit 306 in FIG. 5 is set at 1 KHz. As in FIG. 3, a 7-tap equalizer is used as the pre-equalizer circuit (because use of a 7-tap equalizer minimizes the circuit size and enables the reproduced signal to be detected with high accuracy). The sampling clock frequency of an A/D converter 324 is at 72 MHz and the digital output is an 8-bit one. In the PRML detecting method, when the reproduced signal is affected by level fluctuations (DC offset) in the entire reproduced signal, an error is liable to occur in Viterbi demodulation. To eliminate the effect, the offset canceller 336 corrects the offset using the signal obtained from the output of the equalizer 330. In the embodiment of FIG. 5, an adaptive equalizing process is carried out at the PR equalizing circuit 130 of FIG. 1. To do this, a tap controller 332 is used which automatically corrects each tap coefficient in the equalizer using the output signal of the Viterbi decoder 156.

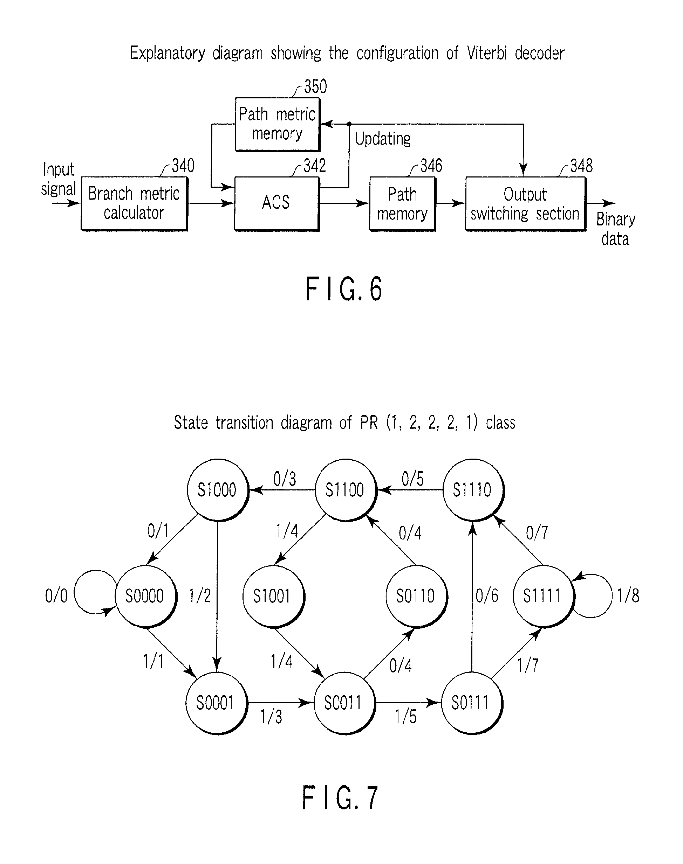

FIG. 6 shows the configuration of the Viterbi decoder 156 of FIG. 1 or 5. A branch metric computing section 340 calculates the branch metric for all of branches expected from the input signal and sends the resulting value to an ACS 342. The ACS 342, which stands for Add Compare Select, calculates the path metric by adding the branch metric for each of the expected paths and transfers the result of the calculation to a path metric memory 350. At this time, the ACS 342 does calculations, also referring to the information in the path metric memory 350. A path memory 346 temporarily stores an expected situation of each path (transition) and the value of the path metric for each path calculated at the ACS 342. An output switching section 348 compares the path metric for each path with another and selects the path whose path metric value is the smallest.

FIG. 7 shows state transition in PR (1, 2, 2, 2, 1) class in the embodiment. In the transitions of states expected in PR (1, 2, 2, 2, 1) class, since only the one shown in FIG. 7 is possible, the Viterbi decoder 156 determines a path which can be present (or expected) in decoding, on the basis of the transition diagram of FIG. 7.

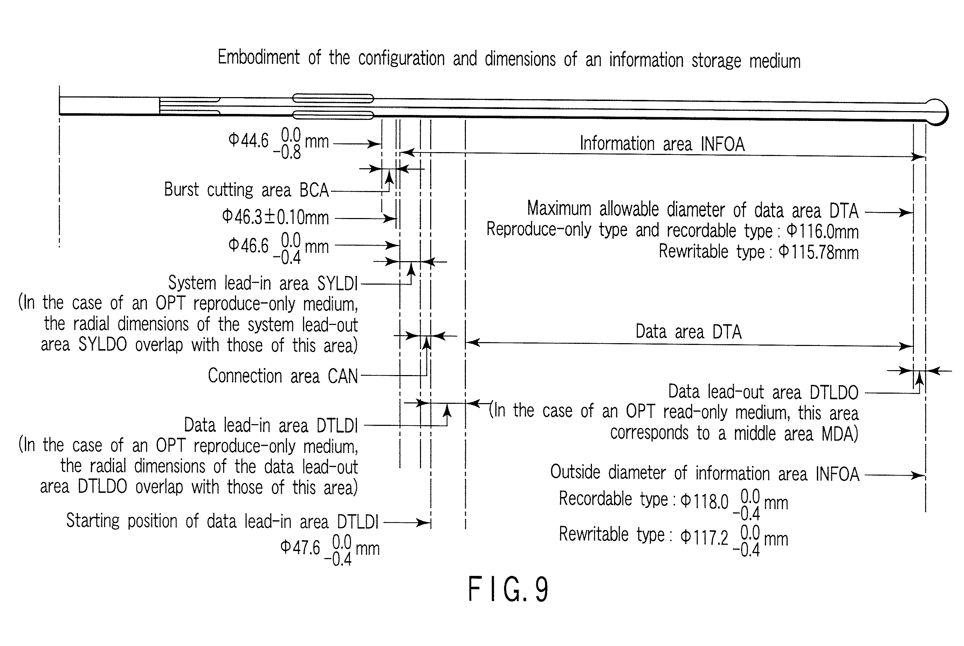

FIG. 9 shows the configuration and dimensions of an information storage medium in the embodiment. In the embodiment, the following three types of information storage medium are explained:

- "Reproduce-only information storage medium" which is for reproduction only and prevents recording
- "Recordable information storage medium" which enables additional recording only once
- "Rewritable information storage medium" which enables rewriting as many times as possible

As shown in FIG. 9, the three types of information storage mediums share most of the configuration and dimensions. In each of the three types of information storage mediums, a burst cutting area BCA, a system lead-in area SYLDI, a connection area CNA, a data lead-in area DTLDI, and a data area DTA are arranged from the inner edge in that order. In all of the information storage mediums excluding OPT reproduce-only mediums, a data lead-out area DTLDO is provided on the outer edge part. As described later, in OPT reproduce-only mediums, a middle area MDA is provided on the outer edge part. In the system lead-in area SYLDI, information is recorded in emboss (prepit) form. This area is for reproduction only (prevents additional recording) in both of the recordable information storage medium and the rewritable one.

In a reproduce-only information storage medium, information is recorded in the data lead-in area DTLDI in emboss (prepit) form, whereas in a recordable and a rewritable information storage medium, the data lead-in area DTLDI enables new information to be additionally recorded (or rewriting in the rewritable one) by creating recording marks. As described later, in a recordable and a rewritable information storage medium, areas enabling new information to be additionally recorded (or rewriting in the rewritable one) and reproduce-only areas where information is recorded in emboss (prepit) form are mixed in the data lead-out area DTLDO. As described above, in the data area DTA, data lead-in area DTLDI, data lead-out area DTLDO, and middle area MDA of FIG. 9, the signals recorded there are reproduced by the PRML method, thereby achieving a higher recording density of the information storage medium (point <A> in FIG. 125). At the same time, in the system lead-in area SYLDI and system lead-out area SYLDO, the signals recorded there are reproduced by the slice level detecting method, thereby securing the interchangeability with existing DVDs and the stabilization of reproduction (point <B> in FIG. 125).

Unlike the present DVD standards, the burst cutting area BCA and the system lead-in area SYLDI do not overlap with each other and are separated from each other spatially (point (B2) in FIG. 125) in the embodiment of FIG. 9. Separating the burst cutting area BCA and the system lead-in area SYLDI physically from each other prevents the information recorded in the system lead-in area SYLDI and the information recorded in the burst cutting area BCA from interfering with each other in reproducing information, which enables information to be reproduced with high accuracy.

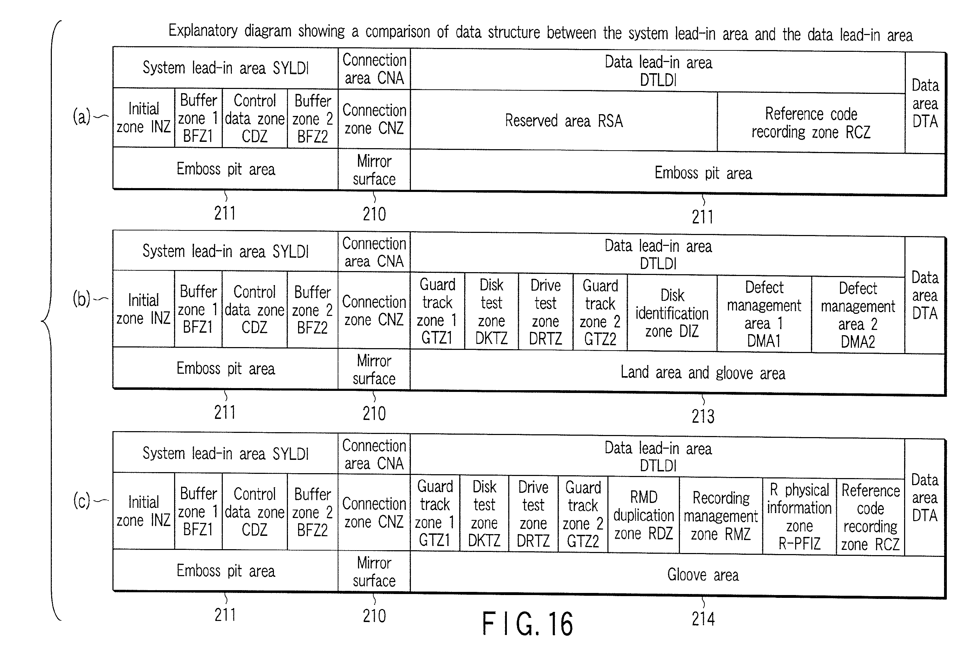

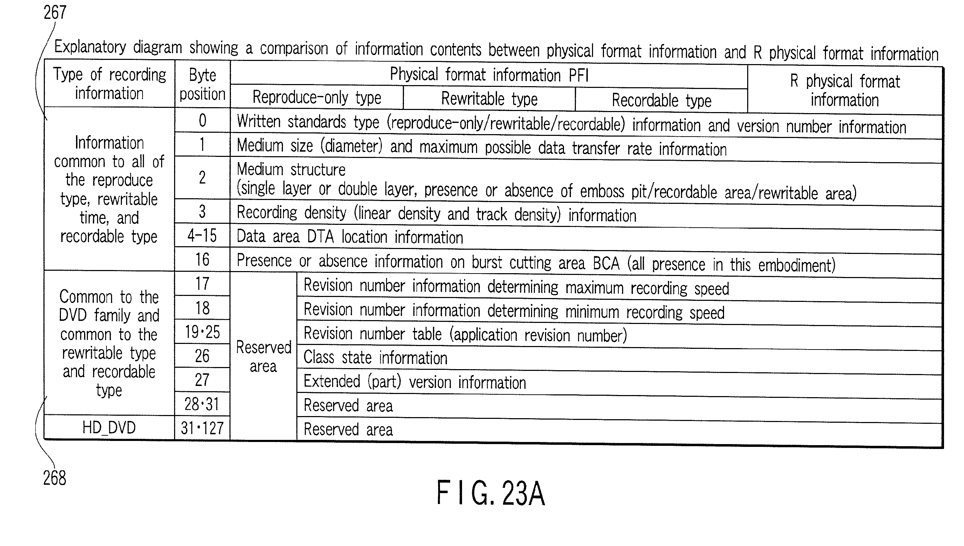

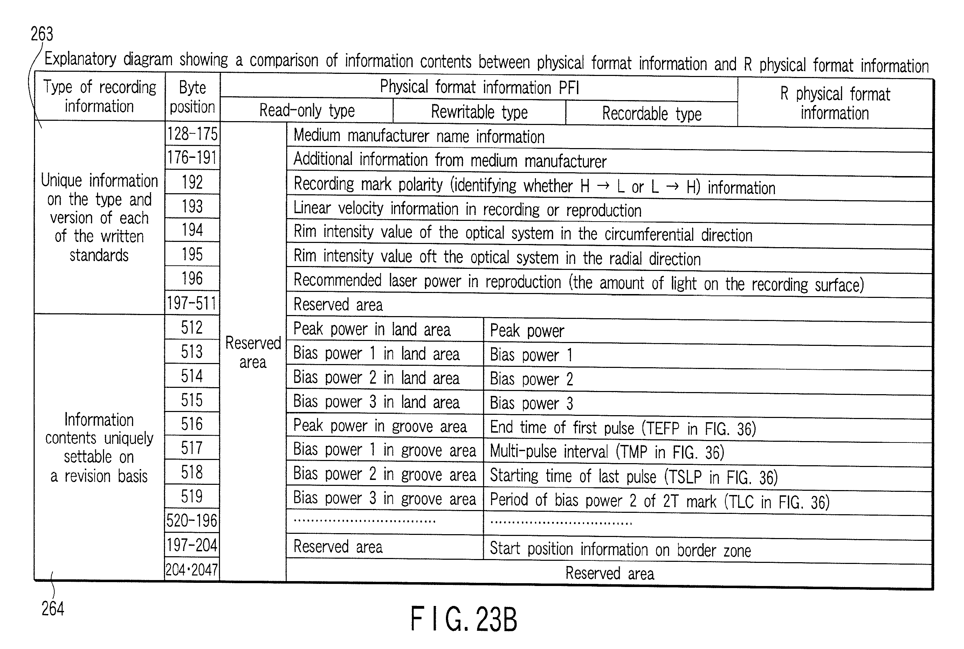

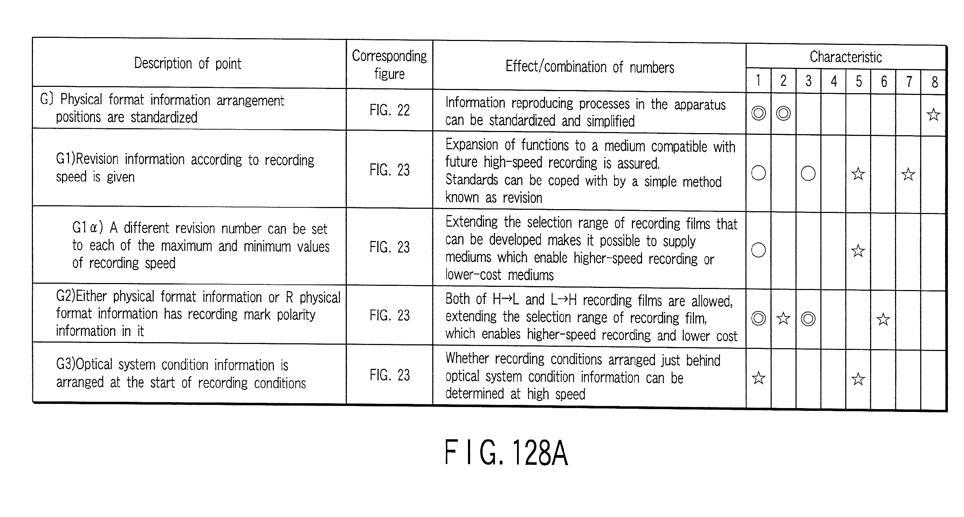

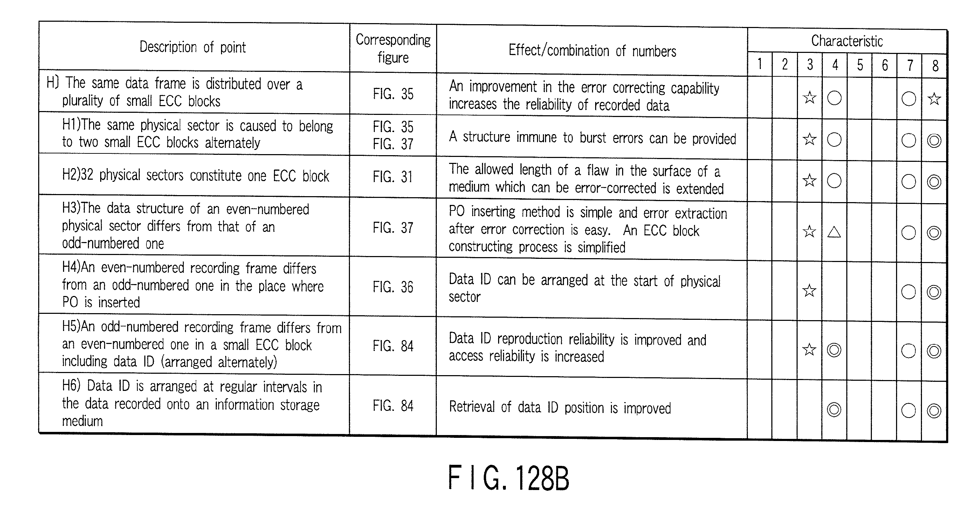

Another embodiment related to the embodiment shown in point (B2) of FIG. 125 is a method of forming a microscopic concavo-convex shape previously in a place where the burst cutting area BCA is provided, when a Low-to-High (L→H) recording film is used as shown in point (B3) of FIG. 125. When information about the polarity of the recording mark (determination of whether the recording film is High-to-Low (H→L) or Low-to-High (L→H)) existing at the 192nd byte in FIGS. 23A and 23B is explained later, the explanation will go as follows: the present embodiment incorporates not only a conventional High-to-Low (H→L) recording film but also a Low-to-High (L→H) recording film into the standards, increasing a selection of recording films, which enables not only high-speed recording to be realized but also a low-cost medium to be supplied (point (G2) in FIGS. 128A and 128B). As described later, the embodiment also takes into account a case where a Low-to-High (L→H) recording film is used. Data (bar code data) recorded in the burst cutting area BCA is created by subjecting the recording film to local laser exposure. As shown in FIG. 16, since the system lead-in area SYLDI is formed in the emboss pit area 211, the reproduced signal from the system lead-in area SYLDI appears in the direction in which the amount of light reflection decreases as compared with the level of light reflection from a mirror surface 210. If the burst cutting area BCA is brought into the state of the mirror surface 210 and a Low-to-High (L→H) recording film is used, the reproduced signal from the data written in the burst cutting area BCA appears in the direction in which the amount of light reflection increases as compared with the level of light reflection from the mirror surface 210 (in the unrecorded state). This results in a great difference between the positions (amplitude levels) of the maximum and minimum levels of the reproduced signal from the data created in the burst cutting area BCA and the positions (amplitude levels) of the maximum and minimum levels of the reproduced signal from the system lead-in area SYLDI. As described later in an explanation of FIG. 16 (and point (B4) of FIG. 125), the information reproducing apparatus or information recording and reproducing apparatus carries out processes in this order:

→ (1) Reproducing the information in the burst cutting area BCA
→ (2) Reproducing the information in the control data zone CDZ in the system lead-in area SYLDI
→ (3) Reproducing the information in the data lead-in area DTLDI (in the case of a recordable or a rewritable information storage medium)
→ (4) Readjusting (optimizing) the reproducing circuit constant in the reference code recording zone RCZ
→ (5) Reproducing the information recorded in the data area DTA or recording new information

Therefore, if there is a great difference between the reproduced signal amplitude level from the data created in the burst cutting area BCA and the reproduced signal amplitude level from the system lead-in area SYLDI, a problem arises: the reliability of information reproduction decreases. To solve this problem, this embodiment is characterized by forming a microscopic concavo-convex shape previously in the burst cutting area BCA when a Low-to-High (L→H) recording film is used (point (B3) in FIG. 125). Forming a microscopic concavo-convex shape in advance makes the light reflection level lower than the level of light reflection from the mirror surface 210 because of the effect of light interference and decreases greatly the difference between the amplitude level (sense level) of the reproduced signal from the data formed in the burst cutting area BCA and the amplitude level (sense level) of the reproduced signal from the system lead-in area SYLDI before recording data (bar code data) by local laser exposure, which improves the reliability of information reproduction. Furthermore, the process in moving from (1) to (2) becomes easier.

When a Low-to-High (L→H) recording film is used, an emboss pit area 211 may be used as a microscopic concavo-convex shape previously formed in the burst cutting area BCA as in the system lead-in area SYLDI. Another embodiment is a method of using a groove area 214 or a land area and groove area 213 as in the data lead-in area DTLDI or the data area DTA. As described in the explanation of the embodiment (point (B2) in FIG. 125) which arranges the system lead-in area SYLDI and the burst cutting area BCA separately, when the burst cutting area BCA overlaps with the emboss bit area 211, the noise components to the reproduced signal from the data created in the burst cutting area BCA increase because of unwanted interference. When the groove area 214 or land area and groove area 213 is used instead of the emboss pit area 211 as an embodiment of the microscopic concavo-convex shape in the burst cutting area BCA, the noise components to the reproduced signal from the data created in the burst cutting area BCA due to unwanted interference decrease, which improves the quality of the reproduced signal.

If the track pitch of the groove area 214 or the land area and groove area 213 formed in the burst cutting area BCA is caused to coincide with the track pitch of the system lead-in area SYLDI, the productivity of the information storage medium is improved. Specifically, when a matrix of an information storage medium is produced, the feed motor speed at the exposure section of a matrix recording apparatus is made constant, thereby forming emboss pits in the system lead-in area. At this time, the track pitch of the groove area 214 or the land area and groove area 213 formed in the burst cutting area BCA is caused to coincide with the track pitch of the emboss pits in the system lead-in area SYLDI, which enables the feed motor speed to be kept constant over the burst cutting area BCA and the system lead-in area SYLDI. Therefore, the feed motor speed need not be changed in the middle, which makes it difficult for pitch irregularity to occur and improves the productivity of the information storage medium.

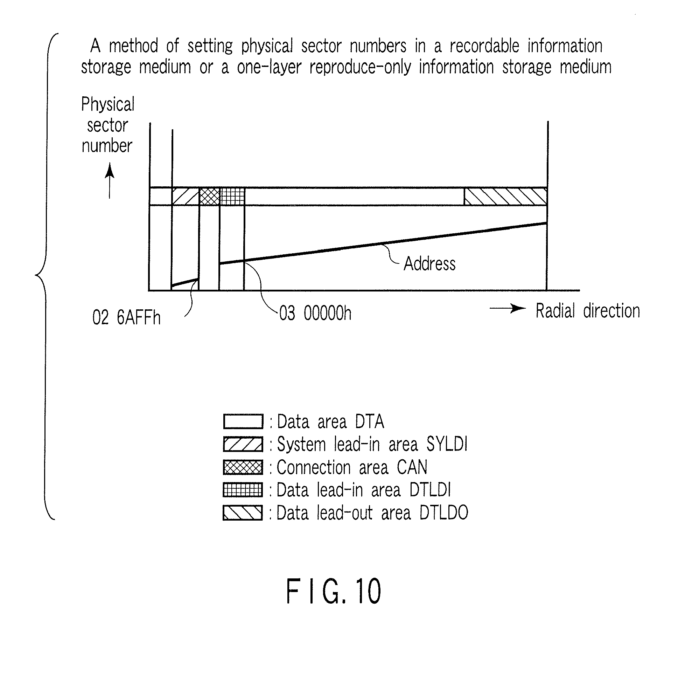

In all of the three types of information storage mediums, the minimum management unit of information recorded in an information storage medium is a 2048-byte sector unit. A physical address for the 2048-byte sector unit is defined as a physical sector number. FIG. 10 shows a method of setting a physical sector number in a recordable information storage medium and a reproduce-only information storage medium with a one-layer structure. No physical sector number is given to the burst cutting area BCA and connection area CNA. Physical sector numbers are set to the system lead-in area SYLDI, data area DTA, and data lead-out area DTLDO in ascending order from the inner edge. Setting is done so that the last physical sector number in the system lead-in area SYLDI may be "026AFFh" and the physical sector number at the starting position in the data area DTA may be "030000h."

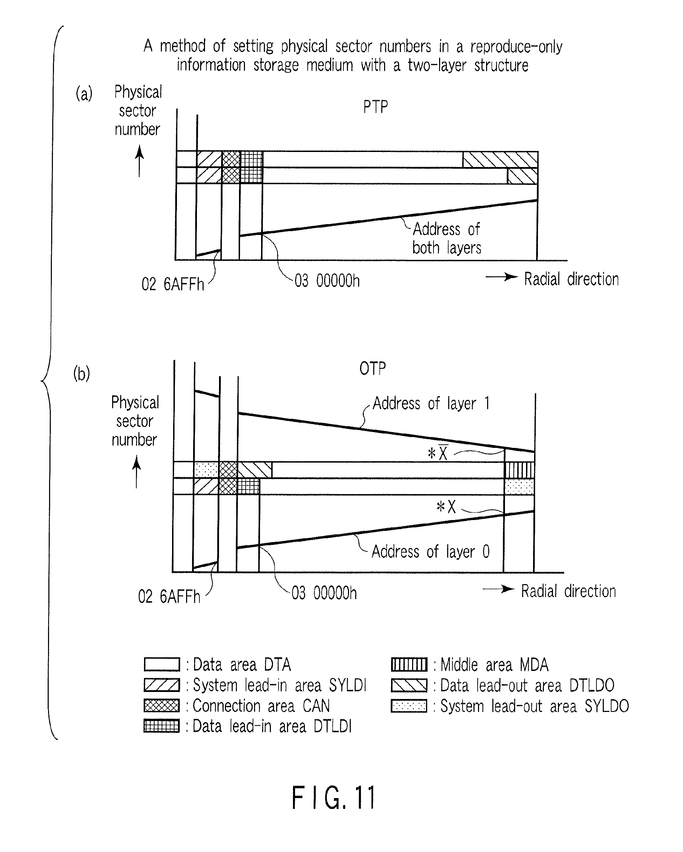

There are two methods of setting physical sector numbers in a reproduce-only information storage medium with a two-layer structure. One method is a parallel arrangement (Parallel Track Path) PTP shown in FIG. 11(a) in which the physical number setting method of FIG. 10 is applied to both of the two layers. The other method is an opposite arrangement (Opposite Track Path) OPT shown in FIG. 11(b) in which physical sector numbers are set from the inner edge toward the outer edge in ascending order in the front layer (Layer 0) and from the outer edge toward the inner edge in ascending order in the back layer (Layer 1). In the OPT arrangement, a middle area MDA, a data lead-out area DTLDI, and a system lead-out area SYLDO are provided.

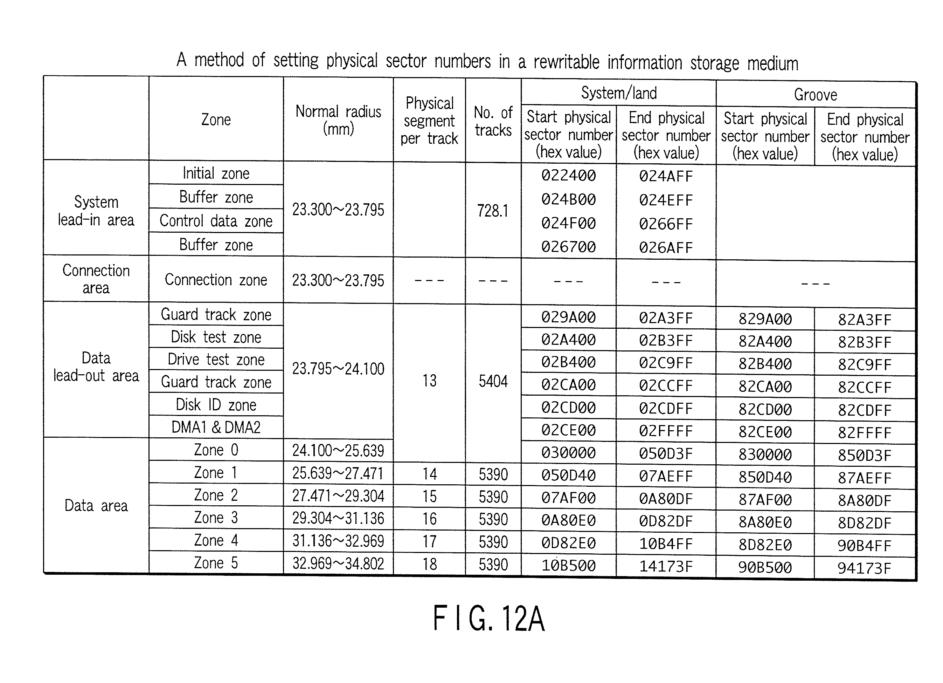

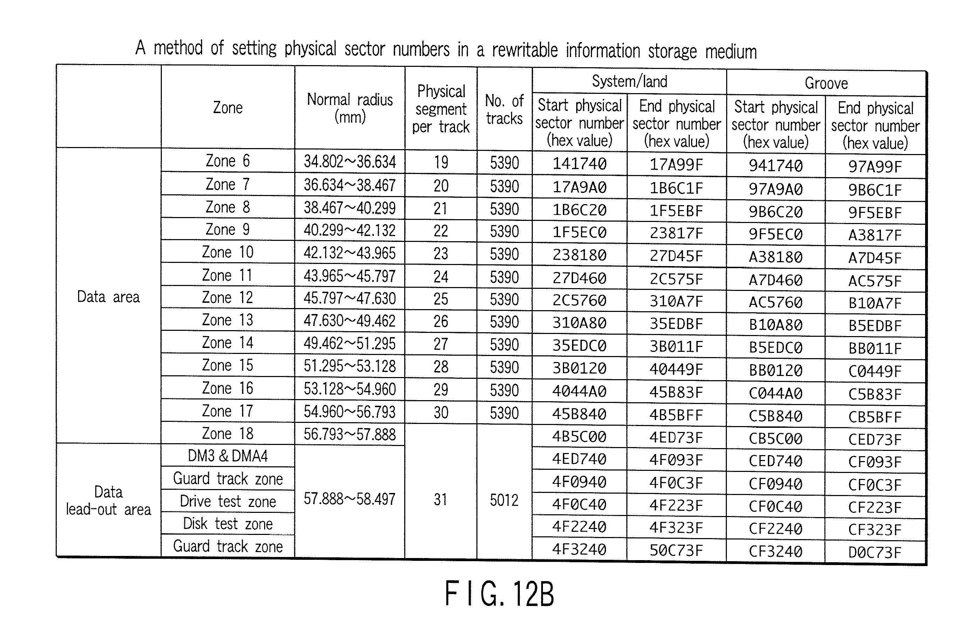

FIG. 12A and FIG. 12B show a method of setting physical sector numbers in a rewritable information storage medium. In a rewritable information storage medium, physical sector numbers are set in each of the land area and groove area. The data area DTA is divided into 19 zones.

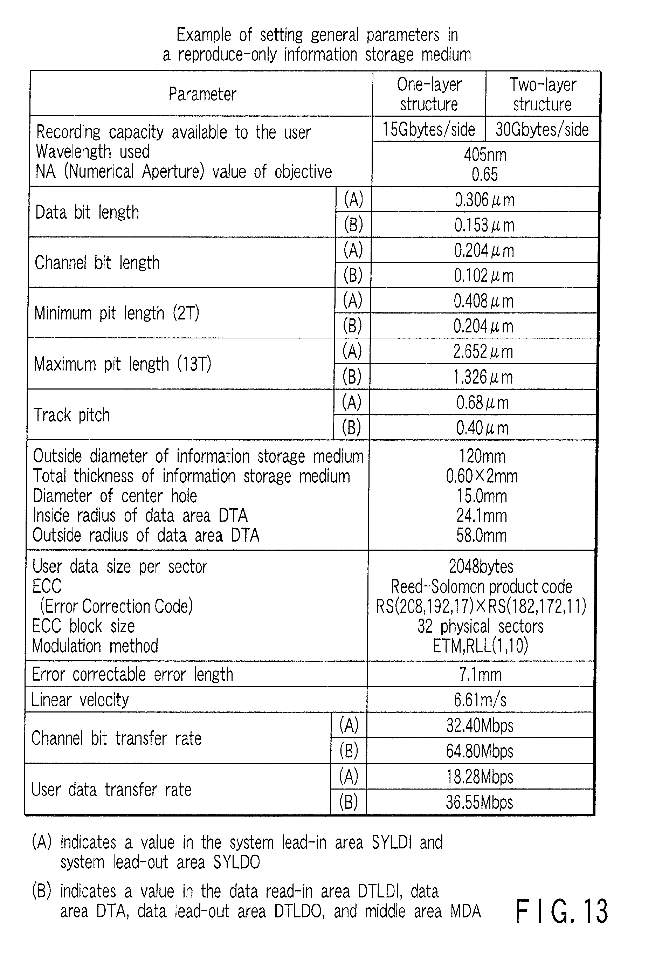

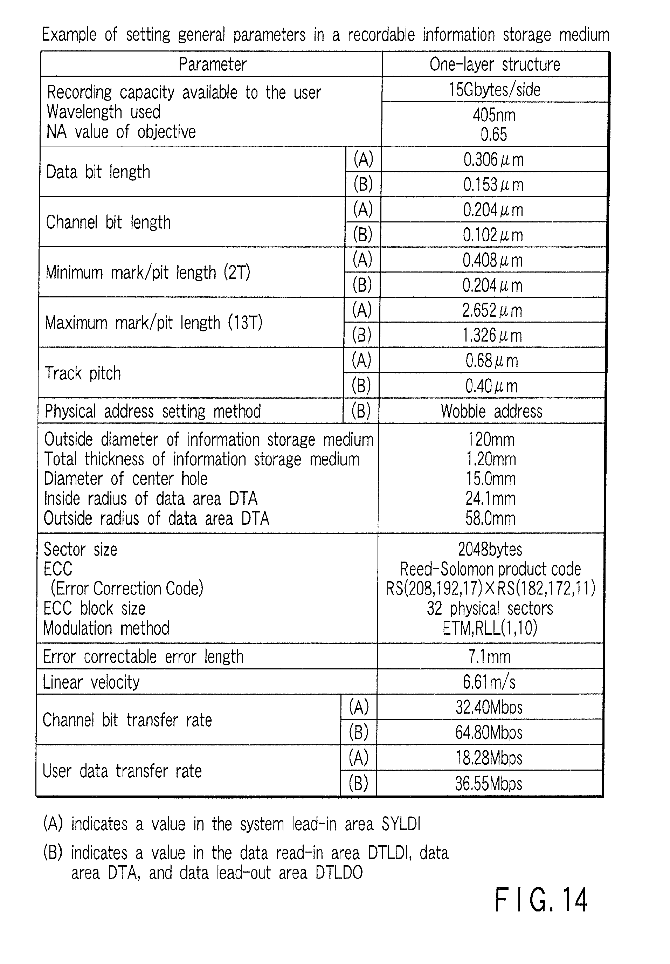

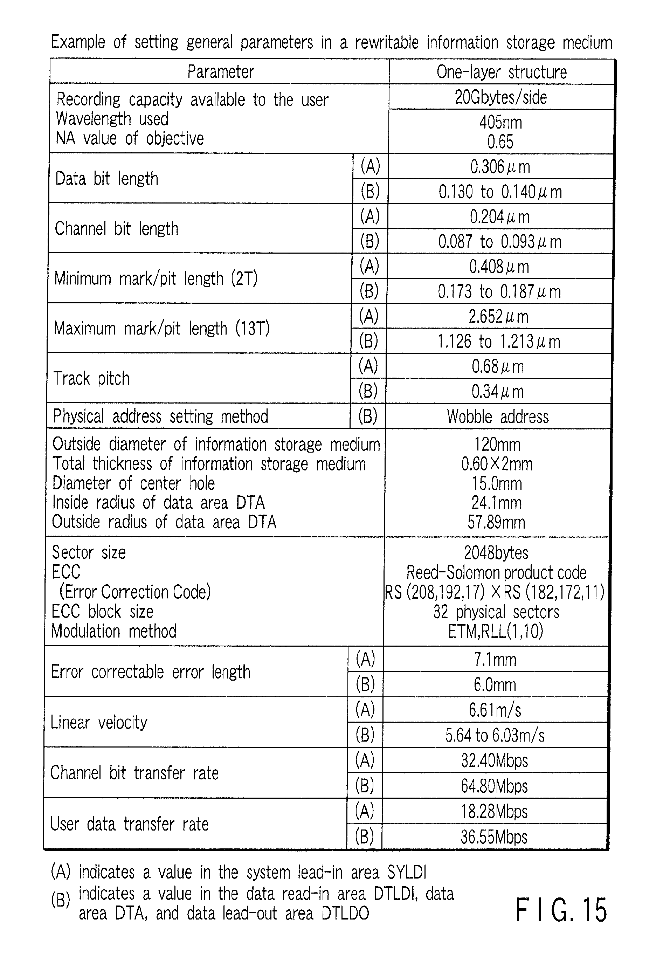

FIG. 13 shows the values of various parameters in the embodiment of the reproduce-only information storage medium. FIG. 14 shows the values of various parameters in the embodiment of the recordable information storage medium. FIG. 15 shows the values of various parameters in the embodiment of the rewrite-only information storage medium. As seen from a comparison between FIG. 13 or 14 and FIG. 15 (particularly a comparison of item (B) between the figures), the track pitch and line density (data bit length) are squeezed more in a rewrite-only information storage medium, thereby increasing the recoding capacity as compared with a reproduce-only or a recordable information storage medium. As described later, land/groove recording is used in a rewrite-only information storage medium, thereby squeezing the track pitch while reducing the effect of crosstalk between adjacent tracks. The embodiment is characterized in that, in each of a reproduce-only information storage medium, a recordable information storage medium, and a rewritable information storage medium, the data bit length of the system lead-in/-out area SYLDI/SYLDO and the track pitch (corresponding to the recording density) are made greater (or the recording density is made lower) than those of the data lead-in/-out area DTLDI/DTLDO (point (B1) in FIG. 125).

The data bit length and track pitch of the system lead-in/-out area SYLDI/SYLDO are brought close to those of the lead-in area of the existing DVD, thereby securing the interchangeability with the existing DVD. In this embodiment, too, as with the existing DVD-R, the step of an emboss in the system lead-in/-out area SYLDI/SYLDO is set shallow. This makes the depth of a pre-groove in a recordable information storage medium shallower, producing the effect of increasing the modulation degree of the reproduced signal from the recording marks formed in additional recording on the pre-groove. Conversely, there arises an opposite problem: the modulation degree of the reproduced signal from the system lead-in/-out area SYLDI/SYLDO becomes smaller. To overcome this problem, the data bit length (and track pitch) of the system lead-in/-out area SYLDI/SYLDO is made rougher, thereby separating (making much lower) the repeat frequency of pits and spaces in the densest position from the optical cut-off frequency of the reproduction objective MTF (Modulation Transfer Function), which makes it possible to increase the amplitude of the reproduced signal from the system lead-in/-out area SYLDI/SYLDO and stabilize reproduction.

FIG. 16 shows a comparison of a detailed data structure in the system lead-in SYLDI and data lead-in area DTLDI between various information storage mediums. FIG. 16, (a) shows a data structure of a reproduce-only information storage medium. FIG. 16, (b) shows a data structure of a rewritable information storage medium. FIG. 16, (c) shows a data structure of a recordable information storage medium. Although not shown, there is a burst cutting area BCA inside the system lead-in area SYLDI. The system lead-in area SYLDI is recorded into in emboss form. The connection area is a mirror part.

As shown in FIG. 16, (a), in a reproduce-only information storage medium, the system lead-in area SYLDI, data lead-in area DTLDI, and data area DTA are all emboss pit areas 211 where emboss pits are formed, except that only the connection zone CNZ is a mirror surface 210. The system lead-in area SYLDI is an emboss pit area 211 and the connection zone CNZ is a mirror surface 210, which are common to the various information storage mediums. As shown in FIG. 16, (b), in a rewritable information storage medium, a land area and groove area 213 is formed in the data lead-in area DTLDI and data area DTA. As shown in FIG. 16, (c), in a recordable information storage medium, a groove area 214 is formed in the data lead-in area DTLDI and data area DTA. Recording marks are formed in the land area and groove area 213 or the groove area 214, thereby recording information.

An initial zone INZ indicates the starting position of the system lead-in area SYLDI. As meaningful information recorded in the initial zone INZ, data ID (Identification Data) information including information about the physical sector numbers or logical sector numbers is arranged discretely. As described later, data-frame-structure information made up of the data ID, IED (ID Error Detection code), main data in which user information is recorded, and EDC (Error Detection Code) is recorded in a physical sector. The data-frame-structure information is also recorded in the initial zone INZ. However, since all of the main data in which user information is recorded are set to "00h" in the initial zone INZ, it is only the aforementioned data ID information that is meaningful in the initial zone INZ. From the physical sector number or logical sector number recorded there, the present position can be known. Specifically, in a case where reproduction is started from the information in the initial zone INZ when the information recording and reproducing section 141 of FIG. 1 starts to reproduce the information from the information storage medium, information on the physical sector number or logical sector number recorded in the data ID information is first extracted. While checking the present position on the information storage medium, the information recording and reproducing section 141 moves to the control data zone CDZ.

A first and a second buffer zone BFZ1, BFZ2 are each composed of 32 ECC blocks. As shown in FIGS. 13 to 15, since an ECC block is composed of 32 physical sectors, 32 ECC blocks correspond to 1024 physical sectors. As in the initial zone INZ, in the first and second buffer zones BFZ1, BFZ2, the main data are all set to "00h."

A connection zone CNZ in the connection area CAN is an area for physically separating the system lead-in area SYLDI and data lead-in area DTLDI from each other. This area is a mirror surface where neither any emboss pit nor any pre-groove exists.

The reference code zone RCZ in each of a reproduce-only information storage medium and a recordable information storage medium is an area used for adjusting the reproducing circuit of the reproducing apparatus (e.g., for automatically adjusting each tap coefficient in adaptive equalization effected in the tap controller 332 of FIG. 5). In this area, the aforementioned data-frame-structure information is recorded. The length of a reference code is one ECC block (= 32 sectors). This embodiment is characterized in that the reference code zone RCZ in each of a reproduce-only information storage medium and a recordable information storage medium is placed next to the data area DTA (point (A2) in FIG. 125). In the structure of each of the existing DVD-ROM and DVD-R disk, a control data zone is provided between the reference code zone and the data area, which separates the reference code zone and the data area from each other. When the code zone and the data area are separated from each other, the amount of tilt of and the reflectivity of the information storage medium or the recording sensitivity of the recording film (in the case of a recordable information storage medium) change slightly, which causes a problem: even if the circuit constant of the reproducing apparatus has been adjusted in the reference code zone, the optimum circuit constant in the data area deviates from the original value. To solve this problem, a reference code zone RCZ is provided adjacent to the data area DTA, which enables the optimized state to be kept with the same circuit constant even in the adjacent data area DTA, when the circuit constant of the information reproducing apparatus is optimized in the reference code zone RCZ. To reproduce a signal with high accuracy in any place in the data area DTA, the following steps are carried out:

→ (1) Optimize the circuit constant of the information reproducing apparatus in the reference code zone RCZ
→ (2) Optimize again the circuit constant of the information reproducing apparatus, while reproducing the part closest to the reference code zone RCZ in the data area DTA
→ (3) Optimize further again the circuit constant, while reproducing the information at the midpoint between the target position in the data area DTA and the position optimized in (2)
→ (4) Move to the target position and reproduce the signal

Going through these steps enables the signal to be reproduced at the target position with very high accuracy.

A first and a second guard track zone GTZ1, GTZ2 existing in each of the recordable information storage medium and rewritable information storage medium are areas for defining the starting boundary position of the data lead-in area DTLDI and the boundary position between the disk test zone DKTZ and drive test zone DRTZ. These areas are set as areas in which recording must not be done by forming recording marks. Since the first and second guard track zones GTZ1, GTZ2 exist in the data lead-in area DTLDI, a pre-groove area is formed beforehand in a recordable information storage medium and a groove area and land area is formed beforehand in a rewritable information storage medium. Since wobble addresses have been recorded in the pre-groove area or groove area and land area as shown in FIGS. 13 to 15, the present position on the information storage medium is determined using the wobble addresses.

A disk test zone DKTZ is an area for the information storage medium manufacturer to conduct a quality test (evaluation).

The drive test zone DRTZ is secured as an area for the information recording and reproducing apparatus to do trial writing before recording information onto the information storage medium. After the information recording and reproducing apparatus does trial writing in this area beforehand and calculates the optimum recording condition (write strategy), it can record information in the data area DTA under the optimum recording condition.

As shown in FIG. 16, (b), the information in a disk identification zone DIZ in a rewritable information storage medium, which is an optional information recording area, is an area in which a set of the information reproducing apparatus manufacturer name information, its additional information, and a drive description made up of an area recordable by the manufacturer can be additionally recorded on a set basis.

As shown in FIG. 16, (b), a first and a second defect management area DMA1, DMA2 are areas where defect management data in the data area DTA is recorded. For example, spare place information for the occurrence of a defective part is recorded in the areas.

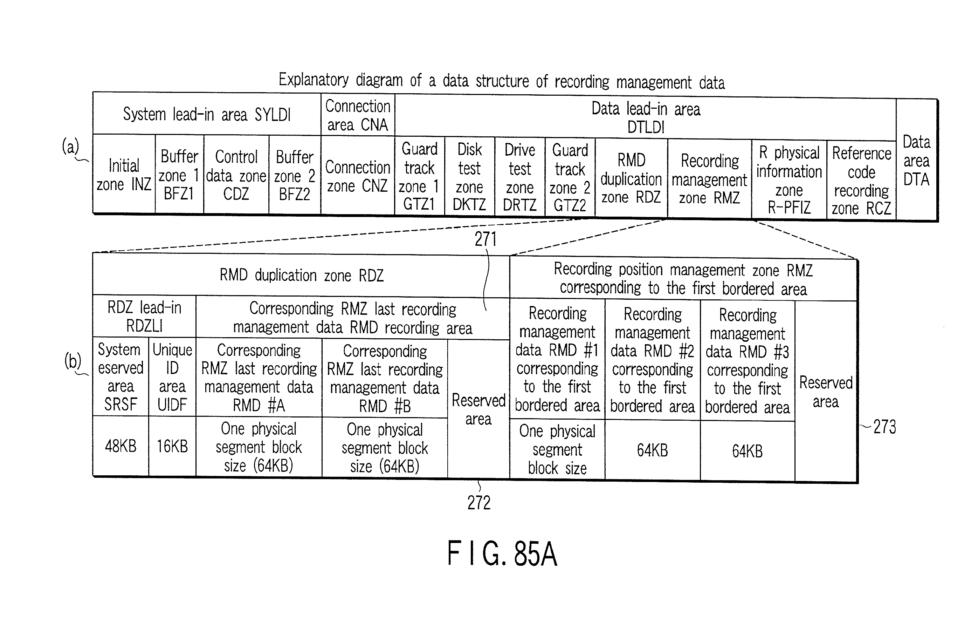

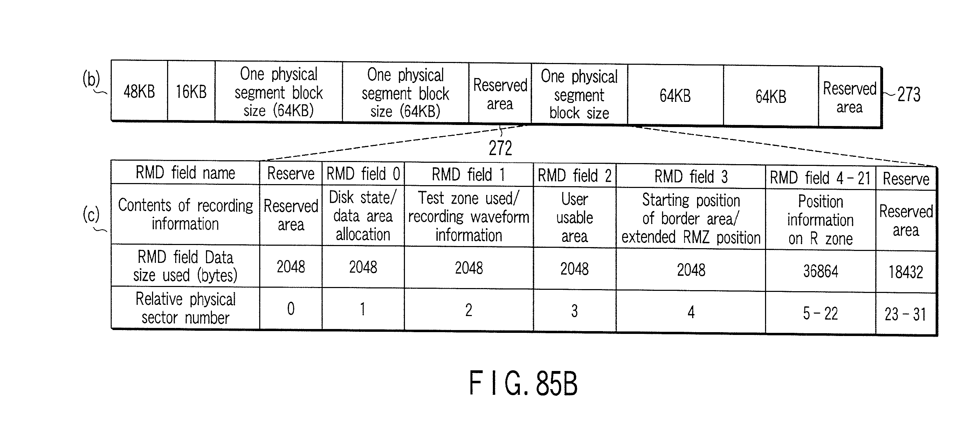

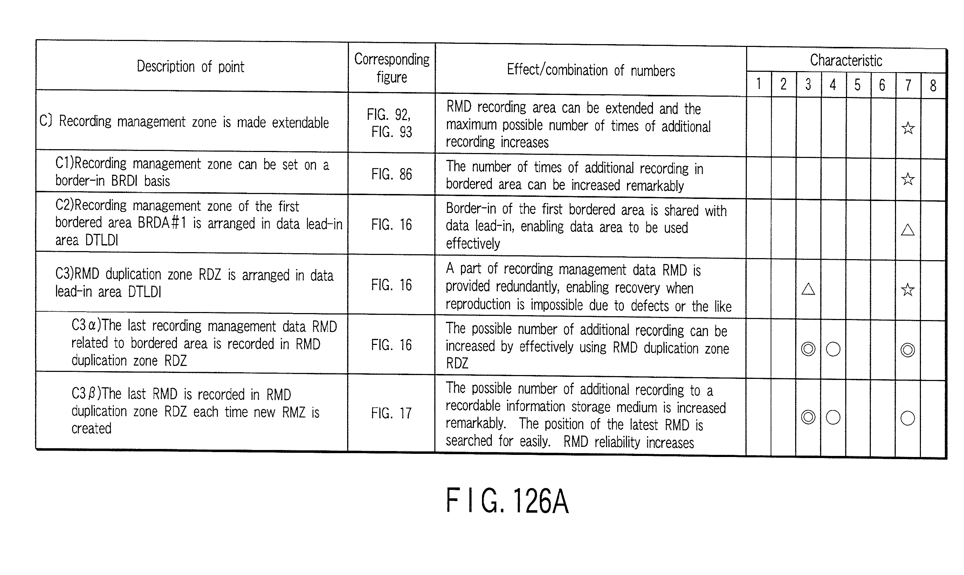

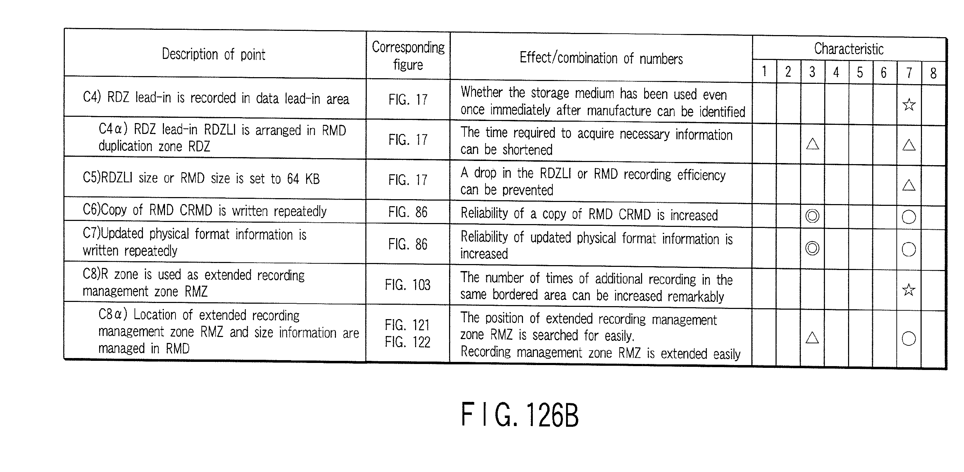

As shown in FIG. 16, (c), in a recordable information storage medium, an RMD duplication zone RDZ, a recording management zone RMZ, an R physical information zone R-PFIZ are provided separately. In the recording management zone RMZ, recording management data RMD, which is management information on the recording position of data updated by a data additional recording process, is recorded (which will be explained in detail later). As described in FIGS. 85A and 85B later, in this embodiment, a recording management zone RMZ is set in each bordered area BRDA, which enables the area of the recording management zone RMZ to be extended. As a result, even if the frequency of additional recording is increased and therefore the recording management data RMD area needed increases, this will be coped with by extending the recording management zone RMZ. As a result, the effect of increasing the number of additional recordings remarkably is obtained. In this case, in the embodiment, a recording management zone RMZ is provided in the border-in BRDI corresponding to each bordered area BRDA (or provided just in front of each bordered area BRDA). In the embodiment, the border-in BRDI corresponding to the first bordered area BRDA#1 and the data lead-in area DTLDI share an area, eliminating the formation of the first border-in BRDI in the data area DTA, which enables the data area DTA to be used effectively (point (C2) in FIG. 126). That is, the recording management zone RMD in the data lead-in area DTLDI shown in FIG. 16, (c) is used as the recording place of the recording management data RMD corresponding to the first bordered area BRDA#1 (point (C2) in FIGS. 126A and 126B).

An RMD duplication zone RDZ is a place in which recording management data RMD satisfying the following condition in the recording management zone RMZ is recorded. As in the embodiment, having the recording management data RMD redundantly increases the reliability of the recording management data RMD (point (C3) in FIGS. 126A and 126B). Specifically, when the recording management data RMD in the recording management zone RMD cannot be read because of the influence of dirt on or flaws in the surface of a recordable information storage medium, the recording management data RMD recorded in the RMD duplication zone RDZ is reproduced and further the remaining necessary information is acquired by tracing, which enables the latest recording management data RMD to be restored (point (C3β) in FIGS. 126A and 126B).

In the RMD duplication zone RDZ, the recording management data RMD at the time of closing a border (or a plurality of borders) is recorded (point (C3α) in FIGS. 126A and 126B). As described later, since one border is closed and a new recording management zone RMZ is defined each time a succeeding new bordered area is set, it may be said that, each time a new recording management zone RMZ is created, the last recording management data RMD related to the preceding bordered area is recorded in the RMD duplication zone RDZ. If the same information is recorded in the RMD duplication zone RDZ each time the recording management data RMD is additionally recorded on the recordable information storage medium, the RMD duplication zone RMD is filled up with a relatively small number of additional recordings, with the result that the upper limit of the number of additional recordings is small. In contrast, as in the embodiment, if a new recording management zone RMZ is created when a border is closed or when the recording management zone RMZ in the border-in BRDI has got full and a new recording management zone RMZ is created using an R zone, only the last recording management data RMD in the present recording management zone RMZ is recorded in the RMD duplication zone RDZ, which enables the RMD duplication zone RDZ to be used effectively and increases the number of additional recordings (points (C3) and (C3β) in FIGS. 126A and 126B).

For instance, when the recording management data RMD in the recording management zone RMZ corresponding to the bordered area BRDA in the middle of additional recording (before border closing is done) cannot be reproduced due to dirt on or flaws in the surface of the recordable information storage medium, the recording management data RMD recorded at the end of the RMD duplication zone RDZ, which enables the position of the already closed bordered area to be known. Therefore, tracing the remaining part of the data area DTA of the information storage medium makes it possible to acquire the place of the bordered area BRDA in the middle of additional recording (before border closing is done) and the contents of the information recorded there, which enables the latest recording management data RMD to be restored.

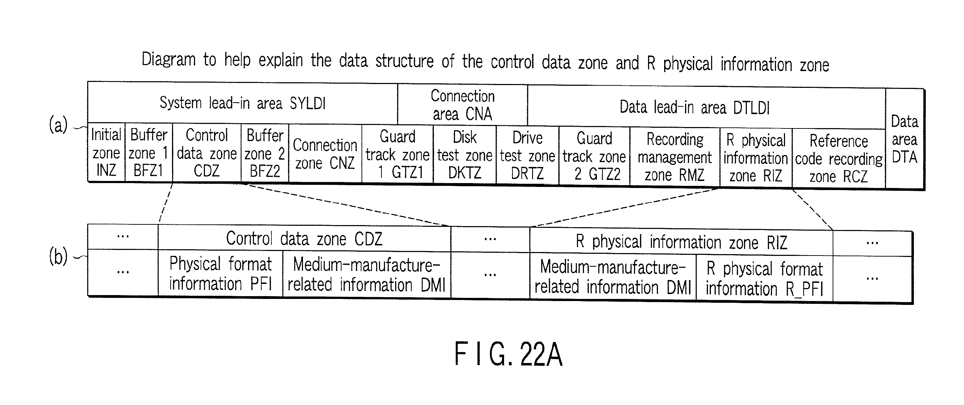

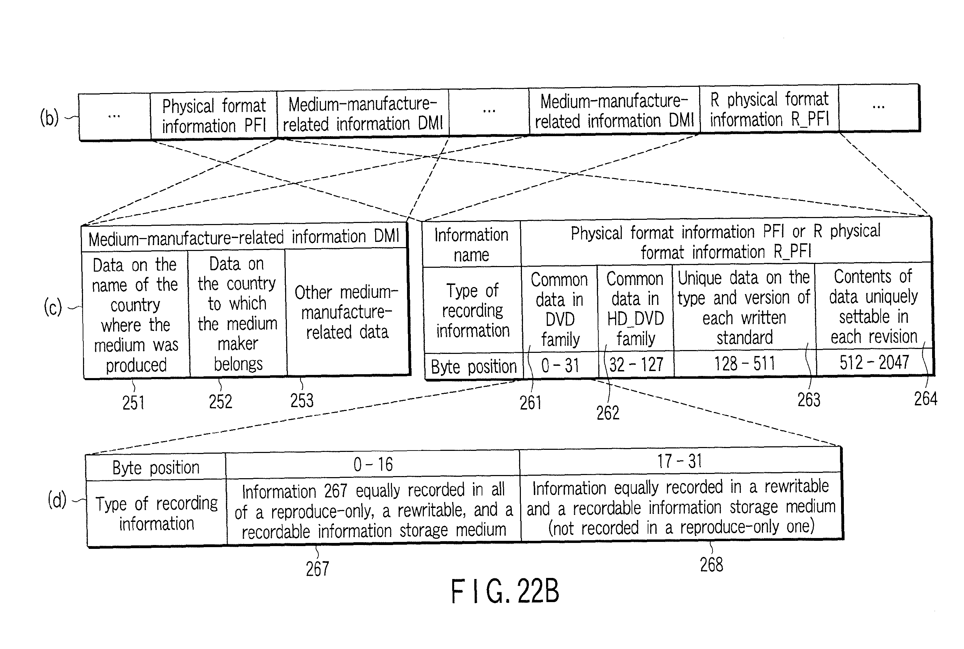

Information similar to physical format information PFI (which will be explained in detail later using FIGS. 22A and 22B) in a control data zone CDZ existing in each of FIGS. 16(a) to 16(c) is recorded in an R physical information zone R-PFIZ.

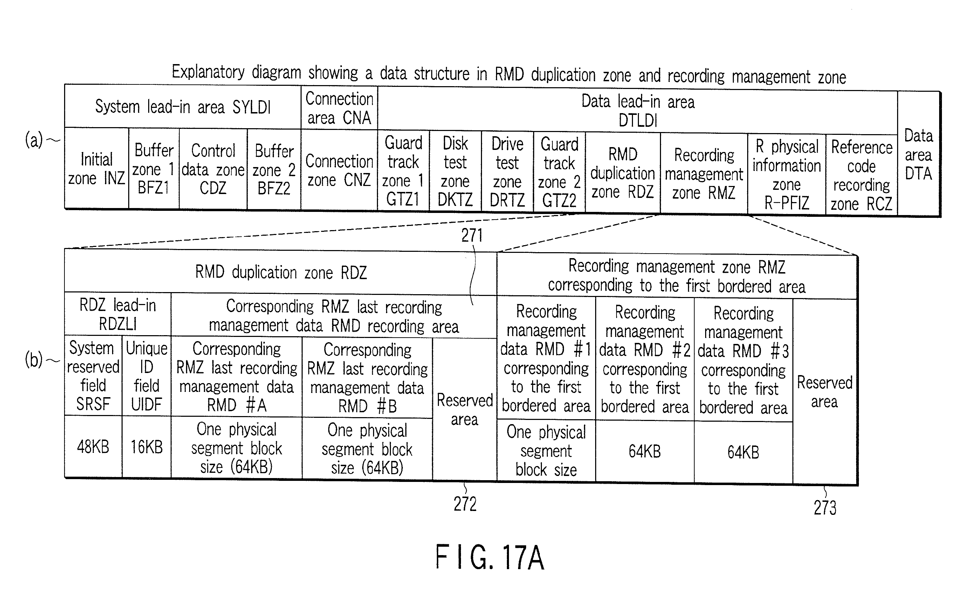

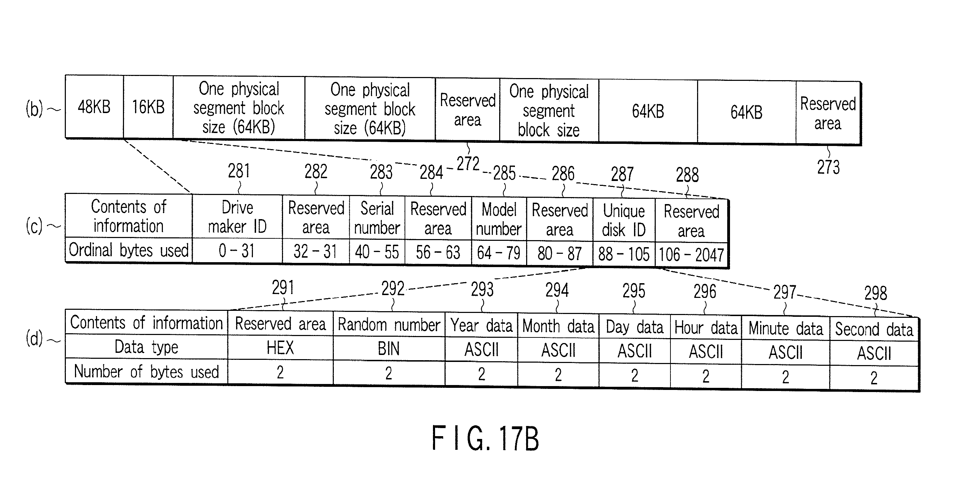

FIGS. 17A and 17B show a data structure in the RMD duplication zone RDZ and recording management zone RMZ in the recordable information storage medium (FIG. 16, (c)). FIG. 17A, (a) shows the same as in FIG. 16, (c). FIG. 17A, (b) is an enlarged diagram of the RMD duplication zone RDZ and the recording management zone RMZ in FIG. 16, (c). As described above, data about recording management corresponding to the first bordered area BRDA is recorded collectively in an item of recording management data RMD in the recording management zone RMZ in the data lead-in area DTLDI. Each time the contents of the recording management data RMD are updated in doing additional recording on the recordable information storage medium, the data is added to the end one after another as new recording management data RMD. Specifically, the recording management data RMD is recorded in size units of one physical segment block (a physical segment block will be explained later). Each time the contents of the data are updated, new recording management data RMD is added to the end one after another. FIG. 17A, (b) shows a case where, when recording management data RMD#1, RMD#2 have been recorded, since the management data has been changed, the changed (or updated) data is recorded as recording management data RMD#3 immediately behind recording management data RMD#2. Therefore, there are reserved areas 273 in the recording management zone RMZ so as to enable further additional recording.

FIG. 17A, (b) shows the structure of a recording management zone RMZ existing in the data lead-in area DTLDI. The structure of the recording management zone RMZ (or the extended recording management zone referred to as the extended RMZ) existing in the border-in BRDI or bordered area BRDA is also the same as that of FIG. 17A, (b).

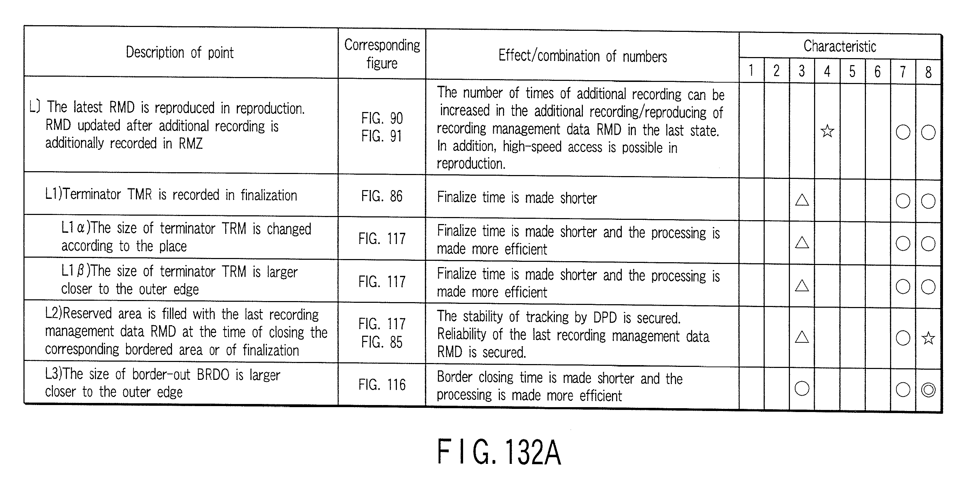

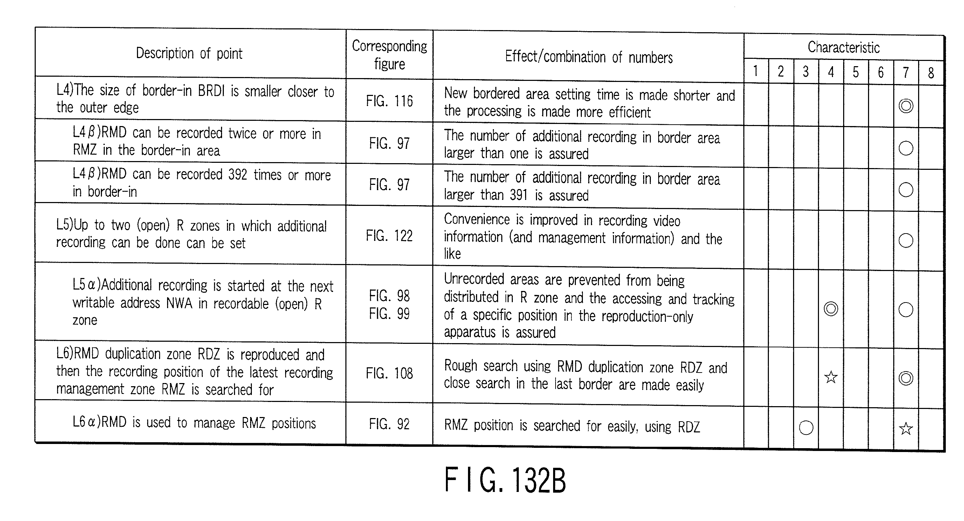

In the embodiment, when the first bordered area BRDA#1 is closed or when the finalizing process of the data area DTA is performed, all of the reserved area 273 shown in FIG. 17A, (b) is filled with the last recording management data RMD (point (L2) in FIGS. 132A and 132B). This produces the following effects:

(1) An "unrecorded" reserved area 273 is eliminated, which assures the stabilization of tracking correction by a DPD (Differential Phase Detection) method.
(2) The last recording management data RMD is written over the previous reserved area 273, which increases reliability remarkably in reproducing the last recording management data RMD.
(3) It is possible to prevent different recording management data RMD from being written erroneously into an unrecorded reserved area 273.

The processing method is not limited to the recording management zone RMZ in the data lead-in area DTLDI. Also in the recording management zone RMZ (or the extended recording management zone referred to as the extended RMZ) in the border-in BRDI or the bordered area BRDA (explained later), when the corresponding bordered area BRDA is closed or the data area DTA is finalized, all of the reserved area 273 is filled with the last recording management data RMD.

The RMD duplication zone RDZ is divided into RDZ read-in RDZLI and a recording area 271 for the corresponding RMZ last recording management data RMD. As shown in FIG. 17A, (b), the RDZ lead-in RDZLI is composed of a system reserved field SRSF whose data size is 48 KB and a unique ID field UIDF whose data size is 16 KB. All of the system reserved field SRSF is set to "00h."

The embodiment is characterized in that RDZ lead-in RDZLI is recorded in a recordable data lead-in area DTLDI (point (C4) in FIGS. 126A and 126B). A recordable information storage medium of the embodiment is shipped immediately after manufacture in such a manner that the RDZ lead-in RDZLI is unrecorded. When the recordable information storage medium is used in an information recording and reproducing apparatus on the user side, the information in the RDZ lead-in RDZLI is recorded for the first time. Therefore, immediately after the recordable information storage medium is installed in the information recording and reproducing apparatus, it is determined whether information has been recorded in the RDZ lead-in RDZLI, which makes it possible to know easily whether the recordable information storage medium is immediately after manufacture and shipment or has been used at least once. In addition, as shown in FIG. 17A, (b), the embodiment is characterized in that the RMD duplication zone RDZ is provided closer to the inner edge than the recording management zone RMZ corresponding to the first bordered area BRDA and the RDZ lead-in RDZLI is provided in the RMD duplication zone RDZ (point (C4α) in FIGS. 126A and 126B).

Information (RDZ lead-in RDZLI) as to whether a recordable information storage medium is immediately after manufacture and shipment or has been used at least once is placed in the RMD duplication zone RDZ used for a common purpose (an improvement in the reliability of the recording management data RMD), which improves the usability of information acquisition. Placing the RDZ lead-in RDZLI closer to the inner edge than the recording management zone RMZ shortens the time required to acquire necessary information. When an information storage medium is installed in the information recording and reproducing apparatus, the information recording and reproducing apparatus starts reproduction in the burst cutting area BCA provided at the innermost edge as shown in FIG. 9, moves the reproducing position gradually toward the outside, and changes the reproducing place from the system lead-in area SYLDI to the data lead-in area DTLDI. The information recording and reproducing apparatus determines whether information has been recorded in the RDZ lead-in RDZLI in the RMD duplication zone RDZ. In a recordable information storage medium which is immediately after shipment and hasn't ever been recorded into, since no recording management data RMD has been recorded in the recording management zone RMD, if no information has been recorded in the RDZ read-in RDZLI, the information recording and reproducing apparatus determines that it is "immediately after shipment and unused," which enables the reproduction of the recording management zone RMZ to be omitted and therefore the time required to collect information to be shortened.

As shown in FIG. 17B, (c), information on an information recording and reproducing apparatus which used (started to record data into) a recordable information storage medium immediately after shipment for the first time is recorded in the unique ID field UIDF. That is, the drive maker ID 281 for the information recording and reproducing apparatus, the serial number 283 of the information recording and reproducing apparatus, and the model number 284 are recorded. In the unique ID field UIDF, 2 KB (to be exact, 2048 bytes) of the same information shown in FIG. 17B, (c) is recorded repeatedly eight times. As shown in FIG. 17B, (d), year data 293, month data 294, day data 295, hour data 296, minute data 297, and second data 298 about the time that the information storage medium was used (or recorded into) for the first time are recorded into the unique disk ID287. The data types of the individual pieces of information are written in HEX, BIN, and ASCII. The number of bytes used is either 2 bytes or 4 bytes.

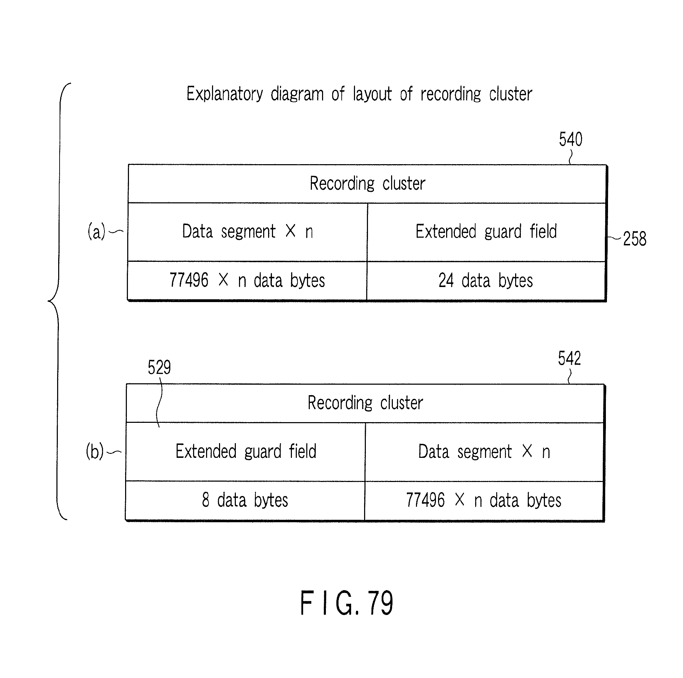

This embodiment is characterized in that each of the size of the area of RDZ lead-in RDZLI and the size of an item of the recording management data RMD is 64 KB, that is, an integral multiple of the user data size in a single ECC block (point (C5) in FIGS. 126A and 126B). In the case of the recordable information storage medium, after a part of the data in one ECC block are changed, the changed data in the ECC block cannot be rewritten on the information storage medium. Therefore, particularly in the case of the recordable information storage medium, the data is recorded in units of a recording cluster (b) composed of an integral multiple of a data segment including one ECC block as shown in FIG. 79. Thus, if the size of the area of RDZ lead-in RDZLI and the size of one item of the recording management data RMD differ from the user data size in the ECC block, a padding area or a stuffing area to match with the recording cluster unit is needed, which practically lowers the recording efficiency. In the embodiment, the size of the area of RDZ lead-in RDZLi and the size of one item of the recording management data RMD are set to an integral multiple of 64 KB, thereby preventing the recording density from decreasing.

The corresponding RMZ last recording management data RMD recording area 271 in FIG. 17A, (b) will be explained. As described earlier, there is a method of recording intermediate data during the interruption of recording in the lead-in area as described in registration number 2621459 as the prior art. In this case, each time recording is interrupted or each time additional recording is done, intermediate data (in the embodiment, recording management data RMD) must be additionally recorded one after another. Therefore, if recording is interrupted frequently or if additional recording is done frequently, a problem arises: the area soon gets full and therefore, additional recording cannot be done. To solve this problem, the present invention is characterized in that an RMD duplication zone RDZ is set as an area in which the updated recording management data RMD can be recorded only when special conditions are fulfilled and the recording management data RMD thinned out under special conditions are recorded. In this way, the frequency of additional recording of recording management data RMD into the RMD duplication zone RDZ is lowered, which prevents the RMD duplication zone RDZ from getting full and increases the number of additional recordings into the recordable information storage medium remarkably.

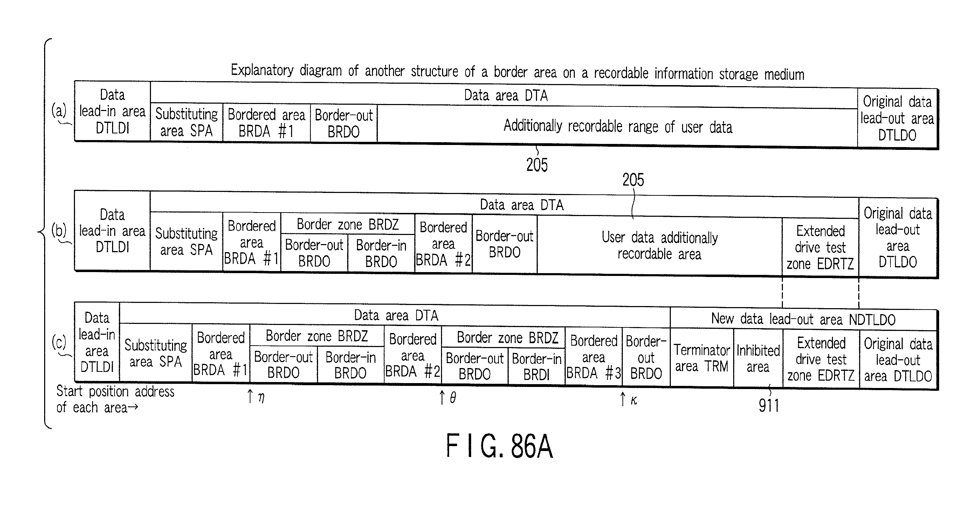

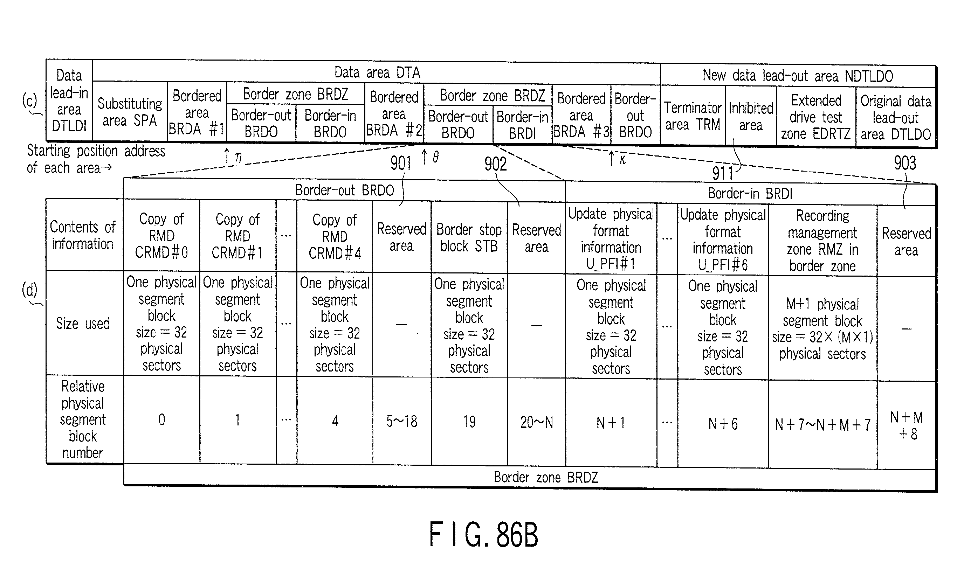

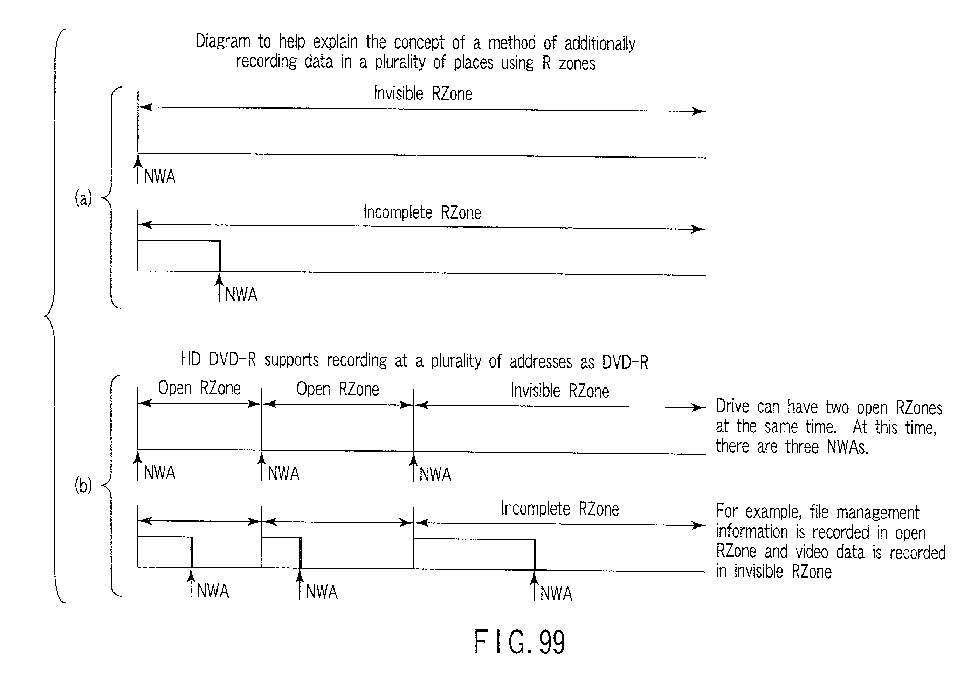

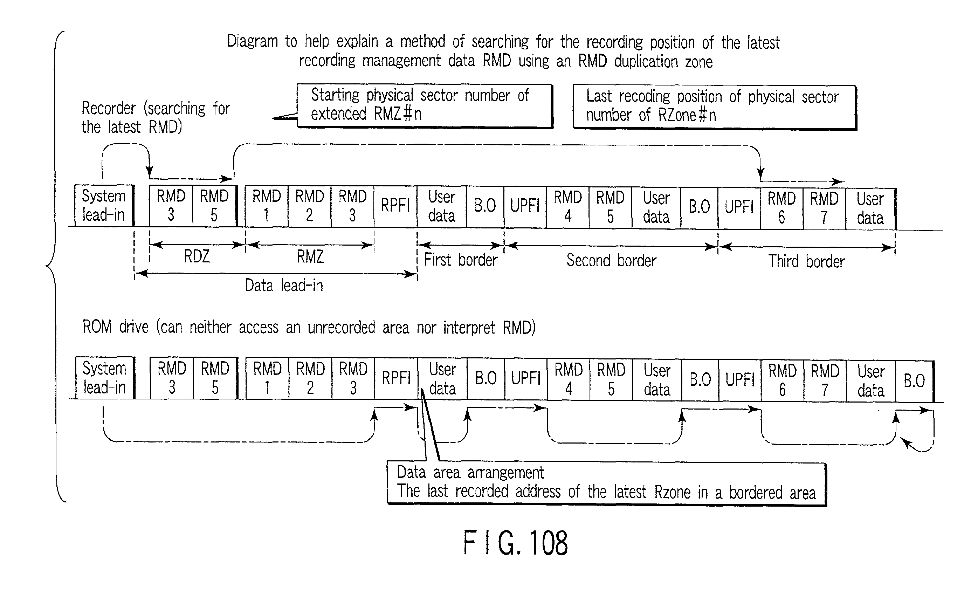

In parallel with this, recording management data RMD updated every additional recording is recorded additionally into the recording management zone RMZ in the border-in BRDI of FIGS. 86A and 86B (or into the data lead-in area DTLI in the first bordered area BRDA#1 as shown in FIG. 17A, (a)) or into the recording management zone RMZ using an R zone shown in FIG. 99. Then, when a new recording management zone RMZ is created, such as when the next bordered area BRDA is created (or new border-in BRDI is set) or when a new recording management zone RMZ is created in the R zone, the last recording management data RMD (or the latest one immediately before a new recording management zone RMZ is formed) is recorded in (the corresponding RMZ last recording management data RMD recording area 271 in) the RMD duplication zone RDZ (point (C4) in FIGS. 126A and 126B). As a result, the number of additional recordings into the recordable information storage medium increases remarkably. Use of this area makes it easier to retrieve the position of the latest RMD. A method of retrieving the position of the latest RMD using the area will be explained later using FIG. 108.

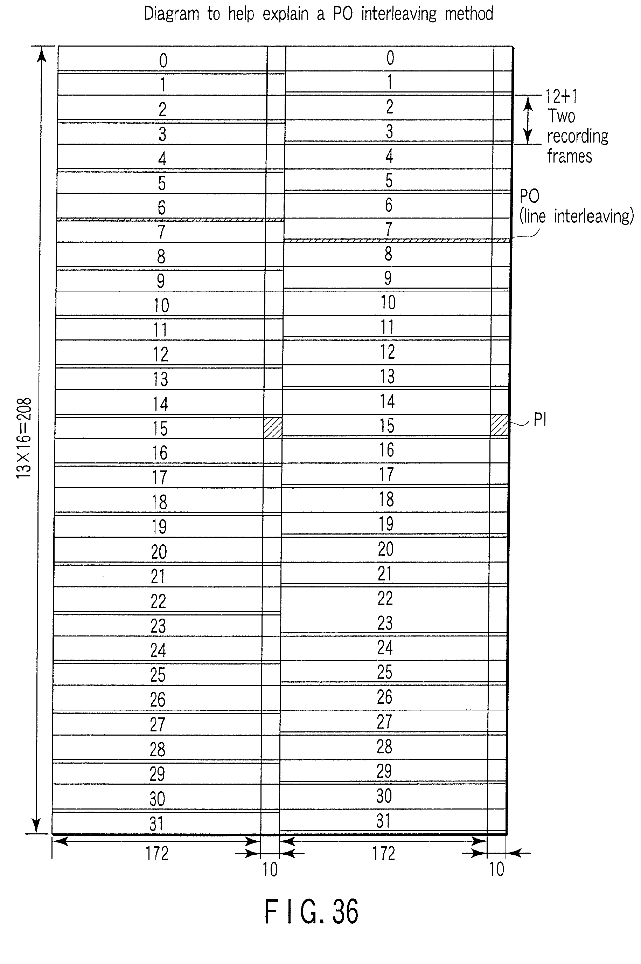

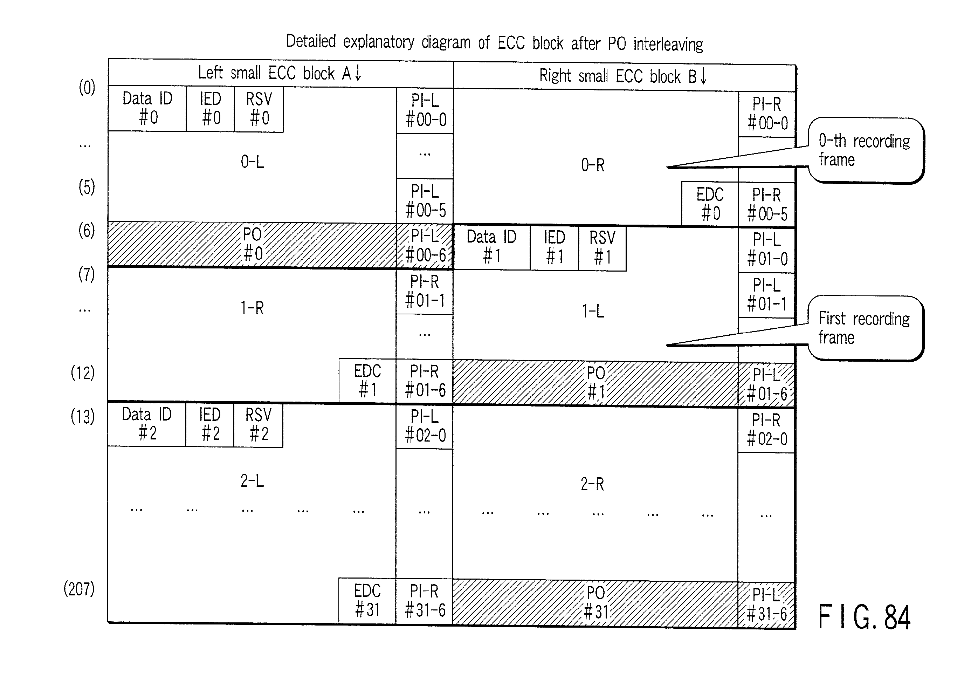

FIGS. 85A and 85B shows a data structure of the recording management data RMD shown in FIG. 17A, FIG. 17B. The contents of FIG. 85A, (a) and (b) are the same as those of FIG. 17A, (a) and (b). As described above, in this embodiment, since the border-in BRDI for the first bordered area BRDA#1 is partly shared with the data lead-in DTLDI, recording management data RMD#1 to RMD#3 corresponding to the first bordered area are recorded in the recording management zone RMZ in the data lead-in area DTLDI. When no data is recorded in the data area DTA, the recording management zone RMZ is a reserved area 273, which is an unrecorded state. Each time data is additionally recorded into the data area DTA, updated recording management data RMD is recorded in the beginning place of the reserved area 273. Recording management data RMD corresponding to the first bordered area in the recording management zone RMZ is additionally recorded in sequence. The size of recording management data RMD additionally recorded each time in the recording management zone RMZ is set to 64 Kbytes (point (C5) in FIGS. 126A and 126B). As shown in FIG. 36 or FIG. 84, in the embodiment, to create one ECC block using 64 KB of data, the data size of recording management data RMD is made equal to one ECC block size, thereby simplifying the additional recording process.

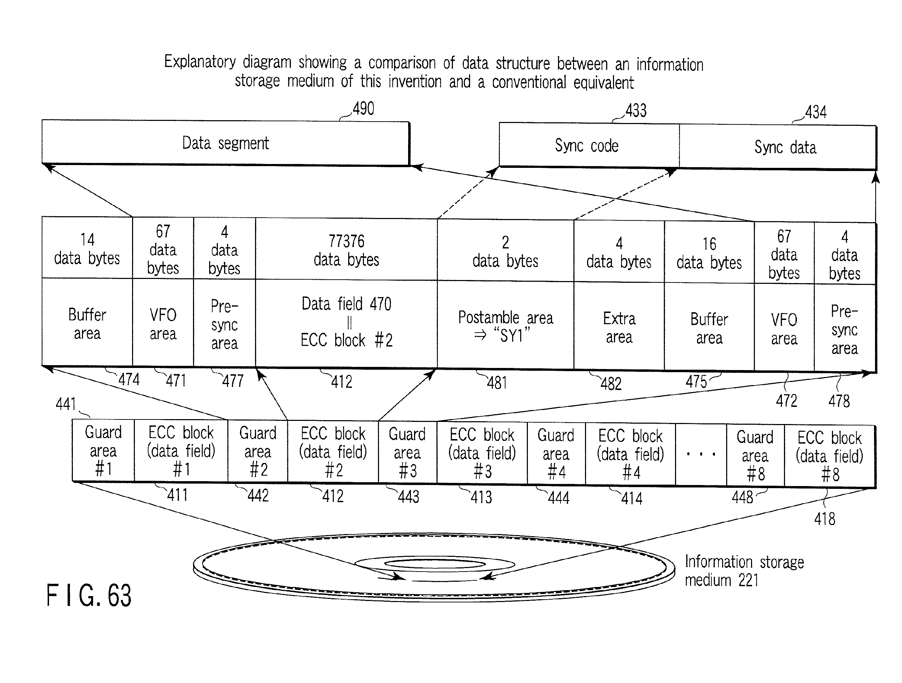

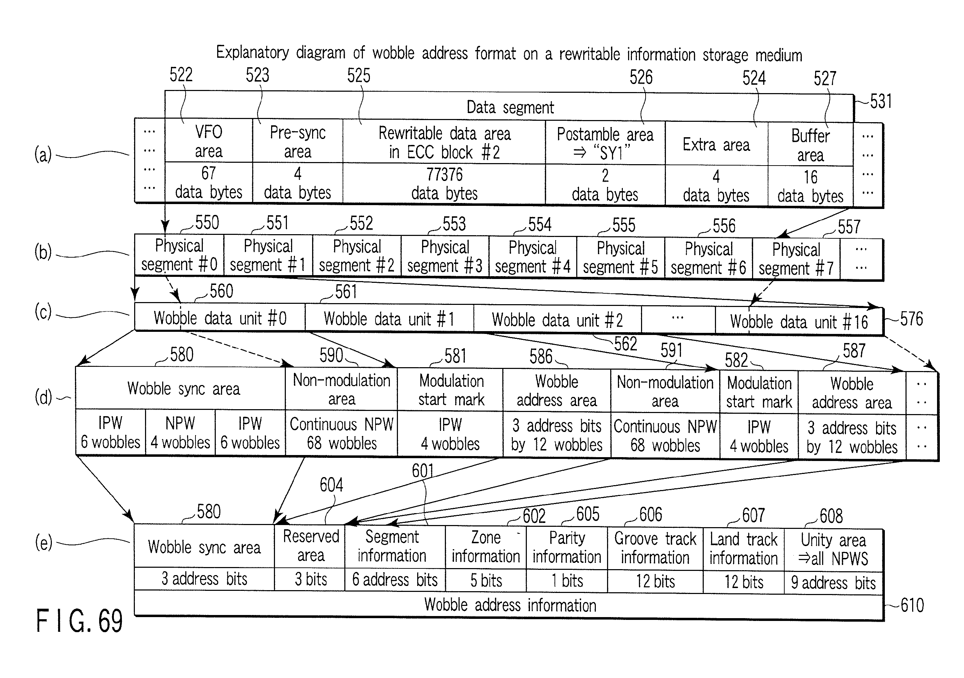

As shown in FIG. 63, 69, and 80, in this embodiment, part of the guard areas 442, 443 are added in front of and behind one ECC block data 412, thereby constructing a data segment 490. Extended guard fields 258, 259 are added to one or more (an n number of) data segments, thereby constructing recording clusters 540, 542, which are additional recording units or rewriting units. When recording management data RMD is recorded, recording management data RMD is additionally recorded in sequence as recording clusters 540, 542 including only one data segment (one ECC block) in the recording management zone RMZ. As shown in FIG. 69, the length of a place in which one data segment 531 is recorded coincides with the length of one physical segment block composed of seven physical segments 550 to 556.

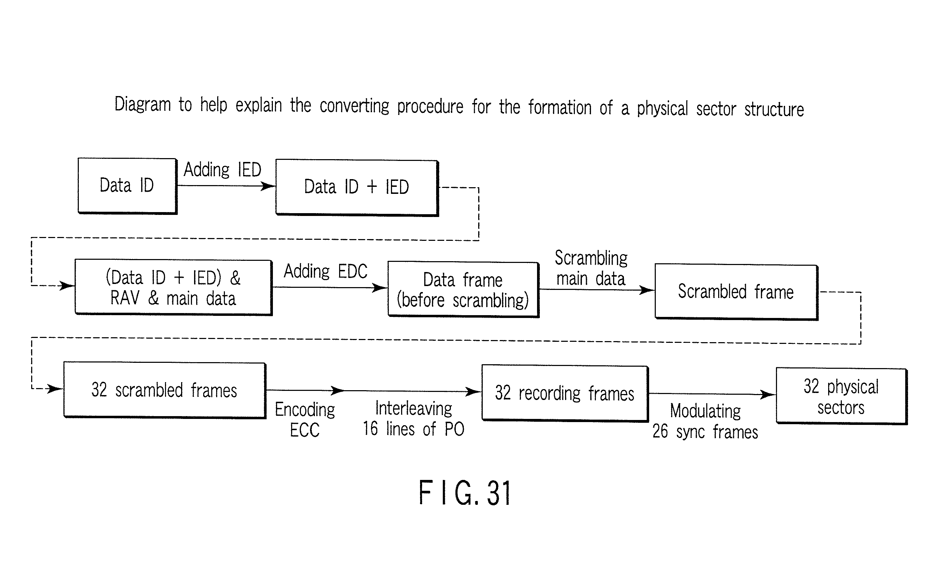

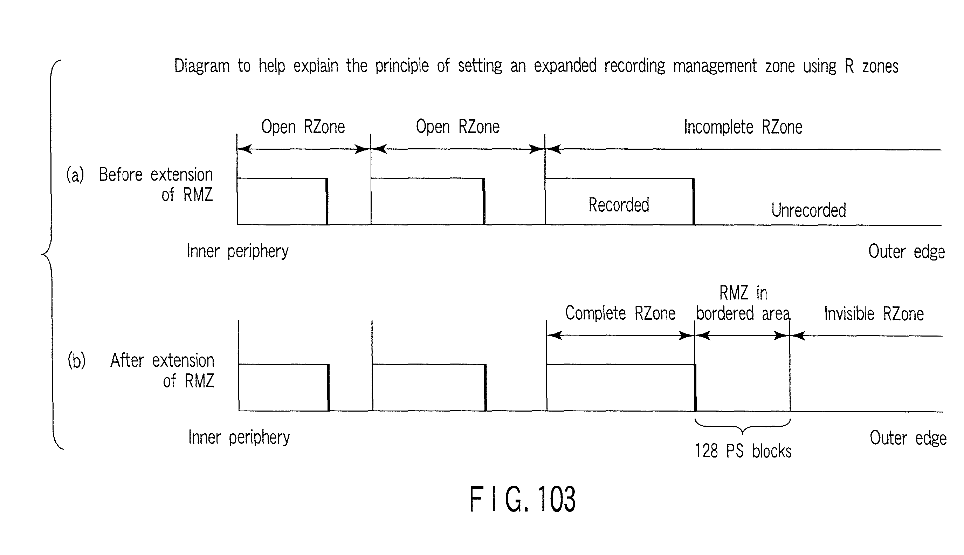

FIG. 85B, (c) shows a data structure of recording management data RMD#1. In FIG. 85B, (c), the data structure of recording management data RMD#1 in the data lead-in area DTLDI is shown. In addition, recording management data RMD#A, RMD#B (FIG. 17A, (b)) recorded in the RMD duplication zone RDZ, (extended) recording management data RMD (FIG. 86B, (d)) recorded in border-in BRDI explained later, (extended) recording management data RMD (FIG. 103) recorded in the R zone, and RMD copy CRMD (FIG. 86B, (d)) recorded in the border-out BRDO also have the same structure. As shown in FIG. 85B, (c), an item of recording management data RMD is made up of a reserved area and RMD field 0 to RMD field 21. As explained later using FIG. 31, one ECC block composed of 64 KB of user data contains 32 physical sectors. In one physical sector, 2 KB (to be exact, 2048 bytes) of user data are recorded. According to the user data size recorded in one physical sector, the individual RMD fields are divided in units of 2048 bytes and are assigned relative physical sector numbers. RMD fields are recorded on the recordable information storage medium in the order of the relative physical sector numbers.

The outline of data content recorded in each RMD field is as follows:

- RMD field 0 - Information on the disk state and data area allocation (information on the location of various data in the data area)
- RMD field 1 - Information on the test zone used and information on recommended recorded recording waveforms
- RMD field 2 - Area available to the user
- RMD field 3 - Information on the starting position of the border area and the position of extended RMZ
- RMD fields 4 to 21 - Information on the positions of R zones

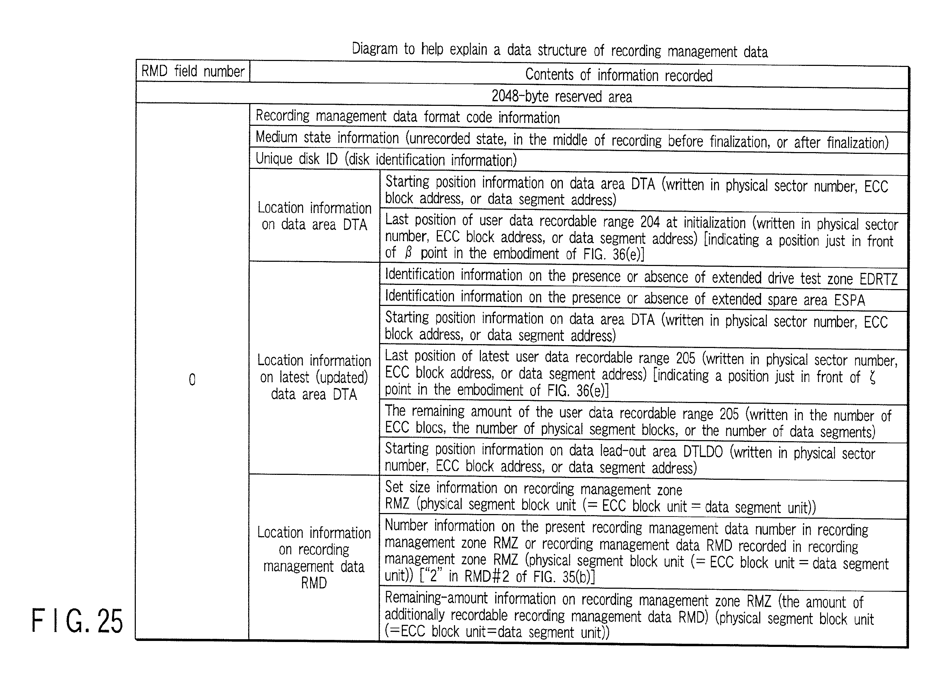

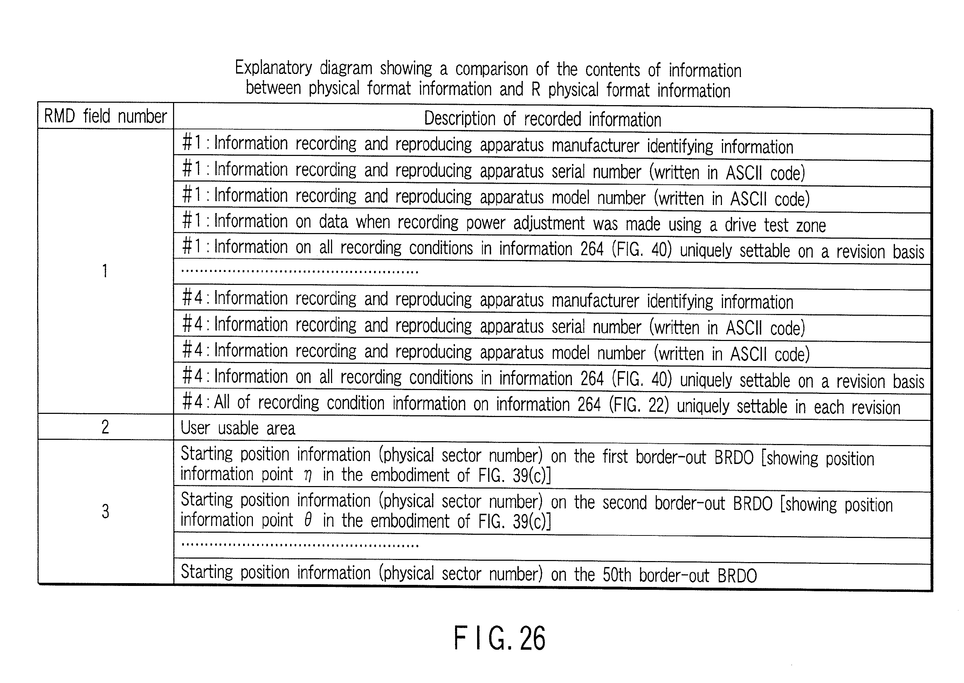

The concrete contents of recording management data RMD will be explained later using FIGS. 25 to 30. The contents of information in the R physical information zone RIA shown in FIG. 16, (c) will be explained in detail later using FIGS. 22A to 24.

As shown in FIG. 16, (a) to (c), this embodiment is characterized in that the system lead-in area SYLDI is provided opposite the data area, with the data lead-in area between them, in each of a reproduce-only, a recordable, and a rewritable information storage medium (point (B4)) in FIG. 125) and further in that the burst cutting area BCA is provided opposite the data lead-in area DTLDI, with the system lead-in area SYLDI between them as shown in FIG. 9. When an information storage medium is inserted into the information reproducing apparatus or information recording and reproducing apparatus, the information reproducing apparatus or information recording and reproducing apparatus carries out processes in this order:

→ (1) Reproducing the information in the burst cutting area BCA
→ (2) Reproducing the information in the control data zone CDZ of the system lead-in area SYLDI
→ (3) Reproducing the information in the data lead-in area DTLDI (in the case of a recordable or a rewritable information storage medium)
→ (4) Readjusting (optimizing) the reproducing circuit constant in the reference code recording zone RCZ
→ (5) Reproducing the information recorded in the data area DTA or recording new information

As shown in FIG. 16, since pieces of information are arranged from the inner edge in the order of the above processes, unnecessary access to the inner part is not needed and the data area DTA can be reached with a decreased number of accesses, which produces the effect of making earlier the starting time of the reproduction of the information recorded in the data area DTA or the recording of new information. Since the slice level detecting method is used to reproduce the signal in the system lead-in area SYLDI (point <B> in FIG. 125) and the PRML method is used to reproduce the signal in the data lead-in area DTLDI and the data area DTA (point <A> in FIG. 125), if the data lead-in area DTLDI is arranged next to the data area DTA, when the data is reproduced sequentially from the inner edge, the slice level detecting circuit is switched to the PRML detecting circuit only once between the system lead-in area SYLDI and the data lead-in area DTLDI, which enables the signal to be reproduced continuously and stably. Therefore, the number of times the reproducing circuits are switched according to the reproducing procedure is smaller, which simplifies processing control and therefore makes the reproduction starting time in the data area earlier.

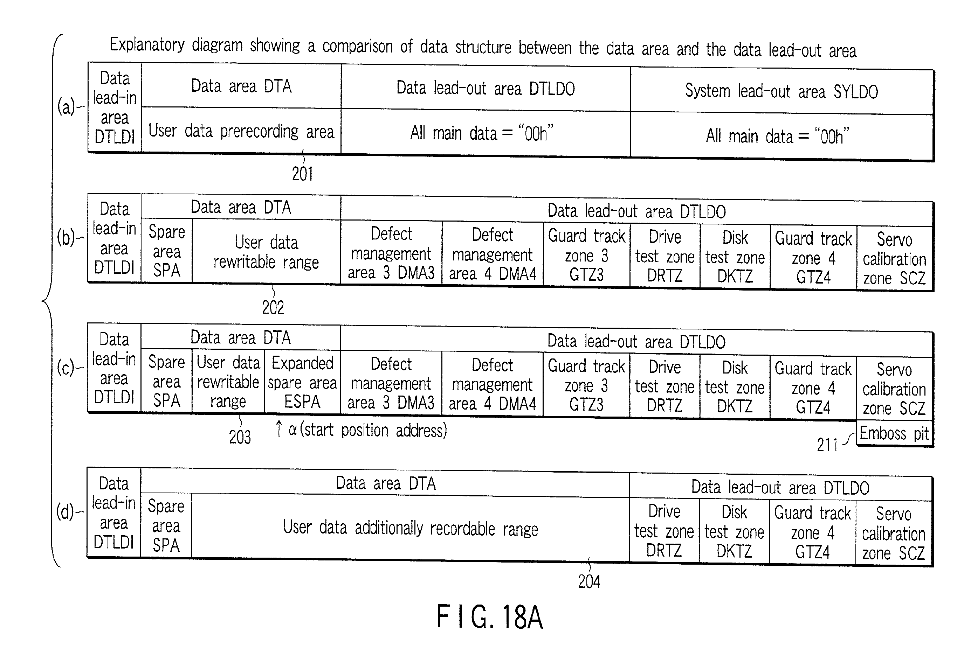

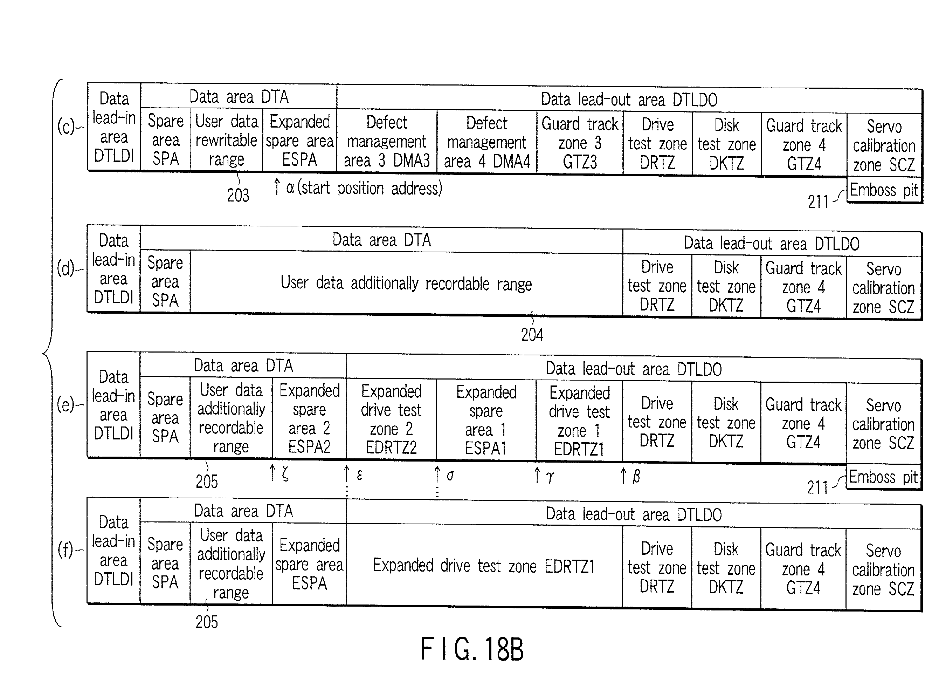

FIGS. 18A and 18B show a comparison of a data structure of the data area DTA and data lead-out area DTLDO between the various types of information storage mediums. FIG. 18A, (a) shows a data structure of a reproduce-only information storage medium. FIGS. 18A, (b) and (c) show a data structure of a rewritable information storage medium. FIGS. 18(d) to 18(f) show a data structure of a recordable information storage medium. FIGS. 18(b) and 18(d) show a data structure in the initial state (before recording). FIGS. 18(c), 18(e), and 18(f) show a data structure in a state where recording (additional recording or rewriting) has progressed to some extent.

As shown in FIG. 18A, (a), in a reproduce-only information storage medium, the data recorded in the data lead-out area DTLDO and system lead-out area SYLDO has a data frame structure (which will be described later) as in the first and second buffer zones BFZ1, BFZ2 of FIG. 16. All of the main data there are set to "00h." In a reproduce-only information storage medium, all of the data area DTA can be used as a user data prerecording area 201. As described later, in each embodiment of a recordable and a rewritable information storage medium, user data rewritable/additionally recordable ranges 202 to 205 are made narrower than the data area DTA.

In a recordable information storage medium or a rewritable information storage medium, a spare area SPA is provided in the innermost part of the data area DTA. If a defective part occurs in the data area DTA, a replacing process is carried out using the spare area SPA. In the case of a rewritable information storage medium, the replacement history information (defect management data) is recorded into the first and second defect management areas DMA1, DMA2 of FIG. 16, (b) and into the third and fourth defect management areas DMA3, DMA4 of FIGS. 18(b) and 18(c). The defect management data recorded in the third and fourth defect management areas DMA3, DMA4 of FIGS. 18(b) and 18(c) is the same as that recorded in the first and second defect management areas DMA1, DMA2 of FIG. 16, (b). In the case of a recordable information storage medium, replacement history information (defect management data) when a replacing process is carried out is recorded in the data lead-in area DTLDI of FIG. 16, (c) and in copy information C_RMZ about the contents of recording in a recording management zone existing in a border zone explained later. While defect management is not performed on the existing DVD-R disk, there have been strong demands that the reliability of information recorded on a recordable information storage medium should be increased, because an increase in the number of DVD-R disks manufactured has permitted partially defective DVD-R disks to appear on the market. In this embodiment, as shown in FIGS. 18A, (d) to 18B, (f), a spare area SPA is also provided in a recordable information storage medium, which enables defect management by a replacing process. Therefore, even if a recordable information storage medium is partially defective, the medium is subjected to a defect management process, which enables the reliability of the recorded information to be improved.

In a rewritable information storage medium or a recordable information storage medium, if many defects have occurred, the information recording and reproducing apparatus on the user side makes a determination and automatically sets extended spare areas ESPA, ESPA1, ESPA2 in the state immediately after the user purchased the medium as shown in FIGS. 18A, (b) and 18B, (d) to expand the spare place. In this way, the extended spare areas ESPA, ESPA1, ESPA2 are made settable, which makes it possible to sell mediums with many defects due to manufacturing conditions. As a result, the manufacturing yield of the medium increases, which enables the cost of the medium to be reduced.

As shown in FIGS. 18A, (c), 18B, (e), and 18B, (f), when extended spare areas ESPA, ESPA1, ESPA2 are further provided in the data area DTA, the user date rewriting or additionally recordable ranges 203, 205 decreases. Therefore, the position information must be managed. In a rewritable information storage medium, the information is recorded in the first to fourth defect management areas DMA1 to DMA4 and further in the control data zone CDZ as described later. In the case of a recordable information storage medium, the information is recorded in the recording management zone RMZ existing in each of the data lead-in area DTLDI and the border-out BRDO as described later. As described later, the information is recorded in the recording management data RMD in the recording management zone RMZ. Since the recording management data RMD is additionally recorded in the recording management zone RMZ in a updating manner each time the contents of the management data are updated, the information can be updated and managed with good timing, even if how many times the extended spare areas are set again (the embodiment in FIG. 18B, (e) shows a state where extended spare area 1 EAPA1 is set and where even after the extended spare area 1 EAPA1 is all used up, defects are so many that another spare area has to be set and therefore an extended spare area 2 ESPA2 is further set later).

A third guard track zone GTZ3 shown in FIGS. 18A, (b) and 18A, (c) is provided to separate a fourth defect management area DMA4 and a drive test zone DRTZ from each other. A guard track zone GTZ4 is provided to separate a disk test zone DKTZ and a servo calibration zone SCZ from each other. Like the first and second guard track zones GTZ1, GTZ2, the third and fourth guard track zones GTZ3, GTZ4 are determined to be areas in which recording must be done by forming recording marks. Since the third and fourth guard track zones GTZ3, GTZ4 exist in the data lead-out area DTLDO, a pre-groove area has been formed in these areas in a recordable information storage medium and a groove area and a land area have been formed in these area in a rewritable information storage medium. Since a wobble address has been recorded in the pre-groove area or the groove area and land area as shown in FIGS. 13 to 15, the present position on the information storage medium is determined using the wobble address.

As in FIG. 16, a drive test zone DRTZ is secured as an area for the information recording and reproducing apparatus to do trial writing before recording information onto the information storage medium. After the information recording and reproducing apparatus does trial writing in this area beforehand and calculates the optimum recording condition (write strategy), it can record information in the data area DTA under the optimum recording condition.

As in FIG. 16, a disk text zone DKTZ is an area for the information storage medium manufacturer to conduct a quality test (evaluation).

In a recordable information storage medium, a pre-groove area has been formed in all of the data lead-out area DTLDO excluding the servo calibration zone SCZ. In a rewritable information storage medium, a groove area and a land area have been formed in the same area. This enables recording marks to be recorded (or additionally recorded or rewritten). As shown in FIG. 18A, (c) and 18B, (e), the servo calibration zone SCZ is made up of an emboss pit area 211 in place of the pre-groove area 214 or land area and groove area 213 as in the system lead-in area SYLDI. This area forms a continuous track of emboss pits following the other area of the data lead-out area DTLDO. The track, which is spirally continuous, forms emboss pits along the circumference of the information storage medium through 360 degrees. The area is provided to detect the amount of tilt of the information storage medium using a DPD (Deferential Phase Detecting) method. If the information storage medium inclines, an offset occurs in the track shift sense signal amplitude using the DPD method. It is possible to detect the amount of tilt from the magnitude of the offset and the direction of tilt from the offset direction with high accuracy. Using the principle, an emboss pit which enables DPD detection is formed in the outermost edge of the information storage medium (or the outer edge of the data lead-out area DTLDO) in advance, which enables the tilt to be detected inexpensively with high accuracy without adding a (tilt detecting) special part to the optical head existing in the information recording and reproducing section 141 of FIG. 1. Furthermore, by detecting the amount of tilt at the outer edge, the stabilization of servo can be realized even in the data area DTA (by tilt amount correction).

In this embodiment, the track pitch in the servo calibration area SCZ is caused to match with the other area of the data lead-out area DTLDO, thereby improving the productivity of the information storage medium, which enables the medium to be produced at lower cost as a result of an improvement in the yield. Specifically, in a recordable information storage medium, a pre-groove is formed in the other area of the data lead-out area DTLDO. When a matrix of a recordable information storage medium is manufactured, a pre-groove is made by keeping constant the feed motor speed of the exposure section of the matrix recording apparatus. At this time, the track pitch in the servo calibration area SCZ is caused to match with the other area of the data lead-out area DTLDO, thereby keeping constant the feed motor speed also in the servo calibration area SCZ, which makes pitch irregularities less liable to take place and therefore improves the productivity of the information storage medium.

Another embodiment is a method of causing at least one of the track pitch and the data bit length in the servo calibration area SCZ to match with the track pitch or data bit length in the system lead-in area SYLDI. As described above, the amount of tilt and the direction of tilt in the servo calibration area SCZ have been measured using the DPD method. Using the result in the data area DTA too, the servo has been stabilized in the data area DTZ. A method of estimating the amount of tilt in the data area DTA is to measure the amount of tilt and its direction in the system lead-in area SYLDI in advance by the DPD method and estimate the amount of tilt using the relationship with the result of measurements in the servo calibration area SCZ. When the DPD method is used, the amount of offset of the sense signal amplitude to the tilt of the information storage medium and the direction in which an offset appears change, depending on the track pitch of the emboss pit and the data bit length. Therefore, at least one of the track pitch and the data bit length in the servo calibration area SCZ is caused to match with the track pitch or data bit length in the system lead-in area SYLDI, thereby causing the amount of offset of the sense signal amplitude and the detection characteristic in the direction in which an offset occurs in the servo calibration area SCZ to coincide with those in the system lead-in area SYLDI, which produces the effect of making it easier to correlate them and to estimate the amount of tilt and the direction of tilt in the data area DTA.

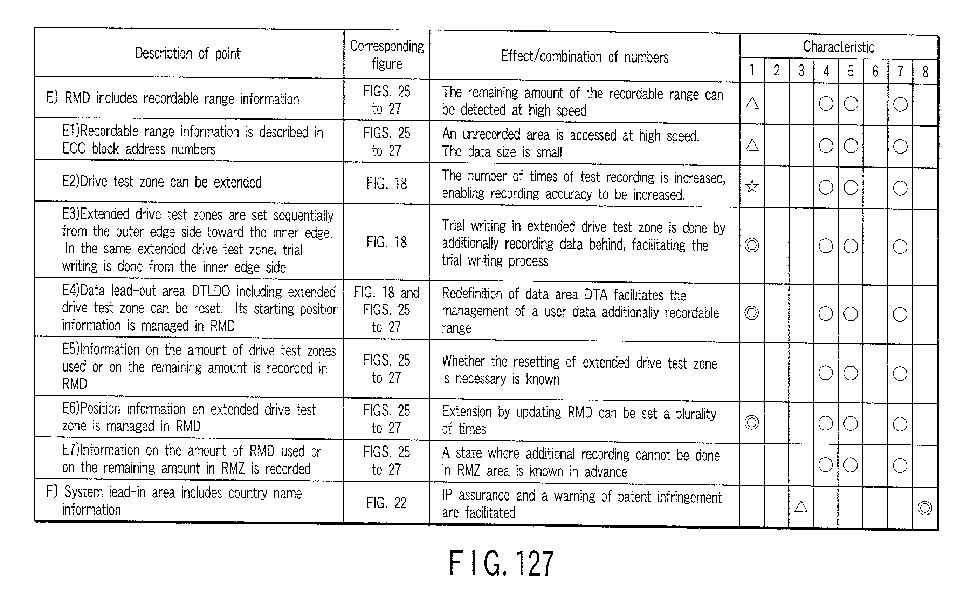

As shown in FIG. 16, (c) and FIG. 18A, (c), in a recordable information storage medium, a drive test zone DRTZ is provided on each of the inner edge side and the outer edge side. The larger the number of trial writing to the drive test zone DRTZ, the more minutely the optimum recording condition can be searched for by assigning detailed parameters. This improves the accuracy of recording in the data area DTA. In a rewritable information storage medium, the drive test zone DRTZ can be reused by overwriting. However, in a recordable information storage medium, when an attempt is made to raise the recording accuracy by increasing the number of trial writing, a problem arises: the drive test zone DRTZ is used up soon. To solve this problem, the embodiment is characterized in that an extended drive test zone EDRTZ can be set in a direction from the outer-edge side toward the inner edge as needed, thereby enabling the expansion of a drive test zone (point (E2) in FIG. 127). In the embodiment, the method of setting an extended drive test zone and the method of doing trial writing in the set extended drive test zone are characterized in that:

(1) Extended drive test zones EDRTZ are set (or framed) collectively one after another from the outer edge side (closer to the data lead-out area DTLDO) toward the inner edge.
As shown in FIG. 18B, (e), extended drive test zone 1 EDRTZ1 is set as a collective area in the place closest to the outer edge in the data area (or the place closest to the data lead-out area DTLDO). After extended drive test zone 1 EDRTZ1 is used up, extended drive test zone 2 EDRTZ2 can be set as a collective area closer to the inner edge than extended drive test zone 1 EDRTZ1.
(2) Trial writing is done from the inner edge side in the extended drive test zone EDRTZ (point (E3) in FIG. 127).
When trial writing is done in the extended drive test zone EDRTZ, it is done along the groove area 214 provided spirally from the inner-edge side toward the outer edge. Present trial writing is performed in an unrecorded place immediately behind the (recorded) place in which the preceding trial writing was done.
The data area is so configured that additional recording is done along the groove area 214 provided spirally from the inner-edge side toward the outer edge. Trial writing in the extended drive test zone is done behind the place where the preceding trial writing was done, making it possible to carry out the process of "checking the place where the preceding trial writing was done" → the process of "doing the present trial writing" serially in that order, which not only facilitates the trial writing process but also makes it easier to manage the places where trial writing was done in the extended drive test zone EDRTZ.

(3) Data lead-out area DTLDO including an extended drive test zone EDRTZ can be set again (point (E4) in FIG. 127)

FIG. 18B, (e) shows an example of setting two extended spare areas ESPA1, ESPA2 and two extended drive test zones EDRTZ1, EDRTZ2 in the data area DTA. In this case, the embodiment is characterized in that the area including the extended drive test zone EDRTZ2 can be set again as a data lead-out area DTLDO as shown in FIG. 18B, (f) (point (E4) in FIG. 127). In parallel with this, the range of the data area DTA is set again in such a manner that the range is made narrower, which makes it easier to manage the user data additionally recordable range 205 in the data area DTA. If resetting is done as shown in FIG. 18B, (f), the setting place of the extended spare area ESPA1 shown in FIG. 18B, (e) is regarded as "already used-up extended spare area" and it is determined that an unrecorded area (additional trial writing allowable area) exists only in the extended spare area ESPA2 in the extended drive test zone EDRTZ. In this case, nondefective information recorded in the extended spare area ESPA1 and used for replacement is moved bodily to an unreplaced area in the extended spare area ESPA2 and the defect management information is rewritten. At this time, the starting position information on the reset data lead-out area DTLDO is recorded in the location information of the latest (updated) data area DTA in RMD field 0 of the recording management data RMD as shown in FIGS. 25 to 30.

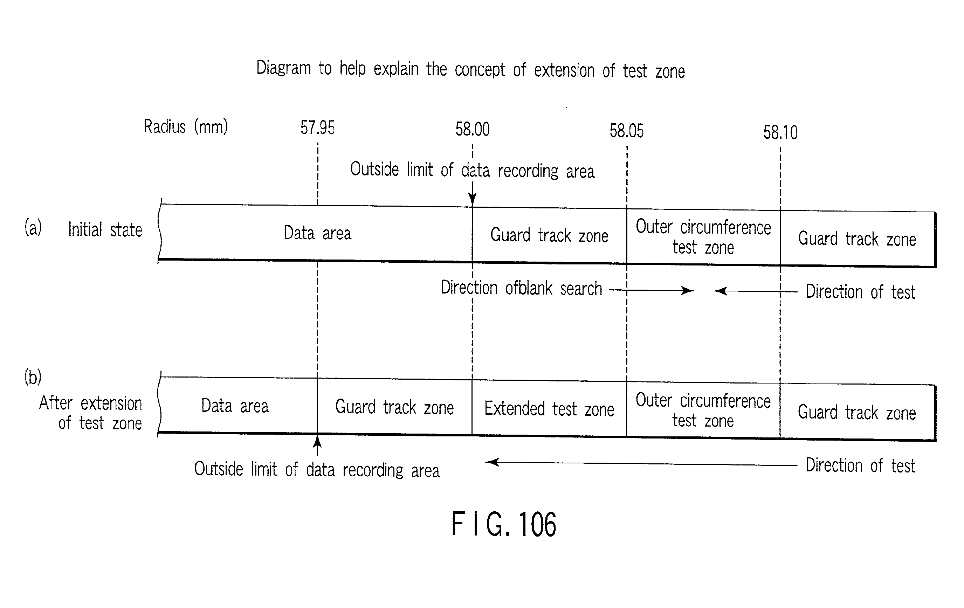

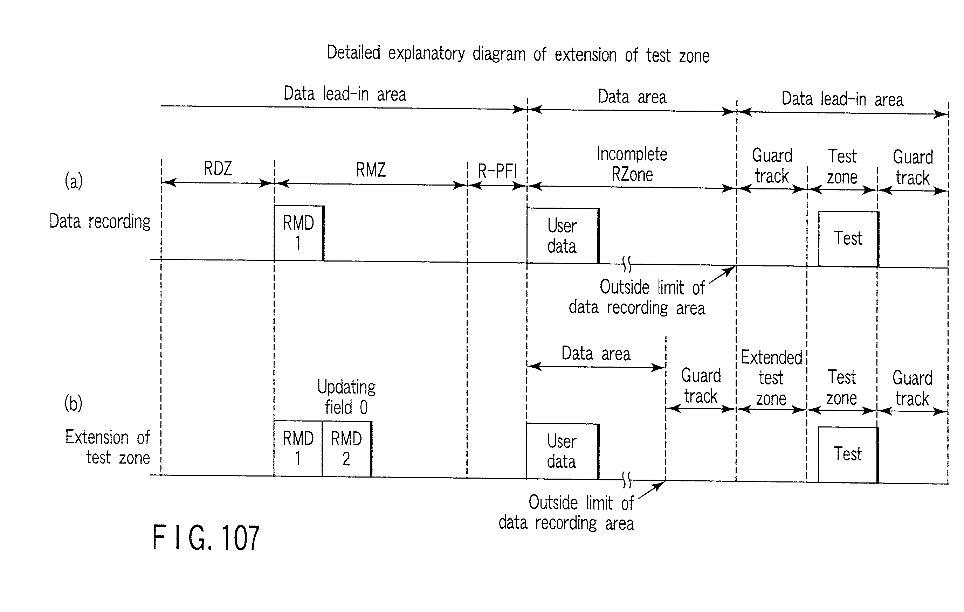

Referring to FIGS. 106 and 107, the extension of a test zone will be explained.

A test zone is an area for optimizing a recording waveform. There are an inner-edge test zone and an outer-edge test zone. As shown in FIG. 106, (a), in the initial state, there are a guard track zone, an outer-edge test zone, and a guard track zone outside a data area. The boundary between the data area and the guard track zone is the outer-edge-side limit of the data recording area. Blank search is made from the inner edge side toward the outer edge and a test is conducted from the outer edge side toward the inner edge. Recording for optimization is done, starting with the outermost part of the test zone. The last address used is stored in RMD. As shown in FIG. 106, (b), the outer-edge test zone can be extended only once. The extended test zone is set to a previous guard track zone. The guard track zone is shifted that much toward the inner edge, making the data area narrower.

As shown in FIG. 107, (a), if the test zone is filled up before the data area is filled up, a guard track is newly set in the peripheral part of the data area as shown in FIG. 107, (b) and the previous guard track is set as an extended test zone. At the same time, the updated recording management data RMD is additionally recorded in the recording management zone RMZ in the data lead-in area DTLDI.

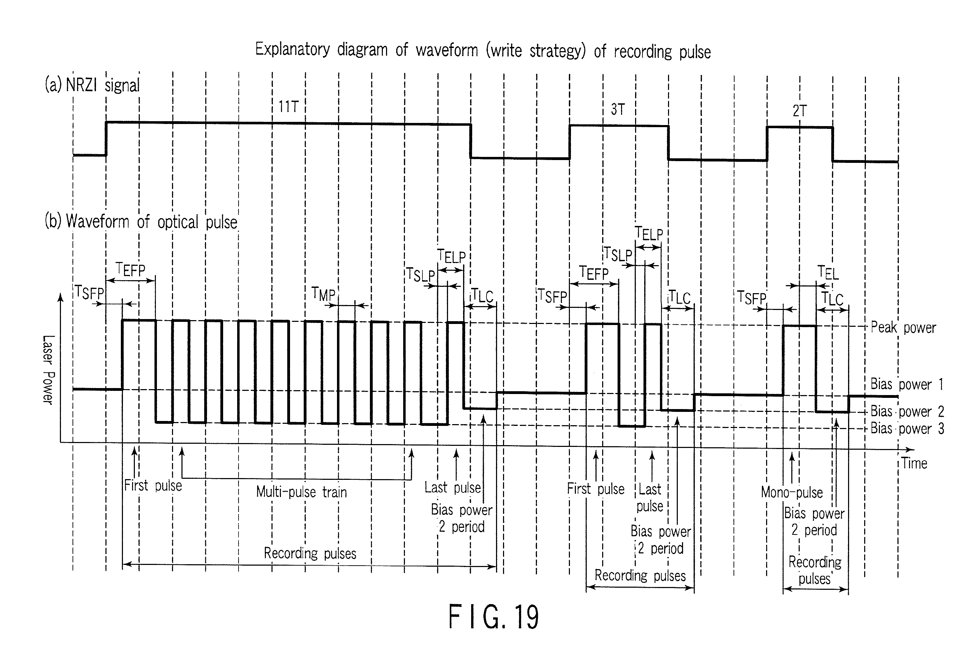

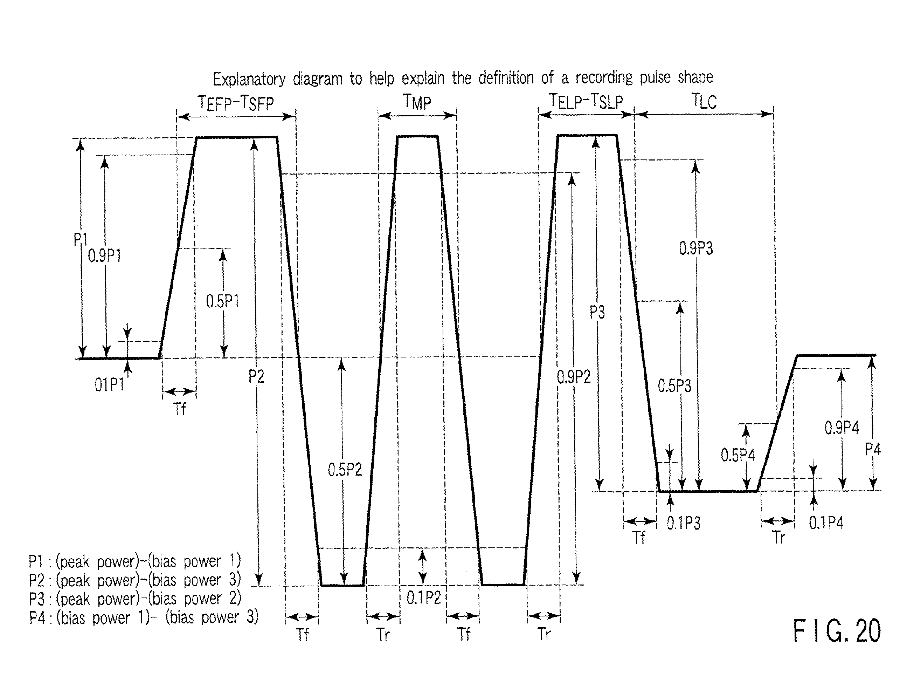

FIG. 19 shows a waveform (write strategy) of recording pulses used for trial writing to the drive test zone. FIG. 20 shows a definition of a recording pulse form.

Marks and spaces are written over a disk by irradiating pulses of peak power, first bias power, second bias power, and third bias power. Marks are written over the disk by irradiating pulses modulated between the peak power and the third bias power. Spaces are written over the disk by irradiating pulses of the first bias power.

SbER, which is means for evaluating random errors, corresponds to a bit error rate caused by random errors.

Before measuring PRSNR and SbER, the coefficient of the equalizer is calculated using a minimum squared error (MSE) algorithm.

Recording pulses are made up of optical pulses as shown in FIG. 19.

A recording pulse for a 2T mark is composed of a mono pulse and a pulse of the second bias power following the mono pulse. A recording pulse for a 3T mark is composed of a first pulse, a last pulse, and a pulse of the second bias power following the last pulse. A recoding pulse for a mark larger than a 3T mark is composed of a first pulse, a multi-pulse train, a last pulse, and a pulse of the second bias power following the last pulse. A T is a cannel clock period.

Recording pulse structure for a 2T mark

$T_{SFP}$ after the rising edge of an NRZI signal, the generation of a mono pulse is started. The generation is completed $1T - T_{ELP}$ before the falling edge of the NRZI signal. The period of the mono pulse is $1T - T_{ELP} + T_{SFP}$. $T_{ELP}$ and $T_{SFP}$ are recorded in the control data zone. The period of the second bias power following the mono pulse is $T_{LC}$. $T_{LC}$ is recorded in the control data zone.

Recording pulse structure for a mark larger than a 2T mark

$T_{SEP}$ after the rising edge of an NRZI signal, the generation of a first pulse is started. $T_{EFP}$ after the falling edge of the NRZI signal, the generation is completed. $T_{EFP}$ and $T_{SEP}$ are recorded in the control data zone. A recording pulse corresponding to 4T to 13T is a multi-pulse train. The multi-pulse train is a repetition of a pulse whose pulse width TMP has a period of T. 2T after the rising edge of the NRZI signal, the generation of a multi-pulse is started. 2T before the falling edge of the NRZI signal, the generation of the last pulse in the multi-pulse train is completed. $T_{MP}$ is recorded in the control data zone.

1T - $T_{SLP}$ before the rising edge of the NRZI signal, the generation of the last pulse is started. 1T - $T_{ELP}$ before the falling edge of the NRZI signal, the generation of the last pulse is completed.

$T_{ELP}$ and $T_{SLP}$ are recorded in the control data zone.

The pulse width of the pulse of the second bias power following the last pulse is $T_{LC}$. $T_{LC}$ is recorded in the control data zone.

$T_{EFP} - T_{SFP}$, $T_{MP}$, $T_{ELP} - T_{SLP}$, and $T_{LC}$ are the maximum periods of a full width and a half width. The maximum periods of the full width and half width of each optical pulse are defined in FIG. 20. The rising period Tr and the falling period Tf are 1.5 ns or less. The difference between the rising period Tr and the falling period Tf is 0.5 ns or less.

$T_{SEP}$, $T_{EFP}$, $T_{SLP}$, $T_{ELP}$, $T_{MP}$, and $T_{LC}$ are recorded in the control data zone in units of (1/32)T. They take the following values:

$T_{SEP}$ is 0.25T or more and 1.50T or less.
$T_{ELP}$ is 0.00T or more and 1.00T or less.
$T_{EFP}$ is 1.00T or more and 1.75T or less.
$T_{SLP}$ is -0.10 or more and 1.00T or less.
$T_{LC}$ is 0.00T or more and 1.00T or less.
$T_{MP}$ is 0.15T or more and 0.75T or less.

The following restrictions are imposed on adaptive control parameters $T_{SFP}$, $T_{ELP}$, and $T_{LC}$:

The difference between the maximum value and minimum value of $T_{SFP}$ is 0.50T or less.
The difference between the maximum value and minimum value of $T_{ELP}$ is 0.50T or less.
The difference between the maximum value and minimum value of $T_{LC}$ is 1.00T or less.

The width of mono pulse 1T - $T_{SFP}$ + $T_{ELP}$ is 0.25T or more and 1.50T or less.

These parameters are controlled with a precision of ±0.2 ns.

If the peak power period of the first pulse and that of the multi-pulse train overlap with each other, a composite peak power period is the sum total of these consecutive peak power periods. If the peak power period of the first pulse and that of the last pulse overlap with each other, a composite peak power period is the sum total of these consecutive peak power periods. If the peak power period of the end pulse in the multi-pulse train and that of the last pulse overlap with each other, a composite peak power period is the sum total of these consecutive peak power periods.

The recording power has the following four levels:
peak power, first bias power, second bias power, and third bias power. These are optical power projected onto the reading surface of a disk and used to record marks and spaces.

The peak power, first bias power, second bias power, and third bias power are recorded in the control data zone. The maximum value of the peak power does not exceed, for example, 10.0 mW. The maximum value of each of the first bias power, second bias power, and third bias power does not exceed, for example, 4.0 mW.

The average peak power of each of the mono pulse, first pulse, and last pulse fulfills the following requirement:

$$|(\text{average peak power}) - (\text{peak power})| \leqq 5\% \text{ of}$$
$$\text{peak power}$$

The average first bias power and average second bias power fulfill the following requirements:

$$|(\text{average first peak power}) - (\text{first bias}$$
$$\text{power})| \leqq 5\% \text{ of first bias power}$$

$$|(\text{average second peak power}) - (\text{second bias}$$
$$\text{power})| \leqq 5\% \text{ of second bias power}$$

The average power of the multi-pulse train is the average power of an instantaneous value of the power in a measuring period.

The measuring period includes all of the multi-pulse train and is a multiple of T. The average power of the multi-pulse train fulfills the following requirement:

```
|(average power of multi-pulse train) - (peak
power + third bias power)/2 | ≦ 5% of (peak power +
second bias power)/2
```

An instantaneous value of power is an instantaneous value of actual power.

The average power is the average value of an instantaneous value of power in a specific power range.

The power range of the average value of power satisfies the following requirements:

```
the average value of peak power: | (actual
power) - (peak power) | ≤ 10% of peak power
```

```
the average value of first bias power: | (actual
power) - (first bias power) | ≦ 10% of first bias
power
```

```
the average value of second bias power: | (actual
power) - (second bias power) | ≦ 10% of second bias
power
```

```
the average value of third bias power: | (actual
power) - (third bias power) | ≦ 10% of third bias
power
```

The period required to measure the average power does not exceed the pulse width period of each pulse.

Instantaneous-value power satisfies the following requirements:

```
| (instantaneous-value peak power) - (peak
power) | ≦ 10% of peak power
```

```
| (instantaneous-value first bias power) - (first
bias power) | ≦ 10% of first bias power
```

```
(instantaneous-value second bias power) - (second
bias power) | ≦ 10% of second bias power
```

$$| \text{(instantaneous-value third bias power)} - \text{(third}$$
$$\text{bias power)} | \leq 10\% \text{ of third bias power}$$

To control the mark edge position accurately, the timing of the first pulse, last pulse, and mono pulse is modulated.

The mark lengths of NRZI are classified into M2, M3, and M4. The mark lengths M2, M3, and M4 indicate 2T, 3T, and 3T or more, respectively.

The space lengths immediately in front of a mark are classified into LS2, LS3, and LS4. The space lengths LS2, LS3, and LS4 indicate 2T, 3T, and 3T or more, respectively.

The space lengths immediately behind a mark are classified into TS2, TS3, and TS4. The space lengths TS2, TS3, and TS4 indicate 2T, 3T, and 3T or more, respectively.

$T_{LC}$ is modulated as a function of the category of the mark length of NRZI. Therefore, $T_{LC}$ has the following three values:

$$T_{LC}(M2), \ T_{LC}(M3), \ T_{LC}(M4)$$

$T_{LC}(M)$ represents the value of $T_{LC}$ when the category of the mark length of the NRZI signal is M.

The values of these three $T_{LC}$ are recorded in the control data zone.

$T_{SEP}$ is modulated as a function of the category of the mark length of NRZI and the category of the space length of NRZI immediately in front of the mark. Therefore, $T_{SFP}$ has the following nine values:

$T_{SFP}(M2, LS2), T_{SFP}(M3, LS2), T_{SFP}(M4, LS2)$
$T_{SFP}(M2, LS3), T_{SFP}(M3, LS3), T_{SFP}(M4, LS3)$
$T_{SFP}(M2, LS4), T_{SFP}(M3, LS4), T_{SFP}(M4, LS4)$

$T_{SFP}(M, LS)$ indicates the value when the category of the mark length of the NRZI signal is M and the category of the space length of NRZI immediately in front of the mark is LS. These nine values of $T_{SFP}$ are recorded in the control data zone.

$T_{ELP}$ is modulated as a function of the category of the mark length of NRZI and the category of the space length of NRZI immediately behind the mark. Therefore, $T_{ELP}$ has the following nine values:

$T_{ELP}(M2, TS2), T_{ELP}(M3, TS2), T_{ELP}(M4, TS2)$
$T_{ELP}(M2, TS3), T_{ELP}(M3, TS3), T_{ELP}(M4, TS3)$
$T_{ELP}(M2, TS4), T_{ELP}(M3, TS4), T_{ELP}(M4, TS4)$

$T_{ELP}(M, TS)$ indicates the value when the category of the mark length of the NRZI signal is M and the category of the space length of NRZI immediately in front of the mark is TS. These nine values of $T_{ELP}$ are recorded in the control data zone.

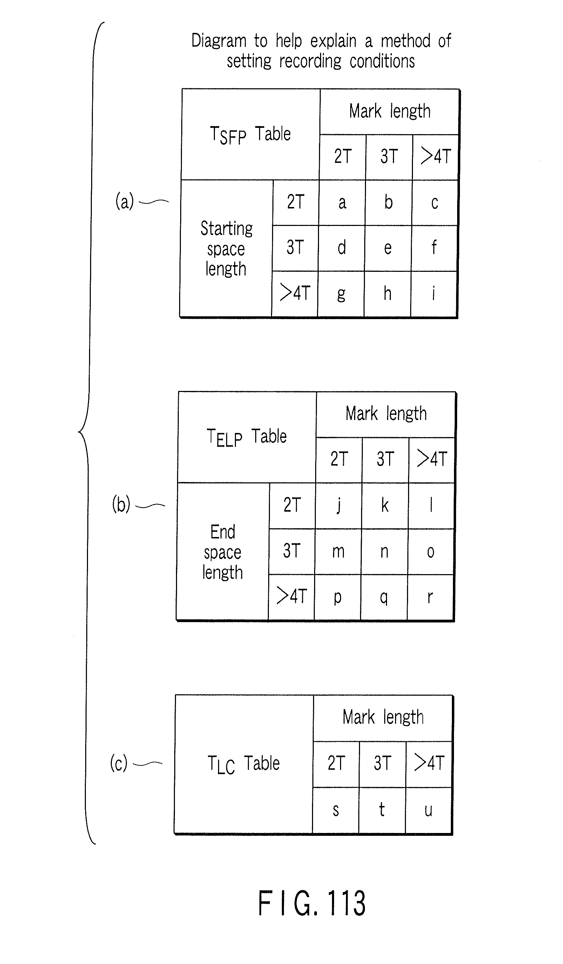

The value of $T_{SFP}$ is expressed as a function of the mark length and the preceding space length using a to i ((a) in FIG. 113). The value of $T_{ELP}$ is expressed as a function of the mark length and the succeeding space length using j to r ((b) in FIG. 113). The value of $T_{LC}$ is expressed as a function of the mark length using s to u ((c) in FIG. 113).

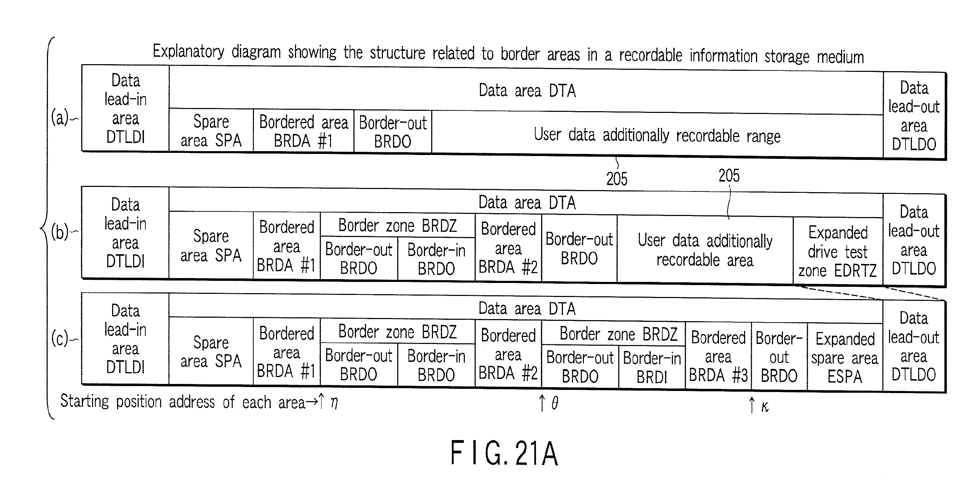

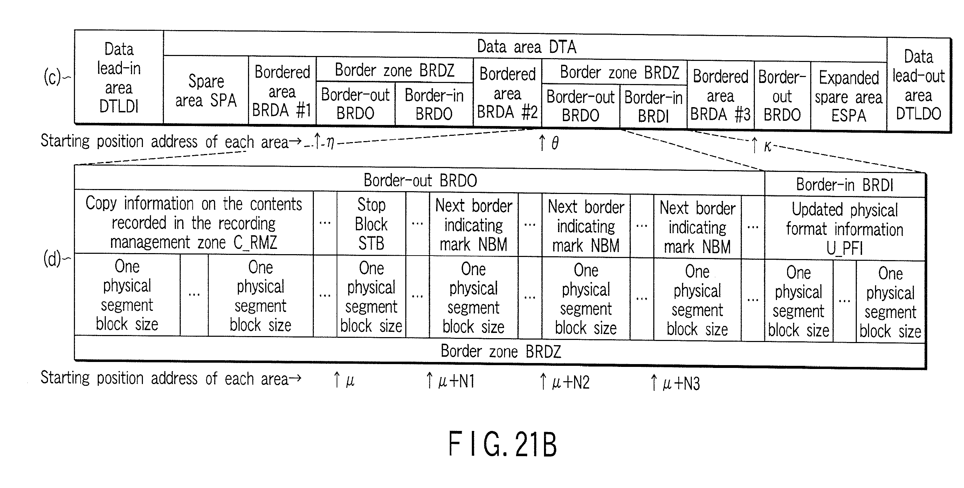

Referring to FIGS. 21A and 21B, the structure of a border area in a recordable information storage medium will be explained. When a border area is set in a recordable information storage medium for the first time, bordered area BRDA#1 is set on the inner-edge side (on the side closest to the data lead-in area DTLDI) and then border-out BRDO is formed behind bordered area BRDA#1.

When the setting of another bordered area BRDA#2 is wanted, a subsequent border-in BRDI (#1) is formed behind the preceding border-out BRDO (#1) as shown in FIG. 21A, (b) and then a subsequent bordered area BRDA#2 is set. When the closing of the next bordered area BRDA#2 is wanted, border-out BRDO is formed immediately behind bordered area BRDA#2. In this embodiment, a state where a subsequent border-in BRDI (#1) is formed behind the preceding border-out BRDO (#1) to form a set is referred to as a border zone BRDZ. The border zone BRDZ is set to prevent the optical head from overrunning between the bordered areas BRDA when reproduction is performed on the information reproducing apparatus (based on the DPD detecting method). Therefore, when a recordable information storage medium in which information has been recorded is reproduced on a reproduce-only apparatus, the reproduction is on the assumption that a border closing process is carried out. In the border closing process, border-out BRDO and border-in BRDI have been recorded and border-out BRDO is recorded behind the last bordered area BRDA. The first bordered area BRDA#1 is composed of more than 4080 physical segment blocks. The first bordered area BRDA#1 has to have a width of 1.0 mm or more along the radius of the recordable information storage medium. FIG. 21A, (b) shows an example of setting an extended drive test zone EDRTZ in the data area DTA.

FIG. 21A, (c) shows a state after the recordable information storage medium is finalized. FIG. 21A, (c) shows an example of incorporating an extended drive test zone EDRTZ into the data lead-out area DTLDO and setting an extended spare area ESPA. In this case, the additionally recordable range 205 of the user data is filled with the last border-out BRDO so that there may be no space left in the range.

FIG. 21B, (d) shows a detailed data structure of the border zone BRDZ. Each piece of information is recorded in units of one physical segment block. At the beginning of the border-out BRDO, copy information C_RMZ on the contents recorded in the recording management zone is recorded and a border stop block STB indicating border-out BRDO is recorded. If there is another border-in BRDI, a first Next Border Marker NBM indicating that there is a border area following "N1-th" physical segment block from the physical segment block in which the border stop block STB has been recorded, a second Next Border Marker NBM indicating that there is a border area following the "N2-th" physical segment block, and a third Next Boarder Marker NBM indicating there is a border area following the "N3-th" physical segment block are recorded discretely in a total of three places in units of one physical segment block. In the next border-in BRDI, Updated Physical Format Information U_PFI is recorded.

In an existing DVD-R or DVD-RW disk, if the next border area is absent (in the last border-out BRDO), the place in which "Next Border marker NBM" is to be recorded (or the place of one physical segment block size) of FIG. 21B, (d) is kept as a "completely unrecorded place." If border closing is done in this state, the recordable information storage medium (existing DVD-R or DVD-RW disk) can be reproduced on a conventional DVD-ROM drive or a conventional DVD player. With a conventional DVD-ROM drive or a conventional DVD player, using a recording mark recorded on a recordable information storage medium (or existing DVD-R or DVD-RW disk), track shift detecting is done by a DPD (Differential Phase Detecting) method. In the "completely unrecorded place," however, no recording mark exists over one physical segment block size. Therefore, since track shift detecting cannot be done using the DPD (Differential Phase Detecting) method, track servo cannot be applied stably. As measures to cope with the problem with the existing DVD-R or DVD-RW disk, this embodiment uses a new method as follows:

(1) If there is no next border area, specific-pattern data is recorded in the "place where Next Border Marker NBM is to be recorded" in advance.
(2) If there is a next border area, an overwriting process with a specific recording pattern is carried out partially and discretely in the place of the "Next Border Marker NBM" in which the specific-pattern data has been recorded. This can be used as identifying information indicating that "there is a next border area."
As described above, setting a Next Border Marker by overwriting produces the following effect: even if a next border does not come as shown in item (1), a recording mark with a specific pattern can be formed in the "place where a Next Border Marker NBM is to be recorded, which enables track servo to be applied stably even when track shift detecting is done by the DPD method on the reproduce-only information reproducing apparatus after border closing. In the recordable information storage medium, if a new recording mark is written even partially over the part where a recording mark has been formed, the stabilization of the PLL circuit of FIG. 1 can be impaired in the information recording and reproducing apparatus or information reproducing apparatus. To overcome this fear, this embodiment further uses new methods as follows:
(3) A method of changing the overwriting situation according to the place in the same data segment when writing data over the position of the "Next Border Marker NBM" of one physical segment block size.
(4) Writing data partially over the sync data 432 and preventing overwriting on the sync code 431.
(5) Writing data over the places excluding data ID and IED.

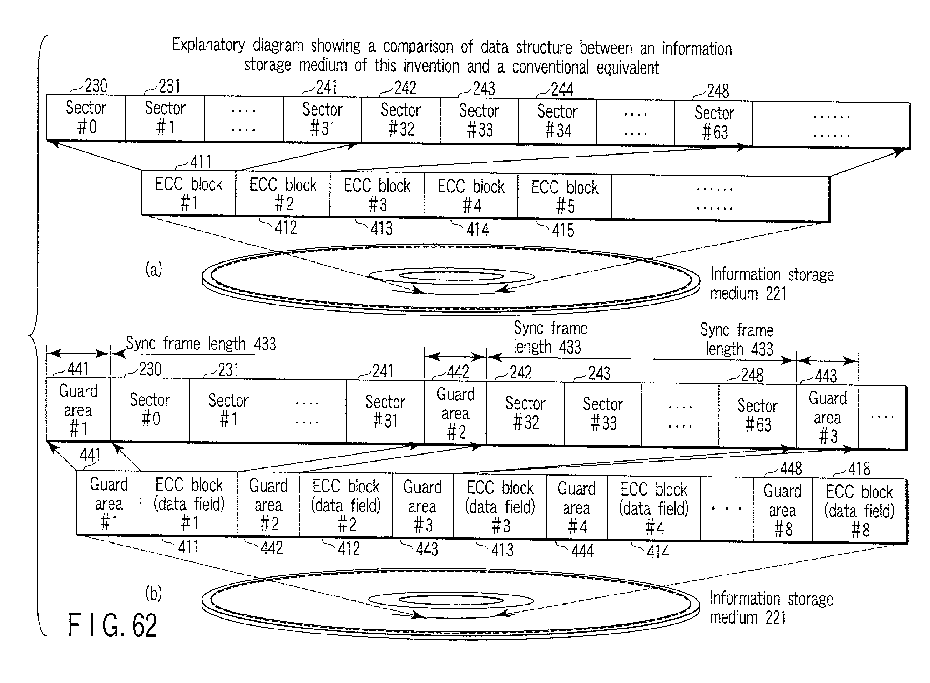

As described later in detail using FIGS. 62 and 63, data fields 411 to 418 for recording user data and guard areas 441 to 448 are recorded alternately on the information storage medium. A combination of data fields 411 to 418 and guard areas 441 to 448 is called a data segment 490. One data segment length coincides with one physical segment block length. The PLL circuit of FIG. 1 pulls in PLL more easily in the VFO areas 471, 472 of FIG. 63. Therefore, even if PLL goes out of tune just in front of the VFO areas 471, 472, PLL is pulled in easily using the VFO areas 471, 472, which alleviates an adverse effect on the entire system of the information recording and reproducing apparatus or information reproducing apparatus. Using this situation, the overwriting situation is changed according to the place in the data segment and the amount of specific patterns written over the back of the same data segment closer to the VFO areas 471, 472, which makes it easier to determine the "Next Border Marker" and prevents the accuracy of the signal PLL from deteriorating in reproduction.

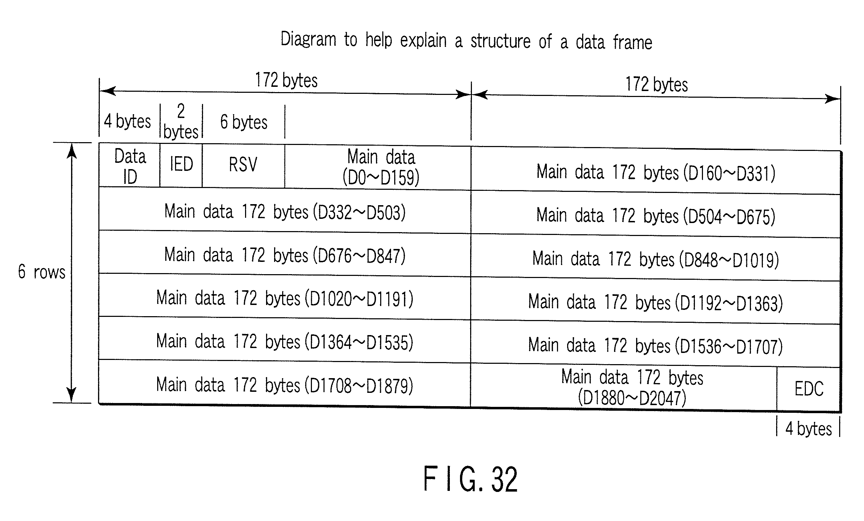

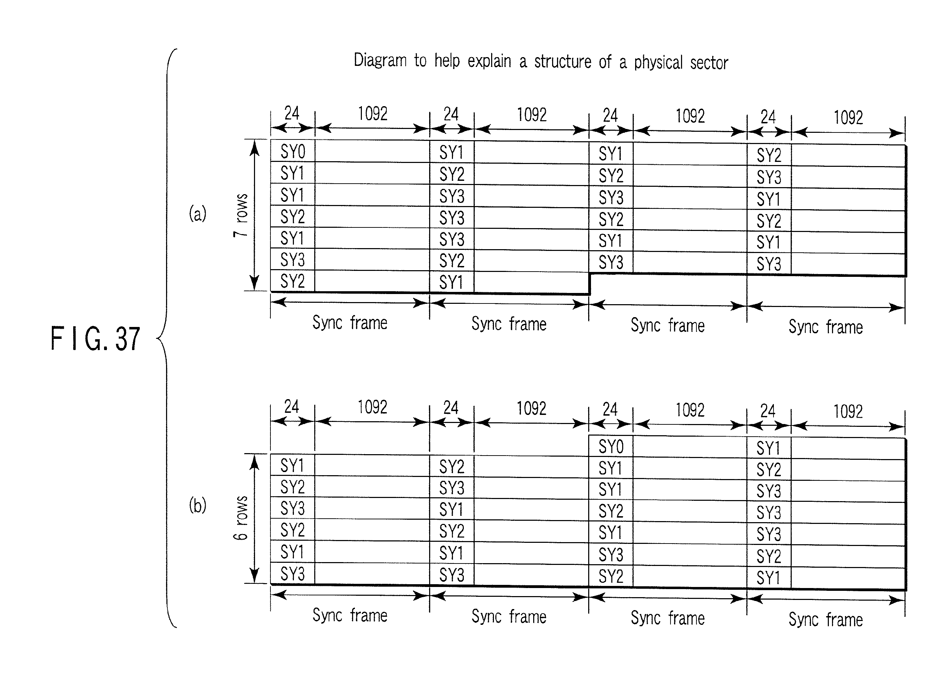

As described in detail using FIGS. 63 and 37, one physical sector is composed of a combination of a place in which sync codes 433 (SY0 to SY3) are arranged and sync data 434 placed between the synch codes 433. The information recording and reproducing apparatus or information reproducing apparatus extracts the sync codes 433 (SY0 to SY3) from the channel bit train recorded on the information storage medium, thereby detecting a break in the channel bit train. As described later, location information (physical sector number or logical sector number) on the data recorded on the information storage medium is extracted from the information in the data ID of FIG. 32. Using IED just behind the data ID, an error in the data ID is detected. Therefore, this embodiment not only (5) prevents data from being written over the data ID and IED but also (4) writes data partially over the sync data 432 excluding the sync code 431, which makes it possible to detect the data ID position using the sync code 431 and reproduce (decipher) the information recorded in the data ID even in "Next Border Marker NBM."

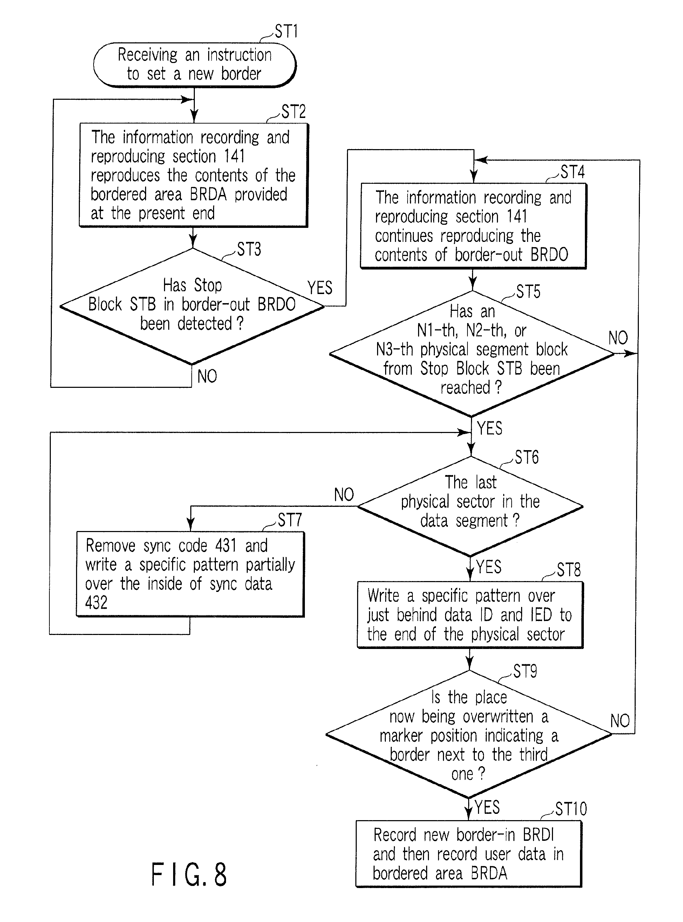

FIG. 8 is a flowchart for writing data over the place of "Next Border Marker NBM" to help explain concretely what has been described above. When the control section 143 of the information recording and reproducing apparatus of FIG. 1 receives an instruction to set a new border via an interface section 142 (ST1), the control section 143 controls the information recording and reproducing section 141 to start to reproduce the bordered area BRDA placed at the end (ST2). The information recording and reproducing section 141 continues tracing along the pre-groove in the bordered area BRDA, while tracking until it detects a border stop block STB in the border-out (ST3). As shown in FIG. 21B, (d), behind the border stop block STB, next border markers NBM recorded in a specific pattern have been provided for the N1-th, N2-th, and N3-th physical segment blocks. The information recording and reproducing section 141 searches for the position of "Next Border Marker NBM" (ST5), while reproducing the border-out BRDO, counting the number of physical segment blocks. As described above, a concrete example of the method of "(3) changing the overwriting situation according to the place in the same data segment" is to secure a wider overwriting area at least in the last physical section in the same data segment.

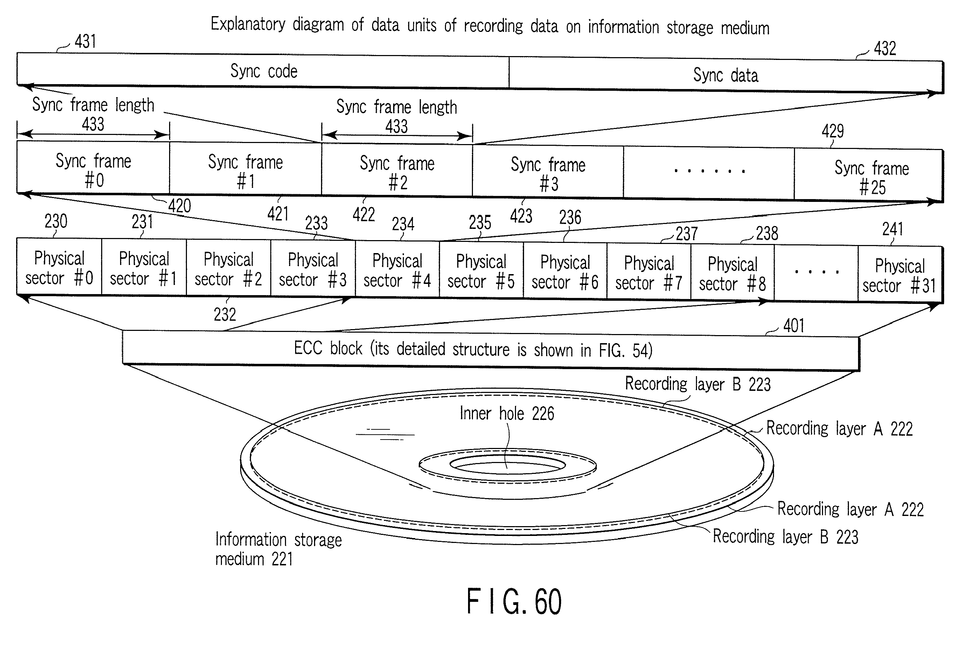

When the last physical sector in the data segment has been detected (ST6), data is written over just behind the data ID and IED to the end of the last physical sector, leaving the data ID and IED (or without overwriting the data ID and IED) (ST9). In the same data segment excluding at least the last physical sector, the sync data 432 is partially overwritten with a specific pattern, excluding the area of the sync codes 431 (SY0 to SY3) shown in FIG. 37 or 60 explained later (ST7). This process is carried out for each "Next Border Marker NBM." After the third "Next Border Marker NBM" has been overwritten (ST9), new border-in BRDI is recorded and then user data is recorded in the bordered area BRDA (ST10).

FIGS. 86A and 86B show another embodiment differing from the structure of the border area in the recordable information storage medium of FIGS. 21A and 21B. FIGS. 86A, (a) and 86A, (b) show the same contents as in FIG. 21A, (a) and (b). FIGS. 86A and 86B differ from FIG. 21A, (c) in the state after the recordable information storage medium is finalized. For example, as shown in FIGS. 86A and 86B, (c), if finalization is wanted after the recording of information into bordered area BRDA#3 is completed, border-out BRDO is formed just behind bordered area BRDA#3 in a border closing process. Thereafter, a terminator area TRM is formed behind the border-out BRDO just behind bordered area BRDA#3 (point (L1) in FIGS. 132A and 132B), thereby shortening the time required for finalization.

In the embodiment of FIG. 21A, (c), the space ranging from the last bordered area BRDA#3 to just in front of the extended spare area ESPA has to be filled with border-out BRDO. It requires a long time to form border-out BRDO, which caused the problem of making the finalize time longer. In contrast, in FIGS. 86A and 86B, (c), a relatively short terminator area TRM is set. All of the area outside the terminator TRM is defined again as a new data lead-out area DTLDO and the unrecorded part outside the terminator TRM is set as an inhibited area 911. The inhibited area 911 need not be filled with data and may remain unrecorded, which shortens the finalize time. Specifically, when the data area DTA is finalized, a relatively short terminator area TRM is formed at the end of the recording data (differently from right behind border-out BRDO: FIG. 21A, (c), border-out BRDO need not be set all the way to the end of the data area and may be relatively narrow in width).

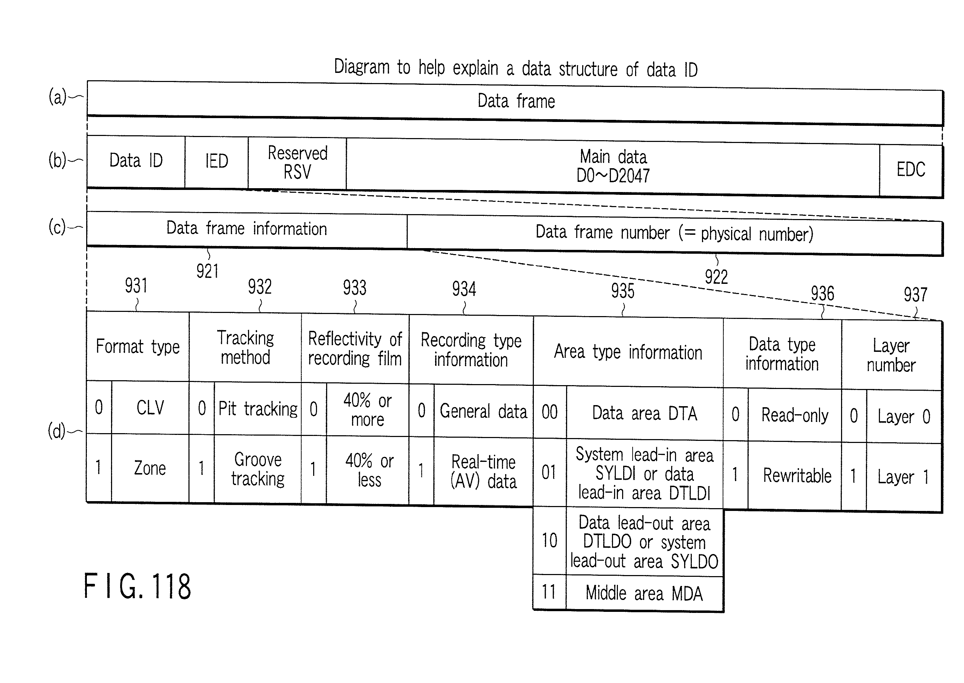

All of the information in the main data (the main data in the data frame as described later in FIG. 32) in the area is set to "00h." The attribute (type information) of the area is set the same as the type information in the data lead-out area DTLDO, which causes the terminator area TRM to be defined again as a new data lead-out area DTLDO as shown in FIG. 86A, (c). As shown in FIG. 118(d), the type information in the area is recorded in area type information 931 in the data ID. Specifically, area type information 935 in the data ID in the terminator area TRM is set to "10b" as shown in FIG. 118(d), which means that the terminator area TRM exists in the data lead-out area DTLDO.

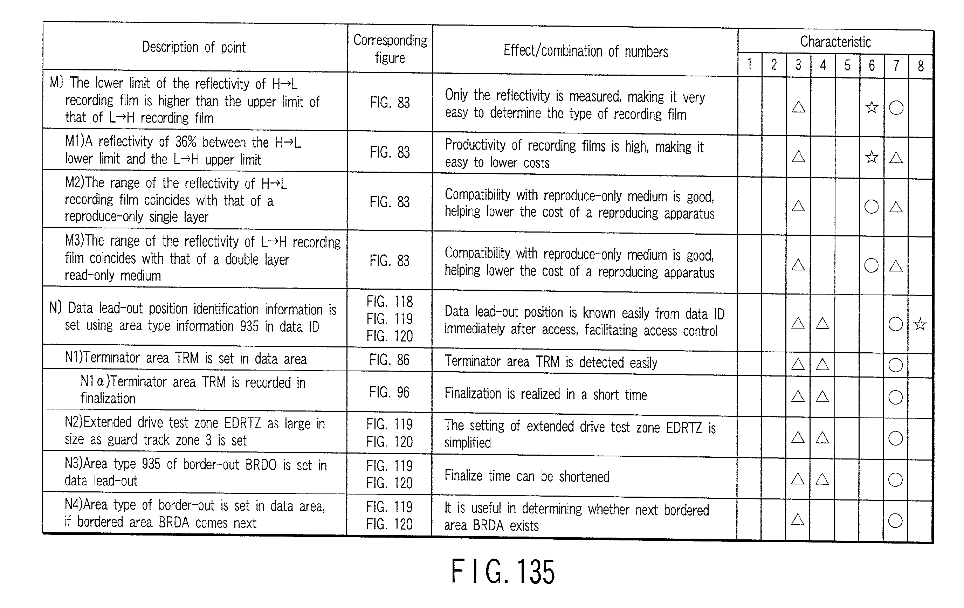

The present embodiment is characterized in that data lead-out position area type identifying information is set using the area type information 935 in the data ID (point <N> in FIG. 135). Consider a case where, in the information recording and reproducing apparatus or information reproducing apparatus of FIG. 1, the information recording and reproducing section 141 roughly accesses a specific target position on the recordable information storage medium. Immediately after rough access, the information recording and reproducing section 141 has to first reproduce the data ID to determine what position on the recordable information storage medium has been reached and decipher data frame number 922 shown in FIG. 118, (c). Since area type information 935 is near data frame number 922 in the data ID, just deciphering the area type information 935 makes it possible to determine instantaneously whether the information recording and reproducing section 141 is in the data lead-out area DTLDO, which enables access control to be simplified and made faster. As described above, setting a terminator area TRM in the data ID gives data lead-out area DTLDO identifying information (point (N1) in FIG. 135), which makes it easier to detect the terminator area TRM.

Furthermore, when the last border-out BRDO is set as an attribute of data lead-out NDTLDO as an exception (that is, when area type information 935 in the data ID of the data frame in border-out BRDO area is set to "10b": data lead-out area), a terminator area TRM is not set. In this case, the area outside the border-out BRDO is inhibited from being used. Therefore, when the terminator area TRM with the attribute of data lead-out NDTLDO has been recorded, the terminator area TRM is regarded as a part of the data lead-out area NDTLDO. Thus, data cannot be recorded into the data area DTA and therefore the data area may be left in the form of an inhibited area 911 as shown in FIG. 86A, (c).

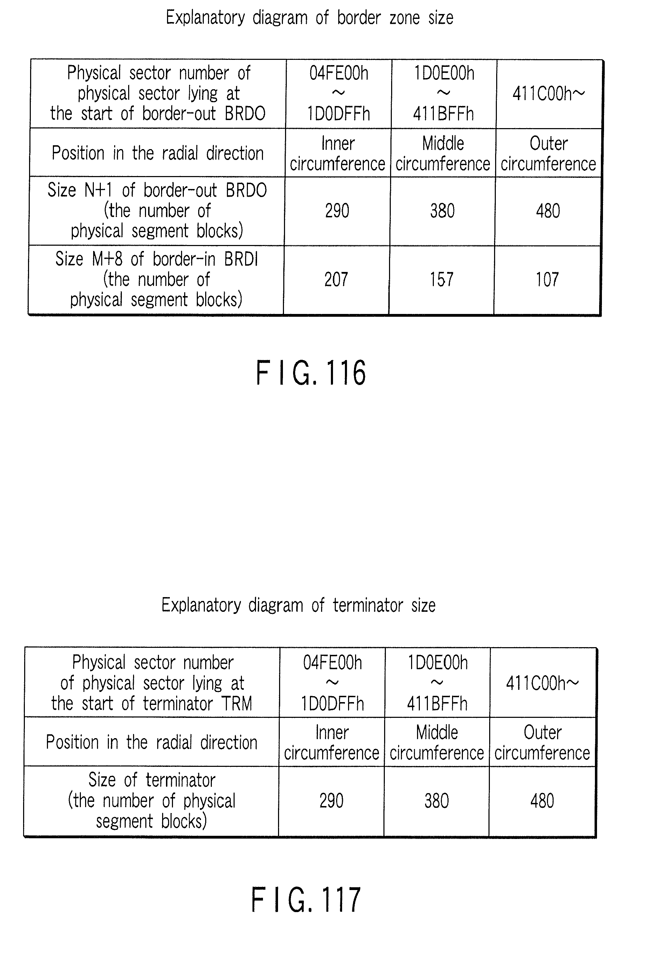

In this embodiment, the size of the terminator area TRM is changed according to the position on the recordable information storage medium, thereby shortening the finalize time and making the processing more efficiently (point <L1$\alpha$> in FIGS. 132A and 132B). The terminator area TRM not only indicates the last position of the recording data but also is used to prevent an overrun due to a track shift, even when it is used in the reproduce-only apparatus which detects a track shift by the DPD method. Therefore, the width of the terminator area TRM in the direction of radius of the recordable information storage medium (or the width of the part filled with the terminator area TRM) must be at least 0.05 mm or more in length from the viewpoint of the detection characteristics of the reproduce-only apparatus. Since the length of one round on the recordable information storage medium differs according to the radial position, the number of physical segment blocks included in one round differs according to the radial position. Therefore, as shown in FIG. 117, the size of the terminator area TRM differs according to the radial position, that is, the physical sector number of the physical sector first located in the terminator area TRM. As the position goes closer to the outer edge, the size of the terminator area TRM grows larger (point (L1$\beta$) in FIGS. 132A and 132B). The values in FIG. 117 are given using the number of physical segment blocks as a unit. The minimum value of the physical sector number of an allowable terminator area TRM must be larger than "04FE00h." This comes from the following constrained condition: the first bordered area BRDA#1 must be composed of 4080 or more physical segment blocks and the first bordered area BRDA#1 must be 1.0 mm or more in width in the direction of radius of the recordable information storage medium. The terminator area TRM has to start from the boundary position of physical segments blocks.

In FIG. 86B, (d), for the same reason as described above, a place in which each piece of information is recorded is set on a single physical segment block size basis. In each physical segment block, a total of 64 KB of user data recorded discretely in 32 physical sectors are recorded. As shown in FIG. 86B, (d), relative physical segment block numbers are set to the individual pieces of information. The individual pieces of information are recorded one after another onto the recordable information storage medium in increasing order of relative physical segment block numbers. In the embodiment of FIGS. 86A and 86B, RMD copy information CRMD#0 to CRMD#4 having the same contents are written five times into copy information recording area C_RMZ of the contents recorded in the recording management zone in FIG. 21A, (d) (point (C6) in FIGS. 126A and 126B). The multiple writing increases the reliability of reproduction. Even if there is dirt on or flaws in the recordable information storage medium, copy information CRMD about the contents recorded in the recording management zone can be reproduced stably. While the border stop block STB in FIG. 86B, (d) corresponds to the border stop block STB in FIG. 21A, (d), the embodiment of FIG. 86B, (d) does not have "Next Border Marker NBM" as in the embodiment of FIG. 21B, (d). The information in the main data (see FIG. 32) in reserved areas 901, 902 are all set to "00h."

In FIG. 86B, (d), at the beginning of border-in BRDI, identical information is written as update physical format information U_PFI six times from N+1 to N+6 in the form of relative physical segment block numbers (point <C7> in FIGS. 126A and 126B), thereby constructing updated physical format information U_PFI as shown in FIG. 21B, (d). In this way, updated physical format information U_PFI is written a plurality of times, thereby improving the reliability of information.

FIG. 86B, (d) is characterized in that a recording management zone RMZ in the border zone is provided in border-in BRDI (point (C1) in FIGS. 126A and 126B). As shown in FIG. 17A, and FIG. 17B, the size of the recording management zone RMZ in the data lead-in area DTLDI is relatively small. If a new bordered area BRDA is set frequently, the recording management data RMD recorded in the recording management zone RMZ is saturated and the setting of a new bordered area BRDA cannot be done in the middle of setting. As shown in FIG. 86B, (d), a recording management zone RMZ in which recording management data RMD about succeeding bordered area BRDA#3 is recorded is provided in the border-in BRDI, which enables not only a new bordered area BRDA to be set many times but also the number of additional recording in a bordered area BRDA to be increased remarkably.

When bordered area BRDA#3 following the border-in BRDI including the recording management zone RMZ in the border zone BRDZ is closed or when the data area DTA is finalized, the last recording management data RMD has to be recorded repeatedly into the unrecorded reserved area 273 (FIG. 85A, (b)) in the recording management zone RMZ, thereby filling up the reserved area (point (L2) in FIGS. 132A and 132B). This eliminates an unrecorded reserved area 273, which not only prevents the deviation from the track (by the DPD method) in reproduction on the reproduce-only apparatus but also increase the reliability of the reproduction of recording management data RMD by multiple recording of recording management data RMD. All of the data in the reserved area 903 (particularly the values of the main data in FIG. 32) are set to "00h."

FIG. 116 shows the size of a border zone BRDZ in this embodiment. The values in FIG. 116 are represented using the number of physical segment blocks as a unit. The size of border-out BRDO becomes larger as the position gets closer to the outer edge (point <L3> in FIGS. 132A and 132B). The value coincides with the size of a terminator area TRM as shown in FIG. 117. The size of a border zone BRDZ varies according to the position in the direction of radius of the recordable information storage medium. The basis for the border-out BRDO size coincides with the basis for the terminator area TRM size. The width of the border zone BRDZ in the radial direction must be 0.05 mm or more. The border-out BRDO has to be started from the position of the boundary between physical segment blocks. Moreover, the minimum physical sector number of the border-out BRDO has to exceed "04FE00h."

The border-out BRDO has the function of preventing an overrun due to the deviation from the track on the reproduce-only apparatus using the DPD method. The border-in BRDI need not have a large size, except that it has updated physical format information U_PFI and the information in the recording management zone RMZ in the border zone. Therefore, to shorten the time (required to record data in the border zone BRDZ) in setting a new bordered area BRDA, a reduction in the size is wanted. In FIG. 86A, (a), since the user data additionally recordable range 205 is sufficiently wide before the formation of border-out BRDO by border closing and the possibility that additional writing will be done many times is strong, the value of "M" in FIG. 86B, (d) has to be set large so that recording management data can be recorded many times in the recording management zone RMZ in the border zone. In contrast, in FIG. 86A, (b), since the user data additionally recordable range 205 has grown narrower before bordered area BRDA#2 is border-closed and before the border-out BRDO is recorded, it is conceivable that the number of times the recording management data is additionally recorded into the recording management zone RMZ in the border zone is not so large. Therefore, the setting size "M" of the recording management zone RMZ in the border-in BRDI just in front of bordered area BRDA#2 can be made relatively small. That is, an estimated number of additional recording of recording management data is larger when the border-in BRDI is placed closer to the inner edge. An estimated number of additional recording of recording management data is smaller when the border-in is placed closer to the outer edge. Therefore, the embodiment is characterized in that the border-in BRDI size becomes smaller on the outer edge side (point (L4) in FIGS. 132A and 132B). As a result, the time required to set a new bordered area BRDA is made shorter and the processing is made more efficient.

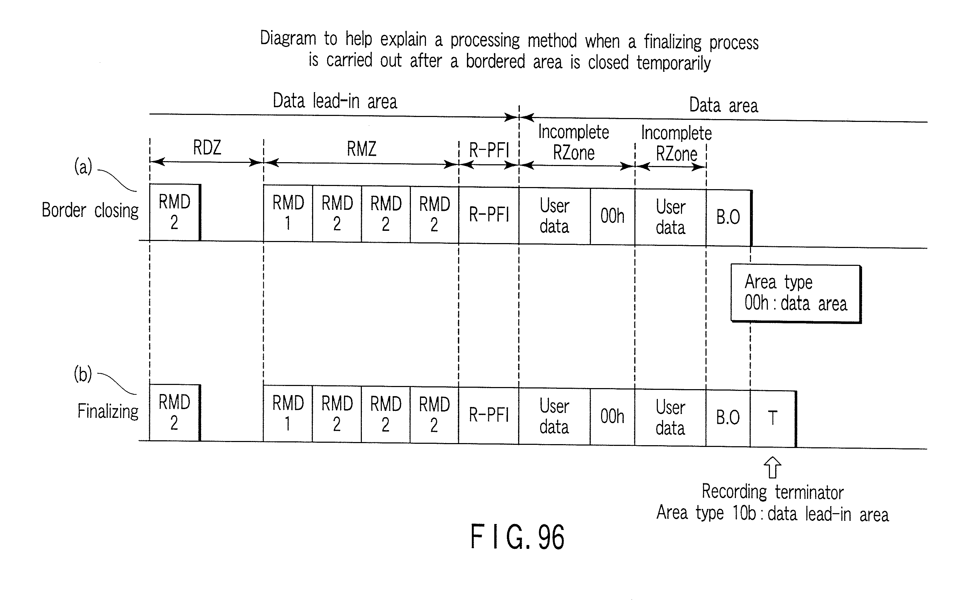

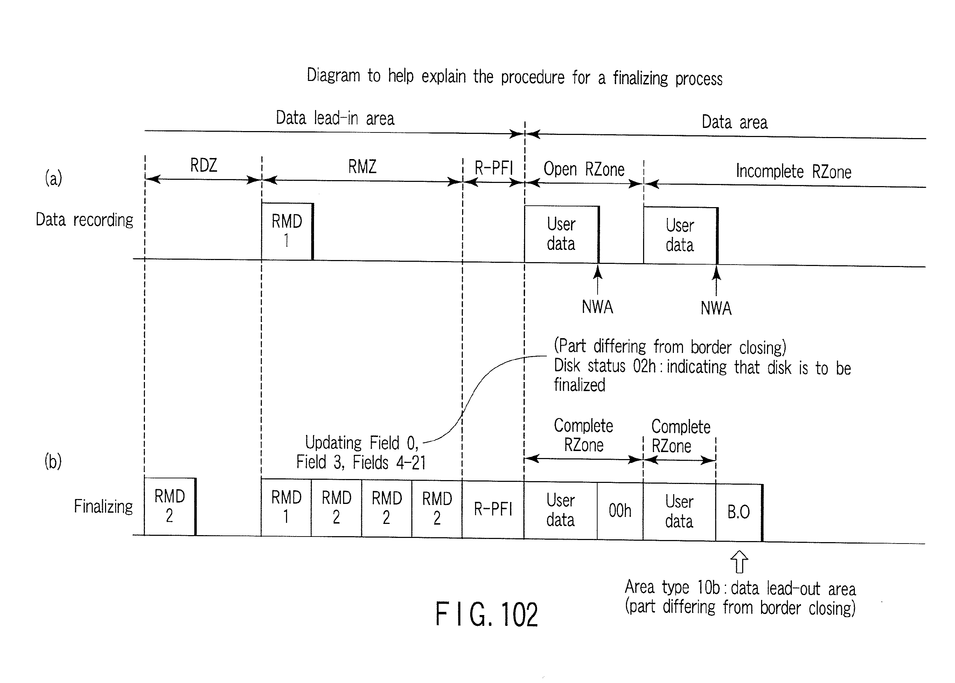

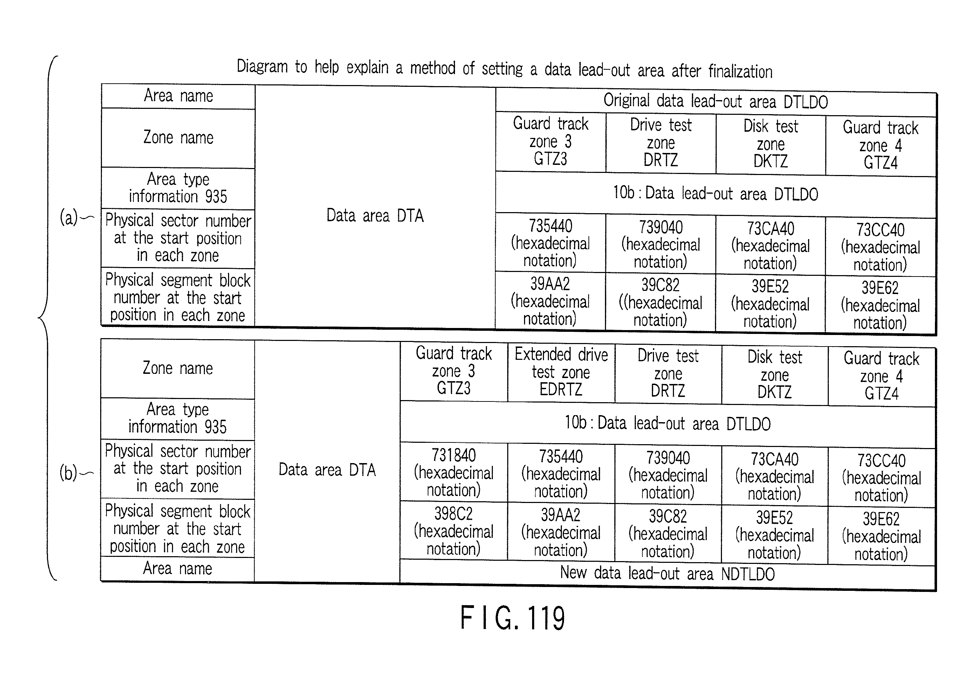

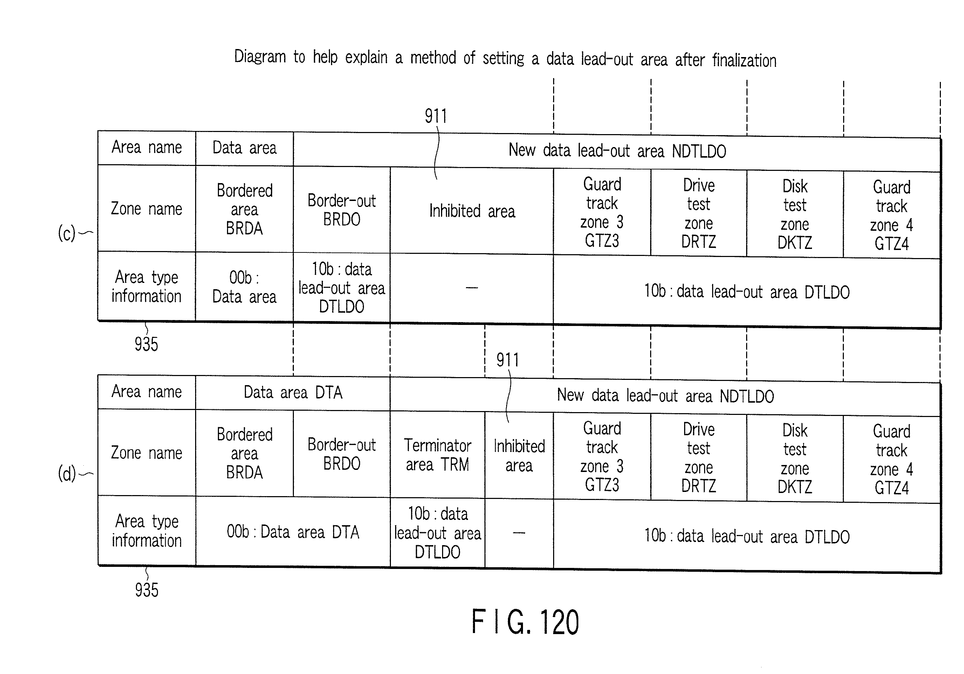

FIGS. 119 and 120 show a method of setting various data lead-out areas after the finalizing process in this embodiment. FIG. 119, (a) shows the range of the original data lead-out area DTLDO shown in FIGS. 18A and 18B. The physical sector number and physical segment number in the starting position of each zone are set in advance as follows: 735440h, 39AA2h in hexadecimal representation are preset in a third guard track zone GTZ3, 739040h, 39C82h in hexadecimal representation are preset in a drive test zone DRTZ, 73CA40h, 39E52h in hexadecimal representation are preset in a disk test zone DKTZ, and 73CC40h, 39E62h in hexadecimal representation are preset in a fourth guard track zone GTZ4. As shown in FIG. 18B, (f), in the embodiment, the extended drive test zone EDRTZ has been set in the data lead-out area DTLDO after a finalizing process. In a method shown in FIG. 119, (b) as another embodiment, an extended drive test zone EDRTZ equivalent to the size of the third guard track zone is set (point <N2> in FIG. 135) and the third guard track zone GTZ3 is translated. That is, the starting position (the physical sector number or physical segment block number) of the third guard track zone GTZ3 in the original data lead-out area DTLDO is caused to coincide with the starting position of the extended drive test zone EDRTZ. This produces the effect of simplifying the setting of an extended drive test zone EDRTZ. FIG. 120, (d) shows a method of setting a terminator area TRM and subsequent areas are set as a new data lead-out area DTLDO by setting area type information 935 (FIG. 118, (d)) in the data ID of the terminator area TRM shown in FIG. 86B, (c) to "10b" (point <N1> in FIG. 135). A concrete finalizing process using this method will be explained later using FIG. 96. In this case, area type information 935 (FIG. 118, (d)) in border-out BRDO just in front of the terminator area TRM is set to "00b" and border-out BRDO is included in the data area DTA. Another method of the embodiment is to set area type information 935 (FIG. 118, (d)) in the data ID of border-out BRDO to "10b" as shown in FIG. 120(c), thereby setting in a new data lead-out area NDTLDO (point <N3> in FIG. 135). Use of this method not only facilitates the process of retrieving a data lead-out area but also makes it unnecessary to set a terminator area TRM, which shortens the finalize time. A concrete finalizing process using this method will be explained later using FIG. 102.

A logical recording unit of information recorded in bordered area BRDA shown in FIG. 21A, (c) is called an R zone. Therefore, a bordered area BRDA is composed of at least one R zone. An existing DVD-ROM uses a file system called "UDF bridge" in which both of file management information complying with UDF (Universal Disc Format) and file management information complying with ISO9660 are recorded simultaneously onto a single information storage medium. The file management method conforming to ISO9660 has a rule that a file must be recorded continuously onto an information storage medium. That is, the information in a file is inhibited from being divided and arranged in discrete positions on the information storage medium. Therefore, for example, when information has been recorded in a manner conforming to the UDF bridge, all of the information constituting one file is recorded continuously. Therefore, an area in which one file is recorded continuously can be adapted so as to construct an R zone.

The explanation has been given, centering on the data structure of information recorded on the recordable information storage medium. Hereinafter, the basic concepts and basic ideas of recording management data RMD, extendable recording management zone RMZ, R zone, border zone, various physical formats will be explained. In addition, various processing methods, including border closing and finalizing, based on the basic concepts and ideas, will be explained.

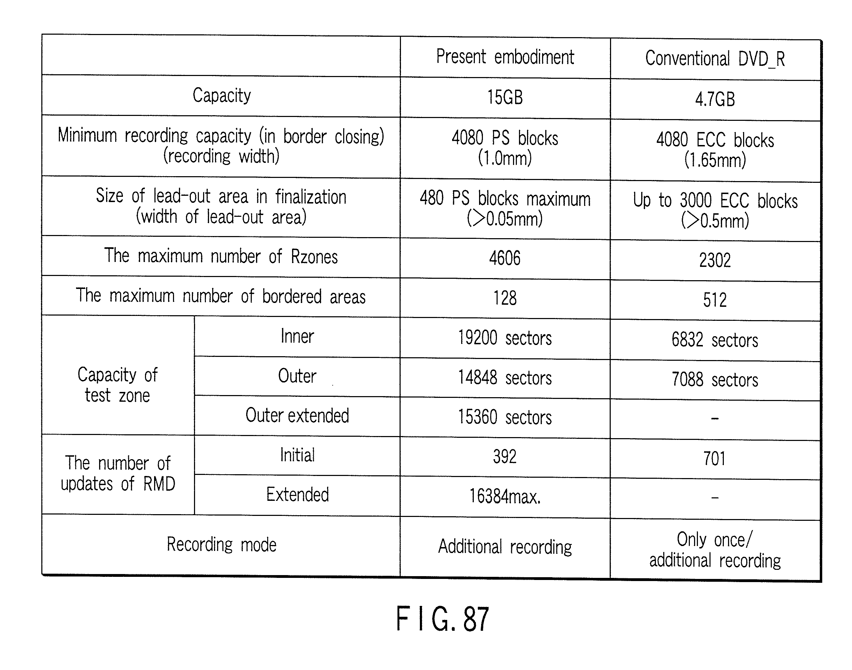

FIG. 87 shows a comparison between the present embodiment and an existing DVD-R (point <L> in FIGS. 132A and 132B). In this embodiment, to shorten the border closing time, the recording width of the minimum recording capacity (in border closing) is made narrower (1.65 mm to 1.0 mm) than that of an existing DVD-R. As a result, useless recording information is reduced and the finalize time is made shorter. Since the recoding capacity of the embodiment is much larger (4.7 GB to 15 GB) than that of the existing DVD-R, the maximum number of R zones is almost doubled (2302 to 4606). While the recording unit of the existing DVD-R is an ECC block, that of the present embodiment is a physical segment (see FIG. 69). FIG. 69, (b) shows a physical length on a disk and FIG. 69, (a) shows a length of data to be recorded. In a physical segment block, spare areas, including a VFO area, a pre-sync area, a postamble area, an extra area, and a buffer area, are added in front of and behind an ECC block, thereby forming a data segment 531. These data segments are combined to form a physical segment, a unit in data recoding.

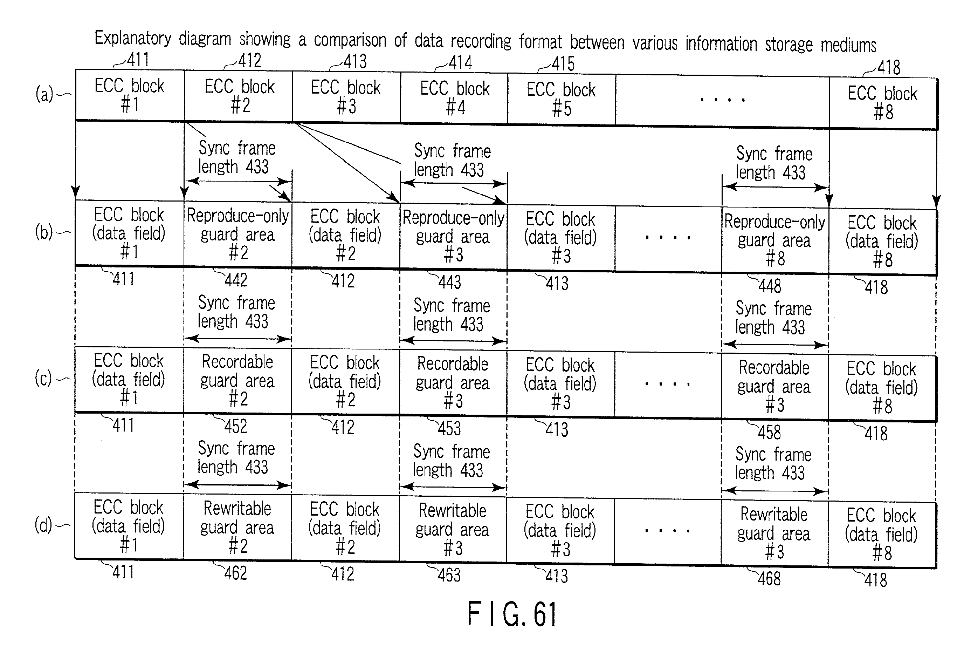

As shown in FIG. 61, since spare areas (guard areas) are added in front of and behind an ECC block, data cannot be recorded continuously from the end of the ECC block in additional recording. The reason is that, even if an attempt is made to record data from the end of the ECC block, the recoding position may shift slightly due to rotation irregularity or the like. If the recording position shifts forward, the last part of the recorded data disappears due to overwriting. Since the lost data can be restored by error correction, there is almost no problem. If the recording position shifts backward, an unrecorded part appears on the disk, preventing reproduction on the player, which is a serious problem. Therefore, presently, when additional recording is done, the recording position is shifted slightly forward and data is written over the last part of the recorded data, thereby destroying the last data. In this embodiment, since a guard area is provided in front of and behind an ECC block, overwriting is done in the guard area and therefore the user data can be additionally recorded stably without destroying the data. Accordingly, the data structure of the embodiment can increase the reliability of the recorded data.

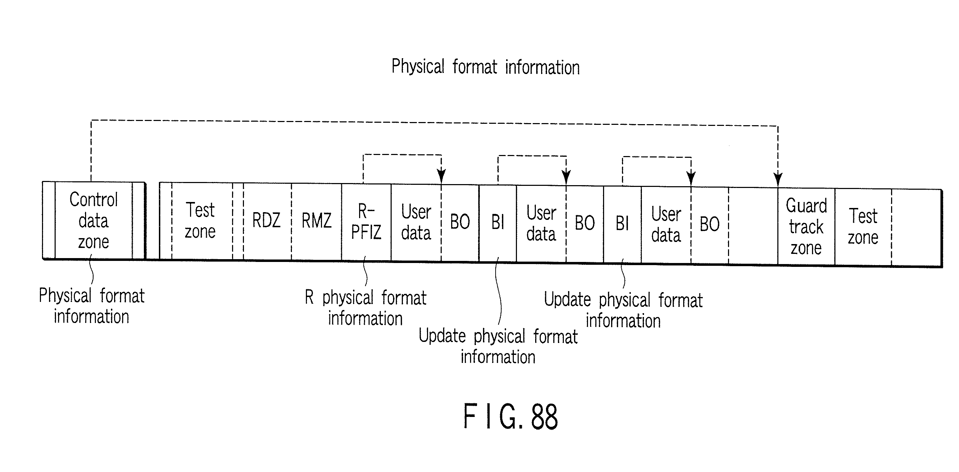

FIG. 88 is a diagram to help explain physical format information in the embodiment. Disk management information is stored in the physical format information. The information can be read on a ROM player. There are three types of physical format information according to the recording position:

(1) Physical format information PFI (in a control data zone in the system lead-in area SYLDI): In this information, HD DVD family common information/data area end address/strategy information and the like are recorded.
(2) R physical format information R-PFI (in the data lead-in area): In this information, a copy of HD DVD family common information/first border outermost circumference address are recorded. The first bordered area shares border-in with the data-in (information to be recorded in the border-in is recorded in the data lead-in). Therefore, there is no border-in for the first border.
(3) Updated physical format information U-PFI (in the border-in area): In this information, a copy of HD DVD family common information/outermost address of its own border are recorded.

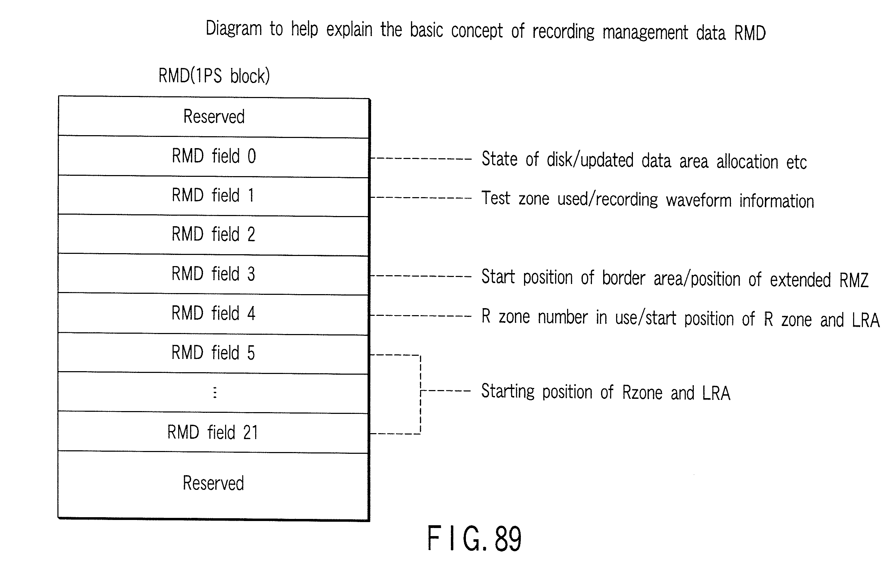

FIG. 89 is a diagram to help explain the basic concept of recording management data RMD in the embodiment. In the data, data for managing the recording state of a recordable disk is stored. A single RMD is composed of a physical segment block. In the RMD, 22 fields are defined. Field 0 stores the state of a disk and updated data area allocation, field 1 stores the test zones used and recording waveform information, field 3 stores the starting position of a border area and the position of an extended RMZ, field 4 stores the R zone number now in use, the starting position of the R zone, and LRA (the last recoding position: last recorded address), and field 5 to field 21 stores the starting position of the R zone and 3LRA.

The update timing of RMD is defined as follows (point <L7> in FIGS. 132A and 132B):

When the disk is initialized
When an R zone is reserved or an operation, such as closing, is performed
When a border is closed and RMZ is expanded
When a specific amount of user data is recorded and the recording is interrupted

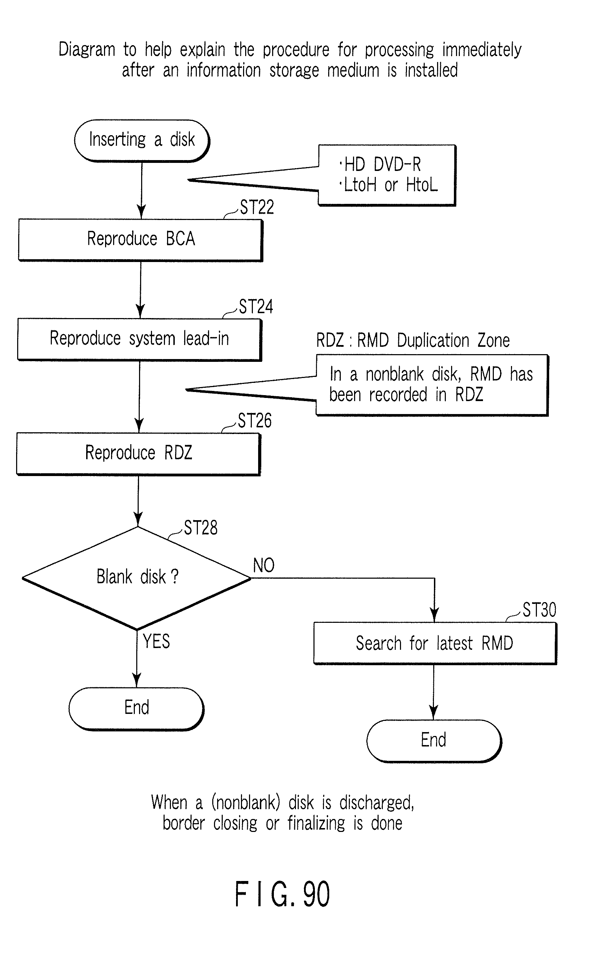

FIG. 90 is a flowchart for the processing procedure immediately after an information storage medium is installed in the information reproducing apparatus or information recording and reproducing apparatus of the present embodiment (point <L> in FIGS. 132A and 132B).

When a disk is installed in the apparatus, the burst cutting area BCA is reproduced in step ST22. This embodiment supports an HD DVD-R disk. It further supports both of the disk medium polarities, "L-H" and "H-L." In step ST24, the system lead-in area is reproduced. In step ST26, the RMD duplication RDZ is reproduced. In the case of a nonblank disk, recording management data RMD has been recorded in the RMD duplication zone RDZ. According to the presence or absence of the recording of recording management data RMD, it is determined in step ST28 whether the disk is a blank one. If the disk is a blank one, the present process is ended. If the disk is not a blank disk, the latest recording management data RMD is searched for in step ST30. Then, the number of the additionally recordable R zone now in use, the begin physical segment number of the R zone, and the last recorded address LRA are found. Up to three additionally recordable R zones can be set. When a nonblank disk is discharged, border closing or finalizing is done.

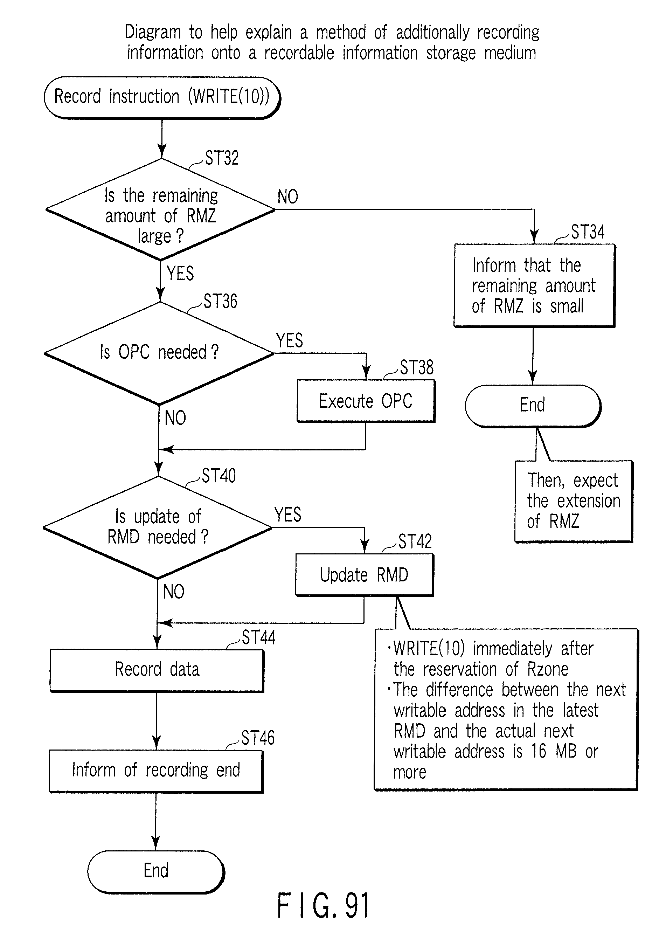

FIG. 91 is a flowchart to help explain a method of recording additional information onto a recordable information storage medium in the information recording and reproducing apparatus of the embodiment. When the host gives an record instruction (write (10)), it is determined in step ST32 whether the remaining amount of the recording management zone RMZ in which recording management data RMD is to be recorded is sufficient. If the remaining amount is not sufficient, the host is informed in step ST34 that "the remaining amount of RMZ is small." In this case, the extension of the recording management zone RMZ is expected (point <L8> in FIGS. 132A and 132B).

If the remaining amount is sufficient, it is determined in step ST36 whether OPC (the process of recording how much trial writing has been done) is needed. If OPC is needed, OPC is executed in step ST38. In step ST40, it is determined whether the update of the recording management data RMD is needed. The update is needed when a record instruction is given immediately after the reservation of an R zone or when the difference between the next writable address NWA in the latest RMD and the actual next writable address NWA is 16 MB or more. In step ST42, the recording management data RMD is updated. In step ST44, the data is recorded. In step ST46, the host is informed of the recording end and the process is completed.

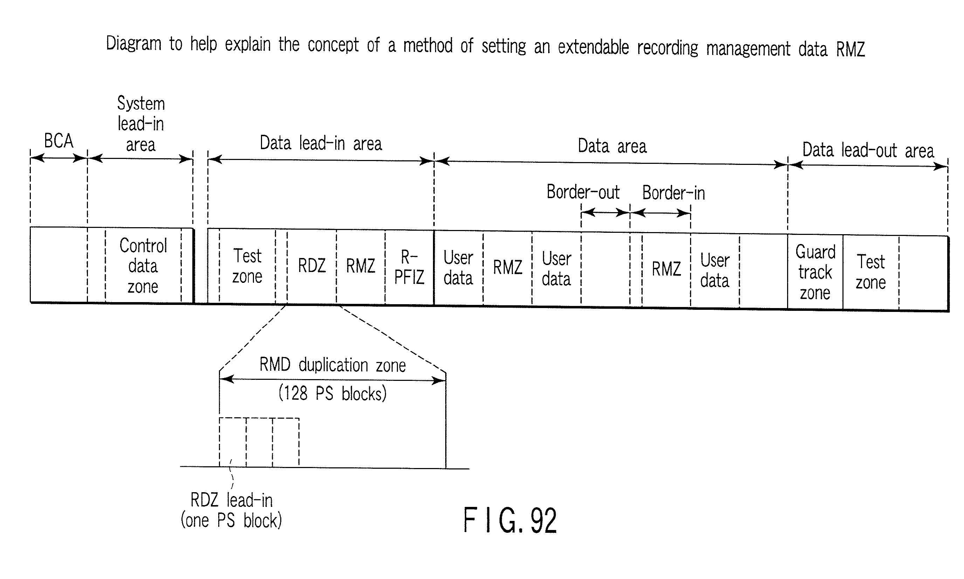

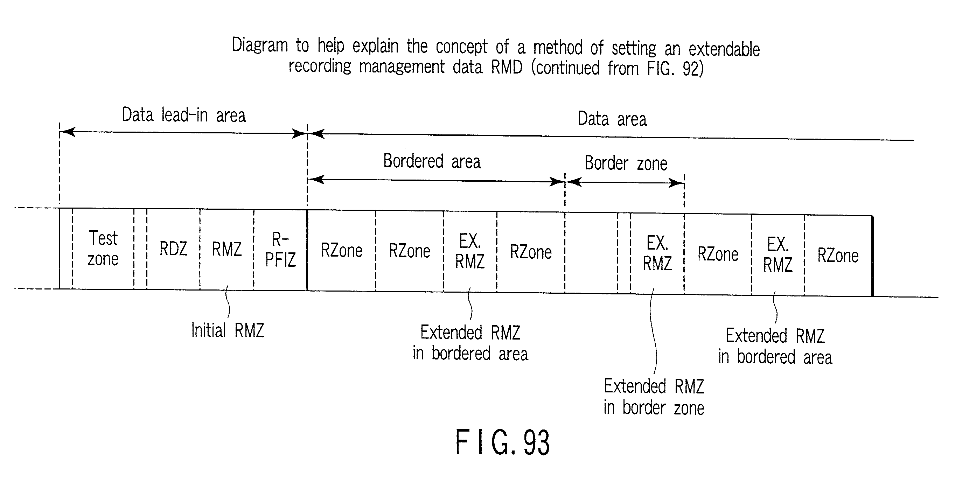

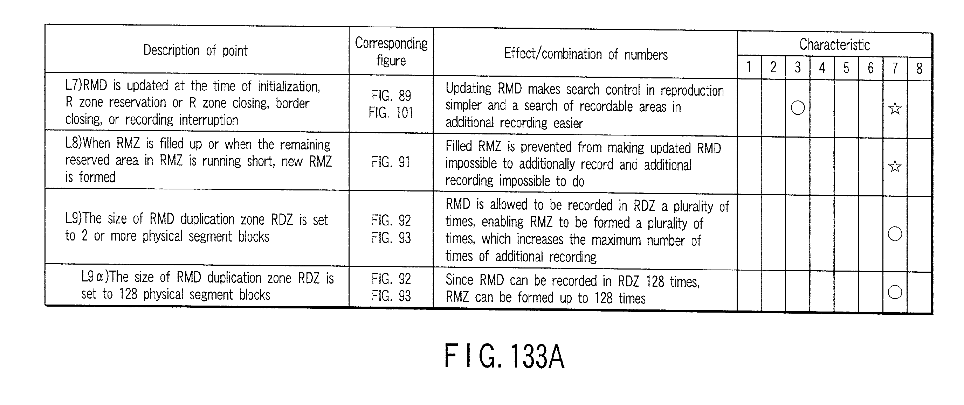

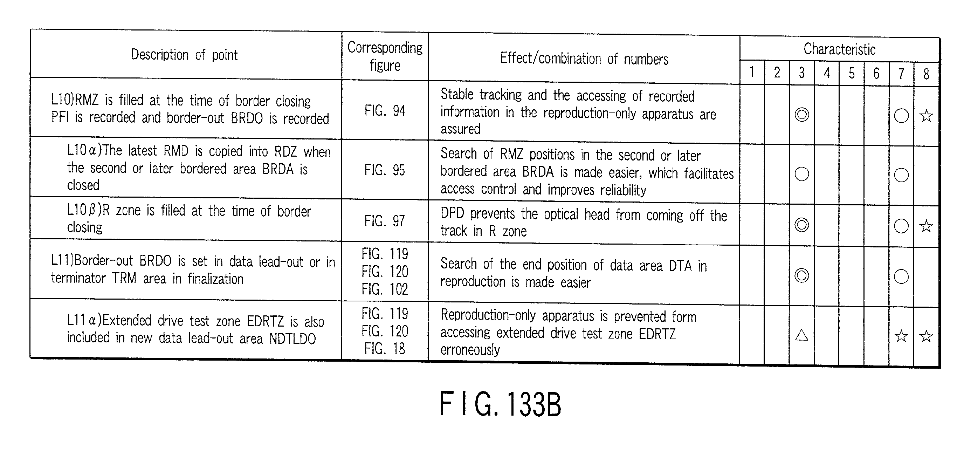

FIG. 92 is a diagram to help explain the concept of a method of setting an extendable recording management zone RMZ in the present embodiment. At the beginning, a recording management zone RMZ for holding recording management data RMD has been set in the data lead-in area. When the recording management zone RMZ has been used up, the data cannot be recorded onto the disk even if the data area is empty. Therefore, if the remaining amount of the recording management zone RMZ becomes small, an extended recording management zone EX.RMZ is set (point <C> in FIGS. 132A and 132B). The extended recording management zone EX.RMZ may be set in a bordered area BRDA in which user data is recorded or in a border zone (made up of adjacent border-out and border-in). That is, the extended recording management zone EX.RMZ in the bordered area and the extended recording management zone EX.RMZ in the border-in can be mixed on the disk. When the extended recording management zone EX.RMZ has been set, the latest recording management data RMD is copied into the RMD duplication zone RDZ in the form of a physical segment block. The RMD duplication zone RDZ is used to manage the position of the extended recording management zone EX.RMZ (point <L6$\alpha$> in FIGS. 132A and 132B). Since the RMD duplication zone RDZ is composed of 128 physical segment blocks, the recording management zone RMZ can be extended 127 times on the disk. The maximum number of border zones on the disk is 128 (points <L9>, <L9$\alpha$> in FIGS. 133A and 133B). Using 127 extended recording management zones EX.RMZ in the bordered area, the recording management data RMD can be extended 16348 times.

FIG. 93 is a detailed diagram of FIG. 92. Specifically, the extended recording management zone EX.RMZ in the bordered area is set between adjacent R zones. When it is extended to a border zone, it is normally added to the end of the border-in.

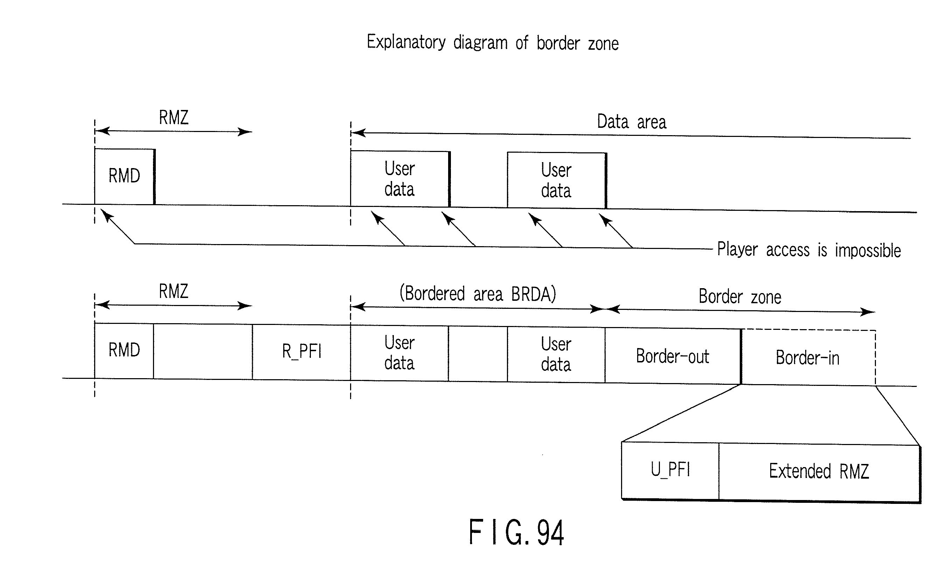

FIG. 94 is a diagram to help explain a border zone in this embodiment. A border zone is recorded to enable reproduction on a ROM player that detects a track by the DPD method. The border zone is composed of border-in and border-out. Since the player cannot track the groove, if there is an unrecorded area on the disk, it cannot access the recording management data RMD and the end of the recorded data. Since the track detecting method of the ROM player is the DPD method, the presence of a pre-pit is needed as a prerequisite. The recording film of a DVD-R disk is so designed that a phase shift takes place at a recording mark. It looks as if a phase shift were a pre-pit. Therefore, it is necessary to record an overrun area for reproducing management information and recorded data which the ROM player can read. The former is recorded as border-in and the latter is recorded as border-out. The border zone is recorded in a border closing operation. When border closing is done, (1) the discontinuous areas in the present recording management zone RMZ and in the user data are padded (point <L10> in FIGS. 133A and 133B), (2) R physical format information R-PFI is recorded, and (3) border-out is recorded. In the border-in, updated physical format information U-PFI and extended RMZ are recorded.

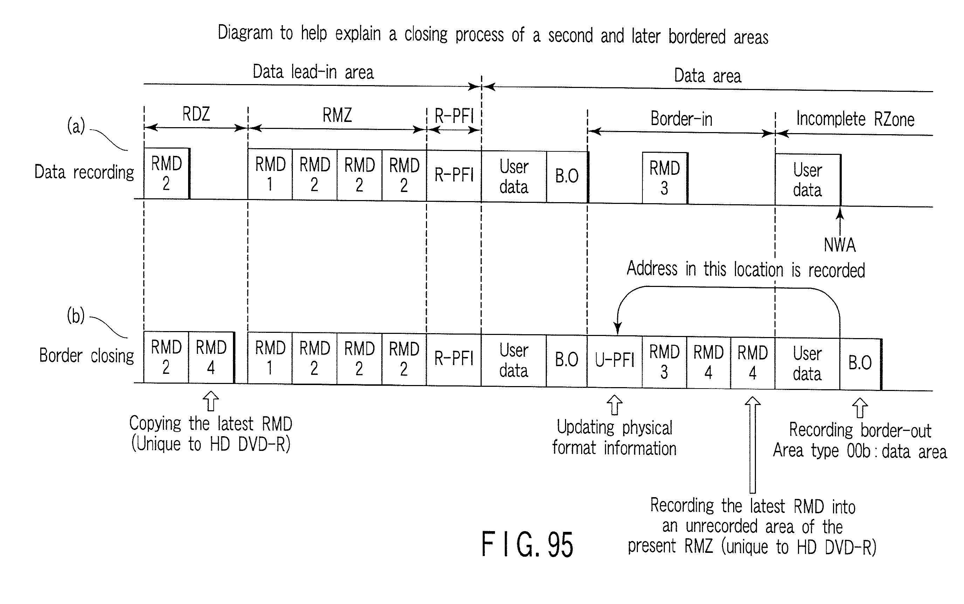

FIG. 95 is a diagram to help explain the process of closing a second and later bordered area in the information recording and reproducing apparatus of the embodiment. As shown in FIG. 95, (a), explanation will be given about a case where border closing is done in a state where user data has been recorded in an incomplete R zone and recording management zone RMZ3 has been recorded in the border-in. The last recording position NMW in the additionally recordable R zone is recorded into the updated physical format information U-PFI set in the border-in. At the same time, the latest recording management data RMD4 is recorded repeatedly in the remaining part of the border-in (the unrecorded part of the present recording management zone RMZ). The latest recording management data RMD4 is copied into the RMD duplication zone RDZ (point (L10$\alpha$) in FIGS. 132A and 132B). Border-out is recorded outside the user data. Area type information on the border-out is 00b: data area.

FIG. 96 is a diagram to help explain a processing method when a finalizing process is carried out after the bordered area is closed temporarily in the information recording and reproducing apparatus of the embodiment. As shown in FIG. 96, (a), when border closing is done, the R zone is completed. As shown in FIG. 96, (b), a terminator is recorded outside the border-out at the end of the data area (point <N1α> in FIG. 135). Area type information on the terminator is 10b: data lead-out area.

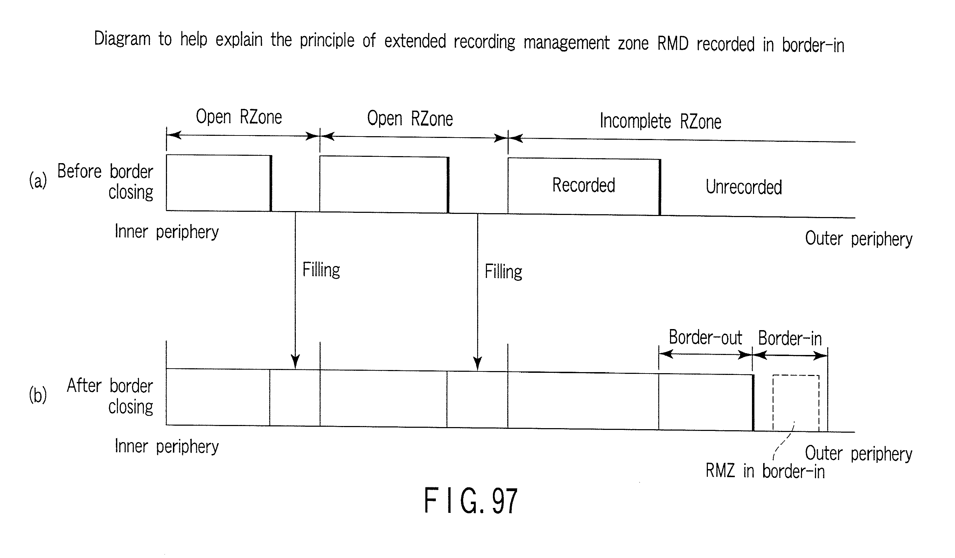

FIG. 97 is a diagram to help explain the principle of an extended recording management zone EX.RMZ recorded in the border-in in the embodiment. As shown in FIG. 97, (a), explanation will be given about a case where border closing is done in a state where three R zones have been set. An R zone is used for the drive to manage the recording positions of user data independently of the file system in order to maintain a physically continuous state on a recordable information storage medium. A part reserved for recording user data in a data recordable area is referred to as an R zone. R zones are classified into two types according to the recording state. An open R zone enables additional data to be added. A complete R zone prevents additional data from being added any more. Up to two open R zones can be set. A reserved part for recording user data in the data recordable area is referred to as an invisible (unspecified) R zone. A subsequent R zone is reserved in an invisible R zone. When data is not added any more, there is no invisible R zone. That is, up to three R zones can be set at a time. In an open R zone, both of the begin address and end address of the zone are set. In an invisible R zone, the begin address of the zone is set, but the end address is not set.

When border closing is done, the unrecorded part of each of a first and a second R zone (open R zone) (the zones are called a first, a second, and a third zone, starting from the inner edge) is filled with "00h" as shown in FIG. 97, (b) and border-out is recorded outside the recorded data in the third zone (incomplete R zone) (point <L10β> in FIGS. 133A and 133B). Border-in is recorded outside the border-out. In the border-in, an extended recording management zone EX.RMZ is recorded. As shown in FIG. 87, recording management data RMD can be updated 392 or more times (16384 times) using the extended recording management zone EX.RMZ in the border-in (point <L4β> in FIGS. 132A and 132B). However, before the extended recording management zone EX.RMZ in the border-in is used, the border must be closed, which takes time.

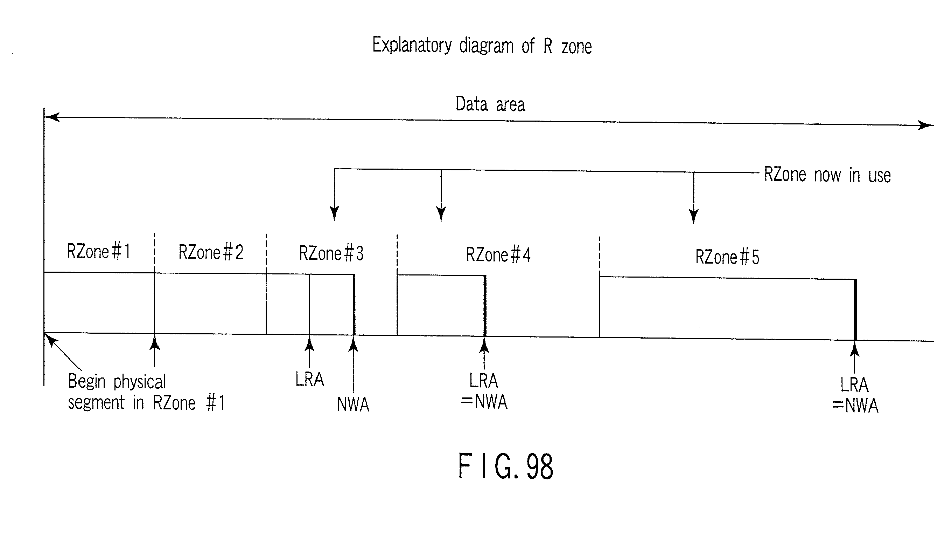

FIG. 98 is a diagram to help explain an R zone in the embodiment. To reproduce the data recorded on the recordable information storage medium, the drive manages the recording position of the user data independently of the file system in order to maintain a physically continuous state. The drive manages the recording positions on an R zone basis. On the disk, the following information is stored as recording management data RMD:

- The number of an additionally recordable R zone now in use
- Begin physical segment number of an R zone
- Last recorded address LRA

Up to three additionally recordable R zones can be set. In FIG. 98, R zone #3, R zone #4, and R zone #5 are additionally recordable R zones. Additional recording is started from the next writable address NWA in an additionally recordable R zone (point <L5α> in FIGS. 132A and 132B). When additional recording is completed, it follows that the last recorded address LRA = the next writable address NWA. Since neither R zone #1 nor R zone #2 has an unrecorded area, additional data cannot be added any more and therefore they are complete R zones.

FIG. 99 is a diagram to help explain the concept of a method of recording additional data in a plurality of places simultaneously using R zones. FIG. 99, (a) shows a basic recording method. In the method, no R zone is reserved and data is recorded sequentially in one address NWA in an invisible R zone or an incomplete R zone. An incomplete R zone has no end address set in it and therefore is an invisible R zone. However, in an invisible R zone, any data is not recorded at all and the next writable address NWA is the begin address, whereas in an incomplete R zone, data is recorded halfway and the next writable address NWA is away from the begin address.

FIG. 99, (b) shows an example of supporting recording on the basis of a plurality of addresses as in a conventional DVD-R. The drive can set one invisible R zone and two open R zones simultaneously. Therefore, there are three next writable addresses NWA for R zones. For example, file management information can be recorded in an open R zone and video data can be recorded in an invisible R zone. When video data is recorded, the next writable address NWA of the invisible R zone slips out of the begin address, resulting in an incomplete R zone.

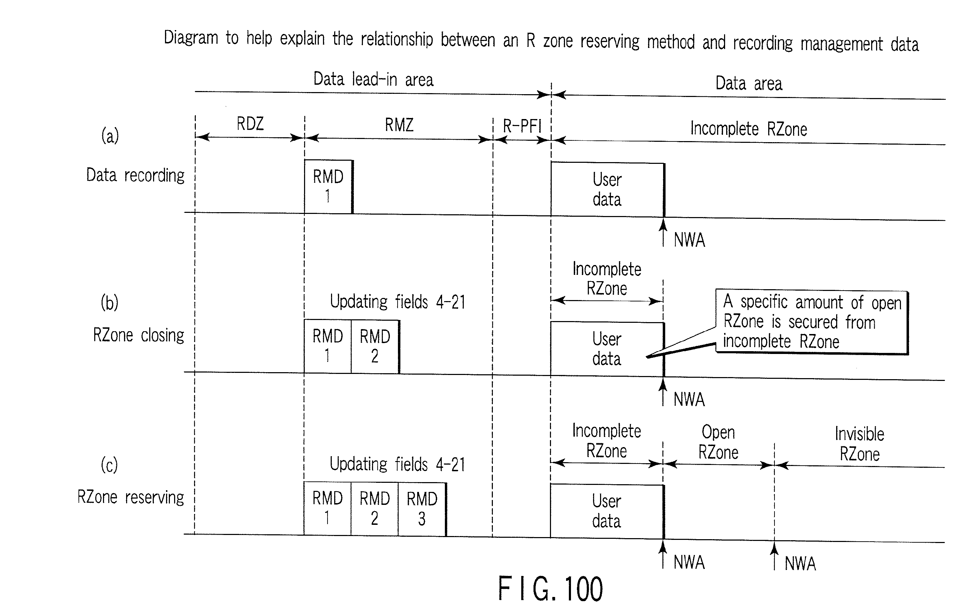

FIG. 100 shows the relationship between a method of setting R zones and recording management data RMD in the information recording and reproducing apparatus of the embodiment. Suppose no open R zone has been set in the data area and only an incomplete R zone exists as shown in FIG. 100, (a). Recording management data RMD1 in an incomplete R zone has been recorded in an recording management zone RMZ. Explanation will be given about a case where video data is recorded in an incomplete R zone and then management information is recorded in another zone. First, as shown in FIG. 100, (b), to close an R zone, an incomplete R zone is turned into a complete R zone. That is, the end address of the user data is set as the end address of an R zone. Recording management data RMD2 in a complete R zone (RMD fields 4 to 21 are updated) is additionally recorded in the recording management zone RMZ. As shown in FIG. 100, (c), an open R zone of a specific size is set (reserved) outside the complete R zone and the outside of the open R zone is set as an invisible R zone. Recording management data RMD3 in the open zone and invisible R zone are additionally recorded in the recording management zone RMZ.

As described later, an open R zone is also reserved when the recording management zone RMZ is extended.

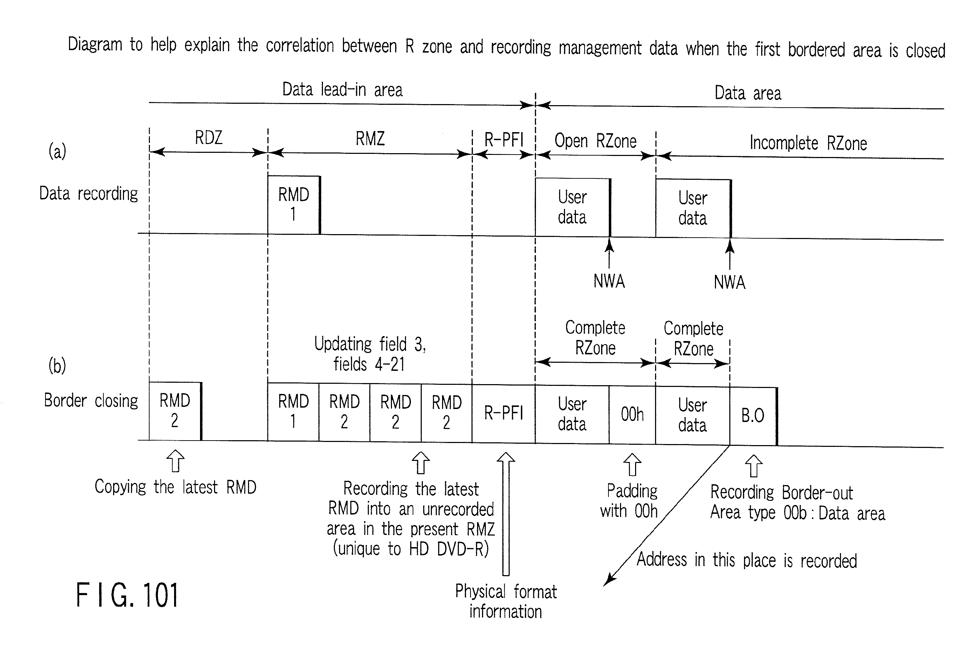

FIG. 101 is a diagram to help explain a correlation between an R zone and recording management data RMD when the first bordered area is closed. Suppose an open R zone and an incomplete R zone are set in the data area as shown in FIG. 101, (a). In the recording management zone RMZ, recording management data RMD1 is recorded. When border closing is done, the unrecorded area of the open R zone is padded with "00h" to form a complete R zone and turn the incomplete R zone into a complete R zone. Outside the complete R zone, border-out is set. Recording management data RMD2 (fields 3 and 4 to 21 in RMD are updated) in the complete R zone and border-out is additionally recorded into the recording management zone RMZ and, at the same time, the latest RMD2 is copied into the RMD duplication zone RDZ. The area type of the border-out is 00b: data area. The begin address of the border-out is recorded into update physical format information R-PFI. Border closing is done to pad an unrecorded part with recording data to enable a recordable storage medium to be reproduced on a player. To do this, the unrecorded area of the recording management zone is padded with the latest RMD2.

FIG. 102 is a diagram to help explain the procedure for a finalizing process in the information recording and reproducing apparatus of the present embodiment. Border closing differs from finalization in that, even when border closing is done, a bordered area can be set again (or can be additionally recorded) and that, after finalization is performed, a bordered area can never be additionally recorded. The finalizing process of the embodiment can be realized by modifying a part of the border closing process, which shortens the finalize time. Finalization of FIG. 102 differs from border closing of FIG. 101 in that the area type of border-out is set as 10b: data lead-in area and that the disk status of field 0 in recording management data RMD2 is set as 02h: "indicates that the disk is finalized" (point <L11> in FIGS. 133A and 133B). Specifically, when border closing is done, border-out is set as a bordered area so as to enable border-in to be set again. In contrast, when finalization is performed, border out is set as a data lead-out area so as to close the data area. At the same time, to indicate the finalization of the disk, the disk status of field 0 in recording management data RMD2 is set to 02h. As described above, the data unrecorded area is turned into a data lead-out area, making it unnecessary to fill the unrecorded area of the data area with data, which shortens the finalize time.

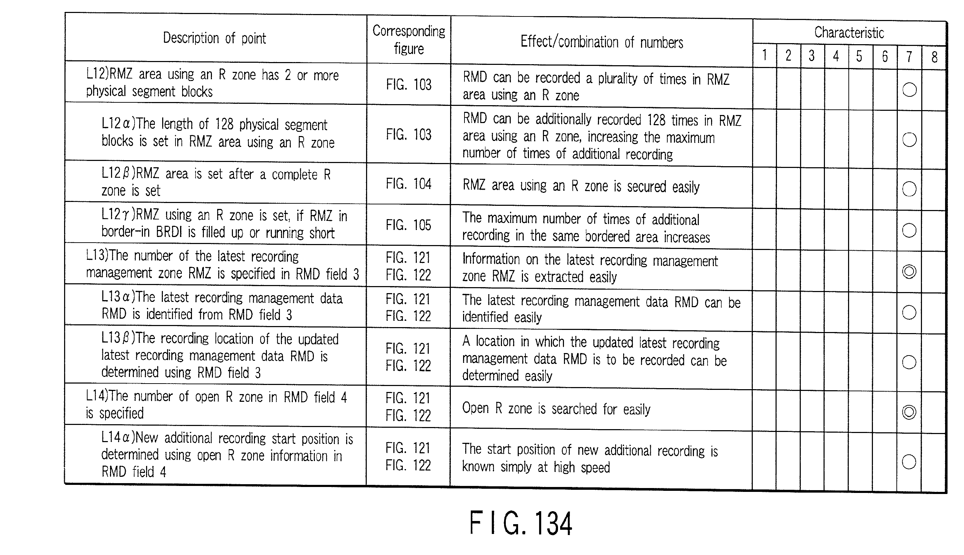

FIG. 103 is a diagram to help explain the principle of setting an extended recording management zone EX.RMZ using R zones in this embodiment. FIG. 103, (a) is the same as FIG. 97, (a). Suppose there is a request to extend the recording management zone RMZ without closing the border. In that case, as shown in FIG. 103, (b), the incomplete R zone is changed to a complete R zone, a bordered area (128 physical segment blocks) is set outside the complete R zone, and an extended recording management zone EX.RMZ is set in the bordered area (point <C8> in FIGS. 126A and 126B, points <L12>, <L12$\alpha$> in FIG. 134). The part outside the bordered area is an invisible R zone. In this case, when the unrecorded area of the open R zone is filled with data "00h," border-out need not be set adjacent to the complete R zone.

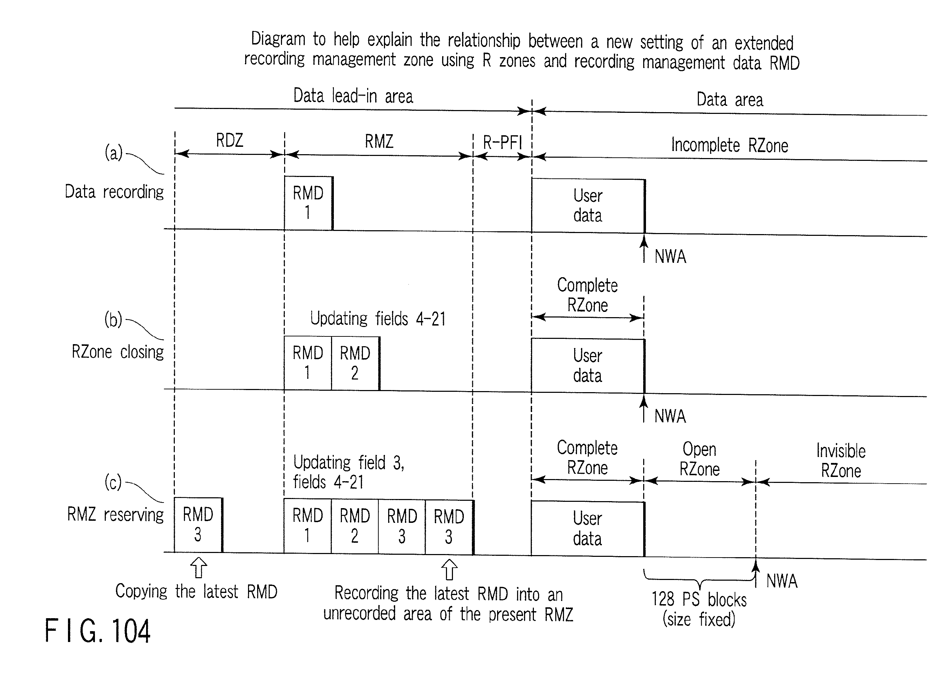

FIG. 104 is a diagram to help explain the relationship between the setting of a new extended recording management zone EX.RMZ using R zones and recording management data RMD. When the remaining capacity of the recording management zone drops below a certain value, the recording management zone RMZ can be extended. As shown in FIG. 104, (a), an incomplete R zone is set in the data area and user data is recorded. In the recording management zone RMZ, recording management data RMD1 of the user data is recorded. When the R zone is closed, the incomplete R zone is turned into a complete R zone as shown in FIG. 104, (b). That is, the last address of the user data is set as the last address of the R zone. Recording management data RMD2 (fields 4 to 21 in RMD are updated) in the complete R zone is additionally recorded into the recording management zone RMZ. As shown in FIG. 104, (c), an open recording management zone RMZ of a specific size (128 physical segment blocks) is reserved (set) outside the complete R zone and the part outside the open recording management zone RMZ is set as an invisible R zone. Recording management data RMD3 (fields 3, 4 to 21 in RMD are updated) in the open recording management zone RMZ and invisible R zone are additionally recorded into the unrecorded area of the recording management zone RMZ and, at the same time, RMD3 is copied into the RMD duplication zone RDZ (point <L12$\beta$> in FIG. 134).

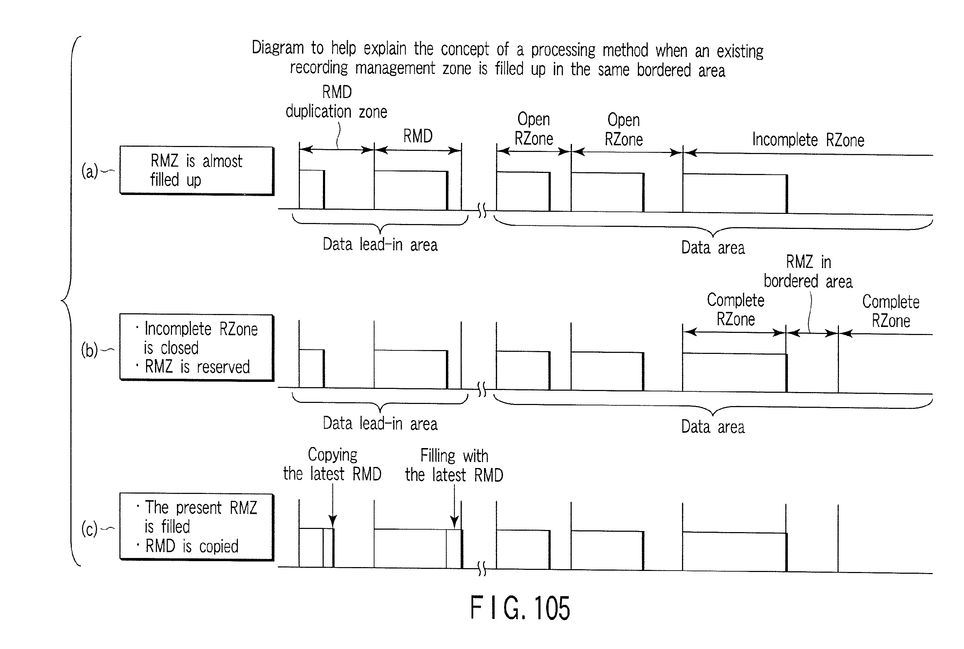

FIG. 105 is a diagram to help explain the concept of a processing method when the existing recording management data RMD has become full in the same bordered area. As shown in FIG. 105, (a), when the recording management zone RMZ in the data lead-in area is almost filled up, the incomplete R zone, as shown in FIG. 105, (b), is turned into a complete R zone as in FIG. 103, (b), and a bordered area (128 physical segment blocks) is set outside the complete R zone. In the bordered area, an extended recording management zone EX.RMZ is set. The part outside the bordered area is an invisible R zone. Thereafter, as shown in FIG. 105, (c), the unrecorded area of the recording management zone RMZ is filled with the latest recording management data RMD and the latest recording management data RMD is copied into the RMD duplication zone RDZ (point <L12$\gamma$> in FIG. 134).

FIG. 108 is a diagram to help explain a method of searching for the recording position of the latest recording management data RMD using an RMD duplication zone RDZ in the information reproducing apparatus or information recording and reproducing apparatus of the present embodiment.

FIG. 108, (a) shows a case where the recorder searches for the latest recording management data RMD7. The RMD duplication zone RDZ in the data lead-in area is found from the control data zone in the system lead-in area. Then, the recording management data RMD is traced. Since the begin physical sector number of the extended recording management zone RMZ is recorded in the recording management data RMD, the latest recording management data RMD7 in the extended recording management zone RMZ in the third border can be found (point <L6> in FIGS. 132A and 132B).

As shown in FIG. 108, (b), the ROM drive cannot access an unrecorded area and the recording management data RMD cannot be interpreted.

FIGS. 22A and 22B show a data structure of a control data zone CDZ and that of an R physical information zone RIZ. As shown in FIG. 22A, (b), in the control data zone CDZ, there are Physical Format Information PFI and Disk Manufacturing Information DMI. In the R physical information RIZ, there are Disk Manufacturing Information DMI and R Physical Format Information R_PFI.

In the disk manufacturing information DMI, information 251 on the name of the country where the medium was manufactured and information 252 on the country to which the medium manufacturer belongs have been recorded (point <F> in FIG. 127). A warning of infringement is often given in a country that has a location of manufacture when a sold information storage medium has committed a patent violation or in a country information storage mediums have been consumed (or used). The recording of the above information is required to be done in the information storage medium, making the location of manufacture (country name) clear and making it easier to give a warning of patent violation, which guarantees intellectual property and promotes technological advances. Moreover, in the disk manufacturing information DMI, other disk manufacturing information 253 is also recorded.

This embodiment is characterized in that the type of information to be recorded is determined by the recording place (or the byte positions relative to the starting position) in physical format information PFI or R physical format information R_PFI (point <G> in FIGS. 128A and 128B). Specifically, as the recording place in physical format information PFI or R physical format information R_PFI, common information 261 in the DVD family is recorded in a 32-byte area ranging from the $0^{th}$ byte to $31^{st}$ byte, common information 262 in the HD_DVD family to be handled in the embodiment is recorded in a 96-byte area ranging from the $32^{nd}$ byte to $127^{th}$ byte, unique information 263 about the types of written standards and part versions is written in a 384-byte area ranging from the $128^{th}$ byte to $511^{th}$ byte, information corresponding to each revision is recorded in a 1536-byte area ranging from the $512^{th}$ byte to $2047^{th}$ byte. As described above, the information arrangement positions in the physical format information are standardized according to the contents of information, thereby standardizing the places of recorded information, regardless of the type of medium, which enables the reproducing processes in the information reproducing apparatus or information recording and reproducing apparatus to be standardized and simplified. As shown in FIG. 22B, (d), the common information 261 in the DVD family recorded in the $0^{th}$ byte to $31^{st}$ byte is divided into information 267 that is recorded in the $0^{th}$ byte to the $16^{th}$ byte in each of a reproduce-only, a rewritable, and a recordable information storage medium and information 268 that is recorded in the $17^{th}$ byte to $31^{st}$ byte in each of a rewritable and a recordable information storage medium and is not recorded in a reproduce-only information storage medium.

FIGS. 23A and 23B show a comparison between the concrete contents of information in physical format information PFI or R physical format information R_PFI shown in FIGS. 22A and 22B and the types of mediums (a reproduce-only, a rewritable, or a recordable) in physical format information PFI. As information 267 in the common information 261 in the DVD family recorded in each of a reproduce-only, a rewritable, and a recordable information storage medium, information on the type of written standards (reproduce-only/rewritable/recordable), version number information, medium size (diameter), maximum possible data transfer rate information, medium structure (a single layer of a double layer, the presence or absence of an emboss pit/recordable area/rewritable area), recording density (linear density and track density), location information on the data area DTZ, and information on the presence or absence of a burst cutting area BCA (this area is present in each of a reproduce-only, a rewritable, and a recordable information storage medium) are recorded in that order in byte position 0 to byte position 16.

Revision number information that determines the maximum recording speed, revision number table (application revision number), cluster state information, and expanded (part) version are recorded in the $28^{th}$ byte to $31^{st}$ byte in that order as common information 261 in the DVD family and information 268 similarly recorded in each of a rewritable and a recordable information storage medium. The present embodiment is characterized in that revision information corresponding to the recording speed is recorded in the $28^{th}$ byte to $31^{st}$ byte of the recording area of physical format information PFI or R physical format information R_PFI (point (G1) in FIGS. 128A and 128B). With the development of a medium with an increased recording speed, such as double speed or quad speed, this has involved an immense amount of time and effort to remake written standards accordingly.

In contrast, in the embodiment, written standards are divided into a version book whose version is changed when the contents are changed greatly and a revision book which is revised according to a small change in the recording speed or the like. Each time the recording speed is improved, only a revision book where only the revision has been updated is issued. This produces the effect of guaranteeing the function of expanding a medium to a future high-speed-recording-compatible medium. In addition, since standards can be dealt with by a simple method of revision, when a new high-speed-recording-compatible medium is developed, this can be coped with at high speed. This embodiment is particularly characterized in that providing separately a field for revision number information that determines the maximum recording speed at the 17th byte and a field for revision number information that determines the minimum recording speed at 18th byte enables different revision numbers to be assigned to the maximum and minimum values of the recording speed (point <G1α> in FIGS. 128A and 128B). For instance, when a recording film which enables very high speed recording has been developed, the recording film makes it possible to record data at very high speed, but often cannot record data suddenly when the recording speed is lowered. In addition, such a recording film as enables the minimum possible recording speed to be lowered may be often very expensive. In contrast, as in the embodiment, revision numbers are made settable separately using the maximum value and minimum value of the recording speed, making the selection range of exploitable recording films wider, which produces the effect of enabling a higher-speed recordable medium and a lower-price medium to be supplied. In the information recording and reproducing apparatus of the embodiment, information on the maximum possible recording speed and the minimum possible recording speed for each revision have been known beforehand. When an information storage medium is installed in the information recording and reproducing apparatus, the information recording and reproducing section 141 of FIG. 1 first reads the information in physical format information PFI or R physical format information R_PFI. On the basis of the acquired revision number information, the control section 143 calculates the maximum possible recording speed and minimum possible recording speed of the installed information storage medium, referring to the maximum possible recording speed and minimum possible recording speed for each revision previously recorded in the memory section 175 of the control section 143. On the basis of the result, recording is done at the optimum recording speed.

Next, explanation will be given about unique information 263 on the types and versions of written standards in the 128th byte to 511th byte and the contents 264 of information uniquely settable in the 512th type to 2047th byte on a revision basis in FIG. 22B, (c). Specifically, in the unique information 263 on the types and versions of written standards in the 128th byte to 511th byte, the meaning of the contents of recording information in each byte position in the rewritable information storage medium coincides with that in the recordable one. In information content 264 uniquely set on a revision basis in the 512th byte to 2047th byte, the meaning of the contents of information at each byte position is allowed to differ if the revision is different, in not only a rewritable and a recordable information storage medium differing from each other in type but also the same type of mediums.

As shown in FIGS. 23A and 23B, in the unique information 263 on the types and versions of written standards where the meaning of the contents of information at each byte position in each of a rewritable and a recordable information storage medium, information on the name of the medium manufacturer, additional information from the medium manufacturer, information on the polarity (identifying whether it is High-to-Low or Low-to-High) of a recording mark, information on linear velocity in recording or reproducing, the rim intensity value of the optical system in the circumferential direction, the rim intensity value of the optical system in the radial direction, and recommended laser power (the amount of light on the recording surface) in reproduction are recorded in that order sequentially.

This embodiment is particularly characterized in that information MPD (Mark Polarity Descriptor) on the polarity of a recording mark (identifying whether it is High-to-Low or Low-to-High) is recorded in the 192nd byte. In a conventional rewritable or recordable DVD disk, only a High-to-Low recording film where the amount of reflected light in a recording mark was low in the unrecorded state (the reflection level was relatively high) was allowed. When a request was made for "high-speed recording" and "lower price" or the physical performance, including "the decrease of cross erase" and "an increase in the upper limit of the number of rewriting," this could not be dealt with only by a conventional High-to-Low recording film. In contrast, since the present embodiment permits the use of not only a High-to-Low recording film but also a Low-to-High recording film where the amount of reflected light increases in a recording mark, this produces the effect of incorporating not only a conventional High-to-Low recording film but also a Low-to-High recording film into standards to widen the recording film selection range and therefore enabling high-speed recording and the supply of low-cost mediums.

A method of implementing a concrete information recording and reproducing apparatus will be explained below. In a version book or a revision book, both of the reproduced signal characteristic of a High-to-Low recording film and that of a Low-to-High recording film are written. According to the description, two types of handling circuits are prepared in the PR equalizing circuit 130 and Viterbi decoder 156. When an information storage medium is installed in the information reproducing section 141, the slice level detecting circuit 132 to read the information in the system lead-in area SYLDI is first activated. After the slice level detecting circuit 132 reads information on the polarity of the recording mark recorded in the 192nd byte (identifying whether it is High-to-Low or Low-to-High), it is determined whether it is a High-to-Low recording film or a Low-to-High recording film. After the circuits in the PR equalizing circuit 130 and Viterbi decoder 156 are switched according to the result of the determination, the information recorded in the data lead-in area DTLDI or data area DTA is reproduced. This method makes it possible to read the information in the data lead-in area DTLDI or data area DTA relatively fast and with high accuracy. Revision number information that determines the maximum recording speed is recorded in the 17th byte and revision number information that determines the minimum recording speed is recorded in the 18th byte. They only give information on the range determining the maximum and minimum values. Since information on the optimum linear speed is needed in recording to record data most stably, its information is recorded in the 193rd byte.

The embodiment is furtherer characterized in that the rim intensity value of the optical system in the radial direction in the 194th byte and that of the optical system in the radial direction in the 195th byte are arranged as optical system condition information in a position that precedes various types of recording condition (write strategy) information included in information content 264 uniquely settable on a revision basis. These pieces of information mean condition information on the optical system of the optical head used in determining the recording condition placed behind them. Rim intensity means the distribution of incident light which enters the objective before converging on the recording surface of the information storage medium and is defined as the value of intensity at the periphery of the objective (or at the margin of the pupil surface) if the central intensity of the intensity distribution of incident light is "1." The intensity distribution of incident light to the objective is not symmetric with respect to a point, but is an elliptic distribution. Since the value of the rim intensity in the radial direction of the information storage medium differs from that in its circumferential direction, the two values are recorded. The larger the value of the rim intensity, the smaller the condensed spot size on the recording surface of the information storage medium becomes. As a result, depending on the value of the rim intensity, the optimum recording power condition changes greatly.

Since the information recording and reproducing apparatus has known information on the value of the rim intensity of its own optical head, it first reads the value of the rim intensity of the optical system along each of the circumference and the radius recorded on the information storage medium and compares these values with the values of its own optical head. If the result of the comparison has shown no great difference, the recording condition recorded behind can be applied. If the result of the comparison has shown a great difference, the recording condition recorded behind has to be ignored and the optimum recording condition needs to be determined, while the information recording and reproducing apparatus itself is doing trial writing using the drive test zone DRTZ written in FIG. 16 or 18.

As described above, it is necessary to determine quickly whether to use the recording condition recorded behind or ignore the information and start to find the optimum recording condition while performing trial writing. As shown in FIGS. 23A and 23B, the condition information on the optical system from which the condition has been determined is placed in a position preceding the position in which recommended recording conditions have been recorded, which produces the effect of enabling the rim intensity information to be read and then making it possible to determine at high speed whether the recording condition placed behind can be applied.

As described above, with the present embodiment, the written standards are divided into a version book where the version is changed if the contents have been change greatly and a revision book whose revision is changed according to a small change in the recording speed or the like. Each time the recording speed is improved, only a revision book whose revision alone has been updated is issued. Therefore, since the revision number is different, the recording condition in the revision block changes. Thus, information about the recording condition (write strategy) is recorded in information content 264 uniquely settable mainly in the 512th byte to 2047th byte on a revision basis. As seen from FIGS. 23A and 23B, information content 264 uniquely settable in the 512th byte to 2047th byte on a revision basis permits the meaning of the recorded information content at each byte position to differ from one another if the revision is different, in not only a rewritable and a recordable information storage medium differing in type from each other but also mediums of the same type.

The definitions of peak power, first bias power, second bias power, and third bias power coincide with the power values defined in FIG. 19. The end time of a first pulse in FIGS. 23A and 23B means $T_{EFP}$ defined in FIG. 19. The multi-pulse interval means $T_{MP}$ defined in FIG. 19. The starting time of a last pulse in FIGS. 23A and 23B means $T_{SLP}$ defined in FIG. 19. The period of the second bias power of 2T mark means $T_{LC}$ defined in FIG. 19.

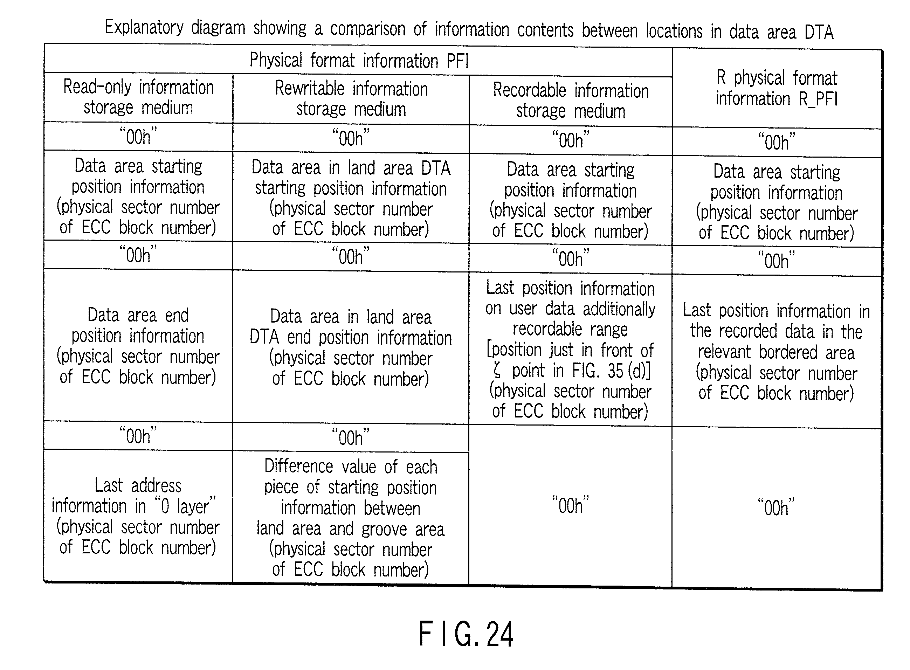

FIG. 24 shows a comparison of detailed information on the location of the data area DTA recorded in the 4th byte to the 15th byte shown in FIG. 23A. The starting position information on the data area DTA is recorded equally, regardless of the type of medium and of whether physical format information PFI or R physical format information R_PFI is used. End position information on the data area DTA is recorded as information indicating the end position in the information recording and reproducing apparatus.

As shown in FIG. 12A, FIG. 12B, in a rewritable information storage medium, the place whose physical sector number is the largest is in the groove area. End position information on the data area DTA in the land area is recorded there.

In the physical format information PFI on a recordable information storage medium, the last position information on the additionally recordable range of the user data is recorded. For example, in FIG. 18B, (e), the position information means a position just in front of point ζ.

In contrast, in the R physical format information R_PFI on a recordable information storage medium, the last position information in the recorded data in the relevant bordered area BRDA is recorded.

Furthermore, in the reproduce-only information storage medium, information on the last address in the "layer 0," a front layer when viewed from the reproduction optical system, is also recorded. In the rewritable information storage medium, the difference value between the starting position of the land area and that of the groove area is also recorded.

As shown in FIG. 16, (c), the recording management zone RMZ exists in the data lead-in area DTLDI. Then, as shown in FIG. 21B, (d), its copy information also exists as copy information C_RMZ on the contents recorded in the recording management zone RMZ in the border-out BRDO. As shown in FIG. 17A, (b), in the recording management zone RMZ, recording management data RMD of the same data size as one physical segment block size is recorded. Each time the contents of the recording management data RMD are updated, the updated new recording management data RMD are added behind. FIGS. 25 to 30 show a detailed data structure of one item of recording management data RMD. The recording management data RMD is further divided into small RMD field information RMDF, one piece of which is of a 2048-byte size.

The first 2048 bytes in the recording management data RMD are allocated to a reserved area.

In RMD field 0 made up of the next 2048 bytes, recording management data format code information, medium state information indicating whether the present medium is (1) in the unrecorded state, (2) now being recorded before finalization, or (3) after finalization, unique disk ID (disk identifying information), location information on the data area DTA and on the latest (updated) data DTA, and location information on the recording management data RMD are arranged in that order. In the location information on the data area DTA, starting position information on the data area DTA and last position information (this information indicates a position right in front of point β in the embodiment of FIG. 18A, (d)) on the recordable range 204 of the user data in initialization are recorded as information indicating the additionally recordable range 204 (FIG. 18A, (d)) of user data in the initial state.

As shown in FIGS. 18B, (e) and (f), this embodiment is characterized in that an extended drive test zone EDRTZ and an extended spare area ESPA can be set in the additionally recordable range 204 of user data (point <E2> in FIG. 127). However, such extensions make the additionally recordable range 205 of user data narrower. The embodiment is characterized in that related information is recorded in "location information on the latest (updated) data area DTA" to prevent user data from being additionally recorded in the extended areas EDRTZ and ESPA by mistake. Specifically, from information identifying whether an extended drive test zone EDRTZ is present or absent, it is seen whether an extended drive test zone EDRTZ has been added. From information identifying whether an extended spare area ESPA is present or absent, it is seen whether an extended spare area ESPA has been added.

Furthermore, as shown in FIGS. 25 to 30, the last position of the recordable range 205 of the latest user data recorded in location information on the latest (updated) data area DTA in RMD field 0 exists as recordable range information on the additionally recordable range 205 of user data managed in the recording management data RMD (point <E> in FIG. 127), enabling the additionally recordable range 205 of user data in FIG. 18B, (f) to be found immediately, which makes it possible to detect the size of an unrecorded area recordable in the future (or the remaining amount of the unrecorded area) at high speed. This produces the effect of, for example, enabling the programmed recording time set by the user to be recorded into a medium without any omissions at the highest possible picture quality by setting the transfer rate in the optimum recording according to the programmed recording time set by the user. In the embodiment of FIG. 18A, (d), "the last position of the recordable range 205 of the latest user data" means a position just in front of point ζ. These pieces of position information may be written in ECC block address numbers as another embodiment instead of writing them in physical sector numbers (point <E1> in FIG. 127). As described later, in the embodiment, 32 sectors constitute one ECC block. Therefore, the low-order 5 bits of the physical sector number of the sector placed at the head of a specific ECC block coincide with the sector number of the sector placed at the begin position of the adjacent ECC block.

When the physical sector number is so set that the low-order 5 bits of the physical sector number of the sector placed at the head of the ECC block are "00000," the values of the low-order 6th and later bits of the physical sector numbers of all the sectors existing in the same ECC block coincide with one another. Therefore, address information obtained by removing the low-order 5 bits of the physical sector numbers of the sectors existing in the same ECC block and extracting only the data in the low-order 6th and later bits is defined as ECC block address information (or ECC block address number). As described later, since data segment address information (or physical segment block number information) previously recorded by wobble modulation coincides with the ECC block address, writing position information in the recording management data RMD in ECC block address numbers produces the following effects:

(1) Access to an unrecorded area is particularly made faster
The reason is that, since a position information unit in the recording management data RMD coincides with an information unit of data segment addresses previously recorded by wobble modulation, this makes it easy to calculate the difference.
(2) The management data size in the recording management data RMD can be made smaller

The reason is that the number of bits necessary to write address information can be saved by 5 bits per address.

As described later, one physical segment block length coincides with one data segment length. In one data segment, one ECC block of user data is recorded. Therefore, addresses are expressed in "ECC block address numbers," "ECC block addresses," "data segment addresses," "data segment numbers," "physical segment block numbers," or the like. All of these expressions are synonymous terms.

As shown in FIGS. 25 to 30, in location information on the recording management data RMD in RMD field 0, set size information on the recording management zone RMZ in which the recording management data RMD can be additionally recorded sequentially is recorded in ECC blocks or physical segment blocks. As shown in FIG. 17A, (b), since one recording management zone RMZ is recorded on a physical segment block basis, it is seen from the information that the recording management data RMD updated a specific number of times can be additionally recorded in the recording management zone RMZ. Then, the present recording management data number in the recording management zone RMZ is recorded. This means information on the number of items of recording management data RMD already recorded in the recording management zone RMZ. For instance, in FIG. 17A, (b), suppose the information is present in recording management data RMD#2. Since the information is recording management data RMD second recorded in the recording management zone RMZ, the value "2" is recorded in this field. Then, information on the remaining amount of the recording management zone RMZ is recorded. The information means information on the number of items of recording management data RMD further addable in the recording management zone RMZ. The information is written in physical segment blocks (= ECC blocks = data segments). The following relationship holds between the three types of information:

```
<Set size information on RMZ>
= <Present recording management data number> +
<the remaining amount of RMZ>
```

The embodiment is characterized in that information on the amount of the recording management zone RMD already used by recording management data RMD or on the remaining amount is recorded in the recording area in the recording management data RMD (point <E7> in FIG. 127).

For instance, when all of the information is recorded onto a single recordable information storage medium at a time, recording management data RMD has to be recorded only once. To do recording repeatedly by additionally recoding user data minutely onto a single recordable information storage medium (or additionally recording user data into the additionally recordable range 205 of user data in FIG. 18B, (f)), the recording management data RMD updated each time additional writing is performed has to be additionally recorded. In this case, when recording management data RMD is additionally recorded frequently, the unrecorded area 206 of FIG. 17A, (b) is used up. Thus, the information recording and reproducing apparatus has to deal with this problem. Recording information on the amount of the recording management zone RMZ already used by recording management data RMD or the remaining amount into the recording area in the recording management data RMD makes it possible to find beforehand that the recording management zone RMZ cannot be additionally recorded into, which enables the information recording and reproducing apparatus to cope with the problem early.

As moving from FIG. 18B, (e) to FIG. 18B, (f), the embodiment is characterized by being capable of setting a data lead-out area DTLDO in such a manner that it includes an extended drive test zone EDRTZ (point <E4> in FIG. 127). At this time, the starting position of the data lead-out area DTLDO is changed from point $\beta$ to point $\varepsilon$ in FIG. 18B, (e). To manage this situation, a field in which information on the starting position of the data lead-out area DTLDO is to be recorded is provided in location information on the latest (updated) data area DTA in RMD field 0 as shown in FIGS. 25 to 30. As described above, a drive test (trial writing) is recorded in clusters which can be basically extended in data segments (ECC blocks). Therefore, information on the starting position of the data lead-out area DTLDO is written in ECC block address numbers. As another embodiment, information on the starting position may be written in the physical sector number of the physical sector placed at the beginning of the first ECC block, the physical segment block number, the data segment address, or the ECC block address.

In RMD field 1, history information on the information recording and reproducing apparatus which has recorded data onto a compatible medium is recorded. Manufacturer identifying information on each of the information recording and reproducing apparatuses, the serial number and model number written in ASCII code, information on the date that the recording power was adjusted using a drive test zone, and information on recording conditions under which additional recording was done are written according to the format of all recording condition information in information 264 (FIGS. 23A and 23B) that can be uniquely set on a revision basis.

RMD field 2 is an area available to the user. In RMD field 2, the user can record, for example, information on the contents recorded (or to be recorded).

In RMD field 3, information on the starting position of each border zone BRDZ is recorded. That is, as shown in FIGS. 25 to 30, information on the starting positions of the first border-out to fiftieth border-out BRDO is written in physical sector numbers.

For example, in the embodiment of FIG. 21A, (c), the starting position of the first border-out BRDO represents the position of point η and the starting position of the second border-out BRDO represents the position of point θ.

In RMD field 4, position information on an extended drive test zone is recorded. The last position information on the place already used for trial writing in the drive test zone DRTZ in the data lead-in area DTLDI of FIG. 16, (d) and the last position information on the place already used for trial writing in the drive test zone DRTZ in the data lead-out area DTLDO of FIG. 18A, (d) to FIG. 18B, (f) are recorded. The drive test zone DRTZ is used sequentially for trial writing from the inner edge side (or from a small physical sector number) toward the outer edge (in the direction in which the physical sector number increases). A unit of place used in trial writing is a cluster, which is a unit of additional recording as described later. Therefore, when the last position information on the place already used for trial writing is written in a ECC block address number or in a physical sector number, the physical sector number of the physical sector placed at the end of the ECC block used for trial writing is written. Since the place once used for trial writing has been already recorded into, when next trial writing is done, trial writing is performed behind the last position already used for trial writing. Therefore, using the last position information (= the amount of the drive test zone DRTZ already used) already used for trial writing in the drive test zone DRTZ (point <E5> in FIG. 127), the information recording and reproducing apparatus can not only find instantly where trial writing is to be started but also determine from the information whether there is an empty space enabling trial writing in the drive test zone DRTZ.

In the drive test zone DRTZ in the data lead-in area DTLDI, information on the area size that further enables additional writing or flag information that indicates whether the drive test zone DRTZ has been used up, and information on an area size that enables further additional writing in the drive test zone DRTZ in the data lead-out area DTLDO or flag information that indicates whether the drive test zone DRTZ has been used up are recorded. Since the size of the drive test zone DRTZ in the data lead-in area DTLDI and the size of the drive test zone DRTZ in the data lead-out area DTLDO are known, it is possible to determine the size (or the remaining amount) of an area where additional writing can be further done in the drive test zone DRTZ, on the basis of only information on the last position of the place already used for trial writing in the drive test zone DRTZ in the data lead-in area DTLDI or in the drive test zone DRTZ in the data lead-out area DTLDO. However, having this information in the recording management data RMD (point <E5> in FIG. 127) enables the remaining amount of the drive test zone DRTZ to be known immediately, which makes it possible to shorten the time required to determine whether to set a new extended drive test zone EDRTZ.

As another embodiment, in this field, flag information that indicates whether the drive test zone DRTZ has been used up may be recorded instead of information on the size (the remaining amount) of an area where additional writing can be further done in the drive test zone DRTZ. When a flag which enables the fact that the zone DRTZ has been used up to be known immediately is set, this eliminates the possibility that an attempt will be made to do trial writing in this area by mistake.

In RMD field 4, information on the number of additional setting in the extended drive test zone EDRTZ is recorded. In the embodiment of FIG. 18B, (e), since extended drive test zone 1 EDRTZ1 and extended drive test zone 2 EDRTZ2 are set, it follows that "the number of additional setting of extended drive test zone EDRTZ = 2." Moreover, in field 4, range information on each extended drive test zone EDRTZ and information on the range already used for trial writing are recorded. As described above, when position information on the extended drive test zones is made capable of being managed in the recording management data RMD (point <E6> in FIG. 127), this makes it possible not only to set the extension of an extended drive test zone EDRTZ a plurality of times but also to manages position information on the extended drive test zones EDRTZ added by updating additional recording of recording management data RMD in the recordable information storage medium. Therefore, it is possible to eliminate the possibility that the extended drive test zone EDRTZ will be mistaken for the additionally recordable range 204 of user data (FIG. 18A, (d)) and user data will be written over the extended drive test zone EDRTZ.

As described above, since trial writing is done in clusters (or ECC blocks), the range for each extended drive test zone EDRTZ is specified on an ECC block address basis. In the embodiment of FIG. 18B, (e), information on the starting position of the first set extended drive test zone EDRTZ indicates point γ because extended drive test zone 1 EDRTZ1 is set first. Information on the end position of the first set extended drive test zone EDRTZ corresponds to a position just in front of point β. The position information is written in ECC block address numbers or physical sector numbers.

While in the embodiment of FIGS. 25 to 30, information on the end position of the extended drive test zone EDRTZ is shown, information on the size of the extended drive test zone EDRTZ may be written instead of the end position information. In this case, the size of the first set extended drive test zone 1 EDRTZ1 is "β - γ." Moreover, information on the last position of the area already used for trial writing in the first set extended drive test zone EDRTZ is also written in ECC block address numbers or physical sector numbers. Then, information on the size (or the remaining amount) of an area where additional writing can be further done in the first set extended drive test zone EDRTZ is recorded. Since the size of the extended drive test zone 1 EDRTZ1 and the size of the area already used there are known from the above information, the size (or the remaining amount) of the area where additional writing can be further done is determined automatically. However, providing this field (point <E5> in FIG. 127) makes it possible to find instantly whether the present drive test zone is sufficient in carrying out a new drive test (trial writing), thereby shortening the time required to determine an additional setting of an extended drive test zone EDRTZ. This field enables information on the size (or the remaining amount) of the area where additional writing can be further done to be recorded. As another embodiment, flag information that indicates whether the extended drive test zone EDRTZ has been used up may be set in this field. When a flag that enables the fact that the zone EDRTZ has been used up to be known instantly is set, this eliminates the possibility that an attempt will be made to do trial writing in this area.

A method of setting a new extended drive test zone EDRTZ in the information recording and reproducing apparatus of FIG. 1 and doing trial writing there will be explained.

(1) A recordable information storage medium is installed in the information recording and reproducing apparatus.

(2) The information recording and reproducing section 141 reproduces the data formed in the burst cutting area BCA and sends the reproduced data to the control section 143. The control section 143 deciphers the transferred information and determines whether to go to the next step.

(3) The information recording and reproducing section 141 reproduces the information recorded in the control data zone CDZ in the system lead-in area SYLDI and transfers the reproduced information to the control section 143.

(4) The control section 143 compares the value (in the $194^{th}$ byte and $195^{th}$ byte of FIGS. 23A and 23B) of the rim intensity when recommended recording conditions are determined with the value of the rim intensity of the optical head used in the information recording and reproducing section 141 and determines the size of an area necessary for trial writing.

(5) The information recording and reproducing section 141 reproduces the information in the recording management data and sends the reproduced information to the control section 143. The control section deciphers the information in RMD field 4 and determines whether there is a margin for the size of the area necessary for trial writing determined in item (4). If there is a margin, the information recording and reproducing section 141 proceeds to item (6). If there is no margin, it proceeds to item (9).

(6) A place where trial writing is to be done this time is determined from the drive test zone DRTZ to be used for trial writing in RMD field 4 or information on the last position of the place already used for trial writing in the extended drive test zone EDRTZ.

(7) Trial writing is done over the size determined in item (4), staring at the place determined in item (6).

(8) Since the place used for trial writing by the process in item (7) has increased, recording management data RMD in which information on the last position of the place already used for trial writing has been updated is stored in the memory section 175 temporarily. Then, control goes to item (12).

(9) The information recording and reproducing section 141 reads information on "the last position of the recordable range 205 of the latest user data" recorded in RMD field 0 or "information on the last position of the additionally recordable range of user data" recorded in information on the location of the data area DTA in the physical format PFI of FIG. 24. The control section 143 sets the range of a newly set extended drive test zone EDRTZ.

(10) On the basis of the result of item (9), information on "the last position of the recordable range 205 of the latest user data" recorded in RMD field 0 is updated. At the same time, the number of additional setting of an extended drive test zone EDRTZ in the RZMD field 4 is incremented by one (or the number of additional setting is increased by one). Then, recording management data RMD obtained by further adding information on the begin/end positions of a newly set extended drive test zone EDRTZ is stored temporarily in the memory section 175.

(11) Control goes from item (7) to item (12).

(12) Under the optimum recoding conditions obtained as a result of trial writing in item (7), the necessary user information is additionally recorded in the additionally recordable range 205 of user data.

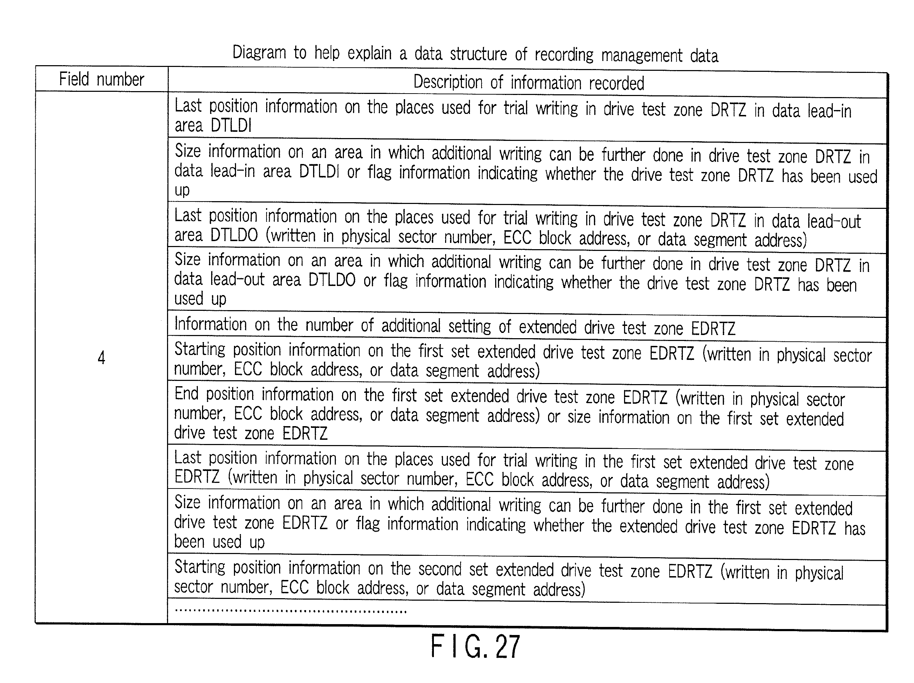

(13) The recording management data RMD updated by additionally recording information (FIG. 27) on the begin/end positions of a newly created R zone in item (12) is stored temporarily in the memory section 175.

(14) The control section 143 performs control so that the information recording and reproducing section 141 may additionally record the latest recording management data RMD temporarily stored in the memory section 175 into the unrecorded area 206 (e.g., FIG. 17A, (b)) in the recording management zone RMZ.

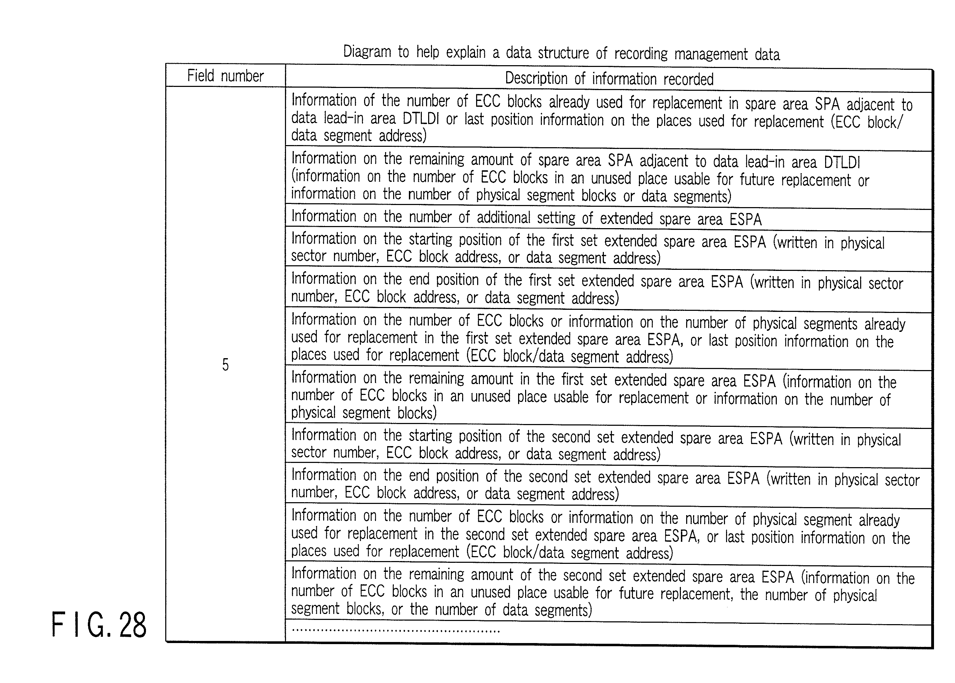

As shown in FIG. 28, in RMD field 5, position information on an extended spare area ESPA is recorded. In the recordable information storage medium, a spare area is extendable. Position information on the spare area is managed using recording management data RMD. In the embodiment of FIG. 18B, (e), since extended spare area 1 ESPA1 and extended spare area 2 ESPA2 are set, "the number of additional setting of extended spare area ESPA" set first in RMD field 5 is "2." Information on the starting position of the first set extended spare area ESPA corresponds to the position of point δ, information on the end position of the first set extended spare area ESPA corresponds to a position just in front of the position of point γ, information on the starting position of the second set extended spare area ESPA corresponds to the position of point ζ, and information on the end position of the second set extended spare area ESPA corresponds to a position just in front of the position of point ε.

In RMD field 5 of FIG. 28, information on defect management is recorded. In the first column of RMD field 5 of FIG. 28, information on the number of ECC blocks used for replacement in a spare area adjacent to the data lead-in area DTLDI or the number of physical segment blocks is recorded. In the embodiment, a defective area found in the additionally recordable range 204 of user data is replaced in ECC blocks. As described layer, since one data segment constituting one ECC block is recorded into one physical segment block, the number of replacements already performed is equal to the number of ECC blocks (or the number of physical segment blocks, the number of data segments). Therefore, information written in the column is expressed in ECC blocks, physical segment blocks, or data segments.

With a recordable information storage medium, in a spare area SPA or an extended spare area ESPA, places are often used for a replacing process in increasing order of ECC block address numbers, starting from the inner edge side. Therefore, in another embodiment, in this column, the ECC block address number may be written as information on the last position of the place used for replacement. As shown in FIG. 27 and FIG. 28, in each of the first set extended spare area 1 ESPA1 and second extended spare area 2 ESPA2, there is a field which is used to hold similar information ("information on the number of ECC blocks already used for replacement in the first set extended spare area ESPA, information on the number of physical segment blocks, or information on the last position of the place used for replacement (ECC block address number)" and "information on the number of ECC blocks already used for replacement in the second set extended spare area ESPA, information on the number of physical segment blocks, or information on the last position of the place used for replacement (ECC block address number))." Using these pieces of information, the following effects are obtained:

(1) When the following replacing process is carried out, a spare place to be newly set for a defective area found in the additionally recordable range 205 of user data is known immediately.
Replacing is done just behind the last position of the place used for substitution.
(2) The remaining amount of the spare area SPA or extended spare area ESPA is calculated, thereby determining whether the setting of a new extended spare area ESPA is needed (if the remaining amount is insufficient).

Since the size of the spare area SPA adjacent to the data lead-in area DTLDI is known beforehand, if there is information on the number of ECC blocks already used for replacement in the spare area SPA, the remaining amount of the spare area SPA can be calculated. However, when there is provided a frame in which information on the number of ECC blocks in an unused place usable for future replacement (or information on the remaining amount of the spare area SPA) or information on the number of physical segment blocks is recorded, this enables the remaining amount to be known immediately, which shortens the time required to determine whether the setting of an extended spare area ESPA is further needed. For the same reason, there is provided a frame in which "information on the remaining amount of the first set extended spare area ESPA" and "information on the remaining amount of the second set extended spare area ESPA" can be recorded. This embodiment enables a spare area SPA to be extended in the recordable information storage medium and manages its position information in the recording management data RMD. As shown in FIG. 18B, (e), a first and a second extended spare area ESPA1, ESPA2 can be set in an arbitrary size at an arbitrary starting position in the additionally recordable range 204 of user data as needed. Therefore, in RMD field 5, information on the number of additional setting of an extended spare area ESPA is recorded, which makes it possible to set information on the starting position of the first set extended spare area ESPA and information on the starting position of the second set extended spare area ESPA. These pieces of starting position information are written in physical sector numbers or ECC block address numbers (or physical segment clock numbers or data segment addresses). In the embodiments of FIGS. 25 to 30, "information on the end position of the first set extended spare area ESPA" and "information on the end position of the second set extended spare area ESPA" have been recorded as information that determines the range of an extended spare area ESPA. As another embodiment, instead of these pieces of end position information, size information on an extended spare area ESPA may be recorded using the number of ECC blocks, the number of physical segment blocks, the number of data segments, the number of ECC blocks, or the number of physical sectors.

In RMD field 6, defect management information is recorded. In this embodiment, a method of improving the reliability of information on defect processing recorded on an information storage medium is designed to cope with the following two types of mode:

(1) Conventional "replacing mode" in which information to be recorded in a defective place is recorded in a spare place.
(2) "Multiple mode" in which the same information is recorded twice in different positions on the information storage medium to increase reliability.

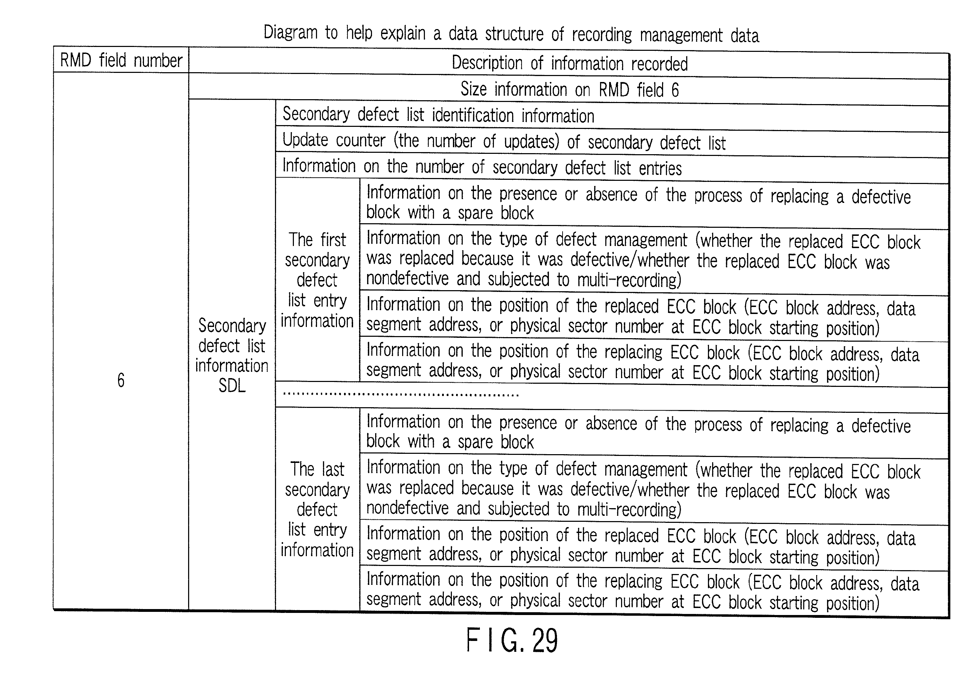

As shown in FIG. 29, information as to which mode is used for processing is recorded in "defect management process type information" in secondary defect list entry information in recording management data RMD. The contents of secondary defect list entry information are as follows:

(1) In the replacing mode

- Type information on a defect management process is set to "01" (as in a conventional DVD-RAM)
- "Position information on replaced ECC block" means position information on the ECC block found as a defective place in the additionally recordable range 205 of user data. Information to be recorded in this place is recorded in a spare area or the like, not in this place.
- "Position information on replacing ECC block" means position information on the replacing place set in a spare area SPA or a first extended spare area ESPA1 and a second extended spare area ESPA2 in FIG. 18B, (e). Information to be recorded in a defective place found in the additionally recordable range 205 of user data is recorded in this place.

(2) In the multiple mode

- Type information on a defect management process is set to "10"
- "Position information on replaced ECC block" is position information on a nondefective place in which information to be recorded is recorded. The information recorded in this place can be reproduced accurately.
- "Position information on replacing ECC block" is position information on the place in which the contents identical with those of information recorded in the "position information on replaced ECC block" for the multiple mode set in a spare area SPA or a first extended spare area ESPA1 and a second extended spare area ESPA2 are set.

When recoding is done in the "(1) replacing mode," it is known that the information recorded on an information storage medium can be read exactly immediately after recording. Thereafter, there is a possibility that the recorded information cannot be reproduced because flaws in or dirt on the information storage medium due to the user's mishandling or the like. In contrast, when recording is done in the "(2) multiple mode," even if part of the information cannot be read because the information storage medium has flaws in it or dirt attached to it due to the user's mishandling, the same information has been backed up in another part, which improves the reliability of reproduction remarkably. If the information unable to be read at this time is subjected to a replacing process in the "(1) replacing mode" using the backed-up information, this further improves the reliability. Therefore, the process in the "(2) multiple mode" or a combination of the process in the "(1) replacing mode" and the process in the "(2) multiple mode" produces the effect of securing high reliability of reproduction after recording, taking measures against flaws and dirt into account.

Furthermore, the method of writing information on the position of an ECC block includes not only the method of writing the physical sector number of the physical sector at the begin position constituting an ECC block but also a method of writing an ECC block address, a physical segment block address, or a data segment address. As described later, in this embodiment, an area of data in which one ECC block of data fits is called a data segment. A physical segment block is defined as a physical unit on an information storage medium in a place in which data is recorded. The size of one physical segment block coincides with the size of an area in which one data segment is recorded.

The embodiment also has the mechanism for recording defect position information acquired before a replacing process. This enables not only the information storage medium manufacturer to check the defective state of the additionally recordable range 204 immediately before shipment and record the found defective place in advance (before a replacing process) but also the defective state of the additionally recordable range 204 of user data to be checked when the information recording and reproducing apparatus on the user side carries out an initializing process and the found defective place to be recorded in advance (before a replacing process). Information that indicates the defective position detected before the replacing process is "information on the presence or absence of the process of replacing the defective block with a spare block" (SLR: Status of Linear Replacement).

◎ When "information on the presence or absence of the process of replacing the defective block with a spare block" SLR is "0,"
the defective ECC block specified in "position information on replaced ECC block" is subjected to a replacing process, and
reproducible information has been recorded in the place specified in "position information on a replacing ECC block."
◎ When "information on the presence or absence of the process of replacing the defective block with a spare block" SLR is "1,"
the defective ECC block specified in "position information on replaced ECC block" means a defective block detected before a replacing process, and
the column for "position information on a replacing ECC block" is blank (or has no information recorded in it).
Knowing a defective place in advance produces the effect of carrying out the optimum replacing process at high speed in real time, when the information recording and reproducing apparatus additionally records user data onto the recordable information storage medium. When video information or the like is recorded on an information storage medium, it is necessary to guarantee the continuity of recording. As a result, a high-speed replacing process using the above information is important.

If there is a defect in the additionally recordable range 205 of user data, a replacing process is carried out in a specific place in the spare area SPA or extended spare area ESPA. Each time a replacing process is carried out, one piece of secondary defect list entry information is added and information on a set of position information on the defective ECC block and position information on the ECC block used for replacement is recorded in RMD field 6. If a new defective place is found in repeating an additional recording of new user data in the additionally recordable range 205 of user data, a replacing process is carried out, with the result that the number of pieces of secondary list entry information increases. As shown in FIG. 17A, (b), recording management data RMD in which the number of pieces of secondary list entry information has increased is additionally recorded in the unrecorded area 206 of the recording management zone RMZ, in FIG. 17A, (b), thereby enabling the defect management information area (RMD field 6) to be extended. Use of this method makes it possible to improve the reliability of defect management information itself for the following reasons:

(1) Recording management data RMD can be recorded, avoiding a defective place in the recording management zone RMZ.

Even in the recording management zone RMZ shown in FIG. 17A, (b), a defective place can occur. The contents of recording management data RMD newly added in the recording management zone RMZ are verified immediately after the additional recording, which makes it possible to detect an unrecordable state caused by a defect. In that case, recording management data RMD is written again next to the defective place, enabling recording management data RMD to be recorded, assuring high reliability.

(2) Even if previous recording management data RMD cannot be reproduced because of flaws in the surface of the information storage medium, a backup can be made to some extent.

For example, in FIG. 17A, (b), suppose the surface of the information storage medium is damaged due to the user's mistake after recording management data RMD#2 has been recorded and recording management data RMD#2 cannot be reproduced. In this case, recording management data RMD#1 is reproduced instead, which makes it possible to restore the previous defect management information (the information in RMD field 6) to some extent.
Size information on RMD field 6 is recorded at the beginning of RMD field 6. The field size is made variable, thereby making it possible to extend the defect management information area (RMD field 6). Each RMD field has been set to a 2048-byte size (equivalent to one physical sector size). If the number of defects in the information storage medium is large and the number of replacing processes increases, the size of secondary defect list information increases and therefore does not fit in a 2048-byte size (equivalent to one physical sector size). Taking the situation into account, RMD field 6 can be set to a multiple of 2048-byte size (or enables recording to be done over a plurality of sectors). That is, when "the size of RMD field 6" has exceeded 2048 bytes, an area containing a plurality of physical sectors is allocated to RMD field 6.
In secondary defect list information SDL, not only the secondary list entry information but also "secondary defect list identifying information" indicating the starting position of secondary defect list information SDL and "secondary defect list update counter (update count information)" indicating count information about how many times secondary defect list information SDL was rewritten are recorded. From "information on the number of secondary defect list entries," the data size of the entire secondary defect list information SDL is known.
In the additionally recordable range 205 of user data, user data has been recorded logically on an R zone basis. Specifically, a part of the additionally recordable range 205 of user data reserved to record user data is called an R zone. According to recording conditions, the R zone is divided into two types of R zone. One type of Z zone in which additional user data can be further recorded is called an open R zone. The other type of R zone in which more user data cannot be added is called a complete R zone. The additionally recordable range 205 of user data cannot have three or more open R zones in it. That is, only up to two open R zones can be set in the additionally recordable range 205 of user data. A place where any one of the two types of R zone is not set in the additionally recordable range 205 of user data, or a place that is not reserved (for one of the two types of R zone) to record user data, is called an invisible (unspecified) R zone. When user data has been recorded in all of the additionally recordable range 205 of user data and cannot be added any more, there is no invisible R zone there.
In RMD field 7, position information on up to the 254th R zone is recorded. "Information on the total number of R zones" recorded at the beginning of RMD field 7 represents the sum total of the number of invisible R zones, the number of open R zones, and the number of complete R zones logically set in the additionally recordable range 205 of user data. Then, information on the number of first open R zones and information on the number of second open R zones are recorded. As described above, since the additionally recordable range 205 of user data cannot have three or more open R zones, "1" or "0" is recorded (when the first or second open R zone does not exist). Next, information on the staring position and end position of the first complete R zone are written in physical sector numbers. Then, information on the staring position and end position of each of the second to 254th complete R zones are written in physical sector numbers one after another.

In RMD field 8 and afterward, information on the staring position and end position of the 255th and later complete R zones are written in physical sector numbers one after another. According to the number of complete R zones, up to RMD field 15 (or up to 2047 complete R zones) can be written into.

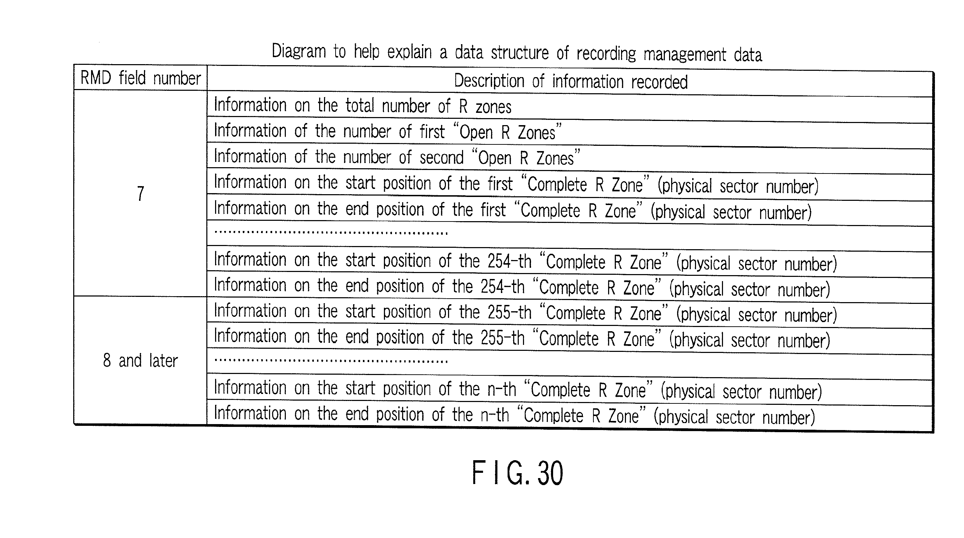

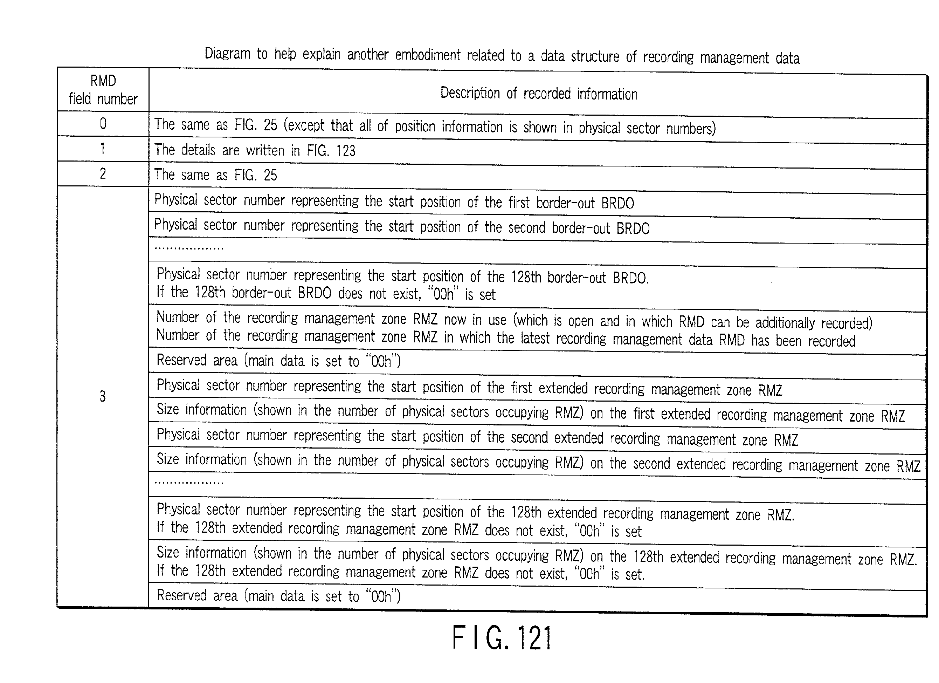

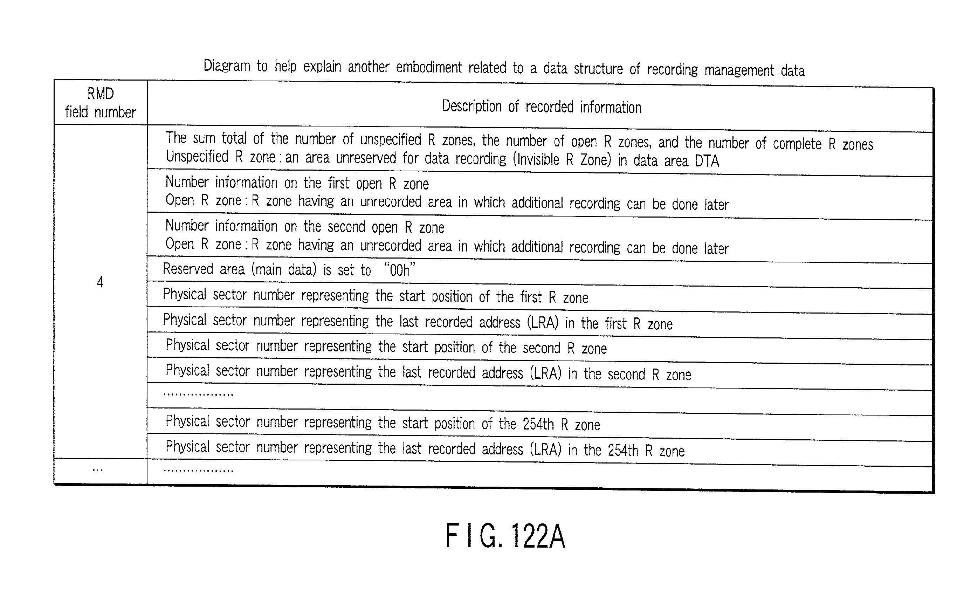

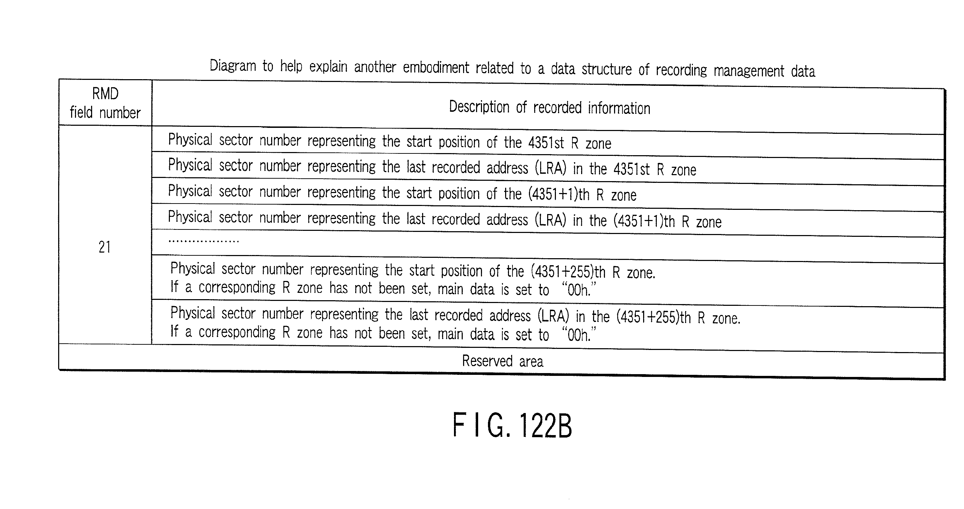

FIGS. 121, 122A and 122B show another embodiment of the data structure of recording management data RMD shown in FIGS. 29 and 30.

In the embodiment of FIGS. 121, and 122A and 122B, up to 128 bordered areas BRDA can be set on a single recordable information storage medium. Therefore, information on the starting positions of the first to 128th border-outs BRDO is recorded in RMD field 3. If bordered areas BRDA are set only in a part of RMD field 3 (or in 128 or less border-outs), "00h" is set as information on the starting positions of the succeeding border-outs. This makes it possible to know how many bordered areas BRDA have been set on the recordable information storage medium just by checking how much information on the starting positions of border-outs BRDO has been recorded in RMD field 3.

In the embodiment of FIGS. 121, 122A and 122B, up to 128 extended recording management zones RMZ can be set on a single recordable information storage medium. As described above, there are two types of recording management zone RMZ as follows:

(1) An extended recording management zone RMZ set in border-in BRDI
(2) An extended recording management zone RMZ set using R zones

In the embodiment of FIGS. 121, 122A and 122B, a set of information on the starting position of an extended recording management zone RMZ (expressed in physical sector numbers) and size information (or information on the number of physical sectors occupied) is recorded in RMD field 3 without distinguishing between the two types, thereby performing management. While in the embodiment of FIGS. 121, 122A and 122B, a set of information on the starting position of an extended recording management zone RMZ (expressed in physical sector numbers) and size information (or information on the number of physical sectors occupied) has been recorded, this invention is not limited to this. For instance, a set of information on the starting position of an extended recording management zone RMZ (expressed in physical sector numbers) and information on the end position (expressed in physical sector numbers) may be recorded. While in the embodiment of FIGS. 121, 122A and 122B, extended recording management zones RMZ have been numbered in the order in which they were set on the recordable information storage medium, this invention is not limited to this. For instance, extended recording management zones RMZ may be numbered in increasing order of physical sector numbers in the form of starting positions.

Then, the latest recording management data RMD is recorded and the recording management zone (which is made open and enables additional recording of RMD) now in use is specified using the number of the extended recording management zone RMZ (point <L13> in FIG. 134). Therefore, from these pieces of information, the information recording and reproducing apparatus or information reproducing apparatus knows information on the starting position of the recording management zone (made open) now in use and, on the basis of the information, identifies which is the latest recording management data RMD (point <L13α> in FIG. 134). Even if extended recording management zones are distributed on the recordable information storage medium, use of the data structure of FIGS. 121, 122A and 122B enables the information recording and reproducing apparatus or information reproducing apparatus to identify easily which is the latest recording management data RMD. From these pieces of information, information on the starting position of the recording management zone (made open) now in use is known and accessing the place makes it possible to know how much the recording management data RMD has been recorded (point <L13β> in FIG. 134), which enables the information recording and reproducing apparatus or information reproducing apparatus to know easily where to record the updated latest recording management data. Furthermore, when (2) an extended recording management zone RMZ set using R zones is used, the whole of one R zone corresponds directly to one extended recording management zone RMZ. Therefore, the physical sector number representing the starting position of the corresponding extended recording management zone RMZ written in RMD field 3 coincides with the physical sector number representing the starting position of the corresponding R zone written in RMD fields 4 to 21.

In the embodiment of FIGS. 121, 122A and 122B, up to 4606 (4351 + 255) R zones can be set in a single recordable information storage medium. Position information on these set R zones is recorded into RMD fields 4 to 21. Information on the starting position of each R zone is represented in physical sector numbers and, at the same time, it is recorded in such a manner that it is paired with the physical sector number LRA (Last Recorded Address) representing the last recoding position in each R zone. While the order in which R zones are written in recording management data RMD is the order in which R zones are set in the embodiment of FIGS. 121, 122A and 122B, this invention is not limited to this. For instance, they may be set in increasing order of physical sector numbers representing information on the starting position. When R zones have not been set in corresponding numbers, "00h" is set in this field. The total number of R zones set in a single recordable information storage medium has been written in RMD field 4. The total number is represented by the sum total of the number of incomplete R zones (areas unreserved for data recording in the data area DTA), the number of open R zones (R zones with an unrecorded area enabling additional recording), and the number of incomplete R zones (completed R zones without an unrecorded area enabling additional recording). The total number is equal to the ordinal number of the incomplete R zone.

In the embodiment of FIGS. 121, 122A and 122B, up to two open R zones enabling additional recording can be set (point <L5> in FIGS. 132A and 132B). Since up to two open R zones can be set, this makes it possible not only to record video information and audio information requiring continuous recording and reproduction into one open R zone and but also to record management information on the video information and audio information and general information used in a personal computer or the like or file system management information into the other open R zone. That is, user data can be recorded into separate open R zones according to the type of user data to be recorded. This improves convenience in recording and reproducing AV information (video information and audio information). In the embodiment of FIGS. 121, 122A and 122B, which R zone is an open R zone is specified by the location number of an R zone arranged in RMD field 4 to RMD field 21. That is, which R zone is an open R zone is specified by the number of the R zone corresponding to each of the first and second open R zones (point <L14> in FIG. 134). Use of such a data structure makes it easy to search for an open R zone. If there is no open R zone, "00h" is recorded in this field.

As explained in FIG. 98, the end position of the R zone coincides with the last recorded address LRA in a complete R zone, whereas the end position of the R zone differs from the last recorded address LRA in the R zone in an open R zone. In the middle of additionally recording user information into an open R zone (that is, before the process of additionally recording the recording management data RMD to be updated is completed), the last recorded address LRA does not coincide with the next writable address enabling further additional recording as in R zone #3 of FIG. 98. However, after the process of additionally recording user information has been completed and the process of additionally recording the latest recording management data RMD to be updated has been completed, the last recorded address LRA coincides with the next writable address NWA enabling further additional recording as shown in R zone #4 and R zone #5. Therefore, when new user information is additionally recorded after the process of additionally recording the latest recording management data RMD to be updated has been completed, the control section 143 of the information recording and reproducing apparatus of FIG. 1 executes processing according to the following procedure:

(1) Check the number of the R zone corresponding to an open R zone written in RMD field 4
(2) Check the physical sector number LRA representing the last recorded address in an open R zone written in RMD fields 4 to 21 and determine the next writable address NWA enabling additional recording
(3) Start additional recording at the determined next writable address enabling additional recording

As described above, the starting position of new additional recording is determined using the open R zone information in RMD field 4 (point (L14$\alpha$) in FIG. 134), thereby enabling the starting position of new additional recording to be extracted easily at high speed.

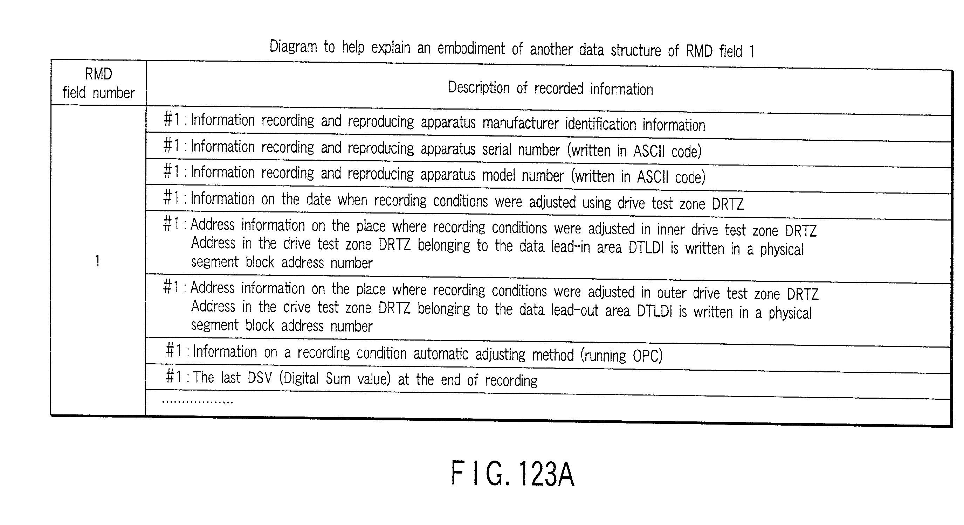

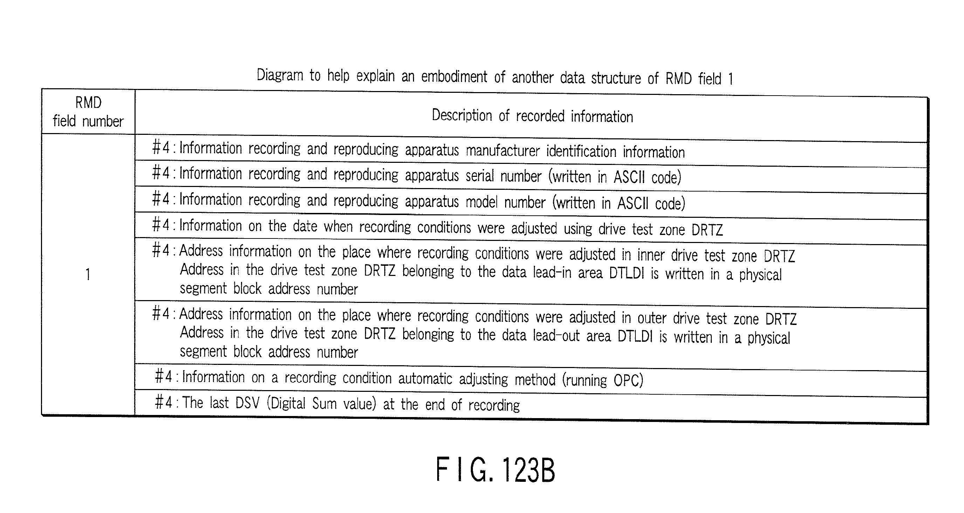

FIGS. 123A and 123B show a data structure of RMD field 1 in the embodiment of FIGS. 121, 122A and 122B. As compared with the embodiment of FIGS. 15 to 30, address information on the place where recording conditions have been adjusted in an inner drive test zone DRTZ (belonging to the data lead-in area DTLDI) and address information on the place where recording conditions have been adjusted in an outer drive test zone DRTZ (belonging to the data lead-out area DTLDO) are added. These pieces of information are written in physical segment block address numbers. Furthermore, in an embodiment of FIGS. 123A and 123B, information on a recording condition automatic adjusting method (running OPC) and the last DSV (Digital Sum Value) at the end of the recording are added.

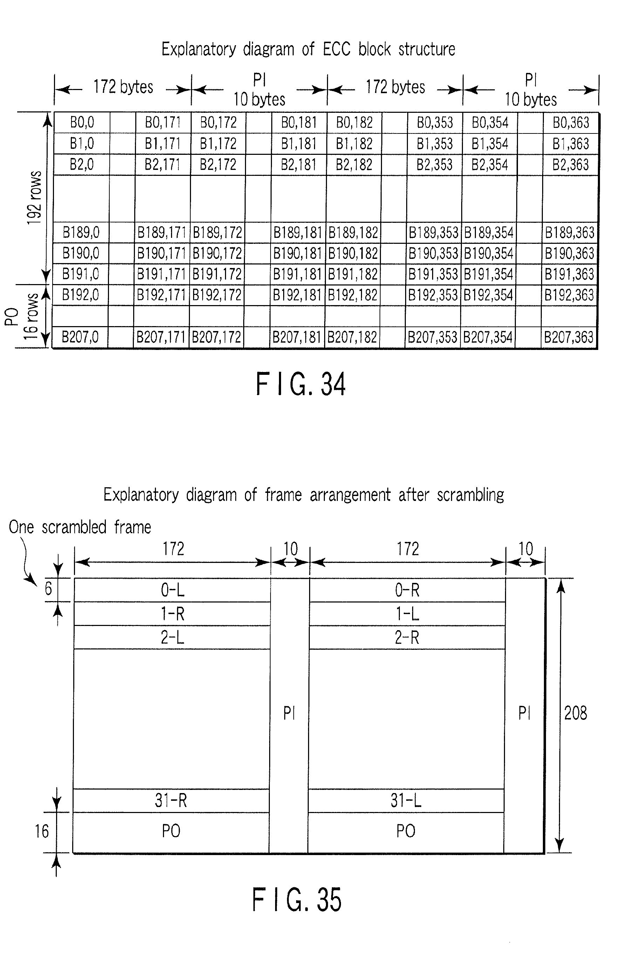

FIG. 31 schematically shows the conversion procedure for configuring an ECC block from a data frame structure in which user data is recorded in units of 2048 bytes, adding a sync code, and then forming a physical sector structure to be recorded onto an information storage medium. This conversion procedure is used in each of a reproduce-only information storage medium, a recordable information storage medium, and a rewritable information storage medium. According to the respective conversion stages, the terms data frame, scrambled frame, recording frame, and recorded data field are used. A data frame, which is a place in which user data is recorded, is made up of 2048 bytes of main data, a 4-byte data ID, a 2-byte ID error detection code (IED), 6 reserved bytes RSV, and a 4-byte error detection code (EDC). First, IED (ID error detection code) is added to data ID explained later. The 6 reserved bytes and data frame are places in which user data is to be recorded. After 2048 bytes of main data are added and an error detection code (EDC) is added, the main data is scrambled. Then, Cross Reed-Solomon Error Correction Code is applied to the scrambled 32 data frames, thereby carrying out an ECC encoding process, which configures a recording frame. The recording frame includes outer parity code (Parity of Outer-code) PO and inner parity code (Parity of Inner-code) PI. Each of the parity codes PO and PI is an error correction code created for each ECC block composed of 32 scrambled frames. As described earlier, a recoding frame is subjected to ETM (Eight to Twelve Modulation) whereby 8 bits of data are converted into 12 channel bits. Then, a sync code SYNC is added at the head in units of 91 bytes, thereby creating 32 physical sectors. This embodiment is characterized in that 32 sectors constitute one error correction unit (ECC block) as written in the frame at the bottom right of FIG. 31 (point (H2) in FIGS. 128A and 128B). As described later, the numbers from "0" to "31" in each frame in FIG. 35 or 36 represent the numbers of the individual physical sectors. A total of 32 physical sectors with the numbers from "0" to "31" constitute one large ECC block.

Next-generation DVDs are required to reproduce information accurately by an error correction process, even if a flaw as long as that in the present-generation DVD have been made in the surface of the information storage medium. In the embodiment, the recording density is increased aiming at a larger capacity. As a result, in the case of a conventional ECC block = 16 sectors, the length of a physical flaw correctable by error correction becomes shorter than that of the conventional DVD. As in the embodiment, configuring one ECC block using 32 sectors produces the effect of not only lengthening the allowable length of a flaw in the information storage medium which can be corrected by error correction but also securing the interchangeability of the ECC block structure of the existing DVD and the continuity of the format.

FIG. 32 shows the structure of a data frame. A data frame contains 2064 bytes made up of 172 bytes $\times$ 2 $\times$ 6 rows, which include 2048 bytes of main data. IED, which stands for ID Error Detection Code, means an error detection additional code for data ID information in reproduction. REV, which stands for Reserve, means a reserved area in which information can be set in the future. EDC, which stands for Error Detection code, means error detection additional code for all of the data frames.

FIG. 118 shows a data structure of data ID shown in FIG. 32. Data ID is composed of data frame information 921 and information on data frame number 922. The data frame number represents the physical sector number 922 of the corresponding data frame.

Data frame information 921 is made up of the following information:

- Format type 931 -- 0b : represents CLV
  1b : represents a zone configuration
- Tracking method 932 -- 0b : uses a DPD (Differential Phase Detect) method in a pit-compatible manner in this embodiment
  1b : uses a Push-Pull method or a DPP (Differential Push-Pull) method in a pre-groove-compatible manner
- Reflectivity of the recording film 933 -- 0b : 40% or more
  1b : 40% or less
- Recording type information 934 -- 0b : General data
  1b : Real-time data (Audio Video data)
- Area type information 935 -- 00b : Data area DTA
  01b : System lead-in area SYLDI or data lead-in area DTLDI
  10b : Data lead-out area DTLDO or system lead-out area SYLDO
- Data type information 936 -- 0b : Reproduce-only data
  1b : Rewritable data
- Layer number 937 -- 0b : Layer 0
  1b : Layer 1

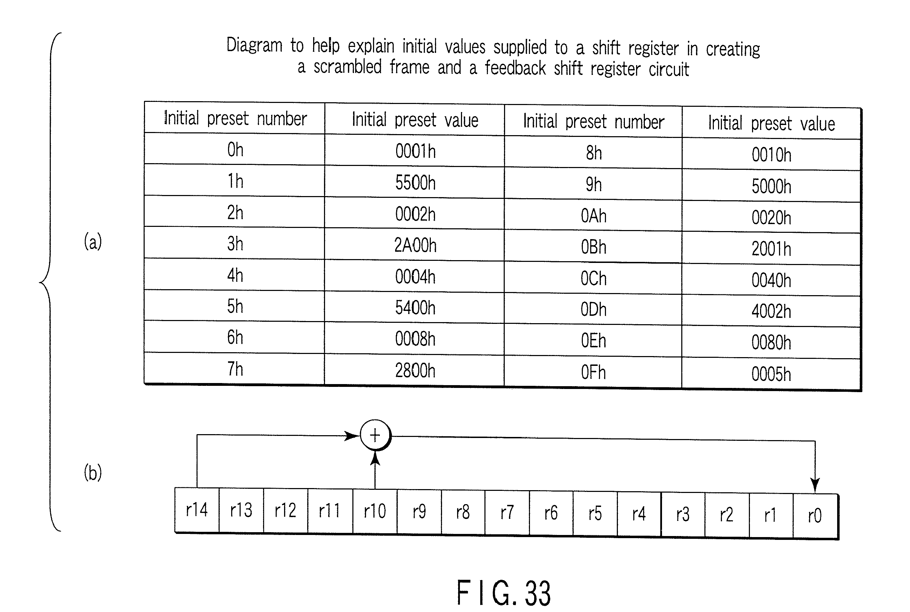

FIG. 33, (a) shows an example of initial values given to the feedback shift register when a scrambled frame is formed. FIG. 33, (b) shows a circuit configuration of the feedback shift register for forming scramble bytes. In the figure, r7 (MSB) to r0 (LSB), which are shifted in units of 8 bits, are used as a scramble byte. As shown in FIG. 33(a), 16 preset values are prepared in the embodiment. The initial preset number in FIG. 33, (a) is equal to 4 bits (b7 (MSB) to b4 (LSB)) in data ID. When the scrambling of a data frame is started, the initial values of r14 to r0 have to be set to the initial preset values in the table of FIG. 33, (a). The same initial preset values are used for 16 consecutive data frames. Then, the initial preset values are changed and the changed preset values are used for 16 consecutive data frames.

The low-order 8 bits of the initial values of r7 to r0 are extracted as scramble byte SO. Thereafter, an 8-bit shift is performed. Then, a scramble byte is extracted. Such operations are repeated 2047 times.

FIG. 34 shows an ECC block in the embodiment. An ECC block is composed of 32 consecutive scrambled frames. There are provided 192 rows + 16 rows in the vertical direction and (172 + 10) $\times$ 2 columns in the horizontal direction. Each of $B_{0,0}$, $B_{1,0}$, ... is one byte. PO and PI, which are error correction codes, are outer parity and inner parity, respectively. In the embodiment, an ECC block structure using a product sign is configured. Specifically, data to be recorded on an information storage medium are arranged two-dimensionally. As error correction additional bits, PI (Parity in) is added in the direction of "row" and PO (Parity out) is added in the direction of "column." Configuring an ECC block structure using a product sign this way makes it possible to assure a high error correction capability using an erasure correction process and a vertically and horizontally repeated correction process.

The ECC block structure of FIG. 34 is characterized in that it differs from the ECC block structure of a conventional DVD in that PI is set in two places in the same "row." That is, PI of a 10-byte size written in the middle of FIG. 34 is added to 172 bytes provided at left. Specifically, for example, a 10-byte PI from $B_{0,172}$ to $B_{0,181}$ is added to 172 bytes of data from $B_{0,0}$ to $B_{0,171}$. A 10-byte PI from $B_{1,172}$ to $B_{1,181}$ is added to 172 bytes of data from $B_{1,0}$ to $B_{1,171}$.

PI of a 10-byte size written at right of FIG. 34 is added to 172 bytes provided in the middle at left. Specifically, for example, a 10-byte PI from $B_{0,354}$ to $B_{0,363}$ is added to 172 bytes of data from $B_{0,182}$ to $B_{0,353}$.

FIG. 35 is a diagram to help explain the arrangement of a scrambled frame. A unit of (6 rows $\times$ 172 bytes) is used as a scrambled frame. That is, one ECC block is made up of 32 consecutive scrambled frames. In addition, this system treats (a block of 182 bytes $\times$ 207 bytes) as a pair. L is given to the number of each scrambled frame in the ECC block at left and R is given to the number of each scrambled frame in the ECC block at right, with the result that the scrambled frames are arranged as shown in FIG. 35. That is, in the left block, left and right scrambled frames are arranged alternately. In the right block, scrambled frames are provided alternately.

Specifically, an ECC block is composed of 32 consecutive scrambled frames. Each row in the left half of an odd-numbered sector is replaced with a row in the right half. 173 $\times$ 2 bytes $\times$ 192 rows, which are equal to 172 bytes $\times$ 12 rows $\times$ 32 scrambled frames, make a data area. A 16-byte PO is added to each set of 172 $\times$ 2 columns to form an outer code for RS (208, 192, 17). A 10-byte PI (RS (182, 172, 11)) is added to each set of 208 $\times$ 2 rows in the right and left blocks. PI is also added to the row of PO. The number in a frame indicates a scrambled frame number. The suffixes R, L mean the right half and left half of a scrambled frame, respectively.

The present embodiment is characterized in that the same data frame is distributed over a plurality of small ECC blocks (point <H> in FIGS. 128A and 128B). Specifically, in the embodiment, two small ECC blocks constitute a large ECC block. The same data frame is distributed over the two small ECC blocks alternately (point (H1) in FIGS. 128A and 128B). As explained in FIG. 34, PI of a 10-byte size written in the middle is added to 172 bytes provided on its left side and PI of a 10-byte size written at the right end is added to 172 bytes provided on its left side and in the middle. That is, 172 bytes from the left end of FIG. 34 and PI of 10 consecutive bytes constitute a left small ECC block and 172 bytes in the middle and PI of 10 bytes at the right end constitute a right small ECC block. According to this, the symbols in each frame of FIG. 35 are set. For example, "2-R" in FIG. 35 indicates the data frame number and which of the right and left small blocks it belongs to (e.g., it belongs to the right small ECC block in the second data frame). In addition, the data in the same physical sector is also distributed over the right and left small ECC blocks alternately in each physical sector finally configured. In FIGS. 18A and 18B, the left-half column is included in the left small ECC block (the left small ECC block A shown in FIG. 84) and the right-half column is included in the right small ECC block (the right small ECC block B shown in FIG. 84).

As described above, distributing the same data frame over a plurality of small ECC blocks (point <H> in FIGS. 128A and 128B) improves the error correcting capability of the data in the physical sector (FIGS. 18A and 18B), which increases the reliability of the recorded data. For example, suppose the optical head has come off the track and overwritten the recorded data, with the result that one physical sector of data has been destroyed. In this embodiment, since one sector of destroyed data is subjected to error correction using two small ECC blocks, the burden of correcting errors in one ECC block is alleviated, which assures higher-performance error correction. Moreover, in the embodiment, since data ID is provided at the begin position of each sector even after an ECC block is formed, the data position in access is checked at high speed.

FIG. 36 is a diagram to help explain a PO interleaving method. As shown in FIG. 36, 16 parity rows are distributed one by one. That is, 16 parity rows are arranged in such a manner that one parity row is provided for every two recording frames. Therefore, a recording frame composed of 12 rows includes 12 rows + 1 row. After the row interleaving has been done, 13 rows $\times$ 182 bytes are referred to as a recording frame. As a result, an ECC block subjected to row interleaving is composed of 32 recording frames. As shown in FIG. 35, in one recording frame, there are 6 rows in each of the right and left blocks. PO is so arranged that it lies in a row in the left block (182 $\times$ 208 bytes) and in a different row in the right block (182 $\times$ 208 bytes). FIGS. 18A and 18B show one complete ECC block. However, when data is actually reproduced, such ECC blocks arrive at the error correcting section consecutively. To increase the correcting capability of the error correction process, an interleaving method as shown in FIG. 36 has been used.

Using FIG. 84, the relationship between the structure of one data frame of FIG. 32 and the PO interleaving method of FIG. 36 will be explained in detail. In FIG. 84, the upper part of the ECC block structure subjected to PO interleaving shown in FIG. 36 is enlarged and the locations of data ID, IED, RSV, EDC shown in FIG. 32 are pointed out specifically in the enlarged diagram, which enables the connection between conversions in FIGS. 32 to 36 to be seen at a glance. "0-L", "0-R", "1-R", "1-L" of FIG. 84 correspond to "0-L", "0-R", "1-R", "1-L" of FIG. 35, respectively. "0-L" and "1-L" mean the data obtained by scrambling only the main data in the left half of FIG. 32, that is, a set of 172 bytes to the left of the center line and 6 rows. Similarly, "0-R" and "1-R" mean the data obtained by scrambling only the main data in the right half of FIG. 32, that is, a set of 172 bytes to the right of the center line and 6 rows. Therefore, as seen from FIG. 32, data ID, IED, and RSV are arranged in that order from the first to 12th bytes in the first row (0th row) in "0-L" or "1-L."

In FIG. 84, the left side of the center line constitutes a small ECC block A and the right side of the center line constitutes a small ECC block B. Therefore, as seen from FIG. 84, data ID#1, data ID#2, IED#0, IED#2, RSV#0, RSV#2 included in "0-L" and "2-L" are included in the left small ECC block A. While in FIG. 35, "0-L" and "2-L" are arranged on the left side and "0-R" and "2-R" are arranged on the right side, "1-R" and "1-L" are reversed in position, with the result that "1-L" is positioned on the right side and "1-R" is positioned on the left side. Since data ID#1, IED#1, RSV#1 are arranged from the first to 12th byte in the first row in "1-L," the result of reversal of the right and left positions causes ID#1, IED#1, RSV#1 included in "1-L" to be configured in the right small ECC block B as seen from FIG. 84.

In this embodiment, a combination of "0-L" and "0-R" is called "0th recording frame" and a combination of "1-L" and "1-R" is called "1st recording frame" in FIG. 84. The boundary between the recording frames is shown by a bold line of FIG. 84. As seen from FIG. 84, data ID is provided at the head of each recording frame and PO and PI-L are provided at the end of each recording frame. As shown in FIG. 84, this embodiment is characterized in that an odd-numbered recording frame differs from an even-numbered recording frame in a small ECC block which includes data ID and that a succession of recording frames causes data ID, IED, and RSV to be arranged in the left and right small ECC blocs A and B alternately (point (H5) in FIG. 127). The error correcting capability in a single small ECC block has its limits. Random errors exceeding a specific number and burst errors exceeding a specific length cannot to be subjected to error correction. Arranging data ID, IEC, and RSV in the left and right small ECC blocks alternately as described above enables the reliability of reproduction of data ID to be improved. Specifically, even if many defects have occurred in the information storage medium and either small ECC block cannot be subjected to error correction and therefore the data ID belonging to the ECC block cannot be deciphered, since data ID, IED, and RSV are arranged in the left and right small ECC blocks A and B alternately, the other small ECC block can be subjected to error correction, enabling the remaining data ID to be deciphered. Since there is a continuity of address information in the data ID, the data ID that could not be deciphered can be interleaved using information on the decipherable data ID. As a result, the embodiment of FIG. 84 can increase the reliability of access. The number in parentheses at left of FIG. 84 indicates the row number in an ECC block after PO interleaving. When an information storage medium is recorded into, recording is done from left to right in the order of row numbers. In FIG. 84, since data ID included in the individual recording frames are arranged at regular intervals (point (H6) in FIGS. 128A and 128B), the capability of searching for the position of data ID is improved.

FIG. 37 shows a physical sector structure. FIG. 37, (a) shows the structure of an even-numbered physical sector and FIG. 37, (b) shows the structure of an odd-numbered physical sector. In FIG. 37, information on outer parity PO of FIG. 36 is inserted into the sync data area in the last two sync frames (that is, the last sync code is the SY3 part and sync data just behind it and the other sync code is the SY1 part and sync data just behind it) in each of an even recorded data field and an odd recorded data field.

A part of the left PO shown in FIG. 35 is inserted into the last two sync frames in an even-numbered recording data area and a part of the right PO shown in FIG. 35 is inserted into the last two sync frames in an odd-numbered recording data area. As shown in FIG. 35, one ECC block is composed of a right and a left small ECC block. Data on a different PO group (either PO belonging to the left small ECC block or PO belonging to the right small ECC block) is inserted in each sector alternately. Each of an even-numbered physical sector structure of FIG. 37, (a) and an odd-numbered data structure of FIG. 37, (b) is divided in two at the center line. "24 + 1092 + 24 + 1092 channel bits" on the left side are included in the left small ECC block shown in FIG. 34 or 35 and "24 + 1092 + 24 + 1092 channel bits" on the right side are included in the right small ECC block shown in FIG. 34 or 35.

When a physical sector structure shown in FIG. 37 is recorded onto the information storage medium, it is recorded serially column by column. Therefore, for example, when the channel bit data in an even-numbered physical sector structure shown in FIG. 37, (a) is recorded onto the information storage medium, 2232 channel bits of data to be recorded first are included in the left small ECC block and 2232 channel bits of data to be recorded next are included in the right small ECC block. Moreover, 2232 channel bits of data to be recorded further are included in the left small ECC block. In contrast, when the channel bit data in an odd-numbered data structure shown in FIG. 37, (b) is recorded onto the information storage medium, 2232 channel bits of data to be recorded first are included in the right small ECC block and 2232 channel bits of data to be recorded next are included in the left small ECC block. Moreover, 2232 channel bits of data to be recorded further are included in the right small ECC block.

As described above, this embodiment is characterized in that the same physical sector is caused to belong to two small ECC blocks alternately in units of 2232 channel bits (point <H1> in FIGS. 128A and 128B). To put it another way, the data in the right small ECC block and the data in the left small ECC block are distributed alternately in units of 2232 channel bits to form physical sectors, thereby recording the data onto the information storage medium. This produces the effect of achieving a structure resistant to burst errors. For example, consider a burst error state where a long flaw has been made in the circumferential direction of the information storage medium and more than 172 bytes of data cannot be read. In this case, since the burst error exceeding 172 bytes is distributed over two small ECC blocks, the burden of error correction in one ECC block is alleviated, assuring higher-performance error correction.

As shown in FIG. 37, the present embodiment is characterized in that the data structure of the physical sector differs, depending on whether the physical sector number of the physical sector constituting an ECC block is even or odd (point <H3> in FIGS. 128A and 128B). Specifically,

(1) A small ECC block (right or left) to which the first 2232 channel bits of data in the physical sector belong differs.

(2) The structure is such that a different PO group of data is inserted alternately on a sector basis.

As a result, even after an ECC block has been configured, the structure where data ID is placed at the begin positions of all of the physical sectors is assured, which makes it possible to check the data positions at high speed at the time of accessing. Furthermore, inserting PO belonging to different small ECC blocks into the same sector in a mixed manner simplifies the PO inserting method as shown in FIG. 36, which not only makes it easier to extract information sector by sector after the error correcting process in the information reproducing apparatus but also simplifies the process of constructing ECC block data in the information recording and reproducing apparatus.

In a method of realizing concretely what has been described above, a structure where PO interleaving and inserting positions at right differ from those at left is used (point <H4> in FIGS. 128A and 128B). A part shown by a narrow double line in FIG. 36 or a part shown a narrow double line and a slant line indicates a PO interleaving and inserting position. In an even-numbered physical sector, PO is inserted in the left-side end. In an odd-numbered physical sector, PO is inserted in the right-side end. Use of this structure enables data ID to be arranged at the begin position of the physical sector even after the ECC block is configured, which makes it possible to check the data positions at high speed at the time of accessing.

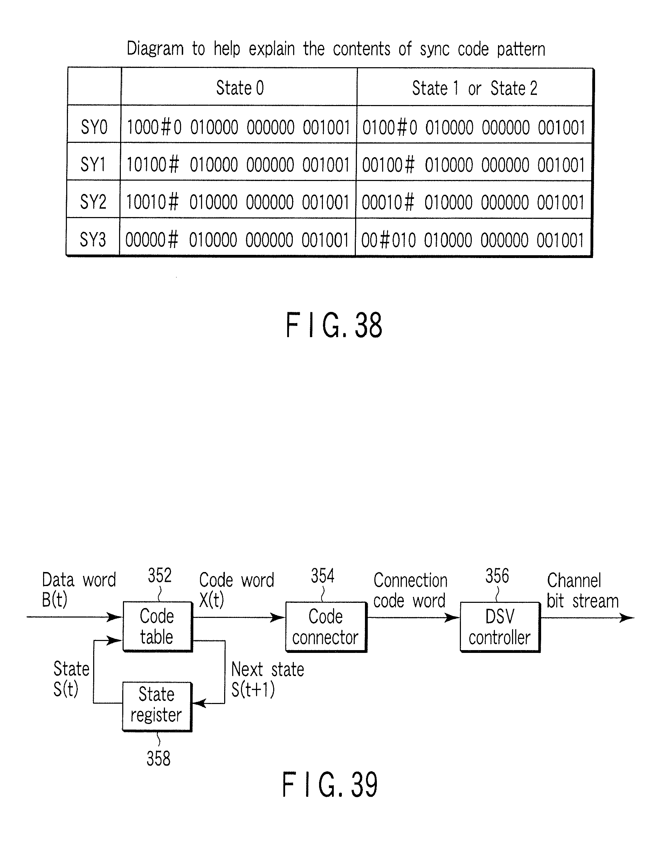

FIG. 38 shows an embodiment of the contents of a concrete pattern ranging from sync code "SY0" to sync code "SY3" shown in FIG. 37. There are three states from State 0 to State 2 according to the modulation rule (which will be explained in detail later) of the present embodiment. Four sync codes from SY0 to SY3 are set. According to each state, they are selected from the right and left groups of FIG. 38. In the present DVD standard, RLL (2, 10) (Run Length Limited: d = 2, k = 10: the minimum value of a range of consecutive "0s" is 2 and its maximum value is 10) of 8/16 modulation (converting 8 bits into 16 channel bits) is used as a modulation method. Four states from State 1 to State 4 and eight sync codes from SY0 to SY7 are set in modulation. As compared with this, the types of sync code decrease in this embodiment. The information recording and reproducing apparatus or information reproducing apparatus identifies the type of sync code by a pattern matching method in reproducing the information from the information storage medium. As in the embodiment, decreasing the kinds of sync codes remarkably helps decrease the target patterns necessary for matching, which not only simplifies the necessary process for pattern matching and improves the processing efficiency but also improves the recognition speed.

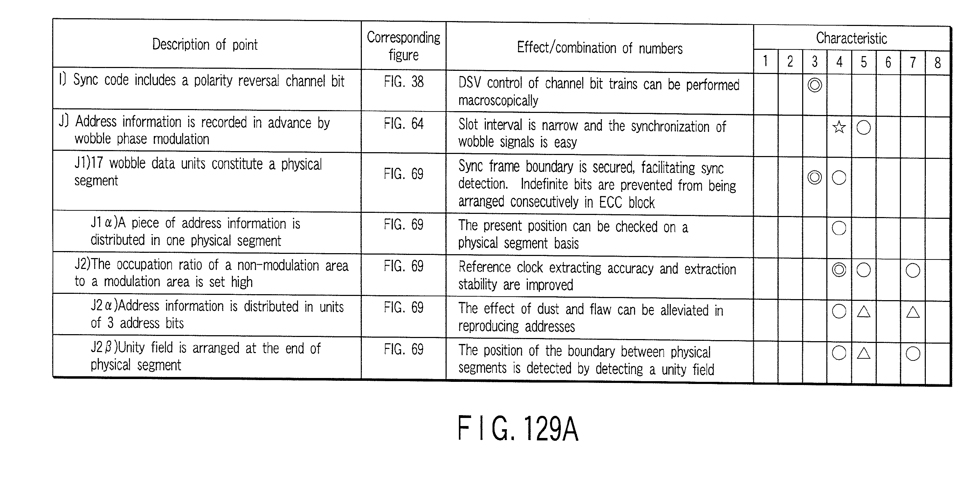

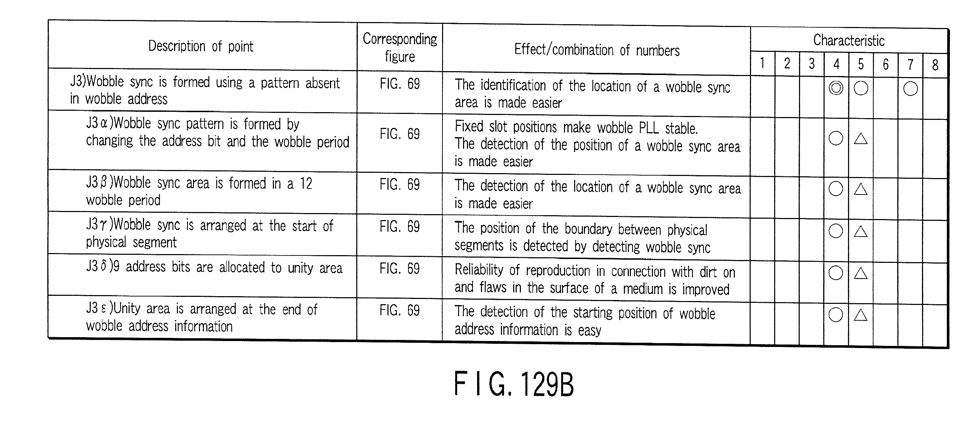

In FIG. 38, a bit (channel bit) shown by "#" represents a DSV (Digital Sum Value) control bit. As described later, the DSV control bit is so determined that a DSV controller suppresses the DC component (or the value of DSV approaches "0"). This embodiment is characterized in that a sync code includes a polarity reversal channel bit "#" (point <I> in FIGS. 129A and 129B). The value of "#" can be selectively set to "1" or "0" so that the DVS value may approach "0" in broad perspective, including the frame data areas (the 1092-channel-bit areas of FIG. 37) sandwiching the sync code between them. This produces the effect of enabling DSV control from a broad point of view.

As shown in FIG. 38, a sync code of the embodiment is composed of the following parts:

(1) Sync position detecting code part

All sync codes have a common pattern and form a fixed code area. Sensing this code enables the location of the sync code to be detected. Specifically, the code corresponds to the last 18 channel bits "010000 000000 001001" in each sync code of FIG. 38.

(2) Modulation conversion table selecting code part

This code is a part of a variable code area and changes according to State number in modulation. The code corresponds to the first one channel bit of FIG. 38. That is, if either State 1 or State 2 is selected, the first one channel bit is "0" in any one of SY0 to SY3. If State 0 is selected, the first one channel bit in the sync code is "1." By way of exception, the first one channel bit in SY3 in State 0 is "0."

(3) Sync frame position identifying code part

This is a code used to identify SY0 to SY3 in a sync code and constitutes a part of a variable code area. The code corresponds to the first to sixth channel bits in each sync code of FIG. 38. As described later, from a continuous pattern of 3 consecutive sync codes detected, a relative position in the same sector can be detected.

(4) DC suppression polarity reversing code part

This code corresponds to the channel bit at "#" position in FIG. 38. As described above, the bit here is reversed or is not reversed, thereby causing the DSV value of the channel bit train including the preceding and following frame data to approach "0."

This embodiment uses 8/12 modulation (ETM: Eight to Twelve Modulation) and RLL (1, 10) in the modulation method. That is, setting is done so that 8 bits may be converted into 12 channel bits and the minimum value (d value) of a range of consecutive "0s" after conversion may be 1 and its maximum value (k value) may be 10. In the embodiment, use of d = 1 makes the density higher than a conventional equivalent. However, at the densest mark, it is difficult to obtain a sufficiently large amplitude of the reproduced signal.

To overcome this problem, the information recording and reproducing apparatus of the embodiment has a PR equalizing circuit 130 and a Viterbi decoder 156 as shown in FIG. 1 and uses PRML (Partial Response Maximum Likelihood) techniques, thereby enabling the signal to be reproduced very stably. With the setting of k = 10, there is no possibility that 11 or more "0s" will not be arranged consecutively in modulated general channel bit data. Using this modulation rule, the sync position detecting code part is caused to have a pattern that will never appear in modulated general channel bit data. Specifically, as shown in FIG. 38, the sync position detecting code part has 12 (= k + 2) consecutive "0s" in it. The information recording and reproducing apparatus or information reproducing apparatus finds this part, thereby detecting the position of the sync position detecting code part. Too many consecutive "0s" makes bit shift errors liable to take place. To alleviate its adverse effect, a pattern with a small number of consecutive "0s" is provided just behind the too long string of "0s" in the sync position detecting code. In the embodiment, since d = 1, "101" can be set as a corresponding pattern. As described above, it is difficult to obtain a sufficiently large amplitude of the reproduced signal at "101" (at the densest pattern). Therefore, "1001" is placed instead, thereby making a pattern for the sync position detecting code part as shown in FIG. 38.

The present embodiment is characterized in that, as shown in FIG. 38, the last 18 channel bits in the sync code are used independently as (1) the sync position detecting code part and the first 6 channel bits are shared by (2) the modulation conversion table selecting code part, (3) the sync frame position identifying code part, and (4) the DC suppression polarity reversing code part. Making (1) the sync position detecting code part independent of the rest in the sync code facilitates individual detection, which increases the accuracy of sync position detection. Causing the code parts in (2) to (4) to share the first 6 channel bits makes the data size (channel bit size) of the entire sync code smaller and increases the sync data occupation ratio, which produces the effect of improving the practical data efficiency.

This embodiment is characterized in that, of the four sync codes shown in FIG. 38, only SY0 is placed in the first sync frame position in a sector as shown in FIG. 37. This produces the effect of enabling the begin position of a sector to be determined immediately by just detecting SY0 and simplifying very much the process of extracting the begin position of the sector.

The embodiment is further characterized in that combination patterns of 3 consecutive sync codes are all different in the same sector.

A common modulation method explained below is used for each of a reproduce-only, a recordable, and a rewritable information storage medium.

An 8-bit data word in a data field is converted into channel bits on a disk by the 8/12 modulation (ETM: Eight to Twelve Modulation) method. The channel bit train converted by the ETM method satisfies a run-length restriction of RLL (1, 10) where channel bit 1b is at least one channel bit or up to 10 channel bits away.

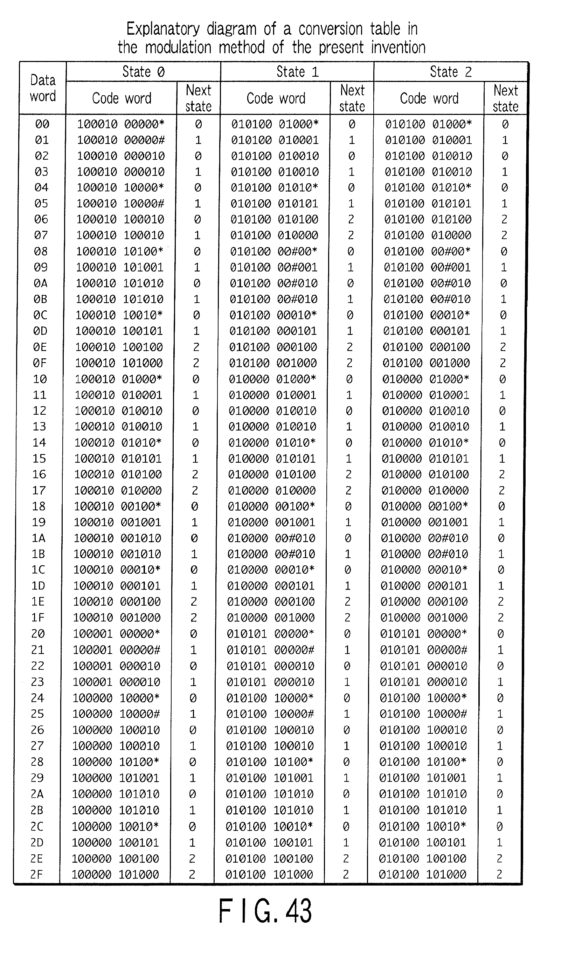

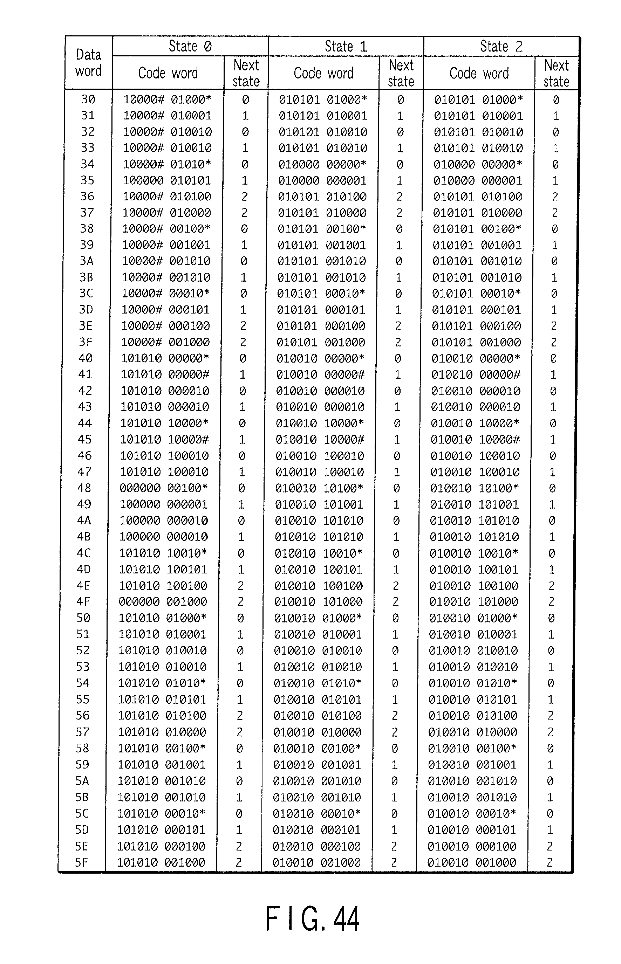

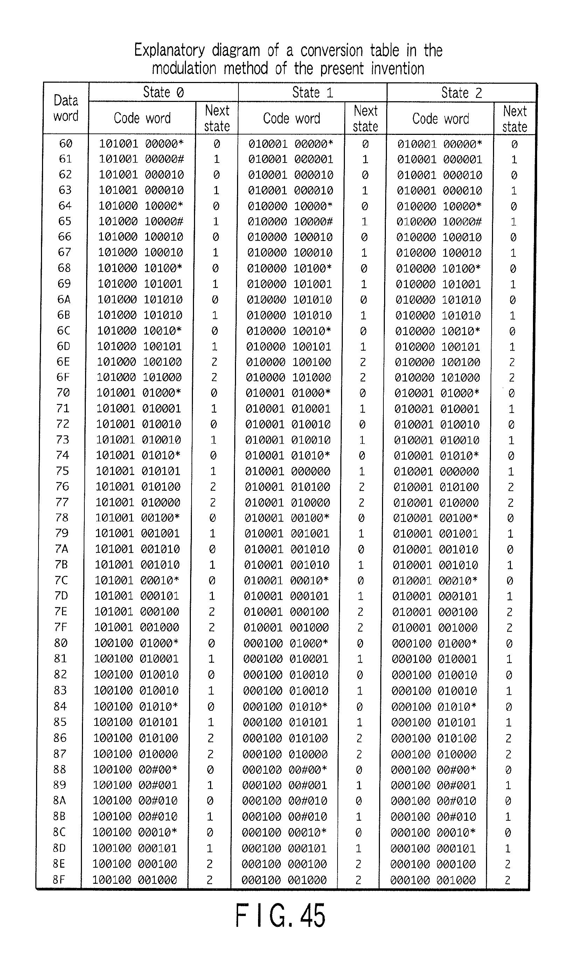

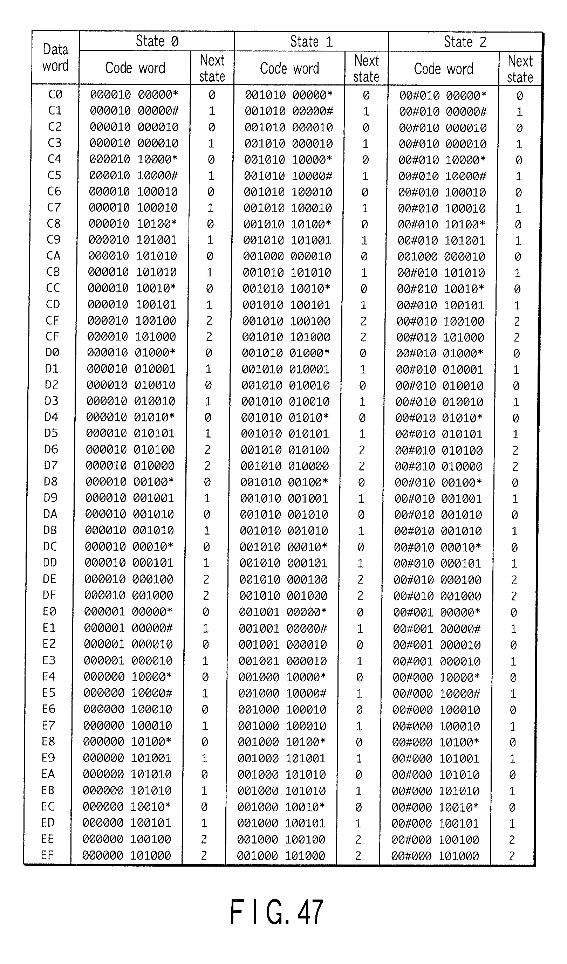

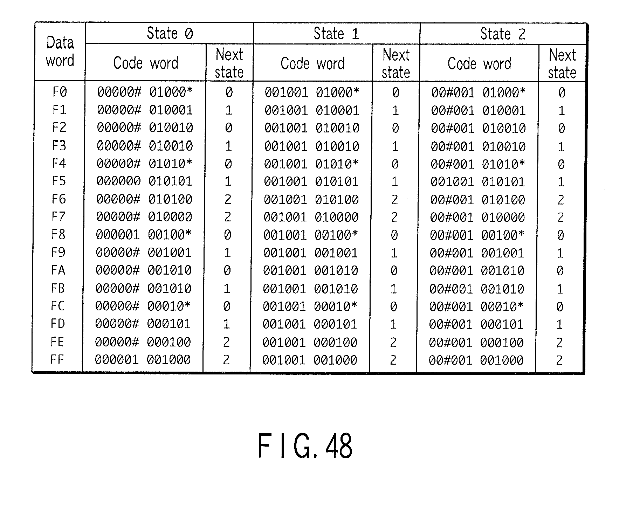

Modulation is performed using a code conversion table shown in FIGS. 43 to 48. The conversion table lists data words "00h" to "FFh," 12 channel bits for the code word for each of State 0 to State 2, and State of the next data word.

FIG. 39 shows the configuration of a modulation block.

A code table 352 determines code word X(t) and next state S(t+1) from data word B(t) and state S(t) as follows:

$$X(t) = H\{B(t), S(t)\}$$

$$S(t+1) = G\{B(t), S(t)\}$$

where H is a code word output function and G is a next State output function.

A state register 358 inputs next state S(t+1) from a code table 352 and outputs (current) state S(t) to the code table 352.

Some 12 channel bits in the code conversion table include not only "0b" and "1b" but also asterisk bit "*" and sharp bit "#."

Asterisk bit "*" in the code conversion table indicates that the bit is a margining bit. Some code words in the conversion table have a margining bit in LSB. A code connector 354 sets the margining bit to either "0b" or "1b" according to the channel bit following the margining bit. If the following channel bit is "0b," the margining bit is set to "1b." If the following channel bit is "1b," the margining bit is set to "0b."

Sharp bit "#" in the conversion table indicates that the bit is a DSV control bit. The DSV control bit is determined as a result of DVC component suppression control performed by a DSV controller 536.

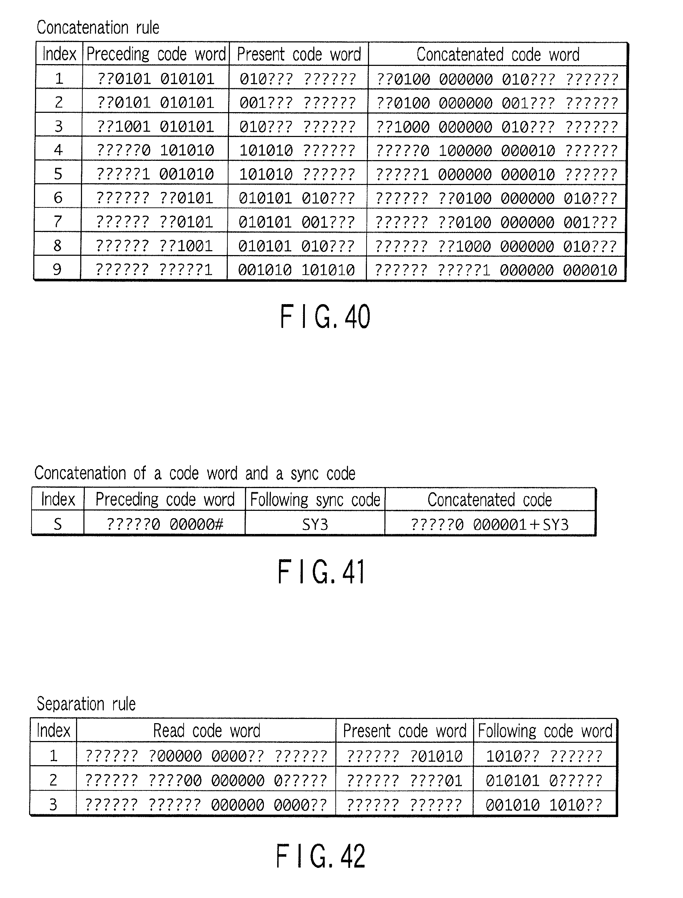

The concatenation rule for code words shown in FIG. 40 is used to concatenate code words obtained from the code table. When two adjacent code words coincide with patterns representing as the preceding code word and present code word in the table, these code words are replaced with a concatenated code word shown in the table. "?" bit is any one of "0b", "1b", and "#." "?" bits in the concatenated word are allocated as the preceding code word and present code word without being replaced.

A concatenation of code words is first applied to the preceding concatenation point. The concatenation rule in the table is applied to the individual concatenation points in the order of indexes. Some code words are replaced twice to connect with the preceding code word and with the following code word. A margining bit for the preceding word code is determined before pattern matching for concatenation. The DSV control bit "#" of the preceding code word or present code word is treated as a special bit before and after code connection. The DSV control bit is neither "0b" nor "1b", but is "?." The code word concatenation rule is not used to connect a code word to a sync code. To connect a code word to a sync code, the concatenation rule shown in FIG. 41 is used.

When a recording frame is modulated, a sync code is inserted into the head of each modulation code word in a 91-byte data word. Modulation is started at State 2 behind a sync code. The modulated code word is output sequentially as MSB to the head of each conversion code word and is subjected to NRZI conversion before being recoded onto the disk.

A sync code is determined by performing DC component suppression control.

DC component suppression control (DCC) minimizes the absolute value of accumulated DSV (digital sum value: additions are made, provided that "1b" is set to +1 and "0b" to -1) in an NRZI conversion modulation channel bit stream. A DDC algorithm controls the selection of a code word and a sync code in each of the following cases (a) and (b) to minimize the absolute value of DSV:

 (a) Selecting a sync code (see FIG. 38)
 (b) Selecting DSV control bit "#" for a concatenated code word

Selection is determined by the value of accumulated DSV at the position of the DSV bit in each of the concatenated code word and sync code.

DSV on which calculations are based is added to an initial value of 0 at the start of modulation. Additions are continued until the modulation has been completed and DSV is not reset. The selection of a DSV control bit means that the starting point is a DVS control bit and that a channel bit stream to minimize the absolute value of DSV just in front of the following DSV control bit is selected. Of two channel bit streams, the one whose absolute value of DSV is smaller is selected. If two channel bit streams have the same absolute value of DSV, DSV control bit "#" is set to "0b."

When the maximum DSV in calculating logically possible scenarios is taken into account, a range of DVS calculations has to be at least $\pm 2047$.

Hereinafter, a demodulation method will be explained. A demodulator converts a 12-channel-bit code word into an 8-bit data word. A code word is reproduced from a read bit stream using separation rules shown in FIG. 42. When two adjacent code words coincide with a pattern complying with the separation rules, these code words are replaced with the present code word and the following code word shown in a table. "?" bit is any one of "0b", "1b", and "#." "?" bits in the present code word and following code word are allocated directly in the read code word without being replaced.

The boundary between a sync code and a code word is separated without being replaced.

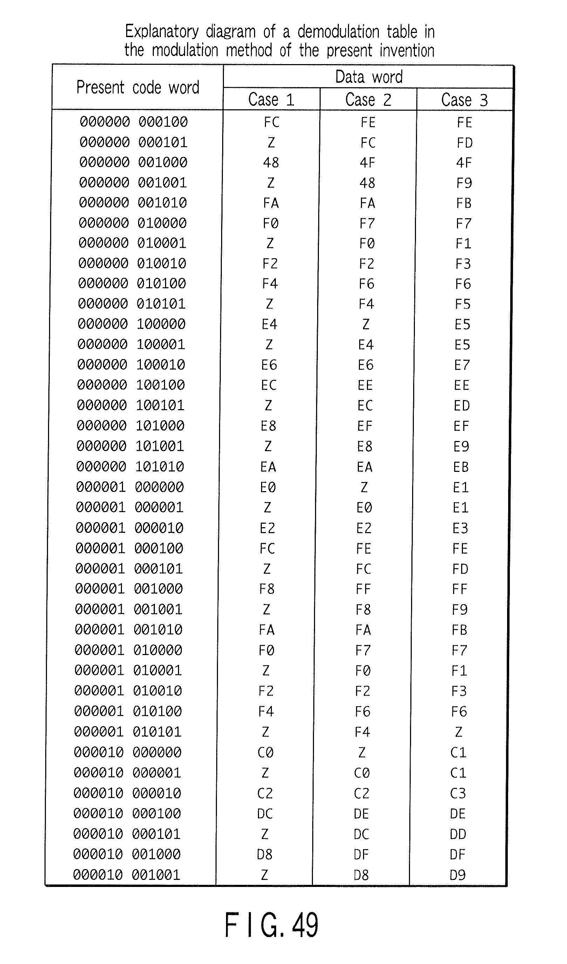

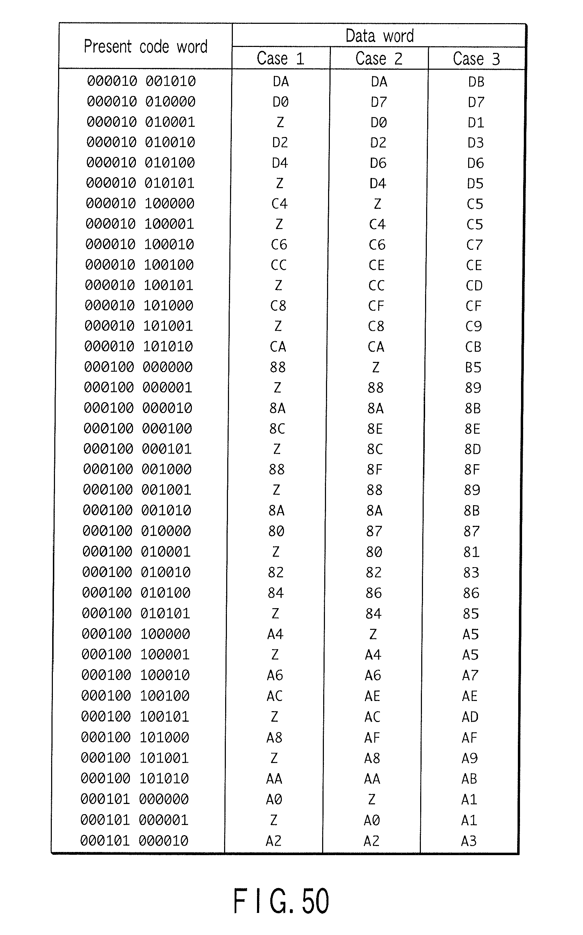

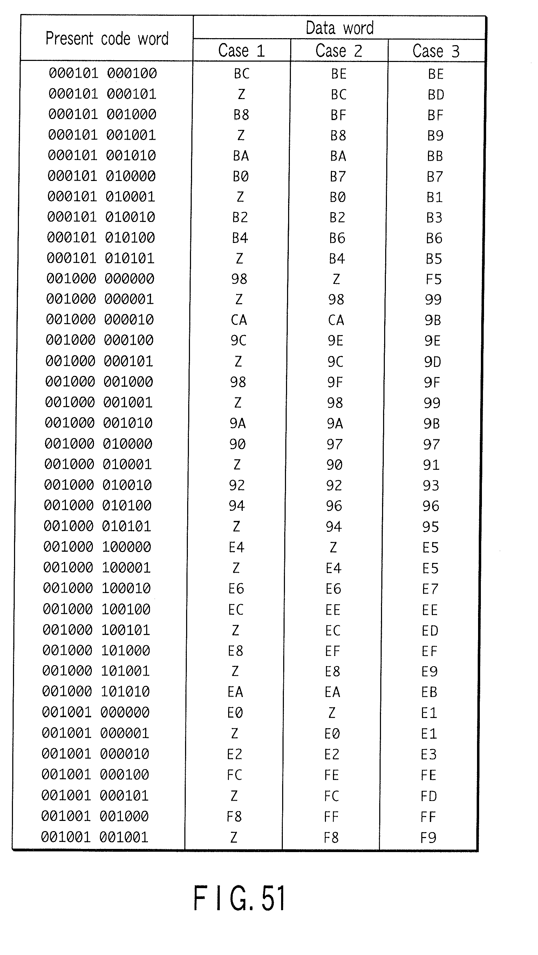

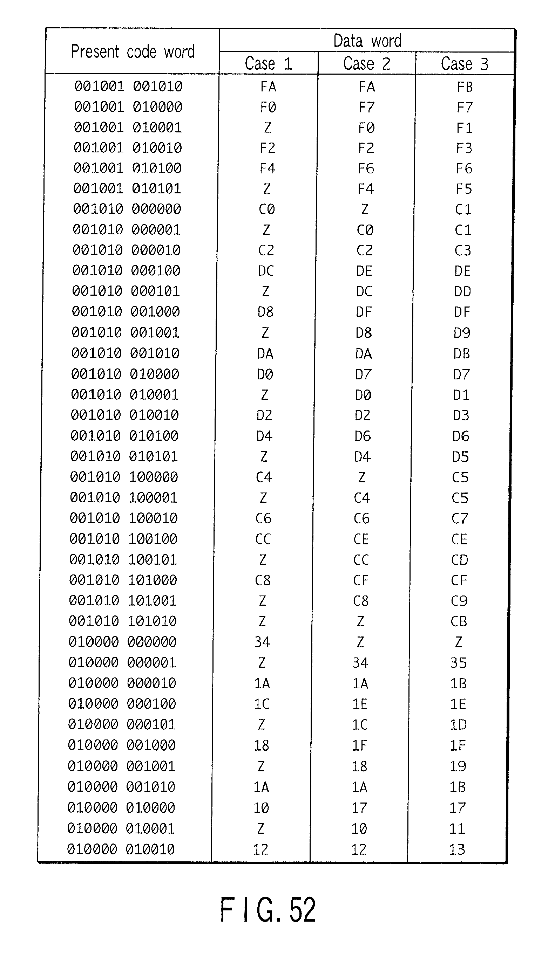

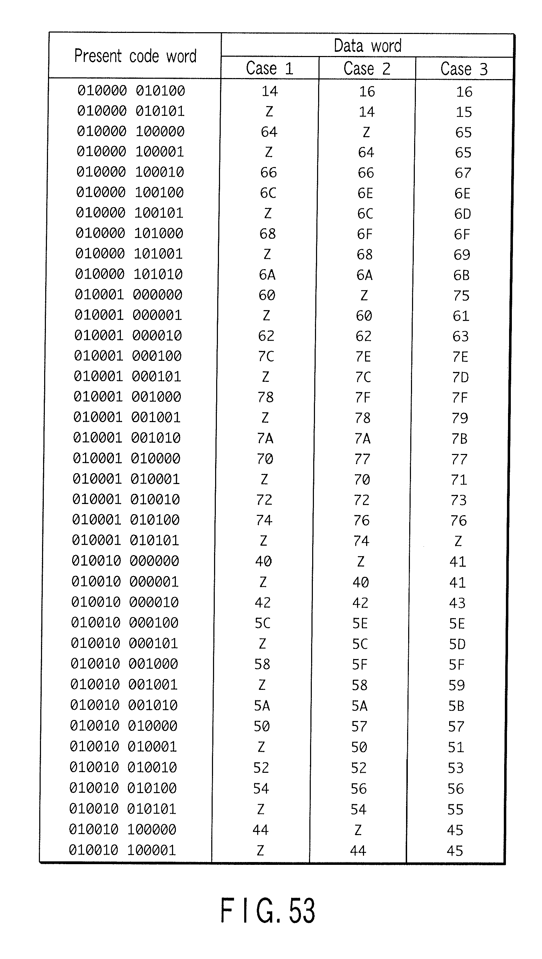

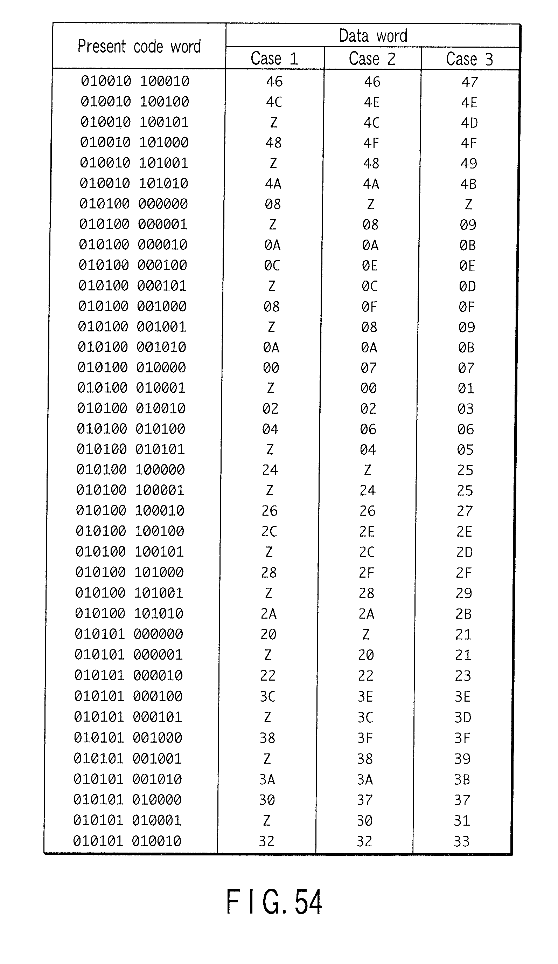

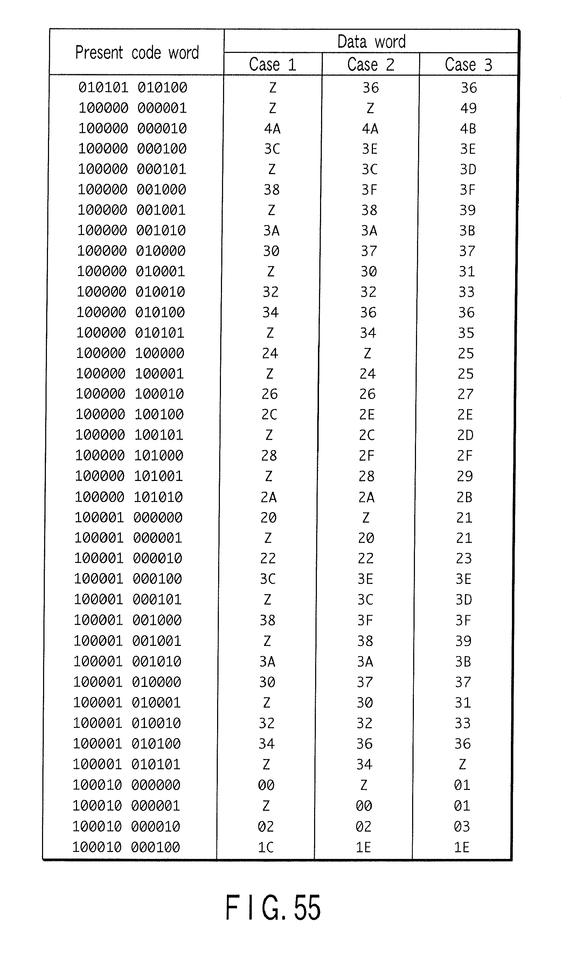

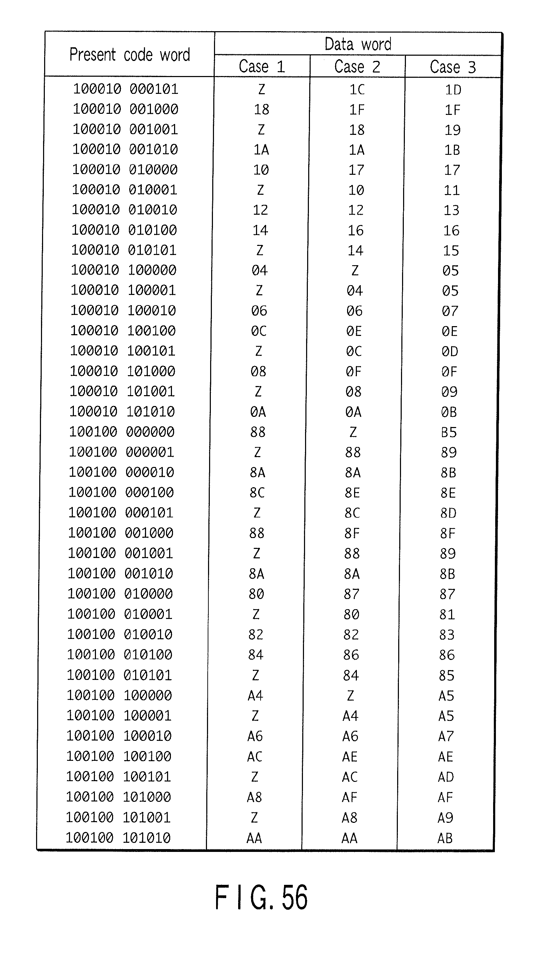

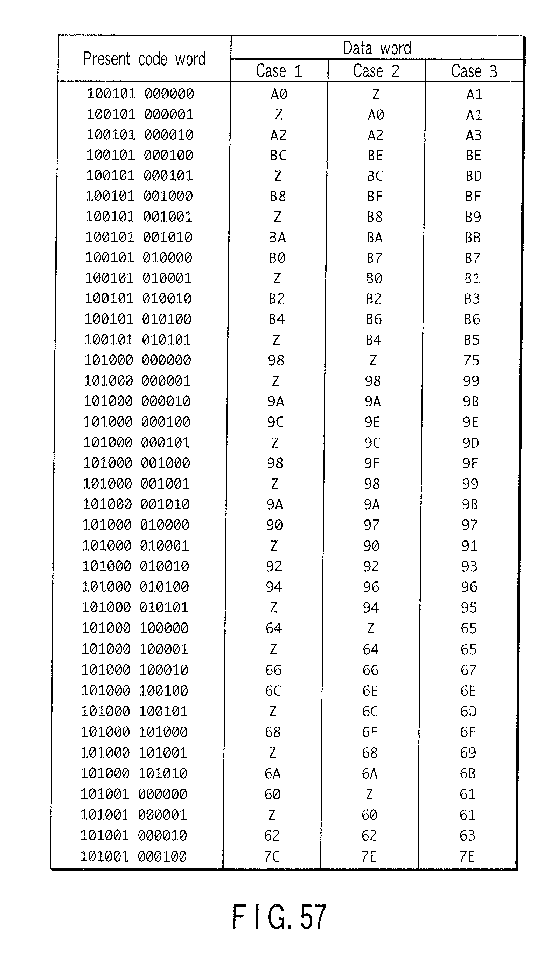

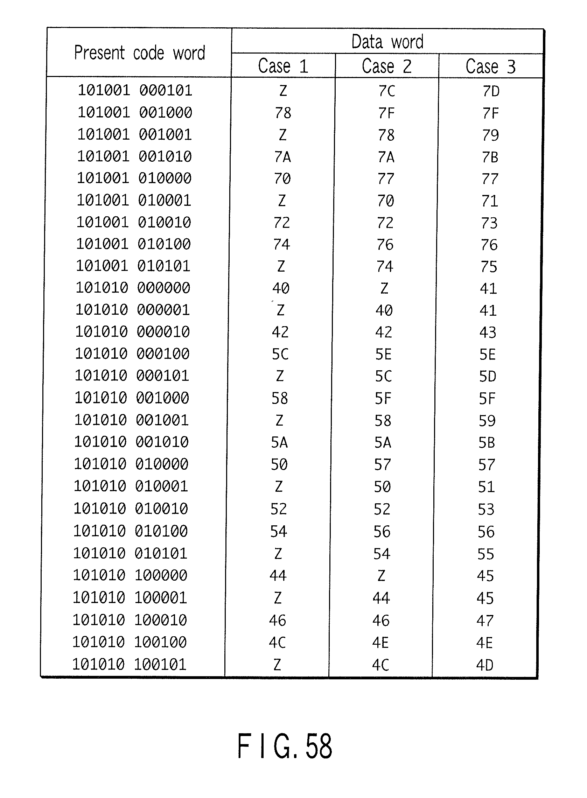

A code word is converted into a data word according to a modulation table shown in FIGS. 49 to 58. All possible code words are listed in the modulation table. "z" may be any data word in the range from "00h" to "FFh." The separated present code word is decoded by observing 4 channel bits in the following code word or the pattern of the following sync code:

 Case 1: The following code word begins with "1b" or the following sync code is SY0 to SY2 in State 0.
 Case 2: The following code word begins with "0000b" or the following sync code is SY3 in State 0.
 Case 3: The following code word begins with "01b", "001b", and "0001b" or the following sync code is SY0 to SY3 in State 1 and State 2.

The contents of a reference code pattern recorded in a reference code recording zone RCZ shown in FIG. 16 will be explained in detail. The existing DVD uses not only an "8/16 modulation" method of converting 8 bits of data into 16 channel bits as the modulation method but also a repeated pattern of "00100000100000010010000010000001" as a reference code pattern serving as a channel bit train recorded onto the information storage medium after modulation. In contrast, as shown in FIGS. 13 to 15, this embodiment uses ETM modulation that modulates 8 bits of data into 12 channel bits, imposes a run-length restriction of RLL (1, 10), and uses the PRML method in reproducing the signal from the data lead-in area DTLDI, data area DTA, data lead-out area DTLDO, and middle area MDA. Therefore, it is necessary to set the optimum reference code pattern for the modulation rule and PML detection. According to the run-length restriction of RLL (1, 10), the minimum value of the number of consecutive "0s" is "d = 1" and this gives a repeated pattern of "10101010." If the distance from code "1" or "0" to the following adjacent code is "T," the distance between adjacent "1s" in the pattern is "2T."

In this embodiment, since the information storage medium has a higher recording density, the reproduced signal from a repeated pattern of "2T" ("10101010") recorded on the information storage medium as described above lies near the cut-off frequency of the MTF (Modulation Transfer Function) characteristic of the objective (existing in the information recording and reproducing section 141 of FIG. 1) in the optical head, with the result that almost no modulation degree (signal amplitude) is obtained. Therefore, when the reproduced signal from a repeated pattern of "2T" ("10101010") is used as a reproduced signal used for circuit adjustment of the information reproducing apparatus or information recording and reproducing apparatus (e.g., initial optimization of various tap coefficients performed in a tap controller 332 of FIG. 5), the influence of noise is great and therefore stabilization effects are poor. Therefore, it is desirable that a still denser "3T" pattern should be used in circuit adjustment for the signal modulated according to the run-length restriction of RLL (1, 10).

When the DSV (Digital Sum Value) of the reproduced signal is taken into account, the absolute value of the DC (direct current) value increases in proportion to the number of consecutive "0s" between a "1" and the following "1" and the resulting DC value is added to the preceding DSV value. The polarity of the DC value added reverses before "1" is reached. Therefore, as for a method of setting the DSV value to "0" where a channel bit train of consecutive reference codes lasts, the degree of freedom of reference code pattern design increases in a method of setting the number of "1s" appearing in 12 channel bit trains after ETM modulation to an odd number and offsetting the DC component developed in a set of 12-channel-bit reference code cells with the DC component developed in the following set of 12-channel-bit reference code cells as compared with a method of doing setting so that the DSV value may become "0" in 12 channel bit trains after ETM modulation. Therefore, in the embodiment, the number of "1s" appearing in the reference code cell made up of 12 channel bit trains after ETM modulation is set to an odd number. To achieve a higher recording density, the embodiment uses a mark edge recording method where the position of "1" coincides with the position of the boundary between recording marks or between emboss pits. For example, when a repeated pattern of "3T" ("100100100100100100100") lasts, the length of a recording mark or an emboss pit and the space between recording marks or emboss pits may differ slightly according to the recording condition or the matrix producing condition. When the PRML detecting method is used, the level value of the reproduced signal is very important. To detect the signal stably and accurately even if the length of a recording mark or an emboss pit and the space between recording marks or emboss pits differ slightly, the slight difference has to be corrected using a circuit. Therefore, when a space of "3T" in length similar to a recording mark or emboss pit of "3T" in length is used as a reference code for adjusting the circuit coefficients, this improves the accuracy of circuit coefficient adjustment. For this reason, when a pattern of "1001001" is included as a reference code pattern in the embodiment, a recording mark or emboss pit and space of "3T" in length won't fail to be arranged.

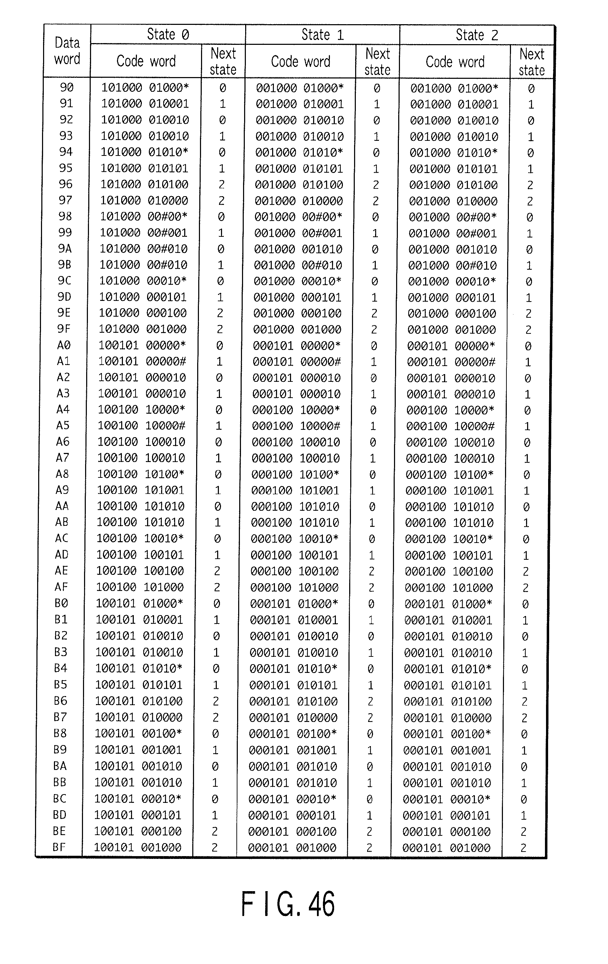

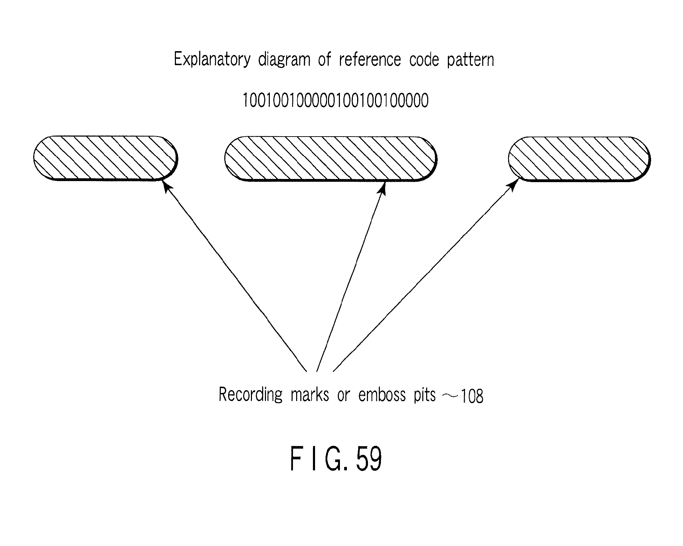

Circuit adjustment requires not only a dense pattern ("1001001") but also a sparse pattern. Therefore, when a sparse state (a pattern where many "0s" appear consecutively) is produced in the part from which a pattern of "1001001" has been removed in 12 channel bit trains subjected to ETM modulation and the number of "1s" appearing is set to an odd number, the optimum condition for the reference code pattern is a repetition of "100100100000" as shown in FIG. 59. To turn a modulated channel bit pattern into the above pattern, it is seen from FIG. 46 that an unmodulated data word has to be set to "A4h", using the modulation table. "A4h" (hexadecimal representation) corresponds to the data symbol "164" (decimal representation).

A method of creating data according to the data conversion rule will be explained concretely. First, the data symbol "164" (= "0A4h") is set to main data "D0 to D2047" in the above-described data frame structure. Next, data frame 1 to data frame 15 are prescrambled using initial preset number "0Eh". Data frame 16 to data frame 31 are prescrambled using initial preset number "0Fh". With the prescrambling, when scrambling is done following the data conversion rule, this produces the effect of double scrambling, with the result that the data symbol "164" (= "0A4h") appears as it is (that is, double scrambling returns the pattern to the original one). Since all of the reference codes each composed of 32 physical sectors are prescrambled, DSV control cannot be performed. Therefore, only data frame 0 is not prescrambled. When modulation is performed after the scrambling is done, a pattern shown in FIG. 59 is recorded onto the information storage medium.

FIG. 60 shows the way of recording consecutively channel bit data with the structure of a physical sector of FIG. 37 onto an information storage medium 221. In this embodiment, channel bit data recorded on the information storage medium 221 has hierarchical structure of recording data as shown in FIG. 60, regardless of the type of information storage medium 221 (reproduce-only/recordable/rewritable). Specifically, an ECC block 401, which is the largest data unit enabling error detection or error correction of data, is composed of 32 physical sectors 230 to 241. As descried in FIG. 37 and shown again in FIG. 60, sync frame #0 420 to sync frame #25 429 are composed of 24 channel bits of data forming any one (sync code 431) of sync codes "SY0" to "SY3" and sync data 432 having a 1092 channel bit data size placed between sync codes. Each of physical sector #0 230 to physical sector #31 241 is made up of 26 sync frames #0 420 to #25 429. As described above, one sync frame includes 1116 channel bits (24 + 1092) of data as shown in FIG. 37. A sync frame length 433, which is a physical distance on the information storage medium 221 on which one sync frame is recorded, is almost constant all over the information storage medium (when the variation in the physical distance caused by synchronization in the zone is removed).

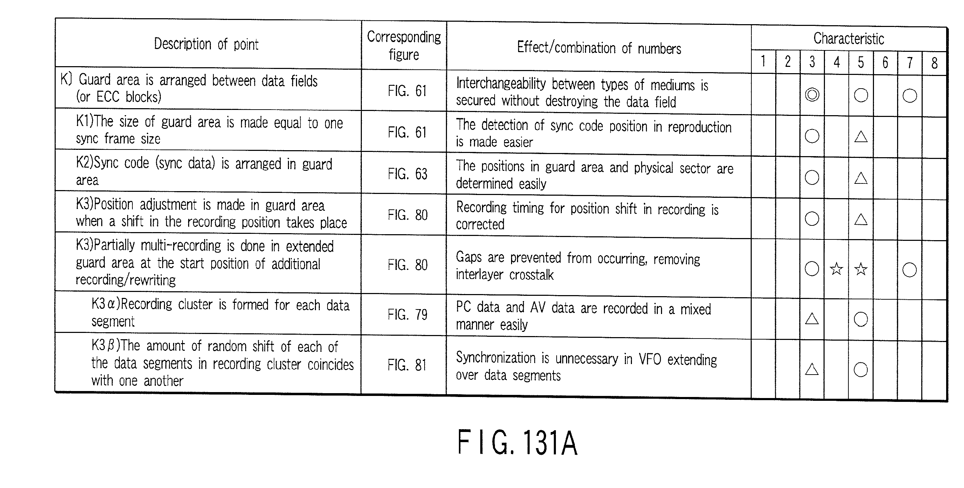

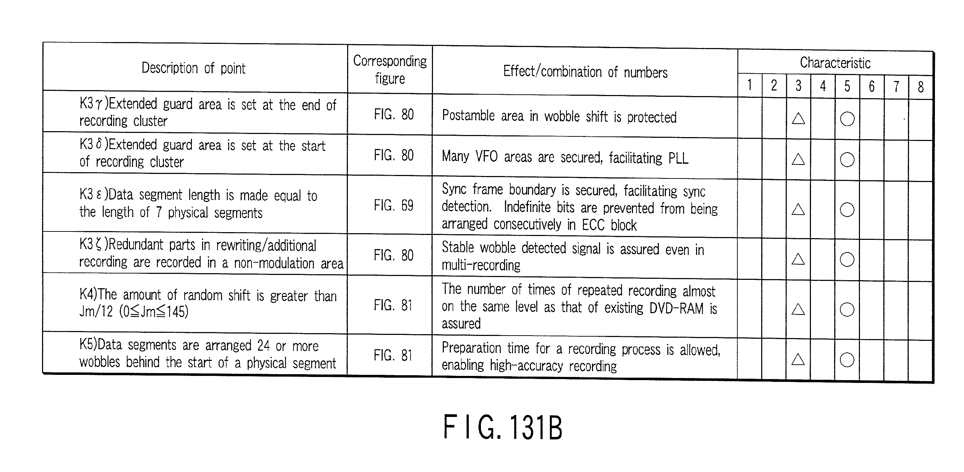

A comparison of data recording format between various information storage mediums in the present embodiment will be explained using FIG. 61. FIG. 61, (a) shows data recording formats in a conventional reproduce-only information storage medium DVD-ROM, a conventional recordable information storage medium DVD-R, and a conventional rewritable information storage medium DVD-RW. FIG. 61, (b) shows a data recording format of a reproduce-only information storage medium in the embodiment. FIG. 61, (c) shows a data recording format of a recordable information storage medium in the embodiment. FIG. 61, (d) shows a data recording format of a rewritable information storage medium in the embodiment. Although the individual ECC blocks 411 to 418 are shown in the same size for comparison, 16 physical sectors constitute one ECC block in the conventional reproduce-only information storage medium DVD-ROM, conventional recordable information storage medium DVD-R, and conventional rewritable information storage medium DVD-RW shown in FIG. 61, (a), whereas 32 physical sectors constitute one ECC block in the embodiment shown in FIGS. 61, (b) to 61, (d). As shown in FIGS. 61, (b) to 61, (d), this embodiment is characterized in that guard areas 442 to 448 having the same length as the sync frame length 433 are provided between ECC blocks #1 411 to #8 418 (point <K> in FIGS. 131A and 131B).

In the conventional reproduce-only information storage medium DVD-ROM, ECC blocks #1 411 to #8 418 are recorded consecutively as shown in FIG. 61, (a). When a additional recording or rewriting process called a restricted overwrite is carried out to secure the interchangeability of data recording format between the conventional recordable information storage medium DVD-R and conventional rewritable information storage medium DVD-RW and the conventional reproduce-only information storage medium DVD-ROM, this causes a problem: a part of the ECC block is destroyed by overwriting and therefore the reliability of data in reproduction is impaired seriously. In contrast, providing guard areas 442 to 448 between data fields (ECC blocks) as in the embodiment limits the overwriting area to the guard areas 442 to 448, which produces the effect of preventing the data in the data fields (ECC blocks) from being destroyed.

The present embodiment is characterized in that the length of each of the guard areas 442 to 448 is made equal to the sync frame length 433 of one sync frame size as shown in FIG. 61 (point <K1> in FIGS. 131A and 131B). As shown in FIGS. 37 to 60, sync codes are arranged at regular intervals of a 1116-channel-bit sync frame length 433. The sync code position extracting section 145 of FIG. 1 extracts the positions of sync codes using the regular intervals. In the embodiment, making the length of each of the guard area 442 to 448 equal to the sync frame length 433 keeps the sync frame intervals unchanged, even if the guard areas 442 to 448 are crossed over during reproduction. This produces the effect of making it easy to detect the positions of sync codes during reproduction.

Furthermore, in the embodiment, sync codes (sync data) are provided in the guard areas for the purpose of achieving the following (point <K2> in FIGS. 131A and 131B):

(1) The frequency of appearance of sync code is made equal even in a place crossing over the guard areas 442 to 448, thereby improving the accuracy of sync code position detection.
(2) The determination of the positions of physical sectors including the guard areas 442 to 448 is made easier.

Specifically, as shown in FIG. 63, a postamble field 481 is formed at the starting position of each of the guard areas 442 to 468. In the postamble field 481, sync code "SY1" with sync code number "1" shown in FIG. 38 is provided. As seen from FIG. 37, combinations of sync code numbers of three consecutive sync codes in physical sectors are different in all of the places. Moreover, combinations of sync code numbers of three consecutive sync codes, taking into account sync code number "1" in the guard areas 442 to 448, are also different in all of the places. Therefore, a combination of sync code numbers of three consecutive sync codes in an arbitrary area makes it possible to determine not only position information in the physical sectors but also the positions in the physical sectors including the positions of the guard areas.

FIG. 63 shows a detailed structure of the guard areas 441 to 448 shown in FIG. 61. FIG. 60 shows the structure of a physical sector composed of a combination of sync code 431 and sync data 432. This embodiment is characterized in that each of the guard areas 441 to 448 is composed of a combination of sync code 433 and sync data 434 and that the data modulated according to the same modulation rule as that of sync data 432 in a sector is placed in the sync data 434 area in the guard area #3 443.

In this invention, the area of one ECC block #2 412 composed of 32 physical sectors is called a data field 470.

In FIG. 63, VFO (Variable Frequency Oscillator) areas 471, 472 are used to synchronize reference clocks in the information reproducing apparatus or information recording and reproducing apparatus in reproducing the data area 470. The contents of data recorded in the VFO areas 471, 472 are such that data before modulation according to a common modulation rule described later is a repetition of consecutive "7Eh" and the actually recorded channel bit pattern after modulation is a repetition of "010001 000100" (a repeated pattern of three consecutive "0s"). To obtain this pattern, the begin byte in each of the VFO areas 471, 472 has to be set to State 2 in modulation.

Pre-sync areas 477, 478 indicate the positions of the boundary between the VFO areas 471, 472 and the data area 470. The recording channel bit pattern after modulation is a repetition of "100000 100000" (a repeated pattern of 5 consecutive "0s"). The information reproducing apparatus or information recording and reproducing apparatus detects the position of a change in a repeated pattern of "100000 100000" in the pre-sync areas 477, 478 from a repeated pattern of "010001 000100" in the VFO areas 471, 471, thereby realizing the approach of the data area 470.

The postamble field 481 indicates not only the end position of the data area 470 but also the starting position of the guard area 443. The pattern in the postamble field 481 coincides with the pattern of "SY1" in a sync code shown in FIG. 38.

An extra area 482 is an area used for copy control and unauthorized copy prevention. When the extra area 482 is not used for copy control and unauthorized copy prevention, all of it is set to "0" using channel bits.

In the buffer area, data before modulation as in the VFO areas 471, 472 is a repetition of "7Eh" and the actually recorded channel bit pattern after modulation is a repeated pattern of "010001 000100" (a repeated pattern of three consecutive "0s"). To obtain this pattern, the begin byte in each of the VFO areas 471, 472 has to be set to State 2 in modulation.

As shown in FIG. 63, the postamble field 481 in which a pattern of "SY1" is recorded corresponds to the sync code area 433. The area from the extra area 482 just behind the sync code area 433 to the pre-sync 478 corresponds to the sync data area 434. The area from the VFO area 471 to a buffer area 475 (that is, the area including the data area 470 and a part of the guard areas in front of and behind the data area 470) is called a data segment 490, which indicates the contents different from a "physical segment" explained later. The data size of each item of data shown in FIG. 63 is expressed in the number of bytes of data before modulation.

This embodiment can use not only the structure of FIG. 63 but also a method described below as one other embodiment. The pre-sync area 477 is arranged in the middle of the VOF areas 471, 472 instead of at the boundary between the VOF are 471 and the data area 470. In the one other embodiment, the distance between the sync code "SY0" at the begin position of the data block 470 and the pre-sync area 477 is increased, thereby securing a great distance correlation, which sets the pre-sync area 477 as a tentative Sync and uses it as distance correlation information on the real Sync position (although differing from another inter-Sync distance). If the real Sync cannot be detected, Sync is inserted in the position in which the real one created from the tentative Sync is to be detected. The one other embodiment is characterized in that the pre-sync area 477 is kept a little away from the real sync ("SY0"). Providing the pre-sync area 477 at the beginning of each of the VFO areas 471, 472 reduces the function of pre-sync because PLL of a reading clock is not locked. Therefore, it is desirable that the pre-sync area 477 should be provided in the mid-point between the VFO areas 471, 472.

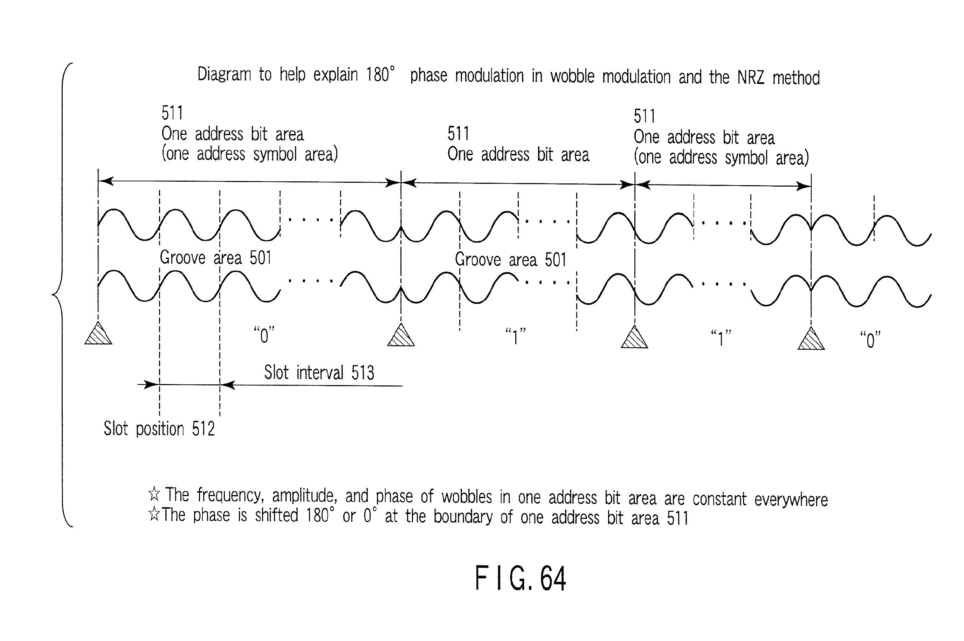

In this embodiment, address information on a recording (rewritable or recordable) information storage medium is recorded in advance by wobble modulation. The present embodiment is characterized in that $\pm 90°$ (180°) phase modulation is used as the wobble modulation method and that address information is recorded in advance onto the information storage medium by the NRZ (Non-Return to Zero) method (point <J> in FIGS. 129A and 129B). Using FIG. 64, a concrete explanation will be given. In the embodiment, as for address information, an address bit (also referred to as an address symbol) area 511 is represented at intervals of four wobbles. In one address bit area 511, the frequency, amplitude, and phase coincide with those in the rest. When the same value lasts as the values of address bits, the same phase continues at the boundary of each address bit area 411 (the part marked with a black triangle in FIG. 64). When the address bits reverse, the wobble pattern reverses (the phase is shifted 180°). The wobble signal detecting section 135 of the information recording and reproducing apparatus of FIG. 1 detects the boundary position of the address bit area 511 (the place marked with a black triangle in FIG. 64) and a slot position 412 (the boundary position of one wobble period) simultaneously. Although not shown, the wobble signal detecting section 135, which includes a PLL (Phase Locked Loop) circuit, applies PLL in synchronization with both of the boundary position of the address bit area 511 and the slot position 412. If the boundary position of the address bit area 511 or the slot position 412 is out of position, the wobble signal detecting section 135 goes out of synchronization and the wobble signal cannot be reproduced (read) accurately. The interval between adjacent slot positions 412 is referred to as a slot interval 513. The shorter the slot interval 513, the easier the PLL circuit is synchronized. Therefore, the wobble signal can be reproduced stably (or the contents of information can be deciphered stably).

As seen from FIG. 64, when the 180° phase modulation method of making a 180° shift or 0° shift is used, the slot interval 513 coincides with one wobble period. As for a wobble modulation method, an AM (Amplitude Modulation) method of changing the wobble amplitude is liable to be affected by dirt on or flaws in the surface of an information storage medium, whereas a phase modulation method is less liable to be affected by dirt on or flaws in the surface of an information storage medium because a change in the phase, not in the amplitude, is detected. Moreover, in an FSK (Frequency Shift Keying) method of changing the frequency, the slot interval 513 is longer than the wobble period and therefore it is difficult to synchronize the PLL circuit. Therefore, as in the embodiment, when address information is recorded by wobble phase modulation, this produces the effect of making it easier to synchronize the wobble signal.

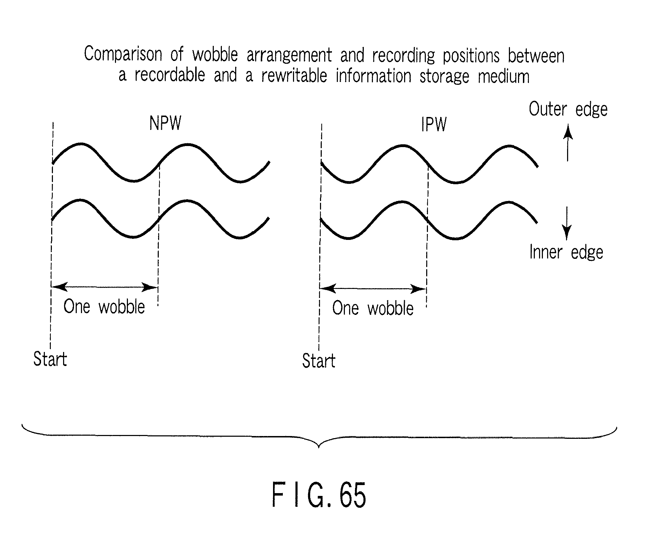

As shown in FIG. 64, either "1" or "0" is allocated as binary data to one address bit area 511. FIG. 65 shows a method of allocating bits in this embodiment. As shown at left of FIG. 65, a wobble pattern which meanders first from the starting position of one wobble toward the outer edge is referred to as a normal phase wobble NPW (Normal Phase Wobble). Data "0" is allocated to this. As shown at right of FIG. 65, a wobble pattern which meanders first from the starting position of one wobble toward the inner edge is referred to as an inverted phase wobble NPW (Inverted Phase Wobble). Data "1" is allocated to this.

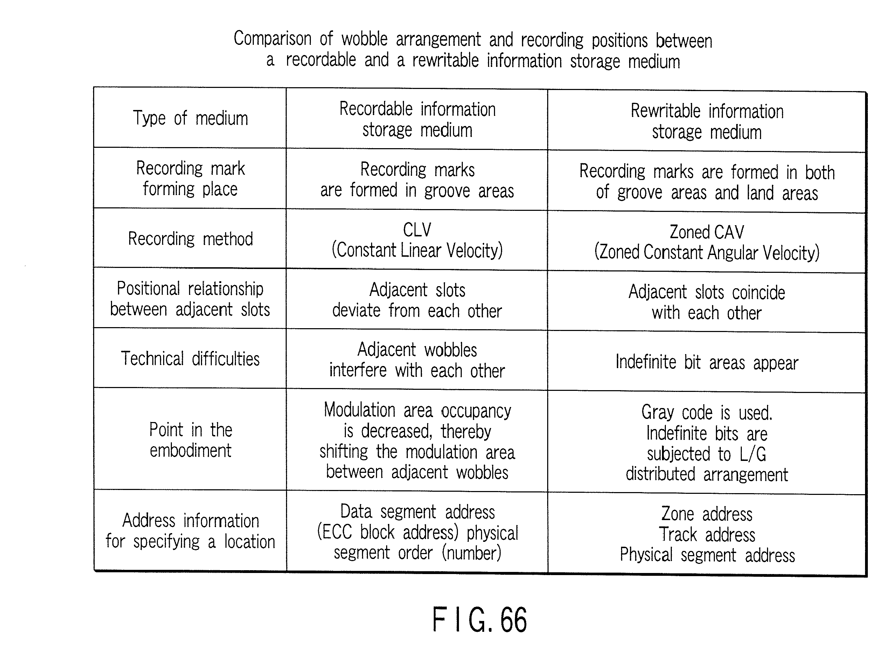

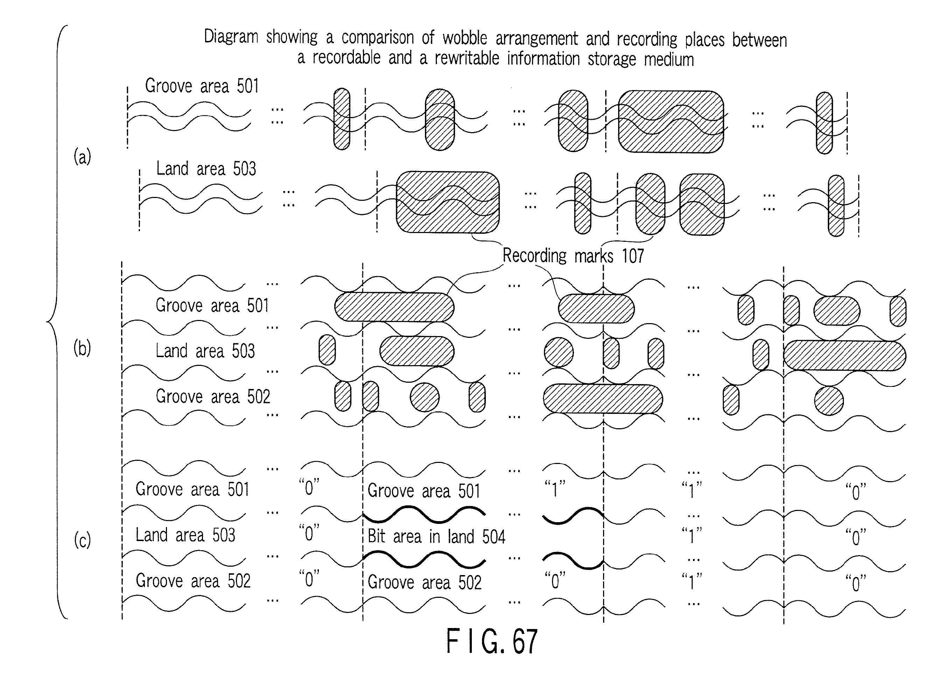

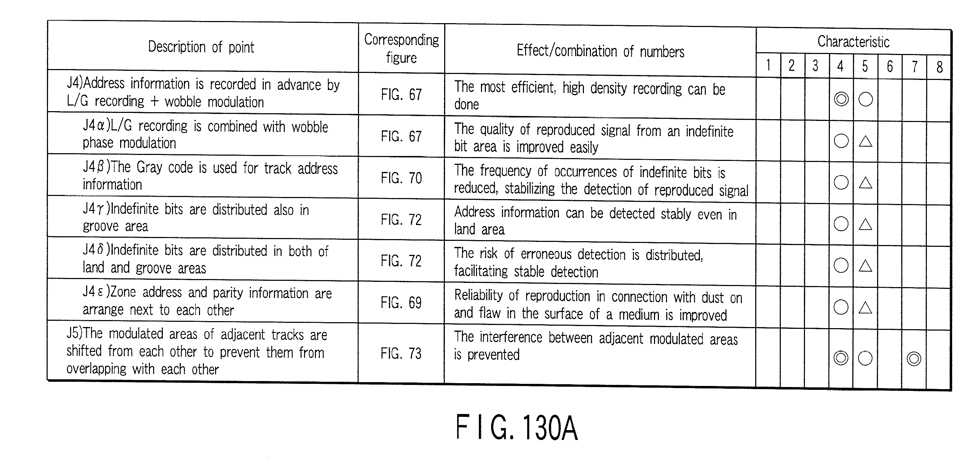

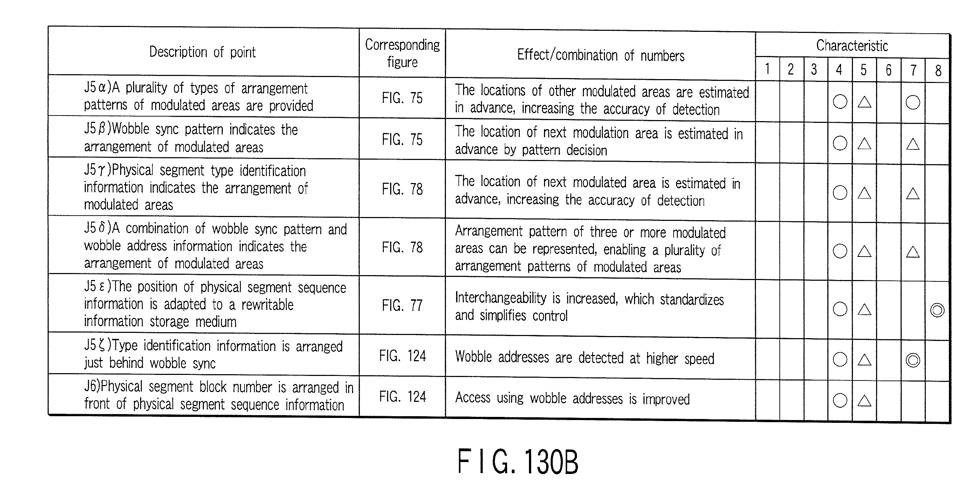

A comparison of wobble arrangement and recording positions between a recordable information storage medium and a rewritable information storage medium in the embodiment will be generally explained. FIG. 67, (a) shows wobble arrangement and the forming position of recording mark 107 in a recordable information storage medium. FIGS. 67, (b) and 67, (d) show wobble arrangement and the forming position of recording mark 107 in a rewritable information storage medium. In FIG. 67, the diagram is reduced in the horizontal direction and extended in the vertical direction as compared with the actual enlarged diagram. As shown in FIG. 66 and FIG. 67, (a), a CLV (Constant Linear Velocity) method is used for the recordable information storage medium. The slot position between adjacent tracks or the position of the boundary between address bit areas (the part shown by a one-dot-dash line in FIG. 67) may be out of position. Recording marks 107 are formed in groove areas 501, 502. In this case, since the wobble position between adjacent tracks is asynchronous, the interference of the wobble signal between adjacent tracks takes place. As a result, the displacement of the slot position detected from the wobble signal by the wobble signal detecting section 135 of FIG. 1 and the displacement of the boundary between address bit areas are liable to take place. To overcome the technical difficulties, the present embodiment reduces the modulated area occupation ratio as described later (point <J2> in FIGS. 129A and 129B) and shifts the modulated area between adjacent tracks (point <J5> in FIGS. 130A and 130B).

In contrast, the rewritable information storage medium uses not only a "land/groove recording method of forming recording marks 107 in both of the land area 503 and the groove areas 501, 502 as shown in FIGS. 66 and 67, (b) but also zoned CAV (Constant Angular Velocity), a zone recording method of dividing a data area into 19 zones from "0" to "18" as shown in FIG. 12A, and FIG. 12B and synchronizing wobbles between adjacent tracks in the same zone. The embodiment is characterized in that the "land/groove recoding method" is used in a rewritable information storage medium and that address information is recorded in advance by wobble modulation (point (J4) in FIGS. 130A and 130B). In a "groove recording method" which records recording marks 107 in only the groove areas 501, 502 as shown in FIG. 67, (a), when recoding is done with a shortened track pitch, the distance between the adjacent groove areas 501, 502, the reproduced signal from the recording mark 107 recorded on one groove area 501 is influenced by the recording mark 107 recorded on the adjacent groove 502 (or crosstalk between adjacent tracks occurs). Therefore, the track pitch cannot be shortened much, which puts a limit on the recording density. In contrast, as shown in FIG. 67, (b), when recording marks 107 are recorded in both of the groove areas 501, 502 and the land area 503, setting the step between the groove areas 501, 502 and the land area 502 to $\lambda/$ (5n) to $\lambda/$ (6n) ($\lambda$: the wavelength of the optical head light source used in reproduction, n: the refractive index of the transparent substrate of the information storage medium at the wavelength) causes crosstalk between adjacent areas (between the land areas and the groove area) to be offset even if the track pitch is shortened. Using this phenomenon, the "land/groove recording method" can shorten the track pitch more than the "groove recoding method," which enables the recording density of the information storage medium to be increased.

To access a specific position on an unrecorded information storage medium (in a state before a recording mark 107 is recorded) with high accuracy, it is necessary to record address information onto the information storage medium in advance. When the address information is recorded in emboss pits in advance, recording marks have to be recorded, avoiding the emboss pit area, which decreases the recording capacity by the amount equal to the emboss pit area. In contrast, when address information is recorded by wobble modulation as in the rewritable information storage medium of the embodiment (point (J4) in FIGS. 130A and 130B), recording marks 107 can be formed also in the wobble-modulated area, which raises the recording efficiency and increases the recording capacity.

As described above, not only using the "land/groove recoding method" but also recording address information by wobble modulation in advance enables recording marks 107 to be recorded with the highest efficiency and the recording capacity of the information storage medium to be increased. According to user requests that the recording capacity of a recordable information storage medium should coincide with that of a reproduce-only information storage medium, the recording capacity of a recordable information storage medium is caused to coincide with that of a reproduce-only information storage medium, as seen from a comparison of the column of "user usable recording capacity" in FIGS. 13 and 14. Therefore, the recordable information storage medium does not require as large a capacity as the rewritable information storage medium and therefore uses the "groove recording method" as shown in FIG. 67, (a).

In the method shown in FIG. 67, (b), since the slot position between adjacent tracks and the position of the boundary between address bit areas (shown by a one-dot-dash line in FIG. 67) are all in position, the interference of a wobble signal between adjacent tracks does not occur. Instead, an indefinite bit area 504 appears. In FIG. 67, (c), consider a case where the address information "0110" is recorded by wobble modulation in the upper groove area 501. Then, when the address information "0010" is recorded by wobble modulation in the lower groove area 502, an in-land indefinite bit area 504 shown in FIG. 67, (c) appears. The width of the land varies in the in-land indefinite bit area 504, from which a wobble sense signal cannot be obtained. To overcome the technical difficulties, the embodiment uses the Gray code (point <J4β> in FIGS. 130A and 130B) as described later. In the embodiment, the width of the groove area is changed locally to form an indefinite bit area also in the groove area (point <J4γ> in FIGS. 130A and 130B), thereby distributing indefinite bits over both of the land area and the groove area (point <J4δ> in FIGS. 130A and 130B).

The point of the embodiment is that not only is the "land/groove recording method" used, but also wobble modulation used for recording address information is combined with 180˚ (±90˚) wobble phase modulation (point <J4α> in FIGS. 130A and 130B). In "L/G recording + groove wobble modulation," if an indefinite bit occurs on the land because the track number of the groove has changed, the whole level of the reproduced signal from the recording mark recoded on the land changes, which causes a problem: the error rate of the reproduced signal from the recording mark deteriorates locally. However, as shown in this embodiment, 180˚ (±90˚) wobble phase modulation is used as wobble modulation of grooves, which causes the land width to change in a bilaterally-symmetric, sine-wave form at the position of an indefinite bit on the land, with the result that a change in the whole level of the reproduced signal from the recording mark takes a very gentle form similar to a sine wave. In addition, when tracking is done stably, the position of the indefinite bit on the land can be estimated in advance. Therefore, according to the embodiment, it is possible to realize a structure which enables the reproduced signal from the recording mark to be corrected using circuits and improves the quality of the reproduced signal easily.

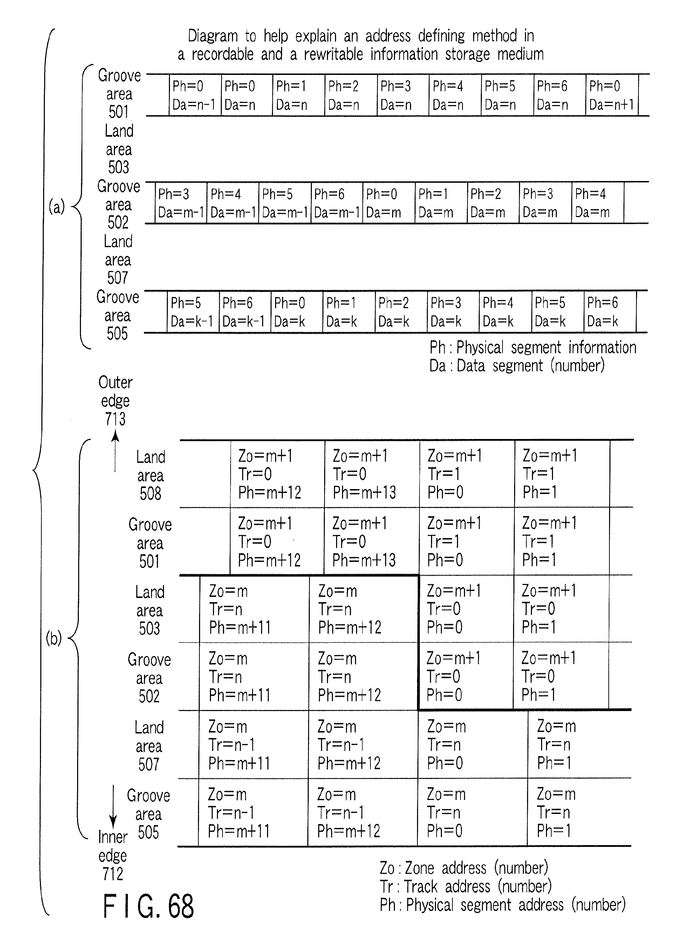

Using FIGS. 66 and 68, address information recorded in advance by wobble modulation in a recordable information storage medium and a rewritable information storage medium will be explained. FIG. 68, (a) shows the contents of address information in a recordable information storage medium and a method of setting the address. FIG. 68, (b) shows the contents of address information in a rewritable information storage medium and a method of setting the address. As will be described in detail later, in both of the recordable information storage medium and the rewritable one, a unit of physical recording place on an information storage medium is called a "physical segment block." A unit of data recorded in a physical segment block (in the form of a channel bit train) is called a "data segment." One data segment of data is recorded in an area of one physical segment block length (the physical length of one physical segment block coincides with the length of one data segment recorded on the information storage medium). One physical segment block is composed of 7 physical segments. In one data segment, one ECC block of user data shown in FIG. 34 is recorded.

In a recordable information storage medium, since the "groove recoding method" with CLV is used as shown in FIG. 66, data segment address number Da is used as address information on the information storage medium as shown in FIG. 68, (a). The data segment address may be referred to as ECC block address (number) or physical segment block address (number). Moreover, physical segment sequence Ph is also included in the address information to obtain more accurate position information in the same data segment address Da. That is, each physical segment position on the recordable information storage medium is determined by data segment address Da and physical segment sequence Ph. Data segment addresses Da are numbered in ascending order from the inner edge side along the groove areas 501, 502, 507, 505. As for physical segment sequence Ph, number "0" to number "6" are set repeatedly from the inner edge toward the outer edge.

In a rewritable information storage medium, a data area is divided into 19 zones as shown in FIGS. 12A and 12B. Since a groove continues spirally, the length of one round on one adjacent track differs from that on the other. The difference in the length between adjacent tracks is set zone by zone so as to be ±4 channel bits or less when the length of channel bit interval T is made equal everywhere. The boundary positions of physical segments or physical segment blocks in one adjacent track coincide (synchronize) with those in the other adjacent track in the same zone. Therefore, as shown in FIGS. 66 and 68(b), position information in the rewritable information storage medium is given in zone address (number) Zo, track address (number) Tr, and physical segment address (number) Ph. Track addresses Tr represent track numbers arranged from the inner edge toward the outer edge in the same zone. A set of a land area and a groove area adjacent to each other (e.g., a set of land area 503 and groove area 502, or a set of land area 507 and groove area 505) is used to set the same track address number Tr. Since an indefinite bit area 504 appears frequently in the parts "Ph = 0" and Ph = 1" of the land area 507 in FIG. 68(b), the track address Tr cannot be deciphered. Thus, recording marks 107 are inhibited from being recorded into the area. A physical segment address (number) Ph represents a relative physical segment number in one round of the same track. Using the zone switching position in the circumferential direction as a reference, physical segment addresses Ph are numbered. That is, as shown in FIG. 68(b), the starting number of physical segment address Ph is set to "0."

Using FIG. 69, a recording format of address information in wobble modulation in a recordable information storage medium of the present invention will be explained. A method of setting address information by wobble modulation in the present embodiment is characterized in that address information is allocated using the sync frame length 433 shown in FIG. 61 as a unit. As shown in FIG. 37, one sector is composed of 26 sync frames. Since one ECC block is composed of 32 physical sectors as seen from FIG. 31, one ECC block is composed of $26 \times 32 = 832$ sync frames. As shown in FIG. 61, the length of the guard areas 442 to 468 between the ECC blocks 411 to 418 coincides with one sync frame length 433. Therefore, the length of the sum of one guard area 462 and one ECC block 411 is made up of 832 + 1 = 833 sync frames. Since 833 is factorized into:

$$833 = 7 \times 17 \times 7 \qquad\qquad (1)$$

a structural arrangement making use of this feature is used. Specifically, an area as long as the area of one guard area plus one ECC block is defined as a data segment 531 serving as a basic unit of rewritable data (the structure of a data segment 490 shown in FIG. 63 is common to the reproduce-only information storage medium, rewritable information storage medium, and recordable information storage medium). An area having the same length as the physical length of one data segment 531 is divided into "7" physical segments #0 550 to #6 556 (point <K3ε> in FIGS. 131A and 131B). Address information is recorded in advance by wobble modulation for each of physical segments #0 550 to #6 556. As shown in FIG. 69, the boundary position of the data segment 531 does not coincide with that of the physical segment 550. They are shifted from each other by a specific distance described later. Moreover, as shown FIG. 69, each of physical segments #0 550 to #6 556 is divided into 17 wobble data units (WDU) #0 560 to #16 756 (point <J1> in FIGS. 129A and 129B). It is seen from equation (1) that 7 sync frames are allocated to each of wobble data units #0 560 to #16 756. In this way, 17 wobble data units constitute a physical segment (point <J1> in FIGS. 129A and 129B) and the length of 7 physical segments is made equal to the length of a data segment (point <K3ε> in FIGS. 131A and 131B), securing a sync frame boundary in the range extending over the guard areas 442 to 468, which facilitates the detection of a sync code 431 (FIG. 60).

In the rewritable information storage medium, errors are liable to occur in the reproduced signal from the recording marks in an indefinite bit area 504 (FIG. 67). Since the number of physical sectors constituting an ECC block, 32, cannot be divided by the number of physical segments, 7 (or is not a multiple of the number of physical segments, 7), this produces the effect of preventing not only items of data to be recorded in the indefinite area 504 from being arranged in a straight line but also the error correcting capability from deteriorating in the ECC block.

As shown in FIG. 69, (d), each of wobble data units #0 560 to #16 756 is composed of 16 wobbles of modulation areas and 68 wobbles of non-modulation areas 590, 591. This embodiment is characterized in that the occupation ratio of the non-modulation areas 590, 591 to the modulation areas is increased remarkably (point <J2> in FIGS. 129A and 129B). Since the groove area or land area is always wobbling at a specific frequency in the non-modulation areas 590, 591, PLL (Phase Locked Loop) is applied using the non-modulation areas 590, 591, which makes it possible to extract (generate) a reference clock in reproducing the recording mark recorded on the information storage medium or a recording reference clock used in recording new data.

As described above, in the embodiment, the occupation ratio of the non-modulation areas 590, 591 to the modulation areas is increased remarkably, which makes it possible to improve not only the accuracy of extraction (generation) of a reproducing reference clock or a recording reference clock but also the stability of the extraction (generation). Specifically, in wobble phase modulation, when the reproduced signal is caused to pass through a band-pass filter to shape the waveform, the amplitude of the shaped detected signal becomes smaller before and after a phase change. This phenomenon causes a problem: as the number of phase changes in phase modulation increases, the amplitude of the waveform fluctuates more frequently, lowering the clock extraction accuracy, whereas a small number of phase changes makes a bit shift liable to occur in detecting wobble address information. In the embodiment, to overcome this problem, modulation areas based on phase modulation and non-modulation areas are provided and the occupation ratio of the non-modulation areas to the modulation areas is set high, which produces the effect of improving the clock extraction accuracy. Furthermore, since the place in which a modulation area is changed to a non-modulation area or vice versa can be estimated in advance, the non-modulation areas are gated in extracting the clock, thereby detecting only the signals from the non-modulation areas, which enables the clock to be extracted from the detected signal.

When the optical head moves from the non-modulation areas 590, 591 to a modulation area, modulation start marks 581, 582 are set using four wobbles so that wobble-modulated wobble address areas 586, 587 may appear immediately after the modulation start marks 581, 582 are detected. To actually extract wobble address information 610, a wobble sync area 580 less the non-modulation areas 590, 591 and modulation start marks 581, 582 in each of physical segments #0 550 to #6 556 as shown in FIG. 69(d) and wobble address areas 586, 587 are gathered and then are rearranged as shown in FIG. 69, (e).

As shown in FIG. 69, (d), three address bits are set using 12 wobbles in the wobble address areas 586, 587 (point <J2α> in FIGS. 129A and 129B). That is, four consecutive wobbles constitute one address bit. As described above, the embodiment uses a structure which has address information distributed in units of three address bits (point <J2α> in FIGS. 129A and 129B). When wobble address information 610 is concentrated in one place of the information storage medium, if the surface of the medium captures dirt or is damaged, all of the information is difficult to detect. As shown in FIG. 69, (d), in the embodiment, wobble address information 610 is distributed in units of three address bits (12 wobbles) in each of the wobble data units 560 to 576 and organized information is recorded in units of an integral multiple of three address bits, which produces the effect of enabling other information to be detected even if the information in a place is difficult to detect because of dirt or flaws.

As described above, the wobble address information 610 is arranged not only in a distributed manner but also in self-contained manner in each of the physical segments 550 to 557 (point <J1α> in FIGS. 129A and 129B), enabling address information to be known for each of the physical segments 550 to 557, which makes it possible to find the present position on a physical segment basis, when the information recording and reproducing apparatus accesses the information.

Since the embodiment uses the NRZ method as shown in FIG. 64, the phase will not change in four consecutive wobbles in the wobble address areas 586, 587. Making use of this feature, the wobble sync area 580 is set. Specifically, a wobble pattern impossible to appear in the wobble address information 610 is set in the wobble sync area 580 (point <J3> in FIGS. 129A and 129B), which makes it easier to identify the position where the wobble sync area 580 is arranged. The embodiment is characterized in that one address bit length is set to a length other than the length of four wobbles in the wobble sync area 580 as compared with the wobble address areas 586, 586 where four consecutive wobbles constitute one address bit. Specifically, in the wobble sync area 580, an area where a wobble bit is "1" is set to such a wobble pattern change impossible to occur in the wobble address areas 586, 587 as "6 wobbles → 4 wobbles → 6 wobbles" differing from 4 wobbles. A method of changing the wobble period as described above is used as a method of setting a wobble pattern impossible to appear in the wobble address areas 586, 587 into the wobble sync area 580 (point <J3α> in FIGS. 129A and 129B), which produces the following effects:

(1) The detection of wobbles (the determination of a wobble signal) can be continued stably without the corruption of PLL related to the slot position 512 (FIG. 64) of wobbles at the wobble signal detecting section 135 of FIG. 1.
(2) A shift in the position of the boundary between address bits in the wobble signal detecting section 135 of FIG. 1 makes it easier to detect the wobble sync area 580 and modulation start marks 561, 582.

Moreover, the embodiment is further characterized in that the wobble sync area 580 is formed in a period of 12 wobbles and the length of the wobble sync area 580 is caused to coincide with a 3-address bit length as shown in FIG. 69, (d) (point <J3β> in FIGS. 129A and 129B). Thus, all of the modulation area (equivalent 16 wobbles) in one wobble data unit #0 560 is allocated to the wobble sync area 580, which makes it easier to detect the starting position of the wobble address information 610 (or the location of the wobble sync area 580).

As shown in FIG. 69, (c), the wobble sync area 580 is provided in the first wobble data unit #0 560 in physical segment #0 550. Providing the wobble sync area 589 in the begin position of physical segment #0 550 as described above (point <J3γ> in FIGS. 129A and 129B) produces the effect of enabling the boundary position of physical segments to be extracted by simply detecting the position of the wobble sync area 580.

In wobble data units #1 561, #2 562, the modulation start marks 581, 582 are provided at the begin position ahead of the wobble address areas 586, 587, thereby setting a waveform of an inverted phase wobble IPW shown in FIG. 65. Since in the non-modulation areas 590, 591 arranged ahead of the modulation marks, a continuous waveform of normal phase wobbles NPW stands. Therefore, the wobble signal detecting section 135 of FIG. 1 detects the transition from NPW to IPW, thereby extracting the positions of the modulation start marks 581, 582.

As shown in FIG. 69, (e), the contents of the wobble address information 610 are as follows:

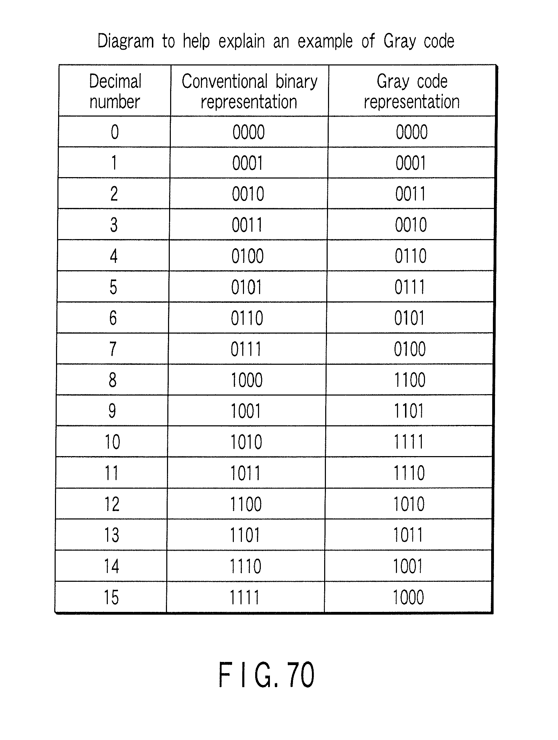

(1) Track addresses 606, 607
These mean track numbers in the zone. A groove track address 606 determined in a groove area (including no indefinite bit → an indefinite bit occurs on a land) and a land track address 607 determined on a land (including no indefinite bit → an indefinite bit occurs in a groove) are recorded alternately. Only for the track addresses 606, 607, track number information is recorded using the Gray code of FIG. 70 (which will be explained in detail later).
(2) Physical segment address 601
Information representing a physical segment number in a track (one round on an information storage medium 221). The number of physical segments in the same track is represented by "the number of physical segments per track" in FIGS. 12A and 12B. Therefore, the maximum value of a physical segment address 601 in each zone is determined by the number shown in FIGS. 12A and 12B.
(3) Zone address 602
This means a zone number in an information storage medium 221. The value of "n" in "zone (n)" shown in FIGS. 12A and 12B is recorded.
(4) Parity information 605
This is set for detecting an error in reproducing the data from wobble address information 610. This information represents whether the result of adding 14 bits from the reservation information 604 to the zone address 602 bit by bit is even or odd. The value of the parity information 605 is set so that the result of exclusive-ORing, bit by bit, 15 bit address bits in all including one address bit in the address parity information 605 may be "1."
(5) Unity area 608

As described earlier, each of wobble data units #0 560 to #16 576 is set so as to be composed of 16 wobbles of modulation areas and 68 wobbles of non-modulation areas 590, 591 and the occupation ratio of the non-modulation areas 590, 591 to the modulation areas is set considerably large. In addition, the occupation ratio of the non-modulation areas 590, 591 is increased, thereby improving the accuracy and stability of extraction (generation) of a reproducing reference clock or a recording reference clock. Wobble data unit #16 576 and the preceding wobble data unit #15 (not shown) correspond directly to the unity area 608 shown in FIG. 69, (e). In monotone information 608, all of six address bits are "0." Therefore, modulation start marks 581, 582 are not set in wobble data unit #16 576 including monotone information indicating that all are NPW and in the preceding wobble data unit #15 (not shown), thereby making the entire area a non-modulation area with the same phase.

FIG. 69, (e) shows the number of address bits allocated to the individual pieces of information. As described above, the wobble address information 610 is divided into sets of three address bits, which are distributed in the wobble data units 560 to 576. Even if a burst error occurs due to dirt on or flaws in the surface of the information storage medium, the probability that the error has spread over the different wobble data units 560 to 576 is very low. Therefore, the number of times that the wobble data units differing in the place in which the same information is recorded are crossed over is reduced as much as possible and a break in the individual pieces of information is caused to coincide with the position of the boundary between wobble data units 560 to 576. This enables other information recorded in the remaining individual wobble data units 560 to 576 to be read even if a specific piece of information cannot be read because a burst error has occurred due to dirt on or flaws in the surface of the information storage medium, which improves the reliability of reproduction of the wobble address information. Specifically, as shown in FIG. 69, (e), 9 address bits are allocated to the unity area 608 and the position of the boundary between the unity area 608 and the preceding land track address 607 is caused to coincide with the position of the boundary between wobble data units (point <J3δ> in FIGS. 129A and 129B). For the same reason, zone address 605 represented in 5 address bits is made adjacent to parity bit information 605 expressed in one address bit (point <J4ε> in FIGS. 130A and 130B) and the sum total of the address bits on both sides is set to 6 address bits (equivalent to two wobble data units).

This embodiment is further characterized in that the unity area 608 is arranged at the end of wobble address information 610 as shown in FIG. 69, (e) (point <J3ε> in FIGS. 129A and 129B). As described above, since the wobble waveform takes the form of NPW in the unity area 608, NPW continues substantially in as many as three consecutive wobble data units 576. Making use of this feature, the wobble signal detecting section 135 searches for a place where NPW continues as long as three wobble data units 576, making it possible to extract the position of the unity area 608 placed at the end of the wobble address information 610, which produces the effect of enabling the starting position of the wobble address information 610 to be detected using the position information.

In various pieces of address information shown in FIG. 69 or FIG. 68, (b) and FIG. 66, the physical segment address 601 and zone address 602 indicate the same values in adjacent tracks, whereas the values of the groove track address 606 and land track address 607 in a track differ from those in an adjacent one. Therefore, an indefinite bit area 504 shown in FIG. 67, (c) appears in the area in which the groove track address 606 and land track address 607 are recorded. In the embodiment, to reduce the frequency of appearance of an indefinite bit, an address (number) is represented by the Gray code in connection with the groove track address 606 and land track address 607. FIG. 70 shows an example of the Gray code. The Gray code is such that, when the original value changes by "1", the code after conversion changes by only "one bit" everywhere as shown in FIG. 70. This decreases the frequency of appearance of an indefinite bit, which helps stabilize the detection of not only the wobble detected signal but also the reproduced signal from the recording marks.

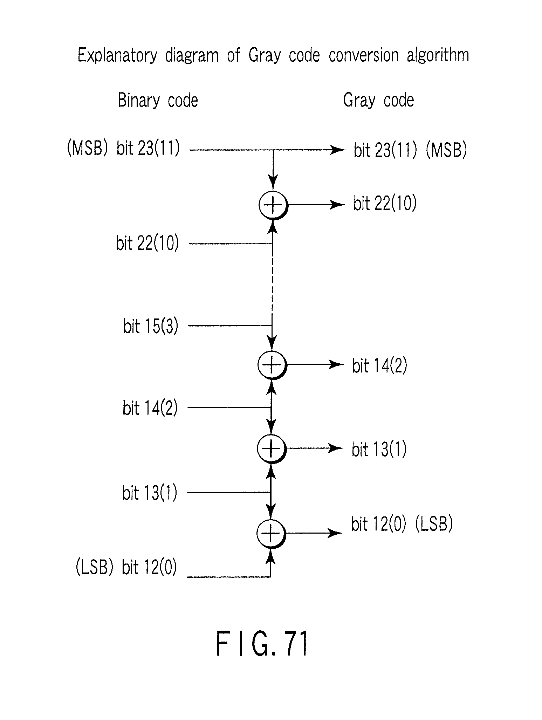

FIG. 71 shows an algorithm for realizing the Gray code conversion shown in FIG. 70. The upper 11th bit in the original binary code is caused to coincide with the 11th bit in the Gray code. As for the lower codes than the upper 11th bit, the result of addition (exclusive OR) of the "m-th bit" in the binary code and the "(m+1)th bit" one bit higher than the m-th bit in the binary code is caused to correspond to the "m-th bit" in the Gray code in conversion.

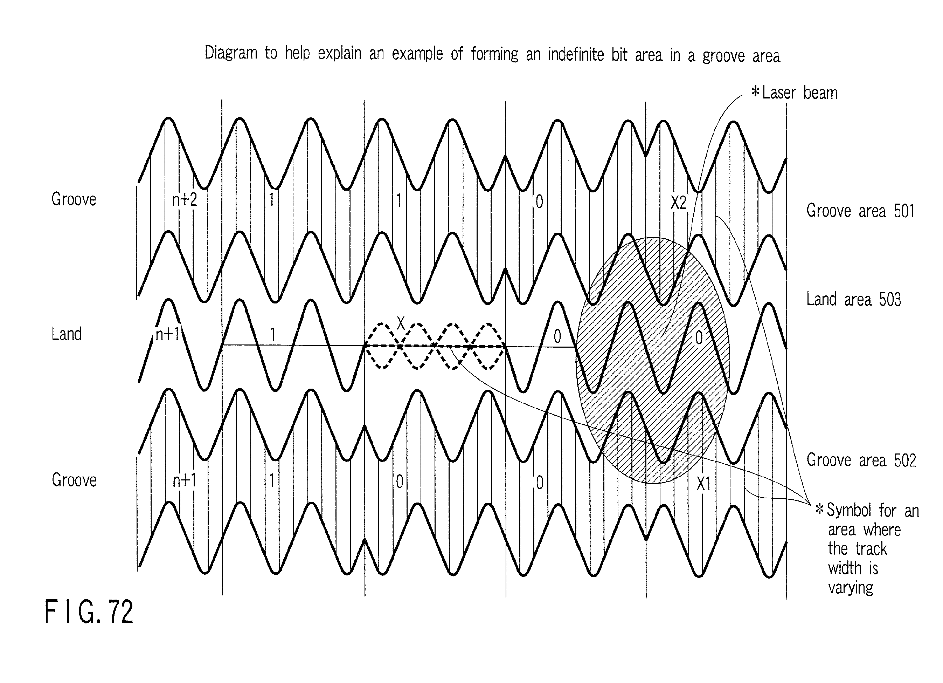

In the embodiment, indefinite bit areas are distributed also in the groove area (point <J4γ> in FIGS. 130A and 130B). Specifically, a part of the width of each of the groove areas 501, 501 is changed as shown in FIG. 72, thereby keeping the width of the land area 503 sandwiched between them constant. When the groove areas 501, 502 are made with the information storage medium matrix recoding apparatus, the amount of laser light to be irradiated is changed locally, which makes it possible to change the width of each of the grooves 501, 501. This causes the land area to have an area where a track address is determined without the intervention of an indefinite bit, which enables an address to be detected with high accuracy even in the land area. Specifically, in the land area in which information on the land track address 607 of FIG. 69, (e) is recorded, the land width is made constant using the above method. This enables address information to be detected stably without the intervention of an indefinite bit in connection with the land track address 607 in the land area.

In the embodiment, indefinite bits are distributed in both to the land area and the groove area (point <J4δ> in FIGS. 130A and 130B). Specifically, on the rightmost side of FIG. 72, the width of each of the groove areas 501, 501 is changed so as to make the width of the land area 503 constant, whereas on the left side a little from the center of FIG.

72, the width of the land area 503 changes locally, with the width of each of the groove areas 501, 501 being kept constant. Using this method, the groove width is made constant in the groove area in which information on the groove track address 606 is recorded in FIG. 69, (e), which enables address information to be detected stably without the intervention of an indefinite bit in connection with the groove track address 606 in the groove area. If indefinite bits are concentrated in either of the land area or the groove area, the frequency of occurrence of an error in reproducing address information is very high at the part in which indefinite bits have been concentrated. Distributing indefinite bits in the land area and groove area, thereby dispersing the risk of erroneous detection, which makes it possible to provide a system capable of detecting address information stably and easily. As described above, distributing indefinite bits in both of the land area and the groove area makes it possible to estimate an area where a track address is determined with no indefinite bit in each of the land area and groove area, which increases the accuracy of track address detection.

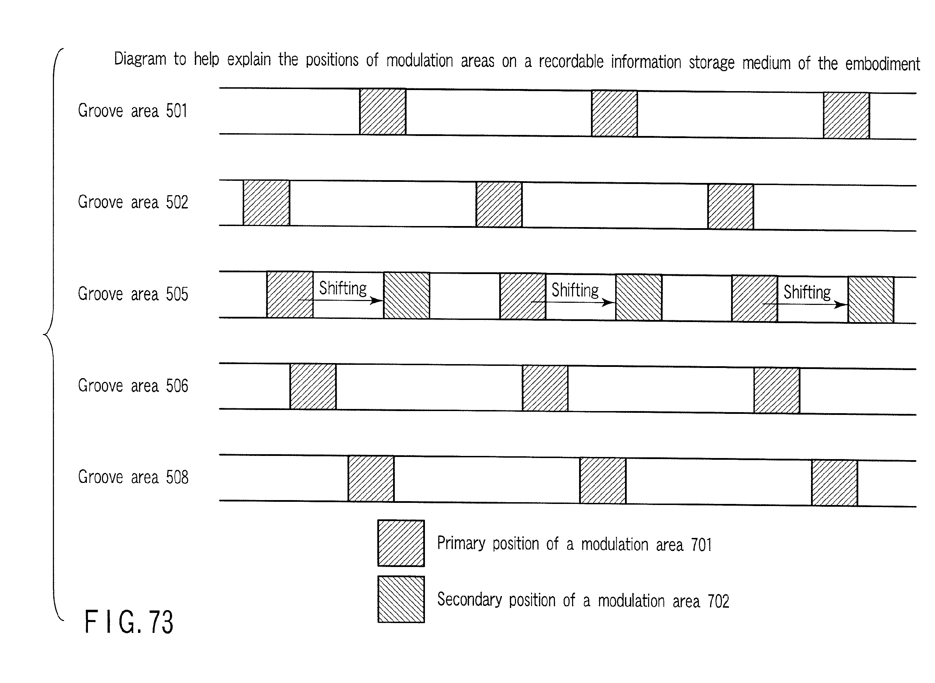

As has described in FIG. 66, in the recordable information storage medium of the embodiment, recording marks have been formed in the groove area and the CLV recording method has been used. In this case, since the wobble slot position shifts between adjacent tracks, the interference between adjacent wobbles is liable to affect the wobble reproduced signal. This has already been explained. In this embodiment, to eradicate the influence, the modulation areas are shifted from each other so that they may not overlap with each other between adjacent tracks (point <J5> in FIGS. 130A and 130B). Specifically, as shown in FIG. 73, a primary position 701 and a secondary position 702 are allowed to be set in a place where a modulation area is placed. Basically, all of the modulation areas are allocated temporarily to the primary position. If a part of modulation areas overlap with one another between adjacent tracks, the modulation areas are partially moved to the secondary position. For example, in FIG. 73, if the modulation area of the groove area 505 is set in the primary position, the modulation area of the groove area 502 overlaps partially with the modulation area of the groove 506. Thus, the modulation area of the groove area 505 is moved to the secondary position. This prevents the reproduced signal from the wobble address from interfering between the modulation areas in adjacent tracks, which produces the effect of enabling the wobble address to be reproduced stably.

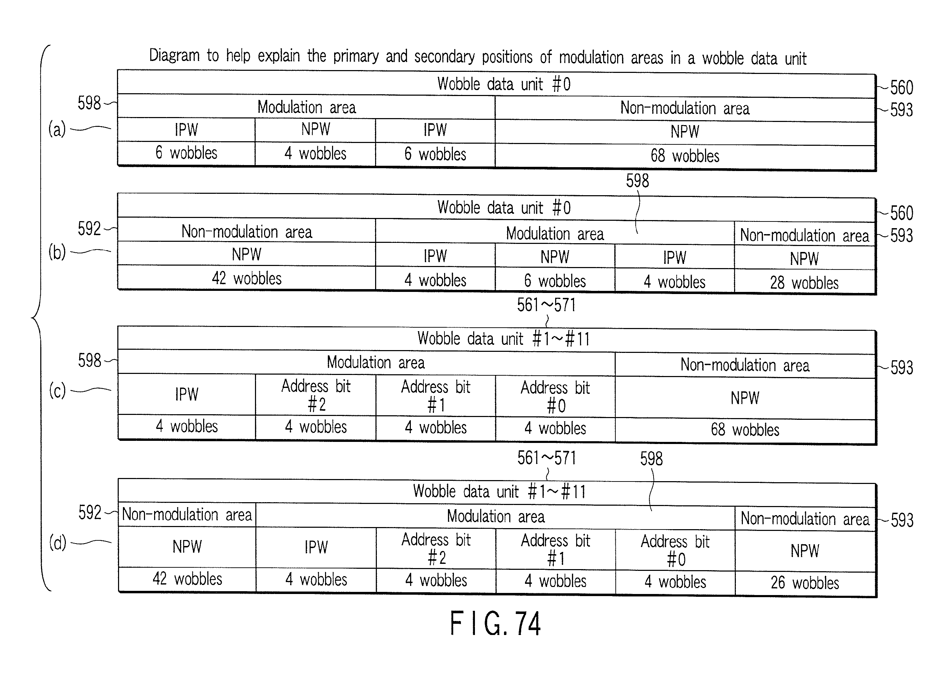

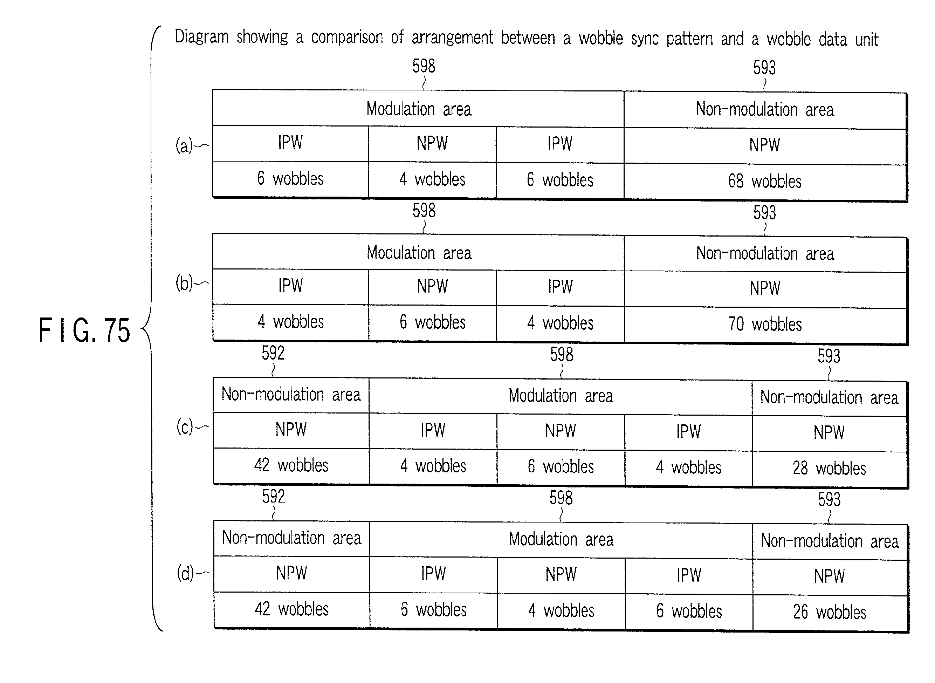

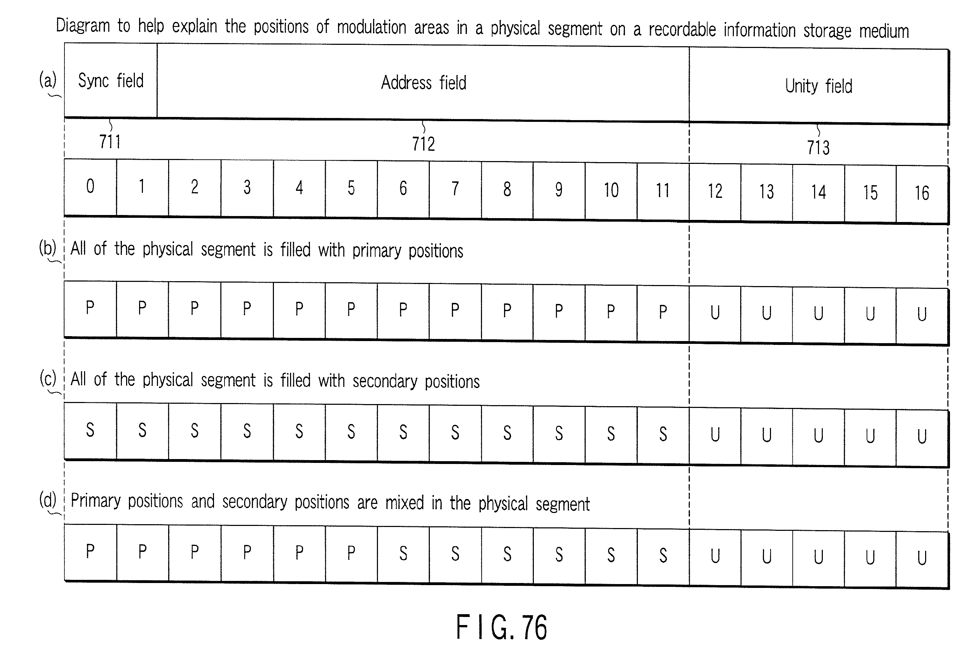

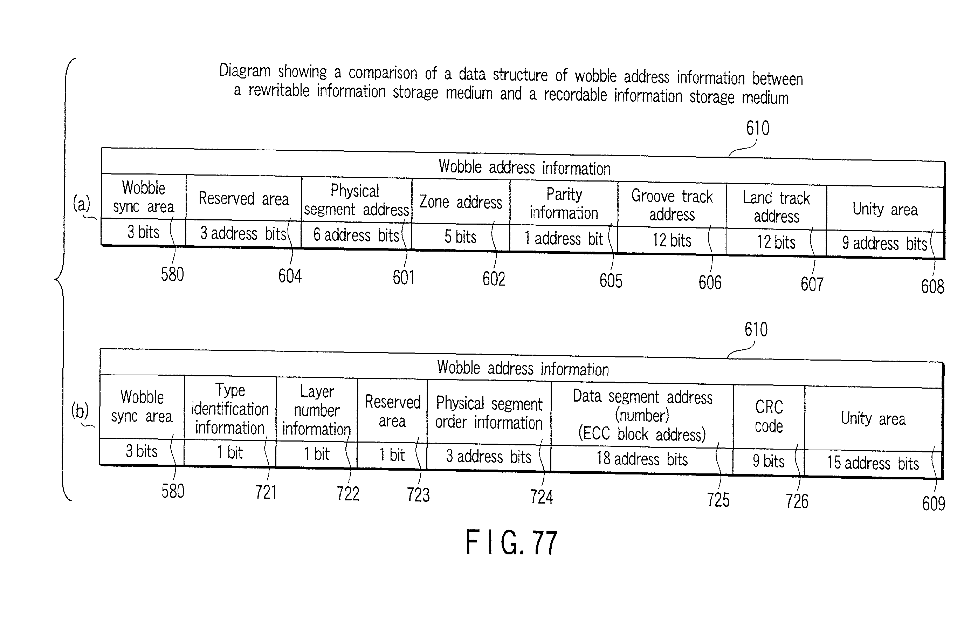

The primary position and secondary position are set in the modulation area by switching between locations in the same wobble data unit. In the embodiment, the occupation ratio of the non-modulation area to the modulation area is set high (point <J2> in FIGS. 129A and 129B), which makes it possible to switch between the primary position and the secondary position by just changing locations in the same wobble data unit. This enables the same arrangement of physical segments 550 to 557 and of wobble data units 560 to 576 even in the recordable information storage medium as in the rewritable information storage medium shown in FIGS. 69, (b) and 69, (c), which improves the interchangeability between different types of information storage mediums. Specifically, in the primary position 701, a modulation area 598 is placed in the begin position of each of the wobble data units 560 to 571 as shown in FIG. 74, (a) and 74, (c). In the secondary position 702, a modulation area 598 is placed in the latter half position of each of the wobble data units 560 to 571 as shown in FIG. 74, (b) and 74, (d).

In the recordable information storage medium of the embodiment, too, the first three address bits in the wobble address information 610 are used for a wobble sync area 580 as in the rewritable information storage medium shown in FIG. 69, (e) and are recorded in wobble data unit #0 560 placed at the beginning of each of the physical segments 550 to 556. Modulation areas 598 shown in FIGS. 74, (a) and 74, (b) show the wobble sync area 580. The first IPW area in the modulation area 598 in each of FIGS. 74, (c) and 74, (d) corresponds to each of the modulation start marks 581, 582 of FIG. 69, (d), respectively. Address bits #2 to #0 in the modulation area 598 in each of FIGS. 74, (c) and 74, (d) correspond to the wobble address areas 586, 587 shown in FIG. 69, (d).

This embodiment is characterized in that the wobble sync pattern of the wobble sync area in the primary position 701 is made different from that in the secondary position 702 (point <J5β> in FIGS. 129A and 129B). In FIG. 74, (a), 6 wobbles (period) are allocated to IPW as a wobble sync pattern for the wobble sync area 580, or the modulation area 598 and four wobbles (period) are allocated to NPW, whereas in the modulation area 598 of FIG. 74, (b), the number of wobbles (wobble period) allocated to each IPW is set to 4 and six wobbles (period) are allocated to NPW. The wobble signal detecting section 135 of FIG. 1 simply detects the difference between the wobble sync patterns immediately after rough access, enabling the location of the modulation area (either the primary position 701 or secondary position 702) to be known, which makes it easier to estimate the position of a modulation area to be detected next. Since the detection of next modulation area can be prepared in advance, the accuracy of detecting (or determining) a signal in the modulation area can be improved.

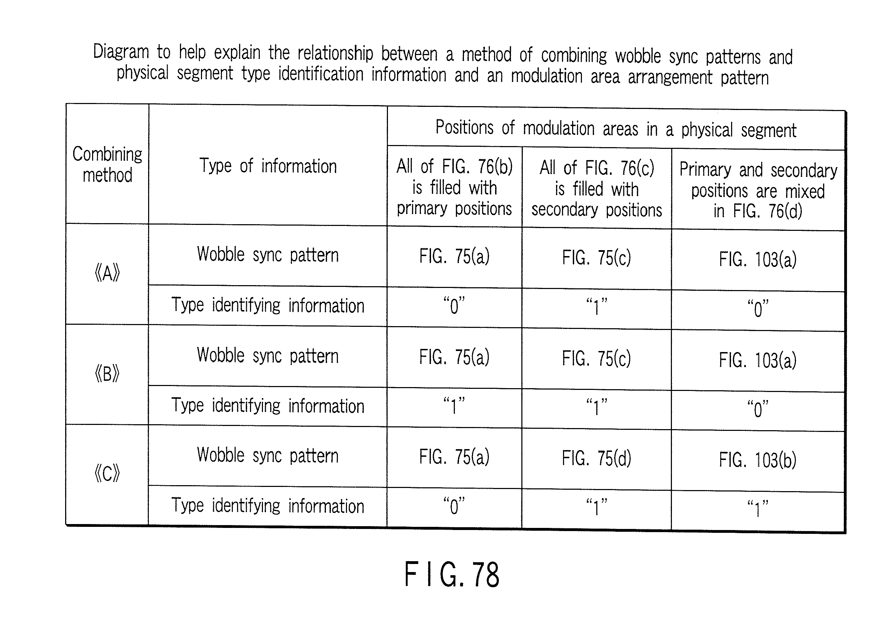

FIGS. 75, (b) and 75, (d) show embodiments other than those shown in FIGS. 74, (a) and 74, (b) in connection with the relationship between the locations of modulation areas and a wobble sync pattern. For comparison, the embodiment of FIG. 74, (a) is shown in FIG. 75, (a) and the embodiment of FIG. 74, (b) is shown in FIG. 75, (c). In FIGS. 75, (b) and 75, (d), the number of wobbles allocated to each of IPW and NPW in a modulation area 598 is the reverse of that in FIGS. 75, (a) and 75, (c) (4 wobbles are allocated to IPW and 6 wobbles are allocated to NPW).

In this embodiment, a range to which each of the first position 701 and secondary position 702 can be adapted shown in FIGS. 74 and 75, that is, the range either the first position or the secondary position lasts consecutively is determined to be the range of a physical segment. Specifically, as shown in FIG. 76, three types of (a plurality of) modulation area arrangement patterns (b) to (d) in the same physical segment are used (point <J5$\alpha$> in FIGS. 130A and 130B). As described above, when the wobble signal detecting section 135 of FIG. 1 identifies an arrangement pattern of modulation areas in the physical segment from the wobble sync pattern or the type identifying information 721 in a physical segment explained later, the location of another modulation area 598 in the same physical segment can be estimated in advance. As a result, a preparation for the detection of the next modulation area can be made in advance, which produces the effect of increasing the accuracy of signal detection (determination) in a modulation area.

The second row in FIG. 76, (a) shows the arrangement of wobble data units in a physical segment. Numbers "0" to "16" written in the individual frames in the second row represent the wobble data numbers in the same physical segment. The 0th wobble data unit is referred to as sync field 711 as shown in the first row. In a modulation area in the sync field, a wobble sync area exists. The first to eleventh wobble data units are referred to as address field 712. Address information is recorded in a modulation area in the address field 712. In the twelfth to sixteenth wobble data units, all of the wobble patterns are NPW unity fields 713.

The mark "P" written in FIGS. 76, (b) to 76, (d) indicates that a modulation area becomes a primary position in a wobble data unit. The mark "S" indicates that a modulation area becomes a secondary position in a wobble data unit. The mark "U" indicates that a wobble data unit is included in the unity field 713 and there is no modulation area. An arrangement pattern of modulation areas shown in FIG. 76, (b) indicates that all of the physical segment becomes a primary position. An arrangement pattern of modulation areas shown in FIG. 76, (c) indicates that all of the physical segment becomes a secondary position. In FIG. 76, (d), a primary position and a secondary position are mixed in the same physical segment. The modulation areas in the 0th to 5th wobble data units become primary positions and the modulation areas in the 6th to 11th wobble data units become secondary positions. As shown in FIG. 76, (c), the half of the area of sync field 711 plus address field 712 is assigned to primary positions and the remaining half is assigned to secondary positions, which prevents modulation areas from overlapping with one another between adjacent tracks.

FIG. 77 shows a comparison of a data structure of wobble address information between the rewritable information storage medium and recordable information storage medium of this embodiment. FIG. 77, (a) shows a copy of a data structure of wobble address information 610 in the rewritable information storage medium shown in FIG. 69, (e). FIG. 77, (b) shows a data structure of wobble address information 610 in the recordable information storage medium. As in the rewritable information storage medium, in the recordable information storage medium, a wobble sync area 680 is placed at the begin position of a physical segment (point <J3$\gamma$> in FIGS. 129A and 129B), which facilitates the detection of the begin position of the physical segment or the position of the boundary between adjacent physical segments. Type identifying information 721 on the physical segment shown in FIG. 77, (b) indicates the location of a modulation area in the physical segment as the wobble sync pattern in the wobble sync area 580 does (point <J5$\gamma$> in FIGS. 130A and 130B), making it possible to estimate the location of another modulation area 598 in the same physical segment in advance and prepare for the detection of a subsequent modulation area, which produces the effect of increasing the accuracy of the detection (determination) of a signal in a modulation area. Specifically, the type identifying information 721 shows the following:

- When type identifying information 721 on the physical segment is "0," this indicates that all of the physical segment shown in FIG. 76, (b) is a primary position or that a primary position and a secondary position are mixed as shown in FIG. 76, (d).
- When type identifying information 721 on the physical segment is "1," this indicates that all of the physical segment is a secondary position as shown in FIG. 76, (c).

As another embodiment related to the above embodiment, the wobble sync pattern may be combined with the type identifying information 721 on the physical segment to indicate the location of a modulation area in the physical segment (point <J5$\delta$> in FIGS. 130A and 130B). Combining the two types of information makes it possible to represent three or more arrangement patterns of modulation areas shown in FIGS. 76, (b) to 76, (d) and provide a plurality of arrangement patters of modulation areas. FIG. 78 shows the relationship between a method of combining a wobble sync pattern and type identifying information on a physical segment and an arrangement pattern of modulation areas in another embodiment. In FIG. 78, «A» indicates the above combination. The wobble sync pattern shows either a primary position or a secondary position. The type identifying information 721 on the physical segment shows whether all of the physical segment is a secondary position (when all of the physical segment is a secondary position, it takes the value of "1," otherwise "0"). In the case of «A», when a primary position and a secondary position are mixed, the wobble sync pattern of FIG. 75(b) is recorded in the primary position and the wobble sync pattern of FIG. 75(d) is recorded in the secondary position.

In contrast, in an embodiment of «B», type identifying information 721 in a physical segment indicates whether all of the locations in the physical segment coincide with one another or are a mixture of a primary position and a secondary position (when all of the locations coincide with one another, it takes the value of "1," and when they are a mixture it takes the value of "0").

In an embodiment of «C», a wobble sync pattern indicates whether all of the locations in the physical segment coincide with one another or are a mixture of a primary position and a secondary position and type identifying information 721 in the physical segment indicates whether a secondary position exists in the physical segment (when even a part of the locations are secondary positions, it takes the value of "1," otherwise "0").

In the above embodiment, while the location of a modulation area in a physical segment in which a wobble sync area 580 and type identifying information 721 on the physical segment are included is shown, the present invention is not limited to this. For instance, as another embodiment, the wobble sync area 580 and type identifying information 721 on the physical segment may indicate the location of a modulation area in the next subsequent physical segment. This enables the location of a modulation area in the next subsequent segment to be known in advance in doing tracking continuously along the groove area, which produces the effect of enabling a longer preparation time to be secured to detect a modulation area.

Layer number information 722 in the recordable information storage medium shown in FIG. 77, (b) indicates either a single-sided single recoding layer or a single-sided double recording layer:

- "0" means "L0 layer" (the front layer on the laser beam entering side) in either a single-sided single recoding layer or a single-sided double recording layer
- "1" means "L1 layer" (the back layer on the laser beam entering side) in a single-sided double layer

As explained in FIGS. 66 and 68, physical segment sequence information 724 indicates the order in which physical segments are arranged in the same physical segment blocks. As seen from a comparison with FIG. 77, (a), the begin position of physical segment sequence information 724 in the wobble address information 610 coincides with the begin position of the physical segment address 601 in the rewritable information storage medium. Adapting the position of physical segment sequence information for the rewritable information storage medium (point <J5ε> in FIGS. 130A and 130B) improves the interchangeability between different types of information storage mediums, which helps standardize and simplify an address detecting control program using a wobble signal in the information recording and reproducing apparatus compatible with both of the rewritable information storage medium and recordable information storage medium.

As described in FIGS. 66 and 68, in the data segment address 725, address information on a data segment is written using a number. As has been explained, 32 sectors constitute one ECC block in the embodiment. Therefore, the low-order 5 bits of the sector number of the sector placed at the head of a specific ECC block coincide with the sector number of the sector placed at the begin position of an adjacent ECC block. When the physical sector number is set so that the low-order 5 bits of the physical sector number of the sector put at the head of the ECC block may be "00000," the values of the low-order 6th and later bits of all of the sectors in the same ECC block coincide with one another. Therefore, the low-order 5 bits of data in the physical sector number of the sector existing in the same ECC block are removed and address information obtained by extracting only data in the low-order 6th and later bits is used as an ECC block address (or ECC block address number). Since the data segment address 725 (or physical segment block number information) previously recorded by wobble modulation coincides with the ECC block address, position information on a physical segment block in wobble modulation is displayed using a data segment address, reducing the amount of data by 5 bits as compared with use of a physical sector number, which produces the effect of making it easier to detect the present position during access.

CRC code 726 is an CRC code (error correction code) for 24 address bits ranging from type identifying information 721 on a physical segment to data segment address 725. Even if a part of the wobble modulation signal has been deciphered erroneously, it is partially corrected using the CRC code 726.

To write each piece of information, the individual address bits shown in the bottom row of FIG. 77(b) are used. In the recordable information storage medium, the area corresponding to the remaining 15 address bits is allocated to the unity area 609. All of the 12th to 16th wobble data units include NPW (there is no modulation area 598).

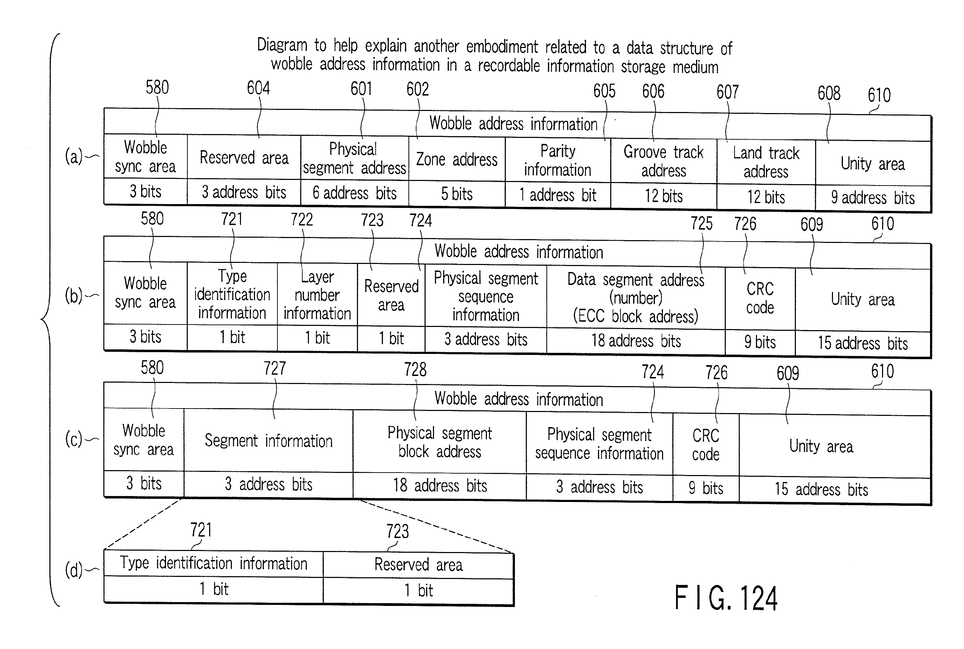

As an application of the embodiment of FIG. 77, FIGS. 124, (c) and 124, (d) show another embodiment related to the data structure of a wobble address in the recordable information storage medium. FIGS. 124(a) and 124(b) are the same as FIGS. 77(a) and 77(b). A physical segment block address 728 in FIG. 124(c) is an address set for each physical segment block where 7 physical segments constitute one unit. The physical segment block address for the first physical segment block in a data lead-in DTLDI is set to "1358h." The value of the physical segment block address is incremented by one from the first physical segment block in the data lead-in area DTLDI to the last physical segment block in the data lead-out DTLDO including a data area DTA.

Physical segment sequence information 724 indicates the sequence of individual physical segments in one physical segment block as in FIG. 77. "0" is set to the first physical segment and "6" is set to the last physical segment.

The embodiment of FIG. 77 is characterized in that a physical segment block address is placed ahead of the physical segment sequence information 724 (point <J6> in FIGS. 130A and 130B). For example, as in RMD field 1 shown in FIGS. 123A and 123B, address information is frequently managed in the physical segment block address.

When a specific physical segment block address is accessed using these pieces of management information, the wobble signal detecting section 135 of FIG. 1 detects the place of the wobble sync area 580 shown in FIG. 124, (c) and then deciphers sequentially the information recorded just behind the wobble sync area 580. When there is a physical segment block address ahead of the physical segment sequence information 724, the wobble signal detecting section 135 first deciphers the physical segment block address. Since the wobble signal detecting section 135 can determine whether the physical segment block address is a specific one without deciphering the physical segment sequence information 724, this produces the effect of improving the accessibility using wobble address.

Segment information 727 is composed of type identifying information 721 and a reserved area 723. Type identifying information 721 indicates the location of a modulation area in a physical segment. When the value of type identifying information 721 is "0b", this indicates a state shown in FIG. 76, (a). When the value of type identifying information 721 is "1b", this indicates a state shown in FIG. 76, (b) or 76, (c).

The present embodiment is characterized in that type identifying information 721 is placed just behind a wobble sync area 580 in FIG. 124 or 77, (b) (point <J5ζ> in FIGS. 130A and 130B). As described above, the wobble signal detecting section 135 of FIG. 1 detects the position of the wobble sync area 580 shown in FIG. 124, (c) and then deciphers sequentially the information recorded just behind the wobble sync area 580. Thus, placing type identifying information 721 just behind the wobble sync area 580 makes it possible to check the location of the modulation area in the physical segment immediately, which enables an accessing process using wobble addresses to be carried out at higher speed.

A method of recording the data segment data into a physical segment or physical segment block into which address information has been recorded beforehand by wobble modulation will be explained. In both of the rewritable information storage medium and recordable information storage medium, data is recorded using a recording cluster as a unit in continuous data recording. FIG. 79 shows a layout of the recoding cluster. In each of the recording clusters 540, 542, one or more (an integral number of) data segments 531 having the data structure shown in FIG. 69, (a) succeed one after another consecutively. Extended guard fields 528, 529 are set at the beginning or at the end of the succession. To prevent a gap from appearing between adjacent recoding clusters when new data is additionally recorded or rewritten using recording clusters 540, 542, extended guard fields 528, 529 are set in the recording clusters 540, 542 so as to overlap physically with adjacent recoding clusters for partially redundant writing.

In an embodiment shown in FIG. 79, (a), as for the positions of the extended guard fields 528, 529 set in the recording clusters 540, 542, the extended guard field 528 is placed at the end of the recording cluster 540 (FIG. 79, point <K3γ> in FIG. 131B). When this method is used, the extended guard field 528 is located behind the postamble 526 shown in FIG. 69, (a). Therefore, particularly in the rewritable information storage medium, the postamble area 526 is not destroyed erroneously in rewriting, enabling the postamble area 526 to be protected in rewriting, which helps secure the reliability of the detection of positions using the postamble area 526 in data reproduction.

As another embodiment, the extended guard field 529 may be placed at the beginning of the recording cluster 542 as shown in FIG. 79, (b) (point <K3δ> in FIGS. 131A and 131B). In this case, as seen from a combination of FIG. 79, (b) and FIG. 69, (a), the extended guard field 529 is located just in front of the VFO area 522. Therefore, when rewriting or additional recording is done, the VFO area 522 can be made sufficiently long, making it possible to lengthen the PLL pull-in time in connection with a reference clock in reproducing the data field 525, which helps improve the reliability of reproduction of the data recorded in the data field 525. As described above, a recording cluster serving as a unit of rewriting is configured to be composed of one or more data segments (point <K3α> in FIGS. 131A and 131B), which produces the effect of making it easier to record PC data (PC files) frequently rewritten in small amounts and AV data (AV files) recorded continuously at a time in large amounts onto the same information storage medium in a mixed manner. That is, in a personal computer (PC), a relatively small amount of data is frequently rewritten. Therefore, when rewriting or additional recording data unit is set as small as possible, the recording method becomes suitable for PC data. As shown in FIG. 31, in the embodiment, since an ECC block is composed of 32 physical sectors, a data segment including only one ECC block is the smallest unit in doing rewriting or additional recording efficiently. Therefore, the structure in the embodiment where one or more data segments are included in a recoding cluster serving as a unit of rewriting or additional recording is a recording structure suitable for PC data (PC files).

As for audio video AV data, a very large amount of video information and audio information has to be recorded continuously without interruption. In this case, continuously recorded data is organized into one recording cluster, which is then recorded. In AV data recording, when the amount of random shift, the structure of a data segment, the attribute of a data segment, and the like are changed for each of the data segments constituting a recording cluster, the changing process takes a long time, which makes a continuous recording process difficult. In this embodiment, as shown in FIG. 79, a recording cluster is configured by arranging consecutively data segments in the same format (without the change of the attributes and the amount of random shift and without the insertion of specific information between data segments), making it possible not only to provide a recording format suitable for AV data recording that requires a large amount of data to be recorded continuously but also to simplify the structure of a recording cluster, which achieves the simplification of the recording control circuit and reproduction detecting circuit and lowers the cost of the information recording and reproducing apparatus or information reproducing apparatus.

The data structure where data segments (excluding extended guard fields 528) in the recording cluster 540 shown in FIG. 79 is the same as that of the reproduce-only information storage medium shown in FIG. 61, (b) and of the recordable information storage medium shown in FIG. 61, (c). As described above, since the data structure is common to all of the information storage mediums, regardless of whether the medium is of the reproduce-only type, recordable type, or rewritable type, the interchangeability between the information storage mediums is secured and the detecting circuit is shared by the information recording and reproducing apparatus and the information reproducing apparatus which assure interchangeability. As a result, not only can a high reproduction reliability be secured, but the cost of the information recording and reproducing apparatus or information reproducing apparatus can also be lowered.

When the structure of FIG. 79 is used, it is inevitable that the amounts of random shift of all of the data segments in the same recording cluster coincide with one another (point <K3β> in FIGS. 131A and 131B). As described later, in the rewritable information storage medium, recording clusters are recorded making a random shift. In this embodiment, since the amounts of random shift of all of the data segments coincide with one another in the same recording cluster 540, when data is reproduced over different data segments in the same recording cluster 504, synchronization (phase resetting) is not needed in the VFO area (522 in FIG. 69), which makes it possible to simplify the reproduction detecting circuit in continuous reproduction and secure a high reliability of reproduction detection.

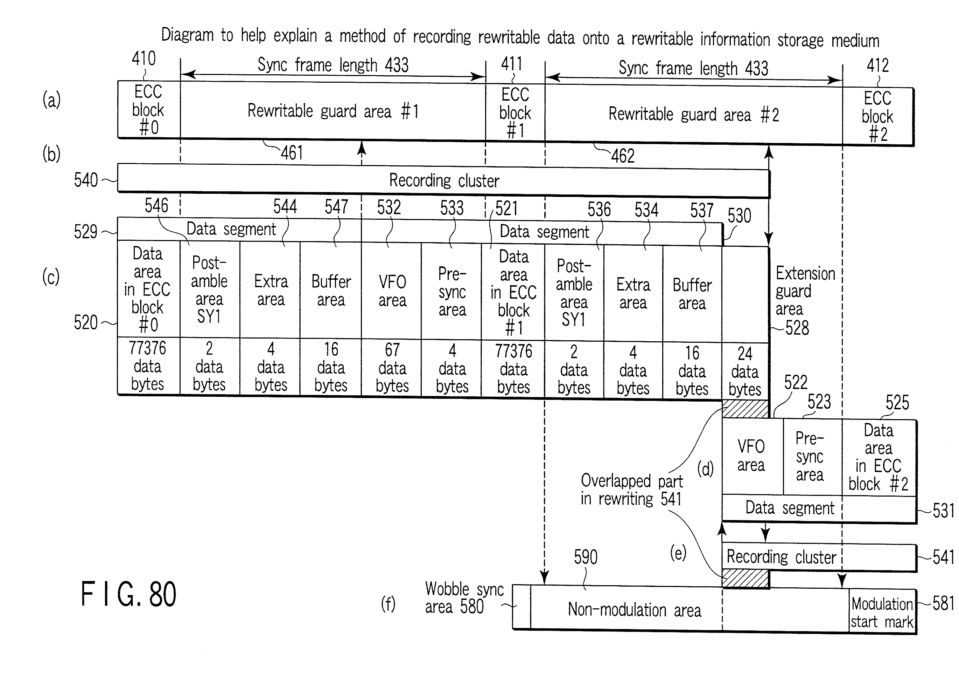

FIG. 80 shows a method of recording rewritable data onto a rewritable information storage medium. Using FIG. 79, (a), an example of the layout of a recording cluster in a rewritable information storage medium of the embodiment will be explained. The present invention is not limited to this. For instance, a layout shown in FIG. 79, (b) may be used for the rewritable information storage medium. FIG. 80, (a) shows the same contents as those of FIG. 61, (d). In the embodiment, rewritable data is rewritten in recording clusters 540, 541 shown in FIGS. 80, (b) and 80, (e). As described later, one recording cluster is composed of one or more data segments 529 to 531 and an extended guard field 528 placed at the end. Specifically, the start of one recording cluster 531 coincides with the starting position of the data segment 531 and starts at the VFO area 522.

When a plurality of data segments 529, 530 are recorded consecutively, a plurality of data segments 529, 530 are arranged consecutively in the same recording cluster 531 as shown in FIGS. 80, (b) and 80, (c). Since the buffer area 547 existing at the end of the data segment 529 is connected continuously to the VFO area 532 existing at the beginning of the next data segment, the phases (of the recording reference clock) in both areas coincide with each other. After the continuous recoding is completed, an extended guard area 528 is placed at the end position of the recording cluster 540. The data size of the extended guard area 528 is a 24-data-byte size in unmodulated data.

As seen from a comparison between FIG. 80, (a) and FIG. 80, (c), the rewritable guard areas 461, 462 include postamble areas 546, 536, extra areas 544, 534, buffer areas 547, 537, VFO areas 532, 522, and pre-sync areas 533, 523, respectively. Only in the continuous recording end place, an extended guard field 528 is provided.

To compare physical ranges of rewriting units, FIG. 80, (c) shows a part of the recording cluster 540 serving as a unit in rewriting information and FIG. 80, (d) shows a part of the recording cluster 541 serving as a unit in rewriting next information. This embodiment is characterized in that rewriting is done so that the extended guard area 528 and the following VFO 522 may partially overlap with each other at the overlap 541 in rewriting (point <K3> in FIGS. 131A and 131B). As described above, rewriting with partial overlapping prevents a gap (an area where no recording mark is formed) from occurring between the recording clusters 540, 541 and interlayer crosstalk on the information storage medium enabling data to be recorded on a single-sided double recording layer is removed, which makes it possible to detect a stable reproduced signal. As seen from FIG. 69, (a), the size of rewritable data in one data segment in the embodiment is:

$$67 + 4 + 77376 + 2 + 4 + 16 = 77469 \text{ data bytes} \qquad (2)$$

In addition, as seen from FIGS. 69, (c) and 69, (d), one wobble data unit 560 is composed of:

$$6 + 4 + 6 + 68 = 84 \text{ wobbles} \qquad (3)$$

Since 17 wobble data units constitute one physical segment 550 and the length of seven physical segments 550 to 556 coincides with the length of one data segment 531, the length of one data segment 531 includes:

$$84 \times 17 \times 7 = 9996 \text{ wobbles} \qquad (4)$$

Therefore, from equation (2) and equation (4), the following corresponds to one wobble:

$$77496 \div 9996 = 7.75 \text{ data bytes/wobble} \qquad (5)$$

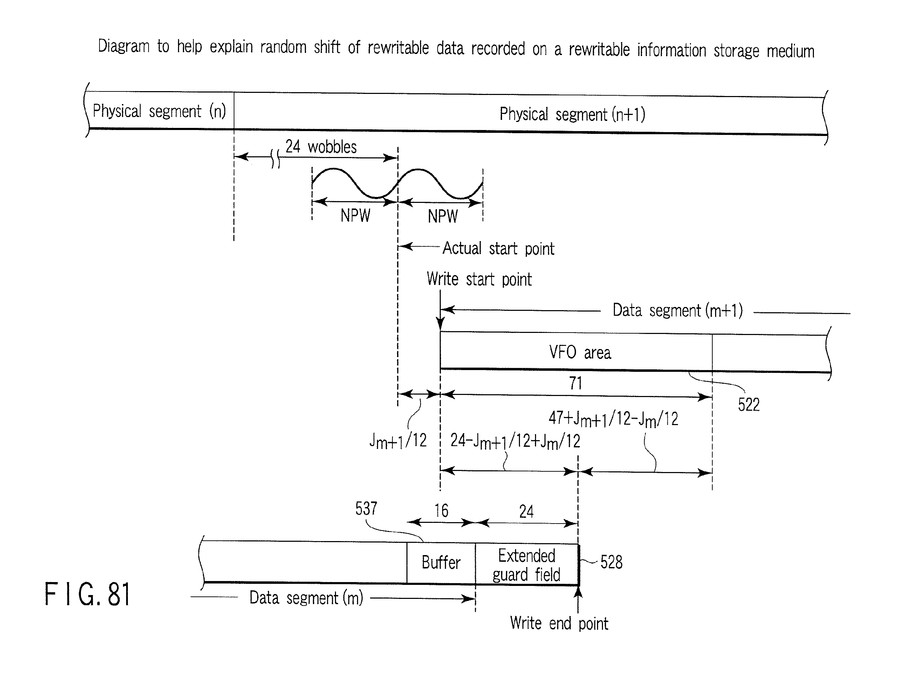

As shown in FIG. 81, the part where the next VFO area 522 and the extended guard field 528 overlap with each other lies 24 wobbles or more from the begin position of a physical segment. As seen from FIG. 69, (d), 16 wobbles from the head of a physical segment 550 constitute a wobble sync area 580 and the following 68 wobbles constitute a non-modulation area 590. Therefore, the part where the next VFO area 522 and the extended guard field 528 overlap with each other from 24 wobbles or more from the head of the physical segment 550 is in the non-modulation area 590. As described above, locating the begin position of the data segment 24 wobbles or more from the begin position of the physical segment (point <K5> in FIGS. 131A and 131B) not only causes the overlapping place to lie in the non-modulation area 590 but also secures the detection time for a wobble sync area 580 and the preparation time for a recording process suitably, which assures a stable, high-accuracy recording process.

In the embodiment, the recording film of the rewritable information storage medium uses a phase-change recording film. In a phase-change recording film, since the recording film begins to deteriorate near the rewrite starting and end positions, repeating the recording start and end in the same position limits the number of rewrites due to the deterioration of the recording film. In the embodiment, to alleviate this problem, a shift of $(J_{m+1}/12)$ data bytes is made in rewriting as shown in FIG. 81, thereby shifting the recording start position at random.

In FIGS. 80, (c) and 80, (d), to explain the basic concept, the begin position of the extended guard field 528 coincides with the begin position of the VFO area 522. Strictly speaking, however, the begin position of the VFO area 522 is shifted at random as shown in FIG. 81 in the embodiment.

A DVD-RAM disk, an existing rewritable information storage medium, also uses a phase-change recording film and shifts the recording start and end positions at random to increase the number of rewrites. The maximum amount of shift in making a random shift on an existing DVD-RAM disk is set to 8 data bytes. The channel bit length (of modulated data recorded on the disk) on an existing DVD-RAM disk is set to 0.143 $\mu$m on average. In the rewritable information storage medium of the embodiment, from FIG. 15, the average length of a channel bit is:

$$(0.087 + 0.093) \div 2 = 0.090 \text{ } \mu m \qquad (6)$$

When the length of the physical shift range is adapted to the existing DVD-RAM disk, the required minimum length as the random shift range in the embodiment is calculated using the above value as follows:

$$8 \text{ bytes} \times (0.143 \text{ } \mu m \div 0.090 \text{ } \mu m) = 12.7 \text{ bytes} \qquad (7)$$

In the embodiment, to facilitate the reproduced signal detecting process, the unit of the amount of random shift is adapted to a "channel bit" after modulation. In the embodiment, since ETM modulation (Eight to Twelve modulation) that converts 8 bits into 12 bits is used, the amount of random shift is expressed using a mathematical formula with a date byte as a reference:

$$Jm/12 \text{ data bytes} \qquad (8)$$

It follows from equation (7) that:

$$12.7 \times 12 = 152.4 \qquad (9)$$

Therefore, the values Jm can take are from 0 to 152. For the above reasons, in the range satisfying equation (9), the length of the random shift range agrees with the existing DVD-RAM disk, which assures the same number of rewrites as that of the existing DVD-RAM disk. In the embodiment, to secure the number of rewrites larger than that of the existing DVD-RAM disk, a small margin is allowed for the value of equation (7) as follows:

The length of the random shift range is set to 14 data bytes (10)

Substituting the value of equation (10) into equation (8) gives $14 \times 12 = 168$. Therefore, it follows that:
The values Jm can take are from 0 to 167 (11)
As described above, the amount of random shift is set to a larger range than Jm/12 ($0 \le Jm \le 154$) (point <K4> in FIGS. 131A and 131B), thereby satisfying equation (9) and causing the length of the physical range for the amount of random shift to agree with the existing DVD-RAM, which produces the effect of assuring the same number of repeated recordings as that of the existing DVD-RAM.

In FIG. 80, the length of the buffer area 547 and that of the VFO area 532 are constant in the recording cluster 540. As seen from FIG. 79, (a), the amount Jm of random shift of each of the data segments 529, 530 has the same value throughout the same recording cluster 540. When a recording cluster 540 including many data segments is recorded continuously, the recording positions are monitored from wobbles. Specifically, the position of the wobble sync area 580 shown in FIG. 69 is detected and the number of wobbles in the non-modulation areas 590, 591 is counted, thereby checking the recording positions on the information storage medium and recording data at the same time. At this time, there may be rare occasions when a wobble slip (recording done in a position shifted by one wobble period) will occur due to the miscounting of wobbles or uneven rotation of the rotating motor (e.g., Motor of FIG. 1) that rotates the information storage medium and therefore the recording position will shift on the information storage medium. The information storage medium of the embodiment is characterized in that, if a shift in the recoding position has been detected, adjustment is made in a rewritable guard area 461 of FIG. 80 or in a recordable guard area 452 of FIG. 61, thereby correcting the recording timing (point <K3> in FIGS. 131A and 131B). In FIG. 80, important information that permits neither the omission of bits nor the redundancy of bits is recorded in the postamble area 546, extra area 544, and pre-sync area 533. However, in the buffer area 547 and VFO area 532, a specific pattern is repeated. Therefore, the omission and redundancy of only one pattern are permitted, as long as the repeated boundary positions are secured. Therefore, in the guard area 461, particularly in the buffer area 547 or VFO area 532, adjustment is made to correct the recording timing.

In this embodiment, as shown in FIG. 81, the actual start point position serving as a reference of position setting is set so as to coincide with the position of the wobble amplitude "0" (the center of wobble). However, since the wobble position detecting accuracy is low, this embodiment, as written as "$\pm 1$ max" in FIG. 81, permits the actual start point position to have up to

$$\texttt{a shift of } \pm 1 \texttt{ data byte} \qquad\qquad (12)$$

In FIGS. 80 and 81, the amount of random shift in the data segment 530 is set to Jm (as described above, the amount of random shift is the same in all of the data segments 59 in the recording cluster 540). Thereafter, the amount of random shift in a data segment 531 in which additional recording is done is set to $J_{m+1}$. A value Jm in (11) and $J_{m+1}$ can take is, for example, the intermediate value: $Jm = J_{m+1} = 84$. When the position accuracy of the actual start point is sufficiently high, the starting position of the extended guard field 528 coincides with the starting position of the VFO area 522 as shown in FIG. 80.

In contrast, when a data segment 530 is recorded in the rearmost position and a data segment 531 to be rewritten or additionally recorded later is recorded in the very front position, the begin position of the VFO area 522 may go into the buffer area 537 by up to 15 data bytes because of formulas (10) and (12). In the extra area 534 just in front of the buffer area 537, specific important information has been recorded. Therefore, in the embodiment, the following must be met:

$$\texttt{the length of the buffer area 537 has to be}$$

$$\texttt{15 data bytes or more} \qquad\qquad (13)$$

In the embodiment of FIG. 80, a margin of one data byte is given and the data size of the buffer area 537 is set to 16 data bytes.

If a gap occurs between the extended guard area 528 and the VFO area 522 as a result of a random shift, when a single-sided double-recording-layer structure is used, interlayer crosstalk is caused by the gap during reproduction. To overcome this problem, the extended guard field 528 and VFO area 522 are caused to always overlap partially with each other even when a random shift is made, thereby preventing a gap from occurring (point <K3> in FIGS. 131A and 131B). Therefore, in the embodiment, from the formula (13), the length of the extended guard field 528 must be set to 15 data bytes or more. Since a subsequent VFO 522 is made as long as 71 data bytes, even if the overlapping area of the extended guard field 528 and VFO area 522 becomes a little wider, this has no adverse effect in reproducing a signal (because the time required to synchronize the reproduction reference clock in the unoverlapped VFO area 522 is secured sufficiently). Therefore, the extended guard field 528 can be set to a larger value than 15 data bytes. As explained above, there may be rare occasions when a wobble slip will occur in continuous recording and the recording position will shift by one wobble period. As seen from equation (5), a wobble period corresponds to 7.75 (about 8) data bytes. Thus, taking this into account, (13) is modified as follows in the embodiment:

$$\text{The length of the extended guard field 528 is set}$$
$$\text{to } (15 + 8) = 23 \text{ data bytes or more} \qquad (14)$$

In the embodiment of FIG. 80, a margin of one data byte is given as in the buffer area 537 and the length of the extended guard field 528 is set to 24 data bytes.

In FIG. 80, (e), the recording start position of the recording cluster 541 has to be set accurately. The information recording and reproducing apparatus of the embodiment detects the recording start position by using the wobble signal previously recorded on the rewritable or the recordable information storage medium. As seen from FIG. 69, (d), all of the areas excluding the wobble sync area 580 are changed in pattern from NPW to IPW in units of 4 wobbles. In contrast, in the wobble sync area 580, since the wobble switching unit partially shifts from 4 wobbles, the wobble sync area 580 is easiest to detect. Therefore, the information recording and reproducing apparatus of the embodiment detects the position of the wobble sync area 580 and then prepares for a recording process and starts recording. Thus, the starting position of the recording cluster 541 must lie in the non-modulation area 590 just behind the wobble sync area 580. FIG. 81 shows its contents. A wobble sync area 580 is provided immediately behind the switching of physical segments. As shown in FIG. 69, (d), the length of the wobble sync area 580 is equivalent to 16 wobble periods. After the wobble sync area 580 is detected, 8 wobble periods are needed, allowing a margin for preparation for a recording process. As shown in FIG. 81, the begin position of the VFO area 522 existing at the begin position of the recording cluster 541 has to be placed 24 wobbles or more behind a physical segment switching position, taking random shift into account.

As shown in FIG. 80, a recording process is carried out many times in an overlapping place 541 in rewriting. When rewriting is repeated, the physical shape of a wobble groove or a wobble land changes (or deteriorates), resulting in a decrease in the quality of the wobble reproduced signal. In the embodiment, as shown in FIG. 80, (f) or FIGS. 69, (a) and 69, (d), an overlapping place 541 is prevented from lying in the wobble sync area 580 or wobble address area 586 in rewriting or additional recording and then is recorded in the non-modulation area 590 (point <3Kζ> in FIGS. 131A and 131B). Since a specific wobble pattern (NPW) is just repeated in the non-modulation area 590, even if the quality of the wobble reproduced signal has partially deteriorated, the signal can be supplemented with the preceding and following wobble reproduced signals. As described above, setting is done so that the position of the overlapping place 541 may lie in the non-modulation area 590 in rewriting or additional recording, making it possible to prevent the quality of the wobble reproduced signal from deteriorating due to the deterioration of the shape in the wobble sync area 580 or wobble address area 586, which produces the effect of assuring a stable wobble detection signal from the wobble address information 610.

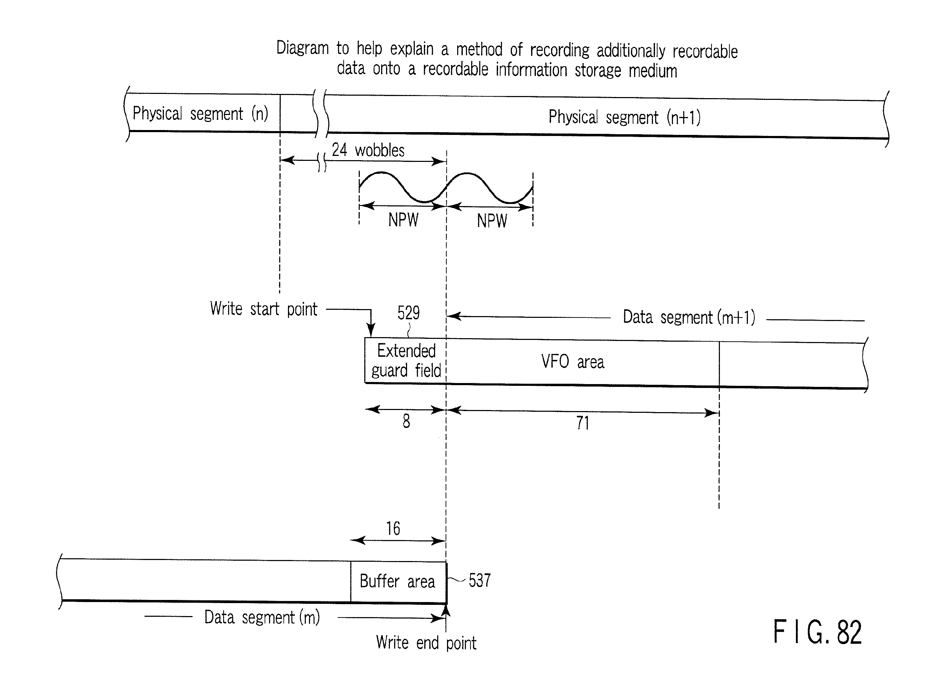

FIG. 82 shows an embodiment of a method of recording additional data onto a recordable information storage medium. While in the embodiment, a method of FIG. 79(b) is used for the layout of a recording cluster on the recordable information storage medium, this invention is not limited to this. For instance, a method of FIG. 79(a) may be used. Since recording is done only once on the recordable information storage medium, the above-described random shift is not needed. In the recordable information storage medium, too, as shown in FIG. 81, setting is done so that the begin position of a data segment may lie 24 wobbles or more from the begin position of a physical segment (point (K5) in FIGS. 131A and 131B), with the result that an overlapping place lies in the non-modulation area of a wobble.

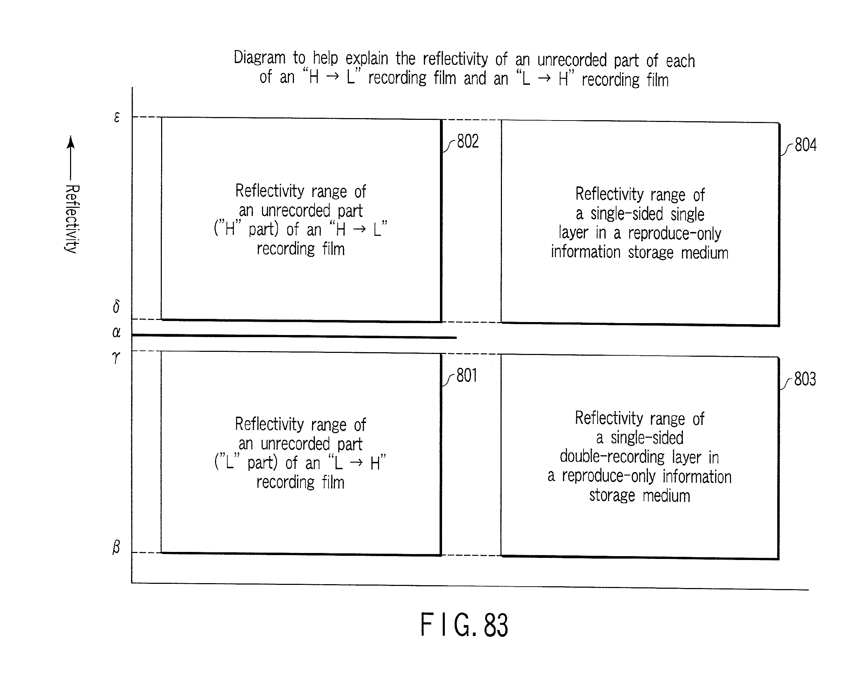

As has been explained in "recording mark polarity" (identifying either High-to-Low or Low-to-High) information" at the $192^{nd}$ byte (refer to FIG. 23B), use of both of a High-to-Low recording film and a Low-to-High recording film is permitted in the embodiment. FIG. 83 shows the reflectivity ranges of a High-to-Low recording film and a Low-to-High recording film determined in the embodiment. This embodiment is characterized in that the lower limit of reflectivity at an unrecorded part of the High-to-Low recording film is set higher than the upper limit of reflectivity at an unrecorded part of the Low-to-High recording film (point <M> in FIG. 135). When the information storage medium is installed in the information recording and reproducing apparatus or information reproducing apparatus, the slice level detecting section 132 or PR equalizing circuit 130 of FIG. 1 can measure the reflectivity of an recorded part and determine whether the film is a High-to-Low or a Low-to-High recording film, which makes it very easy to determine the type of recording film.

As a result of forming and measuring High-to-Low recording films and Low-to-High recording films by changing many manufacturing conditions, it was found that, when the reflectivity $\alpha$ between the lower limit of reflectivity at an unrecorded part of the High-to-Low recording film and the upper limit of reflectivity at an unrecorded part of the Low-to-High recording film was set to 36% (point <M1> in FIG. 135), the productivity of the recording film was high and the cost of the recording medium was easy to reduce. When the reflectivity range 801 of an unrecorded part ("L" part) of the Low-to-High recording film is caused to coincide with the reflectivity range 803 of the single-sided double layer of the reproduce-only information storage medium (point <M3> in FIG. 135) and the reflectivity range 802 of an unrecorded part ("H" part) of the High-to-Low recording film is caused to coincide with the reflectivity range 804 of the single-sided single layer of the reproduce-only information storage medium (point <M2> in FIG. 135), the interchangeability with the reproduce-only information storage medium is good and the reproducing circuit of the information reproducing apparatus can be shared, which enables the information reproducing apparatus to be produced at low cost. As a result of forming and measuring High-to-Low recording films and Low-to-High recording films by changing many manufacturing conditions, to increase the productivity of the recording film and make it easier to reduce the cost of the recording medium, the lower limit $\beta$ of the reflectivity of an unrecorded part ("L" part) of the Low-to-High recording film was set to 18%, its upper limit $\gamma$ was set to 32%, the lower limit $\delta$ of the reflectivity of an unrecorded part ("H" part) of the High-to-Low recording film was set to 40%, and its upper limit $\varepsilon$ was set to 70% in this embodiment.

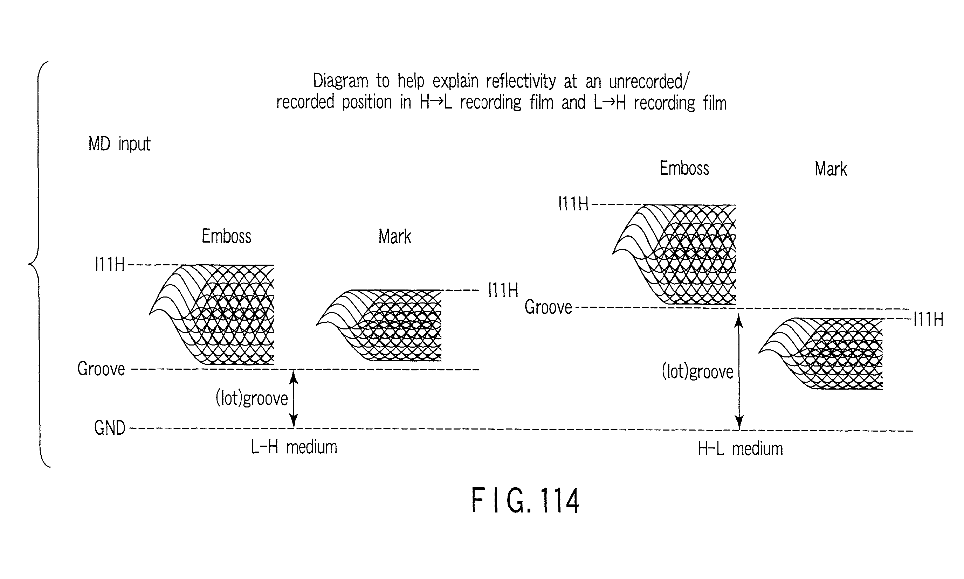

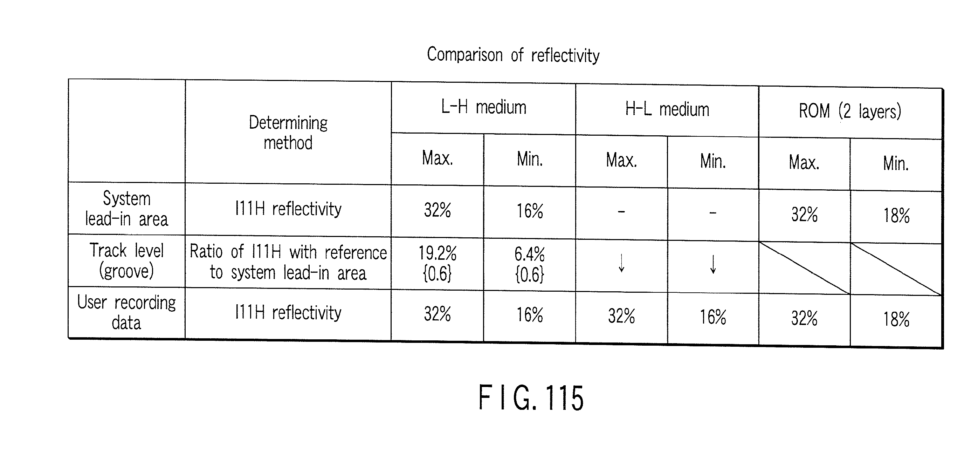

FIGS. 114 and 115 show the reflectivity of each of an unrecorded position and a recorded position on various types of recording films in the embodiment. When the reflectivity range at an unrecorded part is determined as shown in FIG. 83, a signal appears in the same direction in emboss areas (including system lead-in SYLDI) and in recording mark areas (data lead-in/-out DTLDI, DTLDO and data area DTA) in the Low-to-High recording film, with the groove level as a reference. Similarly, a signal appears in the opposite direction in emboss areas (including system lead-in SYLDI) and in recording mark areas (data lead-in/-out DTLDI, DTLDO and data area DTA) in the High-to-Low recording film, with the groove level as a reference. Use of this phenomenon not only helps identify whether the recording film is a Low-to-High recording film or a High-to-Low recording film but also makes it easier to design a detecting circuit compatible with both of a Low-to-High recording film and a High-to-Low recording film.

The operational advantages shown in the above embodiments are put in order as follows.

FIGS. 125 to 135 list the points of the above embodiments. The effects of combinations of points are shown in the columns in FIGS. 125 to 135. Each effect with the highest contribution is marked with star(☆). The remaining effects are marked with a double circl ⊚, a circl ○, or a triangle △ in decreasing order of contribution ratio. Advantages of a combination of points are generally stated as follows.

Advantage 1. Determining the optimum recording condition:

After a burst cutting area BCA is detected stably, it is determined from the value of the rim intensity stably read in slice level detection whether recommended recording condition information can be used. If it has been determined that the condition information cannot be used, the drive test zone requires recording conditions to be determined carefully. Therefore, the extension of the test zone and the management of its position are needed.

Points contributing to this effect are <E2>, <G3>; <A1>, <B>, <B1>, <E3>, <E4>, <E6>, <G>, <G2>; <A>, <B4>, <G1>, <G1$\alpha$>; <B2>, <B3>, <E>, <E1> in that order. Specifically, points with high contribution ratio are <E2> enabling the extension of a drive test zone (FIGS. 18A and 18B) makes it possible to increase the number of trial writing and improve the recording accuracy and <G3> placing optical system condition information at the starting position of recording conditions (FIGS. 23A and 23B) makes it possible to determine at high speed whether recording conditions placed just behind are adaptable.

Advantage 2. Reproducing circuit setting method:

After a burst cutting area BCA is detected stably, identifying information on High-to-Low or Low-to-High stably read in slice level detection is read at high speed and the optimum circuit adjustment is made to PR(1, 2, 2, 2, 1), making use of reference codes.

Points contributing to this effect are <A3>, <G2>; <A1>, <A2>, <B>, <B1>, <G>; <A>, <B4>; <B2>, <B3> in that order. Specifically, points with high contribution ratio are <A3> a reference code pattern repeats "3T3T6T" (FIG. 16), thereby optimizing ETM&RLL (1, 10) and PRML and <G2> having recording mark polarity information in physical format information or R physical format information (FIGS. 23A and 23B) permits both of an H → L recording film and an L → H recording film, expanding the selection range of recording films, which helps achieve high-speed recording and cost reduction.

Advantage 3. Securing high reliability of reproduction of user recording information:

After a burst cutting area BCA is detected stably, system lead-in information is reproduced in slice level detection and then user recording information is reproduced by the PRML method. The reliability of recoding information is secured by the process of replacing a defective place. Servo in reproduction is stabilized.

Points contributing to this effect are <A>, (A1), <H>, <H1>, <H2>, <H3>, <H4>, <H5>; <C3$\alpha$>, <C3$\beta$>, <C6>, <C7>, <G2>, <I>, <J1), <K>, <L10>, <L10$\beta$>, <L11>; <A2>, <B>, <G1>, <K1>, <K2>, <K3>, <L3>, <L6$\alpha$>, <L7>, <L10$\alpha$>; <B1>, <B2>, <B4>, <C3>, <C4$\alpha$>, <C8$\alpha$>, <F>, <K3$\alpha$>, <K3$\beta$>, <K3$\gamma$>, <K3$\delta$>, <K3$\varepsilon$>, <K3$\zeta$>, <K4>, <K5>, <L1>, <L1$\alpha$>, <L1$\beta$>, <L2>, <L11$\alpha$>, <M>, <M1>, <M2>, <M3>, <N>, <N1>, <N1$\alpha$>, <N2>, <N3>, <N4>. Specifically, points with high contribution ratio are <A> use of PRML for reproduction in the data area, data lead-in area, and data lead-out area (FIGS. 5 and 9) increases the recording density of an information storage medium and particularly improves the linear density, <A1> making use of PR(1, 2, 2, 2, 1) (FIG. 7) increases the recording density and improves the reliability of reproduced signals, <H> distributing the same data frame over a plurality of small ECC blocks (FIG. 35) improves the error correcting capability and therefore the reliability of recorded data, <H1> the same physical sector is caused to belong to two small ECC blocks alternately (FIGS. 35 and 37), realizing a structure resistant to burst errors, <H2> one ECC block is composed of 32 physical sectors (FIG. 31), thereby extending an allowable length of a flaw in the surface of a medium which enables error correction, <H3> the data structure of an even-numbered physical sector differs from that of an odd-numbered physical sector (FIG. 37), which makes a PO inserting method easier, facilitates the extraction of information after error correction, and simplifies the construction of an ECC blocks, <H4> the place in which PO is inserted in an even-numbered recording frame differs from that in an odd-numbered recording frame (FIG. 37), which makes it possible to arrange data ID at the head of a physical sector, and <H5> the small ECC block including data ID in an odd-numbered recording frame differs that in an even-numbered recording frame (they are arranged alternately) (FIG. 84), which improves the data ID reproduction reliability and therefore the access reliability.

Advantage 4. Shortening the time required to access a recording (rewriting or additional recording) place:
A recording (rewriting or additional recording) place is checked in advance on the basis of defect management information. This improves reliability in reproducing the address information.

Points contributing to this effect are <J>, <K3>, <L>, <L6>; <H5>, <H6>, <J2>, <J3>, <J4>, <J5>, <L5$\alpha$>; <C3$\alpha$>, <C3$\beta$>, <E>, <E1>, <E2>, <E3>, <E4>, <E5>, <E6>, <E7>, <H>, <H1>, <H2>, <J1>, <J1$\alpha$>, <J2$\alpha$>, <J2$\beta$>, <J3$\alpha$>, <J3$\beta$>, <J3$\gamma$>, <J3$\delta$>, <J3$\varepsilon$>, <J4$\alpha$>, <J4$\beta$>, <J4$\gamma$>, <J4$\delta$>, <J4$\varepsilon$>, <J5$\alpha$>, <J5$\beta$>, <J5$\gamma$>, <J5$\varepsilon$>, <J5$\zeta$>, <J6>; <H3>, <N>, <N1>, <N1$\alpha$>, <N2>, <N3>, <N4>. Specifically, points with high contribution ratio are <J> address information is recorded in advance by wobble phase modulation (FIG. 64), making the slot interval narrower, which makes it easy to synchronize wobble signals, <K3> if the recording position has shifted, the position is adjusted in the guard area (FIG. 80), which makes it possible to correct the recording timing to the shift in the recording position, <L> the latest RMD is reproduced in reproduction and, after additional recording, the updated RMD is additionally recorded in RMZ (FIGS. 87, 90, 91), which makes it possible to increase the number of times of additional recording in the additional recording and reproduction of recording management data RMD in the last state and which enables high-speed access in reproduction, and <L6> after RMD duplication zone RDZ is reproduced, the recording position of the latest recording management data RMD is searched for (FIG. 108), which facilitates rough search using an RMD duplication zone RDZ and close search in the last border.

Advantage 5. Recording stable, high-accuracy recording marks:
Points contributing to this effect are <G1>, <G1$\alpha$>, <G3>, <K3>; <E>, <E1>, <E2>, <E3>, <E4>, <E5>, <E6>, <E7>, <J>, <J2>, <J3>, <J4>, <J5>, <K>, <K3$\alpha$>, <K3$\beta$>, <K3$\gamma$>, <K3$\delta$>, <K3$\varepsilon$>, <K3$\zeta$>, <K4>, <K5>; <A>, <A1>, <A2>, <A3>, <J2$\alpha$>, <J2$\beta$>, <J3$\alpha$>, <J3$\beta$>, <J3$\gamma$>, <J3$\delta$>, <J3$\varepsilon$>, <J4$\alpha$>, <J4$\beta$>, <J4$\gamma$>, <J4$\delta$>, <J4$\varepsilon$>, <J5$\alpha$>, <J5$\beta$>, <J5$\gamma$>, <J5$\delta$>, <J5$\varepsilon$>, <J5$\zeta$>, <J6>, <K1>, <K2>, <K3>. Specifically, points with high contribution ratio are <G1> using revision information according to the recording speed (FIGS. 23A and 23B) assures the expansion of functions to a future high-speed-compatible medium and enables standards to be coped with by a simple method known as revision, <G1$\alpha$> a different revision number can be set to each of the maximum and minimum values of the recording speed (FIGS. 23A and 23B), expanding the selection range of recording films that can be developed, which makes it possible to supply mediums which enable higher-speed recording or lower-cost mediums, <G3> placing optical system condition information at the begin position of recording conditions (FIGS. 23A and 23B) makes it possible to determine at high speed whether recording conditions placed just behind are acceptable, and <K3> if the recording position has shifted, the position is adjusted in the guard area (FIG. 80), which makes it possible to correct the recording timing to the shift in the recording position.

Advantage 6. Both of a Low-to-High recording film and a High-to-Low recording film are dealt with to standardize circuits, which simplifies control.

Points contributing to this effect are <B3>, <G2>, <M>, <M1>; <A>, <A1>; <M2>, <M3>; <A2>, <A3>, <B>, <B1>, <B2>. Specifically, points with high contribution ratio are <B3> microscopic concavity and convexity are made in a burst cutting area of an L→H film (FIG. 9), causing the detection level in BCA to coincide with that in SYLDI (or making the process easy), <G2> polarity information on recording marks is included in physical format information or R physical format information (FIGS. 23A and 23B), permitting both of a High-to-Low recording film and a Low-to-High recording film, which expands the recording film selection range and realizes high-speed recording and cost reduction, <M> the lower limit of the reflectivity of a High-to-Low recording film is higher than the upper limit of the reflectivity of a Low-to-High recording film (FIG. 83), making it very easy to determine the type of a recording film by just measuring reflectivity, and <M1> the reflectivity is set to 36% between the lower limit of the reflectivity of a High-to-Low recording film and the upper limit of the reflectivity of a Low-to-High recording film (FIG. 83), which assures a high productivity of recording films and facilitates cost reduction.

Advantage 7. A data structure is made extendable to increase the flexibility of a management method.

A recording management zone (RMZ) and a test zone (DRTZ) are made extendable, which improves the upper limit of the number of additional recording and the upper limit of the number of trial writing. Setting an extended area increases the frequency of access. Improving the reliability of address information or recording information causes the access reliability to be increased, which eases the burden of controlling the apparatus during access (or the burden of processing errors during access).

Points contributing to this effect are <C>, <C1>, <C3>, <C4>, <C8>, <G1>, <L6$\alpha$>, <L7>, <L8>, <L11$\alpha$>; <C3$\alpha$>, <J5>, <J5$\zeta$>, <L4>, <L6>, <L13>, <L14>; <C3$\beta$>, <C6>, <C7>, <C8$\alpha$>, <E>, <E1>, <E2>, <E3>, <E4>, <E5>, <E6>, <E7>, <H>, <H1>, <H2>, <H3>, <H4>, <H5>, <H6>, <J2>, <J2$\beta$>, <J3>, <J5$\alpha$>, <K>, <K3>, <L>, <L1>, <L1a>, <L1$\beta$>, <L2>, <L3>, <L4$\beta$>, <L5>, <L5$\alpha$>, <L9>, <L9$\alpha$>, <L10>, <L10$\alpha$>, <L10$\beta$>, <L11>, <L12>, <L12$\alpha$>, <L12$\beta$>, <L12$\gamma$>, <L13$\alpha$>, <L13$\beta$>, <L14$\alpha$>, <M>, <N>, <N1>, <N1$\alpha$>, <N2>, <N3>, <N4>; <C2>, <C4$\alpha$>, <C5>, <J2$\alpha$>, <J5$\beta$>, <J5$\gamma$>, <J5$\delta$>, <M1>, <M2>, <M3>. Specifically, points with high contribution ratio are <C> a recording management zone is made extendable (FIGS. 92 and 93), which enables an RMD recording area to be extended and the upper limit of the number of additional recording to be increased, <C1> a recording management zone is made settable in each border-in BRDI (FIGS. 86A and 86B), which enables the number of additional recording in a bordered area to be increased remarkably, <C2> the recording management zone in the first bordered area BRDA#1 is placed in a data lead-in area DTLDI (FIG. 16), thereby sharing the border-in in the first bordered area with the data lead-in, which makes it possible to use the data area effectively, <C3> an RMD duplication zone RDZ is placed in the data lead-in area DTLDI (FIG. 16), causing a part of recording management data RMD to be recorded redundantly, which makes it possible to restore the data in case reproduction is impossible due to defects or the like, <C3$\alpha$> the last recording management data RMD related to the bordered area is recorded in the RMD duplication zone RDZ (FIG. 16), which makes it possible to use the RMD duplication zone RDZ effectively and increases the number of additional recording, <C3$\beta$> each time a new RMZ is formed, the last RMD is recorded in the RMD duplication zone RDZ (FIGS. 17A and 17B), which increases the number of additional recording onto a recordable information storage medium remarkably, makes it easier to search for the position of the latest RMD, and improves the RMD reliability, <C4> an RDZ lead-in is recorded in the data lead-in area (FIGS. 17A and 17B), which makes it possible to determine whether the information storage medium is immediately after shipment or has been used even once, <C4$\alpha$> an RDZ lead-in RDZLI is placed in the RMD duplication zone RDZ (FIGS. 17A and 17B), which makes it possible to shorten the time required to acquire necessary information, <C5> the RDZLI size or RMD size is set to 64 KB (FIGS. 17A and 17B), making it possible to prevent the recording efficiency of RDZLI or RMD from decreasing, <C6> a copy CRMD of RMD is written repeatedly (FIGS. 86A and 86B), which improves the reliability of a copy CRMD of RMD, <C7> updated physical format information is written repeatedly (FIGS. 86A and 86B), which improves the reliability of the updated physical format information, <C8> an R zone is used as an extended recording management zone RMZ (FIG. 103), which increases the number of additional recording in the same bordered area remarkably, <G1> using revision information according to the recording speed (FIGS. 23A and 23B) assures the expansion of functions to a future high-speed-compatible medium and enables standards to be coped with by a simple method known as revision, <L6$\alpha$> RMD is used to manage RMZ positions (FIG. 92), which makes it easier to search for RMZ positions using RDZ, <L7> RMD is updated at the time of initialization, R zone reservation or R zone closing, border closing, or recording interruption (FIGS. 89 and 101), which simplifies search control during reproduction and makes it easier to search for a recordable area during additional recording, <L8> when RMZ is filled up or when the remaining reserved area in RMZ is running short, a new RMZ is formed (FIG. 91), which prevents the filled RMZ from making it impossible not only to additionally record the updated RMD but also to do additional recording, and <L11$\alpha$> an extended drive test zone EDRTZ is also included in a new data lead-out area NDTLDO (FIGS. 119, 120, and 18), which prevents the information reproducing apparatus from accessing the extended drive test zone EDRTZ erroneously.

Advantage 8. The interchangeability between different types of mediums is secured, which helps simplify an information recording and reproducing apparatus and an information reproducing apparatus:

When a new recording management zone (RMZ) is set or when a border is closed, a gap in the data is filled with specific data, which assures stable tracking by the DPD method on the information reproducing apparatus. The interchangeability between various types of mediums are secured in terms of burst cutting area BCA information or physical format information, thereby standardizing control circuits, which helps simplify the information reproducing apparatus and the information recording and reproducing apparatus and reduce costs. At the same time, the stabilization of reproduction of the information recorded there is secured, which further simplifies an information reproducing apparatus and an information recording and reproducing apparatus and reduce costs more.

Points contributing to this effect are <A>, <B>, <B1>, <G>, <H>, <L2>, <L10>, <L10$\beta$>, <L11$\alpha$>, <N>; <A1>, <A2>, <A3>, <B2>, <B4>, <F>, <H1>, <H2>, <H3>, <H4>, <H5>, <H6>, <J5$\epsilon$>, <L3>; <L>, <L1>, <L1$\alpha$>, <L1$\beta$>; <B3>. Specifically, points with high contribution ratio are <A> use of PRML for reproduction in the data area, data lead-in area,

and data lead-out area (FIGS. 5 and 9) increases the recording density of an information storage medium and particularly improves the linear density, <B> the slice level detecting method is used for reproduction in the system lead-in area and system lead-out area (FIGS. 3 and 9), which secures the interchangeability with the existing DVD and stabilizes reproduction, <B1> the density of each of the system lead-in area and system lead-out area is set lower than that of each of the data lead-in area and data lead-out area (FIGS. 13 to 15), which secures the interchangeability with the existing DVD and stabilizes reproduction, <G> the locations of physical format information are standardized (FIGS. 22A and 22B), which helps standardize and simplify the information reproducing processes in the apparatus, <H> the same data frame is distributed over a plurality of small ECC blocks (FIG. 35), which improves the error correcting capability and therefore the reliability of recorded data, <L2> the reserved area is filled with the last recording management data RMD at the time of closing the corresponding bordered area or of finalization (FIGS. 17 and 85), which assures stable tracking by DPD and improves the reliability of the last recording management data RMD, <L10> RMZ is filled at the time of border closing, PFI is recorded, and border-out BRDO is recorded (FIG. 94), which assures not only stable tracking on a reproduce-only apparatus but also the process of accessing the recorded information, <L10β> the R zone is filled at the time of border closing (FIG. 97), which prevents the optical head from coming off the track in an R zone by DPD, <L11α> when the second or later bordered area BRDA is closed, the latest RMD is copied into RDZ (FIG. 95), making it easier to search for the position of RMZ in the second or later bordered area BRDA, which makes access control easier and more reliable, and <N> data lead-out position identifying information is set on the basis of area type information 935 in data ID (FIGS. 118, 119, and 120), enabling the position of the data lead-out to be known from the data ID immediately after access, which facilitates access control.

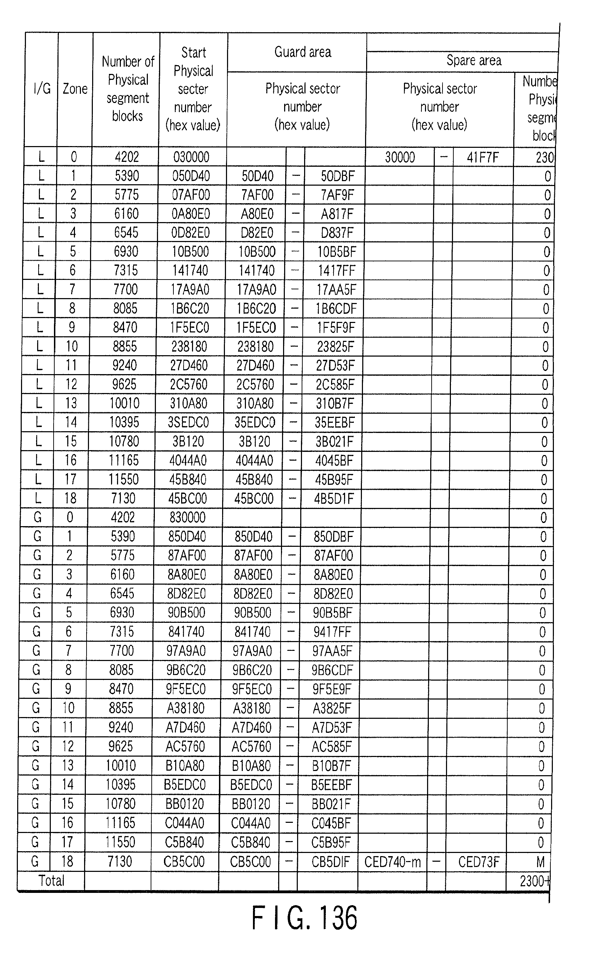

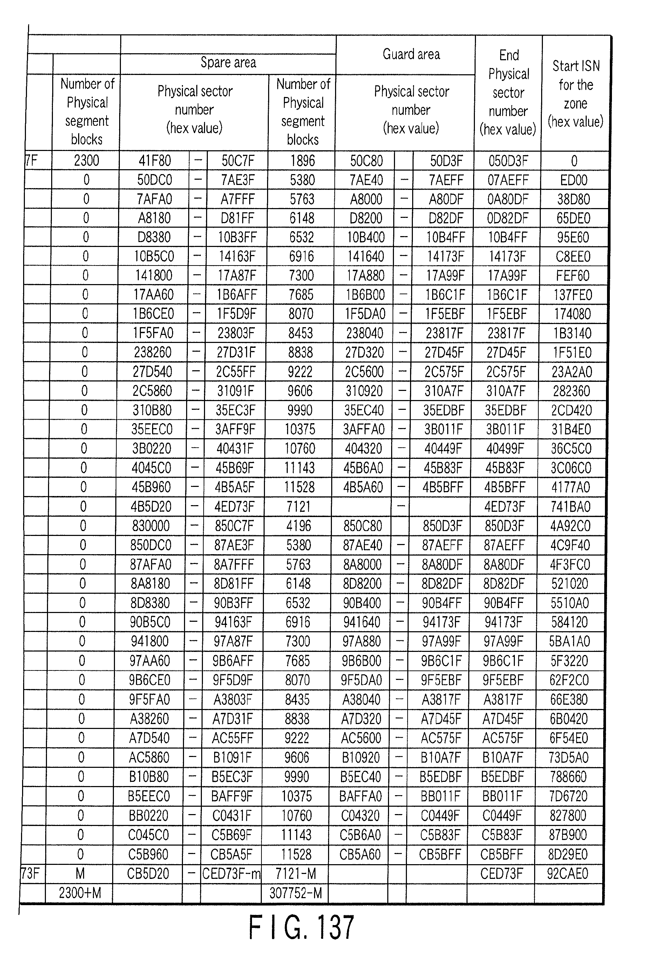

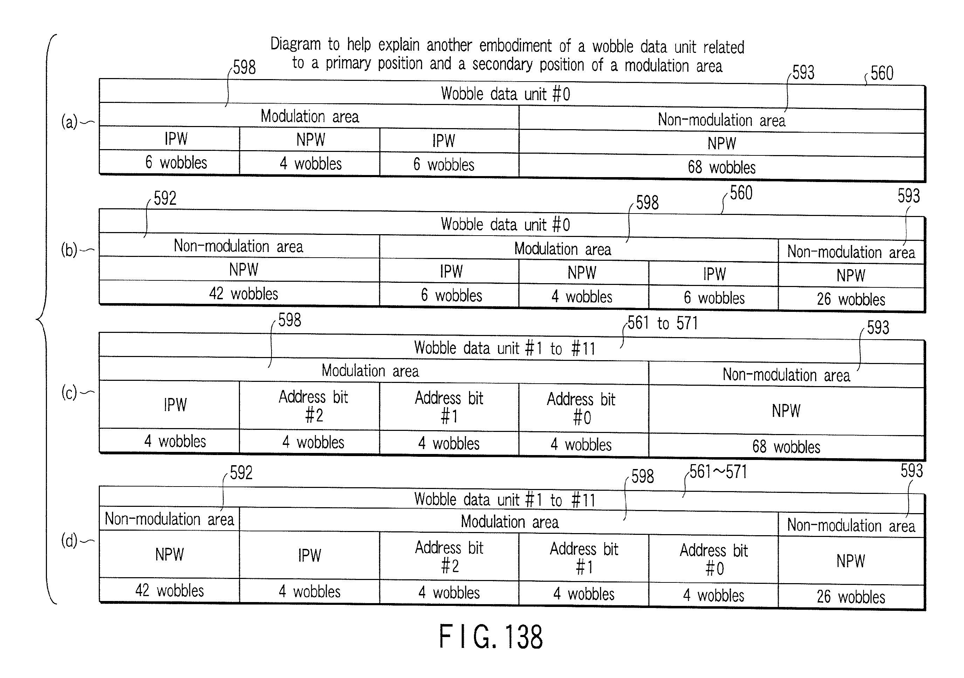

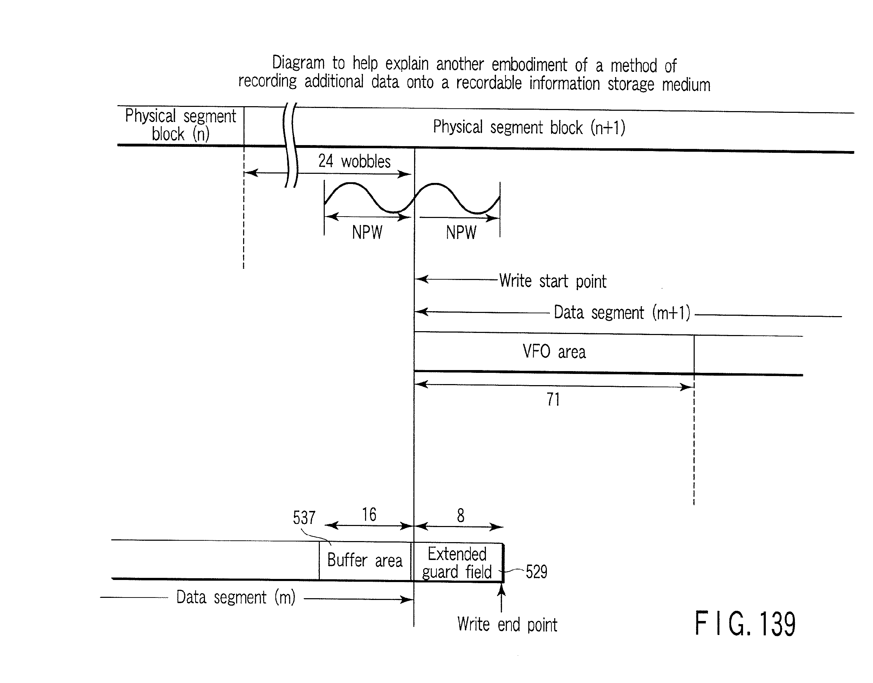

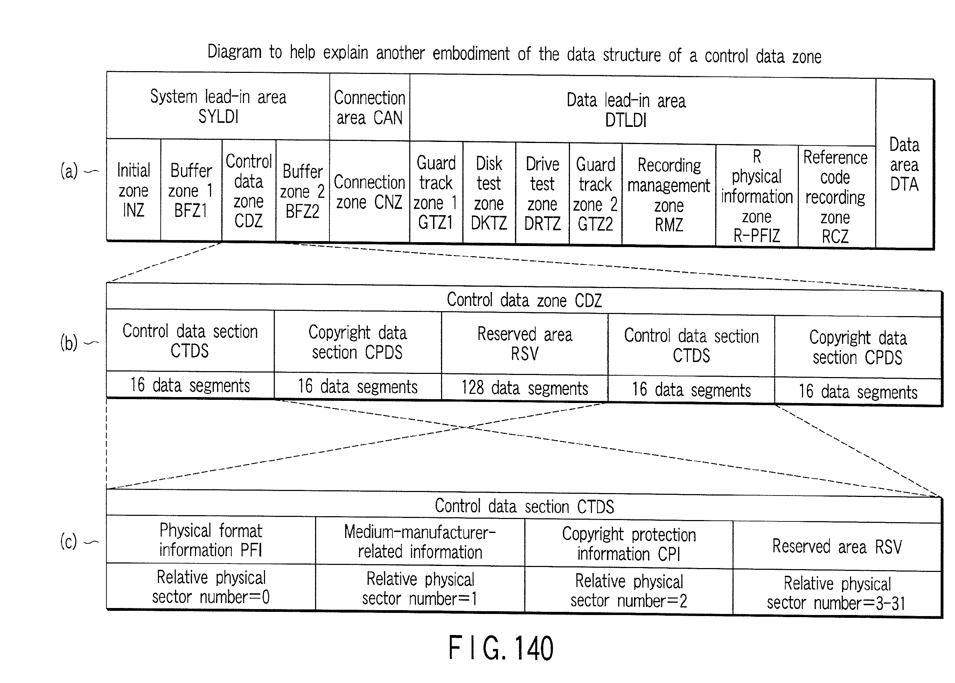

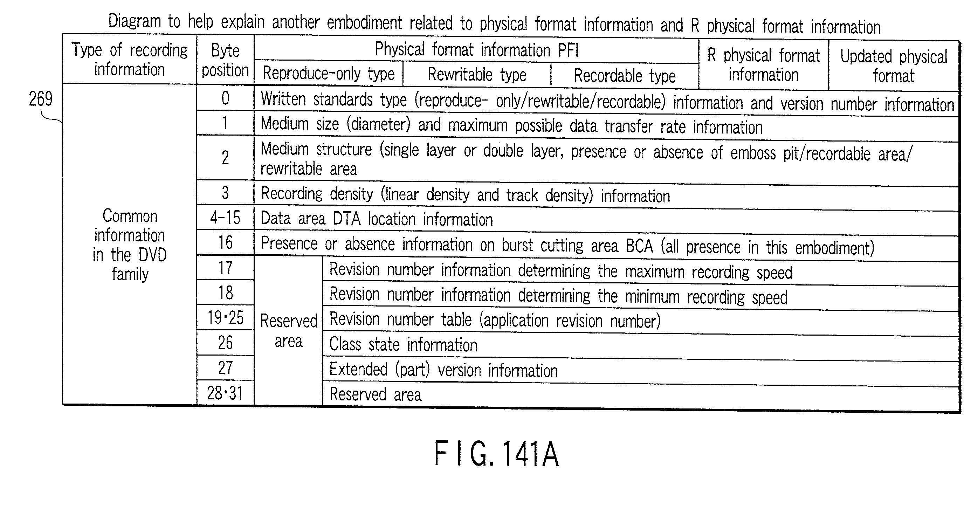

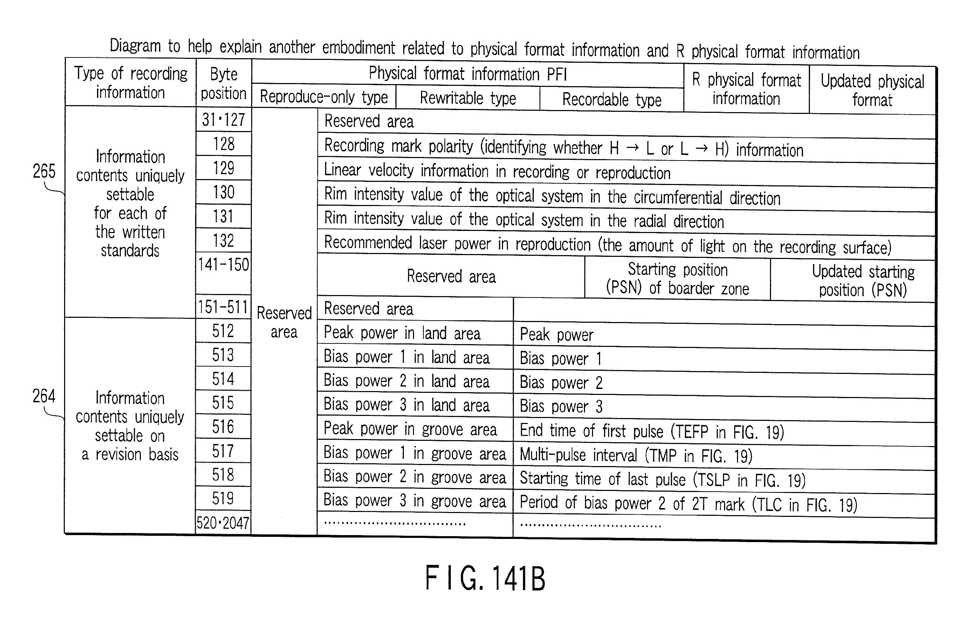

Furthermore, FIGS. 136 and 137 show the group structure of a data area on a rewritable information storage medium of the embodiment. FIG. 138, which shows another embodiment, illustrates a modulation area arrangement related to the primary position and secondary position of modulation areas in a wobble data unit. FIG. 139 shows another embodiment of the method of recording additional data onto a recordable information storage medium. FIG. 140 shows another embodiment of the data structure of a control data zone. FIGS. 141A and 141B show another embodiment of physical formation information and R physical format information.

FIGS. 136 and 137 show the group structure of a data area on the rewritable information storage medium of FIGS. 12A and 12B.

As shown in FIGS. 12A and 12B, the physical sector numbers are set in ascending order from the land (L) side. The spare area SPA shown in FIGS. 18A and 18B correspond to the spare area in each of FIGS. 136 and 137. The spare area SPA is set in the innermost land area (the area ranging from physical sector numbers "30000h" to "41F7F") in the data area DTA.

FIG. 138, (b) shows another embodiment in connection with FIG. 74, (b). FIG. 138, (a), (c), (d) correspond to FIG. 74, (a), (c), (d), respectively. While in FIG. 74, (b), 4 wobbles are allocated to an IPW area and 6 wobbles are allocated to an NPW area enclosed by the IPW area, this invention is not limited to this. For instance, as shown in FIG. 138, (b), 6 wobbles may be allocated to the IPW area and 4 wobbles may be allocated to the NPW area enclosed by the IPW area.

FIG. 139 shows another embodiment of the method of recording additional data onto the recordable information storage medium shown in FIG. 82.

The position 24 wobbles behind the boundary position of a physical segment block is a write starting point. New data to be additionally recorded from this point is used to form a 71-data-byte VFO area and then is recorded in the data area (data field) in the ECC block. The write starting point coincides with the end position of the buffer area 537 of the data just recorded. The place behind an extended guard field 528 with a length of 8 data bytes is the recording end position of the additional data (write end point). Therefore, when data is additionally recorded, the extended guard field 529 just recorded overlaps with an additionally recorded VFO area by 8 data bytes.

FIG. 140 shows another embodiment of the data structure of a control data zone shown in FIGS. 22A and 22B.

As shown in FIG. 16, (c), the control data zone CDZ is a part of an emboss pit area 211. The control data zone CDZ is composed of 192 data segments, starting at the physical sector number 15129 (024F00h). In the embodiment of FIG. 140, a control data section CTDS composed of 16 data segments and a copyright data section CPDS composed of 16 data segments are provided in two places in the control data zone CDZ, with a reserved area RSV being set between the two places. Providing the control data section CTDS and copyright data section CPDS in two places increases the reliability of recorded information. Moreover, providing the reserve area RSV between the two places widens the physical distance between the two places, which alleviates the effect of burst errors resulting from a flaw or the like in the surface of the information storage medium.

In a control data section CTDS, the first three pieces of physical sector information, or relative physical sector numbers "0" to "2", are recorded 16 times as shown in FIG. 140, (c). Writing the information 16 times redundantly improves the reliability of recorded information. Physical format information PFI written in FIGS. 23A and 23B or 141 is recorded in the first physical section in the data segment whose relative physical sector number is "0." In addition, Disk Manufacturing Information DMI is recorded in the second physical sector in the data segment whose relative physical sector number is "1."

Furthermore, copyright protection information CPI is recorded in the third physical sector in the data segment whose relative physical sector number is "2." The reserved area RSV whose relative physical sector numbers range from "3" to "31" is reserved so as to be usable in the system.

As for the Disk Manufacturing Information DMI, Disk Manufacturer's name is recorded in 128 bytes ranging from the 0-th byte to 127$^{th}$ byte and information on the place where the disk manufacturer is located (information indicating where the medium was manufactured) is recorded in 128 bytes ranging from the 128$^{th}$ byte to 255$^{th}$ byte.

The disk manufacturer's name is written using the ASCII code. ASCII codes usable for the disk manufacturer are limited to up to "0Dh" and the codes from "20h" to "7Eh." The disk manufacturer's name is written from the first byte in the area. The remaining part of the area is filled (or terminated) with the data "0Dh." Alternatively, as another embodiment, the size of an area in which the disk manufacturer's name can be written may be set as the range from the first to "0Dh." When the disk manufacturer's name is longer than the size, the name may be cut off at "0Dh" and the remaining part beyond "0Dh" may be filled with the data "20h."

As for information on the place where the disk manufacturer is located which indicates where the disk was manufactured, the corresponding country and region are written using the ASCII code. Like the area for the disk manufacturer's name, ACII codes usable for the place information are limited to up to "0Dh" and the codes from "20h" to "7Eh." The place where the disk manufacturer is located is written from the first byte in the area. The part left over in the area is filled (or terminated) with the data "0Dh." As another embodiment, the size in which information on the place where the disk manufacturer is located may be set to the range from the first to "0Dh." If information on the place where the disk manufacturer is located is longer than the range, the information may be cut off at "0Dh" and the part beyond "0Dh" may be filled with the data "20h."

The reserved area RSV of FIG. 140, (c) is filled up with the data "00h."

FIGS. 141A and 141B show another embodiment of the data structure of physical format information and R physical format information shown in FIGS. 23A and 23B. FIGS. 141A and 141B further show a comparison with "updated physical format information." In FIGS. 141A and 141B, the 0$^{th}$ byte to 31$^{st}$ byte are used as an area in which common information 269 on the DVD family is recorded and the 32$^{nd}$ and later bytes are used for individual written standards.

In the recordable information storage medium, R physical format information recorded in the R physical information zone RIZ in the data lead-in area DTLDI as shown in FIG. 16, (c) is recorded in such a manner that information on the starting position of a border zone (the outermost address of the first border) is added to the physical format information PFI (a copy of HD_DVD family common information) as explained in FIG. 88. Moreover, in the updated physical format information U_PFI in the border-in BRDI shown in FIG. 21B, (d) or FIG. 86B, (d), the updated starting position information (the outermost address of its border) is added to the physical format information PFI (a copy of HD_DVD family common information) and the resulting information is recorded as explained in FIG. 88. In FIGS. 23A and 23B, information on the starting position of the border zone is put in the range from the 197$^{th}$ byte to the 204$^{th}$ byte, whereas in the embodiment of FIGS. 141A and 141B, the information is placed in the range from the 133$^{rd}$ byte to the 140$^{th}$ byte, which is positioned before information on the recording conditions, including the peak power and bias power 1 (or information content 264 that can be set uniquely on a revision basis), and after the DVD family common information 269.

Furthermore, like information on the starting position of the border zone, the updated starting position information is placed in the range from the 133$^{rd}$ byte to the 140$^{th}$ byte, which is positioned before information on the recording conditions, including the peak power and bias power 1 (or information content 264 that can be set uniquely on a revision basis), and after the DVD family common information 269. When the revision number is increased and higher accuracy recording conditions are required in the future, there is a possibility that the 197$^{th}$ byte to 207$^{th}$ byte will be used as recording condition information on the rewritable information storage medium. In this case, if information on the starting position of the boarder zone of R physical format information recorded on the recordable information storage medium as in the embodiment of FIGS. 23A and 23B is placed in the range from the 197$^{th}$ byte to 204$^{th}$ byte, the correspondence (interchangeability) between the rewritable information storage medium and the recordable information storage medium can collapse in terms of the arrangement of recording conditions. As shown in FIGS. 141A and 141B, placing the information on the starting position of a border zone and the updated starting position information in the range from the 133$^{rd}$ byte to 140$^{th}$ byte produces the effect of being capable of securing the correspondence (or interchangeability) between the rewritable information storage medium and the recordable information storage medium even if the amount of information on the recording conditions is increased in the future. In the contents of concrete information on the information on the starting position of a border zone, information on the starting position of the border-out BRDO outside the bordered area BRDA currently being used is written in the range from the 133$^{rd}$ byte to 136$^{th}$ byte using a physical sector number (PSN) and information on the starting position of the border-in BRDI related to the bordered area BRDA to be used next is written in the range from the 137$^{th}$ byte to 140$^{th}$ byte using a physical sector number (PSN).

Furthermore, the contents of concrete information on the updated starting position information represent information on the position of the latest border zone when a bordered area BRDA is newly set. Information on the starting position of the border-out BRDO outside the bordered area BRDA currently being used is written in the range from the 133rd byte to 136th byte using a physical sector number (PSN) and information on the starting position of the border-in BRDI related to the bordered area BRDA to be used next is written in the range from the 137th byte to 140th byte using a physical sector number (PSN). If the next bordered area BRDA cannot be recorded into, the area (ranging from the 137th byte to 140th byte) is filled with "00h."

The embodiment of FIGS. 141A and 141B differs from that of FIGS. 23A and 23B in that "information on the disk manufacturer's name" and "additional information from the disk manufacturer" are removed and that information on the polarity (identifying either H→L or L→H) of a recording mark is placed at the 128th byte and later.

Embodiments of characteristic parts of defect management will be explained in further detail.

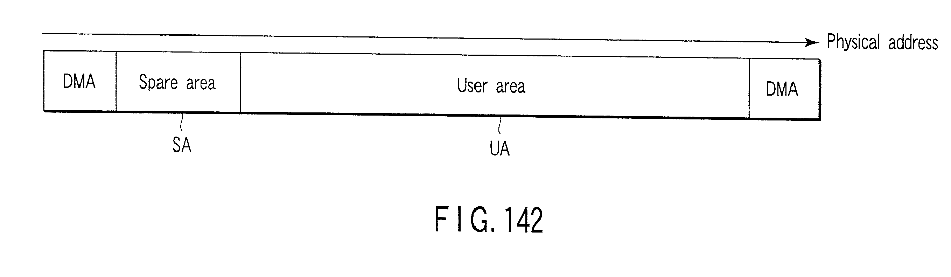

First, referring to FIGS. 142 to 155, a first defect management method will be explained. FIG. 142 schematically shows the data structure of an information storage medium (or an optical disk) according to an embodiment of the present invention. As shown in FIG. 142, the information storage medium has a data structure that has a spare area SA and a user area UA provided between DMAs. The data structure of FIG. 142 is just one example of the data structure of the information storage medium of the present invention. The data structure of the information storage medium of the present invention is not limited to this.

The user area UA is an area for storing user data. The spare area SA is an area in which data to be recorded in a defective area in the user area is recorded for replacement. The defective area is an area in ECC (Error Correction Code) blocks. That is, ECC blocks of data are recorded in the spare area SA for replacement. As described later, DMA may be designed to have a DMA counter (or overwrite management area). In that case, the number of times the DMA is overwritten is reflected on the count of the DMA counter.

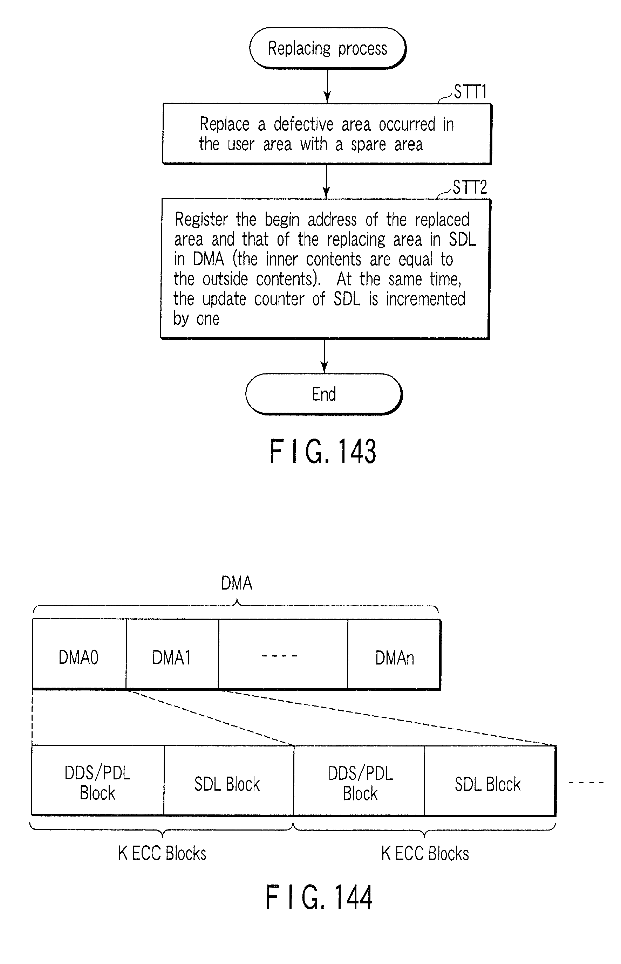

FIG. 143 is a flowchart to help explain a replacing process. As shown in FIG. 143, the data to be recorded in a defective area occurred in the user area is recorded in the spare area SA in a replacing manner (STT1). In addition to this, the begin address of the replaced area (or defective area) and that of the replacing area (or a specific area of the spare area SA) are registered in the SDL (Secondary Defect List) in the DMA. For example, as shown in FIG. 142, the DMA is provided on the inner circumference and on the outer circumference. The same data is registered in the SDL in each of the DMAs. After the information is registered in the SDL, the update counter of the SDL is incremented (by one) (STT2).

Traditionally, DMAs are placed in fixed physical address areas on the medium. In addition, to make DMAs more resistant to defects, DMAs in which the same contents have been stored are placed in a plurality of places on the medium. For example, in the case of a DVD-RAM, DMAs are provided in two places on the innermost circumference and in two places on the outermost circumference. That is, DMAs are placed in a total of four places. The same contents are recorded in the four DMAs.

FIG. 144 schematically shows the data structure of a DMA provided on an information storage medium of the present invention. As shown in FIG. 144, the information storage medium has a plurality of DMAs. Each DMA is composed of a DDS/PDL block and an SDL block. PDL is an abbreviation for Primary Defect List. Each of the DDS/PDL block and SLD block is one ECC block (= 32 KB). While a case where one ECC block contains 32 KB will be explained as an example, one ECC block may be composed of 64 KB. An ECC block composed of 64 KB will be explained in detail later.

To increase the resistance of DMAs to defects, the information storage medium of the invention is so designed that, when the DMA current being used has deteriorated, the defect management information stored in the DMA is transited to a new DMA. "When the DMA has deteriorated" means "when the number of times the DMA is overwritten almost reaches the allowable number of overwriting on the medium which has the DMA," or "when the number of defects increases so that errors may not be corrected."

Each DMA has a size of an integral multiple of an ECC block which is a true unit in the drive. In a DVD-RAM, one ECC block is composed of 16 sectors. The size of one ECC block is 32 KB. PDL is a primary defect registering list and SDL is a secondary defect registering list. In the PDL, the defects found during a certify process executed in formatting the medium, that is, defect management information about initial defects, are registered. In the SDL, the defects found in normal recording (e.g., user data recording), that is, defect management information about secondary defects, are registered. The defect management information includes the address of the replaced area and that of the replacing area. If the size of each of these lists increases, the number of defects which can be registered increases. DMA0 to DMAn are arranged sequentially and are used, starting with DMA0.

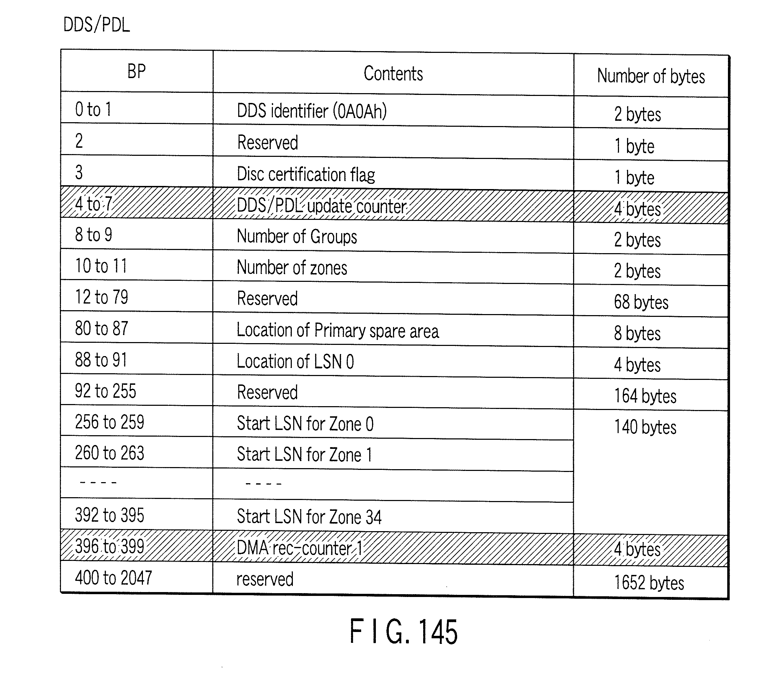

FIG. 145 shows an example of contents written in the begin sector in the DDS/PDL block included in the DMA. In a specific area of the DDS/PDL block, a 4-byte DDS/PDL update counter and a 4-byte DMA rec-counter 1 or the like are arranged.

Each time the contents of the DDS/PDL block are updated, the DDS/PDL update counter is incremented by one. The DMA rec-counter 1 is a counter which counts up when the DDS/PDL block is rewritten. When the medium is initialized (for the first time), zero is set to all of the DMA re-counters 1. Use of the counters will be explained later.

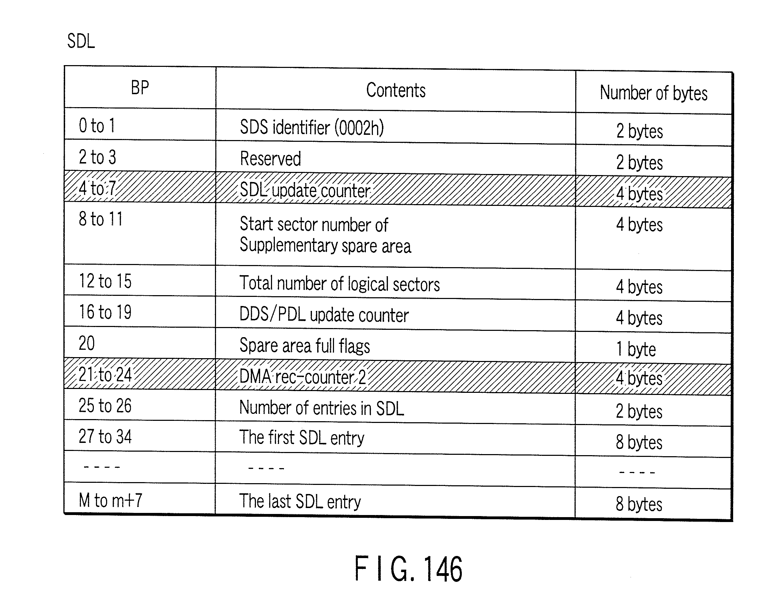

FIG. 146 shows an example of contents written in the SDL block included in the DMA. In a specific area of the SDL block, a 4-byte SDL update counter, a 4-byte DMA rec-counter 2, and a plurality of SDL entries or the like are arranged.

Specifically, in the SDL block, an SDL identifier is written in byte position (BP) 0-1, an SDL update counter is written in byte position (BP) 4-7, and a DMA rec-counter 2 is written in byte position (BP) 4-7.

As in the DDS/PDL block, in the SDL block, each time the contents of the SDL block are updated, the SDL update counter is incremented by one. Therefore, the counter determines the total number of updates of SDL physical segment blocks. In the start physical sector number of a supplementary spare area, when no spare area has been allocated, all 0s are set. The spare area starts with the first physical sector of a physical segment. The total number of logical sectors indicates the total number of logical sectors in the user area.

The DDS/PDL update counter represents the total number of updates and rewriting of DDS/PDL physical segment blocks. Spare area full flags indicate whether the spare physical segment blocks in the corresponding spare area can be used. The apparatus makes a decision according to the flags, which enables a smooth process. When no spare area has been allocated or the spare area has been used up, the flags are set to "1." When a spare area has been allocated or expanded, the flags are set to "0." The number of entries in the SDL indicates the number of entries in the SDL.

The DMA rec-counter 2 is a counter which counts up when the SDL block is updated or rewritten. In the SDL, management information on secondary defects is written. When the medium is initialized (for the first time), zero is set in all of the DMA rec-counters 2. Use of the counters will be explained later.

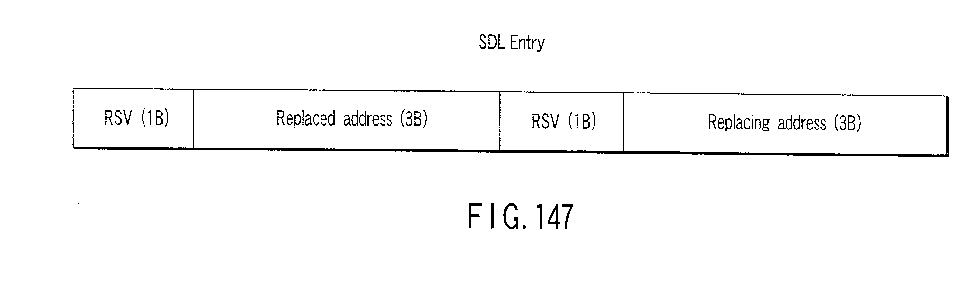

FIG. 147 shows an example of the data structure of one of a plurality of SDL entries included in the SDL. One SDL entry is composed of, for example, 8 bytes. In one SDL entry, there are provided a 3-byte field in which the address of the replaced area is to be written and a 3-byte field in which the address of the replacing area is to be written. Replacing is done in, for example, ECC blocks. In each of the field for the address of the replaced area and the field for the address of the replacing area, the address of the begin sector included in the corresponding ECC block is registered. In the example of the data structure of FIG. 147, a 3-byte field has been allocated for address specification. The size of the address specifying field increases as the capacity of the medium increases (or the address space increases).

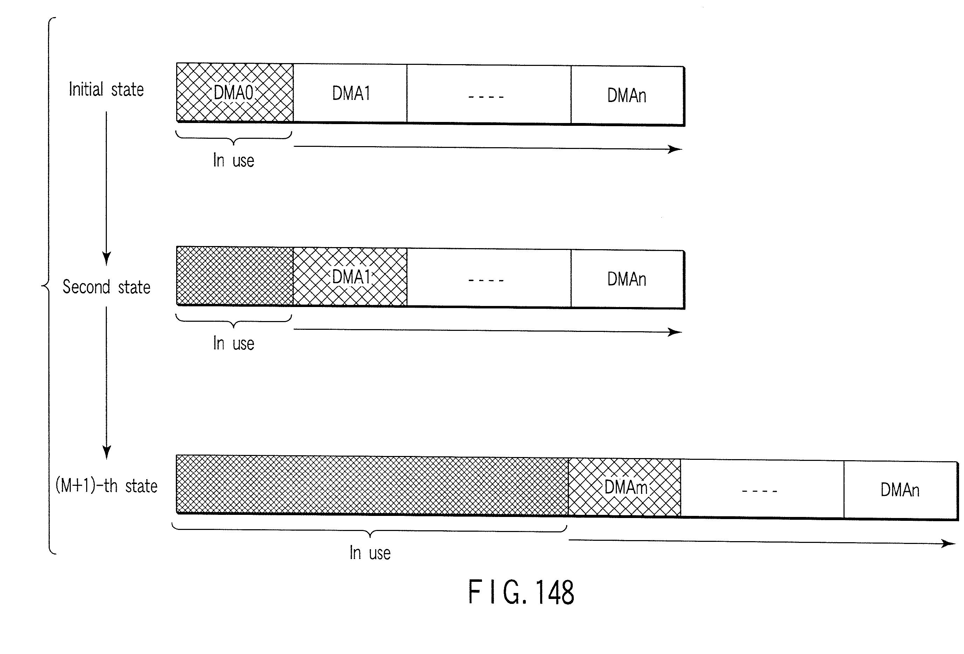

FIG. 148 is a state transition diagram to help explain a method of using a DMA series. The DMA series includes (n + 1) DMAs ranging from DMA0 to OMAn. If DMA0 is the DMA currently being used, DMAs ranging from DMA1 to DMAn can be considered to be spare DMAs.

A plurality of DMAs included in the DMA series are used sequentially, beginning with DMA0. In the initial state, DMA0 is used and DMA1 and later are in the unused state. If the number of defects in DMA0 increases or if the number of overwriting has exceeded a specified number, DMA0 is turned into a used area and the defect management data stored in DMA0 is recorded into DMA1 for replacement. From this point on, using DMAs sequentially enables the medium to be used continuously without destroying the system, even if defects or overwrite damage occur.

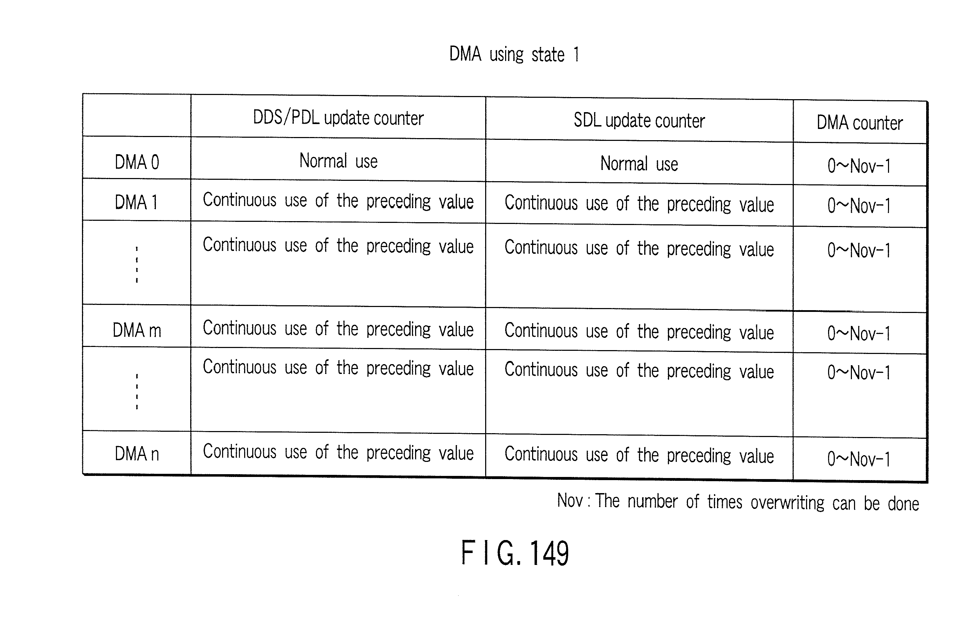

FIG. 149 shows a relationship between the state of each counter provided in the corresponding DMA and the transition of DMA <Part 1>. The DDS/PDL update counter and SDL update counter are accumulation counters which count up accumulatively even when DMA transits (from DM0 → DMA1).

As shown in FIG. 149, a DMA counter is provided in a specific area of the DMA. The DMA counter is a counter which is incremented by one each time the DMA is rewritten. That is, of the count of the DMA rec-counter 1 of the DDS/PDL block included in the DMA and the count of the DMA rec-counter 2 of the SDL block included in the DMA, the larger one is the count of the DMA counter.

Specifically, checking the count of the DMA counter makes it possible to know how many times the DMA currently being used has been overwritten. In other words, the count of the DMA counter can be regarded as representing the damage done to the DMA as a result of overwriting the DMA.

The information recording and reproducing apparatus which records information onto the medium transfers the DMA currently being used (e.g., DMA0) to a spare DMA (e.g., DMA1) in a range not exceeding the allowable number of overwriting (Nov) predetermined according to the characteristics of the medium. Of course, to make the most effective use of the DMA currently being used, it is desirable to use the DMA until the maximum value (Nov-1) of the DMA counter has been reached. Even if the maximum of the DMA counter has not been reached, when the information recording and reproducing apparatus detects an increase in the number of defects in the DMA currently being used, it moves the DMA currently being used to a spare DMA. A value is input to each DMA only when it starts to be used. That is, no value is input to an unused DMA. When a medium is installed into the information recording and reproducing apparatus, the apparatus searches for a DMA where the count of each of the DMA rec-counters 1 and 2 is 0 in order to know the position of the DMA currently being used. If a DMA (e.g., DMA2) where the count of each of the DMA rec-counters 1 and 2 is 0 has been found, the DMA (e.g., DMA1) immediately before the found DMA is recognized as the DMA currently being used. If a DMA (e.g., DMA2) where the count of each of the DMA rec-counters 1 and 2 is 0 has not been found, the last DMA (e.g., DMAn) is recognized as the DMA currently being used.

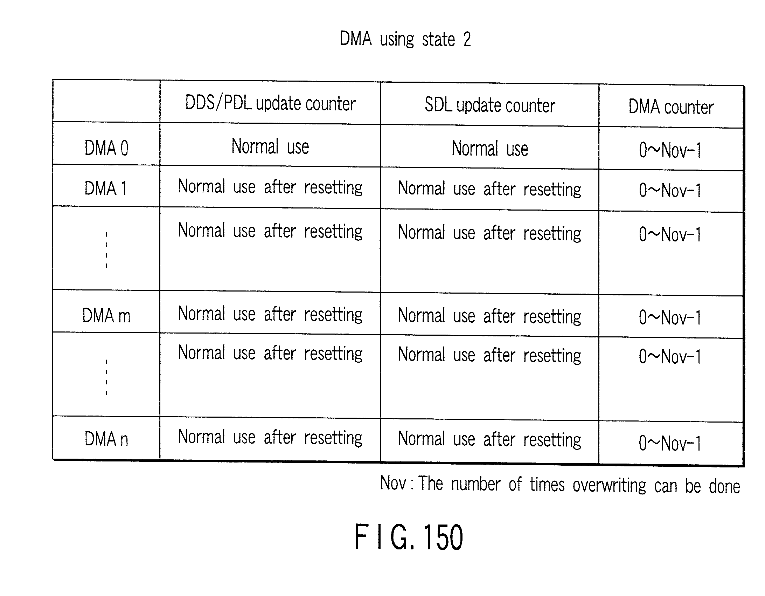

FIG. 150 shows a relationship between the state of each counter provided in the corresponding DMA and the transition of DMA <Part 2>. In FIG. 149, the case where the DDS/PDL update counter and SDL update counter count up accumulatively even when the DMA has transited has been explained. In FIG. 150, a case where the count of the DDS/PDL update counter and that of the SDL update counter are reset when the DMA has transited (from DMA0 → DMA1) will be explained.

As shown in FIG. 150, a DMA counter is provided in a specific area of the DMA. The DMA counter is a counter which is incremented by one each time the DMA is rewritten. That is, of the count of the DDS/PDL update counter (DMA rec-counter 1) of the DDS/PDL block included in the DMA and the count of the SDL update counter (DMA rec-counter 2) of the SDL block included in the DMA, the larger one is the count of the DMA counter.

In the case of FIG. 150, each time the DMA is moved, the DDS/DPL update counter and SDL update counter are reset. Therefore, in this case, the DDS/PDL update counter functions in the same manner as the DMA rec-counter 2. The SDL update counter functions in the same manner as the DMA re-counter 2. Accordingly, in the case of FIG. 150, the DMA counters 1 and 2 can be omitted.

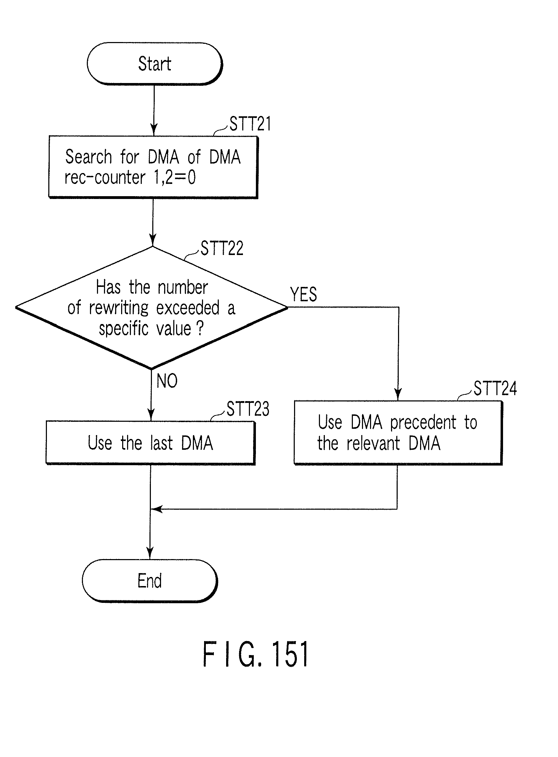

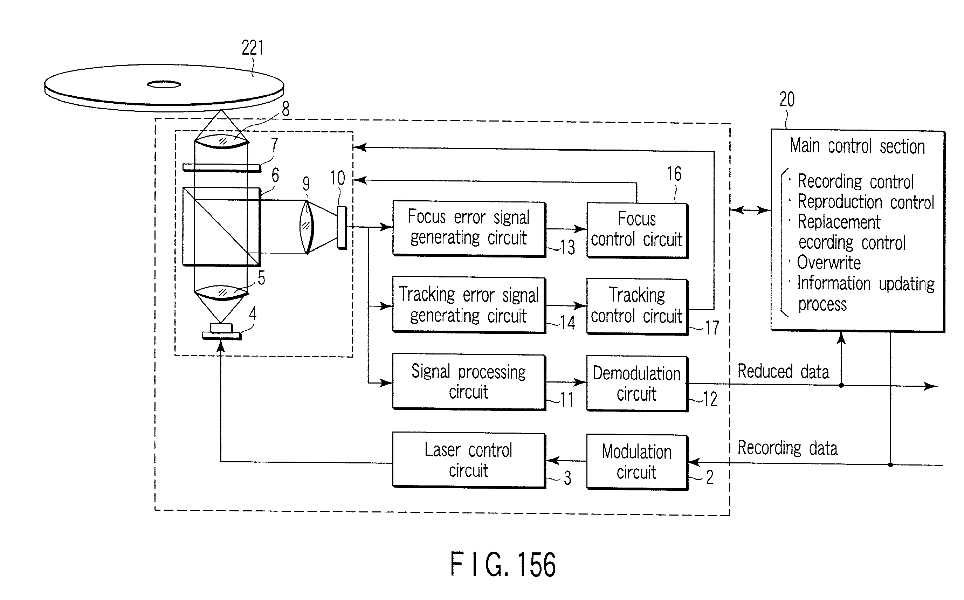

FIG. 151 is a flowchart to help explain the procedure for searching for the DMA currently being used. The process of searching for the DMA currently being used is carried out at the main control section 20 of the information recording and reproducing apparatus of FIG. 156. As described above, the information storage medium of the present invention is so designed that the DMA transits as a result of overwriting or the like. Therefore, when a disk is installed in the information recording and reproducing apparatus, it is necessary to search for the DMA currently being used. In each of the DMAs (DMA0 to DMAn) on the medium, DMA rec-counters 1 and 2 are provided. At the time when the medium was initialized, the count of each of the DMA rec-counters 1 and 2 in each DMA had been set to zero. When the medium starts to be used, the count of each of the DMA rec-counters 1 and 2 in DMA1 is incremented. When use of the medium is further continued, the count of each of the DMA rec-counters 1 and 2 in DMA2 is incremented. The order in which DMA0 to DMAn are used is determined in advance. They are used in this order: DMA0 → DMA1 → DMA2 → ... → DMAn. Therefore, checking the count of each of the DMA rec-counters 1 and 2 in each of DMA0 to DMAn makes it possible to find the DMA currently being used.

As shown in FIG. 151, when a medium is installed into the information recording and reproducing apparatus, the apparatus searches for a DMA where the count of each of the DMA rec-counters 1 and 2 is 0 in order to know the position of the DMA currently being used (STT21). If a DMA (e.g., DMA2) where the count of each of the DMA rec-counters 1 and 2 is 0 has been found (YES in STT22), the DMA (e.g., DMA1) immediately before the found DMA is recognized as the DMA currently being used (STT24). If a DMA (e.g., DMA2) where the count of each of the DMA rec-counters 1 and 2 is 0 has not been found (NO in STT22), the last DMA (e.g., DMAn) is recognized as the DMA currently being used (STT23).

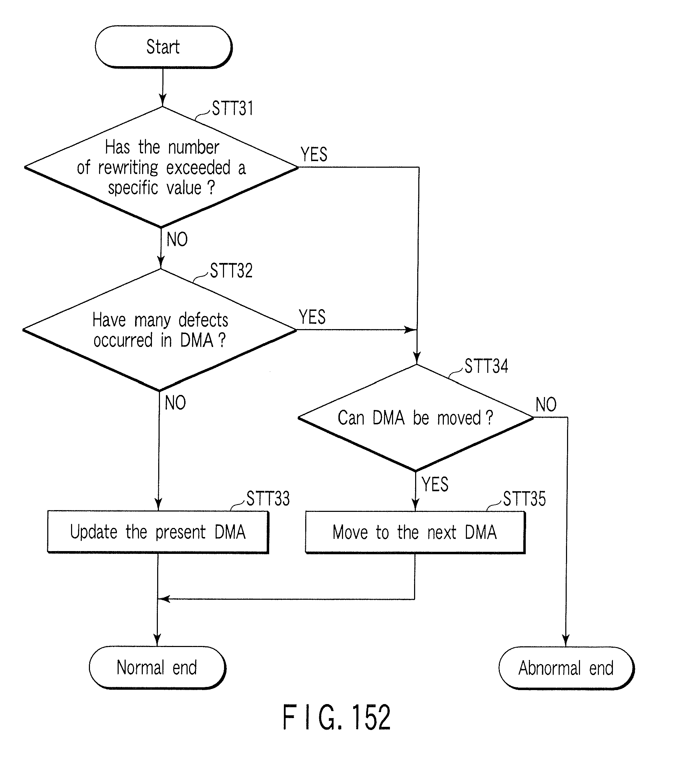

FIG. 152 is a flowchart to help explain the process of registering and updating DMAs. The process of registering and updating DMAs is carried out at the main control section 20 of the information recording and reproducing apparatus of FIG. 156. On the basis of the count of the DMA counter in the DMA, the main control section 20 determines whether the number of times the DMA currently being used was rewritten has exceeded a specific value (STT31). If having determined that the number has exceeded the specific value (YES in STT31), the main control section 20 determines whether the defect information stored in the DMA currently being used can be moved (or whether there is a spare DMA). If having determined that the defect information can be moved (YES in STT34), the main control section 20 moves the defect information stored in the DMA currently being used (STT35) to a DMA set as the next destination. At this time, the necessary values are taken over. For example, in the case of FIG. 149, the value of the DDS/PDL update counter and that of the SDL update counter are taken over.

Even when the number of rewriting is less than the specified value (NO in STT31), if the main control section 20 has sensed that many defects have occurred in the DMA (YES in STT 32), it determines whether the defect information stored in the DMA currently being used can be moved (or whether there is a spare DMA). If having determined that the defect information can be moved (YES in STT 34), the main control section 20 moves the defect information stored in the DMA currently being used (STT35) to a DMA set as the next destination. If having determined that the defect information cannot be moved (NO in STT34), the main control section ends the process abnormally.

When the number of times the DMA currently being used was rewritten is less than the specified value (NO in STT31) and when many defects have not occurred in the DMA currently being used (NO in STT32), the DMA currently being used is updated as needed (STT33).

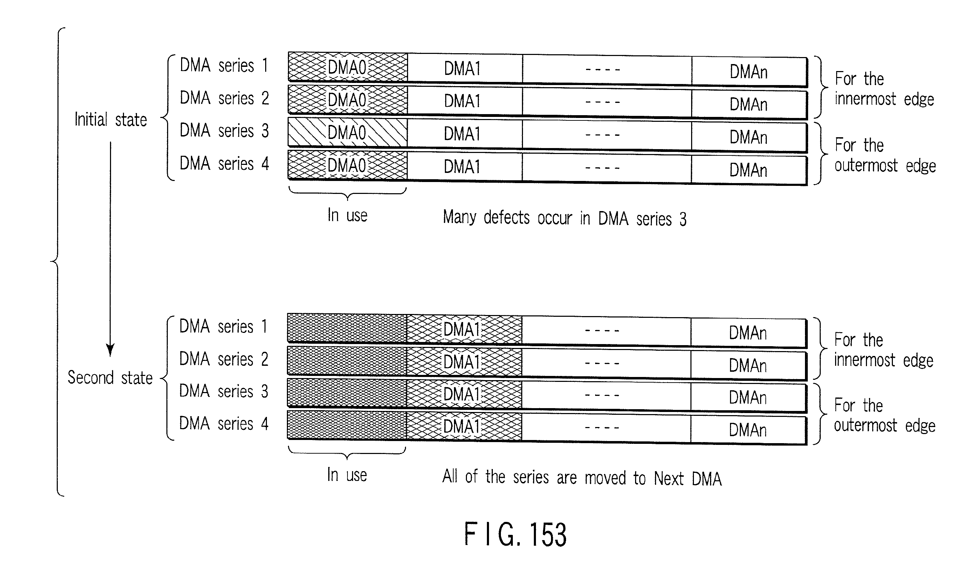

FIG. 153 is a state transition diagram to help explain a method of using a plurality of DMA series. As shown in FIG. 148, use of a single DMA series has been explained. That is, a case where a DMA series includes DMA0 to DMAn has been explained. As shown in FIG. 153, use of a plurality of DMA series will be explained. That is, a case where each of said plurality of DMA series includes DMA0 to DMAn will be explained.

As shown in FIG. 153, for example, an information storage medium with four DMA series will be explained. Four DMA series are placed in different places. For example, DMA series 1 and 2 are placed in the innermost circumference of the medium and DMA series 3 and 4 are placed in the outermost circumference of the medium. Suppose it is sensed that many defects have occurred in, for example, DMA series 3 among DMA series 1 to 4 (in the initial state of FIG. 153). The main control section of the information recording and reproducing apparatus of FIG. 156 senses that many defects have occurred. As a result of the detection of defects, the defect management information in the DMAs currently being used (e.g., DMA0) in all of the DMA series is moved (or recorded) to the next DMA (e.g., DMA1) (for replacement) (the second state in FIG. 153). The main control section of the information recording and reproducing apparatus of FIG. 156 moves (or records) the defect management information (for replacement).

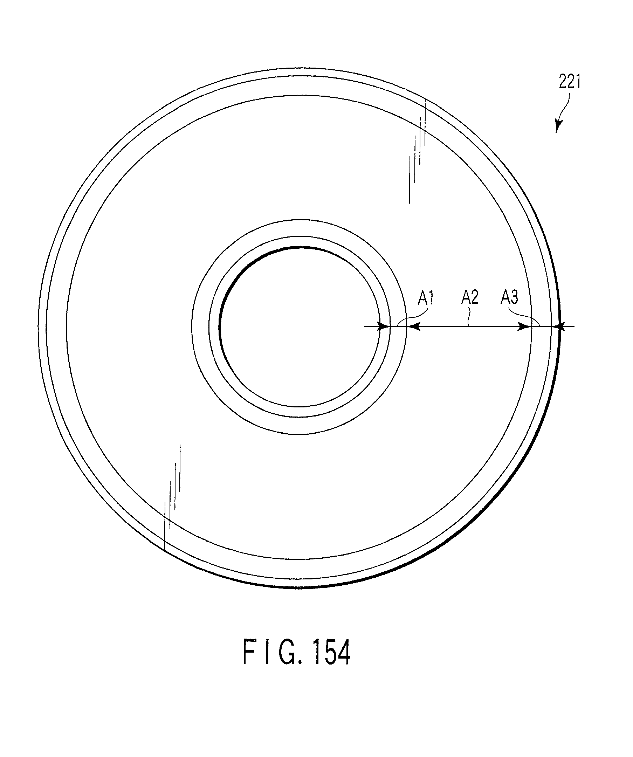

FIG. 154 is a diagram to help explain the lead-in area and lead-out area in which a plurality of DMA series are provided. As shown in FIG. 154, the medium (optical disk) 1 has a lead-in area A1 in the innermost circumference and a lead-out area A3 in the outermost circumference. Moreover, the medium 1 has a data area A2 between the lead-in area A1 and lead-out area A3. The data area A2 includes a user area UA and a spare area SA.

The lead-in area A1 in the innermost circumference includes a first DMA series (DMA series 1, 2) and the lead-out area A3 in the outermost circumference includes a second DMA series (DMA series 3, 4). Placing DMA series in the innermost and outermost circumferences causes a plurality of DMA series to be arranged in such a manner that they are separated physically from one another. As a result, the DMAs are more resistant to defects.

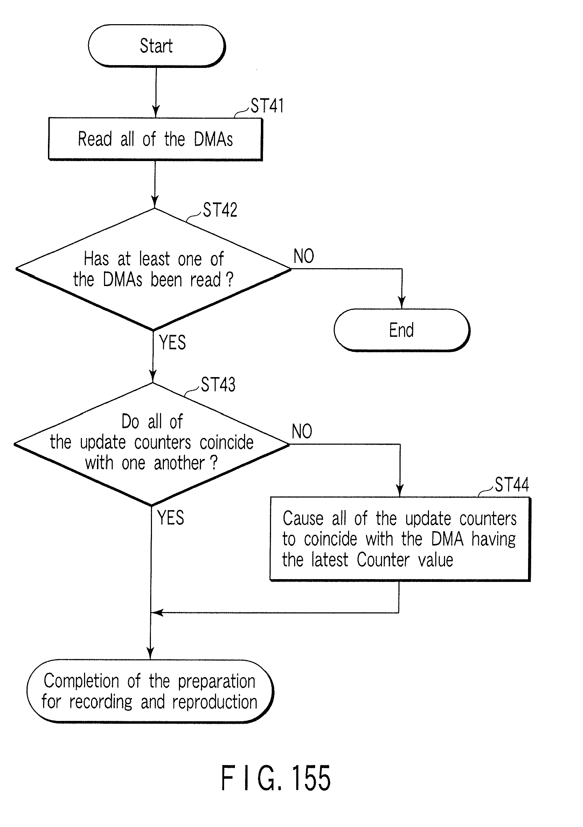

FIG. 155 is a flowchart to help explain the process of reproducing data from the medium on which a plurality of DMA series have been arranged. When the medium is installed into the information recording and reproducing apparatus of FIG. 156, the apparatus searches for the DMA currently being used from all of the DMA series and reads the defect management information from the DMA currently being used (ST41). Specifically, when this is applied to the case of FIG. 153, the apparatus searches for the DMA currently being used (e.g., DMA1) from DMA series 1, the DMA currently being used (e.g., DMA1) from DMA series 2, the DMA currently being used (e.g., DMA1) from DMA series 3, and further the DMA currently being used (e.g., DMA1) from DMA series 4. The process of searching for the DMA currently being used is as described in FIG. 151.

When the defect management information cannot be read from any DMA because of the influence of defects or the like (NO in ST42), this process is ended abnormally. When the defect management information has been read from the DMA, the count of the DDS/PDL update counter and that of the SDL update counter in the DMA are checked. The same information must have been recorded in the DMA currently being used in each of the DMA series. Therefore, the count of the DDS/PDL update counter and that of the SDL update counter in one DMA must coincide with those in another DMA. However, if a defect occurs in the middle of recording information in each of the DMA series sequentially, some of the DMAs may not be updated. Therefore, when the count of the update counter in each of the DMAs currently being used in the plurality of DMA series differs from one another (NO in ST43), the other DMAs are caused to coincide with the DMA having the latest count (ST44). This completes the preparation for recording and reproduction.

FIG. 156 schematically shows the configuration of an information recording and reproducing apparatus according to the present invention. The information recording and reproducing apparatus records user data onto the medium (or optical disk) 1 explained above or reproduces the user data recorded on the medium 1. The information recording and reproducing apparatus further carries out a replacing process as needed.

As shown in FIG. 156, the information recording and reproducing apparatus includes a modulation circuit 2, a laser control circuit 3, a laser 4, a collimate lens 5, a polarization beam splitter (hereinafter, referred to as PBS) 6, a 1/4 wave plate 7, an objective 8, a condenser lens 9, a photodetector 10, a signal processing circuit 11, a demodulation circuit 12, a focus error signal generating circuit 13, a tracking error signal generating circuit 14, a focus control circuit 16, a tracking control circuit 17, and a main control section 20.

The main control section 20 controls the drive section. The drive section includes the modulation circuit 2, laser control circuit 3, laser 4, collimate lens 5, polarization beam splitter (PBS) 6, 1/4 wave plate 7, objective 8, condenser lens 9, photodetector 10, signal processing circuit 11, demodulation circuit 12, focus error signal generating circuit 13, tracking error signal generating circuit 14, focus control circuit 16, and tracking control circuit 17.

First, the way the information recording and reproducing apparatus records data will be explained. The recording of data is controlled by the main control section 20. The recording data (data symbol) is modulated by the modulation circuit 2 into a specific channel bit train. The channel bit train corresponding to the recording data is converted into a laser driving waveform by the laser control circuit 3. The laser control circuit 3 pulse-drives the laser 4 and records the data corresponding to the desired bit train onto the medium 1. The recording optical beam emitted from the laser 4 becomes parallel light at the collimate lens 5 and enters and passes through the PBS 6. The beam passed through the PBS 6 passes through the 1/4 wave plate 7 and is gathered by the objective 8 at the information recording surface of the medium 1. The gathered beam is subjected to focus control by the focus control circuit 16 and tracking control by the tracking control circuit 17, thereby keeping the best microscopic spot on the recording surface.

Next, the reproduction of data by the information recording and reproducing apparatus will be explained. The reproduction of data is controlled by the main control section 20. According to a data reproducing instruction from the main control section 20, the laser 4 irradiates a reproducing beam. The reproducing beam irradiated from the laser 4 is turned into a parallel beam at the collimate lens 5. The parallel beam enters and passes through the PBS 6. The beam passed through the PBS 6 passes through the 1/4 wave plate 7 and is gathered by the objective 8 at the information recording surface of the medium 1. The gathered beam is subjected to focus control by the focus control circuit 16 and tracking control by the tracking control circuit 17, thereby keeping the best microscopic spot on the recording surface. At this time, the reproducing beam irradiated on the medium 1 is reflected by the reflecting film or reflective recording film at the information recording surface. The reflected beam passes through the objected 8 in the opposite direction and becomes a parallel beam again. The reflected beam passes through the 1/4 wave plate 7, has polarized light perpendicular to the incident light, and is reflected by the PBS 6. The beam reflected by the PBS 6 is turned into a convergent beam by the condenser lens 9 and enters the photodetector 10. The photodetector 10 is composed of, for example, 4-quadrant photodetectors. The beam which entered the photodetector 10 is converted photoelectrically into an electric signal, which is then amplified. The amplified signal is equalized and binarized at the signal processing circuit 11. The resulting signal is sent to the demodulation circuit 12. The demodulation circuit 12 demodulates the signal according to a specific modulating method, thereby outputting the reproduced data.

Furthermore, on the basis of a part of the electric signal output from the photodetector 10, the focus error signal generating circuit 13 generates a focus error signal. Similarly, on the basis of a part of the electric signal output from the photodetector 10, the tracking error signal generating circuit 14 generates a tracking error signal. The focus control circuit 16 controls the focus of a beam spot on the basis of the focus error signal. The tracking control circuit 17 controls the tracking of the beam spot on the basis of the tracking error signal.

Here, a replacing process carried by the main control section 20 will be explained. When the medium is formatted, it is certified. At this time, the main control section 20 detects defects in the medium. Defect management information on the defects detected at this time, or on the initial defects, is recorded in the PDL of the DMA of the medium by the main control section 20. The defect management information includes the address of the replaced sector and the address of the replacing sector. In normal recording, too, the main control section 20 detects defects in the medium. Defect management information on the defects detected at this time, or on the secondary defects, is recorded in the SDL of the DMA of the medium by the main control section 20. The defect management information includes the address of the begin sector of the replaced ECC block and the address of the begin sector of the replacing ECC block. On the basis of the PDL and SDL, access to the replaced area is regarded as access to the replacing area. Furthermore, the main control section 20 controls the process of searching for the DMA currently being used shown in FIG. 151, the process of registering and updating DMAs shown in FIG. 152, the reproducing process shown in FIG. 155, and the like.

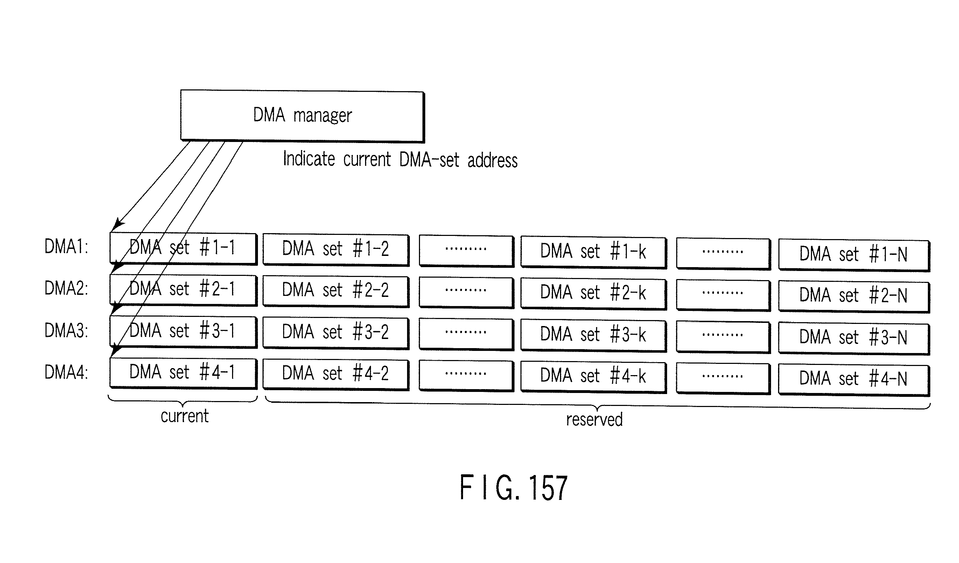

Next, referring to FIGS. 157 to 176, a second defect management method will be explained. The second defect management method sticks to the defect management shown in FIG. 153 and uses a DMA manager. In the explanation of the second defect management method, the parts overlapping with those of the first defect management method shown in FIGS. 142 to 156 will be described, referring to the already explained drawings as needed.

An information storage medium of the present invention has a rewritable area. The rewritable area includes a plurality of DMAs, a plurality of manager storage areas, and a user area. On the medium shown in FIG. 154, the rewritable area is included in lead-in area A1, data area A2, and lead-out area A3. The same defect management information is stored in a plurality of DMAs, which increases the resistance of DMAs to defects.

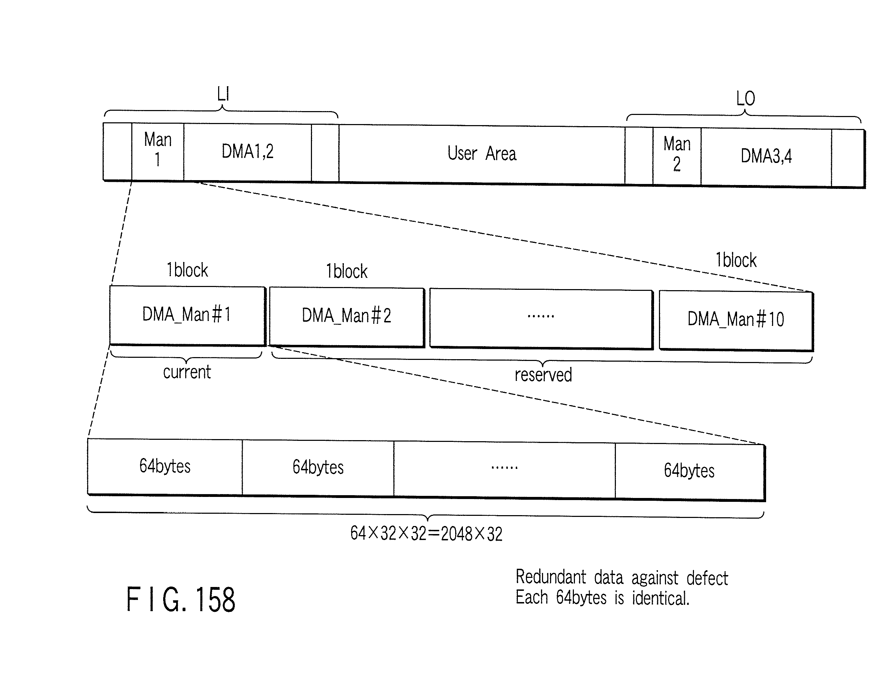

As shown in FIGS. 157 and 158, for example, the information storage medium includes DMA1, DMA2, DMA3, and DMA4. More specifically, DMA1 and DMA2 are arranged in the lead-in area A1 (lead-in area LI shown in FIG. 158) placed in the innermost circumference of the information storage medium of FIG. 154. DMA3 and DMA4 are arranged in the lead-out area A3 (lead-out area LO shown in FIG. 158) placed in the outermost circumference of the information storage medium. Each of the DMAs (DMA1, DMA2, DMA3, and DMA4) includes a plurality of DMA reserved areas (DMAset#1-1 to DMAset#1-N, DMAset#2-1 to DMAset#2-N, DMAset#3-1 to DMAset#3-N, DMAset#4-1 to DMAset#4-N). In the initial state, the present (or latest) defect management information is stored in the first DMA reserved area (DMAset#1-1, DMAset#2-1, DMAset#3-1, DMAset#4-1) included in each DMA. If the first DMA reserved area (e.g., DMAset#1-1) included in a certain DMA (e.g., DMA1) corresponds to a defective area, the defect management information stored in the first reserved DMA areas (DMAset#1-1, DMAset#2-1, DMAset#3-1, DMAset#4-1) of all the DMAs (DMA1 to DMA4) is transited to the second reserved DMA areas (DMAset#1-2, DMAset#2-2, DMAset#3-2, DMAset#4-2) of all the DMAs (DMA1 to DMA4).

As described above, on the information storage medium of the invention, the DMA reserved area currently being used is transited. In this connection, there is provided a DMA manager for searching for the DMA reserved area currently being used among a plurality of DMA reserved areas in a short time. That is, as shown in FIG. 158, the information storage medium of the invention has manager storage areas (Man1, Man2) for storing a DMA manager. The DMA manager manages the address of the DMA reserved area currently being used. In other words, the manager storage areas are areas which store position information on the DMA reserved area currently being used.

FIG. 157 is a diagram to help explain the way the DMA manager manages the address of the DMA reserved area currently being used. DMA1 includes an N number of DMA reserved areas (DMAset#1-1 to DMAset#1-N). Similarly, DMA2 includes an N number of DMA reserved areas (DMAset#2-1 to DMAset#2-N). Similarly, DMA3 includes an N number of DMA reserved areas (DMAset#3-1 to DMAset#3-N). Similarly, DMA4 includes an N number of DMA reserved areas (DMAset#4-1 to DMAset#4-N).

For example, suppose the first DMA reserved areas (DMAset#1-1, DMAset#2-1, DMAset#3-1, DMAset#4-1) are now being used. In this case, the DMA manager has position information (address) representing the positions (e.g., begin positions) of the first DMA reserved areas (DMAset#1-1, DMAset#2-1, DMAset#3-1, DMAset#4-1).

As shown in FIG. 158, for example, the manager storage areas (Man1, Man2) are placed in the lead-in area and lead-out area. The same information is stored in the manager storage area (Man1) placed in the lead-in area and in the manager storage area (Man2) placed in the lead-out area.

Furthermore, each of the manager storage areas (Man1, Man2) has a plurality of manager reserved areas, taking measures to deal with defects in the DMA manager. As shown in FIG. 158, for example, one manager storage area (Man1) has 10 manager reserved areas (DMA_Man#1 to DMA_Man#10). Similarly, another manager storage area (Man2) also has 10 manager reserved areas (DMA_Man#1 to DMA_Man#10).

For example, in the initial stage, position information about the DMA reserved area currently being used is stored in the first manager reserved area (DMA_Man#1) included in each of the manager storage areas (Man1, Man2). If the first manager reserved area (DMA_Man#1) included in a certain manager storage area (Man1) corresponds to a defective area as a result of overwriting, the position information stored in the first manager reserved area (DMA_Man#1) of all the manager storage areas (Man1, Man2) are transited (copied) to the second manager reserved area (DMA_Man#2) of all the manager storage areas (Man1, Man2).

Here, the DMA manager is less frequently rewritten than the DMA. Therefore, the manager storage areas (Man1, Man2) which store the DMA manager, or the manager reserved areas, are less liable to become defective due to overwriting than the DMAs. However, the DMA manager may not be read from the manager reserved area because of flaws or fingerprints. To overcome this problem, a plurality of pieces of the same content (or position information on the DMA currently being used) are given to a single DMA manager. That is, the same content is written in the manager reserved area a plurality of times. This enables the data (or position information on the DMA currently being used) to be read, even when error correction cannot be made in the ECC block.

One DMA manager is stored in one manager reserved area. The manager reserved area is composed of one ECC block. In one ECC block constituting a manager reserved area, the same content is written in units of 64 bytes (or in units of two physical segment blocks) a plurality of times. For example, position information on the DMA reserved area currently being used is written in units of 64 bytes a plurality of times. Suppose one ECC block is composed of 32 sectors. In addition, suppose one sector contains 2048 bytes. That is, suppose the size of one ECC block is 2048 bytes * 32 sectors. In this case, 32 items of the same content are recorded in each sector. That is, in one ECC block, the same content is recorded repeatedly 32 * 32 times. This enables the correct information (or position information on the DMA currently being used) to be read with a high probability, provided that the ECC block can be partially corrected, even when the ECC block has so many defects that it cannot be corrected at all. ECC blocks will be explained using FIGS. 34 to 38.

While multiple writing in units of 64 bytes has been explained, the present invention is not limited to this. As shown in FIGS. 34 to 38, one data line in one ECC block contains 172 bytes. Even if errors cannot be corrected throughout the entire ECC block, errors may be corrected in units of a 172-byte data line. Taking this into account, the same information is written a plurality of times in units of a data size (e.g., 64 bytes) sufficiently smaller than 172 bytes. This makes it possible to obtain the correct data by making error correction in data lines, even when errors cannot be corrected throughout the entire ECC block.

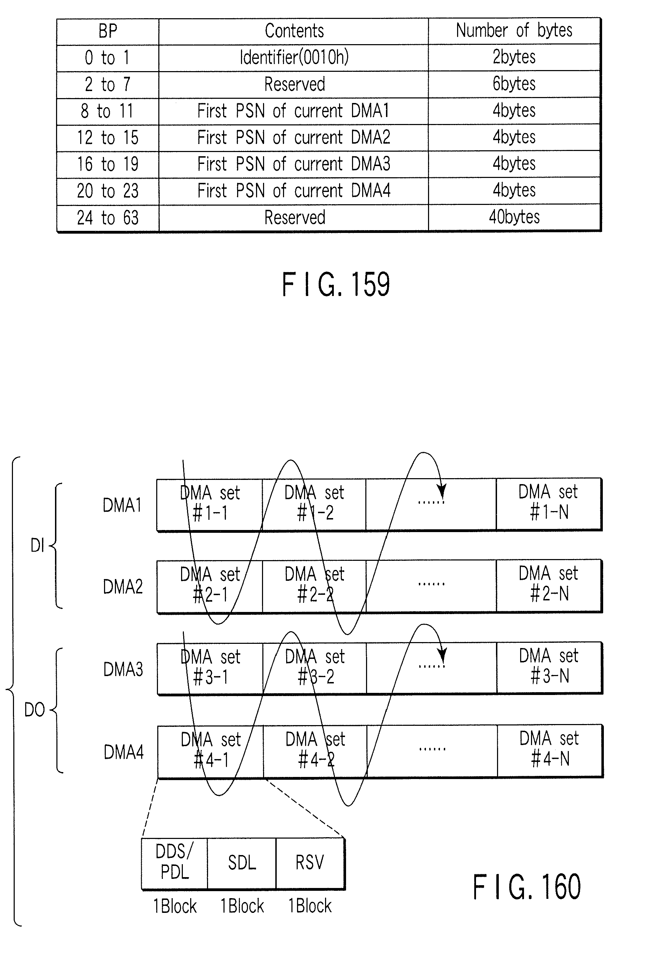

FIG. 159 shows an example of the DMA manager shown in FIG. 158. As shown in FIG. 159, the DMA manager manages the addresses of four DMAs currently being used. For example, the DMA manager manages the addresses DMAset#1-1, DMAset#2-1, DMAset#3-1, DMAset#4-1. If the position of the DMAs currently being used can be uniquely determined, area numbers may be written instead of addresses. In the example of FIG. 159, the DMA manager manages the first PSN (physical sector number) of the DMA currently being used.

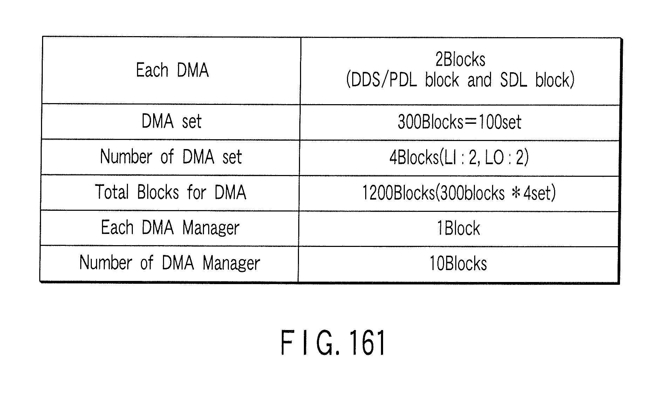

FIG. 160 shows the configuration of four DMAs (DMA1 to DMA4). FIG. 161 shows the relationship between DMAs and an ECC block. As shown in FIG. 160, one DMA reserved area includes a DDS/PDL block, an SDL block, and an RSV (reserved) block. The RSV block is a block for separating successive DMA reserved areas physically from one another to avoid a chain of defects. That is, actually, as shown in FIG. 161, in the DMA reserved area, a DDS/PDL block and an SDL block are stored.

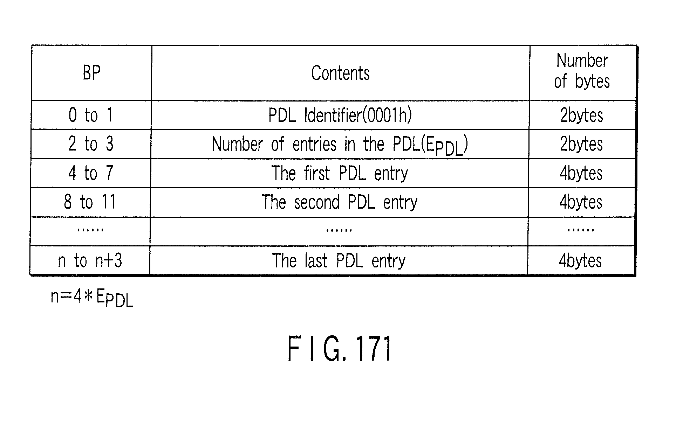

FIG. 171 shows the contents of the PDL. The PDL identifier at byte positions 0 to 1 is set to 0001h. The number of entries in the PDL is written in byte positions 2 to 3. The PDL entry is composed of 4 bytes. A defective physical sector number is written in bit b0 to bit b23. An entry type is written in bit B30 and bit B31. The entry type indicates that 00b is a primary defect list. The PDL allows up to 15871 entries ((2048 * 31 - 4)/4 = 15871).

In the PDL, each DDS/PDL physical segment block is always written into, even if it is empty. The PDL includes the entries of all the defective physical segment blocks shown in formatting. Each entry represents the entry type and the first physical sector number of the defective physical segment block. The physical sector numbers are listed in ascending order. The PDL is written using the smallest number of necessary physical sectors and begins with byte position 0 of the first physical sector of the PDL. FFh is set in the last physical sector unused in the PDL. The unused physical sectors in the DDS/PDL physical segment block are filled with FFh. The entry has the entry type and the defective physical sector number. The entry type shows the origin of the defective physical segment block. If the entry type is 00b, the origin is P-list. If the entry type is 10b, the origin is G1-list. If the entry type is 11b, the origin is G2-list.

P-list is a list of defective physical segment blocks defined by the disk manufacturer. G1-list is a list of defective physical segments found in the verifying process. G2-list is a list of defective physical segment blocks transferred from the SDL without the verifying process.

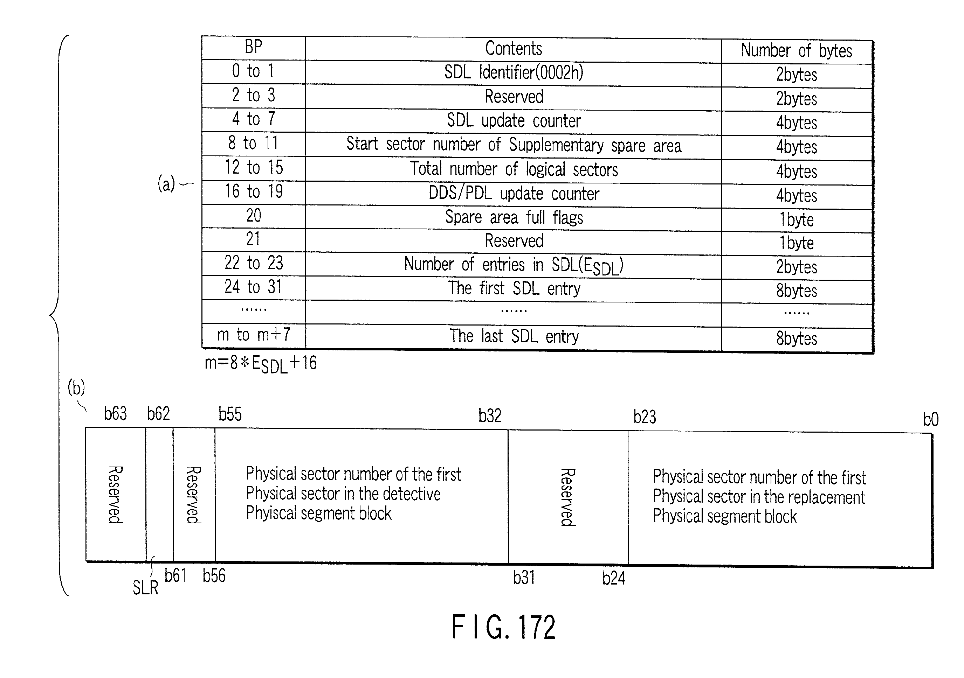

FIG. 172, (a) shows the contents of the SDL (Secondary Defect List). In the SDL, each SDL physical segment block is always written into, even if it is empty. The SDL includes entries. Each entry includes the physical sector numbers of the first physical sectors of defective physical segment blocks and the physical sector numbers of the first physical sectors of spare physical segment blocks for replacement. Each of the entries of the SDL is composed of 8 bytes. Of the 8 bytes, 3 bytes are used for the physical sector numbers of the first physical sectors of defective physical segment blocks, another 3 bytes are used for the physical sector numbers of the first physical sectors of spare physical segment blocks for replacement, one bit in one byte is used for SLR, and the remaining seven bits and the remaining one byte are secured for reservation.

The physical sector numbers are listed in ascending order. The SDL is written using the smallest number of necessary physical segment blocks.

If spare physical segment blocks listed in the SDL are found to be defective later, a direct pointer method is applied to register information in the SDL. In this method, the physical sector number of the first physical sector of a defective spare physical segment block is changed to the physical sector number of the first physical sector of a new spare physical segment in the SDL entry in which the defective spare physical segment block has been registered, thereby revising the SDL entry. Therefore, the number of entries in the SDL does not change even if there are deteriorated physical segment blocks.

The SDL enables a maximum of 8189 entries ((2048 * 31 - 24) /8 = 8189).

FIG. 172, (b) shows another embodiment of the data structure of one of a plurality of SDL entries included in the SDL. Each of the SDL entries is a set of eight bytes. In the 62nd bit, "0" or "1" is written. When "0" is written in the 62nd bit, this means that a defective physical segment block together with a spare physical segment block has been replaced. When "1" is written in the 62nd bit, this means that no replacing process has been carried out. In bit 32 to bit 55, the physical sector number of the first physical sector in the defective physical segment block is written. In bit 0 to bit 23, the physical sector number of the first physical sector in the physical segment block to be replaced is written.

Each of the DMAs (DMA1, DMA2, DMA3, DMA4) includes, for example, 100 DMA reserved areas. That is, a total of 400 DMA reserved areas have been secured. One DMA reserved area is composed of 3 blocks as described above. Therefore, a total of 1200 blocks have been secured.

As described above, DMA1 and DMA2 are arranged in the lead-in area. The same defect management information is recorded in the k-th DMA reserved area included in DMA1 and in the k-th DMA reserved area included in DMA2. That is, the k-th DMA reserved area included in DMA1 and the k-th DMA reserved area included in DMA2 are used simultaneously. Specifically, the k-th DMA reserved area included in DMA1 and the k-th DMA reserved area included in DMA2 can be accessed more efficiently, as they are closer to each other physically. Therefore, a physical arrangement is used which places the k-th DMA reserved area included in DMA1 and the k-th DMA reserved area included in DMA2 close to each other.

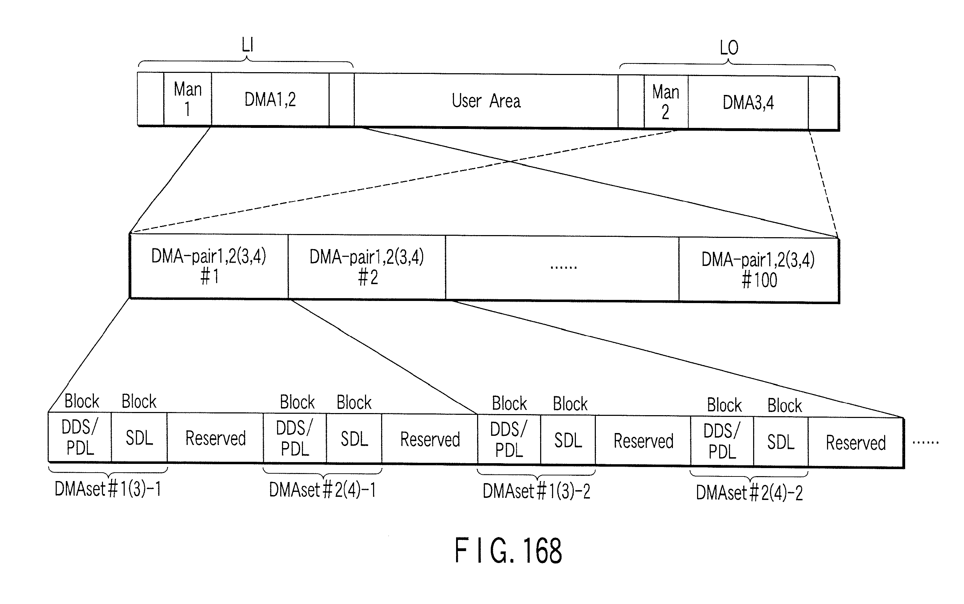

For example, as shown in FIGS. 160 and 168, the first DMA reserved area included in DMA1 (DMAset#1-1) → the first DMA reserved area included in DMA2 (DMAset#2-1) → the second DMA reserved area included in DMA1 (DMAset#1-2) → the second DMA reserved area included in DMA2 (DMAset#2-2) → ... → the N-th DMA reserved area included in DMA1 (DMAset#1-N) → the N-th DMA reserved area included in DMA2 (DMAset#2-N) are arranged in that order. This makes it possible to shorten the time required to read defect management information from the DMA reserved areas currently being used included in DMA1 and DMA2. Moreover, the time required to carry out the process of transiting (copying) defect management information on the DMA reserved areas included in DMA1 and DMA2 can be made shorter.

The same holds true for DMA3 and DM4 arranged in the lead-out area. Specifically, as shown in FIG. 160, the first DMA reserved area included in DMA3 (DMAset#3-1) → the first DMA reserved area included in DMA4 (DMAset#4-1) → the second DMA reserved area included in DMA3 (DMAset#3-2) → the second DMA reserved area included in DMA4 (DMAset#4-2) → ... → the N-th DMA reserved area included in DMA3 (DMAset#3-N) → the N-th DMA reserved area included in DMA4 (DMAset#4-N) are arranged in that order.

When the access speed is considered unimportant, the individual DMA reserved areas may be arranged in such a manner that they are separated physically from one another. This makes it possible to construct DMAs resistant to defect factors, such as flaws or fingerprints. According to the balance between the access speed and the reliability, the physical arrangement of DMA1 to DMA4 can be determined.

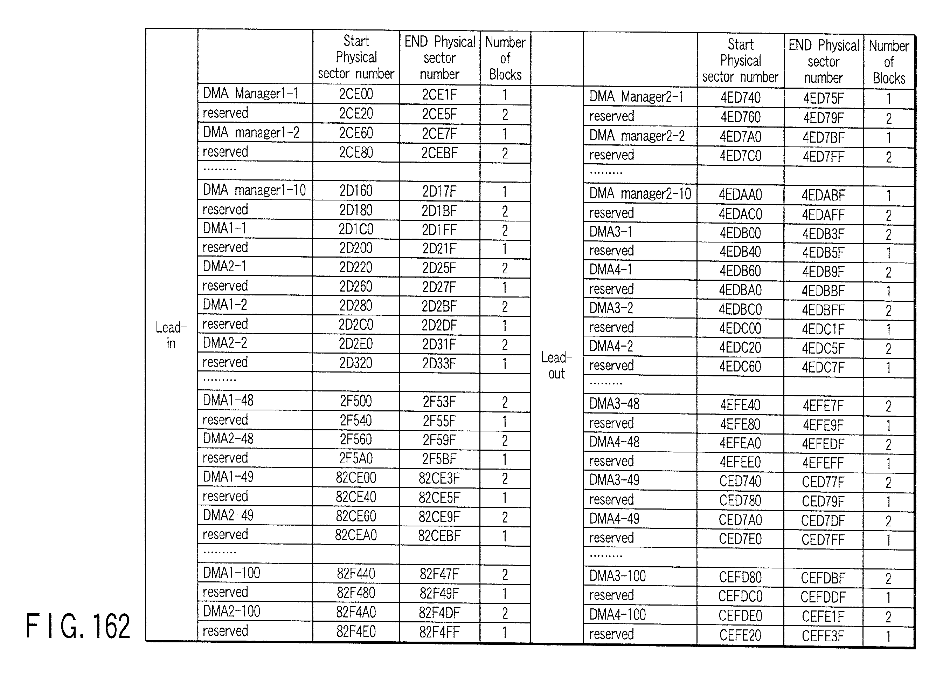

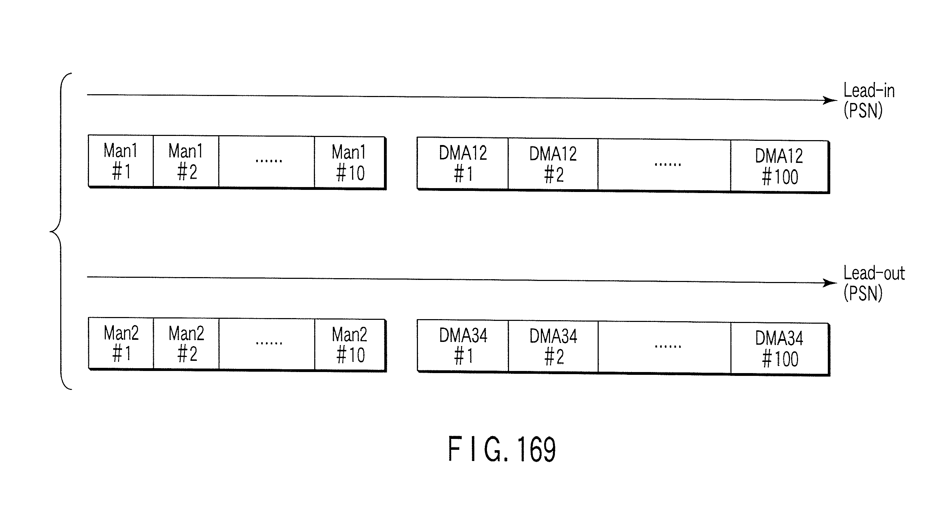

FIGS. 162 and 169 show a DMA manager and the arrangement of DMAs, respectively. The DMA manager is stored in the manager reserved areas (DMA Manager 1-1 to DMA Manager 1-10) in the lead-in area and in the manager reserved areas (DMA Manager 2-1 to DMA Manager 2-10) in the lead-out area. The DMAs are arranged in such a manner that two DMAs (DMA1, DMA2) are put in the lead-in area and two DMAs (DMA3, DMA4) are put in the lead-out area.

There are 100 DMA sets. Each of the DMA sets is composed of DMA1, DMA2, DMA3, and DMA4. In the DMA sets, DMA#1 to DMA#100 are used. If the currently used DMA set (current DMA set) is detected as a defective DMA set, the DMA set is replaced with the next DMA set. The DMA set currently being used is shown by the DMA manager. There are 10 DMA manager sets. Each of the manager sets is composed of DMA manager 1 and DMA manager 2. In each of the DMA manager sets, DMA manager set #1 to DMA manager set #10 are used. If a defect has been detected in any one of the DMA managers in the DMA manager set currently being used, the DMA manager set is replaced with the next DMA manager set.

DMA1 and DMA2 are followed by two reserved physical segment blocks. The same holds true for DMA3 and DMA4. The first physical segment block in each DMA, which is called a DDS/PDL physical segment block, includes a disk definition structure (DDS) and a primary defect list (PDL). The second physical segment block, which is called an SDL physical segment block, includes a secondary defect list (SDL). The four DMAs have the same contents.

In the initialized disk, each of the DMAs includes the following contents. The first physical sector of each DDS/PDL physical segment block includes a DDS. The DDS will be explained later. The second physical sector of each DDS/PDL physical segment block is the first physical sector of the PDL. The first physical sector of each SDL physical segment block is the first physical sector of the SDL. The length of each of the SDL and PDL is determined by the number of entries included in each list.

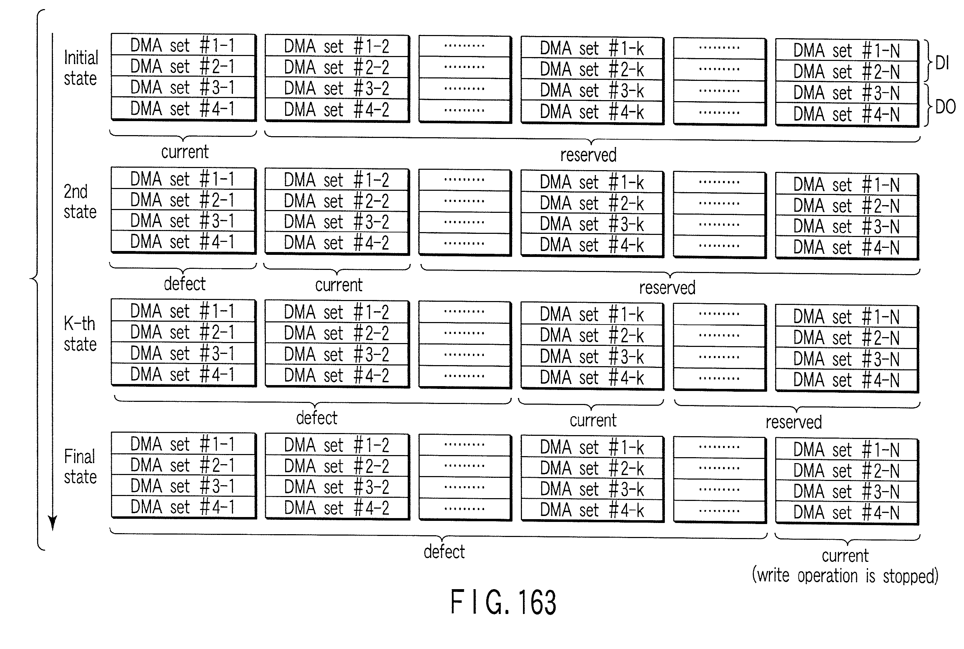

FIG. 163 shows the transition of DMAs. As shown in FIG. 163, four DMAs transit at the same time. As compared with a case where the DMAs transit separately, a simultaneous transition of four DMAs does not require the physical distance between the DMAs to be increased. This prevents the access capability from deteriorating. In addition, when a system failure occurs, a recovery will be made easily.

In the initial state, the begin (first) DMA reserved areas (DMAset#1-1, DMAset#2-1, DMAset#3-1, DMAset#4-1) of the individual DMAs (DMA1, DMA2, DMA3, DMA4) are used. If one or more of the begin DMA reserved areas (DMAset#1-1, DMAset#2-1, DMAset#3-1, DMAset#4-1) in the individual DMAs correspond to defective areas, the defect management information is transited to the second DMA reserved areas (DMAset#1-2, DMAset#2-2, DMAset#3-2, DMAset#4-2) in the individual DMAs. Similarly, the defect management information is transited in the subsequent DMA reserved areas. Then, after the defect management information is transited to the N-th DMA reserved areas (DMAset#1-N, DMAset#2-N, DMAset#3-N, DMAset#4-N) in the individual DMAs, the recording operation is inhibited. Thereafter, the medium is used as a reproduce-only medium.

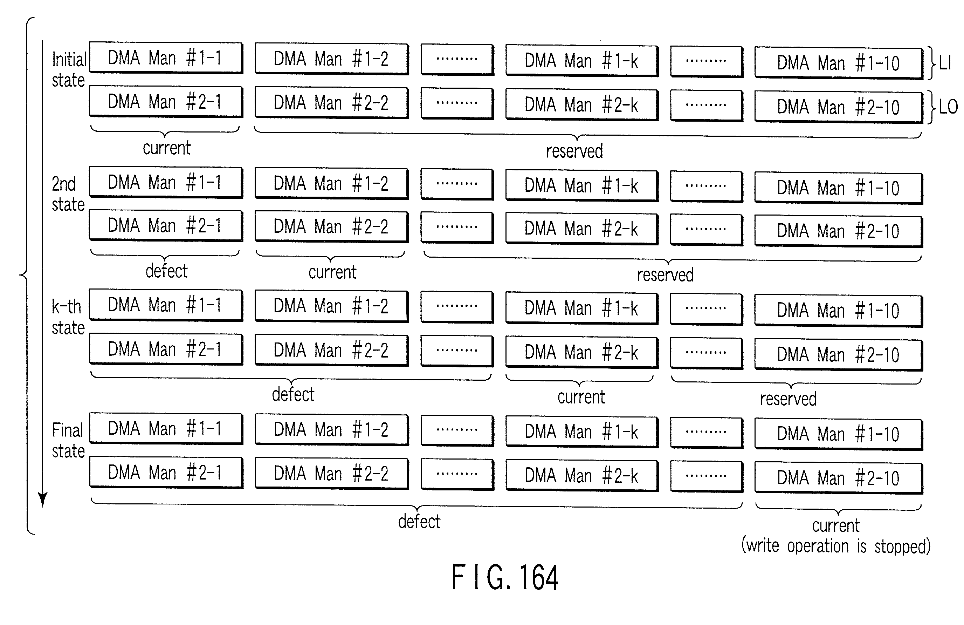

FIG. 164 shows the transition of DMA managers. The DMA managers transit as the DMAs do. Specifically, in the initial state, the latest DMA manager is stored in the begin (first) manager reserved areas (DMA_Man#1-1, DMA_Man#2-1) of the individual manager storage areas (Man1, Man2). If one or more of the begin (first) manager reserved areas (DMA_Man#1-1, DMA_Man#2-1) in the individual manager storage areas correspond to defective areas, the DMA manager is transited to the second manager reserved areas (DMA_Man#1-2, DMA_Man#2-2) in the individual manager storage areas. Similarly, the DMA manager is transited in the subsequent manager reserved areas. Then, after the DMA manager is transited to the N-th manager reserved areas (DMA_Man#1-N, DMA_Man#2-N) in the individual manager storage areas, the recording operation is inhibited.

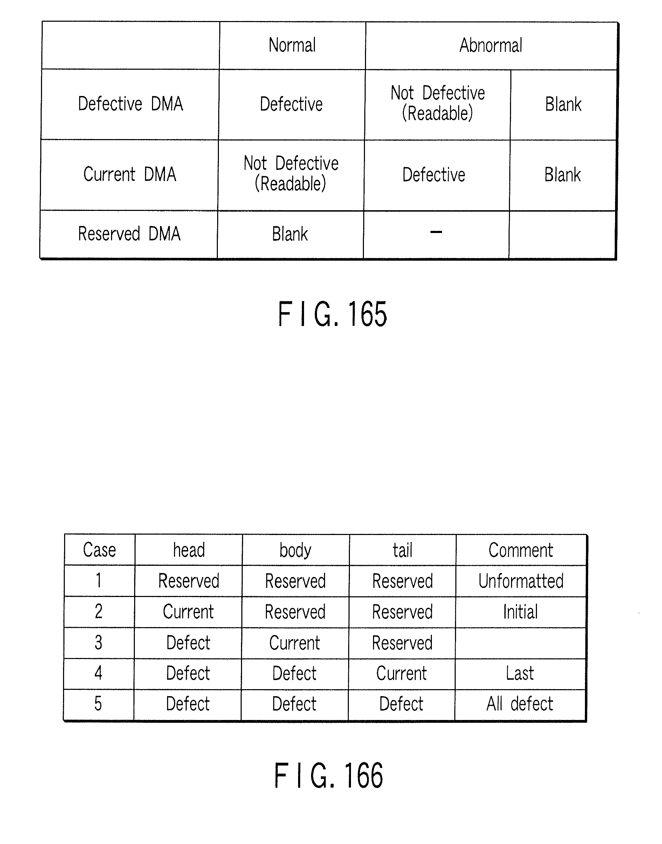

FIG. 165 shows the condition of each DMA. Once a DMA reserved area has been determined to correspond to a defective area, it will normally continue corresponding to the defective area. However, when a DMA reserved area happened to be determined to correspond to a defective area due to the adhesion of dirt or the like, it may, thereafter, be determined that the DMA reserved area does not correspond to a defective area. That is, even if once a DMA reserved area was determined to correspond to a defective area, the data may, thereafter, be read correctly.

Normally, if the first DMA reserved area corresponds to a defective area, the defect management information will be transited to the second DMA reserved area next to the first DMA reserved area. However, if the first DMA reserved area corresponds to a defective area for some reason, the defect management information may be transited to the third or fourth DMA reserved area. In this case, the second DMA reserved area is in the reserved state. That is, the second DMA reserved area is determined to be blank. Specifically, in the normal state, the defect management information can be read correctly from the DMA reserved area currently being used. However, in the abnormal state, there may be a case where the DMA reserved area currently being used corresponds to a defective area or is blank. An erroneous determination of a defective area will lead to a useless transition of DMA reserved areas. Therefore, the state of a DMA reserved area cannot be determined on the basis of only the state of reading.

FIG. 166 shows the state of a normal DMA reserved area. As shown in FIG. 166, for example, case 1 to case 5 can be considered. As described above, a DMA includes a plurality of DMA reserved areas. Of them, the begin DMA reserved areas (DMAset#1-1, DMAset#2-1, DMAset#3-1, DMAset#4-1) are referred to as "head," the last DMA reserved areas (DMAset#1-N, DMAset#2-N, DMAset#3-N, DMAset#4-N) are referred to as "tail," and the DMA reserved areas between the begin DMA reserved areas and the last reserved areas are referred to as "body."

Case 1 is an unformatted information storage medium. Specifically, all the DMA reserved areas corresponding to "head," "body," and "tail" are in the reserved state.

Case 2 is an initialized information storage medium. Specifically, the DMA reserved areas corresponding to "head" are currently being used and the DMA reserved areas corresponding to "body" and "tail" are in the reserved state.

Case 3 is an information storage medium in a state where DMA transition has occurred. Specifically, the DMA reserved areas corresponding to "head" are defective areas, specific ones of the DMA reserved areas corresponding to "body" are the areas currently being used, and the DMA reserved areas beyond the DMA reserved areas currently being used are in the reserved areas.

Case 4 is an information storage medium in the last stage. Specifically, the DMA reserved areas corresponding to "head" and "body" are defective areas. The DMA reserved areas corresponding to "tail" are the areas currently being used.

Case 5 is an information storage medium which cannot be used at all. Specifically, all the DMA reserved areas corresponding to "head," "body," and "tail" are defective areas.

To identify the reserved state easily, an identifier that indicates the reserved state may be stored in a reserved area.

The information recording and reproducing apparatus (main control section 20) of the present invention shown in FIG. 156 supports both of a table lookup method and an incremental method as a method of searching for the DMA currently being used. That is, an information storage medium of the invention uses a hybrid search format (HSF) to which both of the table lookup method and the incremental method can be applied. Normally, the main control section 20 searches for the DMA currently being used by the table lookup method. The table lookup method is to search for the DMA currently being used on the basis of the DMA manager. Should the DMA manager be unable to be read, the main control section 20 searches for the DMA currently being used by the incremental method. The incremental method is to check all the DMA reserved areas included in the DMA one after another to search for the DMA currently being used. That is, the incremental method is used as a recovery of the table lookup method.

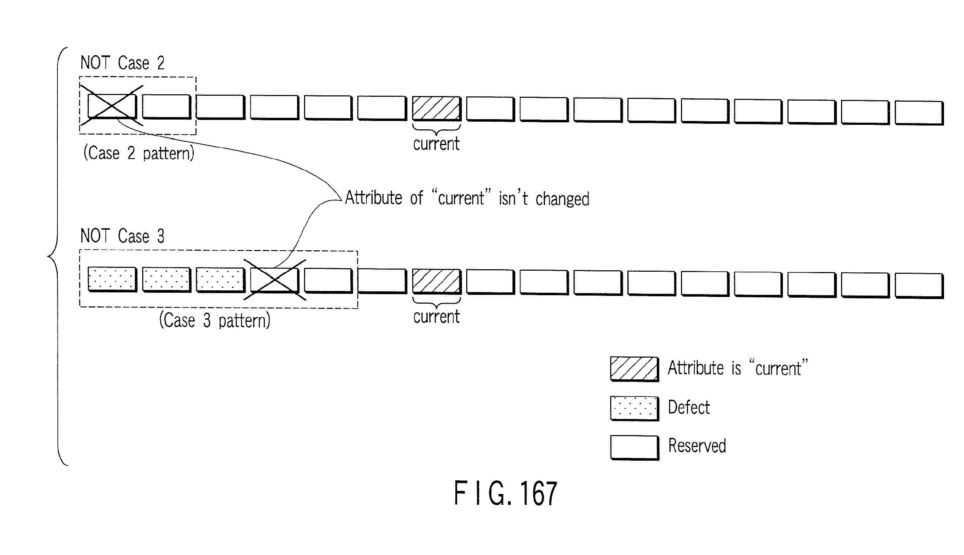

As shown in FIG. 165, if the DMA reserved area currently being used is searched for only by the incremental method, the DMA reserved area currently being used may be determined erroneously. FIG. 167 is a diagram to help explain a case where a DMA reserved area in the abnormal state is determined erroneously. For example, there may be a case where the defect management information stored in the first (begin) DMA reserved area is transited to the (2 + $\alpha$)-th DMA reserved area beyond the second DMA reserved area. Correctly, the defect management information stored in the first DMA reserved area should be transited to the second DMA reserved area. However, if the second DMA reserved area cannot be used because of a defect, such as an error in the address of the second DMA reserved area, the (2 + $\alpha$)-th DMA reserved area beyond the second DMA area is used. However, if the defect management information has been read from, for example, the first (begin) DMA reserved area after the transition, it is determined erroneously that the first (begin) DMA area is now being used. To prevent such an erroneous determination, it is necessary to make a determination with a sufficient margin when a search is done by the incremental method, which takes time to make a determination. To overcome this problem, the information recording and reproducing apparatus of the invention gives priority to the table lookup method capable of high-speed searching and, only when being unable to find the DMA reserved area currently being used by the table lookup method, does a search by the incremental method.

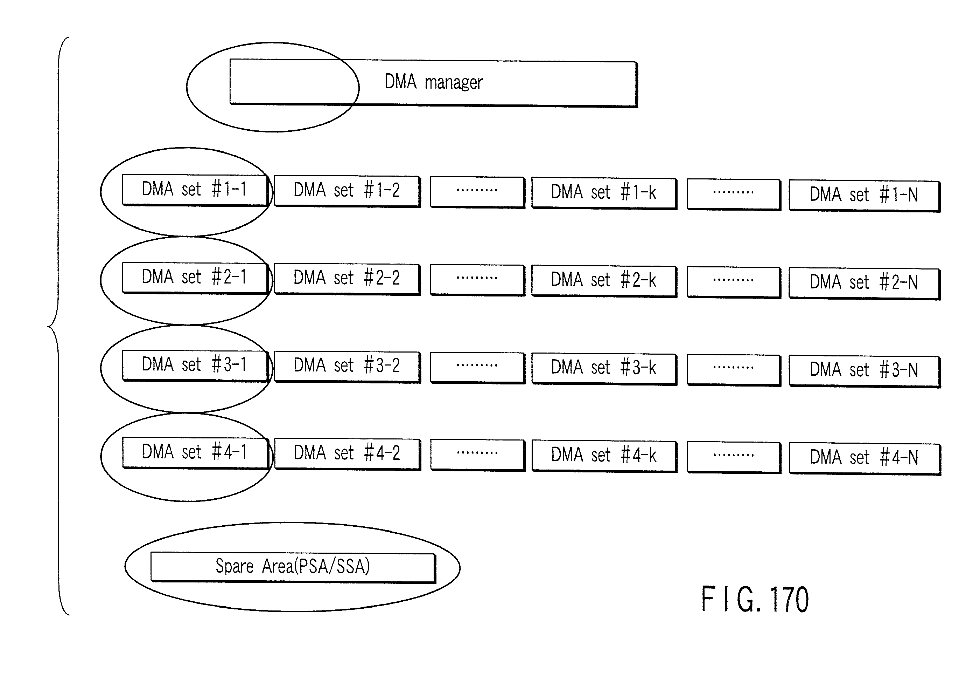

FIG. 170 shows an area required to be rewritten as a result of a replacing process. For example, when it is found that a specific area of the user area corresponds to a defective area, the information to be recorded in the specific area is recorded into a spare area for replacement. As a result, the address of the specific area (or the replaced area) and the address of the spare area (or the replacing area) are recorded as defect management information into the k-th DMA area of each of the DMAs (DMA1 to DMA4). The DMA manager is rewritten when the transition of DMAs occurs. Therefore, the frequency of the rewriting of the DMA manager is low.

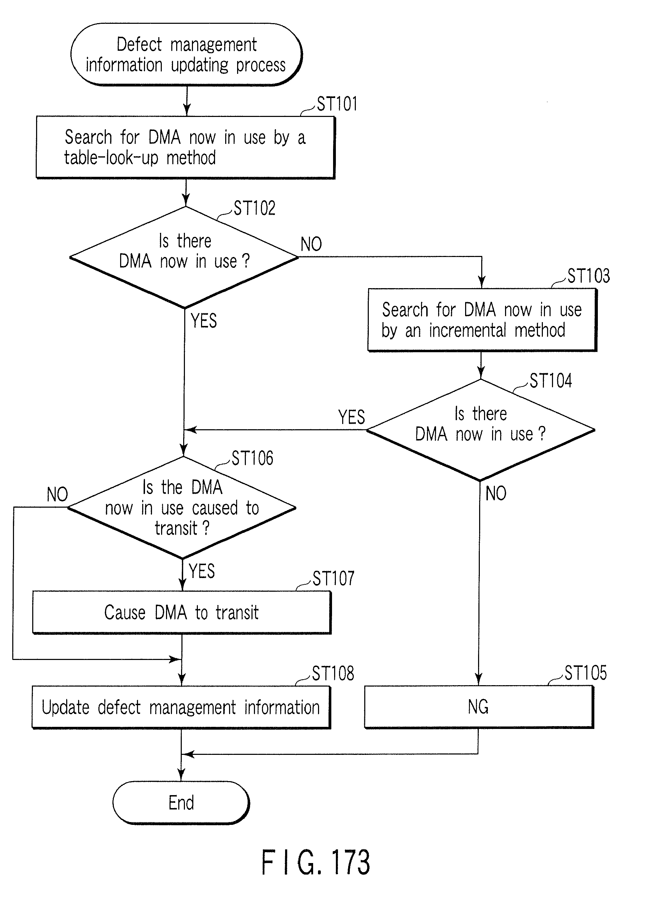

FIG. 173 is a flowchart to help give an outline of the process of updating DMAs. As shown in FIG. 173, first, the main control section 20 of the information recording and reproducing apparatus of FIG. 156 searches for the DMA currently being used by the table lookup method (ST101). Specifically, if being able to read position information representing the DMA reserved area currently being used from the latest DMA manager, the main control section 20 can find the DMA currently being used (YES in ST102). If being unable to read position information representing the DMA reserved area currently being used by the table lookup method (NO in ST102), the main control section 20 searches for the DMA reserved area currently being used by the incremental method (ST103). If being unable to find the DMA currently being used by incremental method (NO in the ST104), the DMA updating process is unsuccessful (ST105).

Having found the DMA reserved area currently being used (YES in ST102) (YES in ST104), the main control section 20 determines whether the transition of the DMA reserved area currently being used is necessary (ST106). When the DMA reserved area currently being used corresponds to a defective area, the main control section 20 determines that the transition of the DMA reserved area currently being used is necessary (YES in ST106).

If the transition is not necessary (NO in ST106), the main control section 20 updates the defect management information stored in the DMA reserved area currently being used as a result of a replacing process (ST108). If the transition is necessary (YES in ST106), the main control section 20 copies the defect management information stored in the DMA reserved area currently being used into a new DMA reserved area (or the next DMA reserved area) (ST107) and further updates the defect management information as a result of a replacing process (ST108).

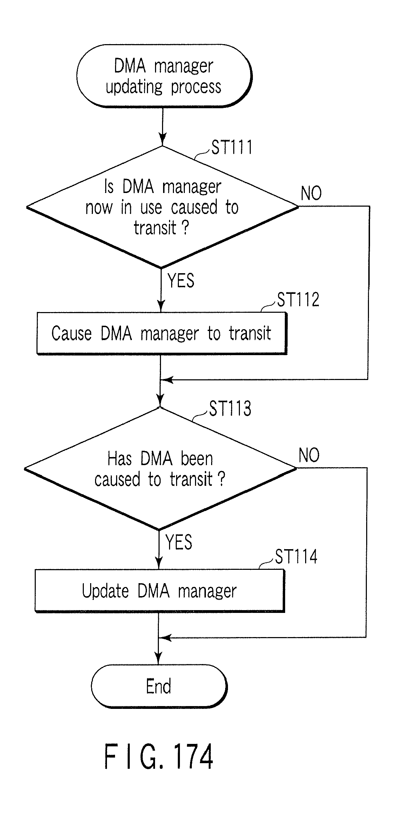

FIG. 174 is a flowchart to help give an outline of the process of updating the DMA manager. First, the main control section 20 determines whether the transition of the present DMA manager is necessary (ST111). If the manager reserved area which stores the DMA manager currently being used corresponds to a defective area, the main control section 20 determines that the transition of the DMA manager currently being used is necessary (YES in ST111). If the transition is necessary (YES in ST111), the main control section 20 copies the DMA manager currently being used into a new manager reserved area (or the next manager reserved area) (ST112). If the transition of DMAs has been performed (YES in ST113), the main control section 20 updates the DMA manager as a result of the transition of DMAs (ST114).

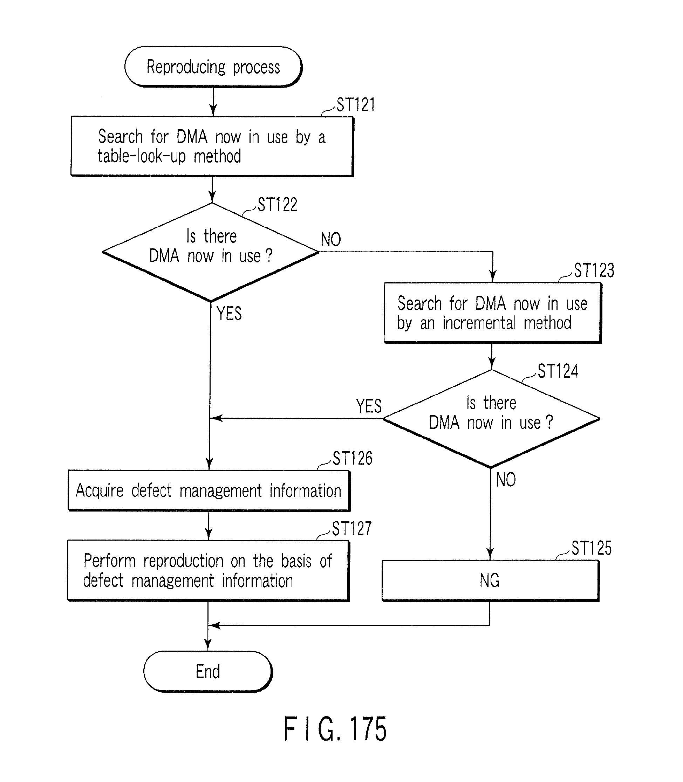

FIG. 175 is a flowchart to help give an outline of a reproducing process on the basis of DMAs. As shown in FIG. 175, first, the main control section 20 of the information recording and reproducing apparatus shown in FIG. 156 searches for the DMA reserved area currently being used by the table lookup method (ST121). That is, if position information indicating the DMA reserved area currently being used is read from the latest DMA manager, this makes it possible to find the DMA reserved area currently being used (YES in ST122). If the DMA reserved area currently being used cannot be found by the table lookup method (NO in ST122), the main control section 20 of the information recording and reproducing apparatus searches for the DMA reserved area currently being used by the incremental method (ST123). If the DMA reserved area currently being used cannot be found by the incremental method (NO in ST124), the reproducing process is unsuccessful (ST125).

If having found the DMA reserved area currently being used (YES in ST122) (YES in ST124), the main control section 20 performs reproduction control, thereby reading the defective management information from the DMA reserved area currently being used (ST126). On the basis of the defect management information, the user data recorded in the user area is reproduced (ST127).

Here, using FIGS. 34 to 38, an ECC block composed of 64 KB will be explained. An ECC block recorded on an existing DVD-RAM is composed of 32 KB. To realize higher recording density than that of the existing DVD-RAM, an ECC block composed of 64 KB will be explained.

An ECC block is composed of 32 consecutive scrambled frames. In the ECC block, 192 rows + 16 rows are arranged in the vertical direction and $(172 + 10) \times 2$ columns are arranged in the horizontal direction. Each of B0, B1, 0, ... is one byte. PO and PI are error correction codes. PO is outer parity and PI is inner parity.

In an ECC block, a unit of (6 rows $\times$ 172 bytes) is treated as one scrambled frame. That is, an ECC block is composed of 32 consecutive scrambled frames. Moreover, (a block of 182 bytes $\times$ 207 bytes) is treated as a pair. Each of the numbers of the scrambled frames in the left ECC block may be marked with L and each of the numbers of the scrambled frames in the right ECC block may be marked with R. Then, in the left block, right and left scrambled frames exist alternately and in the right block, too, right and left and right scrambled frames exist alternately.

Specifically, an ECC block is composed of 32 consecutive scrambled frames. The individual rows of the left half of an odd-numbered sector are replaced with the rows of the right half. $172 \times 2$ bytes $\times$ 192 rows, which are equal to 172 bytes $\times$ 12 rows $\times$ 32 scrambled frames, makes an information field. A 16-byte PO is added to each of $172 \times 2$ columns to create an outer code for RS(208, 192, 17). In addition, a 10-byte PI (RS(182, 172, 11)) is added to each of $208 \times 2$ rows in each of the right and left blocks. PI is also added to the row of PO.

The number in the frame represents the scrambled frame number. The suffixes R and L mean the right half and left half of the scramble frame. PO and PI are created in the following procedure.

First, a 16-byte $B_{i,j}$ (i = 192 to 207) is added to column j (j = 0 to 171 and j = 182 to 353). The $B_{i,j}$ is defined using polynomial $R_j(X)$. The polynomial $R_j(X)$ is used to convert outer code RS(208, 192, 17) into each of $172 \times 2$ columns.

Next, a 10-byte $B_{i,j}$ (i = 172 to 181 and j = 354 to 363) is added to row i (i = 0 to 207). The $B_{i,j}$ is defined using polynomial $R_i(X)$. The polynomial $R_i(X)$ is used to convert inner code RS(182, 172, 11) into each of $(108 \times 2)/ 2$ rows.

In the ECC block, outer parity (PO) is interleaved in each of the right block and the left block. $B_{i,j}$, an element of each B matrix, constitutes 208 rows $\times$ 182 $\times$ 2 columns. The B matrix is interleaved between rows in such a manner that $B_{i,j}$ are rearranged using $B_{m,n}$.

As a result, 16 parity rows are distributed row by row. That is, 16 parity rows are provided one for every two recording frames. Therefore, a recording frame composed of 12 rows results in 12 rows + 1 row. After the rows have been interleaved, 13 rows $\times$ 182 bytes are referred to as a recording frame. Therefore, an ECC block subjected to row interleaving includes 32 recording frames. In a recording frame, there are six rows in each of the right block and the left block. Moreover, PO is placed in such a manner that it lies in a position in the left block (182 $\times$ 208 bytes) and in a different position in the right block (182 $\times$ 208 bytes). In the figures, one complete ECC block is shown. However, when the data is reproduced, such ECC blocks arrive consecutively at the error correcting processing section. To increase the correcting capability of the error correcting process, the interleaving method is used.

Of the data fields (even-numbered fields and odd-numbered fields) recorded into, information on PO (Parity Out) is inserted in the sync data area in the last two sync frames in each of the even-numbered and odd-numbered data fields (that is, the last SYNC code SY3 and the sync data just behind SY3 and SYNC code SY1 and the sync data just behind SY1).

Specifically, a part of the left PO is inserted in the last two sync frames in an even-numbered data field recorded into and a part of the right PO is inserted in the last two sync frames in an odd-numbered data field recorded into. One ECC block is composed of a right and a left small ECC block. Data on a PO group differing alternately from sector to sector (whether PO belongs to the left small ECC block or to the right small ECC block) is inserted.

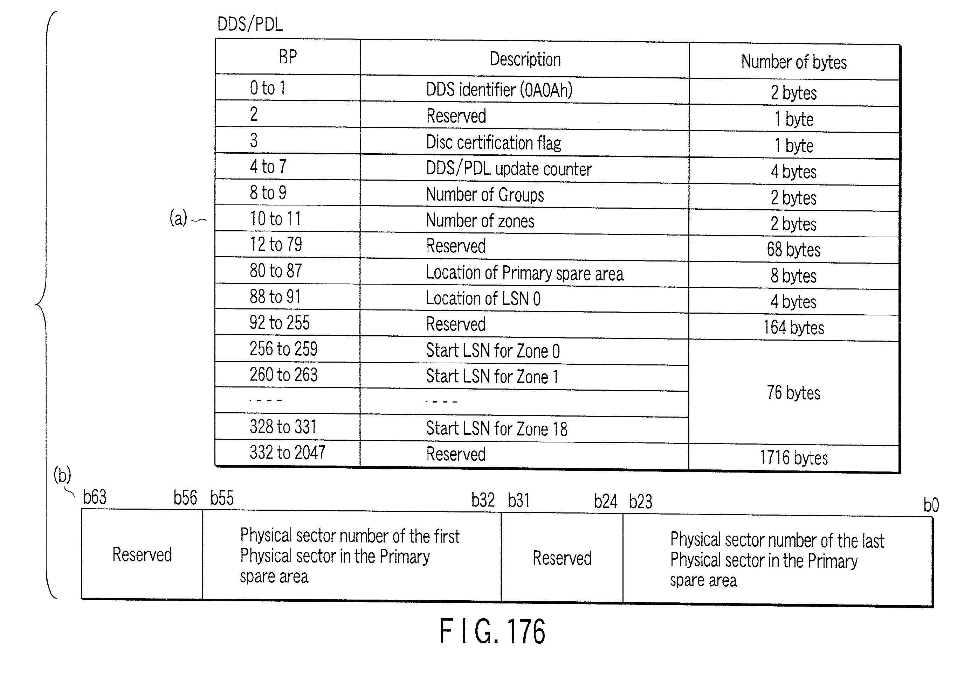

FIG. 176 shows the configuration (a) of a DDS. The DDS is a table with a length of one physical sector. The DDS shows the configuration of a formatted disk. The DDS is recorded in the first physical sector in each DMA in the final stage of the formatting.

The DDS includes a DDS identifier, a disk certification flag, a DDS/PDL update counter, a group number, a zone number, the location of a primary spare area, the location of LSN0, and the start LSN (logical sector number) of each zone. The disk certification flag includes an in-progress flag, a user certification flag, and a disk manufacturer certification flag. If the in-progress flag is "0," this means formatting has been done. If the in-progress flag is "1," this means formatting is in progress. If the user certification flag is "0," this means the user has not certificated the disk yet. If the user certification flag is "1," this means the user has certificated the disk at least once. If the disk manufacturer certification is "0," this means that the manufacturer has not certificated the disk yet. If the disk manufacturer certification is "1," this means that the manufacturer has certificated the disk at least once.

The DDS/PDL update counter counts the total number of times the DDS/PDL physical block is updated and rewritten into. The DDS/PDL update counter is set to 0 as the initial value and is incremented by one each time it is rewritten into or updated. The counter of the DDS/PDL physical segment block and the counter of the SDL physical segment have the same count when formatting has been done. The group number is set to 000h. The zone number is set to 0013h (19 zones).

The location of a primary spare area has a format as shown in FIG. 176, (b). The physical sector number of the first physical sector in the primary spare area is written in b32-b55. The physical sector number of the last physical sector in the primary spare area is written in b0-b23.

In the field for the location of LSN0, the physical sector number of the first logical sector is written. In the field for the start LSN (logical sector number) of each zone, the start logical sector number of each zone is written in four bytes.

Next, a spare physical segment block in defect management will be explained. A defective physical segment block in the data area has to be replaced with a good physical segment block according to defect management. The disk has a primary spare area in zone 0. It may have an extendable supplementary spare area in zone 18. The number of spare physical segment blocks in the primary spare area is 2300. The maximum number of spare physical segment blocks in the supplementary spare area is 7104. The number of spare physical segment blocks in the supplementary spare area is a multiple of 32 physical segment blocks. The supplementary spare area can be extended toward the beginning of the data area.

A defective physical segment block is handled by a slipping replacement algorithm, a linear replacement algorithm, or a physical segment block skipping replacement algorithm. The total number of entries listed in the PDL and SDL must fulfill the following requirements:

$$1 \leq S_{PDL} \leq 31, \quad 1 \leq S_{SDL} \leq 31$$

$$S_{PDL} = <((E_{PDL} \times 4 + 4) + 2047))/2048>$$

$$S_{SDL} = <((E_{SDL} \times 8 + 24) + 2047))/2048>$$

where

$S_{PDL}$ is the number of physical sectors used to secure the PDL entries,
$S_{SDL}$ is the number of physical sectors used to secure the SDL entries,
$E_{PDL}$ is the number of entries in the PDL, and
$E_{SDL}$ is the number of entries in the SDL.

Here, <P> means the maximum integer which is not larger than P.

Hereinafter, the operational advantages provided by the above-described second defect management method will be summarized.

For example, suppose an information storage medium of the present invention can be overwritten up to 1000 times. In the information storage medium, the registration of 10000 pieces of defect management information is realized. In this case, if a DMA is transited once every 1000 times, calculations have shown that 10 (= 10000/1000) transitions enables 10000 pieces of defect management information to be registered. That is, making the DMA replaceable enables the disadvantage of the overwrite characteristic to be overcome.

In the prior art, the DMA itself is not subjected to defect management. Therefore, when the number of times the defect management information was rewritten becomes larger than the number of times recording can be done repeatedly, this causes a problem: sufficient defect management practically cannot be carried out. For example, in the case of an information storage medium which can be overwritten only about 1000 times, the overwriting of defect management information more than 1000 times may make DMA themselves defective. Some of the information storage mediums on the market have poor quality. In such a poor-quality medium, overwriting data about 100 times may make blocks defective and the entire medium may not be used because a part of the medium is defective.

With the second defective management method as summarized below, the performance of an information storage medium which can be overwritten only about 1000 times can be improved remarkably.

- Target
  Maximum OW times: 100,000
- Presupposition
  OW limitation of single DMA: 1,000
- Solution
  Plural DMAs with transition
  Number of DMAs: 100,000/1,000 = 100 sets
  Four identical DMAs

According to defect management of the present invention, the apparent overwrite characteristic of a medium which can be overwritten only about 1000 times can be improved. For example, the medium can be overwritten about 100,000 times. This is equal to the number of times a DVD-RAM can be overwritten. An area which has been overwritten 1000 times is replaced with a new area. In calculations, 100000/1000 = 100 sets of DMA reserved areas have only to be prepared. The medium has 100 sets of DMA reserved areas, which assures the same performance as that of a medium which enables overwriting data about 100,000 times, even if the medium can be overwritten only 1000 times. Moreover, the medium has a total of four DMAs with the same contents, for example, two in the lead-in area and two in the lead-out area. This enables proper defect management to be continued, even if information cannot be read form a certain DMA. Specifically, the medium has a plurality of DMAs usable at the same time and, when one of the DMAs has deteriorated, the defect management information is moved to a new DMA reserved area. This makes it possible to increase the ability of a DMA to protect itself from defects. For example, when four DMAs are arranged on the medium simultaneously, each of the DMAs has 100 DMA reserved areas. That is, on the medium, a total of 400 DMA reserved areas have only to be prepared.

The above-described invention may be applied to an optical disc of a two-layer structure. In the case of the two-layer structure, it is possible to record a current DVD-Video onto a first layer or a second layer, and to record a high density DVD-Video (hereinafter HD-DVD) onto the second layer or the first layer. Such a type of disc having different formats in the respective layers is called a twin format disc.

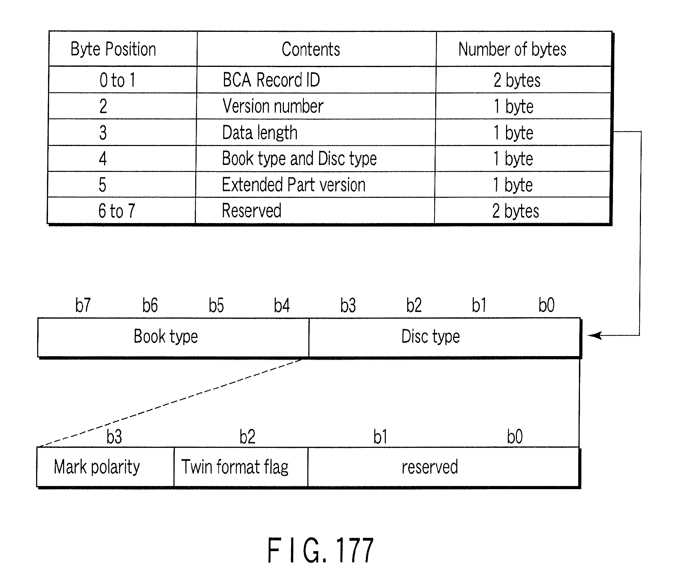

FIG. 177 shows a format of a burst cutting area of an HD-DVD. Herein, among book type and disc type areas, especially in the disc type, a twin format disc flag is described.

In the book type, 0101b is described in the case of a rewritable disc. Meanwhile, in the twin format disc flag, 0b is described in the other case than the twin format.

Further, in the above explanation, there are DMA1 & DMA2, DMA3 & DMA4 with regard to DMA, and they are called defect management areas. However, they may be called defect management zones. Namely, each of DMA1 & DMA2, DMA3 & DMA4 in FIG. 12 is called a defect management zone.

The DMA manager will be explained in more details.

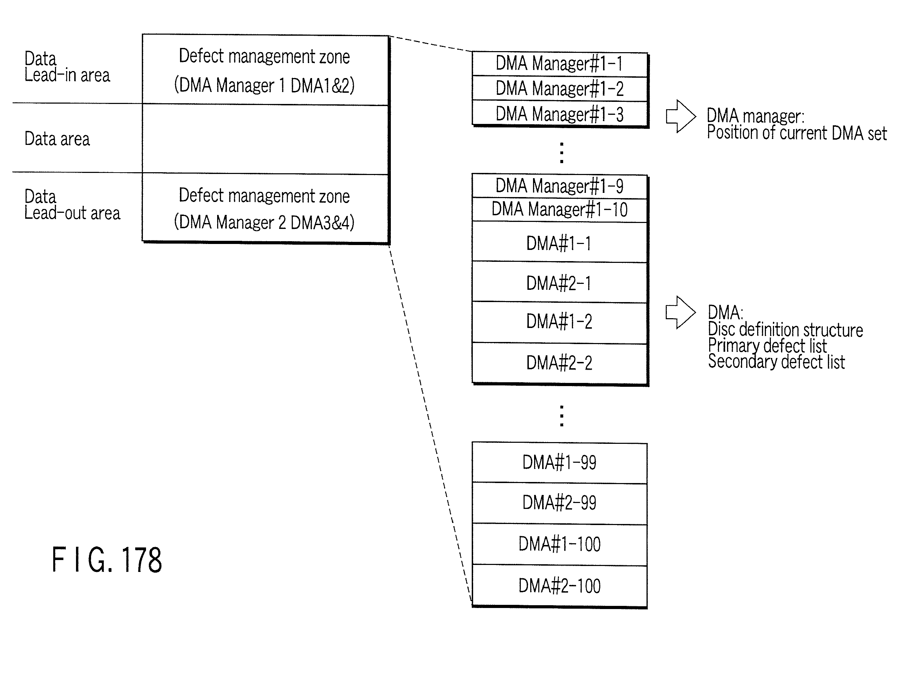

FIG. 178 shows an entire image of a defect management zone. The DMA manager is information showing a position of the current DMA set. Further, the DMA includes a primary defect set, a secondary defect list, and the like.

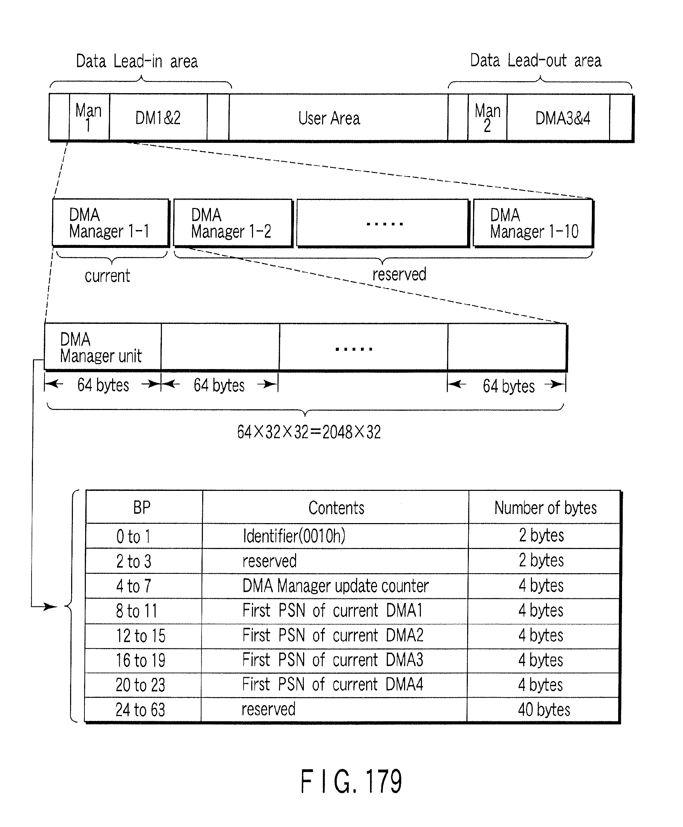

FIG. 179 shows a detailed arrangement of DMA managers especially in the data lead-in area.

The DMA manager includes information for DMAs, for example, positions of the current DMAs, and the like. The length of each DMA manager is one PS block. In comparison with the DMA manager in FIG. 159, the area of a DMA manager update counter is secured. The DMA manager update counter specifies the total number of processes of updating the DMA manager. At initialization, this field is set to "0". The counter is incremented by one at every update of the DMA manager.

A border between DMAs and the DMA managers is as shown in FIG. 162.

A first PS block of each DMA is called a DDS/PDL PS block, and includes a disc definition structure and a primary defect list. A second PS block of each DMA is called an SDL PS block, and includes a secondary defect list (SDL). The contents of the four DMAs are equal to one another.

Each DMA manager set after the initialization of a disc is in the following status.

A first available DMA manager set has 1024 DMA manager units in each DMA manager, and it is called a current DMA set. The DMA manager unit has an identifier, and has a DMA manager update counter to be set to 0. The DMA manager unit also has each first PSN of the current DMAs (DMA1, DMA2, DMA3 and DMA4 in FIG. 179).

The PS blocks of other available DMA manager sets are filled with "FFh". The PS blocks of the defective DMA manager sets are filled with "AAh" or kept with nothing recorded therein.

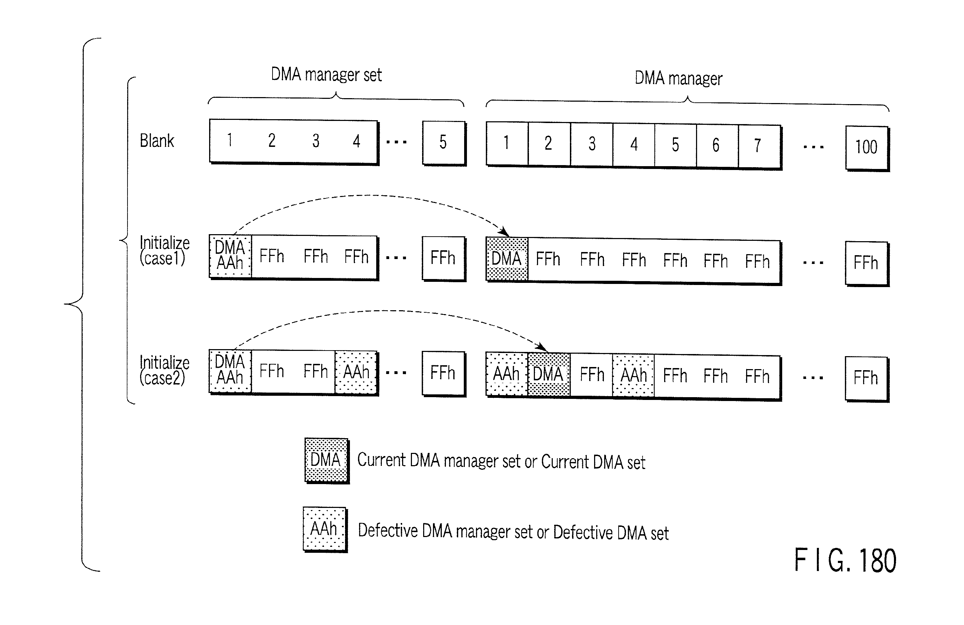

FIG. 180 shows a process example concerning the DMA manager set, an example of case 1 and an example of case 2 when a disc is initialized. FIG. 180 shows a case where the defective DMA manager is replaced in units of physical sector blocks. The case 2 shows a case where there exists a defective PS block already at initialization. In such a case, the defective PS block can be detected at an early stage, and therefore, waste in initialization work time can be reduced.

Each DMA set after the disc initialization is in the following status.

A first available DMA set must have a DDS/PDL PS block and an SDL PS block. This DMA set is called a current DMA set, and the number thereof is pointed out by the DMA manager.

The PS blocks of other available DMA sets are filled with "FFh". The PS blocks of the defective DMA sets excluding replaced DMA sets are filled with "AAh" or kept with nothing recorded therein.

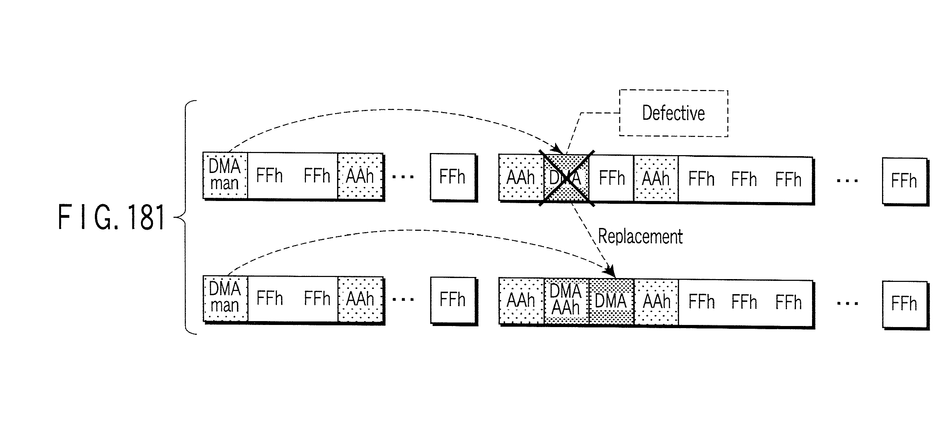

FIG. 181 shows a process example concerning the DMA set when a disc is initialized. FIG. 181 shows a case where the defective DMAs are exchanged (replaced) in units of physical sector blocks. There is shown an example where there exists a defective PS block already at initialization. In such a case, the defective PS block can be detected at an early stage, and therefore, waste in initialization work time can be reduced. With regard to the DMA manager whose position is replaced because the defect PS block exists, position information of the current DMA set is also changed.

The contents of the DMA in the current DMA set after the disc initialization are as shown below. Namely, a first physical sector of the PS block includes disc definition structure information (DDS). A second physical sector of each DDS/PDL PS block is a first physical sector for PDL. A first physical sector of each SDL PS block is a first physical sector for SDL.

The length of PDL and SDL is determined by the number of entries of each list. Unused physical sectors in DMAs are filled with "FFh". All the reserved PS blocks are filled with "00h".

After the replacement, each DMA set is in the following state. Namely, in the replaced DMA set, unused bytes of the last physical sector of PDL, and unused physical sectors of the DDS/PDL PS block are all filled with "AAh". Further, in a newly allotted current DMA set, unused bytes of the last physical sector of PDL, and unused physical sectors of the DDS/PDL PS block are all filled with "FFh".

In the defect management, the spare PS block will be further explained additionally.

A defect PS block in a data area is replaced with a preferable PS block by a defect management method to be described later herein. A disc is formed before use. Formatting may be made with verification, or without verification. The disc has one primary spare area in the zone 0 of land. It may have one expandable supplementary spare area in the zone 18 of the groove.

The number of spare PS blocks of the primary spare area is 2300. The maximum number of spare PS blocks of the supplementary spare area is 7140. The maximum spare PS block of the supplementary spare area is a multiple number of 32 PS blocks. The supplementary spare area can be expanded in the direction of the top (head) of the data area.

The defect PS block is handled by a slipping replacement algorithm. This algorithm includes a linear replacement algorithm and a PS block skipping algorithm. The total number of entry lists of PDL and SDL satisfies the following equation.

$$0 \leq EPDL \leq 2300$$

$$1 \leq SSDL \leq 32$$

$$SSDL = \lfloor \{(EPDL \times 8 + 24) + 2047\}/2048 \rfloor$$

wherein, EPDL denotes the number of entries in PDL, SSDL denotes the number of entries in SDL (the number of physical sectors necessary to keep SDL entry), and $\lfloor P \rfloor$ denotes the maximum integer not larger than P.

The disc formatting will be further explained in details.

A disc is formatted before use. If DMA is not recorded in the disc before a formatting process, the process is considered as initialization. If DMA is recorded in the disc before a formatting process, the process is considered as re-initialization.

After the formatting, the above-described defect management zones are recorded. The data area is composed of single groups. The group includes a user area and a spare area. A PS block of the spare area may be used as a replacement for a defect PS block. Formatting may be made by initialization or re-initialization. These processes may include a process of verifying whether a defect PS block is identified and skipped.

All the DDS parameters are described into four DDS/PDL PS blocks. PDL and SDL are recorded in four DMAs. A reserved PS block following each DMA is filled with "00h".

After the formatting, any PS block or any spare PS block arranged as the result of a slipping replacement takes one of the following states.

(a) The PS block or the spare PS block includes a set of 32 data frames configuring an ECC block. The data frame may be written before re-initialization.
(b) The PS block or the spare PS block is an entirely physical sector with nothing written therein.
(c) The PS block or the spare PS block includes a data frame number from 000000h to 00001Fh written during the verifying process.

After the formatting, in PDL, there are three types of entries, namely, there exist P-list, G1-list, and G2-list. These types are identified by the entry type of each entry. SDL may also include an entry.

When the disc is verified, the verification is applied to all the PS blocks in the user area and the spare area. If a defect PS block is found in the verification, it is listed in G1-list of PDL, and handled by the slipping replacement algorithm.

If the formatting process includes the verification or includes other data writing process, the data frame number must be from 000000h to 00001Fh. An in-progress field in the disc certification flag is set to 1b during the verifying process. This procedure allows the system to detect the occurrence of a failure that has occurred in the previous formatting.

The initialization will be further explained in details.

If there are not DMAs recorded in the disc, the disc is required for initialization. During the initialization, a first available DMA manager set is used as a current DMA manager set. An update counter of the DMA manager is set to 0. In other available DMA manager sets, PS blocks of the DMA manager are filled with "FFh". To a DMA manager set that is detected as a defect before writing, any data is not written. To a DMA manager set that is detected as a defect after writing, "AAh" must be rewritten into the PS block of the DMA manager.

The first available DMA manager set is used as the current DMA manager set. A DDS/PDL update counter and an SDL update counter are set to 0. A defect PS block found at initialization by a disc manufacturer is listed in P-list of PDL. A defect PS block found at initialization by other one than the disc manufacturer is listed in G1-list of PDL. In both the cases, not only the defect PS block of the user area but also the defect PS block of the spare area are listed in PDL.

In other available DMA sets, the PS blocks in four DMAs must be filled with "FFh".

The verifying process may be performed at initialization. If the verifying process is applied by a manufacturer, a disc manufacturer certification field in the disc certification flag is set to 1b. If the verifying process is applied by other one than the disc manufacturer, a user certification field in the disc certification flag is set to 1b.

When the number of defect PS blocks to be registered to PDL exceeds a specific number during the verification, defect PS blocks which have not been recorded in PDL are registered to SDL. If there is no spare PS block left in the primary spare area at the initialization, the primary spare area full flag is set to 1. If there is not any available spare PS block during the verification, the initialization is considered as an error.

The re-initialization will be further explained in details.

When DMAs are already recorded on the disc before formatting, the formatting is considered as re-initialization. For the re-initialization process, the P-list, the DDS/PDL update counter, and the SDL update counter are protected.

The re-initialization process includes the following steps.

(1) Applying the verification to exclude G1-list from PDL, and/or, applying the verification to the registration of a new PDL entry found in G1-list of PDL during the verification
(2) Converting an SDL entry into G1-list of PDL
(3) Excluding G2-list from PDL and excluding the SDL entry

In the process 1, G2-list of PDL is always excluded. The result PS block found during the verification is registered to G1-list of PDL. This process is not always requested in the disc verification in association with writing operations.

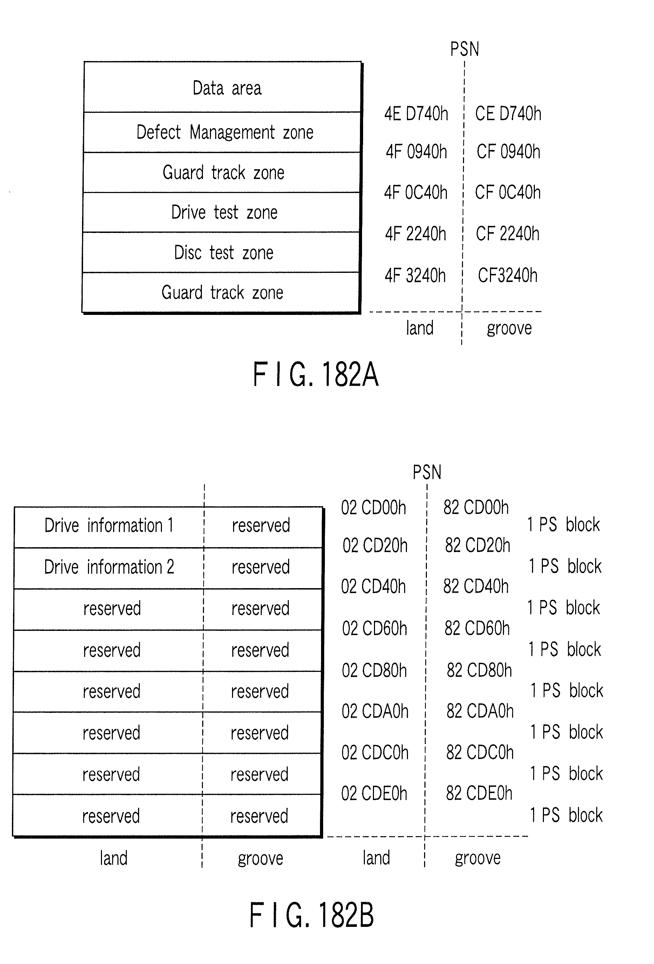

FIG. 182A shows the position of the defect management zone in the data lead-out area.

The defect management zone is composed of DMA manager y2, DMA3, DMA4, and a reserved PS block.

FIG. 182B shows an example of a disc identification zone in the data lead-in area. The disc identification zone has drive information and a reserved area. The drive information is configured in two PS blocks in a land track, and starts from a physical sector number 02CD00h of the land track. The contents of one PS block of each item of drive information are equal. The drive information is read or recorded in the ascending sequence of the physical sector number (PSN).

Guideline of PS block replacement in data area

Now, suppose that there is a defect of a PS block, and the PS block is replaced in a data area excluding a guard area by defect management. The criteria of the PS block replacement are determined depending on the type of data to be recorded. The followings are "examples" of the criteria applied for the defect management. Which of the criteria should be used, a preferable PS block must be identified.

Examples

WAP error: WAP error is determined by parity check or continuous state of physical segment numbers.

Inner code error: There are four or more error bytes in an inner code of left/right half in the PS block.

Slipping replacement algorithm

If the PS block has four physical segments or more with the WAP error, the next PS block should be replaced. If the left/right half of the PS block includes eight or more inner code errors, the PS block should be replaced.

Guideline for replacement of PS block in defect management zone

Now, suppose that there is a defect of a current DMA manager set or a current DMA set, and the current DMA manager set or the current DMA set is exchanged (replaced) with the next available DMA manager set or DMA set in the defect management area.

The following is an example of the criteria applicable for the replacement of the DAM manager set or DMA set.

When a current DMA manager set is considered as a defect, the current DMA manager set should be replaced with the next available DMA manager set. When a current DMA set is considered as a defect, the current DMA set should be replaced with the next available DMA set. The replaced DMA set is recorded again, and unused bytes of the last physical sector of the PDL and unused physical sectors in the DDS/PDL PS block should be filled with "AAh". The replaced DMA set is recognized as an old DMA set thereafter.

The available DMA manager set or DMA set and the defective DMA set are defined as follows.

Available DMA manager set or DMA set: There are two kinds of available DMA manager sets and DMA sets. If, immediately after the first recording, a DMA manager set or DMA set includes at least two correctable DMA managers or DMAs, the DMA manager set or DMA set is considered as an available one. If, after two times or more of recording, a DMA manager set or DMA set includes two reliable or two err correctable DMA managers or DMAs, the DMA manager set or DMA set is considered as an available one.

Defective DMA manager set or DAM set: A defective DMA manager set or DMA set is an unavailable DMA manager set or DMA set. If all the bytes of a DMA manager set or DMA set are filled with "AAh", or if nothing is written therein, the DMA manager set or DMA set is considered as a defect.

A reliable DMA manager or DMA and a correctable DMA manager or DMA are defined as follows.

Reliable DMA manager or DMA: If in a PS block of a DMA manager or DMA, seven or less inner code errors in the left/right half, and the previous PS block accompanies WAP error and includes three or less physical segments, the DMA manager or DMA is reliable.

Correctable DMA manager or DMA: If data recorded in a DMA manager or DMA is correctable by an ECC system, and the previous PS block is accessible, the DMA manager or DMA is considered as a correctable one.

The defect management procedures will be further explained in details.

By the drive unit including the control section, the replacement of a PS block is performed, and the defect management zone is used.

Disc determination

Whether a disc is good or not depends on the following items.

(1) Write inhibited disc
(2) Control data information
(3) The number and arrangement of error PS blocks in DMAs
(4) DMA set update prohibition
(5) The number of defect PS blocks of data area
(6) DDS information
(7) Disc with case or without case

The method and criteria of disc determination may be different in two cases. With regard to the two cases, case A is the moment of formatting a disc (initialization or re-initialization). Case B is the moment of writing information to the data area or reading information therefrom.

In the case of a process based on the above (1) write inhibited disc, the write inhibited hole is detected by the drive unit and write inhibit is realized. In the case A, the drive unit does not perform formatting. In the case B, the drive unit may write data into a drive test zone. The drive unit does not change DMAs without updating SDL.

In the case of a process based on the above (2) control data information, the drive unit checks at least the block position (BP) 0 to BP 32 of the physical format information recorded in the control data section.

In the case of a process based on the above (3) the number and arrangement of error PS blocks in DMAs, the number and arrangement of error PS blocks in DMAs are checked.

Check of current DMA set before formatting

(3-1) The dry unit checks whether there is at least one preferable set of DDS/PDL PS block and SDL PS block. It is possible to form a preferable set of a DDS/PDL PS block from one DMA, and an SDL PS block from another DMA.

If the maximum value of the DDS/PDL update counter in the DDS/PDL PS block is not equal to the maximum value of the DDS/PDL update counter in the SDL PS block, there is no preferable pair (set). When there is no preferable pair (set), formatting is considered as initialization.

When all the following conditions are satisfied, it is considered that there is a preferable pair (set).

    a) All the data in the physical segment can be corrected based on ECC.
    b) The DDS identifier is 0A0Ah.
    c) The value of the DDS/PDL update counter of each PS block is equal.

(3-2) When there are two or more preferable sets described above, and the contents do not coincide with each other, the preferable set having the maximum value in the DDS/PDL update counter should be used.

(3-3) When there are two or more preferable sets of DDS/PDL PS block and SDL PS block that have the same value in the DDS/PDL update counter, but have different values of the SDL update counter, the set having the maximum value of the SDL update counter in the SDL PS block should be used as a preferable set.

(3-4) The drive unit checks whether an in-progress field of a disc certification flag in a preferable DDS is 0B or not. If the flag is 1b, formatting with verification should be performed.

Check of current DMA set after formatting

(3-5) The drive unit should check whether the criterion that a current DMA set has at least two preferable DDS/PDL PS blocks and two preferable SDL PS blocks is satisfied or not. If information in a drive memory to be used for recording DMAs coincides with data of DDS, PDL and SDL, the DMA is a preferable DMA. Otherwise, the DMA is not a good DMA.

(3-6) In addition, "FFh" should be described in unused physical sectors in the DDS/PDL PS block and the SDL PS block.

Check of current DMA set before writing data into data area or reading data therefrom

(3-8) The drive unit checks whether there is at least one preferable set of DDS/PDL PS block and SDL PS block. It is possible to form a preferable set of a DDS/PDL PS block from one DMA, and an SDL PS block from another DMA.

If the maximum value of DDS/PDL update counter in the DDS/PDL PS block is not equal to the maximum value of the DDS/PDL update counter in the SDL PS block, there is no preferable pair (set). When there is no preferable pair (set), the disc is not a good (NG) disc.

When all the following conditions are satisfied, it is considered that there is a preferable pair (set).

    a) All the data in the physical segment can be corrected based on ECC.
    b) The DDS identifier is 0A0Ah.
    c) The value of the DDS/PDL update counter of each PS block is equal.

If there is no preferable DDS/PDL PS block, the disc is NG.

(3-9) When there are two or more preferable sets described above, and the contents do not coincide with each other, the preferable set having the maximum value in the DDS/PDL update counter should be used.

(3-10) When there are two or more preferable sets of DDS/PDL PS block and SDL PS block that have the same value in the DDS/PDL update counter, but have different values of the SDL update counter, the set having the maximum value of the SDL update counter in the SDL PS block should be used as a preferable set.

(3-11) The drive unit checks an in-progress field of a disc certification flag in a preferable DDS/PDL PS block. If the flag is 1b, the disc is NG, and formatting is required.

Check of current DMA set after update of SDL

(3-12) The drive unit checks whether there is one or more preferable SDL PS blocks or not. If there is no preferable SDL PS block, the SDL is defective.

(3-13) In addition, unused physical sectors in the DDS/PDL PS block and the SDL PS block may be checked.

In the above-described (4) DMA set update prohibition, the following process is performed.

(4-1) The drive unit checks whether DMA is update inhibited before update of a current DMA set. If there is no preferable DDS/PDL PS block in a DMA block, and there is no preferable SDL PS block also in other DMA blocks, the current DMA set should not be updated.

When there is no unused DMA set having at least three correctable DMAs in the defect management zone, the current DMA set must have at least three or more pairs of DDS/PDL PS block and SDL PS block for the purpose of update.

When there is an unused DMA set having at least three correctable DMAs in the defect management zone, the current DMA set must satisfy the above-described conditions (3-8) to (3-11) for the purpose of update.

The process based on the above (5) the number of defect PS blocks in the data area will be explained.

The drive unit determines NG of the disc according to whether the total number of entries listed in PDL and SDL satisfies the predetermined requirements or not.

The process based on the above (6) DDS information will be explained. The drive unit returns an error message to the host computer or the control section when the DDS identifier is not 0A0Ah. As a consequence, the control section displays the error state on the display.

Next, handling of DMA manager and DMA set will be explained hereinafter.

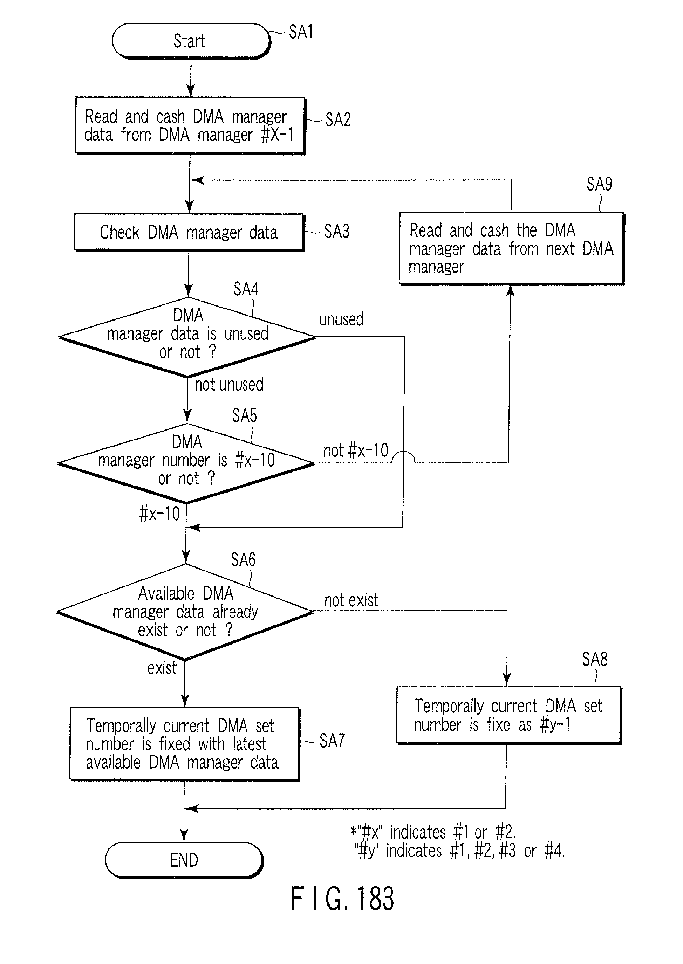

(a) The criteria of the replacement of DMA manager set and DMA set are as shown below. Namely, in order to obtain a temporary current DMA set number, a current DMA manager set is searched (this search procedure is shown in FIG. 183). As the states of DMA manager data, there are three statuses as follows.

Unused DMA manager data: When all the DMA manager set data to the identifier are "FFh", it is recognized as unused (steps SA1, SA2, SA3 and SA4). A DMA manager set recorded with unused DMA data is called an unused DMA manager set.

Available DMA manager data: When the DMA manager set has one more DMA manager data having identifier "0010h", a DMA manager update counter and each first PSN of four DMAs of current DMAs, data is recognized as available manager data (determination in step SA6).

When the DMA manager set has two preferable DMA manager data, and the contents thereof are same, the data is recognized as available DMA manager data.

When the DMA manager set has two preferable DMA manager data, and their update counter values are not same (are different), the data including the maximum update counter value is recognized as available DMA manager data.

Unavailable DMA manager data: Unavailable DMA manager data is not used, and is not available DMA manager data.

The current DMA manager set should be recognized as a current DMA manager set including at least available DMA manager data. If no available DMA manager data is found, the current DMA manager set should be determined and updated as follows.

When a number of the available DMA manager set is smaller than that of an unused DMA manager set, the latest DMA manager set is considered as an available current DMA manager set (steps SA6 and SA7). When a number of an unavailable DMA manager set is smaller than that of an unused DMA manager set, the first unused DMA manager set is considered as an available current DMA manager set (steps SA6 and SA7).

If no unused DMA manager set is found, the latest DMA manager set is considered as an available current DMA manager set (steps SA6 and SA8).

In FIG. 183, the loop of the steps SA3, SA4, SA5 and SA9 is a routine for checking the first to tenth (#x-10) DMA managers. In the case of a shift from the step SA4 or SA5 to the step SA6, the detection of an available DMA manager set is performed.

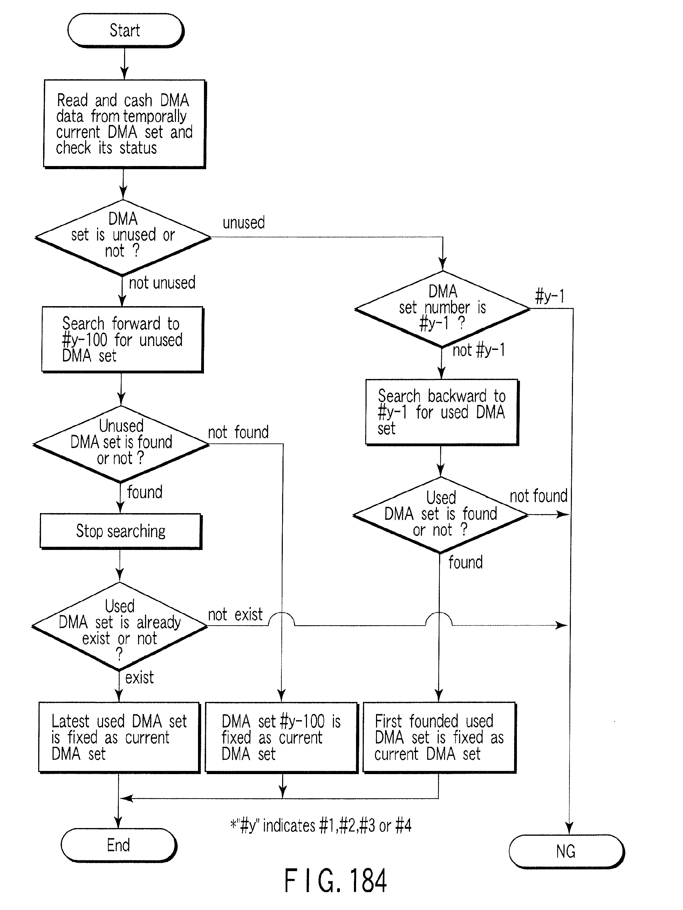

(b) A process of searching for a current DMA set is as shown below. Namely, a current DMA set is searched for by the procedure shown in FIG. 184. This search process is performed by the drive unit including the previous control section. As a DMA set, there are the following three states. They are an unused DMA set, a used DMA set, and an old DMA set.

Unused DMA set: An unused DMA set includes at least one correctable (repairable) DMA, and all the correctable DMAs are filled with "FFh" to the DDS identifier, PDL identifier, and SDL identifier.

Used DMA set: A used DMA set includes at least one correctable DMA, and a DMA set to which this DMA belongs is not an unused DMA set.

Old DMA set: An old DMA set is like used DMA set. Unused bytes of the last physical sector of PDL and unused physical sectors of the DDS/PDL PS block are filled with "AAh".

As shown in FIG. 184, DMA data is read from a temporary current DMA set and checked. By this check result, it is determined whether the DMA set is unused or used. If it is used, an unused DMA set is searched for. If an unused DMA set is found, the search is stopped. Next, it is determined whether there is an used DMA set or not, and if there exists one, the latest used DMA set is set as a current DMA set, and if not, it is determined as NG.

If no unused DMA set is found in the search of the previous unused DMA set, the next DMA is the current DMA set.

First, it is determined whether the DMA set is used or unused, and if it is unused, a number of the DMA set is checked. If the DMA set number is 0 (DMA set absent), it is NG, and if it is not 0, searching for is made to determine whether there is an used DMA set or not. If an used DMA set is found, the first found used DMA set is a current DMA set, and if it is not found, it is NG.

(c) Process of updating current DMA manager set: The process of updating a current DMA manager set is performed when the DMA set is exchanged. The DMA manager update counter is incremented when there is each update process.

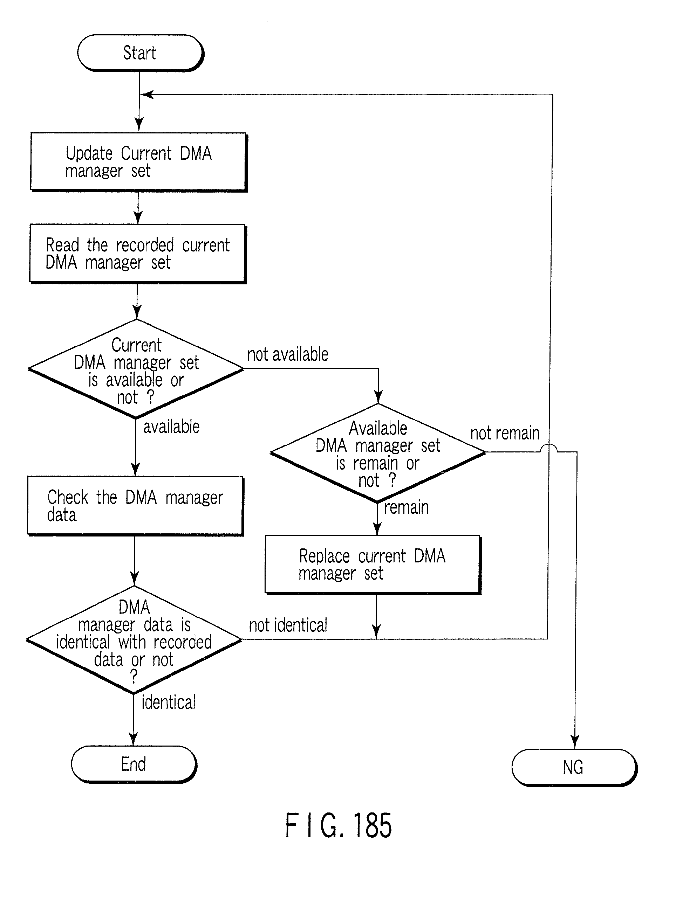

FIG. 185 shows the procedure for updating a DMA manager set. This process has the contents performed by the drive unit including the previous control section. When the update of the current DMA manager set is performed, a recorded current DMA manager set is read, and it is determined whether the current DMA manager set is available or not available.

If it is available, DMA manager data is checked, and it is checked whether the data of the current DMA manager set is equal to the data of the recorded current DMA manager set. If it is identical herein, the process ends, but if it is not identical, the update of the current DMA manager set is performed.

Previously, it has been determined whether the current DMA manager set is available or not available. If it is not available in this step, it is determined whether available DMA manager set remains or does not remain). If it remains, the process of exchanging the current DMA manager set is performed, and the update of the current DMA manager set is performed.

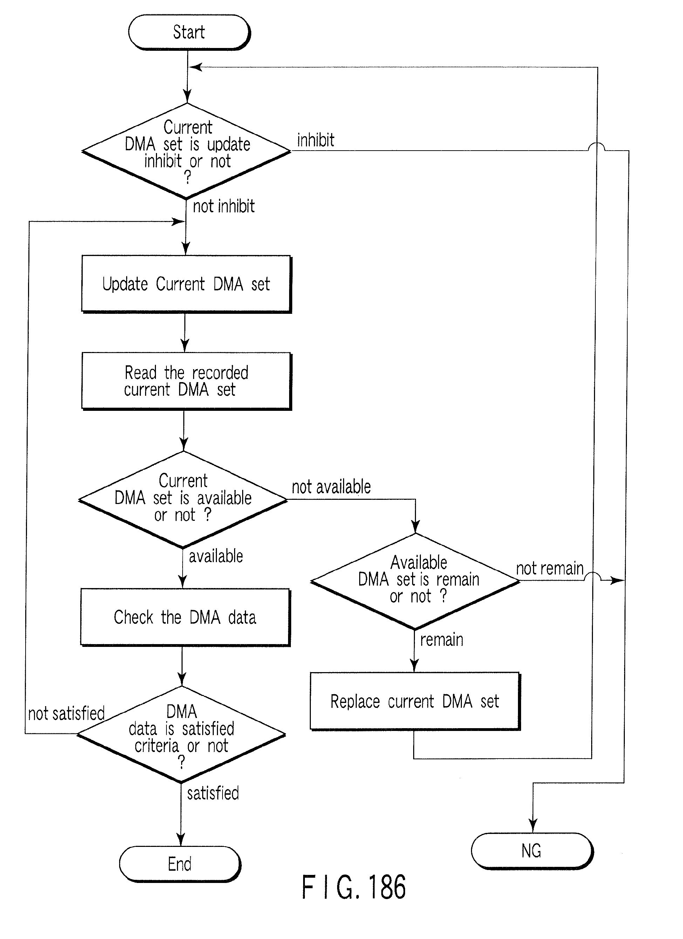

(d) The process of updating the current DMA set is as follows. The process of updating the current DMA set is performed when re-initialization, SDL update process or DMA set exchange process is performed. Before the DAM set update process is performed without re-initialization, it is checked whether the current DMA set update is permitted or not. The update process is performed so as to satisfy the criteria shown in FIG. 186. This process is the contents performed by the drive unit including the control section.

In FIG. 186, first, it is determined whether the update of the current DMA set is inhibited or not. If it is inhibited, it is NG, and if it is not inhibited, the process of updating the current DMA set is performed. The recorded current DMA set is read.

It is determined whether the current DMA set is available or not available. If it is available, DMA data is checked, and it is determined whether the current DMA data satisfies the criteria or not. The criteria are as explained previously. If the current DMA data does not satisfy the criteria, the process of updating the current DMA set is performed.

In the determination whether the current DMA set is available or not available, it is determined whether the available DMA set remains or not if it is not available. If it remains, the process of exchanging the current DMA manager set is performed, and the update of the current DMA manager set is performed.

Next, the contents of each DMA set of a current DMA set after initialization will be explained hereinafter.

The contents of each DMA set of the current DMA set after initialization are as follows.

(1) The contents have PDL. This PDL has a header in block positions PB0 to PB3, and have information of a defect PS block. If there is no defect PS block, information is not recorded, and PB4 to PB2047 are set to "FFh".

(2) To other PS blocks than the first PS block physical sector 32nd of DDS, PDL and DMA, "FFh" may be recorded.

(3) The contents have SDL. The SDL has a header of PB0 to PB23, information of defect PS blocks, and information of their replacement PS blocks. Only when all the defect PS blocks cannot be registered into PDL, defect PS blocks are listed to SDL. When there is no defect PS block in SDL, no information is recorded, and "FFh" is set to PB24 to PB2047.

(4) To other PS blocks than the second PS block physical sector $32^{nd}$ of SDL and DAMA, "FFh" may be recorded.

(5) To the reserve PS block of each DMA after this, "00h" is described.

P-list is determined by the disc manufacturer before shipment. P-list remains without change, but, in other cases than when P-list is added or deleted, an entry order may change.

Next, an algorithm of a slipping replacement process will be explained. A defect portion geography segment block registered in PDL must be replaced with a first preferable physical segment block. At this moment, a slip of one physical segment block to the head of the data area occurs. At this moment, the allotment of a logic sector number (LSN) to a physical sector is also exchanged. The physical segment block includes 32 physical sectors, and each physical sector has a physical sector number. Therefore, there is a relation that the number of physical sectors = the number of physical sector blocks $\times$ 32 (k = 0, 1, 2, ..., 31).

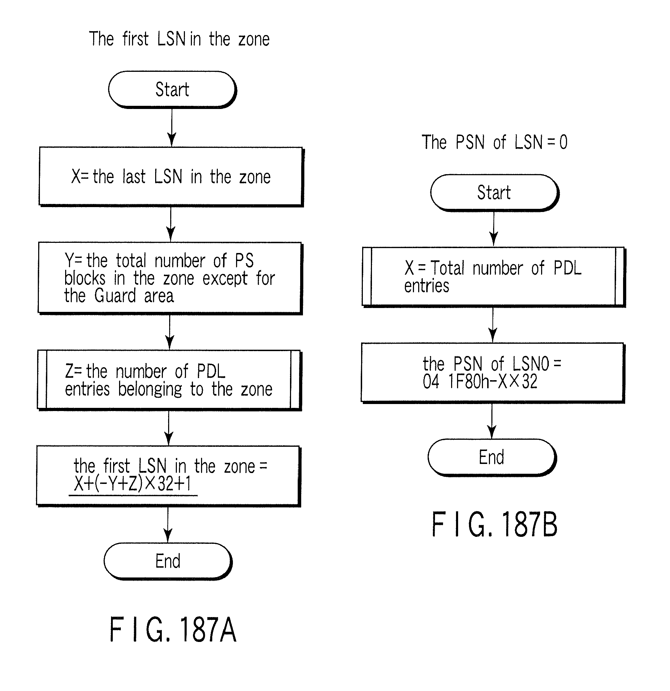

FIG. 187 shows an example of calculation of the first LSN used in a zone, and procedure for calculating the physical sector number of LSN = 0. The last LSN in the zone is X, the total number of PS blocks in the zone excluding the guard area is Y, and the number of PDL entries belonging to the zone is Z. The first LSN used in the zone is known in accordance with X + (-Y + Z) $\times$ 32 + 1. With regard to the physical sector number of LSN = 0, (04 1F80h - X $\times$ 32) becomes PSN when the total number of PDL entries is X.

Next, a correlation between a binary code and a gray code, a gray code changed bit position and a groove will be explained additionally.

There is one bit difference between N and (N+1)-th gray codes, or between N and (N-1)-th gray codes. N is a natural number. This difference bit is called a changed bit. A changed bit position can be obtained as follows.

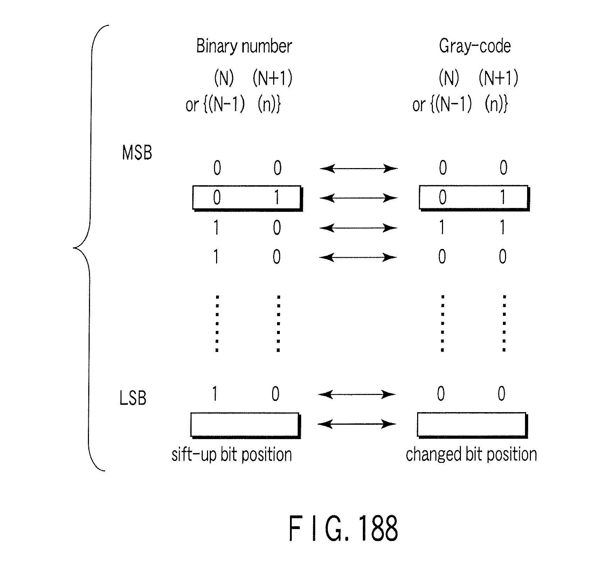

Now, explanation is made with reference to FIGS. 188, 189 and 190. Herein, bm is an m-th bit from LSB in binary, and gm is an m-th bit from LSB in gray code.

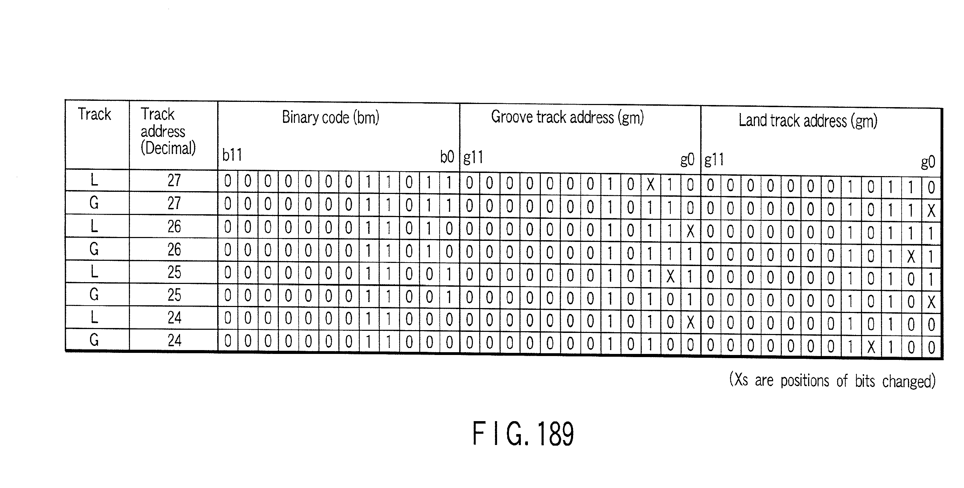

When bm is LSB1b in the groove track, gm of the land track is a changed bit between N and (N+1) -th gray codes (in FIG. 189, X mark is shown). When bm is LSB0b in the land track, gm of the groove track is a changed bit between N and (N-1)-th gray codes (in FIG. 189, X mark is shown).

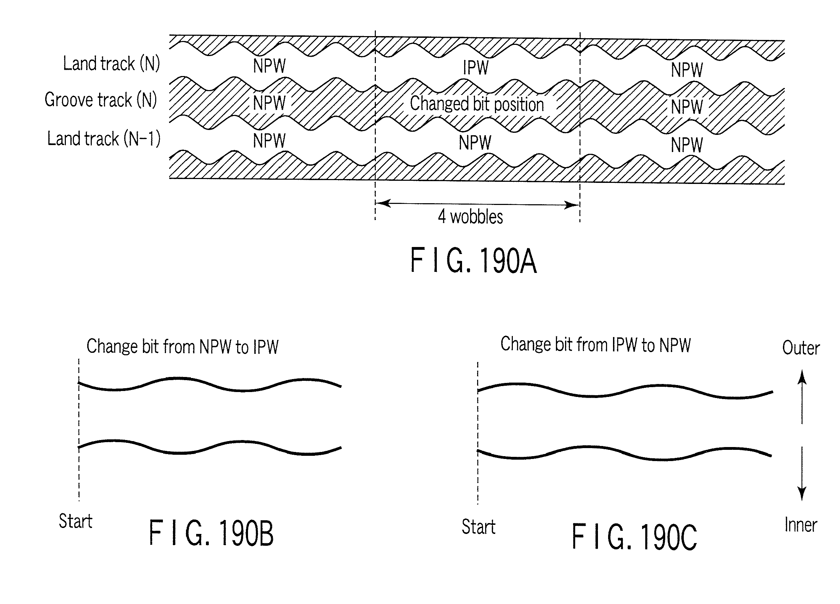

FIGS. 190A and 190B show how the groove width physically changes in the changed bit (indefinite bit) position. At groove cut, wobbling becomes irregular at the changed bit position. This is because a wobble phase is different at both the sides of a groove wall. The groove width is modulated at the changed bit position. The groove width changes from a narrow state into a wide state in the course from NPW to 1PW. The groove width changes from a wide state into a narrow state in the course from 1PW to NPW.

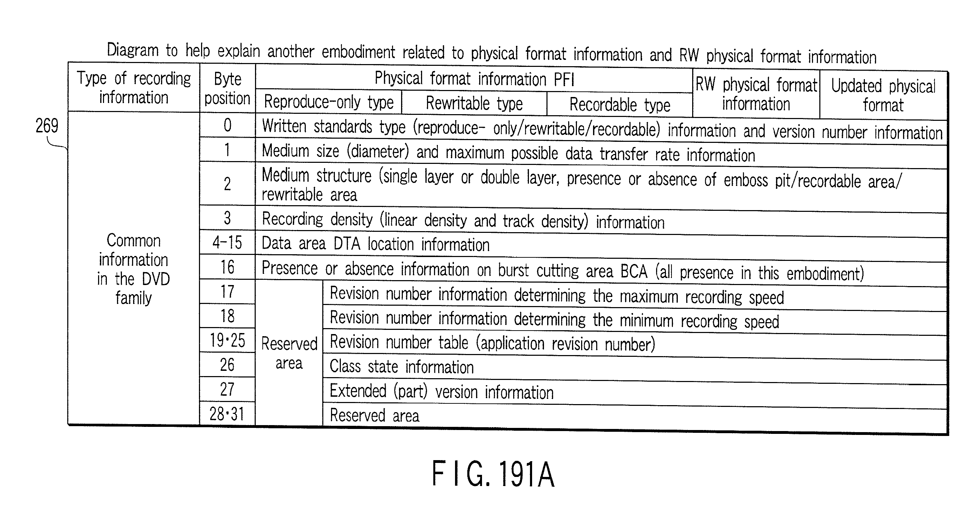

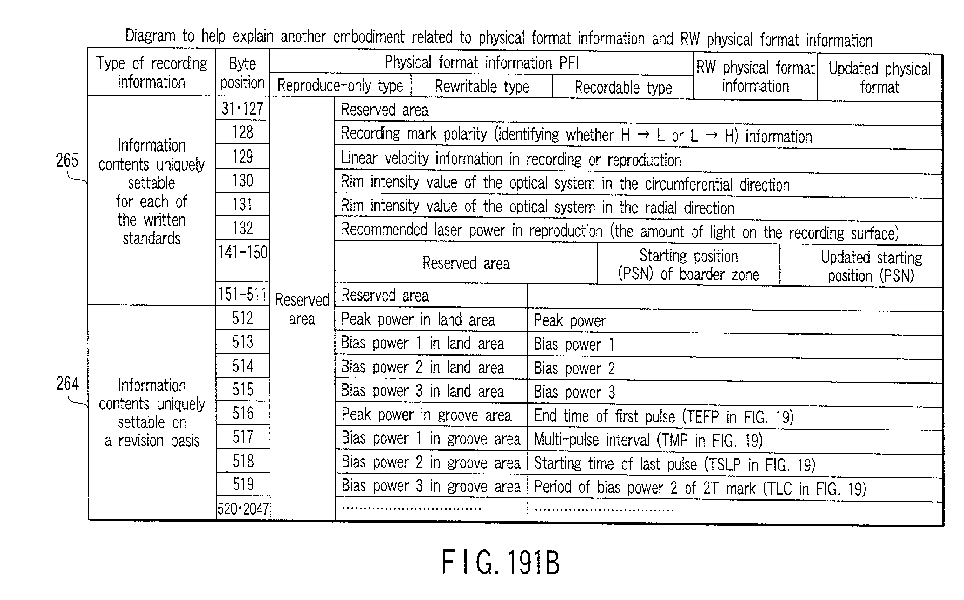

FIG. 191 shows an example of an embodiment concerning physical format information and an RW physical format. The byte position (BP) 0 to byte position (BP) 519 are same as the contents explained in FIG. 141. Concrete numeric values and BP 520 and after are omitted in the figure, and therefore, explanation is made additionally.

BP 514: This specifies bias power 2 in a lead-out aspect in the land track. For example, 0000 0001b is described, and it indicates 0.1 mW.

BP 515: This is bias power 3 in land track. For example, 0000 0001b is described, and it indicates 0.1 mW.

BP 516: This is a first pulse end time (TEPF) of the land track. For example, 0011 0000b is described, and it indicates 23.1 ns (48T/32).

BP 517: This is a multi pulse interval (TMP) of the land track, and when, for example 000 0000b, is described therein, it is 7.7 ns (0.5T).

Herein, information concerning a scanning direction of a laser spot is also described. When it is in the same direction as the other scanning direction, 0b is described, and in the reverse case, 1b is described. Therefore, it is necessary to correct the multi pulse interval according to the scanning direction for use.

BP 518: This is a laser pulse start time (TSLP) of the land track. For example, 000 0000b is described, and it indicates 0 ns.

Herein, information concerning a scanning direction of a laser spot is also described. When it is in the same direction as the other scanning direction, 0b is described, and in the reverse case, 1b is described. Therefore, it is necessary to correct the start time according to the scanning direction for use.

BP 519: This is an interval (TLC) of bias power 2 in the land track, for a 2T mark. For example, 0001 0000b is described, and it indicates 7.7 ns (16T/32).

BP 520: This is an interval (TLC) of bias power 2 in the land track, for a 3T mark. For example, 0001 0000b is described, and it indicates 7.7 ns (16T/32).

BP 521: This is an interval (TLC) of bias power 2 in the land track, for a >4T mark. For example, 0001 0000b is described, and it indicates 7.7 ns (16T/32).

BP 522: This is a first pulse start time (TSFP) of the land track, for a 2T mark and for a reading 2T space. For example, 010 0000b is described, and it indicates 15.4 ns (32T/32).

Herein, information concerning a scanning direction of a laser spot is also described. When it is in the same direction as the other scanning direction, 0b is described, and in the reverse case, 1b is described. Therefore, it is necessary to correct the start time according to the scanning direction for use.

BP 523: This is a first pulse start time (TSFP) of the land track, for a 3T mark and for a reading 2T space. For example, 010 0000b is described, and it indicates 15.4 ns (32T/32).

Herein, information concerning a scanning direction of a laser spot is also described. When it is in the same direction as the other scanning direction, 0b is described, and in the reverse case, 1b is described. Therefore, it is necessary to correct the start time according to the scanning direction for use.

BP 524: This is a first pulse start time (TSFP) of the land track, for a >4T mark and for a reading 2T space. For example, 010 0000b is described, and it indicates 15.4 ns (32T/32).

Herein, information concerning a scanning direction of a laser spot is also described. When it is in the same direction as the other scanning direction, 0b is described, and in the reverse case, 1b is described. Therefore, it is necessary to correct the start time according to the scanning direction for use.

BP 525: This is a first pulse start time (TSFP) of the land track, for a 2T mark and for a reading 3T space. For example, 010 0000b is described, and it indicates 15.4 ns (32T/32).

Herein, information concerning a scanning direction of a laser spot is also described. When it is in the same direction as the other scanning direction, 0b is described, and in the reverse case, 1b is described. Therefore, it is necessary to correct the start time according to the scanning direction for use.

BP 526: This is a first pulse start time (TSFP) of the land track, for a 3T mark and for a reading 3T space. For example, 010 0000b is described, and it indicates 15.4 ns (32T/32).

BP 527: This is a first pulse start time (TSFP) of the land track, for a >4T mark and for a reading 3T space. For example, 010 0000b is described, and it indicates 15.4 ns (32T/32).

BP 528: This is a first pulse start time (TSFP) of the land track, for a 2T mark and for a reading >4T space. For example, 010 0000b is described, and it indicates 15.4 ns (32T/32).

BP 529: This is a first pulse start time (TSFP) of the land track, for a 3T mark and for a reading >4T space. For example, 010 0000b is described, and it indicates 15.4 ns (32T/32).

BP 530: This is a first pulse start time (TSFP) of the land track, for a >4T mark and for a reading >4T space. For example, 010 0000b is described, and it indicates 15.4 ns (32T/32).

In the blocks concerning the above respective times as well, information concerning a scanning direction of a laser spot is also described. When it is in the same direction as the other scanning direction, 0b is described, and in the reverse case, 1b is described. Therefore, it is necessary to correct the start time according to the scanning direction for use.

BP 531: This is a last pulse end time (TELP) of the land track, for a 2T mark and for a trailing 2T space. For example, 0001 0000b is described, and it indicates 7.7 ns (16T/32).

BP 532: This is a last pulse end time (TELP) of the land track, for a 3T mark and for a trailing 2T space. For example, 0001 0000b is described, and it indicates 7.7 ns (16T/32).

BP 533: This is a last pulse end time (TELP) of the land track, for a >4T mark and for a trailing 2T space. For example, 0001 0000b is described, and it indicates 7.7 ns (16T/32).

BP 534: This is a last pulse end time (TELP) of the land track, for a 2T mark and for a trailing 3T space. For example, 0001 0000b is described, and it indicates 7.7 ns (16T/32).

BP 535: This is a last pulse end time (TELP) of the land track, for a 3T mark and for a trailing 3T space. For example, 0001 0000b is described, and it indicates 7.7 ns (16T/32).

BP 536: This is a last pulse end time (TELP) of the land track, for a >4T mark and for a trailing 3T space. For example, 0001 0000b is described, and it indicates 7.7 ns (16T/32).

BP 537: This is a last pulse end time (TELP) of the land track, for a 2T mark and for a trailing >4T space. For example, 0001 0000b is described, and it indicates 7.7 ns (16T/32).

BP 538: This is a last pulse end time (TELP) of the land track, for a 3T mark and for a trailing >4T space. For example, 0001 0000b is described, and it indicates 7.7 ns (16T/32).

BP 539: This is a last pulse end time (TELP) of the land track, for a >4T mark and for a trailing >4T space. For example, 0001 0000b is described, and it indicates 7.7 ns (16T/32).

To the following block positions (BP) 542 to BP 567, information for groove track is described in correspondence to the above land track information (BP 514 to BP 539). Accordingly, by replacing "land track" described in BP 514 to BP 539 with "groove track", information described in BP 514 to BP 539 can be obtained.

In the above-described invention, a recording medium includes a data area for recording user data, a data replacing area secured in preparation for a defect occurring in the data area, a current defect management area (DMA) set for recording defect management information showing that a replacing process using the data replacing area has been performed as well as a plurality of unused DMA set areas for replacing the current DMA set in preparation for an occurrence of a defect, a current DMA manager set area for recording a current DMA manager set showing that a replacing process using the plurality of unused DMA manager set areas has been performed as well as a plurality of unused DMA manager set areas for replacing the current DMA manager set area in preparation for an occurrence of a defect, a manager data area describing "FFh" for showing it is unused, among the plurality of unused DMA manager sets, and an identifier area describing "0010h" for showing an available manager set, among the DMA manager sets.

Accordingly, it is possible to manage defect information and defect management information precisely in aspects of both the apparatus and the storage medium.

Further, by the above identifier, and description data in the unused areas, searching of the unused areas and available areas can be made precisely and at a high speed.

Furthermore, in the embodiment, the following characteristics are attained.

(D1) An information storage medium according to one aspect of the invention is a medium wherein, a plurality of recording frames including data ID information configure ECC blocks, one ECC block is configured of a plurality of small ECC blocks, recording frames are distributed and arranged in the plurality of small ECC blocks, and data IDs in the even number recording frames and data IDs in odd number recording frames are distributed and arranged in respectively different small ECC blocks.

(D2) An information reproducing apparatus according another aspect of the invention is equipped with means for using an information storage medium wherein a plurality of recording frames including data ID information configure ECC blocks, one ECC block is configured of a plurality of small ECC blocks, recording frames are distributed and arranged in the plural small ECC blocks, and data IDs in the even number recording frames and data IDs in odd number recording frames are distributed and arranged in respectively different small ECC blocks, the means reproducing the ECC blocks and performing an error correction process.

(D3) An information recording method according another aspect of the invention is a method in which an information storage medium wherein a plurality of recording frames including data ID information configure ECC blocks, and one ECC block is configured of a plurality of small ECC blocks is used, and recording frames are distributed and arranged in the plural small ECC blocks, and data IDs in the even number recording frames and data IDs in odd number recording frames are distributed and arranged in respectively different small ECC blocks.

(D4) An information reproducing method according another aspect of the invention has a step of using an information storage medium wherein a plurality of recording frames including data ID information configure ECC blocks, one ECC block is configured of a plurality of small ECC blocks, recording frames are distributed and arranged in the plural small ECC blocks, and data IDs in the even number recording frames and data IDs in odd number recording frames are distributed and arranged in respectively different small ECC blocks, thereby reproducing the ECC blocks, and performing an error correction process.

(D5) An information storage medium according to another aspect of the invention has a data area and a lead-in area, and can set an expandable recording management information area in the data area.

(D6) An information recording reproducing apparatus according to another aspect of the invention is equipped with means for using an information storage medium which has a data area and a lead-in area and which can set an expandable recording management information area in the data area, the means setting a new recording management information area in the data area when a free space of a currently set recording management information area becomes a predetermined amount or less.

(D7) An information reproducing apparatus according to another aspect of the invention is equipped with means for using an information storage medium which has a data area and a lead-in area and which can set an expandable recording management information area in the data area, the means searching for plural recording management information areas one after another and reproducing the latest recording management information.

(D8) An information recording method according another aspect of the invention has a step of using an information storage medium which has a data area and a lead-in area and which can set an expandable recording management information area in the data area, the step setting a new recording management information area in the data area when a free space of a currently set recording management information area becomes a predetermined amount or less.

(D9) An information reproducing method according to another aspect of the invention has a step of using an information storage medium which has a data area and a lead-in area and which can set an expandable recording management information area in the data area, the step searching for plural recording management information areas one after another and reproducing the latest recording management information.

(D10) An information storage medium comprising a rewritable area, wherein the rewritable area includes a user area for storing user data, and a defect management area for storing defect management information which controls a defect area on the rewritable area, the defect management area includes first and second defect management reversed areas, the first defect management reserved area is an area for storing the defect management information in its initial state, and the second defect management reserved area is an area for storing the defect management information that is transited at a predetermined timing.

(D11) An information reproducing apparatus which reproduces information from an information storage medium comprising a rewritable area, the apparatus comprising acquiring means for acquiring the latest defect management information which manages a defect area on the rewritable area, from one area in plural defect management reserved areas included in the defect management area on the rewritable area, and reproducing means for reproducing user data from the user area on the rewritable area on the basis of the latest defect management information.

(D12) An information reproducing method for reproducing information from an information storage medium comprising a rewritable area, wherein the latest defect management information which manages a defect area on the rewritable area is acquired from one area in plural defect management reserved areas included in the defect management area on the rewritable area, and user data is reproduced from the user area on the rewritable area on the basis of the latest defect management information.

(D13) An information recording method for recording information to an information storage medium comprising a rewritable area, wherein the rewritable area includes a defect management area for storing defect management information which controls a defect area on the rewritable area, the defect management area includes first and second defect management reversed areas, and in its initial state, the defect management information is recorded to the first defect management reserved area, and the defect management information is transited to the second defect management reserved area at a predetermined timing.

This invention is not limited to the above embodiments and may be modified in still other ways in embodiment stages without departing from the spirit or essential character thereof. The embodiments may be combined as suitably as possible. In that case, each combination produces combined effects. Moreover, in the embodiments, various stages of the invention are included. Various inventions can be extracted by a suitable combination of a plurality of structural requirements disclosed. For example, even if some of all the structural requirements shown in the embodiments have been removed, when the objects described in the caption "Subject to Be Achieved by the Invention" can be solved and the effects described in the caption "Advantage of the Invention" are obtained, the configuration from which the structural requirements have been removed can be extracted as an invention.

According to the present invention, an information storage medium capable of highly reliable defect management can be provided, even if the medium has relatively low resistance to overwriting. In addition, according to the present invention, it is possible to provide an information reproducing apparatus and an information reproducing method which are capable of reproducing information on the basis of highly reliable defect management information. Moreover, according to the present invention, it is possible to provide an information recording method capable of recording highly reliable defect management information.

According to the embodiments, it is possible to manage defect information and defect management information stably and reliably and improve the reliability of products in aspects of apparatus and recording medium.

As has been explained, according to the present invention, there are provided the following information storage mediums, information recording and reproducing apparatuses, information reproducing apparatuses, information recording methods, and information reproducing methods: (a) an information storage medium resistant to dirt and flaws, and an information recording and reproducing apparatus, an information reproducing apparatus, an information recording method, and information reproducing method which use the information storage medium; and (b) an information storage medium with a virtually unlimited number of recording interruptions, and an information recording and reproducing apparatus, an information reproducing apparatus, an information recording method, and information reproducing method which use the information storage medium. It is possible to manage defect information and defect management information in a stable and precise manner, and accordingly, it is possible to improve the product reliability in aspects of both the apparatus and the storage medium.

**Claims**

1. An information storage medium **characterized by** comprising:

   a data area for storing user data;
   a data replacing area secured in preparation for a defect occurring in the data area;
   a current defect management area (DMA) set for storing defect management information showing that a replacing process using the data replacing area has been performed as well as a plurality of unused DMA set areas for replacing the current DMA set in preparation for an occurrence of a defect;
   a current DMA manager set area for recording a current DMA manager set showing that a replacing process using the plural unused DMA manager set area has been performed as well as a plurality of unused DMA manager set areas for replacing the current DMA manager set area in preparation for an occurrence of a defect;
   a manager data area describing first specific information for showing it is unused, among said plurality of unused DMA manager sets; and
   an identifier area describing second specific information for showing an available manager set, among the DMA manager sets.

2. An information recording method of an information storage medium, which has a data area for storing user data; a data replacing area secured in preparation for a defect occurring in the data area; a current defect management area (DMA) set for storing defect management information showing that a replacing process using the data replacing area has been performed as well as a plurality of unused DMA set areas for replacing the current DMA set in preparation for an occurrence of a defect; a current DMA manager set area for recording a current DMA manager set showing that a replacing process using the plural unused DMA manager set area has been performed as well as a plurality of unused DMA manager set areas for replacing the current DMA manager set area in preparation for an occurrence of a defect; a manager data area describing first specific information for showing it is unused, among said plurality of unused DMA manager sets; and an identifier area describing second specific information for showing an available manager set, among the DMA manager sets; the method **characterized by** comprising:

checking the current DMA manager set or the current DMA set; and
keeping the current DMA manager set or the current DMA set as available, when at least two reliable DMA managers or DMAs are included.

3. An information recording apparatus of an information storage medium which has a data area for storing user data; a data replacing area secured in preparation for a defect occurring in the data area; a current defect management area (DMA) set for storing defect management information showing that a replacing process using the data replacing area has been performed as well as a plurality of unused DMA set areas for replacing the current DMA set in preparation for an occurrence of a defect; a current DMA manager set area for recording a current DMA manager set showing that a replacing process using the plural unused DMA manager set area has been performed as well as a plurality of unused DMA manager set areas for replacing the current DMA manager set area in preparation for an occurrence of a defect; a manager data area describing first specific information for showing it is unused, among said plurality of unused DMA manager sets; and an identifier area describing second specific information for showing an available manager set, among the DMA manager sets; the apparatus **characterized by** comprising:

means for checking the current DMA manager set or the current DMA set; and
means for, when at least two reliable DMA managers or DMAs are included from the check result, setting the current DMA manager set or the current DMA set as available.

4. An information reproducing method of an information storage medium which has a data area for storing user data; a data replacing area secured in preparation for a defect occurring in the data area; a current defect management area (DMA) set for storing defect management information showing that a replacing process using the data replacing area has been performed as well as a plurality of unused DMA set areas for replacing the current DMA set in preparation for an occurrence of a defect; a current DMA manager set area for recording a current DMA manager set showing that a replacing process using the plural unused DMA manager set area has been performed as well as a plurality of unused DMA manager set areas for replacing the current DMA manager set area in preparation for an occurrence of a defect; a manager data area describing first specific information for showing it is unused, among said plurality of unused DMA manager sets; and an identifier area describing second specific information for showing an available manager set, among the DMA manager sets; the method for reproducing information recorded in the information storage medium, **characterized by** comprising:

reading and checking the current DMA manager set or the current DMA set; and
setting the current DMA manager set or the current DMA as available when at least two reliable DMA managers or DMAs being included from the check result.

5. An information reproducing apparatus of an information storage medium which has a data area for storing user data; a data replacing area secured in preparation for a defect occurring in the data area; a current defect management area (DMA) set for storing defect management information showing that a replacing process using the data replacing area has been performed as well as a plurality of unused DMA set areas for replacing the current DMA set in preparation for an occurrence of a defect; a current DMA manager set area for recording a current DMA manager set showing that a replacing process using the plural unused DMA manager set area has been performed as well as a plurality of unused DMA manager set areas for replacing the current DMA manager set area in preparation for an occurrence of a defect; a manager data area describing first specific information for showing it is unused, among said plurality of unused DMA manager sets; and an identifier area describing second specific information for showing an available manager set, among the DMA manager sets; the apparatus for reproducing information recorded in the information storage medium, **characterized by** comprising:

means (141) for reading and checking the current DMA manager set or the current DMA set; and
means (143) for, when at least two reliable DMA managers or DMAs are included from the check result, setting the current DMA manager set or the current DMA set as available.

Explanatory diagram showing the configuration of an information recording and reproducing apparatus

FIG. 1

Legend:
- → Main information
- → Flow of information
- --→ Reference clock
- ----→ Command direction

Explanatory diagram showing a detailed configuration of the peripheral part of the sync code position detecting section

FIG. 2

EP 1 742 215 A1

Explanatory diagram of signal processing circuit using
slice-level detecting techniques

F I G. 3

Explanatory diagram of slicer circuit

F I G. 4

Explanatory diagram of signal processing circuit using
PRML detecting techniques

| 1a | 1b |
|----|----|
| 1d | 1c |

4-quadrant
photodetector 302

304
Preamplifier
circuit

Read channel
1 signal

306
High-pass
filter circuit

308
Pre-equalizer
circuit

322
AGC
circuit

334
PLL
circuit

332
Tap
controller

326
A/D
converter
circuit

324

Interpolator

328

330
Equalizer

156
Viterbi
decoder

170
Shift
register
circuit

336
Offset
canceller

FIG. 5

EP 1 742 215 A1

Explanatory diagram showing the configuration of Viterbi decoder

FIG.6

State transition diagram of PR (1, 2, 2, 2, 1) class

FIG.7

ST1

Receiving an instruction
to set a new border

ST2

The information recording and
reproducing section 141
reproduces the contents of the
bordered area BRDA provided
at the present end

ST3

Has Stop
Block STB in border-out BRDO
been detected ?

NO

YES

ST4

The information recording and
reproducing section 141
continues reproducing the
contents of border-out BRDO

ST5

Has an
N1-th, N2-th, or
N3-th physical segment block
from Stop Block STB been
reached ?

NO

YES

ST6

The last
physical sector in the
data segment ?

NO

ST7

Remove sync code 431 and
write a specific pattern partially
over the inside of sync data
432

YES

ST8

Write a specific pattern over
just behind data ID and IED to
the end of the physical sector

ST9

Is the place
now being overwritten a
marker position indicating a
border next to the third
one ?

NO

YES

ST10

Record new border-in BRDI
and then record user data in
bordered area BRDA

F I G. 8

Embodiment of the configuration and dimensions of an information storage medium

$\Phi$44.6 $^{0.0}_{-0.8}$ mm ⟶ Information area INFOA

Burst cutting area BCA

$\Phi$46.3±0.10mm

Maximum allowable diameter of data area DTA ⟶
Reproduce-only type and recordable type : $\Phi$116.0mm
Rewritable type : $\Phi$115.78mm

$\Phi$46.6 $^{0.0}_{-0.4}$ mm ⟶

System lead-in area SYLDI
(In the case of an OPT reproduce-only medium,
the radial dimensions of the system lead-out
area SYLDO overlap with those of this area)

Data area DTA

Connection area CAN

Data lead-out area DTLDO
(In the case of an OPT read-only medium, this area
corresponds to a middle area MDA)

Data lead-in area DTLDI
(In the case of an OPT reproduce-only medium,
the radial dimensions of the data lead-out
area DTLDO overlap with those of this area)

Outside diameter of information area INFOA ⟶
Recordable type : $\Phi$118.0 $^{0.0}_{-0.4}$ mm

Starting position of data lead-in area DTLDI ⟶
$\Phi$47.6 $^{0.0}_{-0.4}$ mm

Rewritable type : $\Phi$117.2 $^{0.0}_{-0.4}$ mm

# FIG. 9

EP 1 742 215 A1

A method of setting physical sector numbers in a recordable information storage medium or a one-layer reproduce-only information storage medium

Physical sector number

Address

02 6AFFh

03 00000h

Radial direction

▭ : Data area DTA
▨ : System lead-in area SYLDI
▧ : Connection area CAN
▦ : Data lead-in area DTLDI
◧ : Data lead-out area DTLDO

F I G. 10

A method of setting physical sector numbers in a reproduce-only
information storage medium with a two-layer structure

(a) Physical
sector
number

PTP

Address of
both layers

02 6AFFh          03 00000h          Radial direction

(b) OTP

Physical
sector
number

Address of layer 1

$*\overline{X}$

$*X$

Address of layer 0

02 6AFFh          03 00000h          Radial direction

☐ : Data area DTA                    ▥ : Middle area MDA
▨ : System lead-in area SYLDI        ◩ : Data lead-out area DTLDO
▦ : Connection area CAN              ▦ : System lead-out area SYLDO
▦ : Data lead-in area DTLDI

F I G. 11

A method of setting physical sector numbers in a rewritable information storage medium

| | Zone | Normal radius (mm) | Physical segment per track | No. of tracks | System/land | | Groove | |
| | | | | | Start physical sector number (hex value) | End physical sector number (hex value) | Start physical sector number (hex value) | End physical sector number (hex value) |
|---|---|---|---|---|---|---|---|---|
| System lead-in area | Initial zone | 23.300~23.795 | | 728.1 | 022400 | 024AFF | | |
| | Buffer zone | | | | 024B00 | 024EFF | | |
| | Control data zone | | | | 024F00 | 0266FF | | |
| | Buffer zone | | | | 026700 | 026AFF | | |
| Connection area | Connection zone | 23.300~23.795 | – – – | – – – | – – – | – – – | – – – | |
| Data lead-out area | Guard track zone | 23.795~24.100 | 13 | 5404 | 029A00 | 02A3FF | 829A00 | 82A3FF |
| | Disk test zone | | | | 02A400 | 02B3FF | 82A400 | 82B3FF |
| | Drive test zone | | | | 02B400 | 02C9FF | 82B400 | 82C9FF |
| | Guard track zone | | | | 02CA00 | 02CCFF | 82CA00 | 82CCFF |
| | Disk ID zone | | | | 02CD00 | 02CDFF | 82CD00 | 82CDFF |
| | DMA1 & DMA2 | | | | 02CE00 | 02FFFF | 82CE00 | 82FFFF |
| Data area | Zone 0 | 24.100~25.639 | | | 030000 | 050D3F | 830000 | 850D3F |
| | Zone 1 | 25.639~27.471 | 14 | 5390 | 050D40 | 07AEFF | 850D40 | 87AEFF |
| | Zone 2 | 27.471~29.304 | 15 | 5390 | 07AF00 | 0A80DF | 87AF00 | 8A80DF |
| | Zone 3 | 29.304~31.136 | 16 | 5390 | 0A80E0 | 0D82DF | 8A80E0 | 8D82DF |
| | Zone 4 | 31.136~32.969 | 17 | 5390 | 0D82E0 | 10B4FF | 8D82E0 | 90B4FF |
| | Zone 5 | 32.969~34.802 | 18 | 5390 | 10B500 | 14173F | 90B500 | 94173F |

F I G. 12A

EP 1 742 215 A1

A method of setting physical sector numbers in a rewritable information storage medium

| | Zone | Normal radius (mm) | Physical segment per track | No. of tracks | System/land | | Groove | |
|---|---|---|---|---|---|---|---|---|
| | | | | | Start physical sector number (hex value) | End physical sector number (hex value) | Start physical sector number (hex value) | End physical sector number (hex value) |
| Data area | Zone 6 | 34.802~36.634 | 19 | 5390 | 141740 | 17A99F | 941740 | 97A99F |
| | Zone 7 | 36.634~38.467 | 20 | 5390 | 17A9A0 | 1B6C1F | 97A9A0 | 9B6C1F |
| | Zone 8 | 38.467~40.299 | 21 | 5390 | 1B6C20 | 1F5EBF | 9B6C20 | 9F5EBF |
| | Zone 9 | 40.299~42.132 | 22 | 5390 | 1F5EC0 | 23817F | 9F5EC0 | A3817F |
| | Zone 10 | 42.132~43.965 | 23 | 5390 | 238180 | 27D45F | A38180 | A7D45F |
| | Zone 11 | 43.965~45.797 | 24 | 5390 | 27D460 | 2C575F | A7D460 | AC575F |
| | Zone 12 | 45.797~47.630 | 25 | 5390 | 2C5760 | 310A7F | AC5760 | B10A7F |
| | Zone 13 | 47.630~49.462 | 26 | 5390 | 310A80 | 35EDBF | B10A80 | B5EDBF |
| | Zone 14 | 49.462~51.295 | 27 | 5390 | 35EDC0 | 3B011F | B5EDC0 | BB011F |
| | Zone 15 | 51.295~53.128 | 28 | 5390 | 3B0120 | 40449F | BB0120 | C0449F |
| | Zone 16 | 53.128~54.960 | 29 | 5390 | 4044A0 | 45B83F | C044A0 | C5B83F |
| | Zone 17 | 54.960~56.793 | 30 | 5390 | 45B840 | 4B5BFF | C5B840 | CB5BFF |
| | Zone 18 | 56.793~57.888 | | | 4B5C00 | 4ED73F | CB5C00 | CED73F |
| Data lead-out area | DM3 & DMA4 | 57.888~58.497 | 31 | 5012 | 4ED740 | 4F093F | CED740 | CF093F |
| | Guard track zone | | | | 4F0940 | 4F0C3F | CF0940 | CF0C3F |
| | Drive test zone | | | | 4F0C40 | 4F223F | CF0C40 | CF223F |
| | Disk test zone | | | | 4F2240 | 4F323F | CF2240 | CF323F |
| | Guard track zone | | | | 4F3240 | 50C73F | CF3240 | D0C73F |

# FIG. 12B

EP 1 742 215 A1

Example of setting general parameters in
a reproduce-only information storage medium

| Parameter | | One-layer structure | Two-layer structure |
|---|---|---|---|
| Recording capacity available to the user | | 15Gbytes/side | 30Gbytes/side |
| Wavelength used | | 405nm | |
| NA (Numerical Aperture) value of objective | | 0.65 | |
| Data bit length | (A) | 0.306 $\mu$m | |
| | (B) | 0.153 $\mu$m | |
| Channel bit length | (A) | 0.204 $\mu$m | |
| | (B) | 0.102 $\mu$m | |
| Minimum pit length (2T) | (A) | 0.408 $\mu$m | |
| | (B) | 0.204 $\mu$m | |
| Maximum pit length (13T) | (A) | 2.652 $\mu$m | |
| | (B) | 1.326 $\mu$m | |
| Track pitch | (A) | 0.68 $\mu$m | |
| | (B) | 0.40 $\mu$m | |
| Outside diameter of information storage medium | | 120mm | |
| Total thickness of information storage medium | | 0.60×2mm | |
| Diameter of center hole | | 15.0mm | |
| Inside radius of data area DTA | | 24.1mm | |
| Outside radius of data area DTA | | 58.0mm | |
| User data size per sector | | 2048bytes | |
| ECC (Error Correction Code) | | Reed-Solomon product code RS(208,192,17)×RS(182,172,11) | |
| ECC block size | | 32 physical sectors | |
| Modulation method | | ETM,RLL(1,10) | |
| Error correctable error length | | 7.1mm | |
| Linear velocity | | 6.61m/s | |
| Channel bit transfer rate | (A) | 32.40Mbps | |
| | (B) | 64.80Mbps | |
| User data transfer rate | (A) | 18.28Mbps | |
| | (B) | 36.55Mbps | |

(A) indicates a value in the system lead-in area SYLDI and
    system lead-out area SYLDO

(B) indicates a value in the data read-in area DTLDI, data
    area DTA, data lead-out area DTLDO, and middle area MDA

FIG. 13

Example of setting general parameters in a recordable information storage medium

| Parameter | | One-layer structure |
|---|---|---|
| Recording capacity available to the user | | 15Gbytes/side |
| Wavelength used<br>NA value of objective | | 405nm<br>0.65 |
| Data bit length | (A) | $0.306\mu m$ |
| | (B) | $0.153\mu m$ |
| Channel bit length | (A) | $0.204\mu m$ |
| | (B) | $0.102\mu m$ |
| Minimum mark/pit length (2T) | (A) | $0.408\mu m$ |
| | (B) | $0.204\mu m$ |
| Maximum mark/pit length (13T) | (A) | $2.652\mu m$ |
| | (B) | $1.326\mu m$ |
| Track pitch | (A) | $0.68\mu m$ |
| | (B) | $0.40\mu m$ |
| Physical address setting method | (B) | Wobble address |
| Outside diameter of information storage medium<br>Total thickness of information storage medium<br>Diameter of center hole<br>Inside radius of data area DTA<br>Outside radius of data area DTA | | 120mm<br>1.20mm<br>15.0mm<br>24.1mm<br>58.0mm |
| Sector size<br>ECC<br> (Error Correction Code)<br>ECC block size<br>Modulation method | | 2048bytes<br>Reed-Solomon product code<br>RS(208,192,17)×RS(182,172,11)<br>32 physical sectors<br>ETM,RLL(1,10) |
| Error correctable error length | | 7.1mm |
| Linear velocity | | 6.61m/s |
| Channel bit transfer rate | (A) | 32.40Mbps |
| | (B) | 64.80Mbps |
| User data transfer rate | (A) | 18.28Mbps |
| | (B) | 36.55Mbps |

(A) indicates a value in the system lead-in area SYLDI

(B) indicates a value in the data read-in area DTLDI, data
    area DTA, and data lead-out area DTLDO

F I G. 14

Example of setting general parameters in a rewritable information storage medium

| Parameter | | One-layer structure |
|---|---|---|
| Recording capacity available to the user | | 20Gbytes/side |
| Wavelength used<br>NA value of objective | | 405nm<br>0.65 |
| Data bit length | (A) | 0.306 $\mu$m |
| | (B) | 0.130 to 0.140 $\mu$m |
| Channel bit length | (A) | 0.204 $\mu$m |
| | (B) | 0.087 to 0.093 $\mu$m |
| Minimum mark/pit length (2T) | (A) | 0.408 $\mu$m |
| | (B) | 0.173 to 0.187 $\mu$m |
| Maximum mark/pit length (13T) | (A) | 2.652 $\mu$m |
| | (B) | 1.126 to 1.213 $\mu$m |
| Track pitch | (A) | 0.68 $\mu$m |
| | (B) | 0.34 $\mu$m |
| Physical address setting method | (B) | Wobble address |
| Outside diameter of information storage medium<br>Total thickness of information storage medium<br>Diameter of center hole<br>Inside radius of data area DTA<br>Outside radius of data area DTA | | 120mm<br>0.60×2mm<br>15.0mm<br>24.1mm<br>57.89mm |
| Sector size<br>ECC<br>(Error Correction Code)<br>ECC block size<br>Modulation method | | 2048bytes<br>Reed-Solomon product code<br>RS (208,192,17) × RS (182,172,11)<br>32 physical sectors<br>ETM,RLL(1,10) |
| Error correctable error length | (A) | 7.1mm |
| | (B) | 6.0mm |
| Linear velocity | (A) | 6.61m/s |
| | (B) | 5.64 to 6.03m/s |
| Channel bit transfer rate | (A) | 32.40Mbps |
| | (B) | 64.80Mbps |
| User data transfer rate | (A) | 18.28Mbps |
| | (B) | 36.55Mbps |

(A) indicates a value in the system lead-in area SYLDI

(B) indicates a value in the data read-in area DTLDI, data area DTA, and data lead-out area DTLDO

F I G. 15

Explanatory diagram showing a comparison of data structure between the system lead-in area and the data lead-in area

(a)

| System lead-in area SYLDI | | | | Connection area CNA | Data lead-in area DTLDI | | Data area DTA |
|---|---|---|---|---|---|---|---|
| Initial zone INZ | Buffer zone 1 BFZ1 | Control data zone CDZ | Buffer zone 2 BFZ2 | Connection zone CNZ | Reserved area RSA | Reference code recording zone RCZ | |
| Emboss pit area | | | | Mirror surface | Emboss pit area | | |

211     210     211

(b)

| System lead-in area SYLDI | | | | Connection area CNA | Data lead-in area DTLDI | | | | | | | Data area DTA |
|---|---|---|---|---|---|---|---|---|---|---|---|---|
| Initial zone INZ | Buffer zone 1 BFZ1 | Control data zone CDZ | Buffer zone 2 BFZ2 | Connection zone CNZ | Guard track zone 1 GTZ1 | Disk test zone DKTZ | Drive test zone DRTZ | Guard track zone 2 GTZ2 | Disk identification zone DIZ | Defect management area 1 DMA1 | Defect management area 2 DMA2 | |
| Emboss pit area | | | | Mirror surface | Land area and gloove area | | | | | | | |

211     210     213

(c)

| System lead-in area SYLDI | | | | Connection area CNA | Data lead-in area DTLDI | | | | | | | | Data area DTA |
|---|---|---|---|---|---|---|---|---|---|---|---|---|---|
| Initial zone INZ | Buffer zone 1 BFZ1 | Control data zone CDZ | Buffer zone 2 BFZ2 | Connection zone CNZ | Guard track zone 1 GTZ1 | Disk test zone DKTZ | Drive test zone DRTZ | Guard track zone 2 GTZ2 | RMD duplication zone RDZ | Recording management zone RMZ | R physical information zone R-PFIZ | Reference code recording zone RCZ | |
| Emboss pit area | | | | Mirror surface | Gloove area | | | | | | | | |

211     210     214

F I G. 16

EP 1 742 215 A1

Explanatory diagram showing a data structure in RMD duplication zone and recording management zone

(a)

| System lead-in area SYLDI | | | | Connection area CNA | Data lead-in area DTLDI | | | | | | | | | Data area DTA |
|---|---|---|---|---|---|---|---|---|---|---|---|---|---|---|
| Initial zone INZ | Buffer zone 1 BFZ1 | Control data zone CDZ | Buffer zone 2 BFZ2 | Connection zone CNZ | Guard track zone 1 GTZ1 | Disk test zone DKTZ | Drive test zone DRTZ | Guard track zone 2 GTZ2 | RMD duplication zone RDZ | Recording management zone RMZ | R physical information zone R-PFIZ | Reference code recording zone RCZ | | |

271

(b)

| RMD duplication zone RDZ | | | | | Recording management zone RMZ corresponding to the first bordered area | | | |
|---|---|---|---|---|---|---|---|---|
| RDZ lead-in RDZLI | | Corresponding RMZ last recording management data RMD recording area | | | Recording management data RMD #1 corresponding to the first bordered area | Recording management data RMD #2 corresponding to the first bordered area | Recording management data RMD #3 corresponding to the first bordered area | Reserved area |
| System reserved field SRSF | Unique ID field UIDF | Corresponding RMZ last recording management data RMD #A | Corresponding RMZ last recording management data RMD #B | Reserved area | | | | |
| 48KB | 16KB | One physical segment block size (64KB) | One physical segment block size (64KB) | | One physical segment block size | 64KB | 64KB | |

272

273

F I G. 17A

| (b) ~ | 48KB | 16KB | One physical segment block size (64KB) | One physical segment block size (64KB) | Reserved area | One physical segment block size | 64KB | 64KB | Reserved area |
|---|---|---|---|---|---|---|---|---|---|

281 282 283 284 – 272 – 285 – 286 287 288    273

| (c) ~ | Contents of information | Drive maker ID | Reserved area | Serial number | Reserved area | Model number | Reserved area | Unique disk ID | Reserved area |
|---|---|---|---|---|---|---|---|---|---|
| | Ordinal bytes used | 0 – 31 | 32 – 31 | 40 – 55 | 56 – 63 | 64 – 79 | 80 – 87 | 88 – 105 | 106 – 2047 |

291 292 293 294 295 296 297 298

| (d) ~ | Contents of information | Reserved area | Random number | Year data | Month data | Day data | Hour data | Minute data | Second data |
|---|---|---|---|---|---|---|---|---|---|
| | Data type | HEX | BIN | ASCII | ASCII | ASCII | ASCII | ASCII | ASCII |
| | Number of bytes used | 2 | 2 | 2 | 2 | 2 | 2 | 2 | 2 |

FIG. 17B

Explanatory diagram showing a comparison of data structure between the data area and the data lead-out area

(a)

| Data lead-in area DTLDI | Data area DTA | Data lead-out area DTLDO | System lead-out area SYLDO |
|---|---|---|---|
| | User data prerecording area | All main data = "00h" | All main data = "00h" |

201

(b)

| Data lead-in area DTLDI | Data area DTA | | Data lead-out area DTLDO | | | | | | |
|---|---|---|---|---|---|---|---|---|---|
| | Spare area SPA | User data rewritable range | Defect management area 3 DMA3 | Defect management area 4 DMA4 | Guard track zone 3 GTZ3 | Drive test zone DRTZ | Disk test zone DKTZ | Guard track zone 4 GTZ4 | Servo calibration zone SCZ |

202

(c)

| Data lead-in area DTLDI | Data area DTA | | | Data lead-out area DTLDO | | | | | | |
|---|---|---|---|---|---|---|---|---|---|---|
| | Spare area SPA | User data rewritable range | Expanded spare area ESPA | Defect management area 3 DMA3 | Defect management area 4 DMA4 | Guard track zone 3 GTZ3 | Drive test zone DRTZ | Disk test zone DKTZ | Guard track zone 4 GTZ4 | Servo calibration zone SCZ |

203 ↑ α (start position address) 211 ⌐ Emboss pit

(d)

| Data lead-in area DTLDI | Data area DTA | | Data lead-out area DTLDO | | | |
|---|---|---|---|---|---|---|
| | Spare area SPA | User data additionally recordable range | Drive test zone DRTZ | Disk test zone DKTZ | Guard track zone 4 GTZ4 | Servo calibration zone SCZ |

204

# F I G. 18A

EP 1 742 215 A1

(c)

| Data lead-in area DTLDI | Data area DTA | | | Data lead-out area DTLDO | | | | | | |
|---|---|---|---|---|---|---|---|---|---|---|
| | Spare area SPA | User data rewritable range | Expanded spare area ESPA | Defect management area 3 DMA3 | Defect management area 4 DMA4 | Guard track zone 3 GTZ3 | Drive test zone DRTZ | Disk test zone DKTZ | Guard track zone 4 GTZ4 | Servo calibration zone SCZ |

203  ↑ α (start position address)                    211 — Emboss pit

(d)

| Data lead-in area DTLDI | Data area DTA | | Data lead-out area DTLDO | | | |
|---|---|---|---|---|---|---|
| | Spare area SPA | User data additionally recordable range | Drive test zone DRTZ | Disk test zone DKTZ | Guard track zone 4 GTZ4 | Servo calibration zone SCZ |

204

(e)

| Data lead-in area DTLDI | Data area DTA | | | Data lead-out area DTLDO | | | | | | |
|---|---|---|---|---|---|---|---|---|---|---|
| | Spare area SPA | User data additionally recordable range | Expanded spare area 2 ESPA2 | Expanded drive test zone 2 EDRTZ2 | Expanded spare area 1 ESPA1 | Expanded drive test zone 1 EDRTZ1 | Drive test zone DRTZ | Disk test zone DKTZ | Guard track zone 4 GTZ4 | Servo calibration zone SCZ |

205   ↑ ζ     ↑ ε     ↑ σ      ↑ γ      ↑ β                211 — Emboss pit

(f)

| Data lead-in area DTLDI | Data area DTA | | Data lead-out area DTLDO | | | | |
|---|---|---|---|---|---|---|---|
| | Spare area SPA | User data additionally recordable range | Expanded spare area ESPA | Expanded drive test zone EDRTZ1 | Drive test zone DRTZ | Disk test zone DKTZ | Guard track zone 4 GTZ4 | Servo calibration zone SCZ |

205

F I G. 18B

Explanatory diagram of waveform (write strategy) of recording pulse

(a) NRZI signal

11T

3T

2T

(b) Waveform of optical pulse

$T_{EFP}$

$T_{SFP}$

$T_{MP}$

$T_{SLP}$

$T_{ELP}$

$T_{LC}$

$T_{SFP}$

$T_{EFP}$

$T_{SLP}$

$T_{ELP}$

$T_{LC}$

$T_{SFP}$

$T_{EL}$

$T_{LC}$

Laser Power

Peak power

Bias power 1

Bias power 2

Bias power 3

Time

First pulse

Multi-pulse train

Last pulse

Bias power 2 period

First pulse

Last pulse

Bias power 2 period

Mono-pulse

Bias power 2 period

Recording pulses

Recording pulses

Recording pulses

F I G. 19

EP 1 742 215 A1

Explanatory diagram to help explain the definition of a recording pulse shape

P1 : (peak power)−(bias power 1)
P2 : (peak power)−(bias power 3)
P3 : (peak power)−(bias power 2)
P4 : (bias power 1)− (bias power 3)

FIG. 20

Explanatory diagram showing the structure related to border areas in a recordable information storage medium

(a)

| Data lead-in area DTLDI | Data area DTA | | | | Data lead-out area DTLDO |
|---|---|---|---|---|---|
| | Spare area SPA | Bordered area BRDA #1 | Border-out BRDO | User data additionally recordable range | |

205    205

(b)

| Data lead-in area DTLDI | Data area DTA | | | | | | | | Data lead-out area DTLDO |
|---|---|---|---|---|---|---|---|---|---|
| | Spare area SPA | Bordered area BRDA #1 | Border zone BRDZ | | Bordered area BRDA #2 | Border-out BRDO | User data additionally recordable area | Expanded drive test zone EDRTZ | |
| | | | Border-out BRDO | Border-in BRDO | | | | | |

(c)

| Data lead-in area DTLDI | Data area DTA | | | | | | | | | | | Data lead-out area DTLDO |
|---|---|---|---|---|---|---|---|---|---|---|---|---|
| | Spare area SPA | Bordered area BRDA #1 | Border zone BRDZ | | Bordered area BRDA #2 | Border zone BRDZ | | Bordered area BRDA #3 | Border-out BRDO | Expanded spare area ESPA | |
| | | | Border-out BRDO | Border-in BRDO | | Border-out BRDO | Border-in BRDI | | | | |

Starting position address of each area→↑ $\eta$   ↑ $\theta$   ↑ $\kappa$

# FIG.21A

EP 1 742 215 A1

| Data lead-in area DTLDI | Data area DTA | | | | | | | | | | | Data lead-out area DTLDO |
|---|---|---|---|---|---|---|---|---|---|---|---|---|
| | Spare area SPA | Bordered area BRDA #1 | Border zone BRDZ | | Bordered area BRDA #2 | Border zone BRDZ | | Bordered area BRDA #3 | Border-out BRDO | Expanded spare area ESPA | |
| | | | Border-out BRDO | Border-in BRDO | | Border-out BRDO | Border-in BRDI | | | | |

(c)~

Starting position address of each area→ ↑-η ······ ↑ θ ······ ↑ κ

| Border-out BRDO | | | | | | Border-in BRDI |
|---|---|---|---|---|---|---|
| Copy information on the contents recorded in the recording management zone C_RMZ | ··· | Stop Block STB | ··· Next border indicating mark NBM | ··· Next border indicating mark NBM | ··· Next border indicating mark NBM | ··· Updated physical format information U_PFI |
| One physical segment block size ··· One physical segment block size | ··· | One physical segment block size | ··· One physical segment block size | ··· One physical segment block size | ··· One physical segment block size | ··· One physical segment block size ··· One physical segment block size |
| Border zone BRDZ | | | | | | |

(d)~

Starting position address of each area→  ↑ μ    ↑ μ+N1    ↑ μ+N2    ↑ μ+N3

# FIG. 21B

Diagram to help explain the data structure of the control data zone and R physical information zone

(a)

| System lead-in area SYLDI | | | | | | | Connection area CNA | | Data lead-in area DTLDI | | | | | Data area DTA |
|---|---|---|---|---|---|---|---|---|---|---|---|---|---|---|
| Initial zone INZ | Buffer zone 1 BFZ1 | Control data zone CDZ | Buffer zone 2 BFZ2 | Connection zone CNZ | Guard track zone 1 GTZ1 | Disk test zone DKTZ | Drive test zone DRTZ | Guard track zone 2 GTZ2 | Recording management zone RMZ | R physical information zone RIZ | Reference code recording zone RCZ | | | |

(b)

| ... | Control data zone CDZ | | ... | R physical information zone RIZ | | ... |
|---|---|---|---|---|---|---|
| ... | Physical format information PFI | Medium-manufacture-related information DMI | ... | Medium-manufacture-related information DMI | R physical format information R_PFI | ... |

F I G. 22A

EP 1 742 215 A1

(b)

| ... | Physical format information PFI | Medium-manufacture-related information DMI | ... | Medium-manufacture-related information DMI | R physical format information R_PFI | ... |

(c)

| Medium-manufacture-related information DMI | | |
|---|---|---|
| Data on the name of the country where the medium was produced | Data on the country to which the medium maker belongs | Other medium-manufacture-related data |
| 251 | 252 | 253 |

| Information name | Physical format information PFI or R physical format information R_PFI | | | |
|---|---|---|---|---|
| Type of recording information | Common data in DVD family | Common data in HD_DVD family | Unique data on the type and version of each written standard | Contents of data uniquely settable in each revision |
| Byte position | 0 – 31 | 32 – 127 | 128 – 511 | 512 – 2047 |
| | 261 | 262 | 263 | 264 |

(d)

| Byte position | 0 – 16 | 17 – 31 |
|---|---|---|
| Type of recording information | Information 267 equally recorded in all of a reproduce-only, a rewritable, and a recordable information storage medium | Information equally recorded in a rewritable and a recordable information storage medium (not recorded in a reproduce-only one) |
| | 267 | 268 |

F I G. 22B

267

Explanatory diagram showing a comparison of information contents between physical format information and R physical format information

| Type of recording information | Byte position | Physical format information PFI | | | R physical format information |
|---|---|---|---|---|---|
| | | Reproduce-only type | Rewritable type | Recordable type | |
| Information common to all of the reproduce type, rewritable time, and recordable type | 0 | Written standards type (reproduce-only/rewritable/recordable) information and version number information | | | |
| | 1 | Medium size (diameter) and maximum possible data transfer rate information | | | |
| | 2 | Medium structure<br>(single layer or double layer, presence or absence of emboss pit/recordable area/rewritable area) | | | |
| | 3 | Recording density (linear density and track density) information | | | |
| | 4-15 | Data area DTA location information | | | |
| | 16 | Presence or absence information on burst cutting area BCA (all presence in this embodiment) | | | |
| Common to the DVD family and common to the rewritable type and recordable type | 17 | Reserved area | Revision number information determining maximum recording speed | | |
| | 18 | | Revision number information determining minimum recording speed | | |
| | 19·25 | | Revision number table (application revision number) | | |
| | 26 | | Class state information | | |
| | 27 | | Extended (part) version information | | |
| | 28·31 | | Reserved area | | |
| HD_DVD | 31·127 | | Reserved area | | |

268

# F I G. 23A

EP 1 742 215 A1

119

263

Explanatory diagram showing a comparison of information contents between physical format information and R physical format information

| Type of recording information | Byte position | Physical format information PFI | | | R physical format information |
|---|---|---|---|---|---|
| | | Read-only type | Rewritable type | Recordable type | |
| Unique information on the type and version of each of the written standards | 128-175 | Medium manufacturer name information | | | |
| | 176-191 | Additional information from medium manufacturer | | | |
| | 192 | Recording mark polarity (identifying whether H → L or L → H) information | | | |
| | 193 | Linear velocity information in recording or reproduction | | | |
| | 194 | Rim intensity value of the optical system in the circumferential direction | | | |
| | 195 | Rim intensity value oft the optical system in the radial direction | | | |
| | 196 | Recommended laser power in reproduction (the amount of light on the recording surface) | | | |
| | 197-511 | Reserved area | | | |
| Information contents uniquely settable on a revision basis | 512 | Reserved area | Peak power in land area | Peak power | |
| | 513 | | Bias power 1 in land area | Bias power 1 | |
| | 514 | | Bias power 2 in land area | Bias power 2 | |
| | 515 | | Bias power 3 in land area | Bias power 3 | |
| | 516 | | Peak power in groove area | End time of first pulse (TEFP in FIG. 36) | |
| | 517 | | Bias power 1 in groove area | Multi-pulse interval (TMP in FIG. 36) | |
| | 518 | | Bias power 2 in groove area | Starting time of last pulse (TSLP in FIG. 36) | |
| | 519 | | Bias power 3 in groove area | Period of bias power 2 of 2T mark (TLC in FIG. 36) | |
| | 520-196 | | ........................ | ........................ | |
| | 197-204 | | Reserved area | Start position information on border zone | |
| | 204·2047 | | Reserved area | | |

264

FIG. 23B

EP 1 742 215 A1

Explanatory diagram showing a comparison of information contents between locations in data area DTA

| Physical format information PFI | | | R physical format information R_PFI |
|---|---|---|---|
| Read-only information storage medium | Rewritable information storage medium | Recordable information storage medium | |
| "00h" | "00h" | "00h" | "00h" |
| Data area starting position information (physical sector number of ECC block number) | Data area in land area DTA starting position information (physical sector number of ECC block number) | Data area starting position information (physical sector number of ECC block number) | Data area starting position information (physical sector number of ECC block number) |
| "00h" | "00h" | "00h" | "00h" |
| Data area end position information (physical sector number of ECC block number) | Data area in land area DTA end position information (physical sector number of ECC block number) | Last position information on user data additionally recordable range [position just in front of ζ point in FIG. 35 (d)] (physical sector number of ECC block number) | Last position information in the recorded data in the relevant bordered area (physical sector number of ECC block number) |
| "00h" | "00h" | "00h" | "00h" |
| Last address information in "0 layer" (physical sector number of ECC block number) | Difference value of each piece of starting position information between land area and groove area (physical sector number of ECC block number) | | |

FIG.24

EP 1 742 215 A1

Diagram to help explain a data structure of recording management data

| RMD field number | Contents of information recorded | | |
|---|---|---|---|
| | 2048-byte reserved area | | |
| 0 | Recording management data format code information | | |
| | Medium state information (unrecorded state, in the middle of recording before finalization, or after finalization) | | |
| | Unique disk ID (disk identification information) | | |
| | Location information on data area DTA | Starting position information on data area DTA (written in physical sector number, ECC block address, or data segment address) | |
| | | Last position of user data recordable range 204 at initialization (written in physical sector number, ECC block address, or data segment address) [indicating a position just in front of β point in the embodiment of FIG. 36(e)] | |
| | Location information on latest (updated) data area DTA | Identification information on the presence or absence of extended drive test zone EDRTZ | |
| | | Identification information on the presence or absence of extended spare area ESPA | |
| | | Starting position information on data area DTA (written in physical sector number, ECC block address, or data segment address) | |
| | | Last position of latest user data recordable range 205 (written in physical sector number, ECC block address, or data segment address) [indicating a position just in front of ζ point in the embodiment of FIG. 36(e)] | |
| | | The remaining amount of the user data recordable range 205 (written in the number of ECC blocs, the number of physical segment blocks, or the number of data segments) | |
| | | Starting position information on data lead-out area DTLDO (written in physical sector number, ECC block address, or data segment address) | |
| | Location information on recording management data RMD | Set size information on recording management zone RMZ (physical segment block unit (= ECC block unit = data segment unit)) | |
| | | Number information on the present recording management data number in recording management zone RMZ or recording management data RMD recorded in recording management zone RMZ (physical segment block unit (= ECC block unit = data segment unit)) ["2" in RMD#2 of FIG. 35(b)] | |
| | | Remaining-amount information on recording management zone RMZ (the amount of additionally recordable recording management data RMD) (physical segment block unit (=ECC block unit=data segment unit)) | |

FIG. 25

Explanatory diagram showing a comparison of the contents of information
between physical format information and R physical format information

| RMD field number | Description of recorded information |
|---|---|
| 1 | #1 : Information recording and reproducing apparatus manufacturer identifying information |
| | #1 : Information recording and reproducing apparatus serial number (written in ASCII code) |
| | #1 : Information recording and reproducing apparatus model number (written in ASCII code) |
| | #1 : Information on data when recording power adjustment was made using a drive test zone |
| | #1 : Information on all recording conditions in information 264 (FIG. 40) uniquely settable on a revision basis |
| | ............................................ |
| | #4 : Information recording and reproducing apparatus manufacturer identifying information |
| | #4 : Information recording and reproducing apparatus serial number (written in ASCII code) |
| | #4 : Information recording and reproducing apparatus model number (written in ASCII code) |
| | #4 : Information on all recording conditions in information 264 (FIG. 40) uniquely settable on a revision basis |
| | #4 : All of recording condition information on information 264 (FIG. 22) uniquely settable in each revision |
| 2 | User usable area |
| 3 | Starting position information (physical sector number) on the first border-out BRDO [showing position information point $\eta$ in the embodiment of FIG. 39(c)] |
| | Starting position information (physical sector number) on the second border-out BRDO [showing position information point $\theta$ in the embodiment of FIG. 39(c)] |
| | ............................................ |
| | Starting position information (physical sector number) on the 50th border-out BRDO |

FIG. 26

EP 1 742 215 A1

Diagram to help explain a data structure of recording management data

| Field number | Description of information recorded |
|---|---|
| 4 | Last position information on the places used for trial writing in drive test zone DRTZ in data lead-in area DTLDI |
| | Size information on an area in which additional writing can be further done in drive test zone DRTZ in data lead-in area DTLDI or flag information indicating whether the drive test zone DRTZ has been used up |
| | Last position information on the places used for trial writing in drive test zone DRTZ in data lead-out area DTLDO (written in physical sector number, ECC block address, or data segment address) |
| | Size information on an area in which additional writing can be further done in drive test zone DRTZ in data lead-out area DTLDO or flag information indicating whether the drive test zone DRTZ has been used up |
| | Information on the number of additional setting of extended drive test zone EDRTZ |
| | Starting position information on the first set extended drive test zone EDRTZ (written in physical sector number, ECC block address, or data segment address) |
| | End position information on the first set extended drive test zone EDRTZ (written in physical sector number, ECC block address, or data segment address) or size information on the first set extended drive test zone EDRTZ |
| | Last position information on the places used for trial writing in the first set extended drive test zone EDRTZ (written in physical sector number, ECC block address, or data segment address) |
| | Size information on an area in which additional writing can be further done in the first set extended drive test zone EDRTZ or flag information indicating whether the extended drive test zone EDRTZ has been used up |
| | Starting position information on the second set extended drive test zone EDRTZ (written in physical sector number, ECC block address, or data segment address) |
| | .................................................... |

FIG. 27

EP 1 742 215 A1

Diagram to help explain a data structure of recording management data

| Field number | Description of information recorded |
|---|---|
| 5 | Information of the number of ECC blocks already used for replacement in spare area SPA adjacent to data lead-in area DTLDI or last position information on the places used for replacement (ECC block/data segment address) |
| | Information on the remaining amount of spare area SPA adjacent to data lead-in area DTLDI (information on the number of ECC blocks in an unused place usable for future replacement or information on the number of physical segment blocks or data segments) |
| | Information on the number of additional setting of extended spare area ESPA |
| | Information on the starting position of the first set extended spare area ESPA (written in physical sector number, ECC block address, or data segment address) |
| | Information on the end position of the first set extended spare area ESPA (written in physical sector number, ECC block address, or data segment address) |
| | Information on the number of ECC blocks or information on the number of physical segments already used for replacement in the first set extended spare area ESPA, or last position information on the places used for replacement (ECC block/data segment address) |
| | Information on the remaining amount in the first set extended spare area ESPA (information on the number of ECC blocks in an unused place usable for replacement or information on the number of physical segment blocks) |
| | Information on the starting position of the second set extended spare area ESPA (written in physical sector number, ECC block address, or data segment address) |
| | Information on the end position of the second set extended spare area ESPA (written in physical sector number, ECC block address, or data segment address) |
| | Information on the number of ECC blocks or information on the number of physical segment already used for replacement in the second set extended spare area ESPA, or last position information on the places used for replacement (ECC block/data segment address) |
| | Information on the remaining amount of the second set extended spare area ESPA (information on the number of ECC blocks in an unused place usable for future replacement, the number of physical segment blocks, or the number of data segments) |
| | ............................................. |

FIG. 28

Diagram to help explain a data structure of recording management data

| RMD field number | Description of information recorded | | |
|---|---|---|---|
| 6 | Size information on RMD field 6 | | |
| | Secondary defect list information SDL | Secondary defect list identification information | |
| | | Update counter (the number of updates) of secondary defect list | |
| | | Information on the number of secondary defect list entries | |
| | | The first secondary defect list entry information | Information on the presence or absence of the process of replacing a defective block with a spare block |
| | | | Information on the type of defect management (whether the replaced ECC block was replaced because it was defective/whether the replaced ECC block was nondefective and subjected to multi-recording) |
| | | | Information on the position of the replaced ECC block (ECC block address, data segment address, or physical sector number at ECC block starting position) |
| | | | Information on the position of the replacing ECC block (ECC block address, data segment address, or physical sector number at ECC block starting position) |
| | | ................................................ | |
| | | The last secondary defect list entry information | Information on the presence or absence of the process of replacing a defective block with a spare block |
| | | | Information on the type of defect management (whether the replaced ECC block was replaced because it was defective/whether the replaced ECC block was nondefective and subjected to multi-recording) |
| | | | Information on the position of the replaced ECC block (ECC block address, data segment address, or physical sector number at ECC block starting position) |
| | | | Information on the position of the replacing ECC block (ECC block address, data segment address, or physical sector number at ECC block starting position) |

# FIG. 29

EP 1 742 215 A1

Diagram to help explain a data structure of recording management data

| RMD field number | Description of information recorded |
|---|---|
| 7 | Information on the total number of R zones |
| | Information of the number of first "Open R Zones" |
| | Information of the number of second "Open R Zones" |
| | Information on the start position of the first "Complete R Zone" (physical sector number) |
| | Information on the end position of the first "Complete R Zone" (physical sector number) |
| | ............................................. |
| | Information on the start position of the 254-th "Complete R Zone" (physical sector number) |
| | Information on the end position of the 254-th "Complete R Zone" (physical sector number) |
| 8 and later | Information on the start position of the 255-th "Complete R Zone" (physical sector number) |
| | Information on the end position of the 255-th "Complete R Zone" (physical sector number) |
| | ............................................. |
| | Information on the start position of the n-th "Complete R Zone" (physical sector number) |
| | Information on the end position of the n-th "Complete R Zone" (physical sector number) |

F I G. 30

Diagram to help explain the converting procedure for the formation of a physical sector structure

F I G. 31

EP 1 742 215 A1

Diagram to help explain a structure of a data frame

| 172 bytes | | | | 172 bytes |
|---|---|---|---|---|
| Data ID (4 bytes) | IED (2 bytes) | RSV (6 bytes) | Main data (D0~D159) | Main data 172 bytes (D160~D331) |
| Main data 172 bytes (D332~D503) | | | | Main data 172 bytes (D504~D675) |
| Main data 172 bytes (D676~D847) | | | | Main data 172 bytes (D848~D1019) |
| Main data 172 bytes (D1020~D1191) | | | | Main data 172 bytes (D1192~D1363) |
| Main data 172 bytes (D1364~D1535) | | | | Main data 172 bytes (D1536~D1707) |
| Main data 172 bytes (D1708~D1879) | | | | Main data 172 bytes (D1880~D2047) · EDC (4 bytes) |

6 rows

F I G. 32

Diagram to help explain initial values supplied to a shift register in creating
a scrambled frame and a feedback shift register circuit

(a)

| Initial preset number | Initial preset value | Initial preset number | Initial preset value |
|---|---|---|---|
| 0h | 0001h | 8h | 0010h |
| 1h | 5500h | 9h | 5000h |
| 2h | 0002h | 0Ah | 0020h |
| 3h | 2A00h | 0Bh | 2001h |
| 4h | 0004h | 0Ch | 0040h |
| 5h | 5400h | 0Dh | 4002h |
| 6h | 0008h | 0Eh | 0080h |
| 7h | 2800h | 0Fh | 0005h |

(b)

| r14 | r13 | r12 | r11 | r10 | r9 | r8 | r7 | r6 | r5 | r4 | r3 | r2 | r1 | r0 |
|---|---|---|---|---|---|---|---|---|---|---|---|---|---|---|

FIG. 33

Explanatory diagram of ECC block structure

| | 172 bytes | | PI 10 bytes | | 172 bytes | | PI 10 bytes | |
|---|---|---|---|---|---|---|---|---|

| B0,0 | | B0,171 | B0,172 | | B0,181 | B0,182 | | B0,353 | B0,354 | | B0,363 |
| B1,0 | | B1,171 | B1,172 | | B1,181 | B1,182 | | B1,353 | B1,354 | | B1,363 |
| B2,0 | | B2,171 | B2,172 | | B2,181 | B2,182 | | B2,353 | B2,354 | | B2,363 |
| | | | | | | | | | | | |
| B189,0 | | B189,171 | B189,172 | | B189,181 | B189,182 | | B189,353 | B189,354 | | B189,363 |
| B190,0 | | B190,171 | B190,172 | | B190,181 | B190,182 | | B190,353 | B190,354 | | B190,363 |
| B191,0 | | B191,171 | B191,172 | | B191,181 | B191,182 | | B191,353 | B191,354 | | B191,363 |
| B192,0 | | B192,171 | B192,172 | | B192,181 | B192,182 | | B192,353 | B192,354 | | B192,363 |
| | | | | | | | | | | | |
| B207,0 | | B207,171 | B207,172 | | B207,181 | B207,182 | | B207,353 | B207,354 | | B207,363 |

192 rows / PO 16 rows

FIG. 34

Explanatory diagram of frame arrangement after scrambling

One scrambled frame

| | 172 | 10 | 172 | 10 |
|---|---|---|---|---|

| 6 | 0-L | | 0-R | |
| | 1-R | | 1-L | |
| | 2-L | | 2-R | |
| | | PI | | PI | 208 |
| | 31-R | | 31-L | |
| 16 | PO | | PO | |

FIG. 35

Diagram to help explain a PO interleaving method

F I G. 36

EP 1 742 215 A1

# FIG. 37

Diagram to help explain a structure of a physical sector

(a) 7 rows

| 24 | 1092 | 24 | 1092 | 24 | 1092 | 24 | 1092 |
|---|---|---|---|---|---|---|---|
| SY0 | | SY1 | | SY1 | | SY2 | |
| SY1 | | SY2 | | SY2 | | SY3 | |
| SY1 | | SY3 | | SY3 | | SY1 | |
| SY2 | | SY3 | | SY2 | | SY2 | |
| SY1 | | SY3 | | SY1 | | SY1 | |
| SY3 | | SY2 | | SY3 | | SY3 | |
| SY2 | | SY1 | | | | | |

Sync frame | Sync frame | Sync frame | Sync frame

(b) 6 rows

| 24 | 1092 | 24 | 1092 | 24 | 1092 | 24 | 1092 |
|---|---|---|---|---|---|---|---|
| | | | | SY0 | | SY1 | |
| SY1 | | SY2 | | SY1 | | SY2 | |
| SY2 | | SY3 | | SY1 | | SY3 | |
| SY3 | | SY1 | | SY2 | | SY3 | |
| SY2 | | SY2 | | SY1 | | SY3 | |
| SY1 | | SY1 | | SY3 | | SY2 | |
| SY3 | | SY3 | | SY2 | | SY1 | |

Sync frame | Sync frame | Sync frame | Sync frame

Diagram to help explain the contents of sync code pattern

|  | State 0 | State 1 or State 2 |
|---|---|---|
| SY0 | 1000#0 010000 000000 001001 | 0100#0 010000 000000 001001 |
| SY1 | 10100# 010000 000000 001001 | 00100# 010000 000000 001001 |
| SY2 | 10010# 010000 000000 001001 | 00010# 010000 000000 001001 |
| SY3 | 00000# 010000 000000 001001 | 00#010 010000 000000 001001 |

# F I G. 38

Data word B(t) → [Code table 352] → Code word X(t) → [Code connector 354] → Connection code word → [DSV controller 356] → Channel bit stream

State S(t) — [State register 358] — Next state S(t+1)

# F I G. 39

Concatenation rule

| Index | Preceding code word | Present code word | Concatenated code word |
|-------|---------------------|-------------------|------------------------|
| 1 | ??0101 010101 | 010??? ?????? | ??0100 000000 010??? ?????? |
| 2 | ??0101 010101 | 001??? ?????? | ??0100 000000 001??? ?????? |
| 3 | ??1001 010101 | 010??? ?????? | ??1000 000000 010??? ?????? |
| 4 | ?????0 101010 | 101010 ?????? | ?????0 100000 000010 ?????? |
| 5 | ?????1 001010 | 101010 ?????? | ?????1 000000 000010 ?????? |
| 6 | ?????? ??0101 | 010101 010??? | ?????? ??0100 000000 010??? |
| 7 | ?????? ??0101 | 010101 001??? | ?????? ??0100 000000 001??? |
| 8 | ?????? ??1001 | 010101 010??? | ?????? ??1000 000000 010??? |
| 9 | ?????? ?????1 | 001010 101010 | ?????? ?????1 000000 000010 |

## F I G. 40

Concatenation of a code word and a sync code

| Index | Preceding code word | Following sync code | Concatenated code |
|-------|---------------------|---------------------|-------------------|
| S | ?????0 00000# | SY3 | ?????0 000001+SY3 |

## F I G. 41

Separation rule

| Index | Read code word | Present code word | Following code word |
|-------|----------------|-------------------|---------------------|
| 1 | ?????? ?00000 0000?? ?????? | ?????? ?01010 | 1010?? ?????? |
| 2 | ?????? ????00 000000 0????? | ?????? ????01 | 010101 0????? |
| 3 | ?????? ?????? 000000 0000?? | ?????? ?????? | 001010 1010?? |

## F I G. 42

Explanatory diagram of a conversion table in
the modulation method of the present invention

| Data word | State 0 Code word | Next state | State 1 Code word | Next state | State 2 Code word | Next state |
|---|---|---|---|---|---|---|
| 00 | 100010 00000* | 0 | 010100 01000* | 0 | 010100 01000* | 0 |
| 01 | 100010 00000# | 1 | 010100 010001 | 1 | 010100 010001 | 1 |
| 02 | 100010 000010 | 0 | 010100 010010 | 0 | 010100 010010 | 0 |
| 03 | 100010 000010 | 1 | 010100 010010 | 1 | 010100 010010 | 1 |
| 04 | 100010 10000* | 0 | 010100 01010* | 0 | 010100 01010* | 0 |
| 05 | 100010 10000# | 1 | 010100 010101 | 1 | 010100 010101 | 1 |
| 06 | 100010 100010 | 0 | 010100 010100 | 2 | 010100 010100 | 2 |
| 07 | 100010 100010 | 1 | 010100 010000 | 2 | 010100 010000 | 2 |
| 08 | 100010 10100* | 0 | 010100 00#00* | 0 | 010100 00#00* | 0 |
| 09 | 100010 101001 | 1 | 010100 00#001 | 1 | 010100 00#001 | 1 |
| 0A | 100010 101010 | 0 | 010100 00#010 | 0 | 010100 00#010 | 0 |
| 0B | 100010 101010 | 1 | 010100 00#010 | 1 | 010100 00#010 | 1 |
| 0C | 100010 10010* | 0 | 010100 00010* | 0 | 010100 00010* | 0 |
| 0D | 100010 100101 | 1 | 010100 000101 | 1 | 010100 000101 | 1 |
| 0E | 100010 100100 | 2 | 010100 000100 | 2 | 010100 000100 | 2 |
| 0F | 100010 101000 | 2 | 010100 001000 | 2 | 010100 001000 | 2 |
| 10 | 100010 01000* | 0 | 010000 01000* | 0 | 010000 01000* | 0 |
| 11 | 100010 010001 | 1 | 010000 010001 | 1 | 010000 010001 | 1 |
| 12 | 100010 010010 | 0 | 010000 010010 | 0 | 010000 010010 | 0 |
| 13 | 100010 010010 | 1 | 010000 010010 | 1 | 010000 010010 | 1 |
| 14 | 100010 01010* | 0 | 010000 01010* | 0 | 010000 01010* | 0 |
| 15 | 100010 010101 | 1 | 010000 010101 | 1 | 010000 010101 | 1 |
| 16 | 100010 010100 | 2 | 010000 010100 | 2 | 010000 010100 | 2 |
| 17 | 100010 010000 | 2 | 010000 010000 | 2 | 010000 010000 | 2 |
| 18 | 100010 00100* | 0 | 010000 00100* | 0 | 010000 00100* | 0 |
| 19 | 100010 001001 | 1 | 010000 001001 | 1 | 010000 001001 | 1 |
| 1A | 100010 001010 | 0 | 010000 00#010 | 0 | 010000 00#010 | 0 |
| 1B | 100010 001010 | 1 | 010000 00#010 | 1 | 010000 00#010 | 1 |
| 1C | 100010 00010* | 0 | 010000 00010* | 0 | 010000 00010* | 0 |
| 1D | 100010 000101 | 1 | 010000 000101 | 1 | 010000 000101 | 1 |
| 1E | 100010 000100 | 2 | 010000 000100 | 2 | 010000 000100 | 2 |
| 1F | 100010 001000 | 2 | 010000 001000 | 2 | 010000 001000 | 2 |
| 20 | 100001 00000* | 0 | 010101 00000* | 0 | 010101 00000* | 0 |
| 21 | 100001 00000# | 1 | 010101 00000# | 1 | 010101 00000# | 1 |
| 22 | 100001 000010 | 0 | 010101 000010 | 0 | 010101 000010 | 0 |
| 23 | 100001 000010 | 1 | 010101 000010 | 1 | 010101 000010 | 1 |
| 24 | 100000 10000* | 0 | 010100 10000* | 0 | 010100 10000* | 0 |
| 25 | 100000 10000# | 1 | 010100 10000# | 1 | 010100 10000# | 1 |
| 26 | 100000 100010 | 0 | 010100 100010 | 0 | 010100 100010 | 0 |
| 27 | 100000 100010 | 1 | 010100 100010 | 1 | 010100 100010 | 1 |
| 28 | 100000 10100* | 0 | 010100 10100* | 0 | 010100 10100* | 0 |
| 29 | 100000 101001 | 1 | 010100 101001 | 1 | 010100 101001 | 1 |
| 2A | 100000 101010 | 0 | 010100 101010 | 0 | 010100 101010 | 0 |
| 2B | 100000 101010 | 1 | 010100 101010 | 1 | 010100 101010 | 1 |
| 2C | 100000 10010* | 0 | 010100 10010* | 0 | 010100 10010* | 0 |
| 2D | 100000 100101 | 1 | 010100 100101 | 1 | 010100 100101 | 1 |
| 2E | 100000 100100 | 2 | 010100 100100 | 2 | 010100 100100 | 2 |
| 2F | 100000 101000 | 2 | 010100 101000 | 2 | 010100 101000 | 2 |

# FIG. 43

| Data word | State 0 | | State 1 | | State 2 | |
|---|---|---|---|---|---|---|
| | Code word | Next state | Code word | Next state | Code word | Next state |
| 30 | 10000# 01000* | 0 | 010101 01000* | 0 | 010101 01000* | 0 |
| 31 | 10000# 010001 | 1 | 010101 010001 | 1 | 010101 010001 | 1 |
| 32 | 10000# 010010 | 0 | 010101 010010 | 0 | 010101 010010 | 0 |
| 33 | 10000# 010010 | 1 | 010101 010010 | 1 | 010101 010010 | 1 |
| 34 | 10000# 01010* | 0 | 010000 00000* | 0 | 010000 00000* | 0 |
| 35 | 100000 010101 | 1 | 010000 000001 | 1 | 010000 000001 | 1 |
| 36 | 10000# 010100 | 2 | 010101 010100 | 2 | 010101 010100 | 2 |
| 37 | 10000# 010000 | 2 | 010101 010000 | 2 | 010101 010000 | 2 |
| 38 | 10000# 00100* | 0 | 010101 00100* | 0 | 010101 00100* | 0 |
| 39 | 10000# 001001 | 1 | 010101 001001 | 1 | 010101 001001 | 1 |
| 3A | 10000# 001010 | 0 | 010101 001010 | 0 | 010101 001010 | 0 |
| 3B | 10000# 001010 | 1 | 010101 001010 | 1 | 010101 001010 | 1 |
| 3C | 10000# 00010* | 0 | 010101 00010* | 0 | 010101 00010* | 0 |
| 3D | 10000# 000101 | 1 | 010101 000101 | 1 | 010101 000101 | 1 |
| 3E | 10000# 000100 | 2 | 010101 000100 | 2 | 010101 000100 | 2 |
| 3F | 10000# 001000 | 2 | 010101 001000 | 2 | 010101 001000 | 2 |
| 40 | 101010 00000* | 0 | 010010 00000* | 0 | 010010 00000* | 0 |
| 41 | 101010 00000# | 1 | 010010 00000# | 1 | 010010 00000# | 1 |
| 42 | 101010 000010 | 0 | 010010 000010 | 0 | 010010 000010 | 0 |
| 43 | 101010 000010 | 1 | 010010 000010 | 1 | 010010 000010 | 1 |
| 44 | 101010 10000* | 0 | 010010 10000* | 0 | 010010 10000* | 0 |
| 45 | 101010 10000# | 1 | 010010 10000# | 1 | 010010 10000# | 1 |
| 46 | 101010 100010 | 0 | 010010 100010 | 0 | 010010 100010 | 0 |
| 47 | 101010 100010 | 1 | 010010 100010 | 1 | 010010 100010 | 1 |
| 48 | 000000 00100* | 0 | 010010 10100* | 0 | 010010 10100* | 0 |
| 49 | 100000 000001 | 1 | 010010 101001 | 1 | 010010 101001 | 1 |
| 4A | 100000 000010 | 0 | 010010 101010 | 0 | 010010 101010 | 0 |
| 4B | 100000 000010 | 1 | 010010 101010 | 1 | 010010 101010 | 1 |
| 4C | 101010 10010* | 0 | 010010 10010* | 0 | 010010 10010* | 0 |
| 4D | 101010 100101 | 1 | 010010 100101 | 1 | 010010 100101 | 1 |
| 4E | 101010 100100 | 2 | 010010 100100 | 2 | 010010 100100 | 2 |
| 4F | 000000 001000 | 2 | 010010 101000 | 2 | 010010 101000 | 2 |
| 50 | 101010 01000* | 0 | 010010 01000* | 0 | 010010 01000* | 0 |
| 51 | 101010 010001 | 1 | 010010 010001 | 1 | 010010 010001 | 1 |
| 52 | 101010 010010 | 0 | 010010 010010 | 0 | 010010 010010 | 0 |
| 53 | 101010 010010 | 1 | 010010 010010 | 1 | 010010 010010 | 1 |
| 54 | 101010 01010* | 0 | 010010 01010* | 0 | 010010 01010* | 0 |
| 55 | 101010 010101 | 1 | 010010 010101 | 1 | 010010 010101 | 1 |
| 56 | 101010 010100 | 2 | 010010 010100 | 2 | 010010 010100 | 2 |
| 57 | 101010 010000 | 2 | 010010 010000 | 2 | 010010 010000 | 2 |
| 58 | 101010 00100* | 0 | 010010 00100* | 0 | 010010 00100* | 0 |
| 59 | 101010 001001 | 1 | 010010 001001 | 1 | 010010 001001 | 1 |
| 5A | 101010 001010 | 0 | 010010 001010 | 0 | 010010 001010 | 0 |
| 5B | 101010 001010 | 1 | 010010 001010 | 1 | 010010 001010 | 1 |
| 5C | 101010 00010* | 0 | 010010 00010* | 0 | 010010 00010* | 0 |
| 5D | 101010 000101 | 1 | 010010 000101 | 1 | 010010 000101 | 1 |
| 5E | 101010 000100 | 2 | 010010 000100 | 2 | 010010 000100 | 2 |
| 5F | 101010 001000 | 2 | 010010 001000 | 2 | 010010 001000 | 2 |

F I G. 44

Explanatory diagram of a conversion table in the
modulation method of the present invention

| Data word | State 0 | | State 1 | | State 2 | |
|---|---|---|---|---|---|---|
| | Code word | Next state | Code word | Next state | Code word | Next state |
| 60 | 101001 00000* | 0 | 010001 00000* | 0 | 010001 00000* | 0 |
| 61 | 101001 00000# | 1 | 010001 000001 | 1 | 010001 000001 | 1 |
| 62 | 101001 000010 | 0 | 010001 000010 | 0 | 010001 000010 | 0 |
| 63 | 101001 000010 | 1 | 010001 000010 | 1 | 010001 000010 | 1 |
| 64 | 101000 10000* | 0 | 010000 10000* | 0 | 010000 10000* | 0 |
| 65 | 101000 10000# | 1 | 010000 10000# | 1 | 010000 10000# | 1 |
| 66 | 101000 100010 | 0 | 010000 100010 | 0 | 010000 100010 | 0 |
| 67 | 101000 100010 | 1 | 010000 100010 | 1 | 010000 100010 | 1 |
| 68 | 101000 10100* | 0 | 010000 10100* | 0 | 010000 10100* | 0 |
| 69 | 101000 101001 | 1 | 010000 101001 | 1 | 010000 101001 | 1 |
| 6A | 101000 101010 | 0 | 010000 101010 | 0 | 010000 101010 | 0 |
| 6B | 101000 101010 | 1 | 010000 101010 | 1 | 010000 101010 | 1 |
| 6C | 101000 10010* | 0 | 010000 10010* | 0 | 010000 10010* | 0 |
| 6D | 101000 100101 | 1 | 010000 100101 | 1 | 010000 100101 | 1 |
| 6E | 101000 100100 | 2 | 010000 100100 | 2 | 010000 100100 | 2 |
| 6F | 101000 101000 | 2 | 010000 101000 | 2 | 010000 101000 | 2 |
| 70 | 101001 01000* | 0 | 010001 01000* | 0 | 010001 01000* | 0 |
| 71 | 101001 010001 | 1 | 010001 010001 | 1 | 010001 010001 | 1 |
| 72 | 101001 010010 | 0 | 010001 010010 | 0 | 010001 010010 | 0 |
| 73 | 101001 010010 | 1 | 010001 010010 | 1 | 010001 010010 | 1 |
| 74 | 101001 01010* | 0 | 010001 01010* | 0 | 010001 01010* | 0 |
| 75 | 101001 010101 | 1 | 010001 000000 | 1 | 010001 000000 | 1 |
| 76 | 101001 010100 | 2 | 010001 010100 | 2 | 010001 010100 | 2 |
| 77 | 101001 010000 | 2 | 010001 010000 | 2 | 010001 010000 | 2 |
| 78 | 101001 00100* | 0 | 010001 00100* | 0 | 010001 00100* | 0 |
| 79 | 101001 001001 | 1 | 010001 001001 | 1 | 010001 001001 | 1 |
| 7A | 101001 001010 | 0 | 010001 001010 | 0 | 010001 001010 | 0 |
| 7B | 101001 001010 | 1 | 010001 001010 | 1 | 010001 001010 | 1 |
| 7C | 101001 00010* | 0 | 010001 00010* | 0 | 010001 00010* | 0 |
| 7D | 101001 000101 | 1 | 010001 000101 | 1 | 010001 000101 | 1 |
| 7E | 101001 000100 | 2 | 010001 000100 | 2 | 010001 000100 | 2 |
| 7F | 101001 001000 | 2 | 010001 001000 | 2 | 010001 001000 | 2 |
| 80 | 100100 01000* | 0 | 000100 01000* | 0 | 000100 01000* | 0 |
| 81 | 100100 010001 | 1 | 000100 010001 | 1 | 000100 010001 | 1 |
| 82 | 100100 010010 | 0 | 000100 010010 | 0 | 000100 010010 | 0 |
| 83 | 100100 010010 | 1 | 000100 010010 | 1 | 000100 010010 | 1 |
| 84 | 100100 01010* | 0 | 000100 01010* | 0 | 000100 01010* | 0 |
| 85 | 100100 010101 | 1 | 000100 010101 | 1 | 000100 010101 | 1 |
| 86 | 100100 010100 | 2 | 000100 010100 | 2 | 000100 010100 | 2 |
| 87 | 100100 010000 | 2 | 000100 010000 | 2 | 000100 010000 | 2 |
| 88 | 100100 00#00* | 0 | 000100 00#00* | 0 | 000100 00#00* | 0 |
| 89 | 100100 00#001 | 1 | 000100 00#001 | 1 | 000100 00#001 | 1 |
| 8A | 100100 00#010 | 0 | 000100 00#010 | 0 | 000100 00#010 | 0 |
| 8B | 100100 00#010 | 1 | 000100 00#010 | 1 | 000100 00#010 | 1 |
| 8C | 100100 00010* | 0 | 000100 00010* | 0 | 000100 00010* | 0 |
| 8D | 100100 000101 | 1 | 000100 000101 | 1 | 000100 000101 | 1 |
| 8E | 100100 000100 | 2 | 000100 000100 | 2 | 000100 000100 | 2 |
| 8F | 100100 001000 | 2 | 000100 001000 | 2 | 000100 001000 | 2 |

FIG. 45

| Data word | State 0 Code word | Next state | State 1 Code word | Next state | State 2 Code word | Next state |
|---|---|---|---|---|---|---|
| 90 | 101000 01000* | 0 | 001000 01000* | 0 | 001000 01000* | 0 |
| 91 | 101000 010001 | 1 | 001000 010001 | 1 | 001000 010001 | 1 |
| 92 | 101000 010010 | 0 | 001000 010010 | 0 | 001000 010010 | 0 |
| 93 | 101000 010010 | 1 | 001000 010010 | 1 | 001000 010010 | 1 |
| 94 | 101000 01010* | 0 | 001000 01010* | 0 | 001000 01010* | 0 |
| 95 | 101000 010101 | 1 | 001000 010101 | 1 | 001000 010101 | 1 |
| 96 | 101000 010100 | 2 | 001000 010100 | 2 | 001000 010100 | 2 |
| 97 | 101000 010000 | 2 | 001000 010000 | 2 | 001000 010000 | 2 |
| 98 | 101000 00#00* | 0 | 001000 00#00* | 0 | 001000 00#00* | 0 |
| 99 | 101000 00#001 | 1 | 001000 00#001 | 1 | 001000 00#001 | 1 |
| 9A | 101000 00#010 | 0 | 001000 001010 | 0 | 001000 001010 | 0 |
| 9B | 101000 00#010 | 1 | 001000 00#010 | 1 | 001000 00#010 | 1 |
| 9C | 101000 00010* | 0 | 001000 00010* | 0 | 001000 00010* | 0 |
| 9D | 101000 000101 | 1 | 001000 000101 | 1 | 001000 000101 | 1 |
| 9E | 101000 000100 | 2 | 001000 000100 | 2 | 001000 000100 | 2 |
| 9F | 101000 001000 | 2 | 001000 001000 | 2 | 001000 001000 | 2 |
| A0 | 100101 00000* | 0 | 000101 00000* | 0 | 000101 00000* | 0 |
| A1 | 100101 00000# | 1 | 000101 00000# | 1 | 000101 00000# | 1 |
| A2 | 100101 000010 | 0 | 000101 000010 | 0 | 000101 000010 | 0 |
| A3 | 100101 000010 | 1 | 000101 000010 | 1 | 000101 000010 | 1 |
| A4 | 100100 10000* | 0 | 000100 10000* | 0 | 000100 10000* | 0 |
| A5 | 100100 10000# | 1 | 000100 10000# | 1 | 000100 10000# | 1 |
| A6 | 100100 100010 | 0 | 000100 100010 | 0 | 000100 100010 | 0 |
| A7 | 100100 100010 | 1 | 000100 100010 | 1 | 000100 100010 | 1 |
| A8 | 100100 10100* | 0 | 000100 10100* | 0 | 000100 10100* | 0 |
| A9 | 100100 101001 | 1 | 000100 101001 | 1 | 000100 101001 | 1 |
| AA | 100100 101010 | 0 | 000100 101010 | 0 | 000100 101010 | 0 |
| AB | 100100 101010 | 1 | 000100 101010 | 1 | 000100 101010 | 1 |
| AC | 100100 10010* | 0 | 000100 10010* | 0 | 000100 10010* | 0 |
| AD | 100100 100101 | 1 | 000100 100101 | 1 | 000100 100101 | 1 |
| AE | 100100 100100 | 2 | 000100 100100 | 2 | 000100 100100 | 2 |
| AF | 100100 101000 | 2 | 000100 101000 | 2 | 000100 101000 | 2 |
| B0 | 100101 01000* | 0 | 000101 01000* | 0 | 000101 01000* | 0 |
| B1 | 100101 010001 | 1 | 000101 010001 | 1 | 000101 010001 | 1 |
| B2 | 100101 010010 | 0 | 000101 010010 | 0 | 000101 010010 | 0 |
| B3 | 100101 010010 | 1 | 000101 010010 | 1 | 000101 010010 | 1 |
| B4 | 100101 01010* | 0 | 000101 01010* | 0 | 000101 01010* | 0 |
| B5 | 100101 010101 | 1 | 000101 010101 | 1 | 000101 010101 | 1 |
| B6 | 100101 010100 | 2 | 000101 010100 | 2 | 000101 010100 | 2 |
| B7 | 100101 010000 | 2 | 000101 010000 | 2 | 000101 010000 | 2 |
| B8 | 100101 00100* | 0 | 000101 00100* | 0 | 000101 00100* | 0 |
| B9 | 100101 001001 | 1 | 000101 001001 | 1 | 000101 001001 | 1 |
| BA | 100101 001010 | 0 | 000101 001010 | 0 | 000101 001010 | 0 |
| BB | 100101 001010 | 1 | 000101 001010 | 1 | 000101 001010 | 1 |
| BC | 100101 00010* | 0 | 000101 00010* | 0 | 000101 00010* | 0 |
| BD | 100101 000101 | 1 | 000101 000101 | 1 | 000101 000101 | 1 |
| BE | 100101 000100 | 2 | 000101 000100 | 2 | 000101 000100 | 2 |
| BF | 100101 001000 | 2 | 000101 001000 | 2 | 000101 001000 | 2 |

## FIG. 46

139

| Data word | State 0 | | | State 1 | | | State 2 | | |
|---|---|---|---|---|---|---|---|---|---|
| | Code word | | Next state | Code word | | Next state | Code word | | Next state |
| C0 | 000010 | 00000* | 0 | 001010 | 00000* | 0 | 00#010 | 00000* | 0 |
| C1 | 000010 | 00000# | 1 | 001010 | 00000# | 1 | 00#010 | 00000# | 1 |
| C2 | 000010 | 000010 | 0 | 001010 | 000010 | 0 | 00#010 | 000010 | 0 |
| C3 | 000010 | 000010 | 1 | 001010 | 000010 | 1 | 00#010 | 000010 | 1 |
| C4 | 000010 | 10000* | 0 | 001010 | 10000* | 0 | 00#010 | 10000* | 0 |
| C5 | 000010 | 10000# | 1 | 001010 | 10000# | 1 | 00#010 | 10000# | 1 |
| C6 | 000010 | 100010 | 0 | 001010 | 100010 | 0 | 00#010 | 100010 | 0 |
| C7 | 000010 | 100010 | 1 | 001010 | 100010 | 1 | 00#010 | 100010 | 1 |
| C8 | 000010 | 10100* | 0 | 001010 | 10100* | 0 | 00#010 | 10100* | 0 |
| C9 | 000010 | 101001 | 1 | 001010 | 101001 | 1 | 00#010 | 101001 | 1 |
| CA | 000010 | 101010 | 0 | 001000 | 000010 | 0 | 001000 | 000010 | 0 |
| CB | 000010 | 101010 | 1 | 001010 | 101010 | 1 | 00#010 | 101010 | 1 |
| CC | 000010 | 10010* | 0 | 001010 | 10010* | 0 | 00#010 | 10010* | 0 |
| CD | 000010 | 100101 | 1 | 001010 | 100101 | 1 | 00#010 | 100101 | 1 |
| CE | 000010 | 100100 | 2 | 001010 | 100100 | 2 | 00#010 | 100100 | 2 |
| CF | 000010 | 101000 | 2 | 001010 | 101000 | 2 | 00#010 | 101000 | 2 |
| D0 | 000010 | 01000* | 0 | 001010 | 01000* | 0 | 00#010 | 01000* | 0 |
| D1 | 000010 | 010001 | 1 | 001010 | 010001 | 1 | 00#010 | 010001 | 1 |
| D2 | 000010 | 010010 | 0 | 001010 | 010010 | 0 | 00#010 | 010010 | 0 |
| D3 | 000010 | 010010 | 1 | 001010 | 010010 | 1 | 00#010 | 010010 | 1 |
| D4 | 000010 | 01010* | 0 | 001010 | 01010* | 0 | 00#010 | 01010* | 0 |
| D5 | 000010 | 010101 | 1 | 001010 | 010101 | 1 | 00#010 | 010101 | 1 |
| D6 | 000010 | 010100 | 2 | 001010 | 010100 | 2 | 00#010 | 010100 | 2 |
| D7 | 000010 | 010000 | 2 | 001010 | 010000 | 2 | 00#010 | 010000 | 2 |
| D8 | 000010 | 00100* | 0 | 001010 | 00100* | 0 | 00#010 | 00100* | 0 |
| D9 | 000010 | 001001 | 1 | 001010 | 001001 | 1 | 00#010 | 001001 | 1 |
| DA | 000010 | 001010 | 0 | 001010 | 001010 | 0 | 00#010 | 001010 | 0 |
| DB | 000010 | 001010 | 1 | 001010 | 001010 | 1 | 00#010 | 001010 | 1 |
| DC | 000010 | 00010* | 0 | 001010 | 00010* | 0 | 00#010 | 00010* | 0 |
| DD | 000010 | 000101 | 1 | 001010 | 000101 | 1 | 00#010 | 000101 | 1 |
| DE | 000010 | 000100 | 2 | 001010 | 000100 | 2 | 00#010 | 000100 | 2 |
| DF | 000010 | 001000 | 2 | 001010 | 001000 | 2 | 00#010 | 001000 | 2 |
| E0 | 000001 | 00000* | 0 | 001001 | 00000* | 0 | 00#001 | 00000* | 0 |
| E1 | 000001 | 00000# | 1 | 001001 | 00000# | 1 | 00#001 | 00000# | 1 |
| E2 | 000001 | 000010 | 0 | 001001 | 000010 | 0 | 00#001 | 000010 | 0 |
| E3 | 000001 | 000010 | 1 | 001001 | 000010 | 1 | 00#001 | 000010 | 1 |
| E4 | 000000 | 10000* | 0 | 001000 | 10000* | 0 | 00#000 | 10000* | 0 |
| E5 | 000000 | 10000# | 1 | 001000 | 10000# | 1 | 00#000 | 10000# | 1 |
| E6 | 000000 | 100010 | 0 | 001000 | 100010 | 0 | 00#000 | 100010 | 0 |
| E7 | 000000 | 100010 | 1 | 001000 | 100010 | 1 | 00#000 | 100010 | 1 |
| E8 | 000000 | 10100* | 0 | 001000 | 10100* | 0 | 00#000 | 10100* | 0 |
| E9 | 000000 | 101001 | 1 | 001000 | 101001 | 1 | 00#000 | 101001 | 1 |
| EA | 000000 | 101010 | 0 | 001000 | 101010 | 0 | 00#000 | 101010 | 0 |
| EB | 000000 | 101010 | 1 | 001000 | 101010 | 1 | 00#000 | 101010 | 1 |
| EC | 000000 | 10010* | 0 | 001000 | 10010* | 0 | 00#000 | 10010* | 0 |
| ED | 000000 | 100101 | 1 | 001000 | 100101 | 1 | 00#000 | 100101 | 1 |
| EE | 000000 | 100100 | 2 | 001000 | 100100 | 2 | 00#000 | 100100 | 2 |
| EF | 000000 | 101000 | 2 | 001000 | 101000 | 2 | 00#000 | 101000 | 2 |

# F I G. 47

| Data word | State 0 | | | State 1 | | | State 2 | | |
|---|---|---|---|---|---|---|---|---|---|
| | Code word | | Next state | Code word | | Next state | Code word | | Next state |
| F0 | 00000# | 01000* | 0 | 001001 | 01000* | 0 | 00#001 | 01000* | 0 |
| F1 | 00000# | 010001 | 1 | 001001 | 010001 | 1 | 00#001 | 010001 | 1 |
| F2 | 00000# | 010010 | 0 | 001001 | 010010 | 0 | 00#001 | 010010 | 0 |
| F3 | 00000# | 010010 | 1 | 001001 | 010010 | 1 | 00#001 | 010010 | 1 |
| F4 | 00000# | 01010* | 0 | 001001 | 01010* | 0 | 00#001 | 01010* | 0 |
| F5 | 000000 | 010101 | 1 | 001001 | 010101 | 1 | 001001 | 010101 | 1 |
| F6 | 00000# | 010100 | 2 | 001001 | 010100 | 2 | 00#001 | 010100 | 2 |
| F7 | 00000# | 010000 | 2 | 001001 | 010000 | 2 | 00#001 | 010000 | 2 |
| F8 | 000001 | 00100* | 0 | 001001 | 00100* | 0 | 00#001 | 00100* | 0 |
| F9 | 00000# | 001001 | 1 | 001001 | 001001 | 1 | 00#001 | 001001 | 1 |
| FA | 00000# | 001010 | 0 | 001001 | 001010 | 0 | 00#001 | 001010 | 0 |
| FB | 00000# | 001010 | 1 | 001001 | 001010 | 1 | 00#001 | 001010 | 1 |
| FC | 00000# | 00010* | 0 | 001001 | 00010* | 0 | 00#001 | 00010* | 0 |
| FD | 00000# | 000101 | 1 | 001001 | 000101 | 1 | 00#001 | 000101 | 1 |
| FE | 00000# | 000100 | 2 | 001001 | 000100 | 2 | 00#001 | 000100 | 2 |
| FF | 000001 | 001000 | 2 | 001001 | 001000 | 2 | 00#001 | 001000 | 2 |

# F I G. 48

Explanatory diagram of a demodulation table in
the modulation method of the present invention

| Present code word | Data word | | |
|---|---|---|---|
| | Case 1 | Case 2 | Case 3 |
| 000000 000100 | FC | FE | FE |
| 000000 000101 | Z | FC | FD |
| 000000 001000 | 48 | 4F | 4F |
| 000000 001001 | Z | 48 | F9 |
| 000000 001010 | FA | FA | FB |
| 000000 010000 | F0 | F7 | F7 |
| 000000 010001 | Z | F0 | F1 |
| 000000 010010 | F2 | F2 | F3 |
| 000000 010100 | F4 | F6 | F6 |
| 000000 010101 | Z | F4 | F5 |
| 000000 100000 | E4 | Z | E5 |
| 000000 100001 | Z | E4 | E5 |
| 000000 100010 | E6 | E6 | E7 |
| 000000 100100 | EC | EE | EE |
| 000000 100101 | Z | EC | ED |
| 000000 101000 | E8 | EF | EF |
| 000000 101001 | Z | E8 | E9 |
| 000000 101010 | EA | EA | EB |
| 000001 000000 | E0 | Z | E1 |
| 000001 000001 | Z | E0 | E1 |
| 000001 000010 | E2 | E2 | E3 |
| 000001 000100 | FC | FE | FE |
| 000001 000101 | Z | FC | FD |
| 000001 001000 | F8 | FF | FF |
| 000001 001001 | Z | F8 | F9 |
| 000001 001010 | FA | FA | FB |
| 000001 010000 | F0 | F7 | F7 |
| 000001 010001 | Z | F0 | F1 |
| 000001 010010 | F2 | F2 | F3 |
| 000001 010100 | F4 | F6 | F6 |
| 000001 010101 | Z | F4 | Z |
| 000010 000000 | C0 | Z | C1 |
| 000010 000001 | Z | C0 | C1 |
| 000010 000010 | C2 | C2 | C3 |
| 000010 000100 | DC | DE | DE |
| 000010 000101 | Z | DC | DD |
| 000010 001000 | D8 | DF | DF |
| 000010 001001 | Z | D8 | D9 |

FIG. 49

| Present code word | Data word | | |
|---|---|---|---|
| | Case 1 | Case 2 | Case 3 |
| 000010 001010 | DA | DA | DB |
| 000010 010000 | D0 | D7 | D7 |
| 000010 010001 | Z | D0 | D1 |
| 000010 010010 | D2 | D2 | D3 |
| 000010 010100 | D4 | D6 | D6 |
| 000010 010101 | Z | D4 | D5 |
| 000010 100000 | C4 | Z | C5 |
| 000010 100001 | Z | C4 | C5 |
| 000010 100010 | C6 | C6 | C7 |
| 000010 100100 | CC | CE | CE |
| 000010 100101 | Z | CC | CD |
| 000010 101000 | C8 | CF | CF |
| 000010 101001 | Z | C8 | C9 |
| 000010 101010 | CA | CA | CB |
| 000100 000000 | 88 | Z | B5 |
| 000100 000001 | Z | 88 | 89 |
| 000100 000010 | 8A | 8A | 8B |
| 000100 000100 | 8C | 8E | 8E |
| 000100 000101 | Z | 8C | 8D |
| 000100 001000 | 88 | 8F | 8F |
| 000100 001001 | Z | 88 | 89 |
| 000100 001010 | 8A | 8A | 8B |
| 000100 010000 | 80 | 87 | 87 |
| 000100 010001 | Z | 80 | 81 |
| 000100 010010 | 82 | 82 | 83 |
| 000100 010100 | 84 | 86 | 86 |
| 000100 010101 | Z | 84 | 85 |
| 000100 100000 | A4 | Z | A5 |
| 000100 100001 | Z | A4 | A5 |
| 000100 100010 | A6 | A6 | A7 |
| 000100 100100 | AC | AE | AE |
| 000100 100101 | Z | AC | AD |
| 000100 101000 | A8 | AF | AF |
| 000100 101001 | Z | A8 | A9 |
| 000100 101010 | AA | AA | AB |
| 000101 000000 | A0 | Z | A1 |
| 000101 000001 | Z | A0 | A1 |
| 000101 000010 | A2 | A2 | A3 |

FIG.50

| Present code word | Data word | | |
|---|---|---|---|
| | Case 1 | Case 2 | Case 3 |
| 000101 000100 | BC | BE | BE |
| 000101 000101 | Z | BC | BD |
| 000101 001000 | B8 | BF | BF |
| 000101 001001 | Z | B8 | B9 |
| 000101 001010 | BA | BA | BB |
| 000101 010000 | B0 | B7 | B7 |
| 000101 010001 | Z | B0 | B1 |
| 000101 010010 | B2 | B2 | B3 |
| 000101 010100 | B4 | B6 | B6 |
| 000101 010101 | Z | B4 | B5 |
| 001000 000000 | 98 | Z | F5 |
| 001000 000001 | Z | 98 | 99 |
| 001000 000010 | CA | CA | 9B |
| 001000 000100 | 9C | 9E | 9E |
| 001000 000101 | Z | 9C | 9D |
| 001000 001000 | 98 | 9F | 9F |
| 001000 001001 | Z | 98 | 99 |
| 001000 001010 | 9A | 9A | 9B |
| 001000 010000 | 90 | 97 | 97 |
| 001000 010001 | Z | 90 | 91 |
| 001000 010010 | 92 | 92 | 93 |
| 001000 010100 | 94 | 96 | 96 |
| 001000 010101 | Z | 94 | 95 |
| 001000 100000 | E4 | Z | E5 |
| 001000 100001 | Z | E4 | E5 |
| 001000 100010 | E6 | E6 | E7 |
| 001000 100100 | EC | EE | EE |
| 001000 100101 | Z | EC | ED |
| 001000 101000 | E8 | EF | EF |
| 001000 101001 | Z | E8 | E9 |
| 001000 101010 | EA | EA | EB |
| 001001 000000 | E0 | Z | E1 |
| 001001 000001 | Z | E0 | E1 |
| 001001 000010 | E2 | E2 | E3 |
| 001001 000100 | FC | FE | FE |
| 001001 000101 | Z | FC | FD |
| 001001 001000 | F8 | FF | FF |
| 001001 001001 | Z | F8 | F9 |

## F I G. 51

| Present code word | Data word | | |
|---|---|---|---|
| | Case 1 | Case 2 | Case 3 |
| 001001 001010 | FA | FA | FB |
| 001001 010000 | F0 | F7 | F7 |
| 001001 010001 | Z | F0 | F1 |
| 001001 010010 | F2 | F2 | F3 |
| 001001 010100 | F4 | F6 | F6 |
| 001001 010101 | Z | F4 | F5 |
| 001010 000000 | C0 | Z | C1 |
| 001010 000001 | Z | C0 | C1 |
| 001010 000010 | C2 | C2 | C3 |
| 001010 000100 | DC | DE | DE |
| 001010 000101 | Z | DC | DD |
| 001010 001000 | D8 | DF | DF |
| 001010 001001 | Z | D8 | D9 |
| 001010 001010 | DA | DA | DB |
| 001010 010000 | D0 | D7 | D7 |
| 001010 010001 | Z | D0 | D1 |
| 001010 010010 | D2 | D2 | D3 |
| 001010 010100 | D4 | D6 | D6 |
| 001010 010101 | Z | D4 | D5 |
| 001010 100000 | C4 | Z | C5 |
| 001010 100001 | Z | C4 | C5 |
| 001010 100010 | C6 | C6 | C7 |
| 001010 100100 | CC | CE | CE |
| 001010 100101 | Z | CC | CD |
| 001010 101000 | C8 | CF | CF |
| 001010 101001 | Z | C8 | C9 |
| 001010 101010 | Z | Z | CB |
| 010000 000000 | 34 | Z | Z |
| 010000 000001 | Z | 34 | 35 |
| 010000 000010 | 1A | 1A | 1B |
| 010000 000100 | 1C | 1E | 1E |
| 010000 000101 | Z | 1C | 1D |
| 010000 001000 | 18 | 1F | 1F |
| 010000 001001 | Z | 18 | 19 |
| 010000 001010 | 1A | 1A | 1B |
| 010000 010000 | 10 | 17 | 17 |
| 010000 010001 | Z | 10 | 11 |
| 010000 010010 | 12 | 12 | 13 |

# F I G. 52

| Present code word | Data word | | |
|---|---|---|---|
| | Case 1 | Case 2 | Case 3 |
| 010000 010100 | 14 | 16 | 16 |
| 010000 010101 | Z | 14 | 15 |
| 010000 100000 | 64 | Z | 65 |
| 010000 100001 | Z | 64 | 65 |
| 010000 100010 | 66 | 66 | 67 |
| 010000 100100 | 6C | 6E | 6E |
| 010000 100101 | Z | 6C | 6D |
| 010000 101000 | 68 | 6F | 6F |
| 010000 101001 | Z | 68 | 69 |
| 010000 101010 | 6A | 6A | 6B |
| 010001 000000 | 60 | Z | 75 |
| 010001 000001 | Z | 60 | 61 |
| 010001 000010 | 62 | 62 | 63 |
| 010001 000100 | 7C | 7E | 7E |
| 010001 000101 | Z | 7C | 7D |
| 010001 001000 | 78 | 7F | 7F |
| 010001 001001 | Z | 78 | 79 |
| 010001 001010 | 7A | 7A | 7B |
| 010001 010000 | 70 | 77 | 77 |
| 010001 010001 | Z | 70 | 71 |
| 010001 010010 | 72 | 72 | 73 |
| 010001 010100 | 74 | 76 | 76 |
| 010001 010101 | Z | 74 | Z |
| 010010 000000 | 40 | Z | 41 |
| 010010 000001 | Z | 40 | 41 |
| 010010 000010 | 42 | 42 | 43 |
| 010010 000100 | 5C | 5E | 5E |
| 010010 000101 | Z | 5C | 5D |
| 010010 001000 | 58 | 5F | 5F |
| 010010 001001 | Z | 58 | 59 |
| 010010 001010 | 5A | 5A | 5B |
| 010010 010000 | 50 | 57 | 57 |
| 010010 010001 | Z | 50 | 51 |
| 010010 010010 | 52 | 52 | 53 |
| 010010 010100 | 54 | 56 | 56 |
| 010010 010101 | Z | 54 | 55 |
| 010010 100000 | 44 | Z | 45 |
| 010010 100001 | Z | 44 | 45 |

F I G. 53

| Present code word | Data word | | |
|---|---|---|---|
| | Case 1 | Case 2 | Case 3 |
| 010010 100010 | 46 | 46 | 47 |
| 010010 100100 | 4C | 4E | 4E |
| 010010 100101 | Z | 4C | 4D |
| 010010 101000 | 48 | 4F | 4F |
| 010010 101001 | Z | 48 | 49 |
| 010010 101010 | 4A | 4A | 4B |
| 010100 000000 | 08 | Z | Z |
| 010100 000001 | Z | 08 | 09 |
| 010100 000010 | 0A | 0A | 0B |
| 010100 000100 | 0C | 0E | 0E |
| 010100 000101 | Z | 0C | 0D |
| 010100 001000 | 08 | 0F | 0F |
| 010100 001001 | Z | 08 | 09 |
| 010100 001010 | 0A | 0A | 0B |
| 010100 010000 | 00 | 07 | 07 |
| 010100 010001 | Z | 00 | 01 |
| 010100 010010 | 02 | 02 | 03 |
| 010100 010100 | 04 | 06 | 06 |
| 010100 010101 | Z | 04 | 05 |
| 010100 100000 | 24 | Z | 25 |
| 010100 100001 | Z | 24 | 25 |
| 010100 100010 | 26 | 26 | 27 |
| 010100 100100 | 2C | 2E | 2E |
| 010100 100101 | Z | 2C | 2D |
| 010100 101000 | 28 | 2F | 2F |
| 010100 101001 | Z | 28 | 29 |
| 010100 101010 | 2A | 2A | 2B |
| 010101 000000 | 20 | Z | 21 |
| 010101 000001 | Z | 20 | 21 |
| 010101 000010 | 22 | 22 | 23 |
| 010101 000100 | 3C | 3E | 3E |
| 010101 000101 | Z | 3C | 3D |
| 010101 001000 | 38 | 3F | 3F |
| 010101 001001 | Z | 38 | 39 |
| 010101 001010 | 3A | 3A | 3B |
| 010101 010000 | 30 | 37 | 37 |
| 010101 010001 | Z | 30 | 31 |
| 010101 010010 | 32 | 32 | 33 |

# F I G. 54

| Present code word | Data word | | |
|---|---|---|---|
| | Case 1 | Case 2 | Case 3 |
| 010101 010100 | Z | 36 | 36 |
| 100000 000001 | Z | Z | 49 |
| 100000 000010 | 4A | 4A | 4B |
| 100000 000100 | 3C | 3E | 3E |
| 100000 000101 | Z | 3C | 3D |
| 100000 001000 | 38 | 3F | 3F |
| 100000 001001 | Z | 38 | 39 |
| 100000 001010 | 3A | 3A | 3B |
| 100000 010000 | 30 | 37 | 37 |
| 100000 010001 | Z | 30 | 31 |
| 100000 010010 | 32 | 32 | 33 |
| 100000 010100 | 34 | 36 | 36 |
| 100000 010101 | Z | 34 | 35 |
| 100000 100000 | 24 | Z | 25 |
| 100000 100001 | Z | 24 | 25 |
| 100000 100010 | 26 | 26 | 27 |
| 100000 100100 | 2C | 2E | 2E |
| 100000 100101 | Z | 2C | 2D |
| 100000 101000 | 28 | 2F | 2F |
| 100000 101001 | Z | 28 | 29 |
| 100000 101010 | 2A | 2A | 2B |
| 100001 000000 | 20 | Z | 21 |
| 100001 000001 | Z | 20 | 21 |
| 100001 000010 | 22 | 22 | 23 |
| 100001 000100 | 3C | 3E | 3E |
| 100001 000101 | Z | 3C | 3D |
| 100001 001000 | 38 | 3F | 3F |
| 100001 001001 | Z | 38 | 39 |
| 100001 001010 | 3A | 3A | 3B |
| 100001 010000 | 30 | 37 | 37 |
| 100001 010001 | Z | 30 | 31 |
| 100001 010010 | 32 | 32 | 33 |
| 100001 010100 | 34 | 36 | 36 |
| 100001 010101 | Z | 34 | Z |
| 100010 000000 | 00 | Z | 01 |
| 100010 000001 | Z | 00 | 01 |
| 100010 000010 | 02 | 02 | 03 |
| 100010 000100 | 1C | 1E | 1E |

# F I G. 55

| Present code word | Data word | | |
|---|---|---|---|
| | Case 1 | Case 2 | Case 3 |
| 100010 000101 | Z | 1C | 1D |
| 100010 001000 | 18 | 1F | 1F |
| 100010 001001 | Z | 18 | 19 |
| 100010 001010 | 1A | 1A | 1B |
| 100010 010000 | 10 | 17 | 17 |
| 100010 010001 | Z | 10 | 11 |
| 100010 010010 | 12 | 12 | 13 |
| 100010 010100 | 14 | 16 | 16 |
| 100010 010101 | Z | 14 | 15 |
| 100010 100000 | 04 | Z | 05 |
| 100010 100001 | Z | 04 | 05 |
| 100010 100010 | 06 | 06 | 07 |
| 100010 100100 | 0C | 0E | 0E |
| 100010 100101 | Z | 0C | 0D |
| 100010 101000 | 08 | 0F | 0F |
| 100010 101001 | Z | 08 | 09 |
| 100010 101010 | 0A | 0A | 0B |
| 100100 000000 | 88 | Z | B5 |
| 100100 000001 | Z | 88 | 89 |
| 100100 000010 | 8A | 8A | 8B |
| 100100 000100 | 8C | 8E | 8E |
| 100100 000101 | Z | 8C | 8D |
| 100100 001000 | 88 | 8F | 8F |
| 100100 001001 | Z | 88 | 89 |
| 100100 001010 | 8A | 8A | 8B |
| 100100 010000 | 80 | 87 | 87 |
| 100100 010001 | Z | 80 | 81 |
| 100100 010010 | 82 | 82 | 83 |
| 100100 010100 | 84 | 86 | 86 |
| 100100 010101 | Z | 84 | 85 |
| 100100 100000 | A4 | Z | A5 |
| 100100 100001 | Z | A4 | A5 |
| 100100 100010 | A6 | A6 | A7 |
| 100100 100100 | AC | AE | AE |
| 100100 100101 | Z | AC | AD |
| 100100 101000 | A8 | AF | AF |
| 100100 101001 | Z | A8 | A9 |
| 100100 101010 | AA | AA | AB |

FIG. 56

| Present code word | Data word | | |
|---|---|---|---|
| | Case 1 | Case 2 | Case 3 |
| 100101 000000 | A0 | Z | A1 |
| 100101 000001 | Z | A0 | A1 |
| 100101 000010 | A2 | A2 | A3 |
| 100101 000100 | BC | BE | BE |
| 100101 000101 | Z | BC | BD |
| 100101 001000 | B8 | BF | BF |
| 100101 001001 | Z | B8 | B9 |
| 100101 001010 | BA | BA | BB |
| 100101 010000 | B0 | B7 | B7 |
| 100101 010001 | Z | B0 | B1 |
| 100101 010010 | B2 | B2 | B3 |
| 100101 010100 | B4 | B6 | B6 |
| 100101 010101 | Z | B4 | B5 |
| 101000 000000 | 98 | Z | 75 |
| 101000 000001 | Z | 98 | 99 |
| 101000 000010 | 9A | 9A | 9B |
| 101000 000100 | 9C | 9E | 9E |
| 101000 000101 | Z | 9C | 9D |
| 101000 001000 | 98 | 9F | 9F |
| 101000 001001 | Z | 98 | 99 |
| 101000 001010 | 9A | 9A | 9B |
| 101000 010000 | 90 | 97 | 97 |
| 101000 010001 | Z | 90 | 91 |
| 101000 010010 | 92 | 92 | 93 |
| 101000 010100 | 94 | 96 | 96 |
| 101000 010101 | Z | 94 | 95 |
| 101000 100000 | 64 | Z | 65 |
| 101000 100001 | Z | 64 | 65 |
| 101000 100010 | 66 | 66 | 67 |
| 101000 100100 | 6C | 6E | 6E |
| 101000 100101 | Z | 6C | 6D |
| 101000 101000 | 68 | 6F | 6F |
| 101000 101001 | Z | 68 | 69 |
| 101000 101010 | 6A | 6A | 6B |
| 101001 000000 | 60 | Z | 61 |
| 101001 000001 | Z | 60 | 61 |
| 101001 000010 | 62 | 62 | 63 |
| 101001 000100 | 7C | 7E | 7E |

F I G. 57

| Present code word | Data word | | |
|---|---|---|---|
| | Case 1 | Case 2 | Case 3 |
| 101001 000101 | Z | 7C | 7D |
| 101001 001000 | 78 | 7F | 7F |
| 101001 001001 | Z | 78 | 79 |
| 101001 001010 | 7A | 7A | 7B |
| 101001 010000 | 70 | 77 | 77 |
| 101001 010001 | Z | 70 | 71 |
| 101001 010010 | 72 | 72 | 73 |
| 101001 010100 | 74 | 76 | 76 |
| 101001 010101 | Z | 74 | 75 |
| 101010 000000 | 40 | Z | 41 |
| 101010 000001 | Z | 40 | 41 |
| 101010 000010 | 42 | 42 | 43 |
| 101010 000100 | 5C | 5E | 5E |
| 101010 000101 | Z | 5C | 5D |
| 101010 001000 | 58 | 5F | 5F |
| 101010 001001 | Z | 58 | 59 |
| 101010 001010 | 5A | 5A | 5B |
| 101010 010000 | 50 | 57 | 57 |
| 101010 010001 | Z | 50 | 51 |
| 101010 010010 | 52 | 52 | 53 |
| 101010 010100 | 54 | 56 | 56 |
| 101010 010101 | Z | 54 | 55 |
| 101010 100000 | 44 | Z | 45 |
| 101010 100001 | Z | 44 | 45 |
| 101010 100010 | 46 | 46 | 47 |
| 101010 100100 | 4C | 4E | 4E |
| 101010 100101 | Z | 4C | 4D |

# F I G. 58

Explanatory diagram of reference code pattern

100100100000100100100000

Recording marks or emboss pits ～108

F I G. 59

Explanatory diagram of data units of recording data on information storage medium

| Sync code | Sync data |
|-----------|-----------|

431 ─ Sync code    432 ─ Sync data

Sync frame length
433

Sync frame length
433

429

| Sync frame #0 | Sync frame #1 | Sync frame #2 | Sync frame #3 | . . . . . . | Sync frame #25 |
|---|---|---|---|---|---|

230  231  420  421  233  422  234  235  423  236  237  238  241

| Physical sector #0 | Physical sector #1 | Physical sector #2 | Physical sector #3 | Physical sector #4 | Physical sector #5 | Physical sector #6 | Physical sector #7 | Physical sector #8 | . . . . | Physical sector #31 |
|---|---|---|---|---|---|---|---|---|---|---|

232

401

ECC block (its detailed structure is shown in FIG. 54)

Recording layer B 223

Inner hole 226

Recording layer A 222

Recording layer A 222

Recording layer B 223

Information storage
medium 221

FIG. 60

EP 1 742 215 A1

Explanatory diagram showing a comparison of data recording format between various information storage mediums

F I G. 61

154

Explanatory diagram showing a comparison of data structure between an information storage medium of this invention and a conventional equivalent

| Sector #0 | Sector #1 | .... | Sector #31 | Sector #32 | Sector #33 | Sector #34 | .... | Sector #63 | ...... |
|---|---|---|---|---|---|---|---|---|---|

| ECC block #1 | ECC block #2 | ECC block #3 | ECC block #4 | ECC block #5 | ...... |
|---|---|---|---|---|---|

(a)

Information storage medium 221

Sync frame length 433 — Sync frame length 433 — Sync frame length 433

| Guard area #1 | Sector #0 | Sector #1 | .... | Sector #31 | Guard area #2 | Sector #32 | Sector #33 | .... | Sector #63 | Guard area #3 | .... |
|---|---|---|---|---|---|---|---|---|---|---|---|

| Guard area #1 | ECC block (data field) #1 | Guard area #2 | ECC block (data field) #2 | Guard area #3 | ECC block (data field) #3 | Guard area #4 | ECC block (data field) #4 | ... | Guard area #8 | ECC block (data field) #8 |
|---|---|---|---|---|---|---|---|---|---|---|

(b)

Information storage medium 221

FIG. 62

EP 1 742 215 A1

Explanatory diagram showing a comparison of data structure between an information
storage medium of this invention and a conventional equivalent

| Data segment | | | | | | Sync code | | Sync data |
|---|---|---|---|---|---|---|---|---|
| 490 | | | | | | 433 | | 434 |

| 14 data bytes | 67 data bytes | 4 data bytes | 77376 data bytes | 2 data bytes | 4 data bytes | 16 data bytes | 67 data bytes | 4 data bytes |
|---|---|---|---|---|---|---|---|---|
| Buffer area | VFO area | Pre-sync area | Data field 470 ‖ ECC block #2 | Postamble area ⇒ "SY1" | Extra area | Buffer area | VFO area | Pre-sync area |

474  471  477  412  481  482  475  472  478

441

| Guard area #1 | ECC block (data field) #1 | Guard area #2 | ECC block (data field) #2 | Guard area #3 | ECC block (data field) #3 | Guard area #4 | ECC block (data field) #4 | ··· | Guard area #8 | ECC block (data field) #8 |
|---|---|---|---|---|---|---|---|---|---|---|
| | 411 | 442 | 412 | 443 | 413 | 444 | 414 | | 448 | |

418

Information storage medium 221

FIG. 63

EP 1 742 215 A1

Diagram to help explain 180° phase modulation in wobble modulation and the NRZ method

511
One address bit area
(one address symbol area)

511
One address bit area

511
One address bit area
(one address symbol area)

Groove area 501

Groove area 501

"0"

"1"

"1"

"0"

Slot interval 513

Slot position 512

☆ The frequency, amplitude, and phase of wobbles in one address bit area are constant everywhere
☆ The phase is shifted 180° or 0° at the boundary of one address bit area 511

F I G. 64

Comparison of wobble arrangement and recording positions between
a recordable and a rewritable information storage medium

F I G. 65

Comparison of wobble arrangement and recording positions between
a recordable and a rewritable information storage medium

| Type of medium | Recordable information storage medium | Rewritable information storage medium |
|---|---|---|
| Recording mark forming place | Recording marks are formed in groove areas | Recording marks are formed in both of groove areas and land areas |
| Recording method | CLV (Constant Linear Velocity) | Zoned CAV (Zoned Constant Angular Velocity) |
| Positional relationship between adjacent slots | Adjacent slots deviate from each other | Adjacent slots coincide with each other |
| Technical difficulties | Adjacent wobbles interfere with each other | Indefinite bit areas appear |
| Point in the embodiment | Modulation area occupancy is decreased, thereby shifting the modulation area between adjacent wobbles | Gray code is used. Indefinite bits are subjected to L/G distributed arrangement |
| Address information for specifying a location | Data segment address (ECC block address) physical segment order (number) | Zone address Track address Physical segment address |

FIG. 66

EP 1 742 215 A1

Diagram showing a comparison of wobble arrangement and recording places between
a recordable and a rewritable information storage medium

(a)

Groove area 501

Land area 503

Recording marks 107

(b)

Groove area 501

Land area 503

Groove area 502

(c)

| Groove area 501 | "0" | Groove area 501 | "1" | "1" | "0" |
| Land area 503 | "0" | Bit area in land 504 | "1" | "1" | "0" |
| Groove area 502 | "0" | Groove area 502 | "0" | "1" | "0" |

F I G. 67

EP 1 742 215 A1

Diagram to help explain an address defining method in
a recordable and a rewritable information storage medium

**(a)**

Groove area 501

| Ph=0 Da=n-1 | Ph=0 Da=n | Ph=1 Da=n | Ph=2 Da=n | Ph=3 Da=n | Ph=4 Da=n | Ph=5 Da=n | Ph=6 Da=n | Ph=0 Da=n+1 |
|---|---|---|---|---|---|---|---|---|

Land area 503

Groove area 502

| Ph=3 Da=m-1 | Ph=4 Da=m-1 | Ph=5 Da=m-1 | Ph=6 Da=m-1 | Ph=0 Da=m | Ph=1 Da=m | Ph=2 Da=m | Ph=3 Da=m | Ph=4 Da=m |
|---|---|---|---|---|---|---|---|---|

Land area 507

Groove area 505

| Ph=5 Da=k-1 | Ph=6 Da=k-1 | Ph=0 Da=k | Ph=1 Da=k | Ph=2 Da=k | Ph=3 Da=k | Ph=4 Da=k | Ph=5 Da=k | Ph=6 Da=k |
|---|---|---|---|---|---|---|---|---|

Ph : Physical segment information
Da : Data segment (number)

Outer edge 713

**(b)**

| | | | | |
|---|---|---|---|---|
| Land area 508 | Zo=m+1 Tr=0 Ph=m+12 | Zo=m+1 Tr=0 Ph=m+13 | Zo=m+1 Tr=1 Ph=0 | Zo=m+1 Tr=1 Ph=1 |
| Groove area 501 | Zo=m+1 Tr=0 Ph=m+12 | Zo=m+1 Tr=0 Ph=m+13 | Zo=m+1 Tr=1 Ph=0 | Zo=m+1 Tr=1 Ph=1 |
| Land area 503 | Zo=m Tr=n Ph=m+11 | Zo=m Tr=n Ph=m+12 | Zo=m+1 Tr=0 Ph=0 | Zo=m+1 Tr=0 Ph=1 |
| Groove area 502 | Zo=m Tr=n Ph=m+11 | Zo=m Tr=n Ph=m+12 | Zo=m+1 Tr=0 Ph=0 | Zo=m+1 Tr=0 Ph=1 |
| Land area 507 | Zo=m Tr=n-1 Ph=m+11 | Zo=m Tr=n-1 Ph=m+12 | Zo=m Tr=n Ph=0 | Zo=m Tr=n Ph=1 |
| Groove area 505 | Zo=m Tr=n-1 Ph=m+11 | Zo=m Tr=n-1 Ph=m+12 | Zo=m Tr=n Ph=0 | Zo=m Tr=n Ph=1 |

Inner edge 712

Zo : Zone address (number)
Tr : Track address (number)
Ph : Physical segment address (number)

# F I G. 68

Explanatory diagram of wobble address format on a rewritable information storage medium

**(a)** — 531 — Data segment

| | VFO area | Pre-sync area | Rewritable data area in ECC block #2 | Postamble area ⇒ "SY1" | Extra area | Buffer area | |
|---|---|---|---|---|---|---|---|
| ... | 67 data bytes | 4 data bytes | 77376 data bytes | 2 data bytes | 4 data bytes | 16 data bytes | ... |

522 523 525 526 524 527

**(b)**

| Physical segment #0 | Physical segment #1 | Physical segment #2 | Physical segment #3 | Physical segment #4 | Physical segment #5 | Physical segment #6 | Physical segment #7 | ... |
|---|---|---|---|---|---|---|---|---|

550 551 552 553 554 555 556 557

**(c)** — 576

| Wobble data unit #0 | Wobble data unit #1 | Wobble data unit #2 | ... | Wobble data unit #16 |
|---|---|---|---|---|

560 561 562

**(d)**

| Wobble sync area | | | Non-modulation area | Modulation start mark | Wobble address area | Non-modulation area | Modulation start mark | Wobble address area | |
|---|---|---|---|---|---|---|---|---|---|
| IPW 6 wobbles | NPW 4 wobbles | IPW 6 wobbles | Continuous NPW 68 wobbles | IPW 4 wobbles | 3 address bits by 12 wobbles | Continuous NPW 68 wobbles | IPW 4 wobbles | 3 address bits by 12 wobbles | .. |

580 590 581 586 591 582 587

**(e)**

| Wobble sync area | Reserved area | Segment information | Zone information | Parity information | Groove track information | Land track information | Unity area ⇒all NPWS |
|---|---|---|---|---|---|---|---|
| 3 address bits | 3 bits | 6 address bits | 5 bits | 1 bits | 12 bits | 12 bits | 9 address bits |
| Wobble address information | | | | | | | |

580 604 601 602 605 606 607 608 — 610

**FIG. 69**

EP 1 742 215 A1

162

Diagram to help explain an example of Gray code

| Decimal number | Conventional binary representation | Gray code representation |
|---|---|---|
| 0 | 0000 | 0000 |
| 1 | 0001 | 0001 |
| 2 | 0010 | 0011 |
| 3 | 0011 | 0010 |
| 4 | 0100 | 0110 |
| 5 | 0101 | 0111 |
| 6 | 0110 | 0101 |
| 7 | 0111 | 0100 |
| 8 | 1000 | 1100 |
| 9 | 1001 | 1101 |
| 10 | 1010 | 1111 |
| 11 | 1011 | 1110 |
| 12 | 1100 | 1010 |
| 13 | 1101 | 1011 |
| 14 | 1110 | 1001 |
| 15 | 1111 | 1000 |

F I G. 70

Explanatory diagram of Gray code conversion algorithm

Binary code                          Gray code

(MSB) bit 23(11) ─────────────────►  bit 23(11) (MSB)

                        ⊕ ──────►  bit 22(10)

bit 22(10) ─────────────

bit 15(3) ──────────────

                        ⊕ ──────►  bit 14(2)

bit 14(2) ──────────────

                        ⊕ ──────►  bit 13(1)

bit 13(1) ──────────────

                        ⊕ ──────►  bit 12(0) (LSB)

(LSB) bit 12(0) ────────

# FIG. 71

Diagram to help explain an example of forming an indefinite bit area in a groove area

Groove    n+2    1    1    0    X2

Land    n+1    1    X    0    0

Groove    n+1    1    0    0    X1

*Laser beam

Groove area 501

Land area 503

Groove area 502

*Symbol for an area where the track width is varying

FIG. 72

EP 1 742 215 A1

EP 1 742 215 A1

Diagram to help explain the positions of modulation areas on a recordable information storage medium of the embodiment

Groove area 501

Groove area 502

Groove area 505

Shifting

Shifting

Shifting

Groove area 506

Groove area 508

Primary position of a modulation area 701

Secondary position of a modulation area 702

FIG. 73

EP 1 742 215 A1

Diagram to help explain the primary and secondary positions of modulation areas in a wobble data unit

**(a)** 598 — 560, 593

| Wobble data unit #0 | | | |
|---|---|---|---|
| Modulation area | | | Non-modulation area |
| IPW | NPW | IPW | NPW |
| 6 wobbles | 4 wobbles | 6 wobbles | 68 wobbles |

598

**(b)** 592 — 560, 593

| Wobble data unit #0 | | | | |
|---|---|---|---|---|
| Non-modulation area | Modulation area | | | Non-modulation area |
| NPW | IPW | NPW | IPW | NPW |
| 42 wobbles | 4 wobbles | 6 wobbles | 4 wobbles | 28 wobbles |

561~571

**(c)** 598 — 593

| Wobble data unit #1~#11 | | | | |
|---|---|---|---|---|
| Modulation area | | | | Non-modulation area |
| IPW | Address bit #2 | Address bit #1 | Address bit #0 | NPW |
| 4 wobbles | 4 wobbles | 4 wobbles | 4 wobbles | 68 wobbles |

561~571    598

**(d)** 592 — 593

| Wobble data unit #1~#11 | | | | | |
|---|---|---|---|---|---|
| Non-modulation area | Modulation area | | | | Non-modulation area |
| NPW | IPW | Address bit #2 | Address bit #1 | Address bit #0 | NPW |
| 42 wobbles | 4 wobbles | 4 wobbles | 4 wobbles | 4 wobbles | 26 wobbles |

F I G. 74

Diagram showing a comparison of arrangement between a wobble sync pattern and a wobble data unit

FIG. 75

(a)

| 598 | | | 593 |
|---|---|---|---|
| Modulation area | | | Non-modulation area |
| IPW | NPW | IPW | NPW |
| 6 wobbles | 4 wobbles | 6 wobbles | 68 wobbles |

(b)

| 598 | | | 593 |
|---|---|---|---|
| Modulation area | | | Non-modulation area |
| IPW | NPW | IPW | NPW |
| 4 wobbles | 6 wobbles | 4 wobbles | 70 wobbles |

(c)

| 592 | 598 | | | 593 |
|---|---|---|---|---|
| Non-modulation area | Modulation area | | | Non-modulation area |
| NPW | IPW | NPW | IPW | NPW |
| 42 wobbles | 4 wobbles | 6 wobbles | 4 wobbles | 28 wobbles |

(d)

| 592 | 598 | | | 593 |
|---|---|---|---|---|
| Non-modulation area | Modulation area | | | Non-modulation area |
| NPW | IPW | NPW | IPW | NPW |
| 42 wobbles | 6 wobbles | 4 wobbles | 6 wobbles | 26 wobbles |

EP 1 742 215 A1

Diagram to help explain the positions of modulation areas in a physical segment on a recordable information storage medium

(a)

| Sync field | Address field | | | | | | | | | | | Unity field | | | | |
|---|---|---|---|---|---|---|---|---|---|---|---|---|---|---|---|---|
| 711 | 712 | | | | | | | | | | | 713 | | | | |
| 0 | 1 | 2 | 3 | 4 | 5 | 6 | 7 | 8 | 9 | 10 | 11 | 12 | 13 | 14 | 15 | 16 |

(b) All of the physical segment is filled with primary positions

| P | P | P | P | P | P | P | P | P | P | P | P | U | U | U | U | U |
|---|---|---|---|---|---|---|---|---|---|---|---|---|---|---|---|---|

(c) All of the physical segment is filled with secondary positions

| S | S | S | S | S | S | S | S | S | S | S | S | U | U | U | U | U |
|---|---|---|---|---|---|---|---|---|---|---|---|---|---|---|---|---|

(d) Primary positions and secondary positions are mixed in the physical segment

| P | P | P | P | P | P | S | S | S | S | S | S | U | U | U | U | U |
|---|---|---|---|---|---|---|---|---|---|---|---|---|---|---|---|---|

# FIG. 76

EP 1 742 215 A1

Diagram showing a comparison of a data structure of wobble address information between
a rewritable information storage medium and a recordable information storage medium

610

(a)

| Wobble address information | | | | | | | |
|---|---|---|---|---|---|---|---|
| Wobble sync area | Reserved area | Physical segment address | Zone address | Parity information | Groove track address | Land track address | Unity area |
| 3 bits | 3 address bits | 6 address bits | 5 bits | 1 address bit | 12 bits | 12 bits | 9 address bits |
| 580 | 604 | 601 | 602 | 605 | 606 | 607 | 608 |

610

(b)

| Wobble address information | | | | | | | |
|---|---|---|---|---|---|---|---|
| Wobble sync area | Type identification information | Layer number information | Reserved area | Physical segment order information | Data segment address (number) (ECC block address) | CRC code | Unity area |
| 3 bits | 1 bit | 1 bit | 1 bit | 3 address bits | 18 address bits | 9 bits | 15 address bits |
| 580 | 721 | 722 | 723 | 724 | 725 | 726 | 609 |

FIG. 77

Diagram to help explain the relationship between a method of combining wobble sync patterns and physical segment type identification information and an modulation area arrangement pattern

| Combining method | Type of information | Positions of modulation areas in a physical segment | | |
|---|---|---|---|---|
| | | All of FIG. 76(b) is filled with primary positions | All of FIG. 76(c) is filled with secondary positions | Primary and secondary positions are mixed in FIG. 76(d) |
| 《A》 | Wobble sync pattern | FIG. 75(a) | FIG. 75(c) | FIG. 103(a) |
| | Type identifying information | "0" | "1" | "0" |
| 《B》 | Wobble sync pattern | FIG. 75(a) | FIG. 75(c) | FIG. 103(a) |
| | Type identifying information | "1" | "1" | "0" |
| 《C》 | Wobble sync pattern | FIG. 75(a) | FIG. 75(d) | FIG. 103(b) |
| | Type identifying information | "0" | "1" | "1" |

FIG. 78

EP 1 742 215 A1

Explanatory diagram of layout of recording cluster

540

| Recording cluster | |
| --- | --- |
| Data segment × n | Extended guard field |
| 77496 × n data bytes | 24 data bytes |

(a) ~ ~258

529 542

| Recording cluster | |
| --- | --- |
| Extended guard field | Data segment × n |
| 8 data bytes | 77496 × n data bytes |

(b) ~

F I G. 79

Diagram to help explain a method of recording rewritable data onto a rewritable information storage medium

FIG. 80

EP 1 742 215 A1

Diagram to help explain random shift of rewritable data recorded on a rewritable information storage medium

FIG. 81

Diagram to help explain a method of recording additionally recordable
data onto a recordable information storage medium

| Physical segment (n) | | Physical segment (n+1) |
|---|---|---|

24 wobbles

NPW    NPW

Write start point

529

Data segment (m+1)

| Extended guard field | VFO area | |
|---|---|---|

8    71

16

| | Buffer area | ~537 |

Data segment (m)

Write end point

F I G. 82

EP 1 742 215 A1

Diagram to help explain the reflectivity of an unrecorded part of each
of an "H → L" recording film and an "L → H" recording film

Reflectivity

ε

Reflectivity range of
an unrecorded part
("H" part) of an "H → L"
recording film

╱802

Reflectivity range of
a single-sided single
layer in a reproduce-only
information storage medium

╱804

δ
α
γ

Reflectivity range of
an unrecorded part
("L" part) of an "L → H"
recording film

╱801

Reflectivity range of
a single-sided
double-recording layer in
a reproduce-only information
storage medium

╱803

β

FIG. 83

EP 1 742 215 A1

Detailed explanatory diagram of ECC block after PO interleaving

| | Left small ECC block A ↓ | | | | Right small ECC block B ↓ | | | |
|---|---|---|---|---|---|---|---|---|

(0)

| Data ID #0 | IED #0 | RSV #0 | | PI-L #00-0 | | | | PI-R #00-0 |

... 
| 0-L | | | | ... | 0-R | | | |  — 0-th recording frame

(5)
| | | | | PI-L #00-5 | | | EDC #0 | PI-R #00-5 |

(6)
| PO #0 | | | | PI-L #00-6 | Data ID #1 | IED #1 | RSV #1 | PI-L #01-0 |

(7)
| 1-R | | | | PI-R #01-1 | 1-L | | | PI-L #01-1 |  — First recording frame

...
| | | | | ... | | | | |

(12)
| | | | EDC #1 | PI-R #01-6 | PO #1 | | | PI-L #01-6 |

(13)
| Data ID #2 | IED #2 | RSV #2 | | PI-L #02-0 | | | | PI-R #02-0 |

| 2-L | | | | | 2-R | | | |

| ... | ... | ... | ... | ... | ... | ... | ... | ... | ... |

(207)
| | | | EDC #31 | PI-R #31-6 | PO #31 | | | PI-L #31-6 |

FIG. 84

EP 1 742 215 A1

Explanatory diagram of a data structure of recording management data

(a)

| System lead-in area SYLDI | | | | Connection area CNA | Data lead-in area DTLDI | | | | | | | | | Data area DTA |
|---|---|---|---|---|---|---|---|---|---|---|---|---|---|---|
| Initial zone INZ | Buffer zone 1 BFZ1 | Control data zone CDZ | Buffer zone 2 BFZ2 | Connection zone CNZ | Guard track zone 1 GTZ1 | Disk test zone DKTZ | Drive test zone DRTZ | Guard track zone 2 GTZ2 | RMD duplication zone RDZ | Recording management zone RMZ | R physical information zone R-PFIZ | Reference code recording zone RCZ | | |

271

(b)

| RMD duplication zone RDZ | | | | | Recording position management zone RMZ corresponding to the first bordered area | | | |
|---|---|---|---|---|---|---|---|---|
| RDZ lead-in RDZLI | | Corresponding RMZ last recording management data RMD recording area | | | Recording management data RMD #1 corresponding to the first bordered area | Recording management data RMD #2 corresponding to the first bordered area | Recording management data RMD #3 corresponding to the first bordered area | Reserved area |
| System eserved area SRSF | Unique ID area UIDF | Corresponding RMZ last recording management data RMD #A | Corresponding RMZ last recording management data RMD #B | Reserved area | | | | |
| 48KB | 16KB | One physical segment block size (64KB) | One physical segment block size (64KB) | | One physical segment block size | 64KB | 64KB | |

272

~273

# F I G. 85A

EP 1 742 215 A1

(b) 

| 48KB | 16KB | One physical segment block size (64KB) | One physical segment block size (64KB) | Reserved area | One physical segment block size | 64KB | 64KB | Reserved area |

~273

272

(c)

| RMD field name | Reserve | RMD field 0 | RMD field 1 | RMD field 2 | RMD field 3 | RMD field 4 – 21 | Reserve |
|---|---|---|---|---|---|---|---|
| Contents of recording information | Reserved area | Disk state/ data area allocation | Test zone used/ recording waveform information | User usable area | Starting position of border area/ extended RMZ position | Position information on R zone | Reserved area |
| RMD field Data size used (bytes) | 2048 | 2048 | 2048 | 2048 | 2048 | 36864 | 18432 |
| Relative physical sector number | 0 | 1 | 2 | 3 | 4 | 5 – 22 | 23 – 31 |

F I G. 85B

Explanatory diagram of another structure of a border area on a recordable information storage medium

(a)

| Data lead-in area DTLDI | Substituting area SPA | Bordered area BRDA #1 | Border-out BRDO | Data area DTA | Original data lead-out area DTLDO |
|---|---|---|---|---|---|
| | | | | Additionally recordable range of user data | |

205

205

(b)

| Data lead-in area DTLDI | Substituting area SPA | Bordered area BRDA #1 | Border zone BRDZ | | Bordered area BRDA #2 | Border-out BRDO | Data area DTA | Extended drive test zone EDRTZ | Original data lead-out area DTLDO |
|---|---|---|---|---|---|---|---|---|---|
| | | | Border-out BRDO | Border-in BRDO | | | User data additionally recordable area | | |

(c)

| Data lead-in area DTLDI | Substituting area SPA | Bordered area BRDA #1 | Border zone BRDZ | | Bordered area BRDA #2 | Border zone BRDZ | | Bordered area BRDA #3 | Border-out BRDO | New data lead-out area NDTLDO | | | |
|---|---|---|---|---|---|---|---|---|---|---|---|---|---|
| | | | Border-out BRDO | Border-in BRDO | | Border-out BRDO | Border-in BRDI | | | Terminator area TRM | Inhibited area | Extended drive test zone EDRTZ | Original data lead-out area DTLDO |

Start position address of each area→   ↑η   ↑θ   ↑κ   911

# F I G. 86A

**(c)**

| Data lead-in area DTLDI | Data area DTA | | | | | | | | | New data lead-out area NDTLDO | | | |
| --- | --- | --- | --- | --- | --- | --- | --- | --- | --- | --- | --- | --- | --- |
| | Substituting area SPA | Bordered area BRDA #1 | Border zone BRDZ | | Bordered area BRDA #2 | Border zone BRDZ | | Bordered area BRDA #3 | Border-out BRDO | Terminator area TRM | Inhibited area | Extended drive test zone EDRTZ | Original data lead-out area DTLDO |
| | | | Border-out BRDO | Border-in BRDO | | Border-out BRDO | Border-in BRDI | | | | | | |

Starting position address of each area→  ↑ η    901  ↑ θ   902    ↑ κ    911    903

**(d)**

| | Border-out BRDO | | | | | | Border-in BRDI | | | |
| --- | --- | --- | --- | --- | --- | --- | --- | --- | --- | --- |
| Contents of information | Copy of RMD CRMD#0 | Copy of RMD CRMD#1 | ··· Copy of RMD CRMD#4 | Reserved area | Border stop block STB | Reserved area | Update physical format information U_PFI#1 | ··· Update physical format information U_PFI#6 | Recording management zone RMZ in border zone | Reserved area |
| Size used | One physical segment block size = 32 physical sectors | One physical segment block size = 32 physical sectors | ··· One physical segment block size = 32 physical sectors | — | One physical segment block size = 32 physical sectors | — | One physical segment block size = 32 physical sectors | ··· One physical segment block size = 32 physical sectors | M+1 physical segment block size = 32×(M×1) physical sectors | — |
| Relative physical segment block number | 0 | 1 | ··· 4 | 5~18 | 19 | 20~N | N+1 | ··· N+6 | N+7~N+M+7 | N+M +8 |

Border zone BRDZ

F I G. 86B

|  | Present embodiment | Conventional DVD_R |
|---|---|---|
| Capacity | 15GB | 4.7GB |
| Minimum recording capacity (in border closing) (recording width) | 4080 PS blocks (1.0mm) | 4080 ECC blocks (1.65mm) |
| Size of lead-out area in finalization (width of lead-out area) | 480 PS blocks maximum (>0.05mm) | Up to 3000 ECC blocks (>0.5mm) |
| The maximum number of Rzones | 4606 | 2302 |
| The maximum number of bordered areas | 128 | 512 |
| Capacity of test zone — Inner | 19200 sectors | 6832 sectors |
| Capacity of test zone — Outer | 14848 sectors | 7088 sectors |
| Capacity of test zone — Outer extended | 15360 sectors | - |
| The number of updates of RMD — Initial | 392 | 701 |
| The number of updates of RMD — Extended | 16384max. | - |
| Recording mode | Additional recording | Only once/ additional recording |

F I G. 87

EP 1 742 215 A1

Physical format information

| Control data zone | | Test zone | RDZ | RMZ | R-PFIZ | User data | BO | BI | User data | BO | BI | User data | BO | | Guard track zone | Test zone |

Physical format information

R physical format information

Update physical format information

Update physical format information

Update physical format information

F I G. 88

EP 1 742 215 A1

Diagram to help explain the basic concept of recording management data RMD

RMD(1PS block)

| |
|---|
| Reserved |
| RMD field 0 |
| RMD field 1 |
| RMD field 2 |
| RMD field 3 |
| RMD field 4 |
| RMD field 5 |
| ⋮ |
| RMD field 21 |
| Reserved |

RMD field 0 ---------- State of disk/updated data area allocation etc

RMD field 1 ---------- Test zone used/recording waveform information

RMD field 3 ---------- Start position of border area/position of extended RMZ

RMD field 4 ---------- R zone number in use/start position of R zone and LRA

----- Starting position of Rzone and LRA

FIG. 89

Diagram to help explain the procedure for processing immediately
after an information storage medium is installed

·HD DVD-R
·LtoH or HtoL

ST22
Reproduce BCA

ST24
Reproduce system lead-in

RDZ : RMD Duplication Zone

In a nonblank disk, RMD has
been recorded in RDZ

ST26
Reproduce RDZ

ST28
Blank disk ?

NO

YES

ST30
Search for latest RMD

End

End

When a (nonblank) disk is discharged,
border closing or finalizing is done

# F I G. 90

Diagram to help explain a method of additionally recording
information onto a recordable information storage medium

F I G. 91

Diagram to help explain the concept of a method of setting an extendable recording management data RMZ

FIG. 92

EP 1 742 215 A1

Diagram to help explain the concept of a method of setting an extendable
recording management data RMD (continued from FIG. 92)

FIG. 93

EP 1 742 215 A1

Explanatory diagram of border zone

| RMZ | | Data area |
|---|---|---|
| RMD | | User data | | User data |

Player access is impossible

| RMZ | | (Bordered area BRDA) | | Border zone |
|---|---|---|---|---|
| RMD | | R_PFI | User data | | User data | Border-out | Border-in |

| U_PFI | Extended RMZ |
|---|---|

# FIG. 94

EP 1 742 215 A1

Diagram to help explain a closing process of a second and later bordered areas

Data lead-in area | Data area

(a)

Data recording

| RDZ | RMZ | R-PFI | | Border-in | Incomplete RZone |

| RMD 2 | | RMD 1 | RMD 2 | RMD 2 | RMD 2 | R-PFI | User data | B.O | | RMD 3 | | User data |

NWA

Address in this location is recorded

(b)

Border closing

| RMD 2 | RMD 4 | | RMD 1 | RMD 2 | RMD 2 | RMD 2 | R-PFI | User data | B.O | U-PFI | RMD 3 | RMD 4 | RMD 4 | User data | B.O |

⇧ Copying the latest RMD
(Unique to HD DVD-R)

⇧ Updating physical
format information

⇧ Recording border-out
Area type 00b : data area

⇧ Recording the latest RMD into
an unrecorded area of the
present RMZ (unique to HD DVD-R)

F I G. 95

EP 1 742 215 A1

Diagram to help explain a processing method when a finalizing process
is carried out after a bordered area is closed temporarily

| | Data lead-in area | | | | | Data area | |

(a)

Border closing

| RMD 2 | | RMD 1 | RMD 2 | RMD 2 | RMD 2 | R-PFI | User data | 00h | User data | B.O |

RDZ | RMZ | R-PFI | Incomplete RZone | Incomplete RZone

Area type
00h : data area

(b)

Finalizing

| RMD 2 | | RMD 1 | RMD 2 | RMD 2 | RMD 2 | R-PFI | User data | 00h | User data | B.O | T |

⇧
Recording terminator
Area type 10b : data lead-in area

F I G. 96

EP 1 742 215 A1

Diagram to help explain the principle of extended recording management zone RMD recorded in border-in

Open RZone    Open RZone    Incomplete RZone

(a) Before border closing

Recorded    Unrecorded

Inner periphery

Outer periphery

Filling    Filling

Border-out    Border-in

(b) After border closing

Inner periphery

Outer periphery

RMZ in border-in

FIG.97

EP 1 742 215 A1

Explanatory diagram of R zone

F I G. 98

Diagram to help explain the concept of a method of additionally recording data in a plurality of places using R zones

(a) Invisible RZone / Incomplete RZone / NWA

HD DVD-R supports recording at a plurality of addresses as DVD-R

(b) Open RZone / Open RZone / Invisible RZone / Incomplete RZone / NWA

Drive can have two open RZones at the same time. At this time, there are three NWAs.

For example, file management information is recorded in open RZone and video data is recorded in invisible RZone

F I G. 99

Diagram to help explain the relationship between an R zone reserving method and recording management data

F I G. 100

Diagram to help explain the correlation between R zone and recording management data when the first bordered area is closed

FIG. 101

Diagram to help explain the procedure for a finalizing process

FIG. 102

Diagram to help explain the principle of setting an expanded recording management zone using R zones

(a) Before extension of RMZ

Open RZone | Open RZone | Incomplete RZone

Recorded | Unrecorded

Inner periphery

Outer edge

(b) After extension of RMZ

Complete RZone | RMZ in bordered area | Invisible RZone

Inner periphery

128 PS blocks

Outer edge

FIG. 103

EP 1 742 215 A1

Diagram to help explain the relationship between a new setting of an extended recording management zone using R zones and recording management data RMD

Data lead-in area | Data area

| RDZ | RMZ | R-PFI | Incomplete RZone |

(a) Data recording

RMD 1

User data

↑ NWA

(b) RZone closing

Updating fields 4-21

RMD 1 | RMD 2

Complete RZone

User data

↑ NWA

(c) RMZ reserving

Updating field 3, fields 4-21

Complete RZone | Open RZone | Invisible RZone

RMD 3

RMD 1 | RMD 2 | RMD 3 | RMD 3

User data

⇧ Copying the latest RMD

⇧ Recording the latest RMD into an unrecorded area of the present RMZ

128 PS blocks (size fixed)

↑ NWA

FIG. 104

EP 1 742 215 A1

Diagram to help explain the concept of a processing method when an existing
recording management zone is filled up in the same bordered area

(a) ~ RMZ is almost filled up

(b) ~ · Incomplete RZone is closed
· RMZ is reserved

(c) ~ · The present RMZ is filled
· RMD is copied

RMD duplication zone

RMD

Open RZone

Open RZone

Incomplete RZone

Data lead-in area

Data area

RMZ in bordered area

Complete RZone

Complete RZone

Data lead-in area

Data area

Copying the latest RMD

Filling with the latest RMD

F I G. 105

EP 1 742 215 A1

Diagram to help explain the concept of extension of test zone

Radius (mm)         57.95         58.00         58.05         58.10

Outside limit of data recording area

(a)   Initial state

| Data area | Guard track zone | Outer circumference test zone | Guard track zone |

Direction ofblank search ⟶ ⟵ Direction of test

(b) After extension of test zone

| Data area | Guard track zone | Extended test zone | Outer circumference test zone | Guard track zone |

Outside limit of data recording area

⟵ Direction of test

FIG. 106

EP 1 742 215 A1

Detailed explanatory diagram of extension of test zone

|  | Data lead-in area | | | Data area | Data lead-in area | | |

(a)

Data recording

| RDZ | RMZ | R-PFI | Incomplete RZone | Guard track | Test zone | Guard track |

RMD 1

User data

Outside limit of data recording area

Test

(b)

Extension of test zone

Updating field 0

| RMD 1 | RMD 2 |

User data

Data area | Guard track | Extended test zone | Test zone | Guard track |

Outside limit of data recording area

Test

F I G. 107

EP 1 742 215 A1

Diagram to help explain a method of searching for the recording position of the latest recording management data RMD using an RMD duplication zone

Recorder (searching for the latest RMD)

Starting physical sector number of extended RMZ#n

Last recoding position of physical sector number of RZone#n

| System lead-in | RMD 3 | RMD 5 | RMD 1 | RMD 2 | RMD 3 | RPFI | User data | B.O | UPFI | RMD 4 | RMD 5 | User data | B.O | UPFI | RMD 6 | RMD 7 | User data |
|---|---|---|---|---|---|---|---|---|---|---|---|---|---|---|---|---|---|

RDZ  RMZ  First border  Second border  Third border

Data lead-in

ROM drive (can neither access an unrecorded area nor interpret RMD)

| System lead-in | RMD 3 | RMD 5 | RMD 1 | RMD 2 | RMD 3 | RPFI | User data | B.O | UPFI | RMD 4 | RMD 5 | User data | B.O | UPFI | RMD 6 | RMD 7 | User data | B.O |
|---|---|---|---|---|---|---|---|---|---|---|---|---|---|---|---|---|---|---|

Data area arrangement
The last recorded address of the latest Rzone in a bordered area

FIG. 108

EP 1 742 215 A1

Diagram showing a detailed structure of the wobble signal detector
135 (FIG. 1) in the information recording and reproducing apparatus

Wobble signal

352
Band-pass filter

354
A/D

(a)

356
Phase locked loop

(b)

358
Phase detector

(c)

(e)

362
Low-pass filter

(d)

360
Symbol clock generator

(f)

364
Address detector

Address

F I G. 109

F I G. 110

EP 1 742 215 A1

Diagram to help explain the principle of operation
of the phase locked loop circuit in FIG. 109

(a) Wobble signal

(b) Doubling method

(c) Remodualting method

(d) Masking method

F I G. 111

206

Diagram to help explain the principle of operation of the beat
canceller included in the phase detector in FIG. 109

Beat canceller

Phase
detected
signal

380

−

370
NPW
detector

374
LPF

372
NPW
detector

376
LPF

378
+

F I G. 112

Diagram to help explain a method of
setting recording conditions

| T$_{SFP}$ Table | | Mark length | | |
|---|---|---|---|---|
| | | 2T | 3T | >4T |
| Starting space length | 2T | a | b | c |
| | 3T | d | e | f |
| | >4T | g | h | i |

(a)

| T$_{ELP}$ Table | | Mark length | | |
|---|---|---|---|---|
| | | 2T | 3T | >4T |
| End space length | 2T | j | k | l |
| | 3T | m | n | o |
| | >4T | p | q | r |

(b)

| T$_{LC}$ Table | Mark length | | |
|---|---|---|---|
| | 2T | 3T | >4T |
| | s | t | u |

(c)

F I G. 113

EP 1 742 215 A1

Diagram to help explain reflectivity at an unrecorded/
recorded position in H→L recording film and L→H recording film

MD input

FIG.114

Comparison of reflectivity

| | Determining method | L-H medium | | H-L medium | | ROM (2 layers) | |
|---|---|---|---|---|---|---|---|
| | | Max. | Min. | Max. | Min. | Max. | Min. |
| System lead-in area | I11H reflectivity | 32% | 16% | – | – | 32% | 18% |
| Track level (groove) | Ratio of I11H with reference to system lead-in area | 19.2% {0.6} | 6.4% {0.6} | ↓ | ↓ | | |
| User recording data | I11H reflectivity | 32% | 16% | 32% | 16% | 32% | 18% |

F I G. 115

EP 1 742 215 A1

Explanatory diagram of border zone size

| Physical sector number of physical sector lying at the start of border-out BRDO | 04FE00h ~ 1D0DFFh | 1D0E00h ~ 411BFFh | 411C00h~ |
|---|---|---|---|
| Position in the radial direction | Inner circumference | Middle circumference | Outer circumference |
| Size N+1 of border-out BRDO (the number of physical segment blocks) | 290 | 380 | 480 |
| Size M+8 of border-in BRDI (the number of physical segment blocks) | 207 | 157 | 107 |

# F I G. 116

Explanatory diagram of terminator size

| Physical sector number of physical sector lying at the start of terminator TRM | 04FE00h ~ 1D0DFFh | 1D0E00h ~ 411BFFh | 411C00h~ |
|---|---|---|---|
| Position in the radial direction | Inner circumference | Middle circumference | Outer circumference |
| Size of terminator (the number of physical segment blocks) | 290 | 380 | 480 |

# F I G. 117

Diagram to help explain a data structure of data ID

(a) — | Data frame |

(b) — | Data ID | IED | Reserved RSV | Main data D0~D2047 | EDC |

(c) — | Data frame information | Data frame number (= physical number) |

931 · 921 · 932 · 933 · 934 · 935 · 922 · 936 · 937

(d) —

| Format type | | Tracking method | | Reflectivity of recording film | | Recording type information | | Area type information | | Data type information | | Layer number | |
|---|---|---|---|---|---|---|---|---|---|---|---|---|---|
| 0 | CLV | 0 | Pit tracking | 0 | 40% or more | 0 | General data | 00 | Data area DTA | 0 | Read-only | 0 | Layer 0 |
| 1 | Zone | 1 | Groove tracking | 1 | 40% or less | 1 | Real-time (AV) data | 01 | System lead-in area SYLDI or data lead-in area DTLDI | 1 | Rewritable | 1 | Layer 1 |
| | | | | | | | | 10 | Data lead-out area DTLDO or system lead-out area SYLDO | | | | |
| | | | | | | | | 11 | Middle area MDA | | | | |

F I G. 118

EP 1 742 215 A1

Diagram to help explain a method of setting a data lead-out area after finalization

| Area name | | Original data lead-out area DTLDO | | | |
|---|---|---|---|---|---|
| Zone name | | Guard track zone 3 GTZ3 | Drive test zone DRTZ | Disk test zone DKTZ | Guard track zone 4 GTZ4 |
| Area type information 935 | Data area DTA | 10b : Data lead-out area DTLDO | | | |
| Physical sector number at the start position in each zone | | 735440 (hexadecimal notation) | 739040 (hexadecimal notation) | 73CA40 (hexadecimal notation) | 73CC40 (hexadecimal notation) |
| Physical segment block number at the start position in each zone | | 39AA2 (hexadecimal notation) | 39C82 ((hexadecimal notation) | 39E52 (hexadecimal notation) | 39E62 (hexadecimal notation) |

(a)

| Zone name | | Guard track zone 3 GTZ3 | Extended drive test zone EDRTZ | Drive test zone DRTZ | Disk test zone DKTZ | Guard track zone 4 GTZ4 |
|---|---|---|---|---|---|---|
| Area type information 935 | Data area DTA | 10b : Data lead-out area DTLDO | | | | |
| Physical sector number at the start position in each zone | | 731840 (hexadecimal notation) | 735440 (hexadecimal notation) | 739040 (hexadecimal notation) | 73CA40 (hexadecimal notation) | 73CC40 (hexadecimal notation) |
| Physical segment block number at the start position in each zone | | 398C2 (hexadecimal notation) | 39AA2 (hexadecimal notation) | 39C82 (hexadecimal notation) | 39E52 (hexadecimal notation) | 39E62 (hexadecimal notation) |
| Area name | | New data lead-out area NDTLDO | | | | |

(b)

# F I G. 119

EP 1 742 215 A1

Diagram to help explain a method of setting a data lead-out area after finalization

(c)

| Area name | Data area | New data lead-out area NDTLDO | | | | | |
|---|---|---|---|---|---|---|---|
| Zone name | Bordered area BRDA | Border-out BRDO | Inhibited area | Guard track zone 3 GTZ3 | Drive test zone DRTZ | Disk test zone DKTZ | Guard track zone 4 GTZ4 |
| Area type information | 00b : Data area | 10b : data lead-out area DTLDO | — | 10b : data lead-out area DTLDO | | | |

911

935

(d)

| Area name | Data area DTA | | New data lead-out area NDTLDO | | | | | |
|---|---|---|---|---|---|---|---|---|
| Zone name | Bordered area BRDA | Border-out BRDO | Terminator area TRM | Inhibited area | Guard track zone 3 GTZ3 | Drive test zone DRTZ | Disk test zone DKTZ | Guard track zone 4 GTZ4 |
| Area type information | 00b : Data area DTA | | 10b : data lead-out area DTLDO | — | 10b : data lead-out area DTLDO | | | |

911

935

F I G. 120

EP 1 742 215 A1

Diagram to help explain another embodiment related to a data structure of recording management data

| RMD field number | Description of recorded information |
|---|---|
| 0 | The same as FIG. 25 (except that all of position information is shown in physical sector numbers) |
| 1 | The details are written in FIG. 123 |
| 2 | The same as FIG. 25 |
| 3 | Physical sector number representing the start position of the first border-out BRDO |
| | Physical sector number representing the start position of the second border-out BRDO |
| | ................. |
| | Physical sector number representing the start position of the 128th border-out BRDO. If the 128th border-out BRDO does not exist, "00h" is set |
| | Number of the recording management zone RMZ now in use (which is open and in which RMD can be additionally recorded) Number of the recording management zone RMZ in which the latest recording management data RMD has been recorded |
| | Reserved area (main data is set to "00h") |
| | Physical sector number representing the start position of the first extended recording management zone RMZ |
| | Size information (shown in the number of physical sectors occupying RMZ) on the first extended recording management zone RMZ |
| | Physical sector number representing the start position of the second extended recording management zone RMZ |
| | Size information (shown in the number of physical sectors occupying RMZ) on the second extended recording management zone RMZ |
| | ................. |
| | Physical sector number representing the start position of the 128th extended recording management zone RMZ. If the 128th extended recording management zone RMZ does not exist, "00h" is set |
| | Size information (shown in the number of physical sectors occupying RMZ) on the 128th extended recording management zone RMZ. If the 128th extended recording management zone RMZ does not exist, "00h" is set. |
| | Reserved area (main data is set to "00h") |

# FIG. 121

Diagram to help explain another embodiment related to a data structure of recording management data

| RMD field number | Description of recorded information |
|---|---|
| 4 | The sum total of the number of unspecified R zones, the number of open R zones, and the number of complete R zones<br>Unspecified R zone : an area unreserved for data recording (Invisible R Zone) in data area DTA |
| | Number information on the first open R zone<br>Open R zone : R zone having an unrecorded area in which additional recording can be done later |
| | Number information on the second open R zone<br>Open R zone : R zone having an unrecorded area in which additional recording can be done later |
| | Reserved area (main data) is set to "00h" |
| | Physical sector number representing the start position of the first R zone |
| | Physical sector number representing the last recorded address (LRA) in the first R zone |
| | Physical sector number representing the start position of the second R zone |
| | Physical sector number representing the last recorded address (LRA) in the second R zone |
| | ················· |
| | Physical sector number representing the start position of the 254th R zone |
| | Physical sector number representing the last recorded address (LRA) in the 254th R zone |
| ··· | ················· |

# F I G. 122A

Diagram to help explain another embodiment related to a data structure of recording management data

| RMD field number | Description of recorded information |
|---|---|
| 21 | Physical sector number representing the start position of the 4351st R zone |
| | Physical sector number representing the last recorded address (LRA) in the 4351st R zone |
| | Physical sector number representing the start position of the (4351+1)th R zone |
| | Physical sector number representing the last recorded address (LRA) in the (4351+1)th R zone |
| | ................. |
| | Physical sector number representing the start position of the (4351+255)th R zone. If a corresponding R zone has not been set, main data is set to "00h." |
| | Physical sector number representing the last recorded address (LRA) in the (4351+255)th R zone. If a corresponding R zone has not been set, main data is set to "00h." |
| | Reserved area |

F I G. 122B

Diagram to help explain an embodiment of another data structure of RMD field 1

| RMD field number | Description of recorded information |
|---|---|
| 1 | #1 : Information recording and reproducing apparatus manufacturer identification information |
| | #1 : Information recording and reproducing apparatus serial number (written in ASCII code) |
| | #1 : Information recording and reproducing apparatus model number (written in ASCII code) |
| | #1 : Information on the date when recording conditions were adjusted using drive test zone DRTZ |
| | #1 : Address information on the place where recording conditions were adjusted in inner drive test zone DRTZ Address in the drive test zone DRTZ belonging to the data lead-in area DTLDI is written in a physical segment block address number |
| | #1 : Address information on the place where recording conditions were adjusted in outer drive test zone DRTZ Address in the drive test zone DRTZ belonging to the data lead-out area DTLDI is written in a physical segment block address number |
| | #1 : Information on a recording condition automatic adjusting method (running OPC) |
| | #1 : The last DSV (Digital Sum value) at the end of recording |
| | ................. |

F I G. 123A

EP 1 742 215 A1

Diagram to help explain an embodiment of another data structure of RMD field 1

| RMD field number | Description of recorded information |
|---|---|
| 1 | #4 : Information recording and reproducing apparatus manufacturer identification information |
| | #4 : Information recording and reproducing apparatus serial number (written in ASCII code) |
| | #4 : Information recording and reproducing apparatus model number (written in ASCII code) |
| | #4 : Information on the date when recording conditions were adjusted using drive test zone DRTZ |
| | #4 : Address information on the place where recording conditions were adjusted in inner drive test zone DRTZ<br>Address in the drive test zone DRTZ belonging to the data lead-in area DTLDI is written in a physical segment block address number |
| | #4 : Address information on the place where recording conditions were adjusted in outer drive test zone DRTZ<br>Address in the drive test zone DRTZ belonging to the data lead-out area DTLDI is written in a physical segment block address number |
| | #4 : Information on a recording condition automatic adjusting method (running OPC) |
| | #4 : The last DSV (Digital Sum value) at the end of recording |

# FIG. 123B

Diagram to help explain another embodiment related to a data structure of
wobble address information in a recordable information storage medium

(a)

| Wobble sync area | Reserved area | Physical segment address | Zone address | Parity information | Groove track address | Land track address | Unity area |
|---|---|---|---|---|---|---|---|
| 3 bits | 3 address bits | 6 address bits | 5 bits | 1 address bit | 12 bits | 12 bits | 9 address bits |

Wobble address information

(b)

| Wobble sync area | Type identification information | Layer number information | Reserved area | Physical segment sequence information | Data segment address (number) (ECC block address) | CRC code | Unity area |
|---|---|---|---|---|---|---|---|
| 3 bits | 1 bit | 1 bit | 1 bit | 3 address bits | 18 address bits | 9 bits | 15 address bits |

Wobble address information

(c)

| Wobble sync area | Segment information | Physical segment block address | Physical segment sequence information | CRC code | Unity area |
|---|---|---|---|---|---|
| 3 bits | 3 address bits | 18 address bits | 3 address bits | 9 bits | 15 address bits |

Wobble address information

(d)

| Type identification information | Reserved area |
|---|---|
| 1 bit | 1 bit |

FIG. 124

EP 1 742 215 A1

| Description of point | Corresponding figure | Effect/combination of numbers | Characteristic | | | | | | | |
|---|---|---|---|---|---|---|---|---|---|---|
| | | | 1 | 2 | 3 | 4 | 5 | 6 | 7 | 8 |
| A) In data area, data lead-in area, and data lead-out area, PRML is used in reproduction | FIG. 5 FIG. 9 | The recording density of information storage medium is made higher Line density is particularly increased | ○ | ○ | ☆ | | △ | ◎ | | ☆ |
| A1)PR(1,2,2,2,1) is used | FIG. 7 | Higher recording density + Reliability of reproduced signal | ◎ | ◎ | ☆ | | △ | ◎ | | ◎ |
| A2)Reference code and recording zone are arranged next to each other in data area | FIG. 16 | Circuit adjustment accuracy is increased | | ◎ | ○ | | △ | △ | | ◎ |
| A3)Reference code pattern is a repetition of "3T3T6T" | FIG. 16 | Optimization of ETM&RLL(1,10) and PRML | | ☆ | | | △ | △ | | ◎ |
| B) In system lead-in area and system lead-out area, slide level detecting method is used in reproduction | FIG. 3 FIG. 9 | Interchangeability with existing DVD is secured Reproduction is stabilized | ◎ | ◎ | ○ | | | △ | | ☆ |
| B1)The density of system lead-in/-out areas is made lower than that of data lead-in/-out areas | FIGS. 13 to 15 | Interchangeability with existing DVD is secured Reproduction is stabilized | ◎ | ◎ | △ | | | △ | | ☆ |
| B2)System lead-in area and burst cutting area are separated from each other | FIG. 9 | Interference between system lead-in information and BCA information is prevented and reproduction accuracy is increased | △ | △ | △ | | | △ | | ◎ |
| B3)Microscopic concavity and convexity are made in burst cutting area of L→H film | FIG. 9 | Detection level in BCA coincides with that in SYLDI → facilitating the process | △ | △ | | | | ☆ | | △ |
| B4)System lead-in area is formed opposite to data area with data lead-in area between them | FIG. 9 FIG. 16 | Since the number of times of switching the reproducing circuits according to reproduction procedure is small, the reproduction start time in data area becomes earlier | ○ | ○ | △ | | | | | ◎ |

FIG. 125

EP 1 742 215 A1

| Description of point | Corresponding figure | Effect/combination of numbers | Characteristic | | | | | | | |
|---|---|---|---|---|---|---|---|---|---|---|
| | | | 1 | 2 | 3 | 4 | 5 | 6 | 7 | 8 |
| C) Recording management zone is made extendable | FIG. 92, FIG. 93 | RMD recording area can be extended and the maximum possible number of times of additional recording increases | | | | | | | ☆ | |
| C1)Recording management zone can be set on a border-in BRDI basis | FIG. 86 | The number of times of additional recording in bordered area can be increased remarkably | | | | | | | ☆ | |
| C2)Recording management zone of the first bordered area BRDA#1 is arranged in data lead-in area DTLDI | FIG. 16 | Border-in of the first bordered area is shared with data lead-in, enabling data area to be used effectively | | | | | | | △ | |
| C3)RMD duplication zone RDZ is arranged in data lead-in area DTLDI | FIG. 16 | A part of recording management data RMD is provided redundantly, enabling recovery when reproduction is impossible due to defects or the like | | | △ | | | | ☆ | |
| C3α)The last recording management data RMD related to bordered area is recorded in RMD duplication zone RDZ | FIG. 16 | The possible number of additional recording can be increased by effectively using RMD duplication zone RDZ | | | ◎ | ○ | | | ◎ | |
| C3β)The last RMD is recorded in RMD duplication zone RDZ each time new RMZ is created | FIG. 17 | The possible number of additional recording to a recordable information storage medium is increased remarkably. The position of the latest RMD is searched for easily. RMD reliability increases | | | ◎ | ○ | | | ○ | |

# FIG. 126A

| Description of point | Corresponding figure | Effect/combination of numbers | Characteristic | | | | | | | |
|---|---|---|---|---|---|---|---|---|---|---|
| | | | 1 | 2 | 3 | 4 | 5 | 6 | 7 | 8 |
| C4) RDZ lead-in is recorded in data lead-in area | FIG. 17 | Whether the storage medium has been used even once immediately after manufacture can be identified | | | | | | | ☆ | |
| C4α) RDZ lead-in RDZLI is arranged in RMD duplication zone RDZ | FIG. 17 | The time required to acquire necessary information can be shortened | | | △ | | | | △ | |
| C5)RDZLI size or RMD size is set to 64 KB | FIG. 17 | A drop in the RDZLI or RMD recording efficiency can be prevented | | | | | | | △ | |
| C6)Copy of RMD CRMD is written repeatedly | FIG. 86 | Reliability of a copy of RMD CRMD is increased | | | ◎ | | | | ○ | |
| C7)Updated physical format information is written repeatedly | FIG. 86 | Reliability of updated physical format information is increased | | | ◎ | | | | ○ | |
| C8)R zone is used as extended recording management zone RMZ | FIG. 103 | The number of times of additional recording in the same bordered area can be increased remarkably | | | | | | | ☆ | |
| C8α) Location of extended recording management zone RMZ and size information are managed in RMD | FIG. 121 FIG. 122 | The position of extended recording management zone RMZ is searched for easily. Recording management zone RMZ is extended easily | | | △ | | | | ○ | |

<div align="center">

# F I G. 126B

</div>

| Description of point | Corresponding figure | Effect/combination of numbers | Characteristic | | | | | | | |
|---|---|---|---|---|---|---|---|---|---|---|
| | | | 1 | 2 | 3 | 4 | 5 | 6 | 7 | 8 |
| E) RMD includes recordable range information | FIGS. 25 to 27 | The remaining amount of the recordable range can be detected at high speed | △ | | | ○ | ○ | | ○ | |
| E1)Recordable range information is described in ECC block address numbers | FIGS. 25 to 27 | An unrecorded area is accessed at high speed. The data size is small | △ | | | ○ | ○ | | ○ | |
| E2)Drive test zone can be extended | FIG. 18 | The number of times of test recording is increased, enabling recording accuracy to be increased. | ☆ | | | ○ | ○ | | ○ | |
| E3)Extended drive test zones are set sequentially from the outer edge side toward the inner edge. In the same extended drive test zone, trial writing is done from the inner edge side | FIG. 18 | Trial writing in extended drive test zone is done by additionally recording data behind, facilitating the trial writing process | ◎ | | | ○ | ○ | | ○ | |
| E4)Data lead-out area DTLDO including extended drive test zone can be reset. Its starting position information is managed in RMD | FIG. 18 and FIGS. 25 to 27 | Redefinition of data area DTA facilitates the management of a user data additionally recordable range | ◎ | | | ○ | ○ | | ○ | |
| E5)Information on the amount of drive test zones used or on the remaining amount is recorded in RMD | FIGS. 25 to 27 | Whether the resetting of extended drive test zone is necessary is known | | | | ○ | ○ | | ○ | |
| E6)Position information on extended drive test zone is managed in RMD | FIGS. 25 to 27 | Extension by updating RMD can be set a plurality of times | ◎ | | | ○ | ○ | | ○ | |
| E7)Information on the amount of RMD used or on the remaining amount in RMZ is recorded | FIGS. 25 to 27 | A state where additional recording cannot be done in RMZ area is known in advance | | | | ○ | ○ | | ○ | |
| F) System lead-in area includes country name information | FIG. 22 | IP assurance and a warning of patent infringement are facilitated | | | △ | | | | | ◎ |

# FIG. 127

| Description of point | Corresponding figure | Effect/combination of numbers | Characteristic | | | | | | | |
|---|---|---|---|---|---|---|---|---|---|---|
| | | | 1 | 2 | 3 | 4 | 5 | 6 | 7 | 8 |
| G) Physical format information arrangement positions are standardized | FIG. 22 | Information reproducing processes in the apparatus can be standardized and simplified | ◎ | ◎ | | | | | | ☆ |
| G1)Revision information according to recording speed is given | FIG. 23 | Expansion of functions to a medium compatible with future high-speed recording is assured. Standards can be coped with by a simple method known as revision | ○ | | ○ | | ☆ | | ☆ | |
| G1α) A different revision number can be set to each of the maximum and minimum values of recording speed | FIG. 23 | Extending the selection range of recording films that can be developed makes it possible to supply mediums which enable higher-speed recording or lower-cost mediums | ○ | | | | ☆ | | | |
| G2)Either physical format information or R physical format information has recording mark polarity information in it | FIG. 23 | Both of H→L and L→H recording films are allowed, extending the selection range of recording film, which enables higher-speed recording and lower cost | ◎ | ☆ | ◎ | | | | ☆ | |
| G3)Optical system condition information is arranged at the start of recording conditions | FIG. 23 | Whether recording conditions arranged just behind optical system condition information can be determined at high speed | ☆ | | | | ☆ | | | |

# F I G. 128A

| Description of point | Corresponding figure | Effect/combination of numbers | Characteristic | | | | | | | |
|---|---|---|---|---|---|---|---|---|---|---|
| | | | 1 | 2 | 3 | 4 | 5 | 6 | 7 | 8 |
| H) The same data frame is distributed over a plurality of small ECC blocks | FIG. 35 | An improvement in the error correcting capability increases the reliability of recorded data | | | ☆ | ◯ | | | ◯ | ☆ |
| H1)The same physical sector is caused to belong to two small ECC blocks alternately | FIG. 35 FIG. 37 | A structure immune to burst errors can be provided | | | ☆ | ◯ | | | ◯ | ◎ |
| H2)32 physical sectors constitute one ECC block | FIG. 31 | The allowed length of a flaw in the surface of a medium which can be error-corrected is extended | | | ☆ | ◯ | | | ◯ | ◎ |
| H3)The data structure of an even-numbered physical sector differs from that of an odd-numbered one | FIG. 37 | PO inserting method is simple and error extraction after error correction is easy. An ECC block constructing process is simplified | | | ☆ | △ | | | ◯ | ◎ |
| H4)An even-numbered recording frame differs from an odd-numbered one in the place where PO is inserted | FIG. 36 | Data ID can be arranged at the start of physical sector | | | ☆ | | | | ◯ | ◎ |
| H5)An odd-numbered recording frame differs from an even-numbered one in a small ECC block including data ID (arranged alternately) | FIG. 84 | Data ID reproduction reliability is improved and access reliability is increased | | | ☆ | ◎ | | | ◯ | ◎ |
| H6) Data ID is arranged at regular intervals in the data recorded onto an information storage medium | FIG. 84 | Retrieval of data ID position is improved | | | | ◎ | | | ◯ | ◎ |

# F I G. 128B

| Description of point | Corresponding figure | Effect/combination of numbers | Characteristic | | | | | | | |
|---|---|---|---|---|---|---|---|---|---|---|
| | | | 1 | 2 | 3 | 4 | 5 | 6 | 7 | 8 |
| I) Sync code includes a polarity reversal channel bit | FIG. 38 | DSV control of channel bit trains can be performed macroscopically | | | ◎ | | | | | |
| J) Address information is recorded in advance by wobble phase modulation | FIG. 64 | Slot interval is narrow and the synchronization of wobble signals is easy | | | | ☆ | ○ | | | |
| J1)17 wobble data units constitute a physical segment | FIG. 69 | Sync frame boundary is secured, facilitating sync detection. Indefinite bits are prevented from being arranged consecutively in ECC block | | | ◎ | ○ | | | | |
| J1 α)A piece of address information is distributed in one physical segment | FIG. 69 | The present position can be checked on a physical segment basis | | | | ○ | | | | |
| J2)The occupation ratio of a non-modulation area to a modulation area is set high | FIG. 69 | Reference clock extracting accuracy and extraction stability are improved | | | | ◎ | ○ | | ○ | |
| J2 α)Address information is distributed in units of 3 address bits | FIG. 69 | The effect of dust and flaw can be alleviated in reproducing addresses | | | | | ○ | △ | △ | |
| J2 β)Unity field is arranged at the end of physical segment | FIG. 69 | The position of the boundary between physical segments is detected by detecting a unity field | | | | | ○ | △ | ○ | |

F I G. 129A

EP 1 742 215 A1

| Description of point | Corresponding figure | Effect/combination of numbers | Characteristic | | | | | | | |
|---|---|---|---|---|---|---|---|---|---|---|
| | | | 1 | 2 | 3 | 4 | 5 | 6 | 7 | 8 |
| J3)Wobble sync is formed using a pattern absent in wobble address | FIG. 69 | The identification of the location of a wobble sync area is made easier | | | | ◎ | ○ | | ○ | |
| J3α)Wobble sync pattern is formed by changing the address bit and the wobble period | FIG. 69 | Fixed slot positions make wobble PLL stable. The detection of the position of a wobble sync area is made easier | | | | ○ | △ | | | |
| J3β)Wobble sync area is formed in a 12 wobble period | FIG. 69 | The detection of the location of a wobble sync area is made easier | | | | ○ | △ | | | |
| J3γ)Wobble sync is arranged at the start of physical segment | FIG. 69 | The position of the boundary between physical segments is detected by detecting wobble sync | | | | ○ | △ | | | |
| J3δ)9 address bits are allocated to unity area | FIG. 69 | Reliability of reproduction in connection with dirt on and flaws in the surface of a medium is improved | | | | ○ | △ | | | |
| J3ε)Unity area is arranged at the end of wobble address information | FIG. 69 | The detection of the starting position of wobble address information is easy | | | | ○ | △ | | | |

F I G. 129B

| Description of point | Corresponding figure | Effect/combination of numbers | Characteristic | | | | | | | |
|---|---|---|---|---|---|---|---|---|---|---|
| | | | 1 | 2 | 3 | 4 | 5 | 6 | 7 | 8 |
| J4)Address information is recorded in advance by L/G recording + wobble modulation | FIG. 67 | The most efficient, high density recording can be done | | | | ◎ | ○ | | | |
| J4α)L/G recording is combined with wobble phase modulation | FIG. 67 | The quality of reproduced signal from an indefinite bit area is improved easily | | | | ○ | △ | | | |
| J4β)The Gray code is used for track address information | FIG. 70 | The frequency of occurrences of indefinite bits is reduced, stabilizing the detection of reproduced signal | | | | ○ | △ | | | |
| J4γ)Indefinite bits are distributed also in groove area | FIG. 72 | Address information can be detected stably even in land area | | | | ○ | △ | | | |
| J4δ)Indefinite bits are distributed in both of land and groove areas | FIG. 72 | The risk of erroneous detection is distributed, facilitating stable detection | | | | ○ | △ | | | |
| J4ε)Zone address and parity information are arrange next to each other | FIG. 69 | Reliability of reproduction in connection with dust on and flaw in the surface of a medium is improved | | | | ○ | △ | | | |
| J5)The modulated areas of adjacent tracks are shifted from each other to prevent them from overlapping with each other | FIG. 73 | The interference between adjacent modulated areas is prevented | | | | ◎ | ○ | | ◎ | |

# F I G. 130A

| Description of point | Corresponding figure | Effect/combination of numbers | Characteristic | | | | | | | |
|---|---|---|---|---|---|---|---|---|---|---|
| | | | 1 | 2 | 3 | 4 | 5 | 6 | 7 | 8 |
| J5α)A plurality of types of arrangement patterns of modulated areas are provided | FIG. 75 | The locations of other modulated areas are estimated in advance, increasing the accuracy of detection | | | | ○ | △ | | ○ | |
| J5β)Wobble sync pattern indicates the arrangement of modulated areas | FIG. 75 | The location of next modulation area is estimated in advance by pattern decision | | | | ○ | △ | | △ | |
| J5γ)Physical segment type identification information indicates the arrangement of modulated areas | FIG. 78 | The location of next modulated area is estimated in advance, increasing the accuracy of detection | | | | ○ | △ | | △ | |
| J5δ)A combination of wobble sync pattern and wobble address information indicates the arrangement of modulated areas | FIG. 78 | Arrangement pattern of three or more modulated areas can be represented, enabling a plurality of arrangement patterns of modulated areas | | | | ○ | △ | | △ | |
| J5ε)The position of physical segment sequence information is adapted to a rewritable information storage medium | FIG. 77 | Interchangeability is increased, which standardizes and simplifies control | | | | ○ | △ | | | ◎ |
| J5ζ)Type identification information is arranged just behind wobble sync | FIG. 124 | Wobble addresses are detected at higher speed | | | | ○ | △ | | ◎ | |
| J6)Physical segment block number is arranged in front of physical segment sequence information | FIG. 124 | Access using wobble addresses is improved | | | | ○ | △ | | | |

F I G. 130B

| Description of point | Corresponding figure | Effect/combination of numbers | Characteristic | | | | | | | |
|---|---|---|---|---|---|---|---|---|---|---|
| | | | 1 | 2 | 3 | 4 | 5 | 6 | 7 | 8 |
| K) Guard area is arranged between data fields (or ECC blocks) | FIG. 61 | Interchangeability between types of mediums is secured without destroying the data field | | | ◎ | | ○ | | ○ | |
| K1)The size of guard area is made equal to one sync frame size | FIG. 61 | The detection of sync code position in reproduction is made easier | | | ○ | | △ | | | |
| K2)Sync code (sync data) is arranged in guard area | FIG. 63 | The positions in guard area and physical sector are determined easily | | | ○ | | △ | | | |
| K3)Position adjustment is made in guard area when a shift in the recording position takes place | FIG. 80 | Recording timing for position shift in recording is corrected | | | ○ | | △ | | | |
| K3)Partially multi-recording is done in extended guard area at the start position of additional recording/rewriting | FIG. 80 | Gaps are prevented from occurring, removing interlayer crosstalk | | | ○ | ☆ | ☆ | | ○ | |
| K3α)Recording cluster is formed for each data segment | FIG. 79 | PC data and AV data are recorded in a mixed manner easily | | | △ | | ○ | | | |
| K3β)The amount of random shift of each of the data segments in recording cluster coincides with one another | FIG. 81 | Synchronization is unnecessary in VFO extending over data segments | | | △ | | ○ | | | |

FIG. 131A

| Description of point | Corresponding figure | Effect/combination of numbers | Characteristic | | | | | | | |
|---|---|---|---|---|---|---|---|---|---|---|
| | | | 1 | 2 | 3 | 4 | 5 | 6 | 7 | 8 |
| K3γ)Extended guard area is set at the end of recording cluster | FIG. 80 | Postamble area in wobble shift is protected | | | △ | | ◯ | | . | |
| K3δ)Extended guard area is set at the start of recording cluster | FIG. 80 | Many VFO areas are secured, facilitating PLL | | | △ | | ◯ | | | |
| K3ε)Data segment length is made equal to the length of 7 physical segments | FIG. 69 | Sync frame boundary is secured, facilitating sync detection. Indefinite bits are prevented from being arranged consecutively in ECC block | | | △ | | ◯ | | | |
| K3ζ)Redundant parts in rewriting/additional recording are recorded in a non-modulation area | FIG. 80 | Stable wobble detected signal is assured even in multi-recording | | | △ | | ◯ | | | |
| K4)The amount of random shift is greater than Jm/12 (0≦Jm≦145) | FIG. 81 | The number of times of repeated recording almost on the same level as that of existing DVD-RAM is assured | | | △ | | ◯ | | | |
| K5)Data segments are arranged 24 or more wobbles behind the start of a physical segment | FIG. 81 | Preparation time for a recording process is allowed, enabling high-accuracy recording | | | △ | | ◯ | | | |

# FIG. 131B

EP 1 742 215 A1

| Description of point | Corresponding figure | Effect/combination of numbers | Characteristic | | | | | | | |
|---|---|---|---|---|---|---|---|---|---|---|
| | | | 1 | 2 | 3 | 4 | 5 | 6 | 7 | 8 |
| L) The latest RMD is reproduced in reproduction. RMD updated after additional recording is additionally recorded in RMZ | FIG. 90 FIG. 91 | The number of times of additional recording can be increased in the additional recording/reproducing of recording management data RMD in the last state. In addition, high-speed access is possible in reproduction. | | | | ☆ | | | ○ | ○ |
| L1)Terminator TMR is recorded in finalization | FIG. 86 | Finalize time is made shorter | | | △ | | | | ○ | ○ |
| L1α)The size of terminator TRM is changed according to the place | FIG. 117 | Finalize time is made shorter and the processing is made more efficient | | | △ | | | | ○ | ○ |
| L1β)The size of terminator TRM is larger closer to the outer edge | FIG. 117 | Finalize time is made shorter and the processing is made more efficient | | | △ | | | | ○ | ○ |
| L2)Reserved area is filled with the last recording management data RMD at the time of closing the corresponding bordered area or of finalization | FIG. 117 FIG. 85 | The stability of tracking by DPD is secured. Reliability of the last recording management data RMD is secured. | | | △ | | | | ○ | ☆ |
| L3)The size of border-out BRDO is larger closer to the outer edge | FIG. 116 | Border closing time is made shorter and the processing is made more efficient | | | ○ | | | | ○ | ◎ |

# FIG. 132A

| Description of point | Corresponding figure | Effect/combination of numbers | Characteristic | | | | | | | |
|---|---|---|---|---|---|---|---|---|---|---|
| | | | 1 | 2 | 3 | 4 | 5 | 6 | 7 | 8 |
| L4)The size of border-in BRDI is smaller closer to the outer edge | FIG. 116 | New bordered area setting time is made shorter and the processing is made more efficient | | | | | | | ◎ | |
| L4β)RMD can be recorded twice or more in RMZ in the border-in area | FIG. 97 | The number of additional recording in border area larger than one is assured | | | | | | | ○ | |
| L4β)RMD can be recorded 392 times or more in border-in | FIG. 97 | The number of additional recording in border area larger than 391 is assured | | | | | | | ○ | |
| L5)Up to two (open) R zones in which additional recording can be done can be set | FIG. 122 | Convenience is improved in recording video information (and management information) and the like | | | | | | | ○ | |
| L5α)Additional recording is started at the next writable address NWA in recordable (open) R zone | FIG. 98 FIG. 99 | Unrecorded areas are prevented from being distributed in R zone and the accessing and tracking of a specific position in the reproduction-only apparatus is assured | | | | ◎ | | | ○ | |
| L6)RMD duplication zone RDZ is reproduced and then the recording position of the latest recording management zone RMZ is searched for | FIG. 108 | Rough search using RMD duplication zone RDZ and close search in the last border are made easily | | | | ☆ | | | ◎ | |
| L6α)RMD is used to manage RMZ positions | FIG. 92 | RMZ position is searched for easily, using RDZ | | | ○ | | | | ☆ | |

# F I G. 132B

| Description of point | Corresponding figure | Effect/combination of numbers | Characteristic | | | | | | | |
|---|---|---|---|---|---|---|---|---|---|---|
| | | | 1 | 2 | 3 | 4 | 5 | 6 | 7 | 8 |
| L7)RMD is updated at the time of initialization, R zone reservation or R zone closing, border closing, or recording interruption | FIG. 89 FIG. 101 | Updating RMD makes search control in reproduction simpler and a search of recordable areas in additional recording easier | | | ○ | | | | ☆ | |
| L8)When RMZ is filled up or when the remaining reserved area in RMZ is running short, new RMZ is formed | FIG. 91 | Filled RMZ is prevented from making updated RMD impossible to additionally record and additional recording impossible to do | | | | | | | ☆ | |
| L9)The size of RMD duplication zone RDZ is set to 2 or more physical segment blocks | FIG. 92 FIG. 93 | RMD is allowed to be recorded in RDZ a plurality of times, enabling RMZ to be formed a plurality of times, which increases the maximum number of times of additional recording | | | | | | | ○ | |
| L9α)The size of RMD duplication zone RDZ is set to 128 physical segment blocks | FIG. 92 FIG. 93 | Since RMD can be recorded in RDZ 128 times, RMZ can be formed up to 128 times | | | | | | | ○ | |

# F I G. 133A

| Description of point | Corresponding figure | Effect/combination of numbers | Characteristic | | | | | | | |
|---|---|---|---|---|---|---|---|---|---|---|
| | | | 1 | 2 | 3 | 4 | 5 | 6 | 7 | 8 |
| L10)RMZ is filled at the time of border closing PFI is recorded and border-out BRDO is recorded | FIG. 94 | Stable tracking and the accessing of recorded information in the reproduction-only apparatus are assured | | | ◎ | | | | ○ | ☆ |
| L10α)The latest RMD is copied into RDZ when the second or later bordered area BRDA is closed | FIG. 95 | Search of RMZ positions in the second or later bordered area BRDA is made easier, which facilitates access control and improves reliability | | | ○ | | | | ○ | |
| L10β)R zone is filled at the time of border closing | FIG. 97 | DPD prevents the optical head from coming off the track in R zone | | | ◎ | | | | ○ | ☆ |
| L11)Border-out BRDO is set in data lead-out or in terminator TRM area in finalization | FIG. 119 FIG. 120 FIG. 102 | Search of the end position of data area DTA in reproduction is made easier | | | ◎ | | | | ○ | |
| L11α)Extended drive test zone EDRTZ is also included in new data lead-out area NDTLDO | FIG. 119 FIG. 120 FIG. 18 | Reproduction-only apparatus is prevented form accessing extended drive test zone EDRTZ erroneously | | | △ | | | | ☆ | ☆ |

# F I G. 133B

| Description of point | Corresponding figure | Effect/combination of numbers | Characteristic | | | | | | | |
|---|---|---|---|---|---|---|---|---|---|---|
| | | | 1 | 2 | 3 | 4 | 5 | 6 | 7 | 8 |
| L12)RMZ area using an R zone has 2 or more physical segment blocks | FIG. 103 | RMD can be recorded a plurality of times in RMZ area using an R zone | | | | | | | ◯ | |
| L12α)The length of 128 physical segment blocks is set in RMZ area using an R zone | FIG. 103 | RMD can be additionally recorded 128 times in RMZ area using an R zone, increasing the maximum number of times of additional recording | | | | | | | ◯ | |
| L12β)RMZ area is set after a complete R zone is set | FIG. 104 | RMZ area using an R zone is secured easily | | | | | | | ◯ | |
| L12γ)RMZ using an R zone is set, if RMZ in border-in BRDI is filled up or running short | FIG. 105 | The maximum number of times of additional recording in the same bordered area increases | | | | | | | ◯ | |
| L13)The number of the latest recording management zone RMZ is specified in RMD field 3 | FIG. 121 FIG. 122 | Information on the latest recording management zone RMZ is extracted easily | | | | | | | ◎ | |
| L13α)The latest recording management data RMD is identified from RMD field 3 | FIG. 121 FIG. 122 | The latest recording management data RMD can be identified easily | | | | | | | ◯ | |
| L13β)The recording location of the updated latest recording management data RMD is determined using RMD field 3 | FIG. 121 FIG. 122 | A location in which the updated latest recording management data RMD is to be recorded can be determined easily | | | | | | | ◯ | |
| L14)The number of open R zone in RMD field 4 is specified | FIG. 121 FIG. 122 | Open R zone is searched for easily | | | | | | | ◎ | |
| L14α)New additional recording start position is determined using open R zone information in RMD field 4 | FIG. 121 FIG. 122 | The start position of new additional recording is known simply at high speed | | | | | | | ◯ | |

# FIG. 134

| Description of point | Corresponding figure | Effect/combination of numbers | Characteristic | | | | | | | |
|---|---|---|---|---|---|---|---|---|---|---|
| | | | 1 | 2 | 3 | 4 | 5 | 6 | 7 | 8 |
| M) The lower limit of the reflectivity of H→L recording film is higher than the upper limit of that of L→H recording film | FIG. 83 | Only the reflectivity is measured, making it very easy to determine the type of recording film | | | △ | | | ☆ | ○ | |
| M1)A reflectivity of 36% between the H→L lower limit and the L→H upper limit | FIG. 83 | Productivity of recording films is high, making it easy to lower costs | | | △ | | | ☆ | △ | |
| M2)The range of the reflectivity of H→L recording film coincides with that of a reproduce-only single layer | FIG. 83 | Compatibility with reproduce-only medium is good, helping lower the cost of a reproducing apparatus | | | △ | | | ○ | △ | |
| M3)The range of the reflectivity of L→H recording film coincides with that of a double layer read-only medium | FIG. 83 | Compatibility with reproduce-only medium is good, helping lower the cost of a reproducing apparatus | | | △ | | | ○ | △ | |
| N) Data lead-out position identification information is set using area type information 935 in data ID | FIG. 118 FIG. 119 FIG. 120 | Data lead-out position is known easily from data ID immediately after access, facilitating access control | | | △ | △ | | | ○ | ☆ |
| N1)Terminator area TRM is set in data area | FIG. 86 | Terminator area TRM is detected easily | | | △ | △ | | | ○ | |
| N1α)Terminator area TRM is recorded in finalization | FIG. 96 | Finalization is realized in a short time | | | △ | △ | | | ○ | |
| N2)Extended drive test zone EDRTZ as large in size as guard track zone 3 is set | FIG. 119 FIG. 120 | The setting of extended drive test zone EDRTZ is simplified | | | △ | △ | | | ○ | |
| N3)Area type 935 of border-out BRDO is set in data lead-out | FIG. 119 FIG. 120 | Finalize time can be shortened | | | △ | △ | | | ○ | |
| N4)Area type of border-out is set in data area, if bordered area BRDA comes next | FIG. 119 FIG. 120 | It is useful in determining whether next bordered area BRDA exists | | | △ | | | | ○ | |

# FIG. 135

EP 1 742 215 A1

| I/G | Zone | Number of Physical segment blocks | Start Physical secter number (hex value) | Guard area Physical sector number (hex value) | | | Spare area Physical sector number (hex value) | | | Numbe Physi segm bloc |
|---|---|---|---|---|---|---|---|---|---|---|
| L | 0 | 4202 | 030000 | | | | 30000 | − | 41F7F | 230 |
| L | 1 | 5390 | 050D40 | 50D40 | − | 50DBF | | | | 0 |
| L | 2 | 5775 | 07AF00 | 7AF00 | − | 7AF9F | | | | 0 |
| L | 3 | 6160 | 0A80E0 | A80E0 | − | A817F | | | | 0 |
| L | 4 | 6545 | 0D82E0 | D82E0 | − | D837F | | | | 0 |
| L | 5 | 6930 | 10B500 | 10B500 | − | 10B5BF | | | | 0 |
| L | 6 | 7315 | 141740 | 141740 | − | 1417FF | | | | 0 |
| L | 7 | 7700 | 17A9A0 | 17A9A0 | − | 17AA5F | | | | 0 |
| L | 8 | 8085 | 1B6C20 | 1B6C20 | − | 1B6CDF | | | | 0 |
| L | 9 | 8470 | 1F5EC0 | 1F5EC0 | − | 1F5F9F | | | | 0 |
| L | 10 | 8855 | 238180 | 238180 | − | 23825F | | | | 0 |
| L | 11 | 9240 | 27D460 | 27D460 | − | 27D53F | | | | 0 |
| L | 12 | 9625 | 2C5760 | 2C5760 | − | 2C585F | | | | 0 |
| L | 13 | 10010 | 310A80 | 310A80 | − | 310B7F | | | | 0 |
| L | 14 | 10395 | 3SEDC0 | 35EDC0 | − | 35EEBF | | | | 0 |
| L | 15 | 10780 | 3B120 | 3B120 | − | 3B021F | | | | 0 |
| L | 16 | 11165 | 4044A0 | 4044A0 | − | 4045BF | | | | 0 |
| L | 17 | 11550 | 45B840 | 45B840 | − | 45B95F | | | | 0 |
| L | 18 | 7130 | 45BC00 | 45BC00 | − | 4B5D1F | | | | 0 |
| G | 0 | 4202 | 830000 | | | | | | | 0 |
| G | 1 | 5390 | 850D40 | 850D40 | − | 850DBF | | | | 0 |
| G | 2 | 5775 | 87AF00 | 87AF00 | − | 87AF00 | | | | 0 |
| G | 3 | 6160 | 8A80E0 | 8A80E0 | − | 8A80E0 | | | | 0 |
| G | 4 | 6545 | 8D82E0 | 8D82E0 | − | 8D82E0 | | | | 0 |
| G | 5 | 6930 | 90B500 | 90B500 | − | 90B5BF | | | | 0 |
| G | 6 | 7315 | 841740 | 841740 | − | 9417FF | | | | 0 |
| G | 7 | 7700 | 97A9A0 | 97A9A0 | − | 97AA5F | | | | 0 |
| G | 8 | 8085 | 9B6C20 | 9B6C20 | − | 9B6CDF | | | | 0 |
| G | 9 | 8470 | 9F5EC0 | 9F5EC0 | − | 9F5E9F | | | | 0 |
| G | 10 | 8855 | A38180 | A38180 | − | A3825F | | | | 0 |
| G | 11 | 9240 | A7D460 | A7D460 | − | A7D53F | | | | 0 |
| G | 12 | 9625 | AC5760 | AC5760 | − | AC585F | | | | 0 |
| G | 13 | 10010 | B10A80 | B10A80 | − | B10B7F | | | | 0 |
| G | 14 | 10395 | B5EDC0 | B5EDC0 | − | B5EEBF | | | | 0 |
| G | 15 | 10780 | BB0120 | BB0120 | − | BB021F | | | | 0 |
| G | 16 | 11165 | C044A0 | C044A0 | − | C045BF | | | | 0 |
| G | 17 | 11550 | C5B840 | C5B840 | − | C5B95F | | | | 0 |
| G | 18 | 7130 | CB5C00 | CB5C00 | − | CB5DIF | CED740-m | − | CED73F | M |
| Total | | | | | | | | | | 2300+ |

F I G. 136

239

| | Spare area | | | | Number of Physical segment blocks | Guard area | | | End Physical sector number (hex value) | Start ISN for the zone (hex value) |
| | Number of Physical segment blocks | Physical sector number (hex value) | | | | Physical sector number (hex value) | | | | |
|---|---|---|---|---|---|---|---|---|---|---|
| 7F | 2300 | 41F80 | – | 50C7F | 1896 | 50C80 | | 50D3F | 050D3F | 0 |
| | 0 | 50DC0 | – | 7AE3F | 5380 | 7AE40 | – | 7AEFF | 07AEFF | ED00 |
| | 0 | 7AFA0 | – | A7FFF | 5763 | A8000 | – | A80DF | 0A80DF | 38D80 |
| | 0 | A8180 | – | D81FF | 6148 | D8200 | – | D82DF | 0D82DF | 65DE0 |
| | 0 | D8380 | – | 10B3FF | 6532 | 10B400 | – | 10B4FF | 10B4FF | 95E60 |
| | 0 | 10B5C0 | – | 14163F | 6916 | 141640 | – | 14173F | 14173F | C8EE0 |
| | 0 | 141800 | – | 17A87F | 7300 | 17A880 | – | 17A99F | 17A99F | FEF60 |
| | 0 | 17AA60 | – | 1B6AFF | 7685 | 1B6B00 | – | 1B6C1F | 1B6C1F | 137FE0 |
| | 0 | 1B6CE0 | – | 1F5D9F | 8070 | 1F5DA0 | – | 1F5EBF | 1F5EBF | 174080 |
| | 0 | 1F5FA0 | – | 23803F | 8453 | 238040 | – | 23817F | 23817F | 1B3140 |
| | 0 | 238260 | – | 27D31F | 8838 | 27D320 | – | 27D45F | 27D45F | 1F51E0 |
| | 0 | 27D540 | – | 2C55FF | 9222 | 2C5600 | – | 2C575F | 2C575F | 23A2A0 |
| | 0 | 2C5860 | – | 31091F | 9606 | 310920 | – | 310A7F | 310A7F | 282360 |
| | 0 | 310B80 | – | 35EC3F | 9990 | 35EC40 | – | 35EDBF | 35EDBF | 2CD420 |
| | 0 | 35EEC0 | – | 3AFF9F | 10375 | 3AFFA0 | – | 3B011F | 3B011F | 31B4E0 |
| | 0 | 3B0220 | – | 40431F | 10760 | 404320 | – | 40449F | 40499F | 36C5C0 |
| | 0 | 4045C0 | – | 45B69F | 11143 | 45B6A0 | – | 45B83F | 45B83F | 3C06C0 |
| | 0 | 45B960 | – | 4B5A5F | 11528 | 4B5A60 | – | 4B5BFF | 4B5BFF | 4177A0 |
| | 0 | 4B5D20 | – | 4ED73F | 7121 | | – | | 4ED73F | 741BA0 |
| | 0 | 830000 | – | 850C7F | 4196 | 850C80 | | 850D3F | 850D3F | 4A92C0 |
| | 0 | 850DC0 | – | 87AE3F | 5380 | 87AE40 | – | 87AEFF | 87AEFF | 4C9F40 |
| | 0 | 87AFA0 | – | 8A7FFF | 5763 | 8A8000 | – | 8A80DF | 8A80DF | 4F3FC0 |
| | 0 | 8A8180 | – | 8D81FF | 6148 | 8D8200 | – | 8D82DF | 8D82DF | 521020 |
| | 0 | 8D8380 | – | 90B3FF | 6532 | 90B400 | – | 90B4FF | 90B4FF | 5510A0 |
| | 0 | 90B5C0 | – | 94163F | 6916 | 941640 | – | 94173F | 94173F | 584120 |
| | 0 | 941800 | – | 97A87F | 7300 | 97A880 | – | 97A99F | 97A99F | 5BA1A0 |
| | 0 | 97AA60 | – | 9B6AFF | 7685 | 9B6B00 | – | 9B6C1F | 9B6C1F | 5F3220 |
| | 0 | 9B6CE0 | – | 9F5D9F | 8070 | 9F5DA0 | – | 9F5EBF | 9F5EBF | 62F2C0 |
| | 0 | 9F5FA0 | – | A3803F | 8435 | A38040 | – | A3817F | A3817F | 66E380 |
| | 0 | A38260 | – | A7D31F | 8838 | A7D320 | – | A7D45F | A7D45F | 6B0420 |
| | 0 | A7D540 | – | AC55FF | 9222 | AC5600 | – | AC575F | AC575F | 6F54E0 |
| | 0 | AC5860 | – | B1091F | 9606 | B10920 | – | B10A7F | B10A7F | 73D5A0 |
| | 0 | B10B80 | – | B5EC3F | 9990 | B5EC40 | – | B5EDBF | B5EDBF | 788660 |
| | 0 | B5EEC0 | – | BAFF9F | 10375 | BAFFA0 | – | BB011F | BB011F | 7D6720 |
| | 0 | BB0220 | – | C0431F | 10760 | C04320 | – | C0449F | C0449F | 827800 |
| | 0 | C045C0 | – | C5B69F | 11143 | C5B6A0 | – | C5B83F | C5B83F | 87B900 |
| | 0 | C5B960 | – | CB5A5F | 11528 | CB5A60 | – | CB5BFF | CB5BFF | 8D29E0 |
| 73F | M | CB5D20 | – | CED73F-m | 7121-M | | | | CED73F | 92CAE0 |
| | 2300+M | | | | 307752-M | | | | | |

F I G. 137

Diagram to help explain another embodiment of a wobble data unit related to a primary position and a secondary position of a modulation area

(a)

| Wobble data unit #0 | | | |
|---|---|---|---|
| Modulation area | | | Non-modulation area |
| IPW | NPW | IPW | NPW |
| 6 wobbles | 4 wobbles | 6 wobbles | 68 wobbles |

598    593    560

(b)

| Wobble data unit #0 | | | | |
|---|---|---|---|---|
| Non-modulation area | Modulation area | | | Non-modulation area |
| NPW | IPW | NPW | IPW | NPW |
| 42 wobbles | 6 wobbles | 4 wobbles | 6 wobbles | 26 wobbles |

592    598    560    593

(c)

| Wobble data unit #1 to #11 | | | | |
|---|---|---|---|---|
| Modulation area | | | | Non-modulation area |
| IPW | Address bit #2 | Address bit #1 | Address bit #0 | NPW |
| 4 wobbles | 4 wobbles | 4 wobbles | 4 wobbles | 68 wobbles |

598    561 to 571    593

(d)

| Wobble data unit #1 to #11 | | | | | |
|---|---|---|---|---|---|
| Non-modulation area | Modulation area | | | | Non-modulation area |
| NPW | IPW | Address bit #2 | Address bit #1 | Address bit #0 | NPW |
| 42 wobbles | 4 wobbles | 4 wobbles | 4 wobbles | 4 wobbles | 26 wobbles |

592    598    561~571    593

FIG. 138

Diagram to help explain another embodiment of a method of recording additional data onto a recordable information storage medium

Physical segment block (n)

Physical segment block (n+1)

24 wobbles

NPW

NPW

Write start point

Data segment (m+1)

VFO area

71

16

8

537

Buffer area

Extended guard field

529

Data segment (m)

Write end point

F I G. 139

Diagram to help explain another embodiment of the data structure of a control data zone

(a)

| System lead-in area SYLDI | | | Connection area CAN | Data lead-in area DTLDI | | | | | | | Data area DTA |
|---|---|---|---|---|---|---|---|---|---|---|---|
| Initial zone INZ | Buffer zone 1 BFZ1 | Control data zone CDZ | Buffer zone 2 BFZ2 | Connection zone CNZ | Guard track zone 1 GTZ1 | Disk test zone DKTZ | Drive test zone DRTZ | Guard track zone 2 GTZ2 | Recording management zone RMZ | R physical information zone R-PFIZ | Reference code recording zone RCZ | |

(b) Control data zone CDZ

| Control data section CTDS | Copyright data section CPDS | Reserved area RSV | Control data section CTDS | Copyright data section CPDS |
|---|---|---|---|---|
| 16 data segments | 16 data segments | 128 data segments | 16 data segments | 16 data segments |

(c) Control data section CTDS

| Physical format information PFI | Medium-manufacturer-related information | Copyright protection information CPI | Reserved area RSV |
|---|---|---|---|
| Relative physical sector number=0 | Relative physical sector number=1 | Relative physical sector number=2 | Relative physical sector number=3-31 |

F I G. 140

Diagram to help explain another embodiment related to physical format information and R physical format information

| Type of recording information | Byte position | Physical format information PFI | | | R physical format information | Updated physical format |
|---|---|---|---|---|---|---|
| | | Reproduce-only type | Rewritable type | Recordable type | | |
| Common information in the DVD family | 0 | Written standards type (reproduce- only/rewritable/recordable) information and version number information | | | | |
| | 1 | Medium size (diameter) and maximum possible data transfer rate information | | | | |
| | 2 | Medium structure (single layer or double layer, presence or absence of emboss pit/recordable area/ rewritable area | | | | |
| | 3 | Recording density (linear density and track density) information | | | | |
| | 4-15 | Data area DTA location information | | | | |
| | 16 | Presence or absence information on burst cutting area BCA (all presence in this embodiment) | | | | |
| | 17 | Reserved area | Revision number information determining the maximum recording speed | | | |
| | 18 | | Revision number information determining the minimum recording speed | | | |
| | 19·25 | | Revision number table (application revision number) | | | |
| | 26 | | Class state information | | | |
| | 27 | | Extended (part) version information | | | |
| | 28·31 | | Reserved area | | | |

269

F I G. 141A

EP 1 742 215 A1

Diagram to help explain another embodiment related to physical format information and R physical format information

| Type of recording information | Byte position | Physical format information PFI | | | R physical format information | Updated physical format |
|---|---|---|---|---|---|---|
| | | Reproduce-only type | Rewritable type | Recordable type | | |
| **265** Information contents uniquely settable for each of the written standards | 31·127 | | Reserved area | | | |
| | 128 | | Recording mark polarity (identifying whether H → L or L → H) information | | | |
| | 129 | | Linear velocity information in recording or reproduction | | | |
| | 130 | | Rim intensity value of the optical system in the circumferential direction | | | |
| | 131 | | Rim intensity value of the optical system in the radial direction | | | |
| | 132 | | Recommended laser power in reproduction (the amount of light on the recording surface) | | | |
| | 141–150 | | Reserved area | | Starting position (PSN) of boarder zone | Updated starting position (PSN) |
| | 151–511 | Reserved area | Reserved area | | | |
| **264** Information contents uniquely settable on a revision basis | 512 | | Peak power in land area | Peak power | | |
| | 513 | | Bias power 1 in land area | Bias power 1 | | |
| | 514 | | Bias power 2 in land area | Bias power 2 | | |
| | 515 | | Bias power 3 in land area | Bias power 3 | | |
| | 516 | | Peak power in groove area | End time of first pulse (TEFP in FIG. 19) | | |
| | 517 | | Bias power 1 in groove area | Multi-pulse interval (TMP in FIG. 19) | | |
| | 518 | | Bias power 2 in groove area | Starting time of last pulse (TSLP in FIG. 19) | | |
| | 519 | | Bias power 3 in groove area | Period of bias power 2 of 2T mark (TLC in FIG. 19) | | |
| | 520·2047 | | ................................ | ................................ | | |

# FIG. 141B

EP 1 742 215 A1

EP 1 742 215 A1

Physical address

| DMA | Spare area | User area | DMA |
|---|---|---|---|

SA                                           UA

F I G. 142

Replacing process

↓

STT1

Replace a defective area occurred in the user area with a spare area

↓

STT2

Register the begin address of the replaced area and that of the replacing area in SDL in DMA (the inner contents are equal to the outside contents). At the same time, the update counter of SDL is incremented by one

↓

End

F I G. 143

DMA

| DMA0 | DMA1 | - - - - | DMAn |
|------|------|---------|------|

| DDS/PDL Block | SDL Block | DDS/PDL Block | SDL Block | - - - - |
|---------------|-----------|---------------|-----------|---------|

K ECC Blocks      K ECC Blocks

F I G. 144

DDS/PDL

| BP | Contents | Number of bytes |
|---|---|---|
| 0 to 1 | DDS identifier (0A0Ah) | 2 bytes |
| 2 | Reserved | 1 byte |
| 3 | Disc certification flag | 1 byte |
| 4 to 7 | DDS/PDL update counter | 4 bytes |
| 8 to 9 | Number of Groups | 2 bytes |
| 10 to 11 | Number of zones | 2 bytes |
| 12 to 79 | Reserved | 68 bytes |
| 80 to 87 | Location of Primary spare area | 8 bytes |
| 88 to 91 | Location of LSN 0 | 4 bytes |
| 92 to 255 | Reserved | 164 bytes |
| 256 to 259 | Start LSN for Zone 0 | 140 bytes |
| 260 to 263 | Start LSN for Zone 1 | |
| - - - - | - - - - | |
| 392 to 395 | Start LSN for Zone 34 | |
| 396 to 399 | DMA rec-counter 1 | 4 bytes |
| 400 to 2047 | reserved | 1652 bytes |

F I G. 145

EP 1 742 215 A1

SDL

| BP | Contents | Number of bytes |
|---|---|---|
| 0 to 1 | SDS identifier (0002h) | 2 bytes |
| 2 to 3 | Reserved | 2 bytes |
| 4 to 7 | SDL update counter | 4 bytes |
| 8 to 11 | Start sector number of Supplementary spare area | 4 bytes |
| 12 to 15 | Total number of logical sectors | 4 bytes |
| 16 to 19 | DDS/PDL update counter | 4 bytes |
| 20 | Spare area full flags | 1 byte |
| 21 to 24 | DMA rec-counter 2 | 4 bytes |
| 25 to 26 | Number of entries in SDL | 2 bytes |
| 27 to 34 | The first SDL entry | 8 bytes |
| - - - - | - - - - | - - - - |
| M to m+7 | The last SDL entry | 8 bytes |

FIG. 146

EP 1 742 215 A1

SDL Entry

| RSV (1B) | Replaced address (3B) | RSV (1B) | Replacing address (3B) |
|----------|----------------------|----------|------------------------|

F I G. 147

EP 1 742 215 A1

Initial state

DMA0 | DMA1 | - - - - | DMAn

In use

Second state

| DMA1 | - - - - | DMAn

In use

(M+1)-th state

DMAm | - - - - | DMAn

In use

FIG. 148

DMA using state 1

| | DDS/PDL update counter | SDL update counter | DMA counter |
|---|---|---|---|
| DMA 0 | Normal use | Normal use | 0~Nov-1 |
| DMA 1 | Continuous use of the preceding value | Continuous use of the preceding value | 0~Nov-1 |
| ⋮ | Continuous use of the preceding value | Continuous use of the preceding value | 0~Nov-1 |
| DMA m | Continuous use of the preceding value | Continuous use of the preceding value | 0~Nov-1 |
| ⋮ | Continuous use of the preceding value | Continuous use of the preceding value | 0~Nov-1 |
| DMA n | Continuous use of the preceding value | Continuous use of the preceding value | 0~Nov-1 |

Nov : The number of times overwriting can be done

FIG. 149

EP 1 742 215 A1

DMA using state 2

| | DDS/PDL update counter | SDL update counter | DMA counter |
|---|---|---|---|
| DMA 0 | Normal use | Normal use | 0~Nov-1 |
| DMA 1 | Normal use after resetting | Normal use after resetting | 0~Nov-1 |
| ⋮ | Normal use after resetting | Normal use after resetting | 0~Nov-1 |
| DMA m | Normal use after resetting | Normal use after resetting | 0~Nov-1 |
| ⋮ | Normal use after resetting | Normal use after resetting | 0~Nov-1 |
| DMA n | Normal use after resetting | Normal use after resetting | 0~Nov-1 |

Nov : The number of times overwriting can be done

F I G. 150

EP 1 742 215 A1

Start

STT21
Search for DMA of DMA
rec-counter 1,2=0

STT22
Has the number
of rewriting exceeded a
specific value ?

YES

NO

STT23
Use the last DMA

STT24
Use DMA precedent to
the relevant DMA

End

F I G. 151

F I G. 152

EP 1 742 215 A1

Initial state

DMA series 1 | DMA0 | DMA1 | - - - - | DMAn } For the
DMA series 2 | DMA0 | DMA1 | - - - - | DMAn } innermost edge
DMA series 3 | DMA0 | DMA1 | - - - - | DMAn } For the
DMA series 4 | DMA0 | DMA1 | - - - - | DMAn } outermost edge

In use        Many defects occur in DMA series 3

Second state

DMA series 1 | DMA1 | - - - - | DMAn } For the
DMA series 2 | DMA1 | - - - - | DMAn } innermost edge
DMA series 3 | DMA1 | - - - - | DMAn } For the
DMA series 4 | DMA1 | - - - - | DMAn } outermost edge

In use        All of the series are moved to Next DMA

F I G. 153

221

A1 A2 A3

F I G. 154

Start

ST41
Read all of the DMAs

ST42
Has at least one of the DMAs been read ? — NO → End

YES

ST43
Do all of the update counters coincide with one another ? — NO

YES

ST44
Cause all of the update counters to coincide with the DMA having the latest Counter value

Completion of the preparation for recording and reproduction

F I G. 155

F I G. 156

DMA manager

Indicate current DMA-set address

DMA1: | DMA set #1-1 | DMA set #1-2 | ········ | DMA set #1-k | ········ | DMA set #1-N

DMA2: | DMA set #2-1 | DMA set #2-2 | ········ | DMA set #2-k | ········ | DMA set #2-N

DMA3: | DMA set #3-1 | DMA set #3-2 | ········ | DMA set #3-k | ········ | DMA set #3-N

DMA4: | DMA set #4-1 | DMA set #4-2 | ········ | DMA set #4-k | ········ | DMA set #4-N

current

reserved

F I G. 157

EP 1 742 215 A1

LI

LO

| | Man 1 | DMA1,2 | | User Area | | Man 2 | DMA3,4 | |

1block

1block

1block

| DMA_Man#1 | DMA_Man#2 | ...... | DMA_Man#10 |

current

reserved

| 64bytes | 64bytes | ...... | 64bytes |

$64 \times 32 \times 32 = 2048 \times 32$

F I G. 158

Redundant data against defect
Each 64bytes is identical.

| BP | Contents | Number of bytes |
|---|---|---|
| 0 to 1 | Identifier(0010h) | 2bytes |
| 2 to 7 | Reserved | 6bytes |
| 8 to 11 | First PSN of current DMA1 | 4bytes |
| 12 to 15 | First PSN of current DMA2 | 4bytes |
| 16 to 19 | First PSN of current DMA3 | 4bytes |
| 20 to 23 | First PSN of current DMA4 | 4bytes |
| 24 to 63 | Reserved | 40bytes |

F I G. 159

F I G. 160

| Each DMA | 2Blocks (DDS/PDL block and SDL block) |
|---|---|
| DMA set | 300Blocks＝100set |
| Number of DMA set | 4Blocks(LI : 2, LO : 2) |
| Total Blocks for DMA | 1200Blocks(300blocks ＊4set) |
| Each DMA Manager | 1Block |
| Number of DMA Manager | 10Blocks |

# F I G. 161

| | | Start Physical sector number | END Physical sector number | Number of Blocks | | | Start Physical sector number | END Physical sector number | Number of Blocks |
|---|---|---|---|---|---|---|---|---|---|
| Lead-in | DMA Manager1-1 | 2CE00 | 2CE1F | 1 | Lead-out | DMA Manager2-1 | 4ED740 | 4ED75F | 1 |
| | reserved | 2CE20 | 2CE5F | 2 | | reserved | 4ED760 | 4ED79F | 2 |
| | DMA manager1-2 | 2CE60 | 2CE7F | 1 | | DMA manager2-2 | 4ED7A0 | 4ED7BF | 1 |
| | reserved | 2CE80 | 2CEBF | 2 | | reserved | 4ED7C0 | 4ED7FF | 2 |
| | ......... | | | | | ......... | | | |
| | DMA manager1-10 | 2D160 | 2D17F | 1 | | DMA manager2-10 | 4EDAA0 | 4EDABF | 1 |
| | reserved | 2D180 | 2D1BF | 2 | | reserved | 4EDAC0 | 4EDAFF | 2 |
| | DMA1-1 | 2D1C0 | 2D1FF | 2 | | DMA3-1 | 4EDB00 | 4EDB3F | 2 |
| | reserved | 2D200 | 2D21F | 1 | | reserved | 4EDB40 | 4EDB5F | 1 |
| | DMA2-1 | 2D220 | 2D25F | 2 | | DMA4-1 | 4EDB60 | 4EDB9F | 2 |
| | reserved | 2D260 | 2D27F | 1 | | reserved | 4EDBA0 | 4EDBBF | 1 |
| | DMA1-2 | 2D280 | 2D2BF | 2 | | DMA3-2 | 4EDBC0 | 4EDBFF | 2 |
| | reserved | 2D2C0 | 2D2DF | 1 | | reserved | 4EDC00 | 4EDC1F | 1 |
| | DMA2-2 | 2D2E0 | 2D31F | 2 | | DMA4-2 | 4EDC20 | 4EDC5F | 2 |
| | reserved | 2D320 | 2D33F | 1 | | reserved | 4EDC60 | 4EDC7F | 1 |
| | ......... | | | | | ......... | | | |
| | DMA1-48 | 2F500 | 2F53F | 2 | | DMA3-48 | 4EFE40 | 4EFE7F | 2 |
| | reserved | 2F540 | 2F55F | 1 | | reserved | 4EFE80 | 4EFE9F | 1 |
| | DMA2-48 | 2F560 | 2F59F | 2 | | DMA4-48 | 4EFEA0 | 4EFEDF | 2 |
| | reserved | 2F5A0 | 2F5BF | 1 | | reserved | 4EFEE0 | 4EFEFF | 1 |
| | DMA1-49 | 82CE00 | 82CE3F | 2 | | DMA3-49 | CED740 | CED77F | 2 |
| | reserved | 82CE40 | 82CE5F | 1 | | reserved | CED780 | CED79F | 1 |
| | DMA2-49 | 82CE60 | 82CE9F | 2 | | DMA4-49 | CED7A0 | CED7DF | 2 |
| | reserved | 82CEA0 | 82CEBF | 1 | | reserved | CED7E0 | CED7FF | 1 |
| | ......... | | | | | ......... | | | |
| | DMA1-100 | 82F440 | 82F47F | 2 | | DMA3-100 | CEFD80 | CEFDBF | 2 |
| | reserved | 82F480 | 82F49F | 1 | | reserved | CEFDC0 | CEFDDF | 1 |
| | DMA2-100 | 82F4A0 | 82F4DF | 2 | | DMA4-100 | CEFDE0 | CEFE1F | 2 |
| | reserved | 82F4E0 | 82F4FF | 1 | | reserved | CEFE20 | CEFE3F | 1 |

FIG.162

FIG. 163

EP 1 742 215 A1

EP 1 742 215 A1

Initial state

| DMA Man #1-1 | DMA Man #1-2 | ········ | DMA Man #1-k | ········ | DMA Man #1-10 | }LI |
| DMA Man #2-1 | DMA Man #2-2 | ········ | DMA Man #2-k | ········ | DMA Man #2-10 | }LO |

current — reserved

2nd state

| DMA Man #1-1 | DMA Man #1-2 | ········ | DMA Man #1-k | ········ | DMA Man #1-10 |
| DMA Man #2-1 | DMA Man #2-2 | ········ | DMA Man #2-k | ········ | DMA Man #2-10 |

defect — current — reserved

k-th state

| DMA Man #1-1 | DMA Man #1-2 | ········ | DMA Man #1-k | ········ | DMA Man #1-10 |
| DMA Man #2-1 | DMA Man #2-2 | ········ | DMA Man #2-k | ········ | DMA Man #2-10 |

defect — current — reserved

Final state

| DMA Man #1-1 | DMA Man #1-2 | ········ | DMA Man #1-k | ········ | DMA Man #1-10 |
| DMA Man #2-1 | DMA Man #2-2 | ········ | DMA Man #2-k | ········ | DMA Man #2-10 |

defect — current (write operation is stopped)

FIG. 164

|  | Normal | Abnormal | |
|---|---|---|---|
| Defective DMA | Defective | Not Defective (Readable) | Blank |
| Current DMA | Not Defective (Readable) | Defective | Blank |
| Reserved DMA | Blank | — | |

FIG. 165

| Case | head | body | tail | Comment |
|---|---|---|---|---|
| 1 | Reserved | Reserved | Reserved | Unformatted |
| 2 | Current | Reserved | Reserved | Initial |
| 3 | Defect | Current | Reserved | |
| 4 | Defect | Defect | Current | Last |
| 5 | Defect | Defect | Defect | All defect |

FIG. 166

F I G. 167

EP 1 742 215 A1

F I G. 168

EP 1 742 215 A1

EP 1 742 215 A1

Lead-in
(PSN)

| Man1 #1 | Man1 #2 | ...... | Man1 #10 |

| DMA12 #1 | DMA12 #2 | ...... | DMA12 #100 |

Lead-out
(PSN)

| Man2 #1 | Man2 #2 | ...... | Man2 #10 |

| DMA34 #1 | DMA34 #2 | ...... | DMA34 #100 |

F I G. 169

DMA manager

| DMA set #1-1 | DMA set #1-2 | ......... | DMA set #1-k | ......... | DMA set #1-N |

| DMA set #2-1 | DMA set #2-2 | ......... | DMA set #2-k | ......... | DMA set #2-N |

| DMA set #3-1 | DMA set #3-2 | ......... | DMA set #3-k | ......... | DMA set #3-N |

| DMA set #4-1 | DMA set #4-2 | ......... | DMA set #4-k | ......... | DMA set #4-N |

Spare Area(PSA/SSA)

F I G. 170

| BP | Contents | Number of bytes |
|---|---|---|
| 0 to 1 | PDL Identifier(0001h) | 2bytes |
| 2 to 3 | Number of entries in the PDL($E_{PDL}$) | 2bytes |
| 4 to 7 | The first PDL entry | 4bytes |
| 8 to 11 | The second PDL entry | 4bytes |
| ...... | ...... | ...... |
| n to n+3 | The last PDL entry | 4bytes |

$n=4*E_{PDL}$

# F I G. 171

| BP | Contents | Number of bytes |
|---|---|---|
| 0 to 1 | SDL Identifier(0002h) | 2bytes |
| 2 to 3 | Reserved | 2bytes |
| 4 to 7 | SDL update counter | 4bytes |
| 8 to 11 | Start sector number of Supplementary spare area | 4bytes |
| 12 to 15 | Total number of logical sectors | 4bytes |
| 16 to 19 | DDS/PDL update counter | 4bytes |
| 20 | Spare area full flags | 1byte |
| 21 | Reserved | 1byte |
| 22 to 23 | Number of entries in SDL($E_{SDL}$) | 2bytes |
| 24 to 31 | The first SDL entry | 8bytes |
| ...... | ...... | ...... |
| m to m+7 | The last SDL entry | 8bytes |

(a)

$m = 8 * E_{SDL} + 16$

(b)

| b63 | b62 | b55 | b32 | b23 | b0 |
|---|---|---|---|---|---|

| Reserved | Reserved | Physical sector number of the first Physical sector in the detective Phyiscal segment block | Reserved | Physical sector number of the first Physical sector in the replacement Physical segment block |
|---|---|---|---|---|

SLR  b61  b56  b31  b24

F I G. 172

Defect management
information updating process

ST101
Search for DMA now in use by a
table-look-up method

ST102
Is there
DMA now in use ?

NO

ST103
Search for DMA now in use
by an incremental method

ST104
Is there
DMA now in use ?

YES

YES

ST106
Is the DMA
now in use caused to
transit ?

NO

NO

ST107
Cause DMA to transit

YES

ST105
NG

ST108
Update defect management information

End

F I G. 173

DMA manager
updating process

ST111

Is DMA manager
now in use caused to
transit ?

NO

YES

ST112

Cause DMA manager to transit

ST113

Has DMA been
caused to transit ?

NO

YES

ST114

Update DMA manager

End

F I G. 174

Reproducing process

ST121
Search for DMA now in use by a table-look-up method

ST122
Is there DMA now in use ?

NO

ST123
Search for DMA now in use by an incremental method

ST124
Is there DMA now in use ?

YES

YES

NO

ST126
Acquire defect management information

ST127
Perform reproduction on the basis of defect management information

ST125
NG

End

F I G. 175

DDS/PDL

| BP | Description | Number of bytes |
|---|---|---|
| 0 to 1 | DDS identifier (0A0Ah) | 2 bytes |
| 2 | Reserved | 1 byte |
| 3 | Disc certification flag | 1 byte |
| 4 to 7 | DDS/PDL update counter | 4 bytes |
| 8 to 9 | Number of Groups | 2 bytes |
| 10 to 11 | Number of zones | 2 bytes |
| 12 to 79 | Reserved | 68 bytes |
| 80 to 87 | Location of Primary spare area | 8 bytes |
| 88 to 91 | Location of LSN 0 | 4 bytes |
| 92 to 255 | Reserved | 164 bytes |
| 256 to 259 | Start LSN for Zone 0 | |
| 260 to 263 | Start LSN for Zone 1 | 76 bytes |
| . - - - | . - - - | |
| 328 to 331 | Start LSN for Zone 18 | |
| 332 to 2047 | Reserved | 1716 bytes |

(a)

(b)

| b63　　　b56 | b55　　　　　　　　　b32 | b31　　b24 | b23　　　　　　　　　b0 |
|---|---|---|---|
| Reserved | Physical sector number of the first Physical sector in the Primary spare area | Reserved | Physical sector number of the last Physical sector in the Primary spare area |

F I G. 176

| Byte Position | Contents | Number of bytes |
|---|---|---|
| 0 to 1 | BCA Record ID | 2 bytes |
| 2 | Version number | 1 byte |
| 3 | Data length | 1 byte |
| 4 | Book type and Disc type | 1 byte |
| 5 | Extended Part version | 1 byte |
| 6 to 7 | Reserved | 2 bytes |

| b7 | b6 | b5 | b4 | b3 | b2 | b1 | b0 |
|---|---|---|---|---|---|---|---|
| Book type | | | | Disc type | | | |

| b3 | b2 | b1 | | b0 |
|---|---|---|---|---|
| Mark polarity | Twin format flag | reserved | | |

F I G. 177

278

EP 1 742 215 A1

Data
Lead-in area | Defect management zone
(DMA Manager 1 DMA1&2)

Data area

Data
Lead-out area | Defect management zone
(DMA Manager 2 DMA3&4)

DMA Manager#1-1
DMA Manager#1-2
DMA Manager#1-3

⇨ DMA manager:
Position of current DMA set

DMA Manager#1-9
DMA Manager#1-10

DMA#1-1

DMA#2-1

DMA#1-2

DMA#2-2

⇨ DMA:
Disc definition structure
Primary defect list
Secondary defect list

DMA#1-99

DMA#2-99

DMA#1-100

DMA#2-100

F I G. 178

Data Lead-in area        Data Lead-out area

| Man 1 | DM1&2 | | User Area | Man 2 | DMA3&4 | |

| DMA Manager 1-1 | DMA Manager 1-2 | · · · · · | DMA Manager 1-10 |

current        reserved

| DMA Manager unit | | · · · · · | |

|← 64 bytes →|← 64 bytes →| |← 64 bytes →|

$$64 \times 32 \times 32 = 2048 \times 32$$

| BP | Contents | Number of bytes |
|---|---|---|
| 0 to 1 | Identifier(0010h) | 2 bytes |
| 2 to 3 | reserved | 2 bytes |
| 4 to 7 | DMA Manager update counter | 4 bytes |
| 8 to 11 | First PSN of current DMA1 | 4 bytes |
| 12 to 15 | First PSN of current DMA2 | 4 bytes |
| 16 to 19 | First PSN of current DMA3 | 4 bytes |
| 20 to 23 | First PSN of current DMA4 | 4 bytes |
| 24 to 63 | reserved | 40 bytes |

F I G. 179

DMA manager set

DMA manager

Blank

| 1 | 2 | 3 | 4 | ··· | 5 |

| 1 | 2 | 3 | 4 | 5 | 6 | 7 | ··· | 100 |

Initialize (case1)

| DMA AAh | FFh | FFh | FFh | ··· | FFh |

| DMA | FFh | FFh | FFh | FFh | FFh | FFh | ··· | FFh |

Initialize (case2)

| DMA AAh | FFh | FFh | AAh | ··· | FFh |

| AAh | DMA | FFh | AAh | FFh | FFh | FFh | ··· | FFh |

| DMA | Current DMA manager set or Current DMA set

| AAh | Defective DMA manager set or Defective DMA set

F I G. 180

F I G. 181

PSN

| | | | |
|---|---|---|---|
| Data area | | | |
| | 4E D740h | CE D740h | |
| Defect Management zone | | | |
| | 4F 0940h | CF 0940h | |
| Guard track zone | | | |
| | 4F 0C40h | CF 0C40h | |
| Drive test zone | | | |
| | 4F 2240h | CF 2240h | |
| Disc test zone | | | |
| | 4F 3240h | CF3240h | |
| Guard track zone | | | |

land    groove

F I G. 182A

PSN

| | | | | |
|---|---|---|---|---|
| Drive information 1 | reserved | 02 CD00h | 82 CD00h | |
| | | | | 1 PS block |
| Drive information 2 | reserved | 02 CD20h | 82 CD20h | |
| | | | | 1 PS block |
| reserved | reserved | 02 CD40h | 82 CD40h | |
| | | | | 1 PS block |
| reserved | reserved | 02 CD60h | 82 CD60h | |
| | | | | 1 PS block |
| reserved | reserved | 02 CD80h | 82 CD80h | |
| | | | | 1 PS block |
| reserved | reserved | 02 CDA0h | 82 CDA0h | |
| | | | | 1 PS block |
| reserved | reserved | 02 CDC0h | 82 CDC0h | |
| | | | | 1 PS block |
| reserved | reserved | 02 CDE0h | 82 CDE0h | |
| | | | | 1 PS block |

land    groove    land    groove

F I G. 182B

Start — SA1

Read and cash DMA manager data from DMA manager #X-1 — SA2

Check DMA manager data — SA3

Read and cash the DMA manager data from next DMA manager — SA9

SA4
DMA manager data is unused or not ?
unused
not unused

SA5
DMA manager number is #x-10 or not ?
not #x-10
#x-10

SA6
Available DMA manager data already exist or not ?
not exist
exist

Temporally current DMA set number is fixed with latest available DMA manager data — SA7

SA8
Temporally current DMA set number is fixe as #y-1

END

*"#x" indicates #1 or #2.
"#y" indicates #1, #2, #3 or #4.

F I G. 183

Start

Read and cash DMA data from temporally current DMA set and check its status

DMA set is unused or not ? — unused

not unused

Search forward to #y-100 for unused DMA set

DMA set number is #y-1 ? — #y-1

not #y-1

Search backward to #y-1 for used DMA set

Unused DMA set is found or not ? — not found

found

Stop searching

Used DMA set is found or not ? — not found

found

Used DMA set is already exist or not ? — not exist

exist

Latest used DMA set is fixed as current DMA set

DMA set #y-100 is fixed as current DMA set

First founded used DMA set is fixed as current DMA set

*"#y" indicates #1,#2,#3 or #4

End

NG

# F I G. 184

Start

Update Current DMA manager set

Read the recorded current DMA manager set

Current DMA manager set is available or not ?

not available

available

Check the DMA manager data

Available DMA manager set is remain or not ?

not remain

remain

Replace current DMA manager set

DMA manager data is identical with recorded data or not ?

not identical

identical

End

NG

F I G. 185

Start

Current
DMA set is update
inhibit or not
?

inhibit

not inhibit

Update Current DMA set

Read the recorded
current DMA set

Current
DMA set is available
or not ?

not available

available

Check the DMA data

Available
DMA set is remain
or not ?

not remain

remain

Replace current DMA set

not satisfied

DMA
data is satisfied
criteria or not
?

satisfied

End

NG

F I G. 186

The first LSN in the zone

Start

X = the last LSN in the zone

Y = the total number of PS blocks in the zone except for the Guard area

Z = the number of PDL entries belonging to the zone

the first LSN in the zone = $X + (-Y + Z) \times 32 + 1$

End

FIG. 187A

The PSN of LSN = 0

Start

X = Total number of PDL entries

the PSN of LSN0 = 04 1F80h − X × 32

End

FIG. 187B

Binary number                    Gray-code

(N)    (N+1)                      (N)    (N+1)
or {(N−1)  (n)}                   or {(N−1)  (n)}

MSB

0      0      ⟷      0      0

| 0      1 |    ⟷    | 0      1 |

1      0      ⟷      1      1

1      0      ⟷      0      0

⋮      ⋮             ⋮      ⋮

LSB

1      0      ⟷      0      0

[ sift−up bit position ]    ⟷    [ changed bit position ]

F I G. 188

EP 1 742 215 A1

| Track | Track address (Decimal) | Binary code (bm) | | | | | | | | | | | | Groove track address (gm) | | | | | | | | | | | | Land track address (gm) | | | | | | | | | | | |
|---|---|---|---|---|---|---|---|---|---|---|---|---|---|---|---|---|---|---|---|---|---|---|---|---|---|---|---|---|---|---|---|---|---|---|---|---|---|---|
| | | b11 | | | | | | | | | | | b0 | g11 | | | | | | | | | | | g0 | g11 | | | | | | | | | | | g0 |
| L | 27 | 0 | 0 | 0 | 0 | 0 | 0 | 0 | 1 | 1 | 0 | 1 | 1 | 0 | 0 | 0 | 0 | 0 | 0 | 0 | 1 | 0 | X | 1 | 0 | 0 | 0 | 0 | 0 | 0 | 0 | 0 | 1 | 0 | 1 | 1 | 0 |
| G | 27 | 0 | 0 | 0 | 0 | 0 | 0 | 0 | 1 | 1 | 0 | 1 | 1 | 0 | 0 | 0 | 0 | 0 | 0 | 0 | 1 | 0 | 1 | 1 | 0 | 0 | 0 | 0 | 0 | 0 | 0 | 0 | 1 | 0 | 1 | 1 | X |
| L | 26 | 0 | 0 | 0 | 0 | 0 | 0 | 0 | 1 | 1 | 0 | 1 | 0 | 0 | 0 | 0 | 0 | 0 | 0 | 0 | 1 | 0 | 1 | 1 | X | 0 | 0 | 0 | 0 | 0 | 0 | 0 | 1 | 0 | 1 | 1 | 1 |
| G | 26 | 0 | 0 | 0 | 0 | 0 | 0 | 0 | 1 | 1 | 0 | 1 | 0 | 0 | 0 | 0 | 0 | 0 | 0 | 0 | 1 | 0 | 1 | 1 | 1 | 0 | 0 | 0 | 0 | 0 | 0 | 0 | 1 | 0 | 1 | X | 1 |
| L | 25 | 0 | 0 | 0 | 0 | 0 | 0 | 0 | 1 | 1 | 0 | 0 | 1 | 0 | 0 | 0 | 0 | 0 | 0 | 0 | 1 | 0 | 1 | X | 1 | 0 | 0 | 0 | 0 | 0 | 0 | 0 | 1 | 0 | 1 | 0 | 1 |
| G | 25 | 0 | 0 | 0 | 0 | 0 | 0 | 0 | 1 | 1 | 0 | 0 | 1 | 0 | 0 | 0 | 0 | 0 | 0 | 0 | 1 | 0 | 1 | 0 | 1 | 0 | 0 | 0 | 0 | 0 | 0 | 0 | 1 | 0 | 1 | 0 | X |
| L | 24 | 0 | 0 | 0 | 0 | 0 | 0 | 0 | 1 | 1 | 0 | 0 | 0 | 0 | 0 | 0 | 0 | 0 | 0 | 0 | 1 | 0 | 1 | 0 | X | 0 | 0 | 0 | 0 | 0 | 0 | 0 | 1 | 0 | 1 | 0 | 0 |
| G | 24 | 0 | 0 | 0 | 0 | 0 | 0 | 0 | 1 | 1 | 0 | 0 | 0 | 0 | 0 | 0 | 0 | 0 | 0 | 0 | 1 | 0 | 1 | 0 | 0 | 0 | 0 | 0 | 0 | 0 | 0 | 0 | 1 | X | 1 | 0 | 0 |

(Xs are positions of bits changed)

F I G. 189

Land track (N)

Groove track (N)

Land track (N−1)

NPW

NPW

NPW

IPW

Changed bit position

NPW

NPW

NPW

NPW

← 4 wobbles →

FIG. 190A

Change bit from NPW to IPW

Start

FIG. 190B

Change bit from IPW to NPW

Start

FIG. 190C

Outer

Inner

Diagram to help explain another embodiment related to physical format information and RW physical format information

| Type of recording information | Byte position | Physical format information PFI | | | RW physical format information | Updated physical format |
|---|---|---|---|---|---|---|
| | | Reproduce-only type | Rewritable type | Recordable type | | |
| Common information in the DVD family | 0 | Written standards type (reproduce- only/rewritable/recordable) information and version number information | | | | |
| | 1 | Medium size (diameter) and maximum possible data transfer rate information | | | | |
| | 2 | Medium structure (single layer or double layer, presence or absence of emboss pit/recordable area/rewritable area | | | | |
| | 3 | Recording density (linear density and track density) information | | | | |
| | 4–15 | Data area DTA location information | | | | |
| | 16 | Presence or absence information on burst cutting area BCA (all presence in this embodiment) | | | | |
| | 17 | Reserved area | Revision number information determining the maximum recording speed | | | |
| | 18 | | Revision number information determining the minimum recording speed | | | |
| | 19·25 | | Revision number table (application revision number) | | | |
| | 26 | | Class state information | | | |
| | 27 | | Extended (part) version information | | | |
| | 28·31 | | Reserved area | | | |

269

F I G. 191A

EP 1 742 215 A1

Diagram to help explain another embodiment related to physical format information and RW physical format information

| Type of recording information | Byte position | Physical format information PFI | | | RW physical format information | Updated physical format |
|---|---|---|---|---|---|---|
| | | Reproduce-only type | Rewritable type | Recordable type | | |
| Information contents uniquely settable for each of the written standards | 31·127 | | Reserved area | | | |
| | 128 | | Recording mark polarity (identifying whether H → L or L → H) information | | | |
| | 129 | | Linear velocity information in recording or reproduction | | | |
| | 130 | | Rim intensity value of the optical system in the circumferential direction | | | |
| | 131 | | Rim intensity value of the optical system in the radial direction | | | |
| | 132 | | Recommended laser power in reproduction (the amount of light on the recording surface) | | | |
| | 141-150 | | Reserved area | | Starting position (PSN) of boarder zone | Updated starting position (PSN) |
| | 151-511 | Reserved area | Reserved area | | | |
| Information contents uniquely settable on a revision basis | 512 | | Peak power in land area | Peak power | | |
| | 513 | | Bias power 1 in land area | Bias power 1 | | |
| | 514 | | Bias power 2 in land area | Bias power 2 | | |
| | 515 | | Bias power 3 in land area | Bias power 3 | | |
| | 516 | | Peak power in groove area | End time of first pulse (TEFP in FIG. 19) | | |
| | 517 | | Bias power 1 in groove area | Multi-pulse interval (TMP in FIG. 19) | | |
| | 518 | | Bias power 2 in groove area | Starting time of last pulse (TSLP in FIG. 19) | | |
| | 519 | | Bias power 3 in groove area | Period of bias power 2 of 2T mark (TLC in FIG. 19) | | |
| | 520·2047 | | ............................ | ............................ | | |

265
264

# FIG. 191B

EP 1 742 215 A1

**European Patent Office**

## EUROPEAN SEARCH REPORT

Application Number

EP 06 11 5756

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| P,X | EP 1 638 098 A (KABUSHIKI KAISHA TOSHIBA) 22 March 2006 (2006-03-22) * the whole document * L: *Doubt of validity of priority, prior proposal of the same applicant* ----- | 1-5 | INV. G11B20/18 G11B27/32 G11B27/10 |
| E | EP 1 675 122 A (KABUSHIKI KAISHA TOSHIBA) 28 June 2006 (2006-06-28) * the whole document * ----- | 1-5 | |
| X | EP 1 381 047 A (KABUSHIKI KAISHA TOSHIBA) 14 January 2004 (2004-01-14) * the whole document * ----- | 1-5 | |
| X | EP 1 460 633 A (KABUSHIKI KAISHA TOSHIBA) 22 September 2004 (2004-09-22) * the whole document * ----- | 1-5 | |
| A | US 2005/141400 A1 (HWANG SUNG-HEE ET AL) 30 June 2005 (2005-06-30) * figures 6,7 * ----- | 1-5 | TECHNICAL FIELDS SEARCHED (IPC) |
| A | US 2004/223440 A1 (PARK YONG CHEOL) 11 November 2004 (2004-11-11) * the whole document * ----- | 1 | G11B |

The present search report has been drawn up for all claims

| Place of search | Date of completion of the search | Examiner |
|---|---|---|
| Munich | 27 September 2006 | Gil Zamorano, Gunnar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 ........................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 11 5756

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2006

| Patent document cited in search report | | Publication date | Patent family member(s) | | Publication date |
|---|---|---|---|---|---|
| EP 1638098 | A | 22-03-2006 | CN | 1767037 A | 03-05-2006 |
| | | | JP | 2006085862 A | 30-03-2006 |
| | | | US | 2006077883 A1 | 13-04-2006 |
| EP 1675122 | A | 28-06-2006 | CN | 1797583 A | 05-07-2006 |
| | | | JP | 2006185509 A | 13-07-2006 |
| | | | US | 2006140092 A1 | 29-06-2006 |
| EP 1381047 | A | 14-01-2004 | CN | 1469371 A | 21-01-2004 |
| | | | JP | 2004039076 A | 05-02-2004 |
| | | | US | 2004057357 A1 | 25-03-2004 |
| EP 1460633 | A | 22-09-2004 | CN | 1532829 A | 29-09-2004 |
| | | | JP | 2004288285 A | 14-10-2004 |
| | | | TW | 235365 B | 01-07-2005 |
| | | | US | 2004257933 A1 | 23-12-2004 |
| US 2005141400 | A1 | 30-06-2005 | CA | 2551548 A1 | 07-07-2005 |
| | | | EP | 1697941 A1 | 06-09-2006 |
| | | | WO | 2005062306 A1 | 07-07-2005 |
| US 2004223440 | A1 | 11-11-2004 | NONE | | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3071828 B
- JP 2621459 B
- JP 9213011 A
- US 6496455 B